# EUROPEAN PATENT SPECIFICATION

(11) **EP 2 241 968 B1**
(45) Date of publication and mention of the grant of the patent: **27.06.2012**
(21) Application number: 10160103.7
(22) Date of filing: 24.08.1999
(51) Int. Cl.: G06F 9/30, G06F 9/302, G06F 9/318, G06F 9/38, G06F 12/08, G06F 9/34

(54) **System with wide operand architecture, and method**
System mit breiter Operandenarchitektur und Verfahren
Système à architecture d'opérande large et procédé associé

(30) Priority: 24.08.1998 US 97635 P; 13.10.1998 US 169963 P
(43) Date of publication of application: 20.10.2010
(62) Divisional of application: 99943892.2
(73) Proprietor: MicroUnity Systems Engineering, Inc., Los Altos, CA 94022 (US)
(72) Inventor: Hansen, Craig, Los Altos, CA 94022 (US)
(74) Representative: Clark, Jane Anne

(56) References cited:
- HANSEN C ED - INSTITUTE OF ELECTRICAL AND ELECTRONICS ENGINEERS: "ARCHITECTURE OF A BROADBAND MEDIAPROCESSOR" DIGEST OF PAPERS OF COMPCON (COMPUTER SOCIETY CONFERENCE) 1996 TECHNOLOGIES FOR THE INFORMATION SUPERHIGHWAY. SANTA CLARA, FEB. 25 - 28, 1996; [DIGEST OF PAPERS OF THE COMPUTER SOCIETY COMPUTER CONFERENCE COMPCON], LOS ALAMITOS, IEEE COMP. SOC. PRESS, vol. CONF. 41, 1 January 1996 (1996-01-01) , pages 1-08, XP002921975 ISBN: 978-0-8186-7414-3
- HANSEN C: "MICROUNITY'S MEDIA PROCESSOR ARCHITECTURE" IEEE MICRO, IEEE SERVICE CENTER, LOS ALAMITOS, CA, US LNKD- DOI:10.1109/40.526923, vol. 16, no. 4, 1 August 1996 (1996-08-01) , pages 34-41, XP000596511 ISSN: 0272-1732
- GWENNAP L: "ULTRASPARC ADDS MULTIMEDIA INSTRUCTIONS. ÖOTHER NEW INSTRUCTIONS HANDLE UNALIGNED AND LITTLE-ENDIAN DATA" MICROPROCESSOR REPORT, MICRODESIGN RESOURCES, MOUNTAIN VIEW, CA, US, 5 December 1994 (1994-12-05), pages 16-18, XP000561690 ISSN: 0899-9341

## Description

### Related Applications

This application is related to Provisional Application No. 60/097,635, filed August 24, 1998, and is a continuation in part of U.S. Patent Application No. 09/169,963, filed October 13, 1998 which is in turn related to U.S. Patent Application No. 08/516,036, filed August 16, 1995, now U.S. Patent No. 5,742,840.

### Field of the Invention

The present invention relates to general purpose processor architectures, and particularly relates to wide operand architectures.

### BACKGROUND OF THE INVENTION

The performance level of a processor, and particularly a general purpose processor, can be estimated from the multiple of a plurality of interdependent factors: clock rate, gates per clock, number of operands, operand and data path width, and operand and data path partitioning. Clock rate is largely influenced by the choice of circuit and logic technology, but is also influenced the number of gates per clock. Gates per clock is how many gates in a pipeline may change state in a single clock cycle. This can be reduced by inserting latches into the data path: when the number of gates between latches is reduced, a higher clock is possible. However, the additional latches produce a longer pipeline length, and thus come at a cost of increased instruction latency. The number of operands is straightforward; for example, by adding with carry-save techniques, three values may be added together with little more delay than is required for adding two values. Operand and data path width defines how much data can be processed at once; wider data paths can perform more complex functions, but generally this comes at a higher implementation cost. Operand and data path partitioning refers to the efficient use of the data path as width is increased, with the objective of maintaining substantially peak usage.

The last factor, operand and data path partitioning, is treated extensively in commonly-assigned U.S. Patent No.'s 5,742,840, 5,794,060, 5,794,061, 5,809,321, and 5,822,603, which describe systems and methods for enhancing the utilization of a general purpose processor by adding classes of instructions. These classes of instructions use the contents of general purpose registers as data path sources, partition the operands into symbols of a specified size, perform operations in parallel, catenate the results and place the catenated results into a general-purpose register. These patents, all of which are assigned to the same assignee as the present invention, teach a general purpose microprocessor which has been optimized for processing and transmitting media data streams through significant parallelism.

While the foregoing patents offered significant improvements in utilization and performance of a general purpose microprocessor, particularly for handling broadband communications such as media data streams, other improvements are possible.

Many general purpose processors have general registers to store operands for instructions, with the register width matched to the size of the data path. Processor designs generally limit the number of accessible registers per instruction because the hardware to access these registers is relatively expensive in power and area. While the number of accessible registers varies among processor designs, it is often limited to two, three or four registers per instruction when such instructions are designed to operate in a single processor clock cycle or a single pipeline flow. Some processors, such as the Motorola 68000 have instructions to save and restore an unlimited number of registers, but require multiple cycles to perform such an instruction.

The Motorola 68000 also attempts to overcome a narrow data path combined with a narrow register file by taking multiple cycles or pipeline flows to perform an instruction, and thus emulating a wider data path. However, such multiple precision techniques offer only marginal improvement in view of the additional clock cycles required. The width and accessible number of the general purpose registers thus fundamentally limits the amount of processing that can be performed by a single instruction in a register-based machine.

Existing processors may provide instructions that accept operands for which one or more operands are read from a general purpose processor's memory system. However, as these memory operands are generally specified by register operands, and the memory system data path is no wider than the processor data path, the width and accessible number of general purpose operands per instruction per cycle or pipeline flow is not enhanced.

The number of general purpose register operands accessible per instruction is generally limited by logical complexity and instruction size. For example, it might be possible to implement certain desirable but complex functions by specifying a large number of general purpose registers, but substantial additional logic would have to be added to a conventional design to permit simultaneous reading and bypassing of the register values. While dedicated registers have been used in some prior art designs to increase the number or size of source operands or results, explicit instructions load or store values into these dedicated registers, and additional instructions are required to save and restore these registers upon a change of processor context.

There has therefore been a need for a processor system capable of efficient handling of operands of greater width than either the memory system or any accessible general purpose register.

The paper entitled "Architecture of a Broadband Media Processor" by Craig Hansen in Proceedings of Institute of Electrical and Electronic Engines COMPCON96, February 25-29, 1996 describes a broadband media processor in which media processor group instructions may be implemented which perform operations on corresponding groups of symbols from two registers. For example, corresponding symbol groups from two registers may be added, subtracted, multiplied, or multiplied and then added to corresponding symbol groups from another register. Group switching operations are also possible in which group symbols from two register files are rearranged, swopped, extracted, expanded or compressed, for example.

### SUMMARY OF THE INVENTION

According to a first aspect of the present invention, there is provided a processor as set out in Claim 1. In another aspect, the present invention provides a method out in Claim 33.

Described herein are a system and method for improving the performance of general purpose processors by expanding at least one source operand to a width greater than the width of either the general purpose register or the data path width. In addition, several classes of instructions will be provided which cannot be performed efficiently if the operands are limited to the width and accessible number of general purpose registers.

As described herein, operands are provided which are substantially larger than the data path width of the processor. This is achieved, in part, by using a general purpose register to specify a memory address from which at least more than one, but typically several data path widths of data can be read. To permit such a wide operand to be performed in a single cycle, the data path functional unit is augmented with dedicated storage to which the memory operand is copied on an initial execution of the instruction. Further execution of the instruction or other similar instructions that specify the same memory address can read the dedicated storage to obtain the operand value. However, such reads are subject to conditions to verify that the memory operand has not been altered by intervening instructions. If the memory operand remains current - that is, the conditions are met - the memory operand fetch can be combined with one or more register operands in the functional unit, producing a result. The size of the result is, typically, constrained to that of a general register so that no dedicated or other special storage is required for the result.

Exemplary instructions using wide operations include wide instructions that perform bit-level switching (Wide Switch), byte or larger table-lookup (Wide Translate), Wide Multiply Matrix, Wide Multiply Matrix Extract, Wide Multiply Matrix Extract Immediate, Wide Multiply Matrix Floating point, and Wide Multiply Matrix Galois.

The efficient usage of a multiplier array that is fully used for high precision arithmetic, but is only partly used for other, lower precision operations is also addresses herein. This can be accomplished by extracting the high-order portion of the multiplier product or sum of products, adjusted by a dynamic shift amount from a general register or an adjustment specified as part of the instruction, and rounded by a control value from a register or instruction portion. The rounding may be any of several types, including round-to-nearest/even, toward zero, floor, or ceiling. Overflows are typically handled by limiting the result to the largest and smallest values that can be accurately represented in the output result.

When an extract is controlled by a register, the size of the result can be specified, allowing rounding and limiting to a smaller number of bits than can fit in the result. This permits the result to be scaled for use in subsequent operations without concern of overflow or rounding. As a result, performance is enhanced. In those instances where the extract is controlled by a register, a single register value defines the size of the operands, the shift amount and size of the result, and the rounding control. By placing such control information in a single register, the size of the instruction is reduced over the number of bits that such an instruction would otherwise require, again improving performance and enhancing processor flexibility. Exemplary instructions are Ensemble Convolve Extract, Ensemble Multiply Extract, Ensemble Multiply Add Extract, and Ensemble Scale Add Extract. With particular regard to the Ensemble Scale Add Extract Instruction, the extract control information is combined in a register with two values used as scalar multipliers to the contents of two vector multiplicands. This combination reduces the number of registers otherwise required, thus reducing the number of bits required for the instruction.

### THE FIGURES

Figure 1 is a system level diagram showing the functional blocks of a system according to the present invention.
Figure 2 is a matrix representation of a wide matrix multiply in accordance with the present invention.
Figure 3 is a further representation of a wide matrix multiple in accordance with the present invention.
Figure 4 is a system level diagram showing the functional blocks of a system incorporating a combined Simultaneous Multi Threading and Decoupled Access from Execution processor in accordance with the present invention.
Figure 5 illustrates a wide operand in accordance with the present invention.
Figure 6 illustrates an approach to specifier decoding in accordance with the present invention.
Figure 7 illustrates in operational block form a Wide Function Unit in accordance with the present invention.
Figure 8 illustrates in flow diagram form the Wide Microcache control function.
Figure 9 illustrates Wide Microcache data structures.
Figures 10 and 11 illustrate a Wide Microcache control.

### DETAILED DESCRIPTION OF THE INVENTION

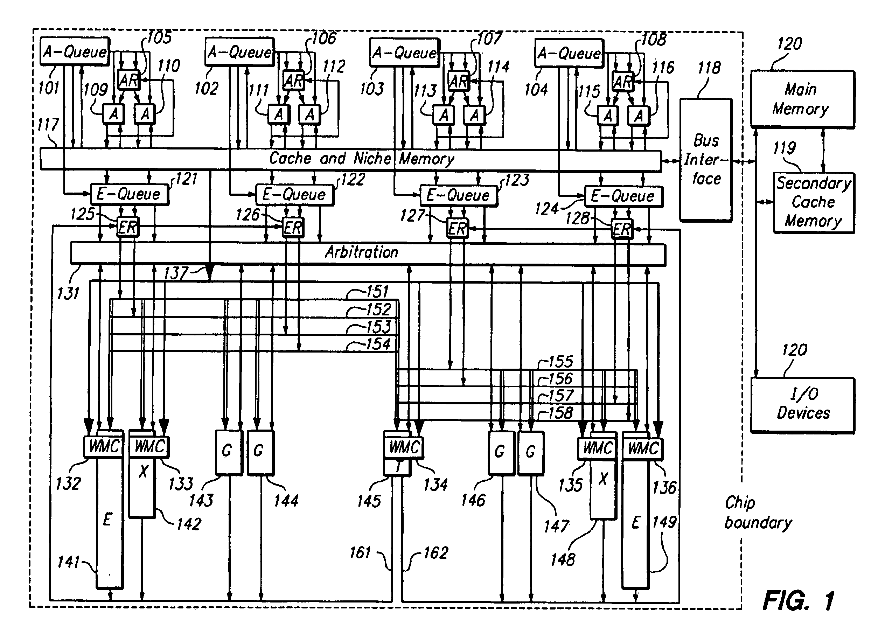

Referring first to Figure 1, a general purpose processor is illustrated therein in block diagram form. In Figure 1, four copies of an access unit are shown, each with an access instruction fetch queue A-Queue 101-104. Each access instruction fetch queue A-Queue 101-104 is coupled to an access register file AR 105-108, which are each coupled to two access functional units A 109-116. In a typical embodiment, each thread of the processor may have on the order of sixty-four general purpose registers (e.g., the AR's 105-108 and ER's 125-128). The access units function independently for four simultaneous threads of execution, and each compute program control flow by performing arithmetic and branch instructions and access memory by performing load and store instructions. These access units also provide wide operand specifiers for wide operand instructions. These eight access functional units A 109-116 produce results for access register files AR 105-108 and memory addresses to a shared memory system 117-120.

The memory system is comprised of a combined cache and niche memory 117, an external bus interface 118, and, externally to the device, a secondary cache 119 and main memory system with I/O devices 120. The memory contents fetched from memory system 117-120 are combined with execute instructions not performed by the access unit, and entered into the four execute instruction queues E-Queue 121-124. For wide instructions, memory contents fetched from memory system 117-120 are also provided to wide operand microcaches 132-136 by bus 137. Instructions and memory data from E-queue 121-124 are presented to execution register files 125-128, which fetch execution register file source operands. The instructions are coupled to the execution unit arbitration unit Arbitration 131, that selects which instructions from the four threads are to be routed to the available execution functional units E 141 and 149, X 142 and 148, G 143-144 and 146-147, and T 145. The execution functional units E 141 and 149, the execution functional units X 142 and 148, and the execution functional unit T 145 each contain a wide operand microcache 132-136, which are each coupled to the memory system 117 by bus 137.

The execution functional units G 143-144 and 146-147 are group arithmetic and logical units that perform simple arithmetic and logical instructions, including group operations wherein the source and result operands represent a group of values of a specified symbol size, which are partitioned and operated on separately, with results catenated together. In a presently preferred embodiment the data path is 128 bits wide, although the present invention is not intended to be limited to any specific size of data path.

The execution functional units X 142 and 148 are crossbar switch units that perform crossbar switch instructions. The crossbar switch units 142 and 148 perform data handling operations on the data stream provided over the data path source operand buses 151-158, including deals, shuffles, shifts, expands, compresses, swizzles, permutes and reverses, plus the wide operations discussed hereinafter. In a key element of a first aspect of the invention, at least one such operation will be expanded to a width greater than the general register and data path width. Examples of the data manipulation operations are described in the System Architecture/BroadMX Architecture descriptions included herein.

The execution functional units E 141 and 149 are ensemble units that perform ensemble instructions using a large array multiplier, including group or vector multiply and matrix multiply of operands partitioned from data path source operand buses 151-158 and treated as integer, floating-point, polynomial or Galois field values. Matrix multiply instructions and other operations described in the System Architecture/BroadMX Architecture descriptions included herein utilize a wide operand loaded into the wide operand microcache 132 and 136.

The execution functional unit T 145 is a translate unit that performs table-look-up operations on a group of operands partitioned from a register operand, and catenates the result. The Wide Translate instruction, described in the System Architecture/BroadMX Architecture descriptions included herein, utilizes a wide operand loaded into the wide operand microcache 134.

The execution functional units E 141, 149, execution functional units X -142, 148, and execution functional unit T each contain dedicated storage to permit storage of source operands including wide operands as discussed hereinafter. The dedicated storage 132-136, which may be thought of as a wide microcache, typically has a width which is a multiple of the width of the data path operands related to the data path source operand buses 151-158. Thus, if the width of the data path 151-158 is 128 bits, the dedicated storage 132-136 may have a width of 256, 512, 1024 or 2048 bits. Operands which utilize the full width of the dedicated storage are referred to herein as wide operands, although it is not necessary in all instances that a wide operand use the entirety of the width of the dedicated storage; it is sufficient that the wide operand use a portion greater than the width of the memory data path of the output of the memory system 117-120 and the functional unit data path of the input of the execution functional units 141-149, though not necessarily greater than the width of the two combined. Because the width of the dedicated storage 132-136 is greater than the width of the memory operand bus 137, portions of wide operands are loaded sequentially into the dedicated storage 132-136. However, once loaded, the wide operands may then be used at substantially the same time. It can be seen that functional units 141-149 and associated execution registers 125-128 form a data functional unit, the exact elements of which may vary with implementation.

The execution register file ER 125-128 source operands are coupled to the execution units 141-145 using source operand buses 151-154 and to the execution units 145-149 using source operand buses 155-158. The function unit result operands from execution units 141-145 are coupled to the execution register file ER 125-128 using result bus 161 and the function units result operands from execution units 145-149 are coupled to the execution register file using result bus 162.

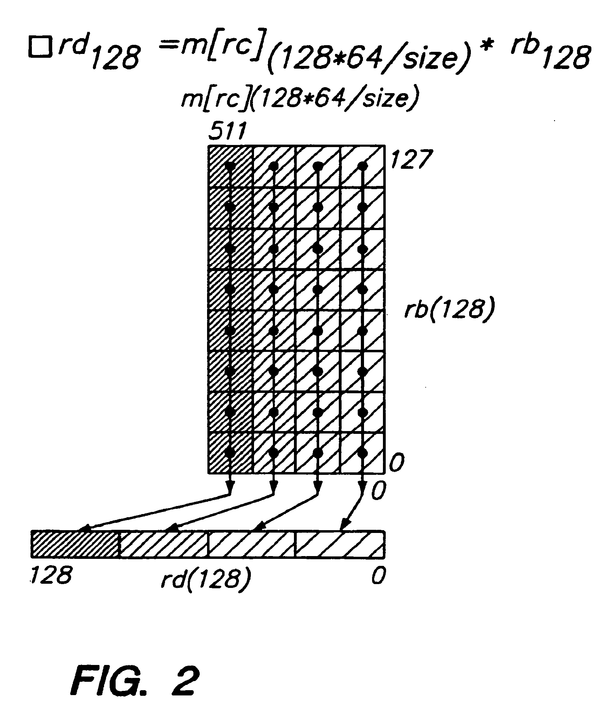

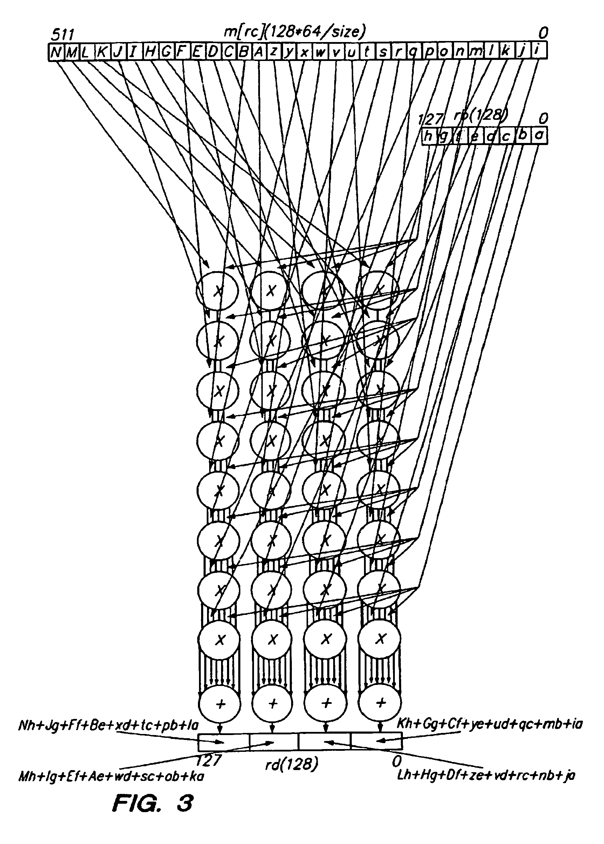

The wide operands of the present invention provide the ability to execute complex instructions such as the wide multiply matrix instruction shown in Figure 2, which can be appreciated in an alternative form, as well, from Figure 3. As can be appreciated from Figures 2 and 3, a wide operand permits, for example, the matrix multiplication of various sizes and shapes which exceed the data path width. The example of Figure 2 involves a matrix specified by register rc having a 128*64/size multiplied by a vector contained in register rb having a 128 size, to yield a result, placed in register rd, of 128 bits.

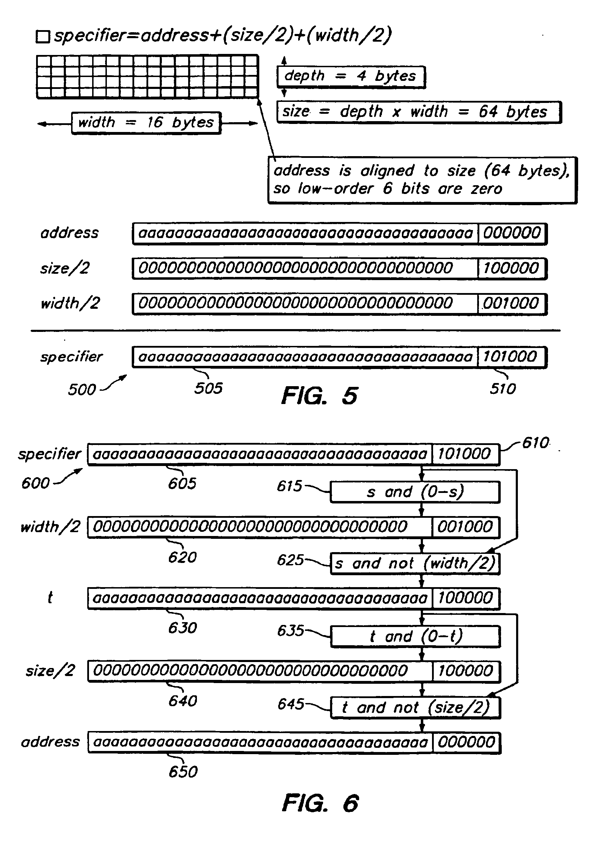

The operands that are substantially larger than the data path width of the processor are provided by using a general-purpose register to specify a memory specifier from which more than one but in some embodiments several data path widths of data can be read into the dedicated storage. The memory specifier typically includes the memory address together with the size and shape of the matrix of data being operated on. The memory specifier or wide operand specifier can be better appreciated from Figure 5, in which a specifier 500 is seen to be an address, plus a field representative of the size/2 and a further field representative of width/2, where size is the product of the depth and width of the data. The address is aligned to a specified size, for example sixty-four bytes, so that a plurality of low order bits (for example, six bits) are zero. The specifier 500 can thus be seen to comprise a first field 505 for the address, plus two field indicia 510 within the low order six bits to indicate size and width.

The decoding of the specifier 500 may be further appreciated from Figure 6 where, for a given specifier 600 made up of an address field 605 together with a field 610 comprising plurality of low order bits. By a series of arithmetic operations shown at steps 615 and 620, the portion of the field 610 representative of width/2 is developed. In a similar series of steps shown at 625 and 630, the value of t is decoded, which can then be used to decode both size and address. The portion of the field 610 representative of size/2 is decoded as shown at steps 635 and 640, while the address is decoded in a similar way at steps 645 and 650.

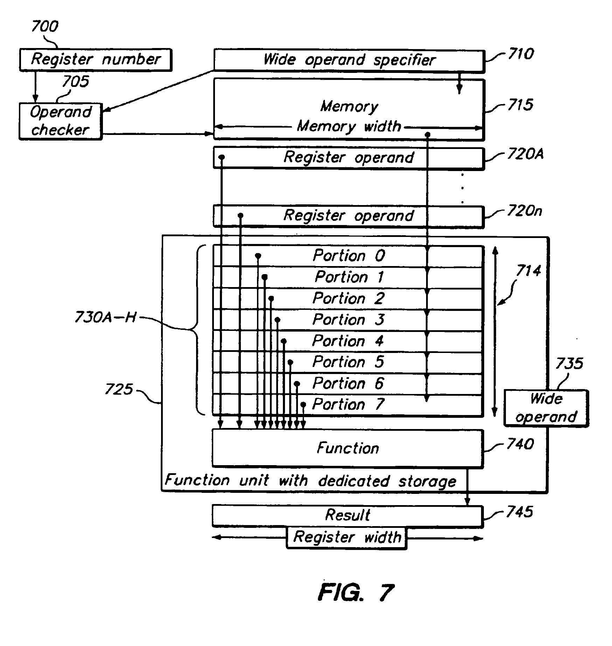

The wide function unit may be better appreciated from Figure 7, in which a register number 700 is provided to an operand checker 705. Wide operand specifier 710 communicates with the operand checker 705 and also addresses memory 715 having a defined memory width. The memory address includes a plurality of register operands 720A-n, which are accumulated in a dedicated storage portion 714 of a data functional unit 725. In the exemplary embodiment shown in Figure 7, the dedicated storage 714 can be seen to have a width equal to eight data path widths, such that eight wide operand portions 730A-H are sequentially loaded into the dedicated storage to form the wide operand. Although eight portions are shown in Figure 7, the present invention is not limited to eight or any other specific multiple of data path widths. Once the wide operand portions 730A-H are sequentially loaded, they may be used as a single wide operand 735 by the functional element 740, which may be any element(s) from Figure 1 connected thereto. The result of the wide operand is then provided to a result register 745, which in a presently preferred embodiment is of the same width as the memory width.

Once the wide operand is successfully loaded into the dedicated storage 714, a second aspect of the present invention may be appreciated. Further execution of this instruction or other similar instructions that specify the same memory address can read the dedicated storage to obtain the operand value under specific conditions that determine whether the memory operand has been altered by intervening instructions. Assuming that these conditions are met, the memory operand fetch from the dedicated storage is combined with one or more register operands in the functional unit, producing a result. In some embodiments, the size of the result is limited to that of a general register, so that no similar dedicated storage is required for the result. However, in some different embodiments, the result may be a wide operand, to further enhance performance.

To permit the wide operand value to be addressed by subsequent instructions specifying the same memory address, various conditions must be checked and confirmed: Those conditions include:
1. Each memory store instruction checks the memory address against the memory addresses recorded for the dedicated storage. Any match causes the storage to be marked invalid, since a memory store instruction directed to any of the memory addresses stored in dedicated storage 714 means that data has been overwritten.
2. The register number used to address the storage is recorded. If no intervening instructions have written to the register, and the same register is used on the subsequent instruction, the storage is valid (unless marked invalid by rule #1).
3. If the register has been modified or a different register number is used, the value of the register is read and compared against the address recorded for the dedicated storage. This uses more resources than #1 because of the need to fetch the register contents and because the width of the register is greater than that of the register number itself. If the address matches, the storage is valid. The new register number is recorded for the dedicated storage.
4. If conditions #2 or #3 are not met, the register contents are used to address the general-purpose processor's memory and load the dedicated storage. If dedicated storage is already fully loaded, a portion of the dedicated storage must be discarded (victimized) to make room for the new value. The instruction is then performed using the newly updated dedicated storage. The address and register number is recorded for the dedicated storage.

By checking the above conditions, the need for saving and restoring the dedicated storage is eliminated. In addition, if the context of the processor is changed and the new context does not employ Wide instructions that reference the same dedicated storage, when the original context is restored, the contents of the dedicated storage are allowed to be used without refreshing the value from memory, using checking rule #3. Because the values in the dedicated storage are read from memory and not modified directly by performing wide operations, the values can be discarded at any time without saving the results into general memory. This property simplifies the implementation of rule #4 above.

An alternate embodiment of the present invention can replace rule #1 above with the following rule:
1.a. Each memory store instruction checks the memory address against the memory addresses recorded for the dedicated storage. Any match causes the dedicated storage to be updated, as well as the general memory.
By use of the above rule 1.a, memory store instructions can modify the dedicated storage, updating just the piece of the dedicated storage that has been changed, leaving the remainder intact. By continuing to update the general memory, it is still true that the contents of the dedicated memory can be discarded at any time without saving the results into general memory. Thus rule #4 is not made more complicated by this choice. The advantage of this alternate embodiment is that the dedicated storage need not be discarded (invalidated) by memory store operations.

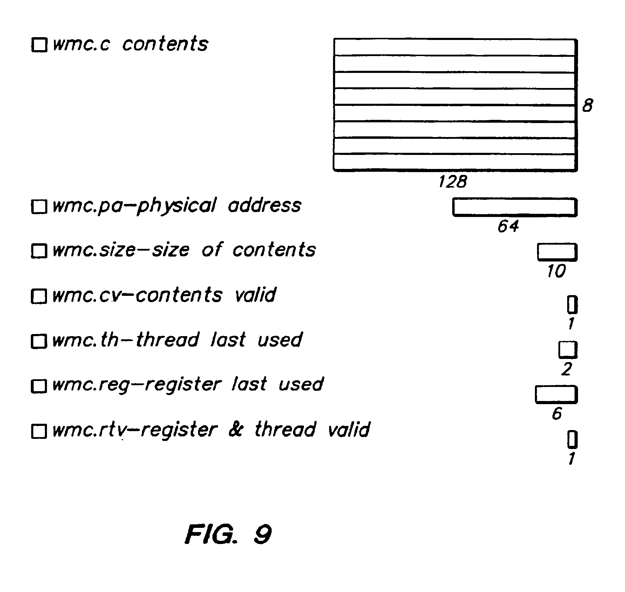

Referring next to Figure 9, an exemplary arrangement of the data structures of the wide microcache or dedicated storage 114 may be better appreciated. The wide microcache contents, wmc.c, can be seen to form a plurality of data path widths 900A-n, although in the example shown the number is eight. The physical address, wmc.pa, is shown as 64 bits in the example shown, although the invention is not limited to a specific width. The size of the contents, wmc.size, is also provided in a field which is shown as 10 bits in an exemplary embodiment. A "contents valid" flag, wmc.cv, of one bit is also included in the data structure, together with a two bit field for thread last used, or wmc.th. In addition, a six bit field for register last used, wmc.reg, is provided in an exemplary embodiment. Further, a one bit flag for register and thread valid, or wmc.rtv, may be provided.

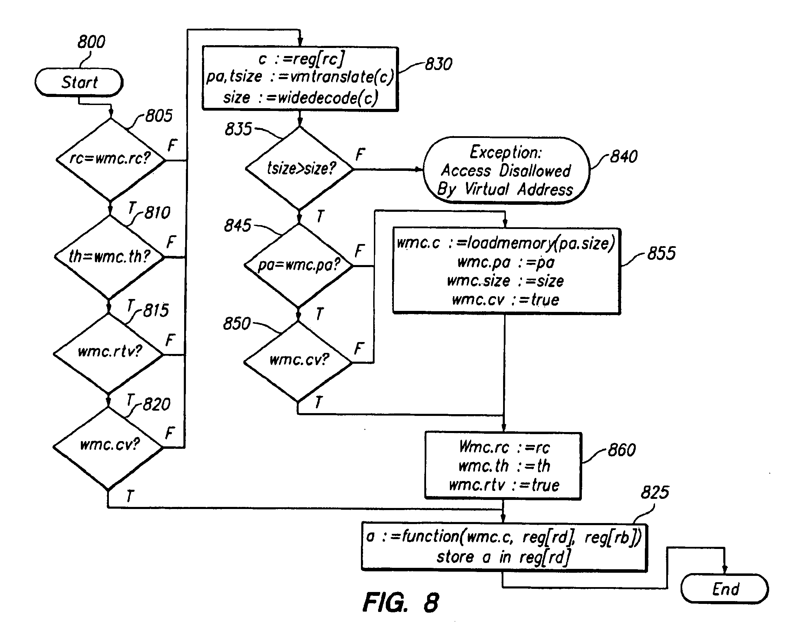

The process by which the microcache is initially written with a wide operand, and thereafter verified as valid for fast subsequent operations, may be better appreciated from Figure 8. The process begins at 800, and progresses to step 805 where a check of the register contents is made against the stored value wmc.rc. If true, a check is made at step 810 to verify the thread. If true, the process then advances to step 815 to verify whether the register and thread are valid. If step 815 reports as true, a check is made at step 820 to verify whether the contents are valid. If all of steps 805 through 820 return as true, the subsequent instruction is able to utilize the existing wide operand as shown at step 825, after which the process ends. However, if any of steps 805 through 820 return as false, the process branches to step 830, where content, physical address and size are set. Because steps 805 through 820 all lead to either step 825 or 830, steps 805 through 820 may be performed in any order or simultaneously without altering the process. The process then advances to step 835 where size is checked. This check basically ensures that the size of the translation unit is greater than or equal to the size of the wide operand, so that a physical address can directly replace the use of a virtual address. The concern is that, in some embodiments, the wide operands may be larger than the minimum region that the virtual memory system is capable of mapping. As a result, it would be possible for a single contiguous virtual address range to be mapped into multiple, disjoint physical address ranges, complicating the task of comparing physical addresses. By determining the size of the wide operand and comparing that size against the size of the virtual address mapping region which is referenced, the instruction is aborted with an exception trap if the wide operand is larger than the mapping region. This ensures secure operation of the processor. Software can then re-map the region using a larger size map to continue execution if desired. Thus, if size is reported as unacceptable at step 835, an exception is generated at step 840. If size is acceptable, the process advances to step 845 where physical address is checked. If the check reports as met, the process advances to step 850, where a check of the contents valid flag is made. If either check at step 845 or 850 reports as false, the process branches and new content is written into the dedicated storage 114, with the fields thereof being set accordingly. Whether the check at step 850 reported true, or whether new content was written at step 855, the process advances to step 860 where appropriate fields are set to indicate the validity of the data, after which the requested function can be performed at step 825. The process then ends.

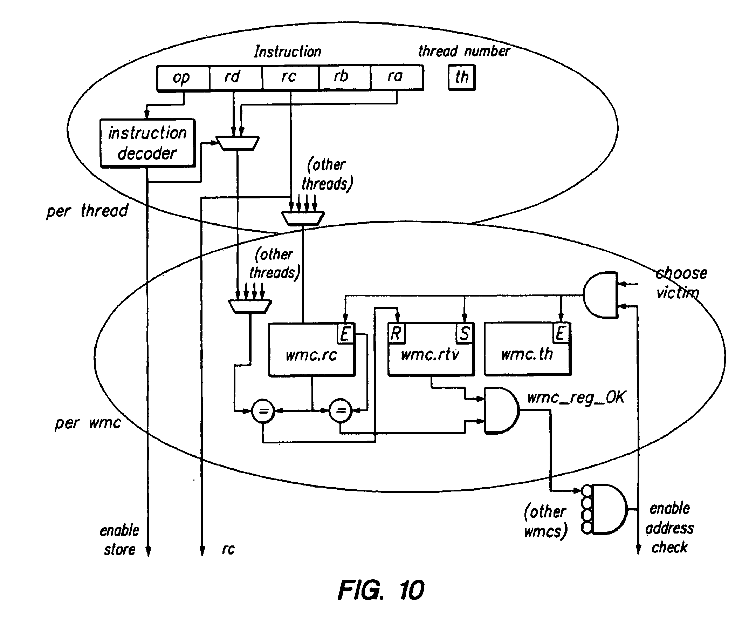

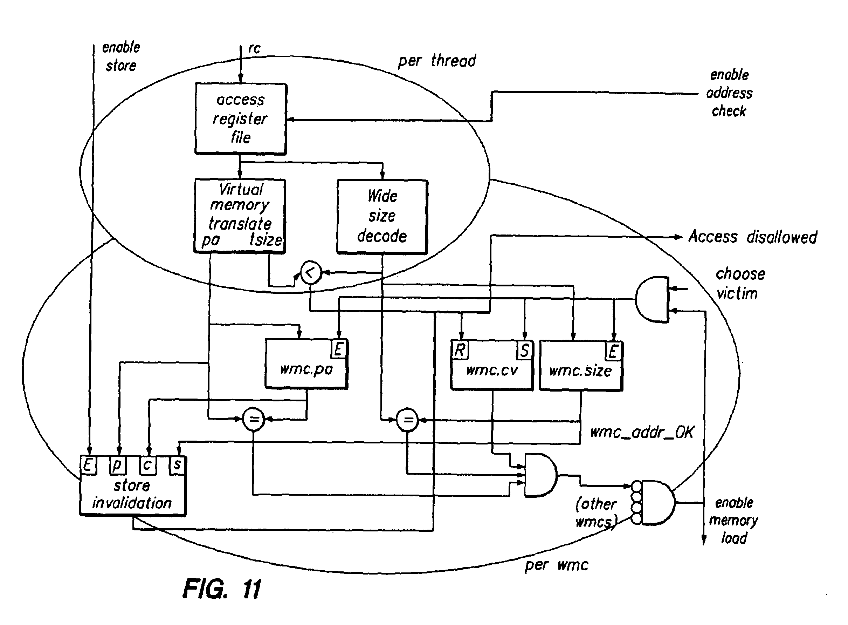

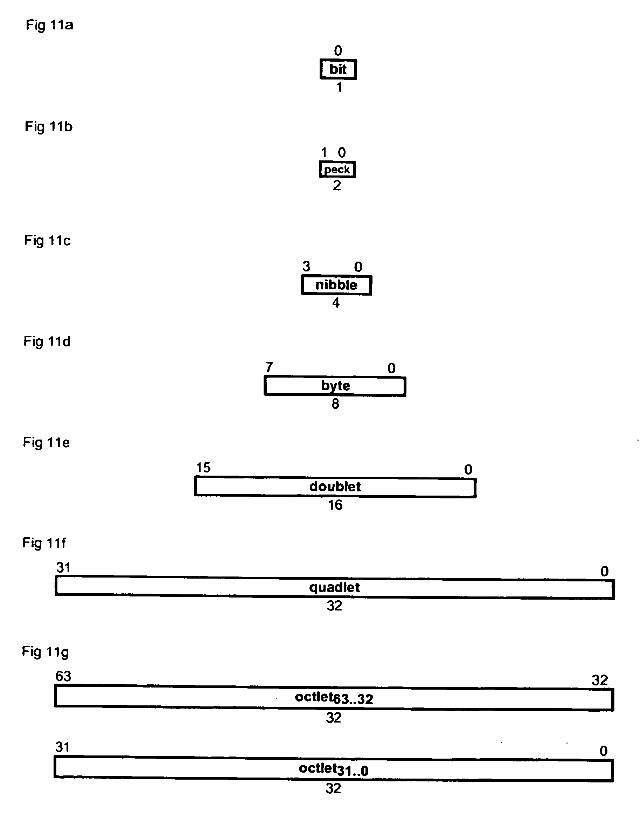

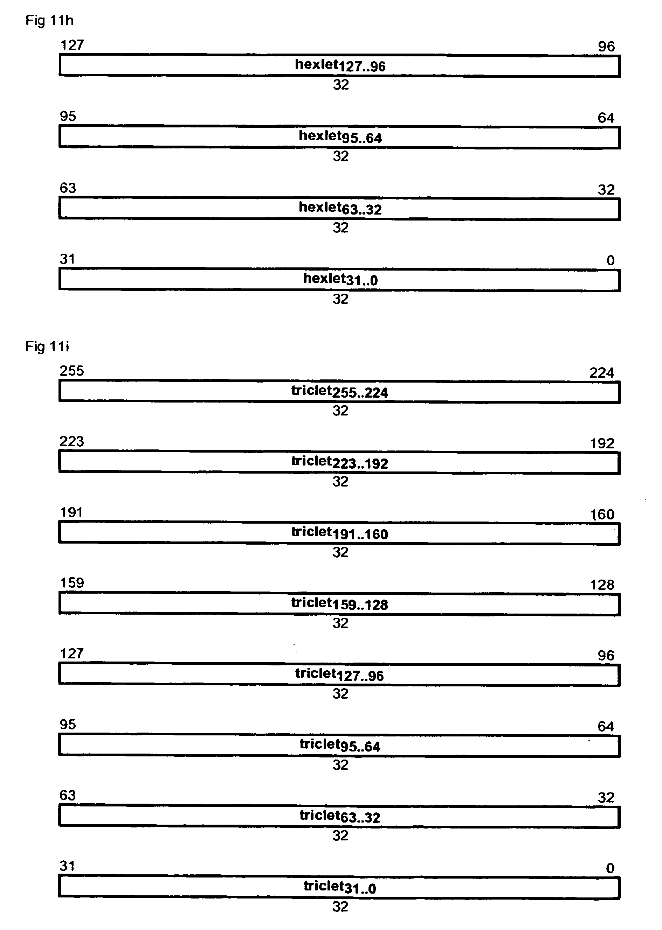

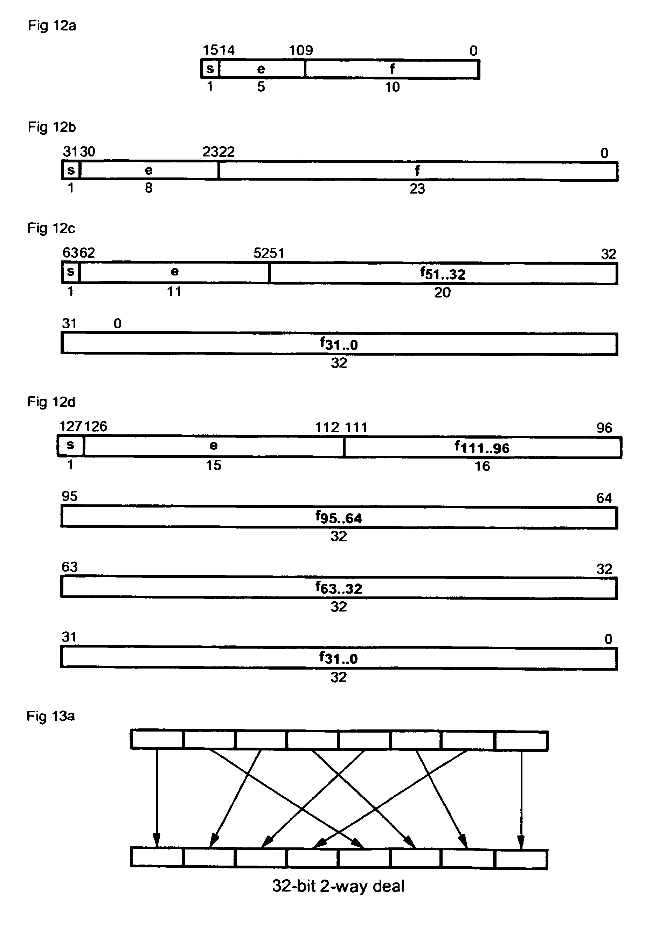

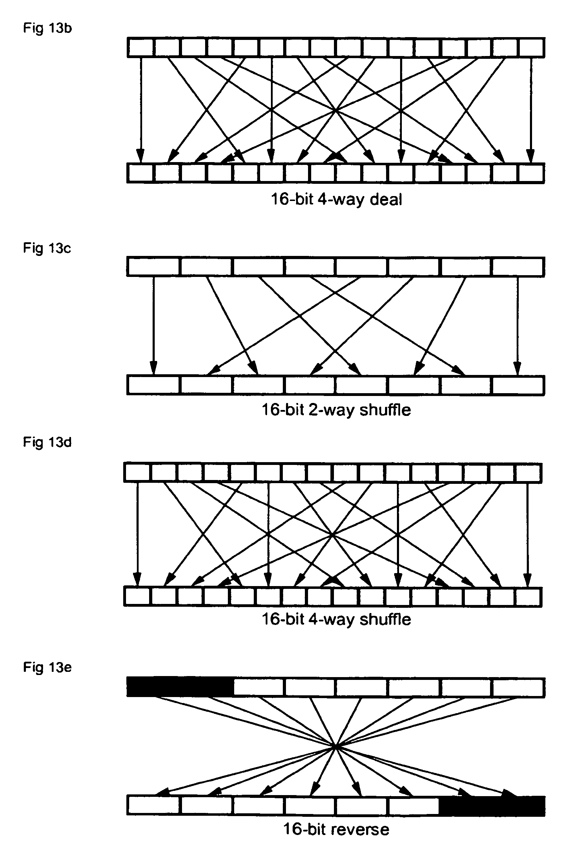

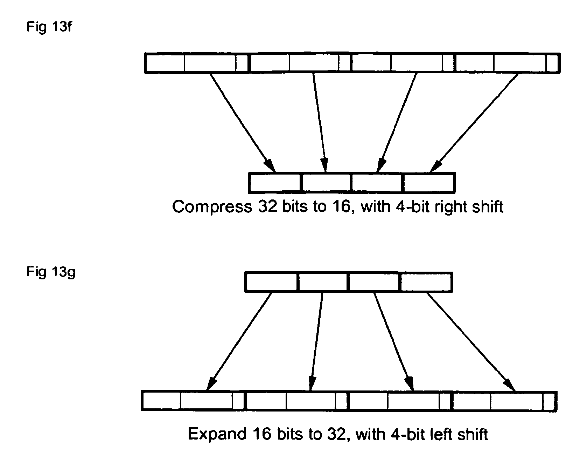

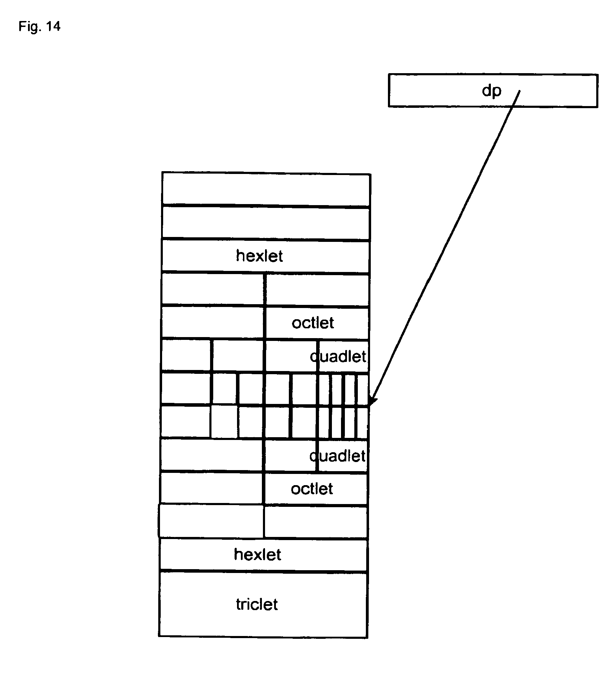

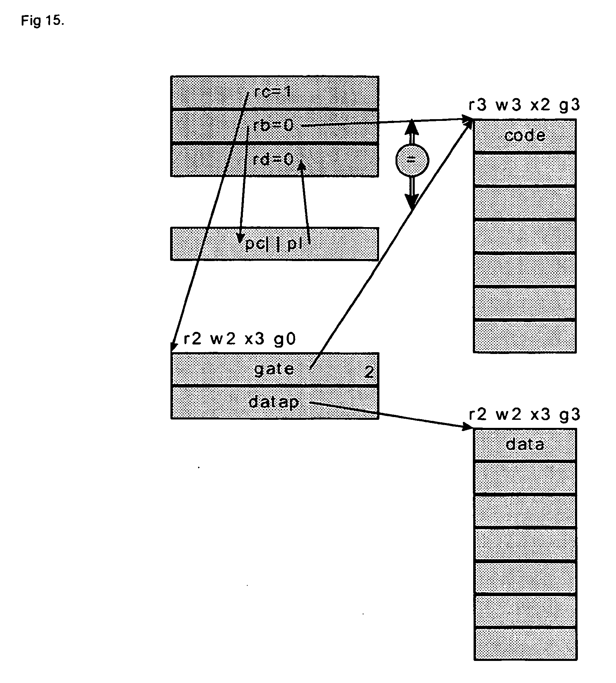

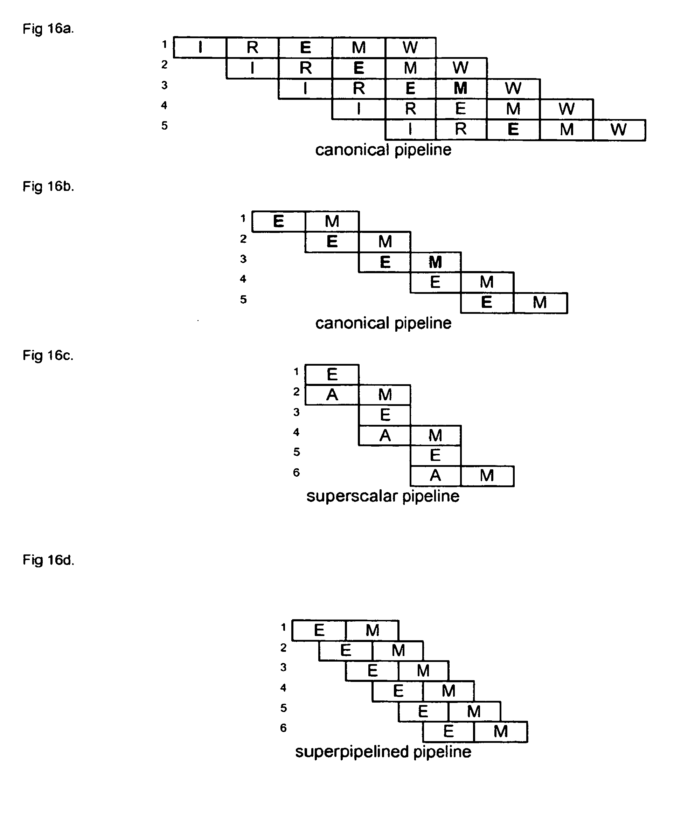

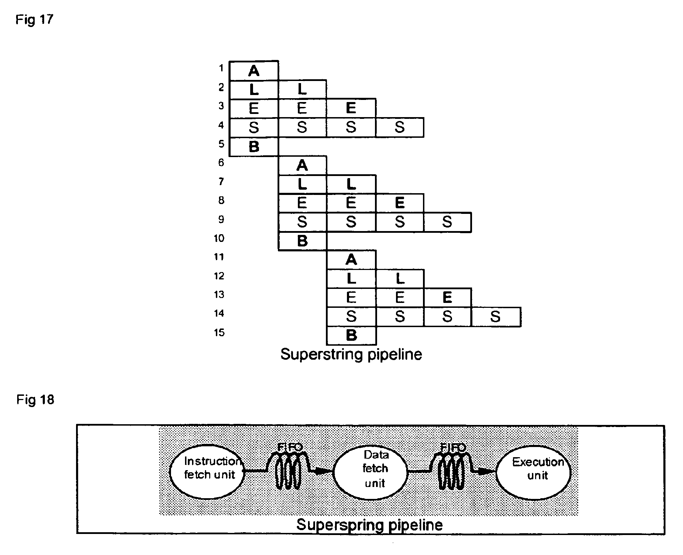

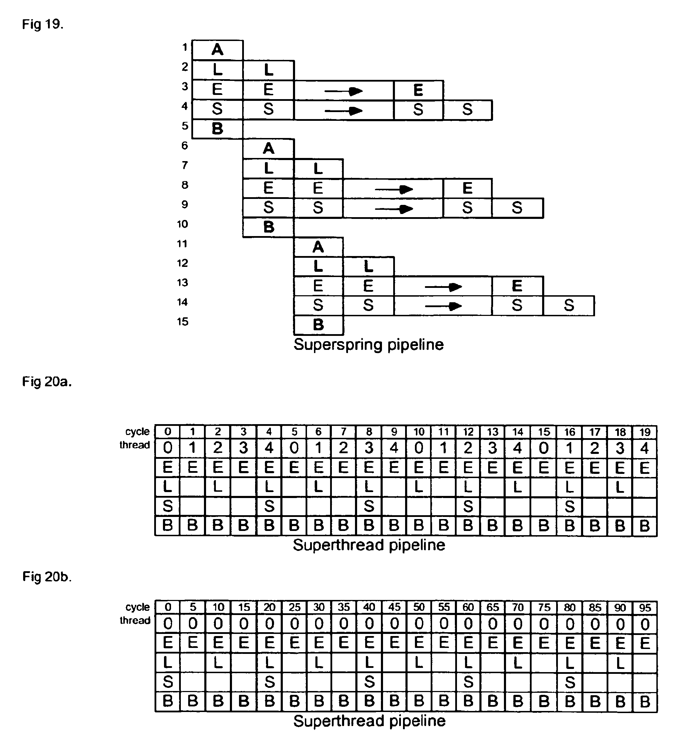

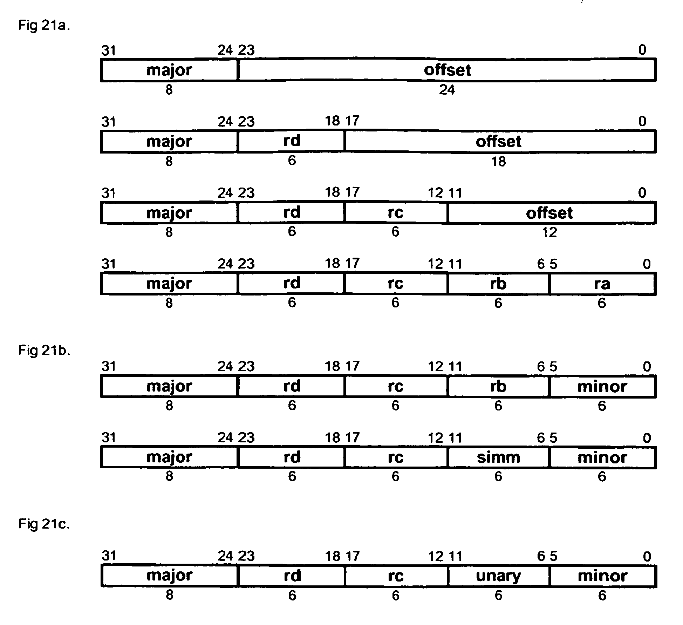

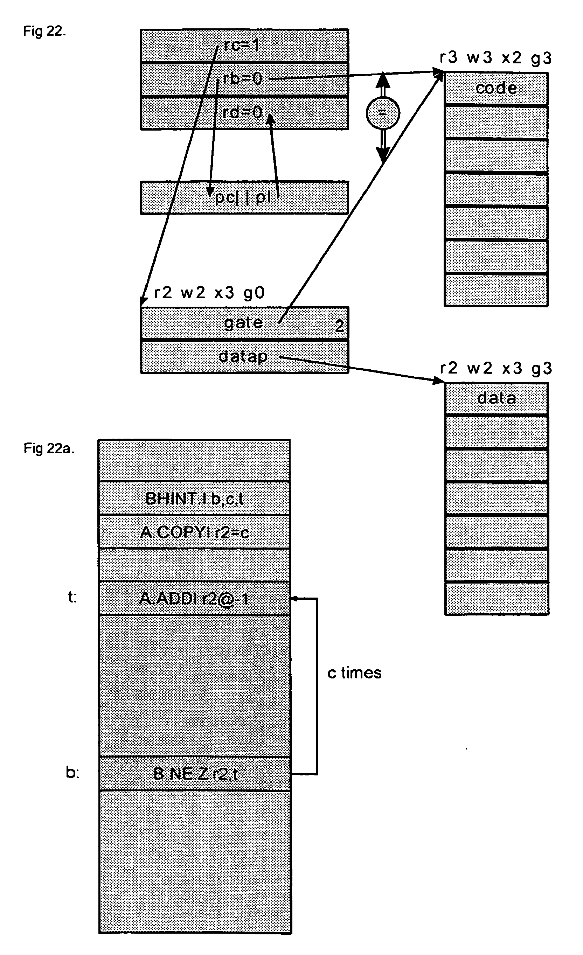

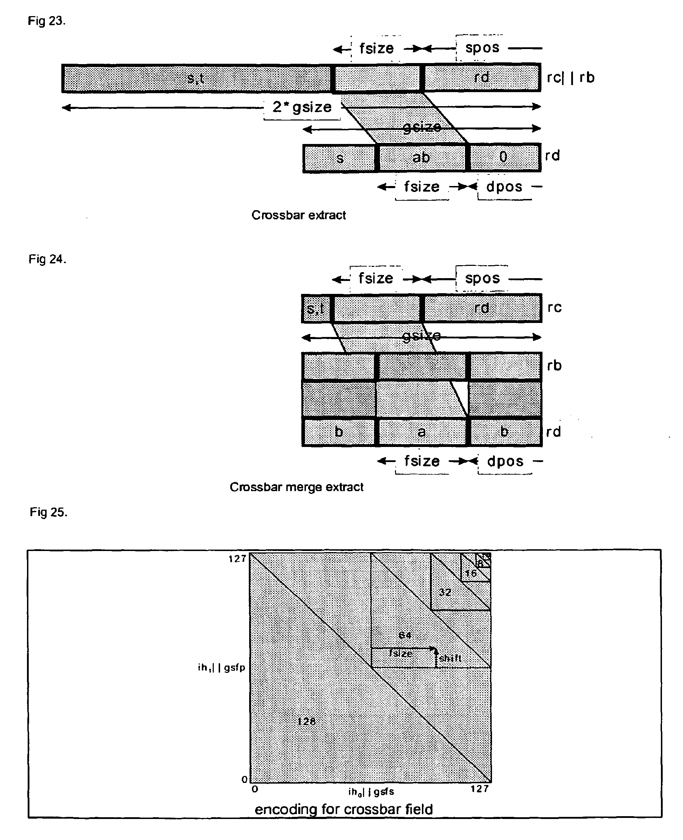

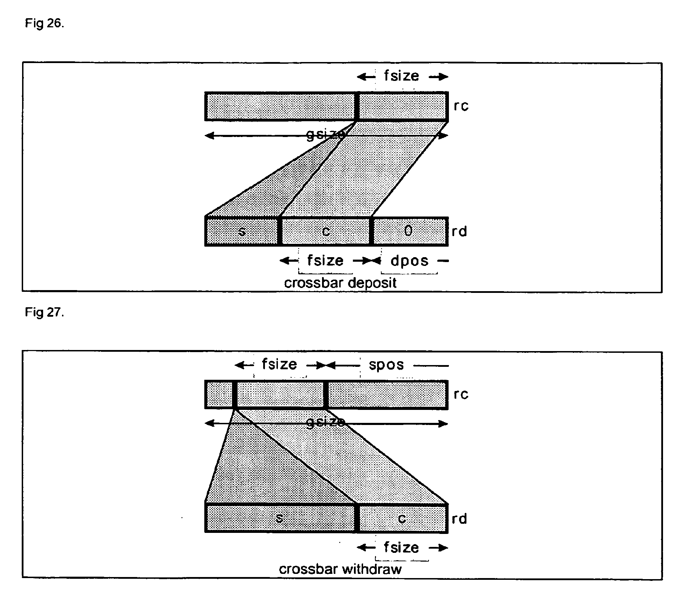

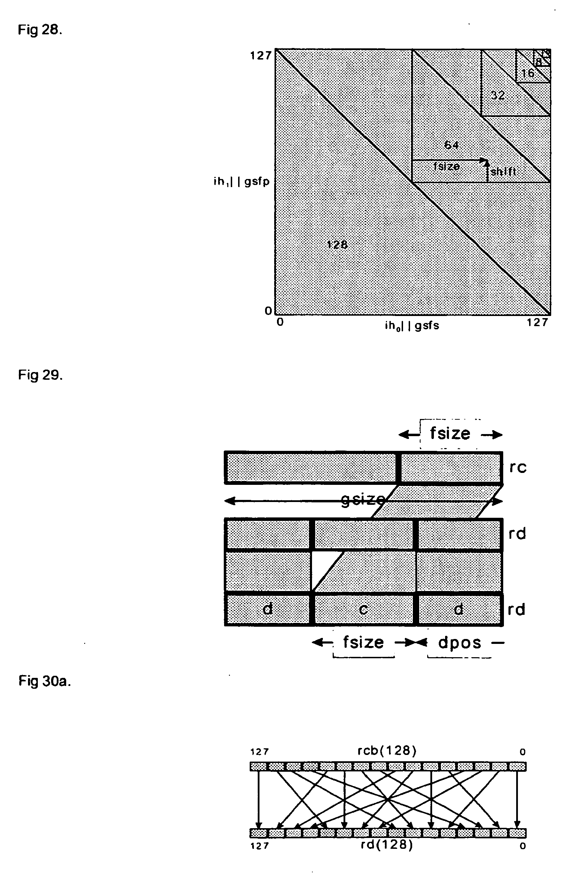

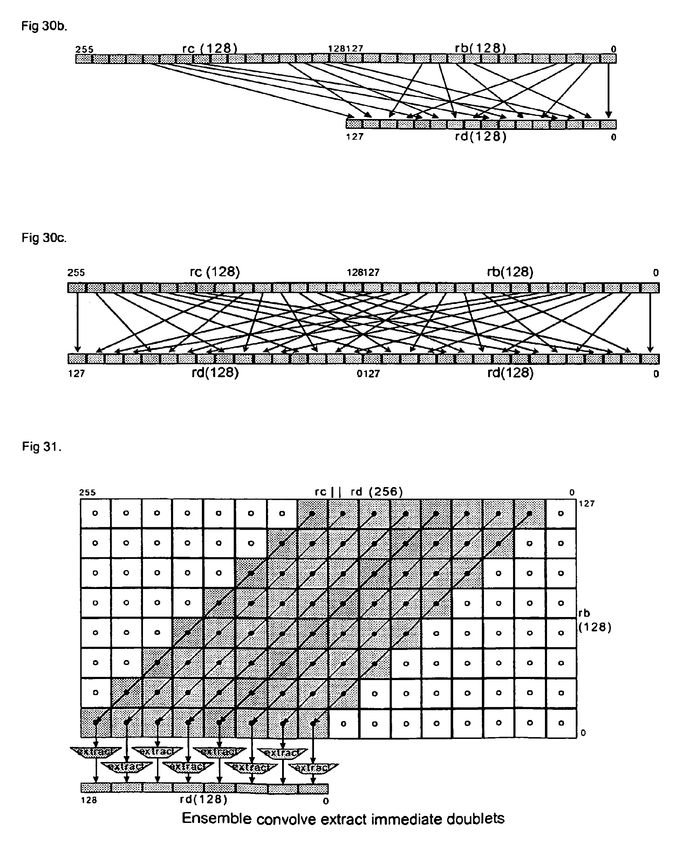

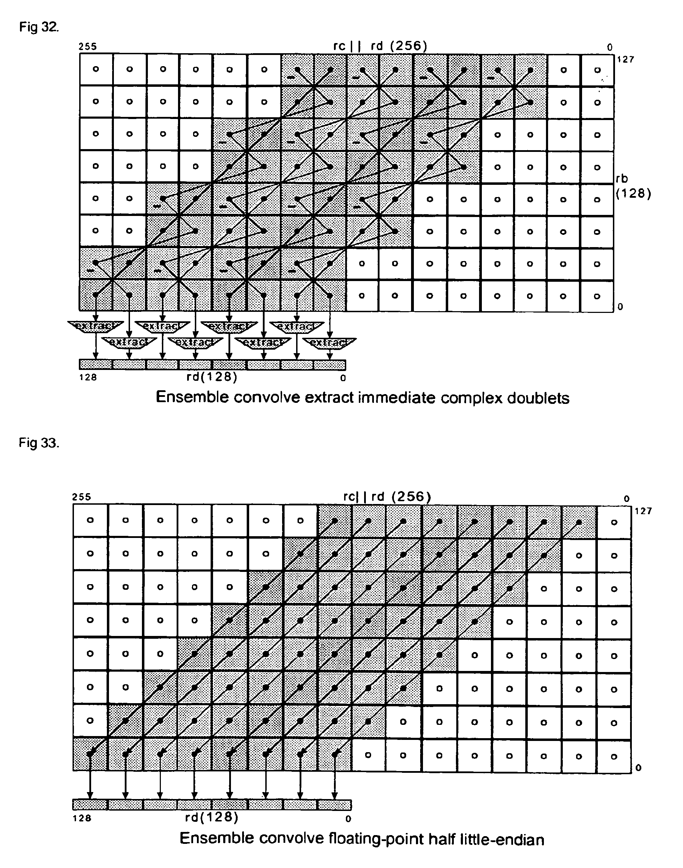

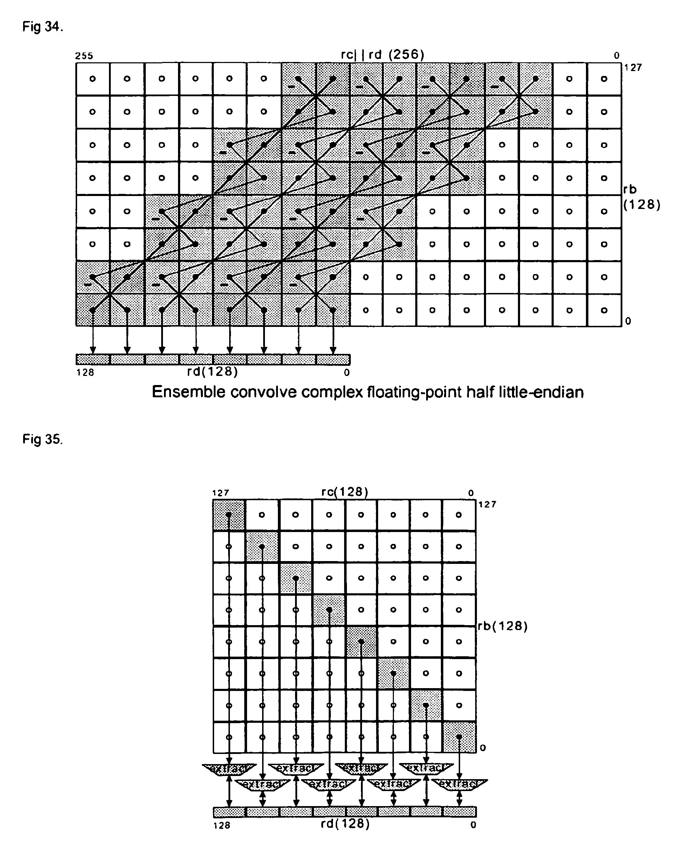

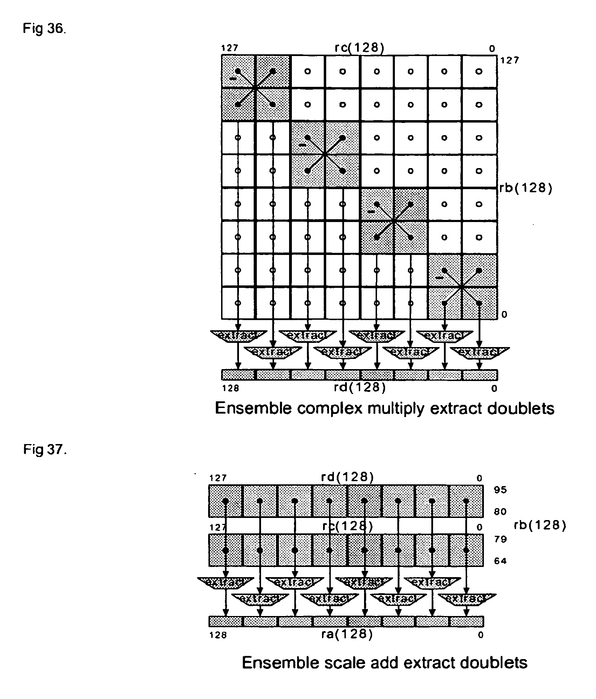

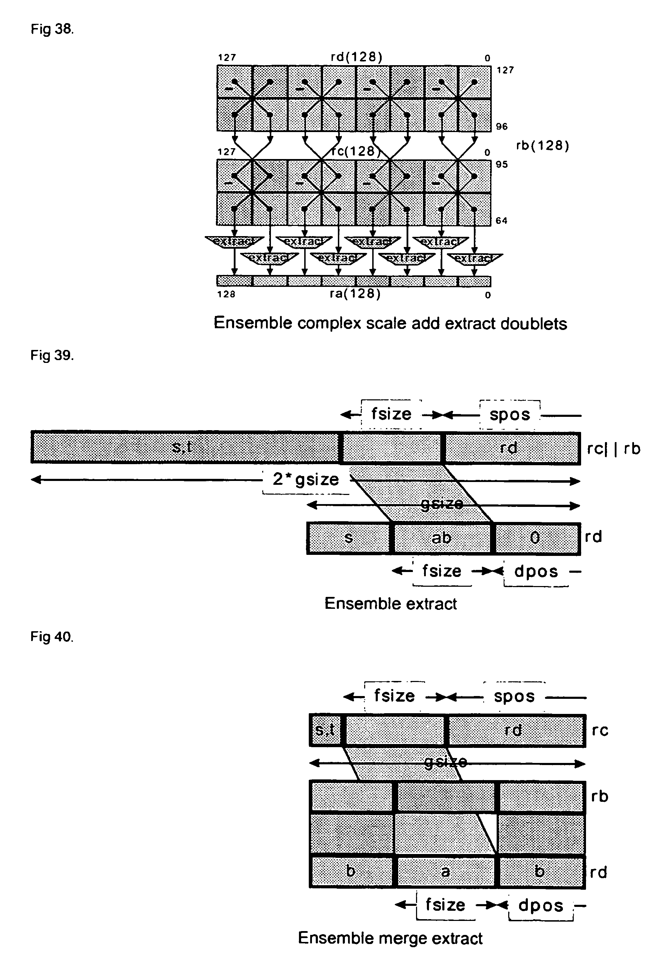

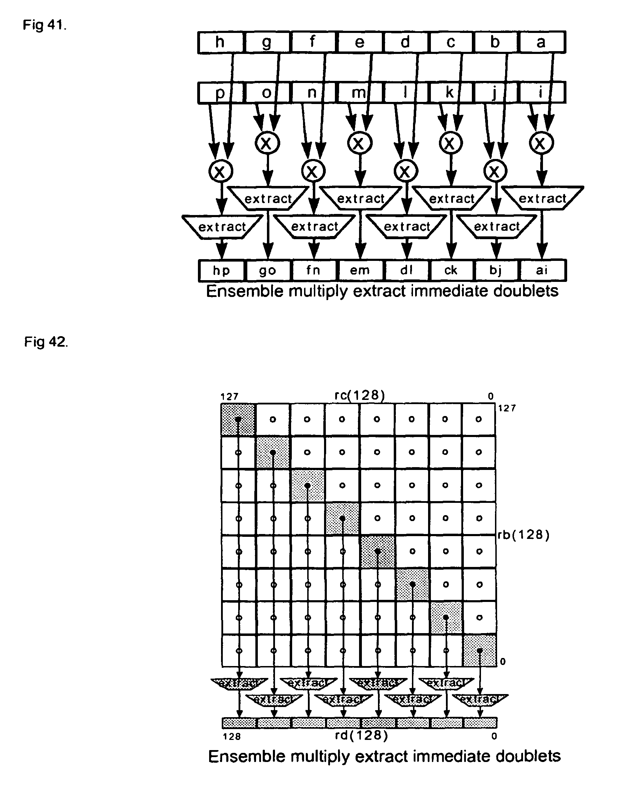

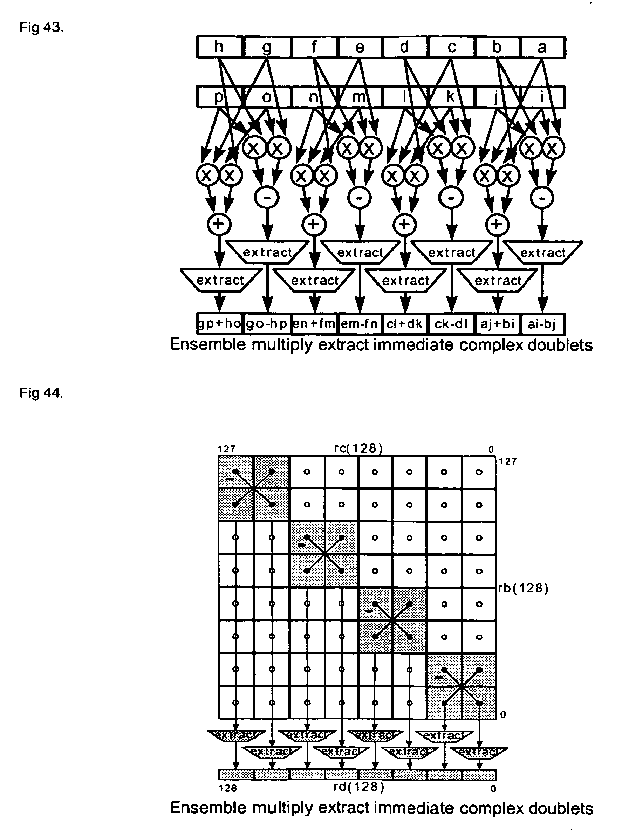

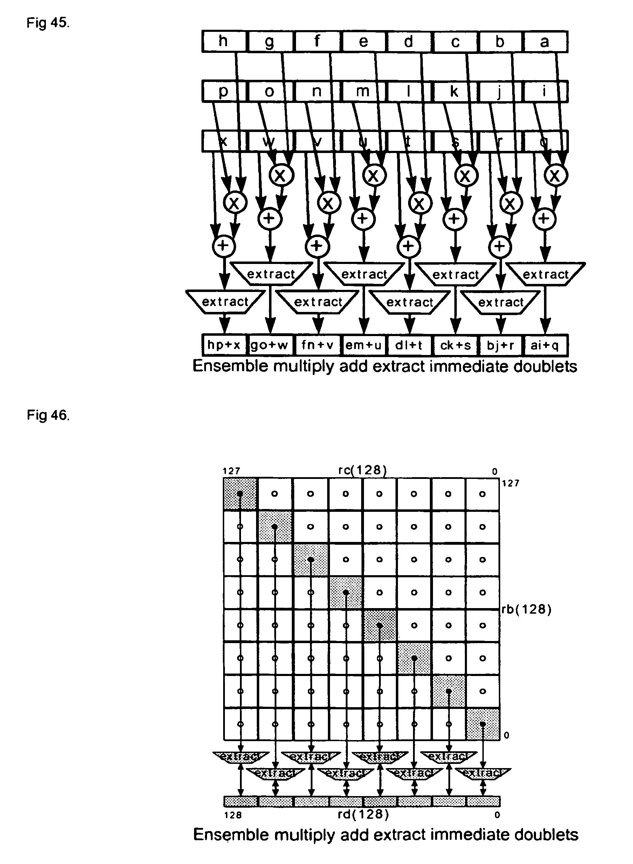

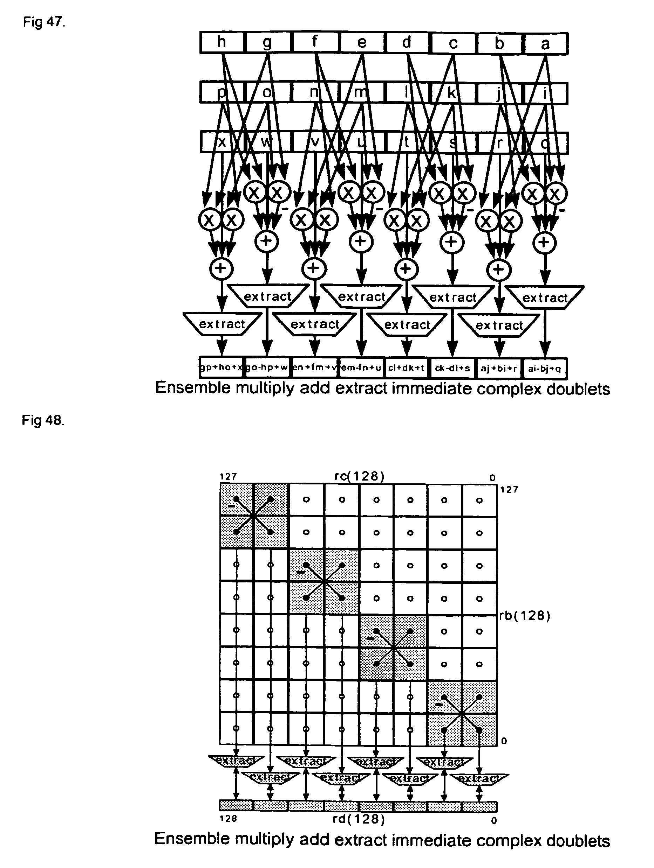

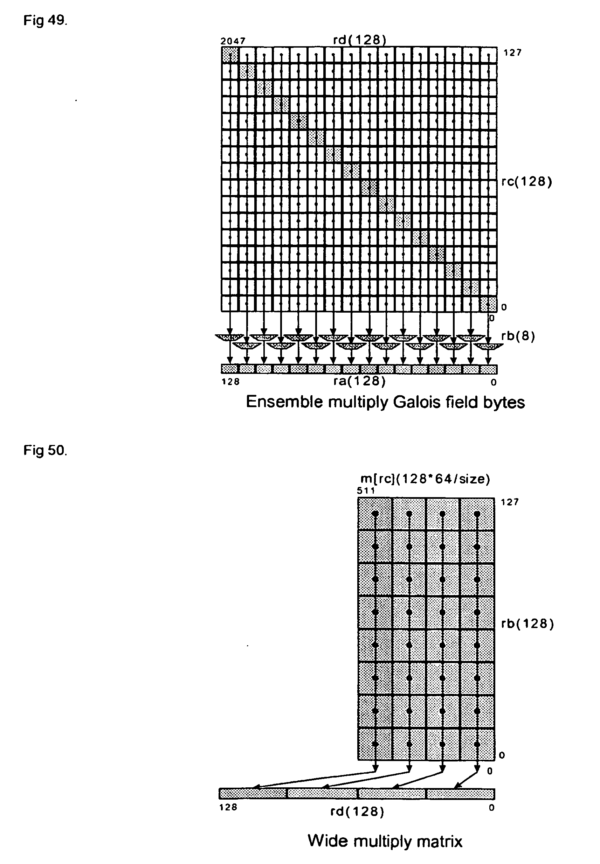

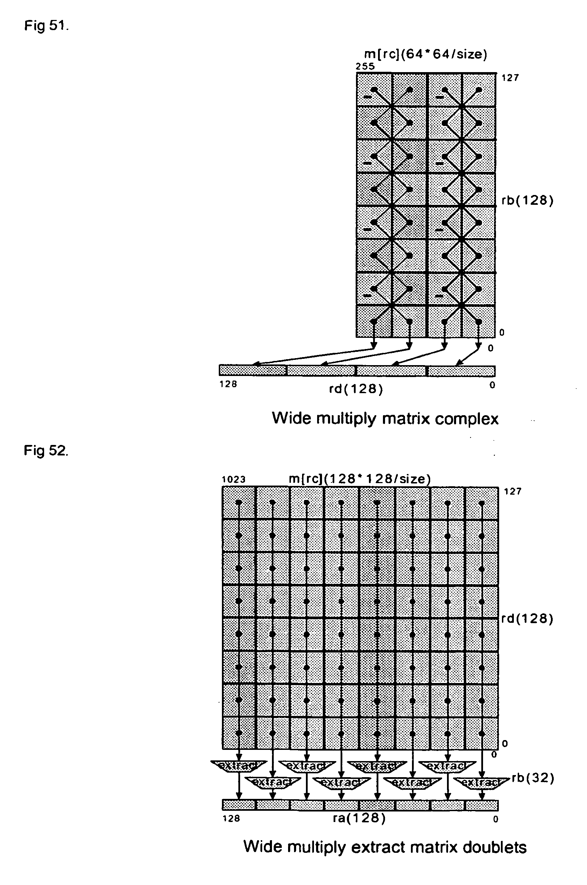

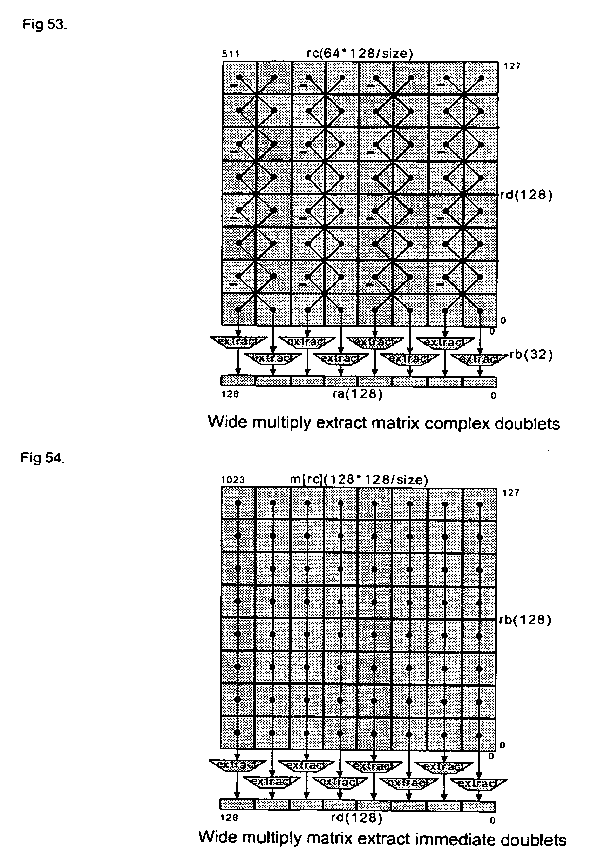

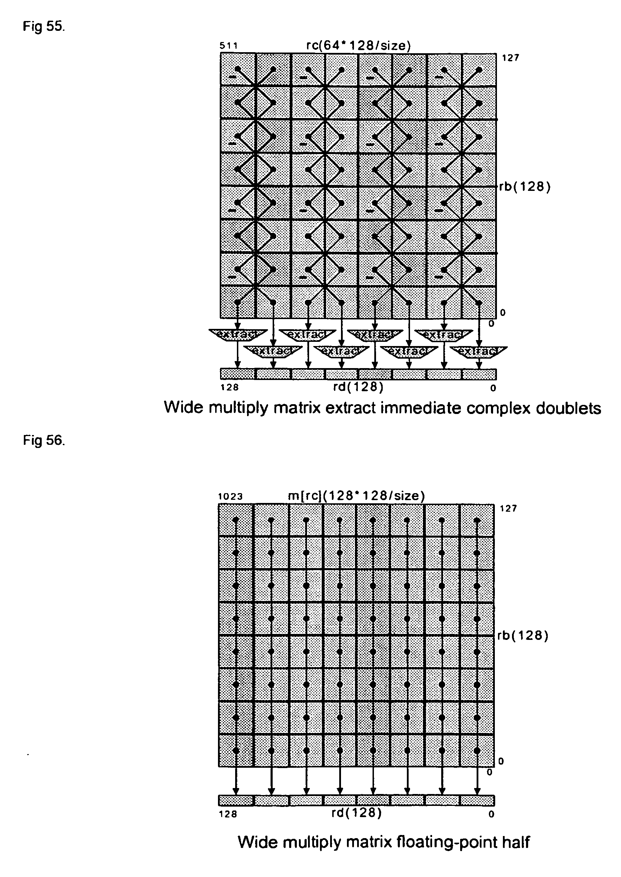

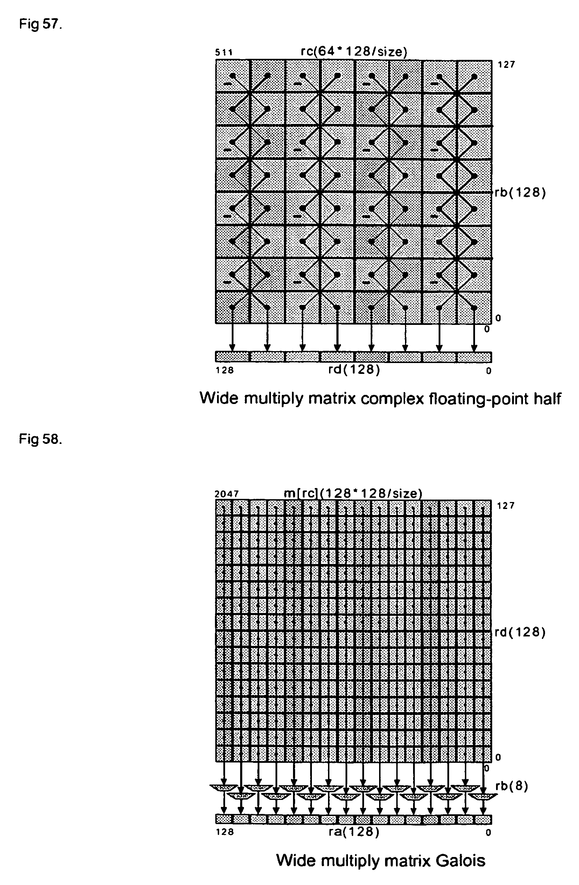

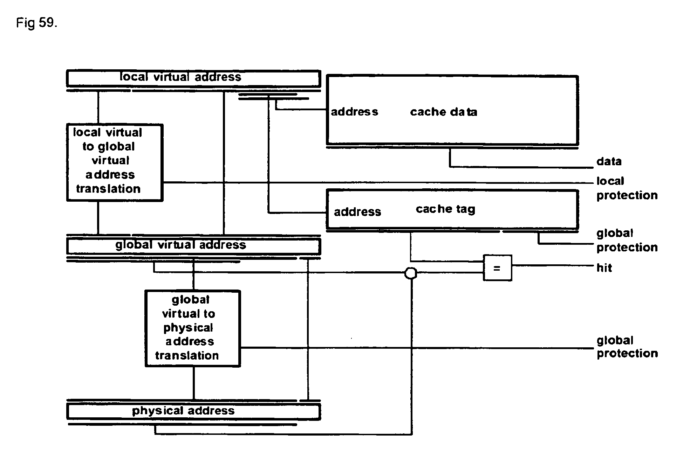

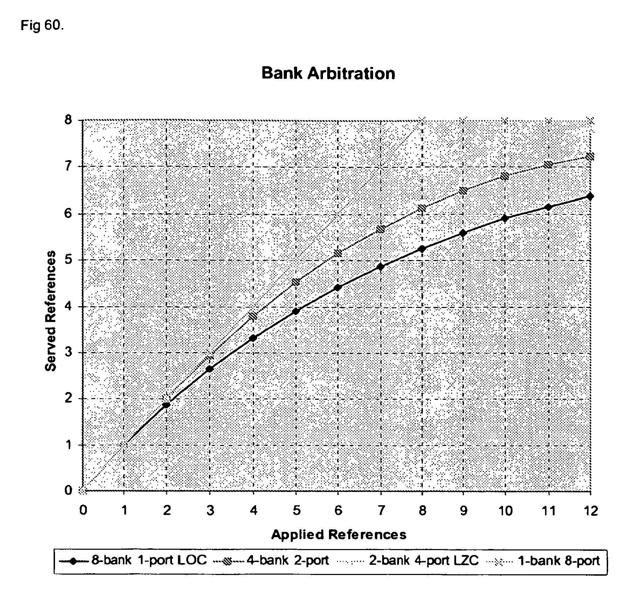

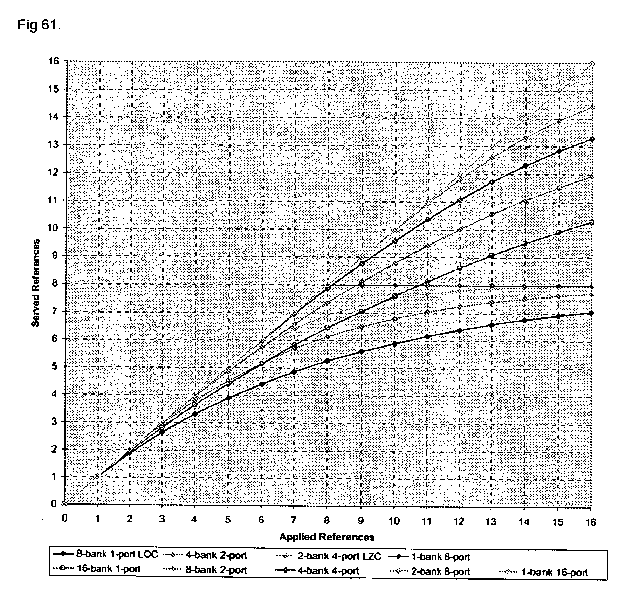

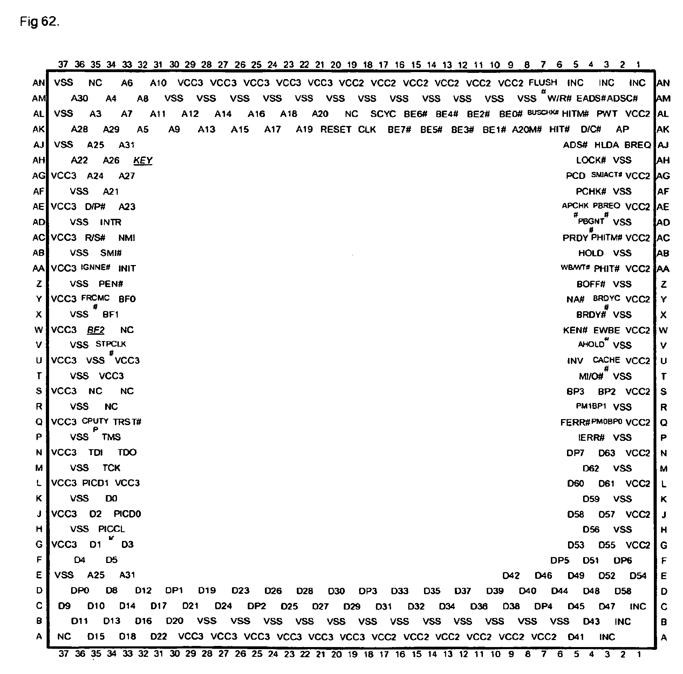

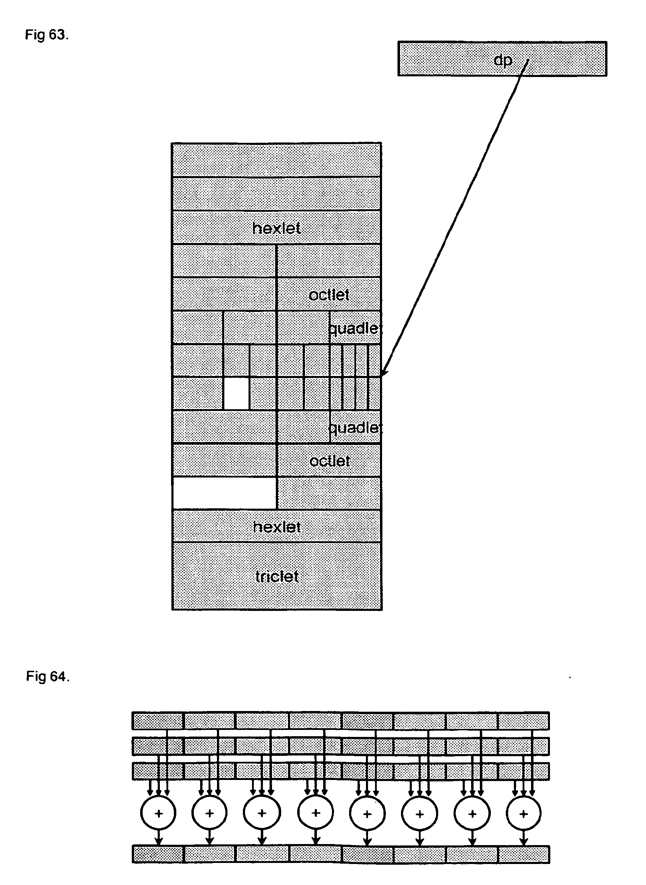

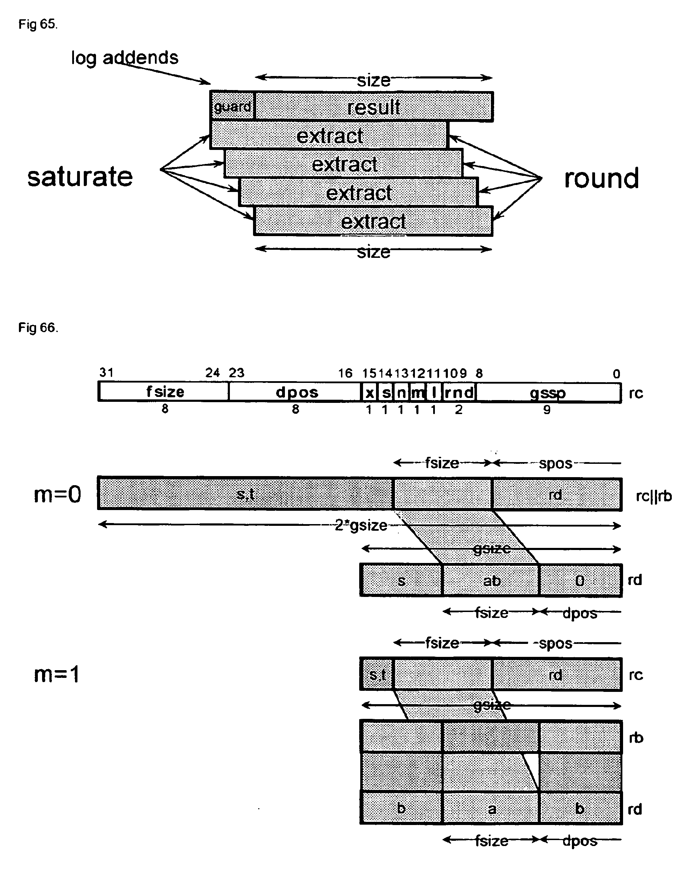

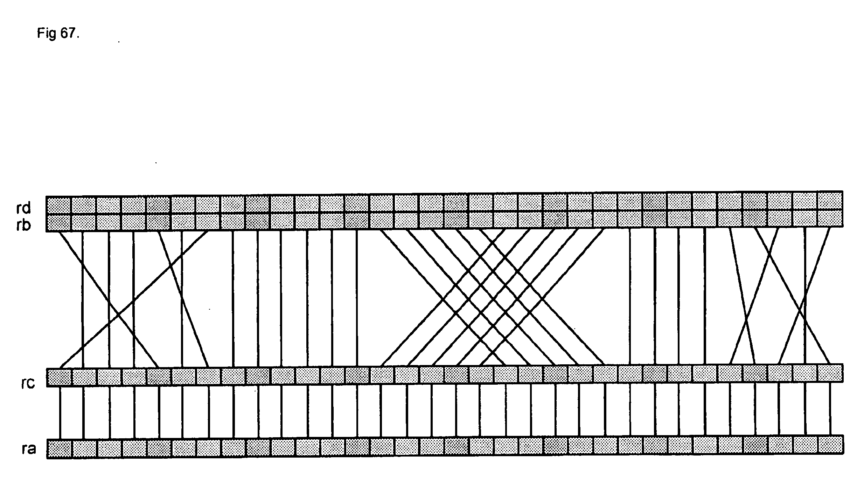

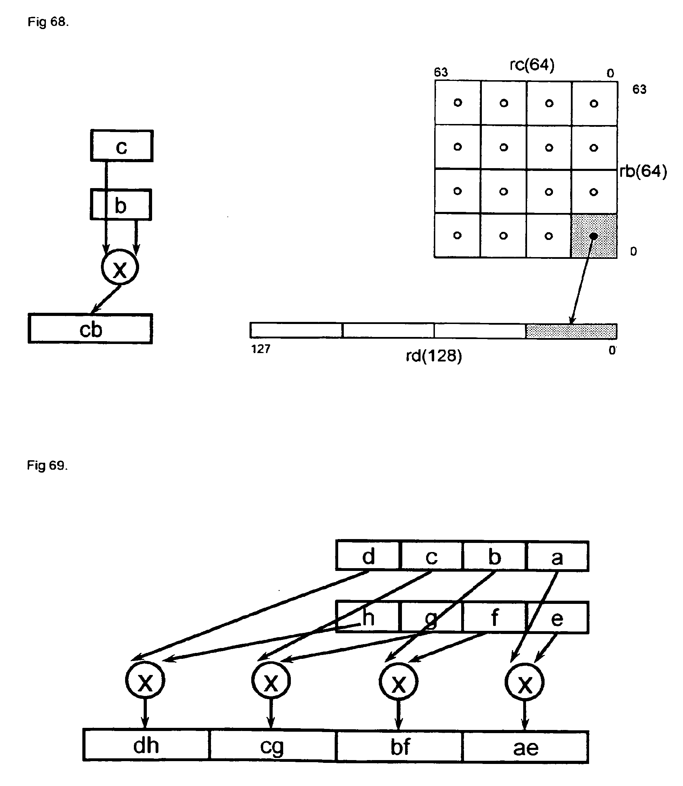

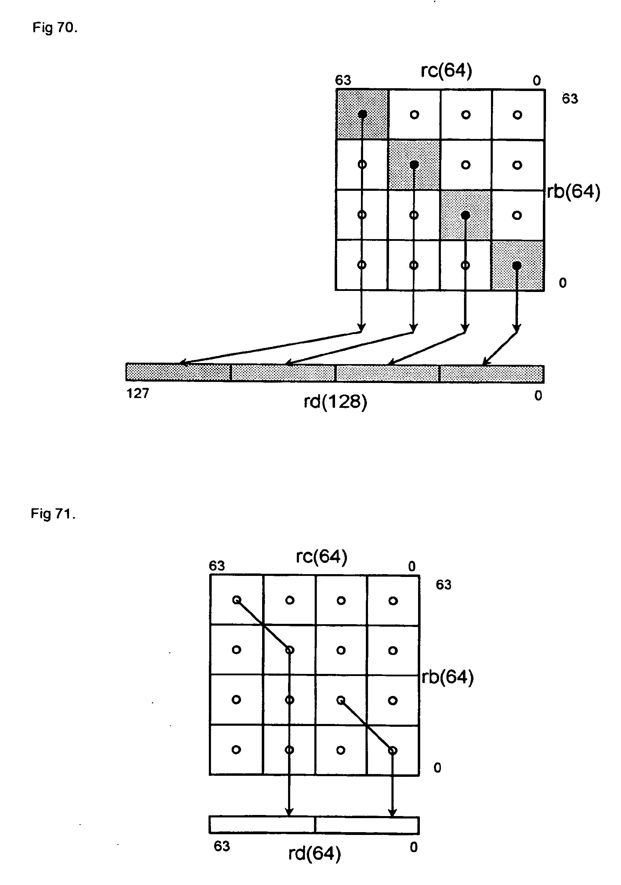

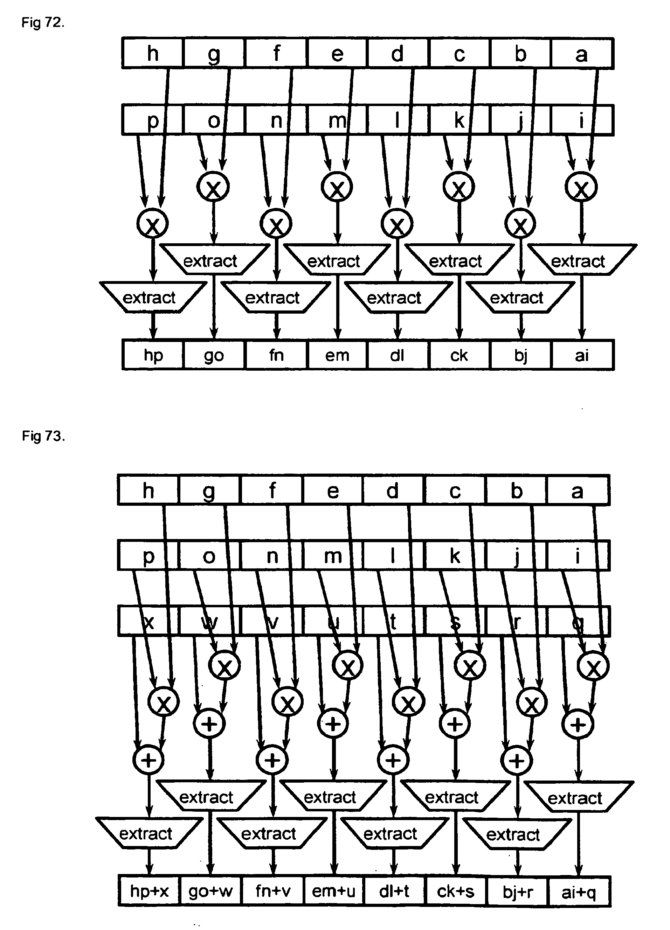

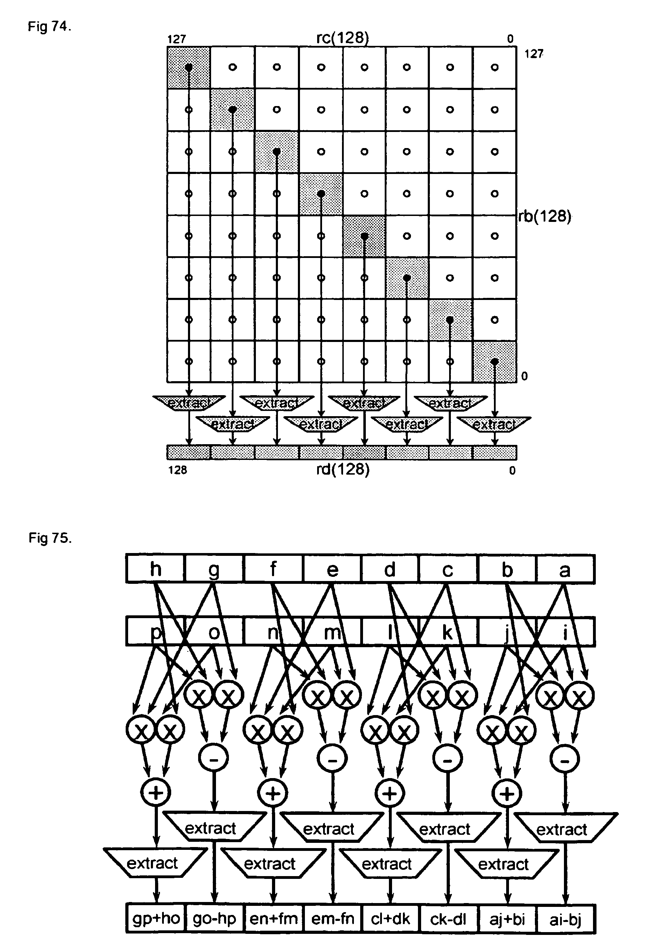

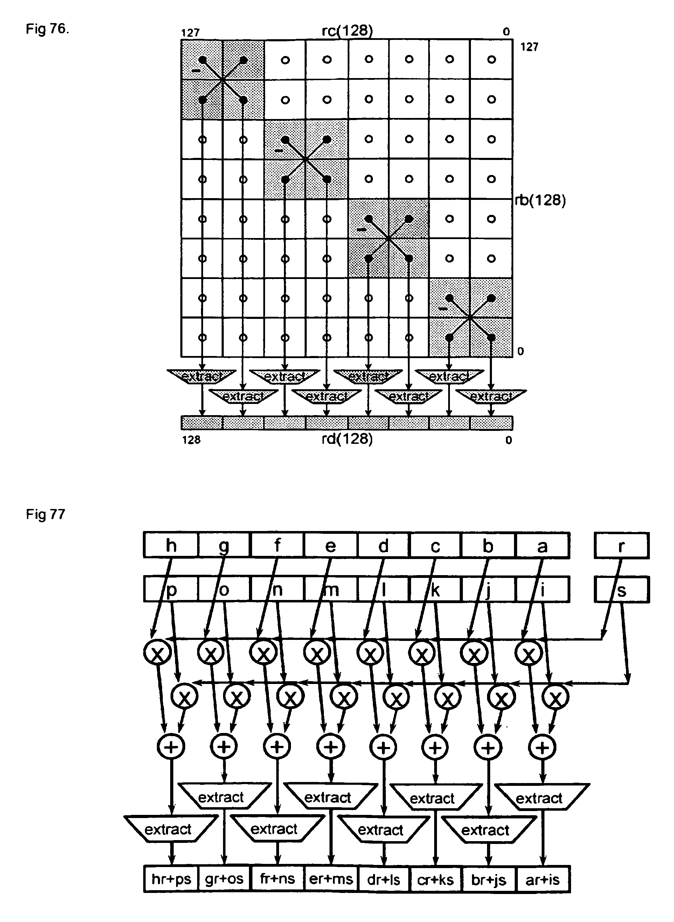

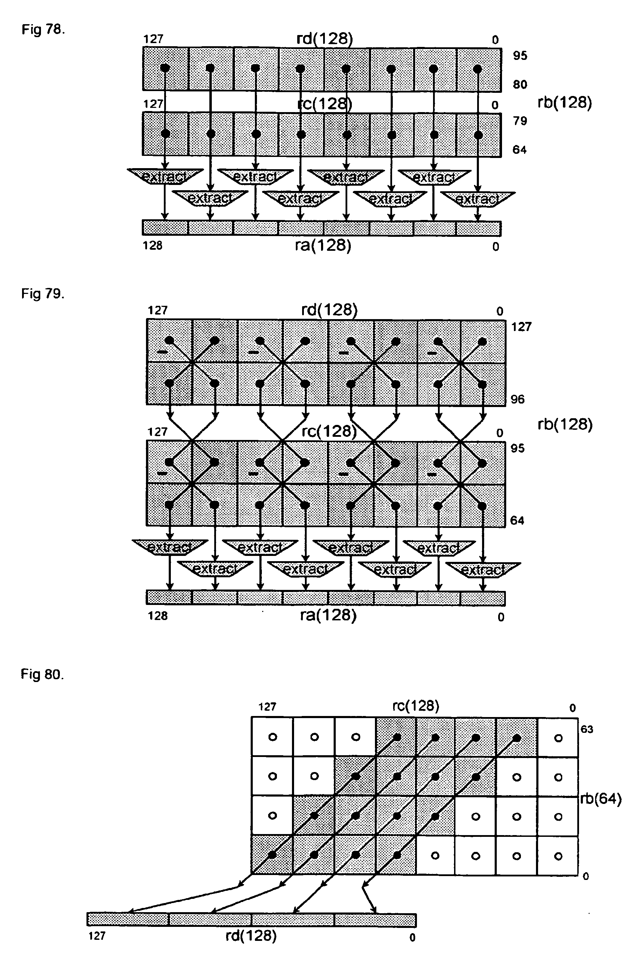

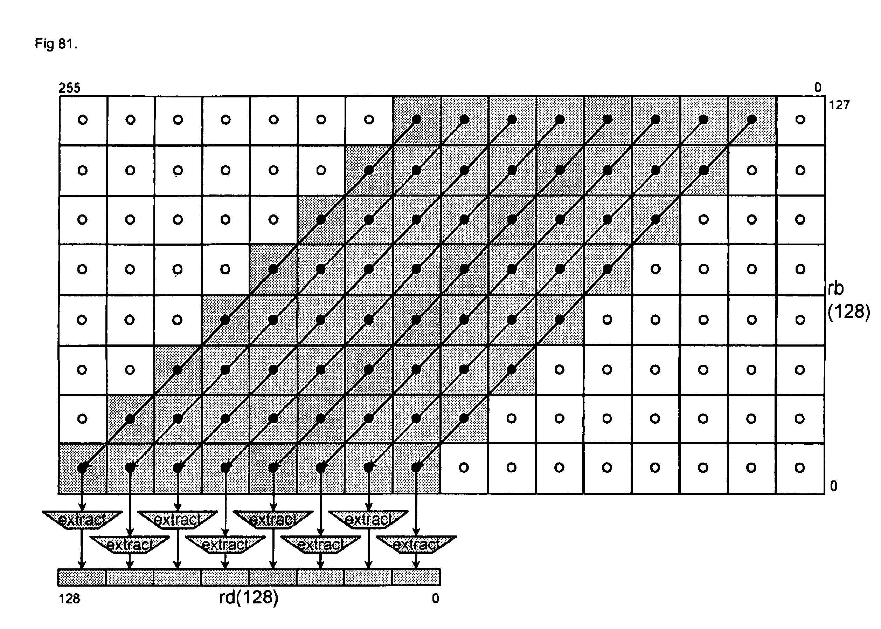

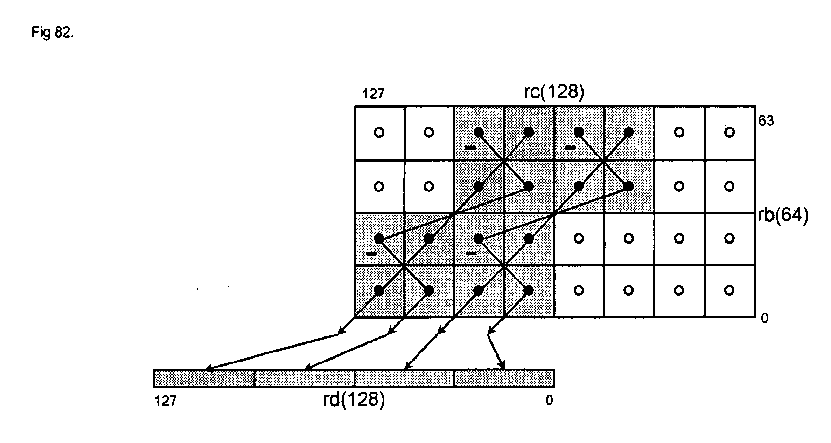

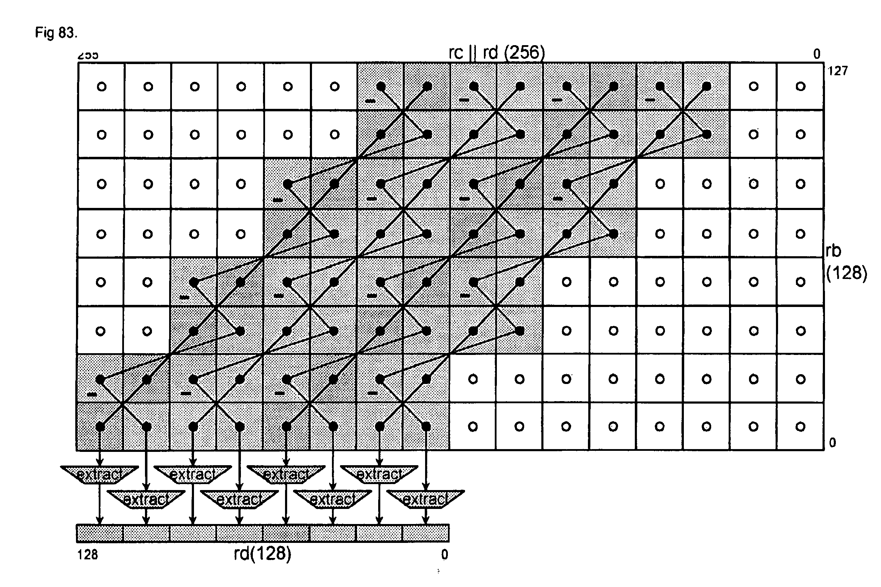

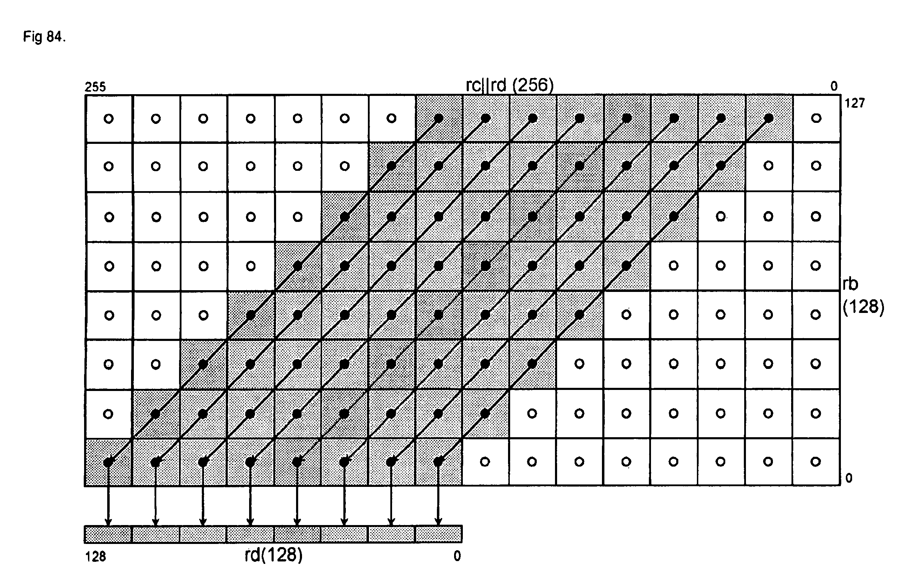

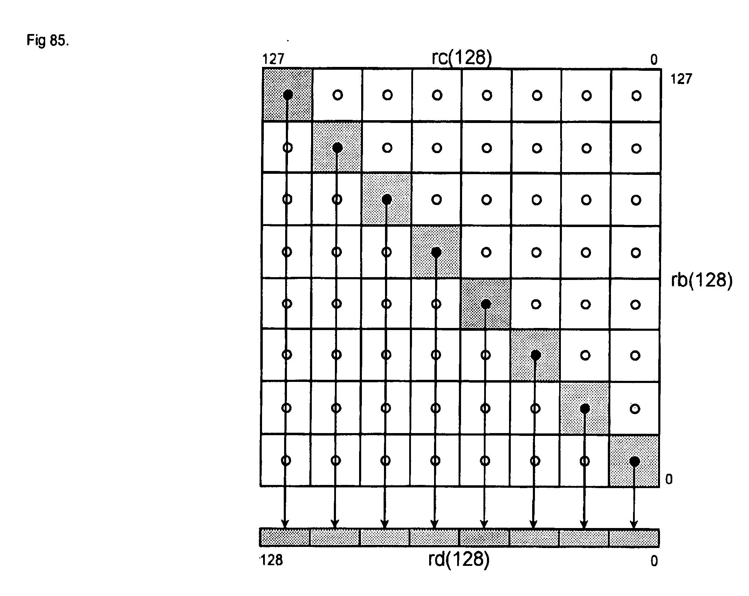

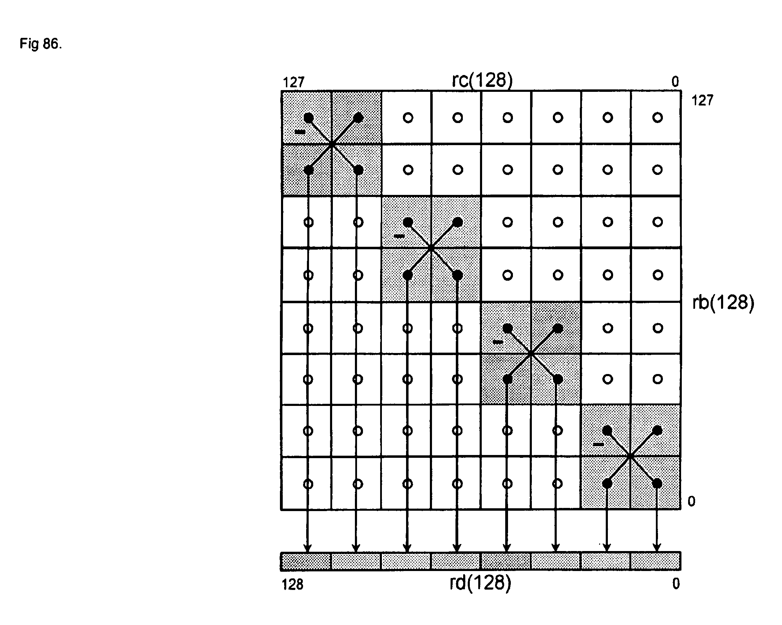

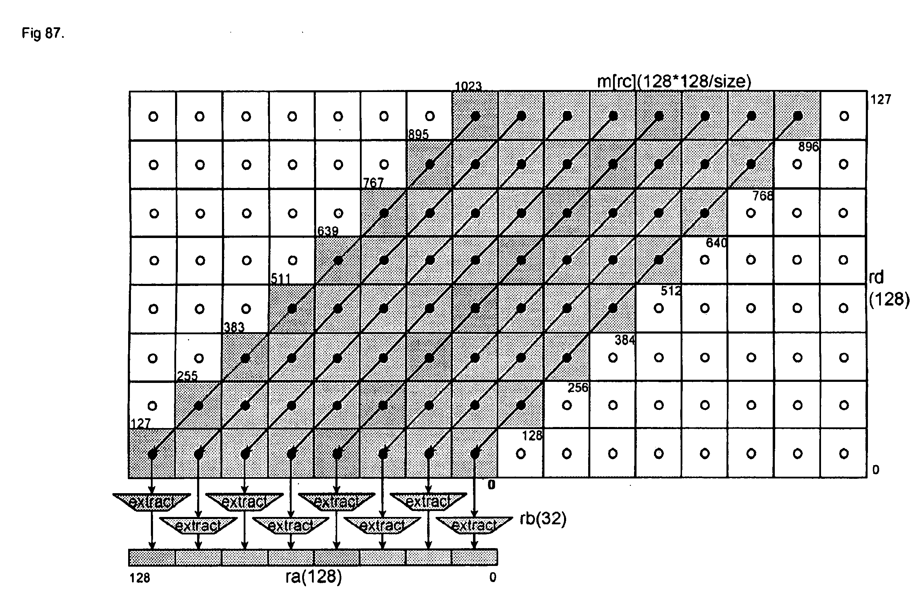

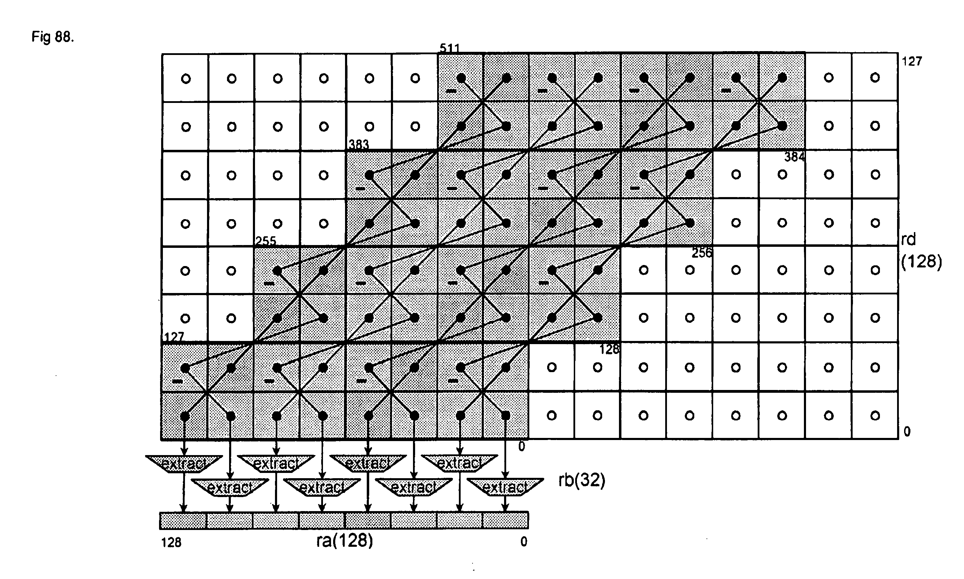

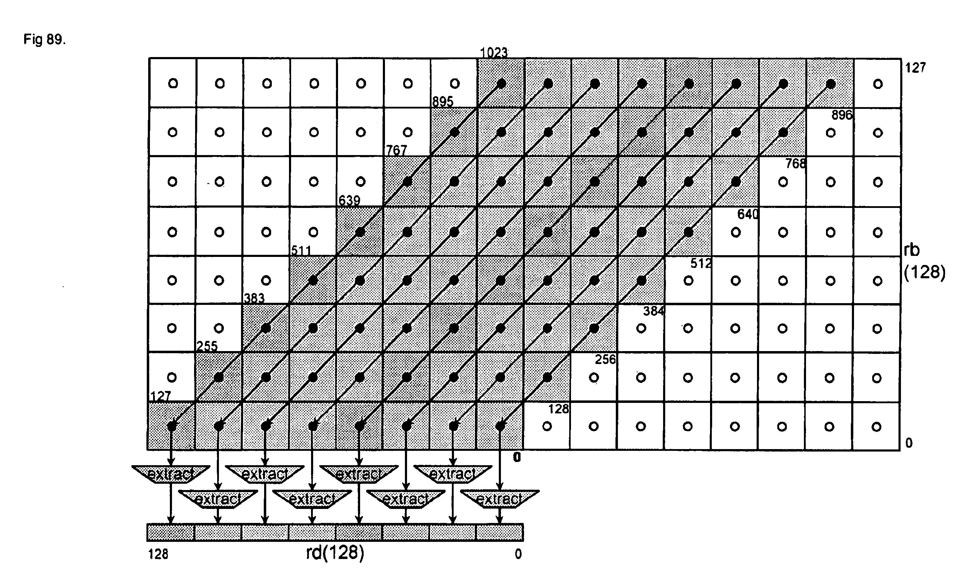

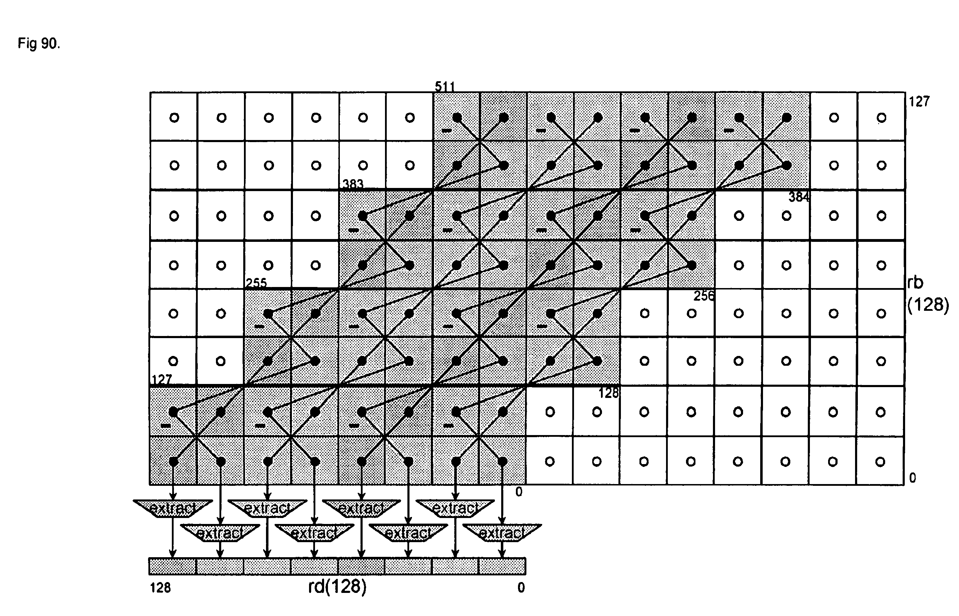

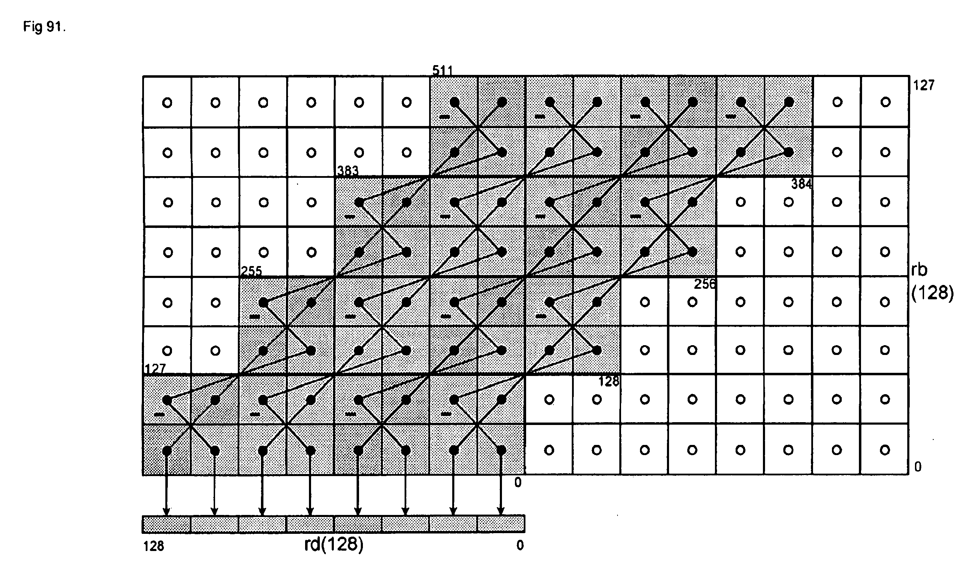

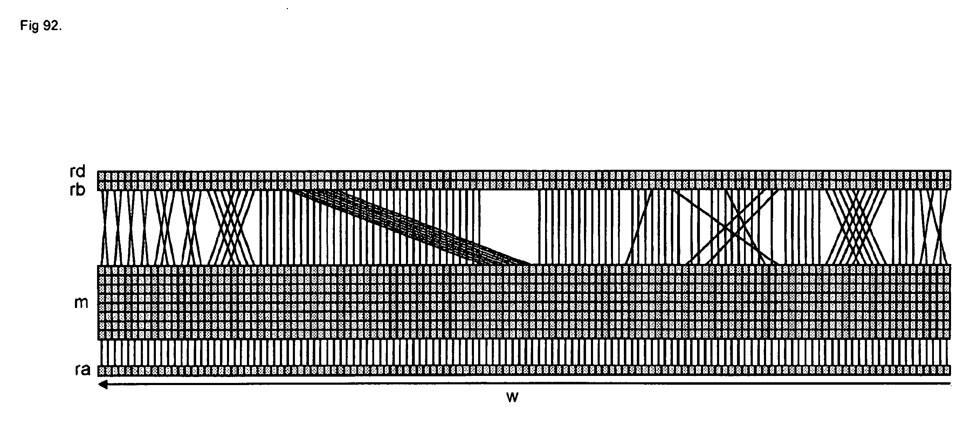

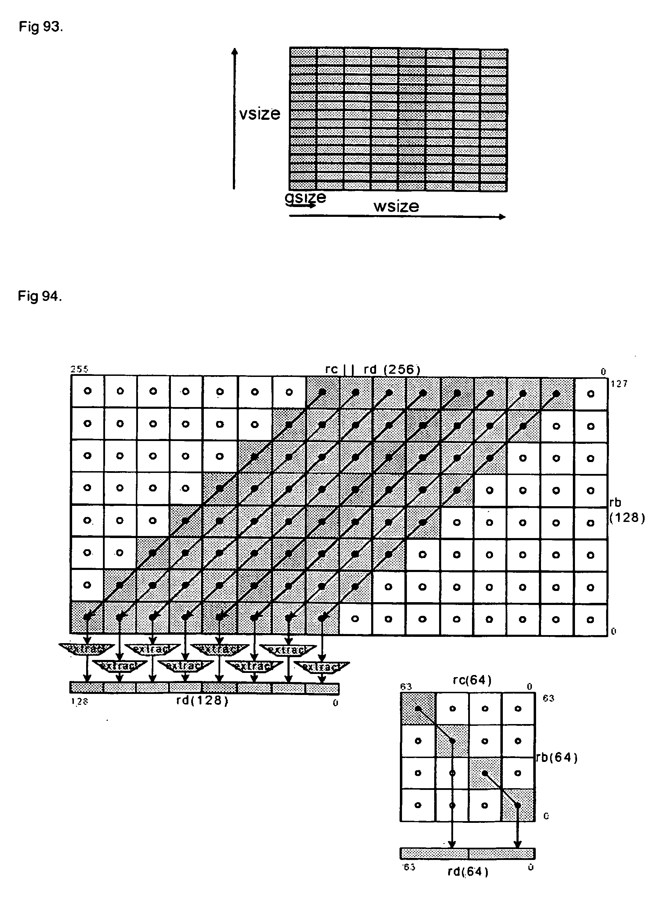

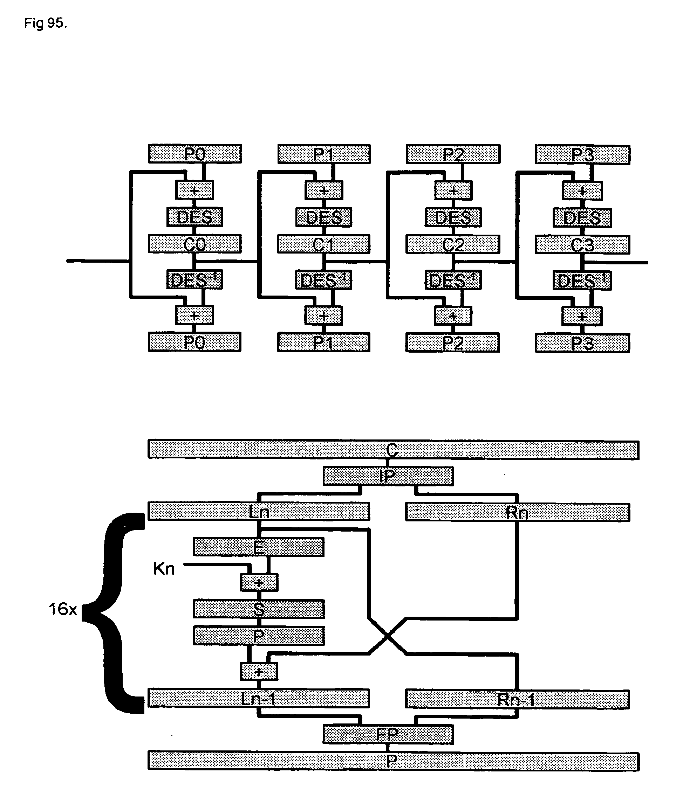

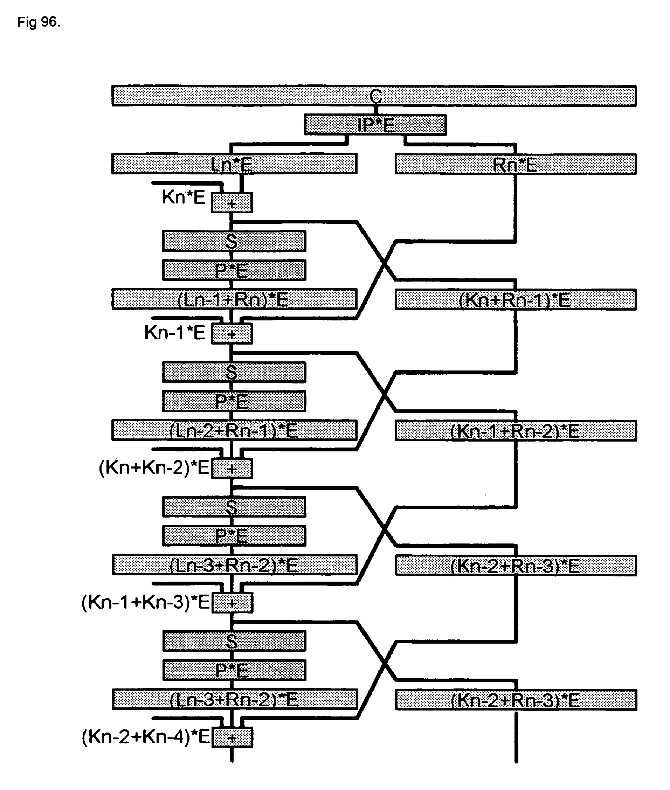

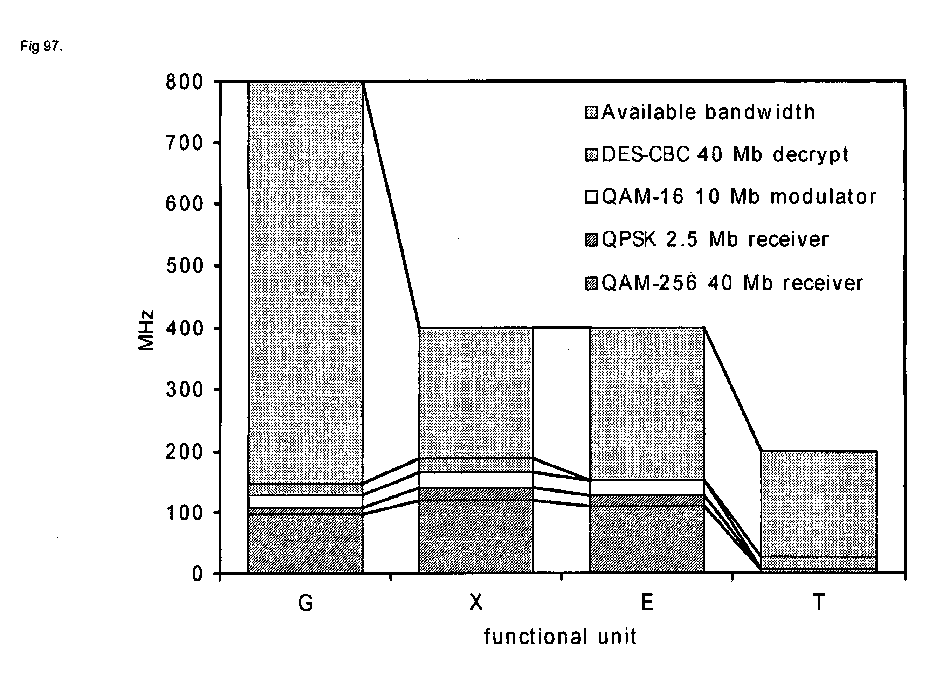

Referring next to Figures 10 and 11, which together show the operation of the microcache controller from a hardware standpoint, the operation of the microcache controller may be better understood. In the hardware implementation, it is clear that conditions which are indicated as sequential steps in Figure 8 and 9 above can be performed in parallel, reducing the delay for such wide operand checking. Further, a copy of the indicated hardware may be included for each wide microcache, and thereby all such microcaches as may be alternatively referenced by an instruction can be tested in parallel. It is believed that no further discussion of Figures 10 and 11 is required in view of the extensive discussion of Figures 8 and 9, above.

Various alternatives to the foregoing approach do exist for the use of wide operands, including an implementation in which a single instruction can accept two wide operands, partition the operands into symbols, multiply corresponding symbols together, and add the products to produce a single scalar value or a vector of partitioned values of width of the register file, possibly after extraction of a portion of the sums. Such an instruction can be valuable for detection of motion or estimation of motion in video compression. A further enhancement of such an instruction can incrementally update the dedicated storage if the address of one wide operand is within the range of previously specified wide operands in the dedicated storage, by loading only the portion not already within the range and shifting the in-range portion as required. Such an enhancement allows the operation to be performed over a "sliding window" of possible values. In such an instruction, one wide operand is aligned and supplies the size and shape information, while the second wide operand, updated incrementally, is not aligned.

Another alternative embodiment of the present invention can define additional instructions where the result operand is a wide operand. Such an enhancement removes the limit that a result can be no larger than the size of a general register, further enhancing performance. These wide results can be cached locally to the functional unit that created them, but must be copied to the general memory system before the storage can be reused and before the virtual memory system alters the mapping of the address of the wide result. Data paths must be added so that load operations and other wide operations can read these wide results - forwarding of a wide result from the output of a functional unit back to its input is relatively easy, but additional data paths may have to be introduced if it is desired to forward wide results back to other functional units as wide operands.

As previously discussed, a specification of the size and shape of the memory operand is included in the low-order bits of the address. In a presently preferred implementation, such memory operands are typically a power of two in size and aligned to that size. Generally, one-half the total size is added (or inclusively or'ed, or exclusively or'ed) to the memory address, and one half of the data width is added (or inclusively or'ed, or exclusively or'ed) to the memory address. These bits can be decoded and stripped from the memory address, so that the controller is made to step through all the required addresses. This decreases the number of distinct operands required for these instructions, as the size, shape and address of the memory operand are combined into a single register operand value.

Particular examples of wide operations which are defined by the present invention include the Wide Switch instruction that performs bit-level switching; the Wide Translate instruction which performs byte (or larger) table-lookup; Wide Multiply Matrix, Wide Multiply Matrix Extract and Wide Multiply Matrix Extract Immediate (discussed below), Wide Multiply Matrix Floating-point, and Wide Multiply Matrix Galois (also discussed below). While the discussion below focuses on particular sizes for the exemplary instructions, it will be appreciated that the invention is not limited to a particular width.

The Wide Switch instruction rearranges the contents of up to two registers (256 bits) at the bit level, producing a full-width (128 bits) register result. To control the rearrangement, a wide operand specified by a single register, consisting of eight bits per bit position is used. For each result bit position, eight wide operand bits for each bit position select which of the 256 possible source register bits to place in the result. When a wide operand size smaller than 128 bytes, the high order bits of the memory operand are replaced with values corresponding to the result bit position, so that the memory operand specifies a bit selection within symbols of the operand size, performing the same operation on each symbol.

The Wide Translate instructions use a wide operand to specify a table of depth up to 256 entries and width of up to 128 bits. The contents of a register is partitioned into operands of one, two, four, or eight bytes, and the partitions are used to select values from the table in parallel. The depth and width of the table can be selected by specifying the size and shape of the wide operand as described above.

The Wide Multiply Matrix instructions use a wide operand to specify a matrix of values of width up to 64 bits (one half of register file and data path width) and depth of up to 128 bits/symbol size. The contents of a general register (128 bits) is used as a source operand, partitioned into a vector of symbols, and multiplied with the matrix, producing a vector of width up to 128 bits of symbols of twice the size of the source operand symbols. The width and depth of the matrix can be selected by specifying the size and shape of the wide operand as described above. Controls within the instruction allow specification of signed, mixed-signed, unsigned, complex, or polynomial operands.

The Wide Multiply Matrix Extract instructions use a wide operand to specify a matrix of value of width up to 128 bits (full width of register file and data path) and depth of up to 128 bits/symbol size. The contents of a general register (128 bits) is used as a source operand, partitioned into a vector of symbols, and multiplied with the matrix, producing a vector of width up to 256 bits of symbols of twice the size of the source operand symbols plus additional bits to represent the sums of products without overflow. The results are then extracted in a manner described below (Enhanced Multiply Bandwidth by Result Extraction), as controlled by the contents of a general register specified by the instruction. The general register also specifies the format of the operands: signed, mixed-signed, unsigned, and complex as well as the size of the operands, byte (8 bit), doublet (16 bit), quadlet (32 bit), or hexlet (64 bit).

The Wide Multiply Matrix Extract Immediate instructions perform the same function as above, except that the extraction, operand format and size is controlled by fields in the instruction. This form encodes common forms of the above instruction without the need to initialize a register with the required control information. Controls within the instruction allow specification of signed, mixed-signed, unsigned, and complex operands.

The Wide Multiply Matrix Floating-point instructions perform a matrix multiply in the same form as above, except that the multiplies and additions are performed in floating-point arithmetic. Sizes of half (16-bit), single (32-bit), double (64-bit), and complex sizes of half, single and double can be specified within the instruction.

Wide Multiply Matrix Galois instructions perform a matrix multiply in the same form as above, except that the multiples and additions are performed in Galois field arithmetic. A size of 8 bits can be specified within the instruction. The contents of a general register specify the polynomial with which to perform the Galois field remainder operation. The nature of the matrix multiplication is novel and described in detail below.

In another aspect of the invention, memory operands of either little-endian or big-endian conventional byte ordering are facilitated. Consequently, all Wide operand instructions are specified in two forms, one for little-endian byte ordering and one for big-endian byte ordering, as specified by a portion of the instruction. The byte order specifies to the memory system the order in which to deliver the bytes within units of the data path width (128 bits), as well as the order to place multiple memory words (128 bits) within a larger Wide operand. Each of these instructions is described in greater detail in the System Architecture/BroadMX Architecture descriptions included herein.

Another aspect of the present invention addresses extraction of a high order portion of a multiplier product or sum of products, as a way of efficiently utilizing a large multiplier array. Related U.S. Patent No. 5,742,840 and U.S. Patent Application No. 08/857596 (notice of allowance 11/13/98), describe a system and method for enhancing the utilization of a multiplier array by adding specific classes of instructions to a general-purpose processor. This addresses the problem of making the most use of a large multiplier array that is fully used for high-precision arithmetic - for example a 64x64 bit multiplier is fully used by a 64-bit by 64-bit multiply, but only one quarter used for a 32-bit by 32-bit multiply) for (relative to the multiplier data width and registers) low-precision arithmetic operations. In particular, operations that perform a great many low-precision multiplies which are combined (added) together in various ways are specified. One of the overriding considerations in selecting the set of operations is a limitation on the size of the result operand. In an exemplary embodiment, for example, this size might be limited to on the order of 128 bits, or a single register, although no specific size limitation need exist.

The size of a multiply result, a product, is generally the sum of the sizes of the operands, multiplicands and multiplier. Consequently, multiply instructions specify operations in which the size of the result is twice the size of identically-sized input operands. For our prior art design, for example, a multiply instruction accepted two 64-bit register sources and produces a single 128-bit register-pair result, using an entire 64x64 multiplier array for 64-bit symbols, or half the multiplier array for pairs of 32-bit symbols, or one-quarter the multiplier array for quads of 16-bit symbols. For all of these cases, note that two register sources of 64 bits are combined, yielding a 128-bit result.

In several of the operations, including complex multiplies, convolve, and matrix multiplication, low-precision multiplier products are added together. The additions further increase the required precision. The sum of two products requires one additional bit of precision; adding four products requires two, adding eight products requires three, adding sixteen products requires four. In some prior designs, some of this precision is lost, requiring scaling of the multiplier operands to avoid overflow, further reducing accuracy of the result.

The use of register pairs creates an undesirable complexity, in that both the register pair and individual register values must be bypassed to subsequent instructions. As a result, with prior art techniques only half of the source operand 128-bit register values could be employed toward producing a single-register 128-bit result.

In the present invention, a high-order portion of the multiplier product or sum of products is extracted, adjusted by a dynamic shift amount from a general register or an adjustment specified as part of the instruction, and rounded by a control value from a register or instruction portion as round-to-nearest/even, toward zero, floor, or ceiling. Overflows are handled by limiting the result to the largest and smallest values that can be accurately represented in the output result. This operation is more fully described in the System Architecture/BroadMX Architecture descriptions included herein.

In the present invention, when the extract is controlled by a register, the size of the result can be specified, allowing rounding and limiting to a smaller number of bits than can fit in the result. This permits the result to be scaled to be used in subsequent operations without concern of overflow or rounding, enhancing performance.

Also in the present invention, when the extract is controlled by a register, a single register value defines the size of the operands, the shift amount and size of the result, and the rounding control. By placing all this control information in a single register, the size of the instruction is reduced over the number of bits that such a instruction would otherwise require, improving performance and enhancing flexibility of the processor.

The particular instructions included in this aspect of the present invention are Ensemble Convolve Extract, Ensemble Multiply Extract, Ensemble Multiply Add Extract and Ensemble Scale Add Extract. each of which is more thoroughly treated in the System Architecture/BroadMX Architecture descriptions included herein..

An aspect of the present invention defines the Ensemble Scale Add Extract instruction, that combines the extract control information in a register along with two values that are used as scalar multipliers to the contents of two vector multiplicands. This combination reduces the number of registers that would otherwise be required, or the number of bits that the instruction would otherwise require, improving performance.

Several of these instructions (Ensemble Convolve Extract, Ensemble Multiply Add Extract) are typically available only in forms where the extract is specified as part of the instruction. An alternative embodiment can incorporate forms of the operations in which the size of the operand, the shift amount and the rounding can be controlled by the contents of a general register (as they are in the Ensemble Multiply Extract instruction). The definition of this kind of instruction for Ensemble Convolve Extract, and Ensemble Multiply Add Extract would require four source registers, which increases complexity by requiring additional general-register read ports.

Another alternative embodiment can reduce the number of register read ports required for implementation of instructions in which the size, shift and rounding of operands is controlled by a register. The value of the extract control register can be fetched using an additional cycle on an initial execution and retained within or near the functional unit for subsequent executions, thus reducing the amount of hardware required for implementation with a small additional performance penalty. The value retained would be marked invalid, causing a re-fetch of the extract control register, by instructions that modify the register, or alternatively, the retained value can be updated by such an operation. A re-fetch of the extract control register would also be required if a different register number were specified on a subsequent execution. It should be clear that the properties of the above two alternative embodiments can be combined.

Another aspect of the invention includes Galois field arithmetic, where multiplies are performed by an initial binary polynomial multiplication (unsigned binary multiplication with carries suppressed), followed by a polynomial modulo/remainder operation (unsigned binary division with carries suppressed). The remainder operation is relatively expensive in area and delay. In Galois field arithmetic, additions are performed by binary addition with carries suppressed, or equivalently, a bitwise exclusive-or operation. In this aspect of the present invention, a matrix multiplication is performed using Galois field arithmetic, where the multiplies and additions are Galois field multiples and additions.

Using prior art methods, a 16 byte vector multipled by a 16x 16 byte matrix can be performed as 256 8-bit Galois field multiplies and 16*15=240 8-bit Galois field additions. Included in the 256 Galois field multiplies are 256 polynomial multiplies and 256 polynomial remainder operations. But by use of the present invention, the total computation can be reduced significantly by performing 256 polynomial multiplies, 240 16-bit polynomial additions, and 16 polynomial remainder operations. Note that the cost of the polynomial additions has been doubled, as these are now 16-bit operations, but the cost of the polynomial remainder functions has been reduced by a factor of 16. Overall, this is a favorable tradeoff, as the cost of addition is much lower than the cost of remainder.

In a still further aspect of the present invention, a technique is provided for incorporating floating point information into processor instructions. In related US patent 5812439, a system and method are described for incorporating control of rounding and exceptions for floating-point instructions into the instruction itself. The present invention extends this invention to include separate instructions in which rounding is specified, but default handling of exceptions is also specified, for a particular class of floating-point instructions. Specifically, the SINK instruction (which converts floating-point values to integral values) is available with control in the instruction that include all previously specified combinations (default-near rounding and default exceptions, Z - round-toward-zero and trap on exceptions, N - round to nearest and trap on exceptions, F - floor rounding (toward minus infinity) and trap on exceptions, C - ceiling rounding (toward plus infinity) and trap on exceptions, and X - trap on inexact and other exceptions), as well as three new combinations (Z.D - round toward zero and default exception handling, F.D - floor rounding and default exception handling, and C.D - ceiling rounding and default exception handling). (The other combinations: N.D is equivalent to the default, and X.D - trap on inexact but default handling for other exceptions is possible but not particularly valuable).

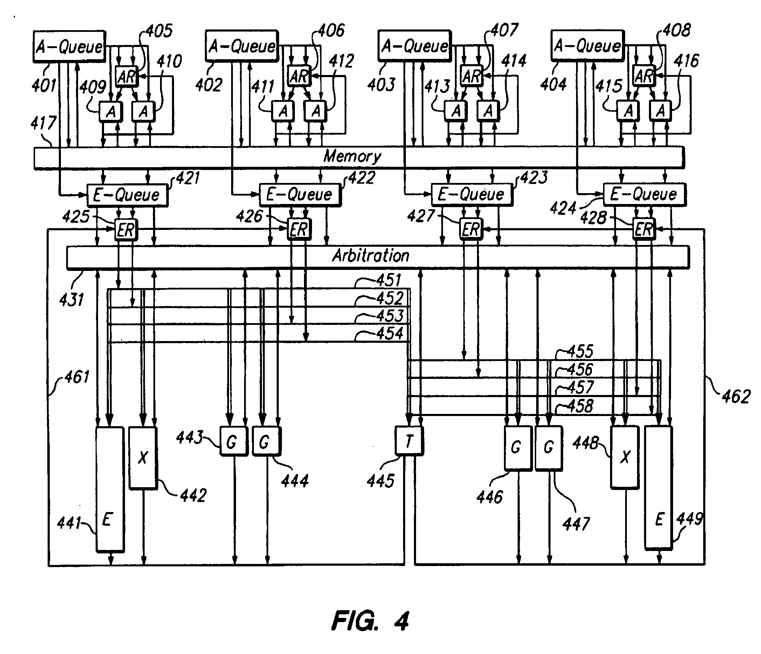

In yet another aspect of the present invention, best shown in Figure 4, the present invention employs both decoupled access from execution pipelines and simultaneous multithreading in a unique way. Simultaneous Multithreaded pipelines have been employed in prior art to enhance the utilization of data path units by allowing instructions to be issued from one of several execution threads to each functional unit. (e.g., Susan Eggers, University of Wash, papers on Simultaneous Multithreading).

Decoupled access from execution pipelines have been employed in prior art to enhance the utilization of execution data path units by buffering results from an access unit, which computes addresses to a memory unit that in turn fetches the requested items from memory, and then presenting them to an execution unit (e.g., James E. Smith, paper on Decoupled Access from Execution).

Compared to conventional pipelines, Eggers prior art used an additional pipeline cycle before instructions could be issued to functional units, the additional cycle needed to determine which threads should be permitted to issue instructions. Consequently, relative to conventional pipelines, the prior art design had additional delay, including dependent branch delay.

The present invention contains individual access data path units, with associated register files, for each execution thread. These access units produce addresses, which are aggregated together to a common memory unit, which fetches all the addresses and places the memory contents in one or more buffers. Instructions for execution units, which are shared to varying degrees among the threads are also buffered for later execution. The execution units then perform operations from all active threads using functional data path units that are shared.

For instructions performed by the execution units, the extra cycle required for prior art simultaneous multithreading designs is overlapped with the memory data access time from prior art decoupled access from execution cycles, so that no additional delay is incurred by the execution functional units for scheduling resources. For instructions performed by the access units, by employing individual access units for each thread the additional cycle for scheduling shared resources is also eliminated.

This is a favorable tradeoff because, while threads do not share the access functional units, these units are relatively small compared to the execution functional units, which are shared by threads.

With regard to the sharing of execution units, the present invention employs several different classes of functional units for the execution unit, with varying cost, utilization, and performance. In particular, the G units, which perform simple addition and bitwise operations is relatively inexpensive (in area and power) compared to the other units, and its utilization is relatively high. Consequently, the design employs four such units, where each unit can be shared between two threads. The X unit, which performs a broad class of data switching functions is more expensive and less used, so two units are provided that are each shared among two threads. The T unit, which performs the Wide Translate instruction, is expensive and utilization is low, so the single unit is shared among all four threads. The E unit, which performs the class of Ensemble instructions, is very expensive in area and power compared to the other functional units, but utilization is relatively high, so we provide two such units, each unit shared by two threads.

In Figure 4, four copies of an access unit are shown, each with an access instruction fetch queue A-Queue 401-404, coupled to an access register file AR 405-408, each of which is, in turn, coupled to two access functional units A 409-416. The access units function independently for four simultaneous threads of execution. These eight access functional units A 409-416 produce results for access register files AR 405-408 and addresses to a shared memory system 417. The memory contents fetched from memory system 417 are combined with execute instructions not performed by the access unit and entered into the four execute instruction queues E-Queue 421-424. Instructions and memory data from E-queue 421-424 are presented to execution register files 425-428, which fetches execution register file source operands. The instructions are coupled to the execution unit arbitration unit Arbitration 431, that selects which instructions from the four threads are to be routed to the available execution units E 441 and 449, X 442 and 448, G 443-444 and 446-447, and T 445. The execution register file source operands ER 425-428 are coupled to the execution units 441-445 using source operand buses 451-454 and to the execution units 445-449 using source operand buses 455-458. The function unit result operands from execution units 441-445 are coupled to the execution register file using result bus 461 and the function units result operands from execution units 445-449 are coupled to the execution register file using result bus 462.

The foregoing elements of the present invention may be better understood with reference to the System Architecture/BroadMX Architecture descriptions included herein.

In a still further aspect of the present invention, an improved interprivilege gateway is described which involves increased parallelism and leads to enhanced performance. In related U.S. Patent Application No. 08/541416, a system and method is described for implementing an instruction that, in a controlled fashion, allows the transfer of control (branch) from a lower-privilege level to a higher-privilege level. The present invention is an improved system and method for a modified instruction that accomplishes the same purpose but with specific advantages.

Many processor resources, such as control of the virtual memory system itself, input and output operations, and system control functions are protected from accidental or malicious misuse by enclosing them in a protective, privileged region. Entry to this region must be established only though particular entry points, called gateways, to maintain the integrity of these protected regions.

Prior art versions of this operation generally load an address from a region of memory using a protected virtual memory attribute that is only set for data regions that contain valid gateway entry points, then perform a branch to an address contained in the contents of memory. Basically, three steps were involved: load, branch, then check. Compared to other instructions, such as register-to-register computation instructions and memory loads and stores, and register-based branches, this is a substantially longer operation, which introduces delays and complexity to a pipelined implementation.

In the present invention, the branch-gateway instruction performs two operations in parallel: 1) a branch is performed to the contents of register 0 and 2) a load is performed using the contents of register 1, using a specified byte order (little-endian) and a specified size (64 bits). If the value loaded from memory does not equal the contents of register 0, the instruction is aborted due to an exception. In addition, 3) a return address (the next sequential instruction address following the branch-gateway instruction) is written into register 0, provided the instruction is not aborted. This approach essentially uses a first instruction to establish the requisite permission to allow user code to access privileged code, and then a second instruction is permitted to branch directly to the privileged code because of the permissions issued for the first instruction.

In the present invention, the new privilege level is also contained in register 0, and the second parallel operation does not need to be performed if the new privilege level is not greater than the old privilege level. When this second operation is suppressed, the remainder of the instruction performs an identical function to a branch-link instruction, which is used for invoking procedures that do not require an increase in privilege. The advantage that this feature brings is that the branch-gateway instruction can be used to call a procedure that may or may not require an increase in privilege.

The memory load operation verifies with the virtual memory system that the region that is loaded has been tagged as containing valid gateway data. A further advantage of the present invention is that the called procedure may rely on the fact that register 1 contains the address that the gateway data was loaded from, and can use the contents of register 1 to locate additional data or addresses that the procedure may require. Prior art versions of this instruction required that an additional address be loaded from the gateway region of memory in order to initialize that address in a protected manner - the present invention allows the address itself to be loaded with a "normal" load operation that does not require special protection.

The present invention allows a "normal" load operation to also load the contents of register 0 prior to issuing the branch-gateway instruction. The value may be loaded from the same memory address that is loaded by the branch-gateway instruction, because the present invention contains a virtual memory system in which the region may be enabled for normal load operations as well as the special "gateway" load operation performed by the branch-gateway instruction.

In a further aspect of the present invention, a system and method is provided for performing a three-input bitwise Boolean operation in a single instruction. A novel method, described in detail in the System Architecture/BroadMX Architecture descriptions herein, is used to encode the eight possible output states of such an operation into only seven bits, and decoding these seven bits back into the eight states.

In yet a further aspect to the present invention, a system and method is described for improving the branch prediction of simple repetitive loops of code. The method includes providing a count field for indicating how many times a branch is likely to be taken before it is not taken, which enhances the ability to properly predict both the initial and final branches of simple loops when a compiler can determine the number of iterations that the loop will be performed. This improves performance by avoiding misprediction of the branch at the end of a loop.

Having fully described a preferred embodiment of the invention and various alternatives, those skilled in the art will recognize, given the teachings herein, that numerous alternatives and equivalents exist which do not depart from the invention. It is therefore intended that the invention not be limited by the foregoing description, but only by the appended claims.

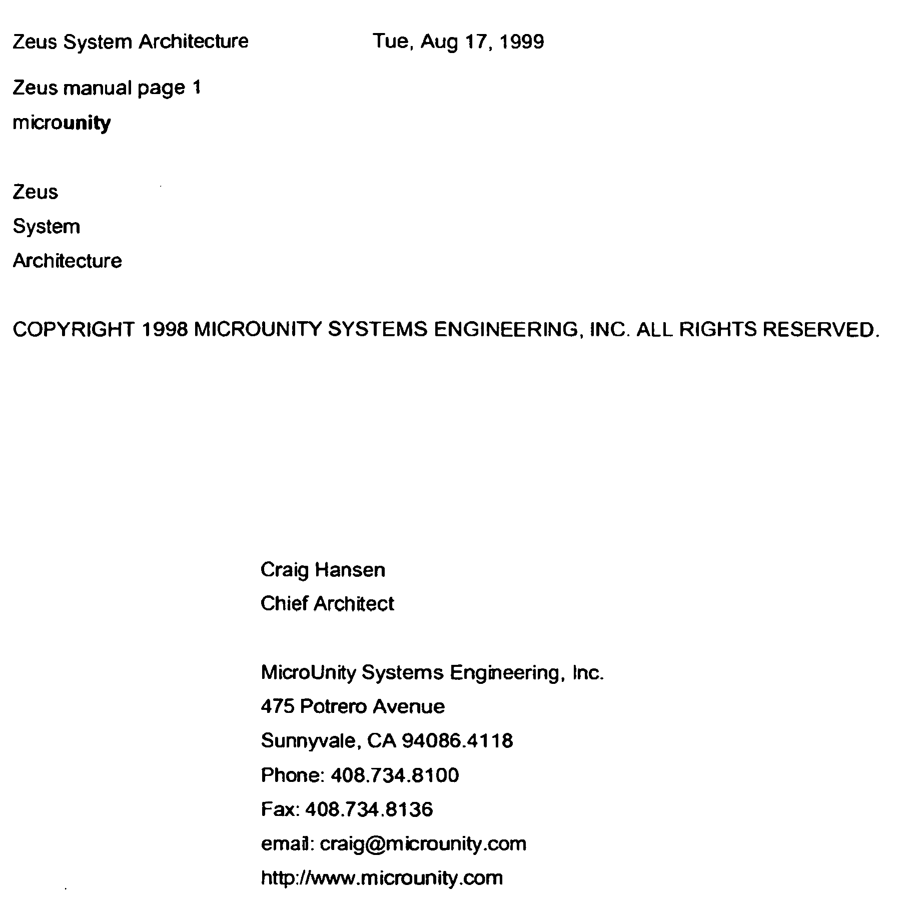

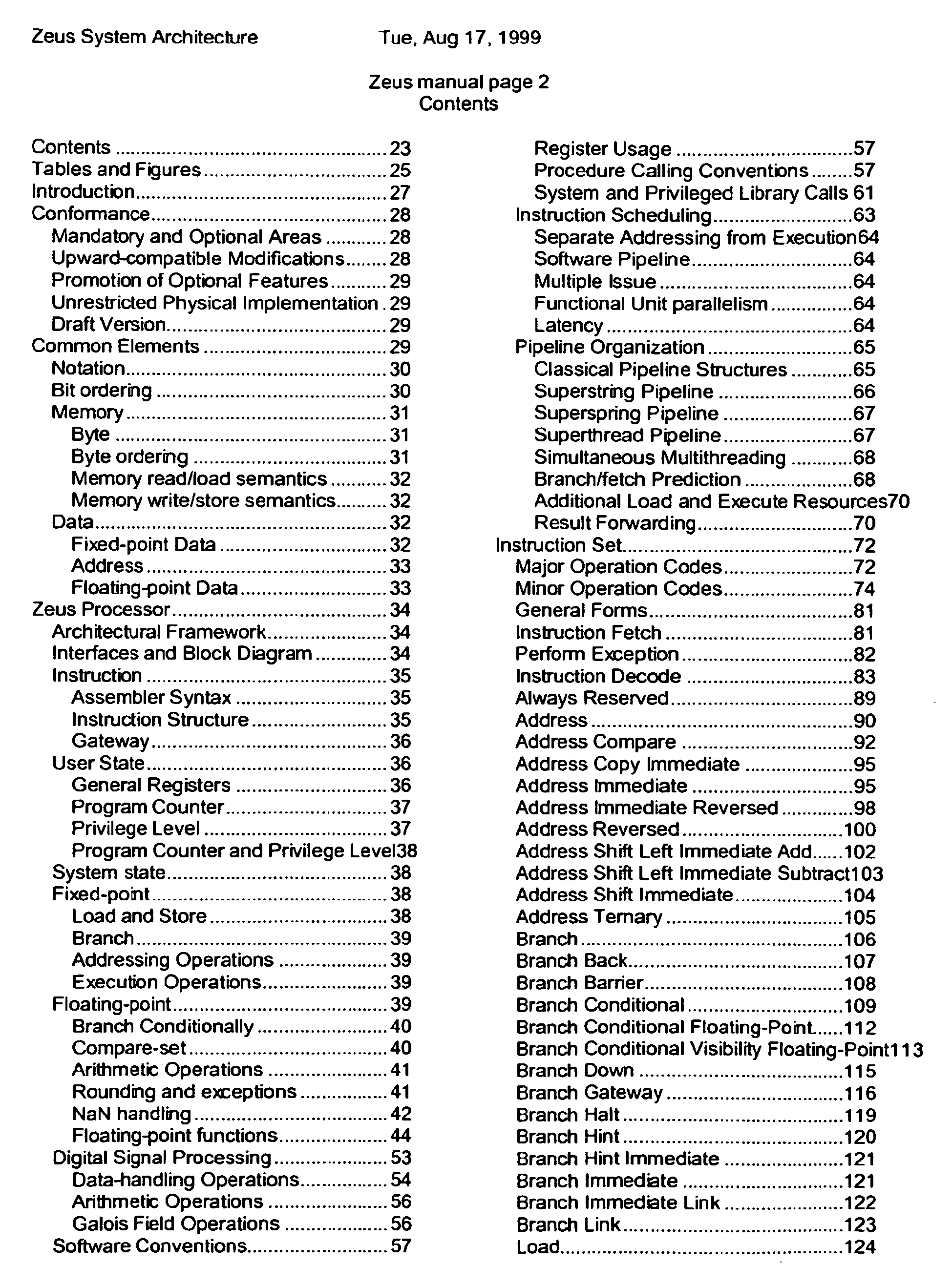

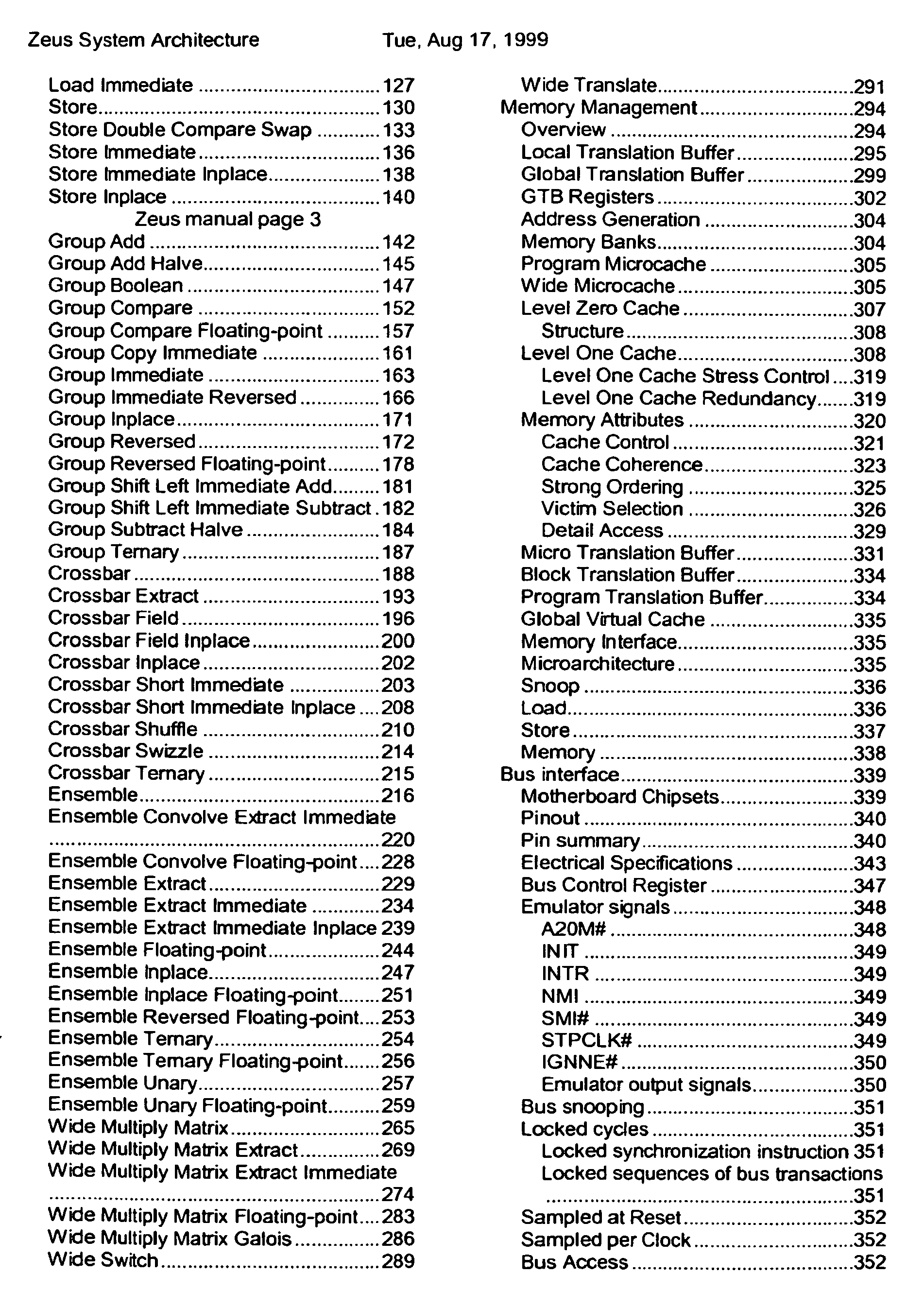

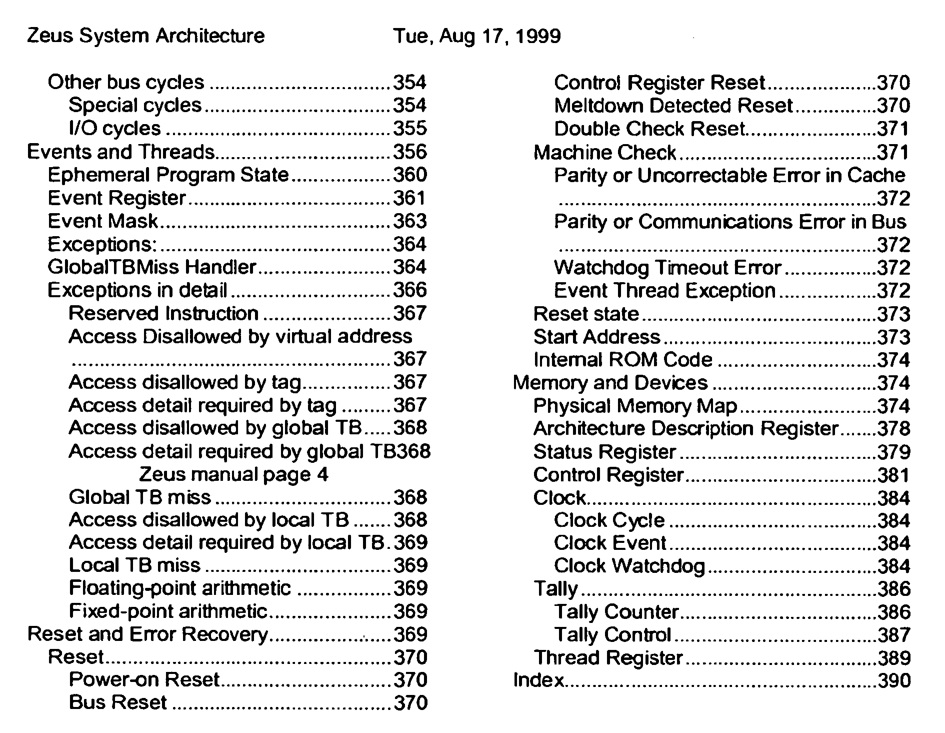

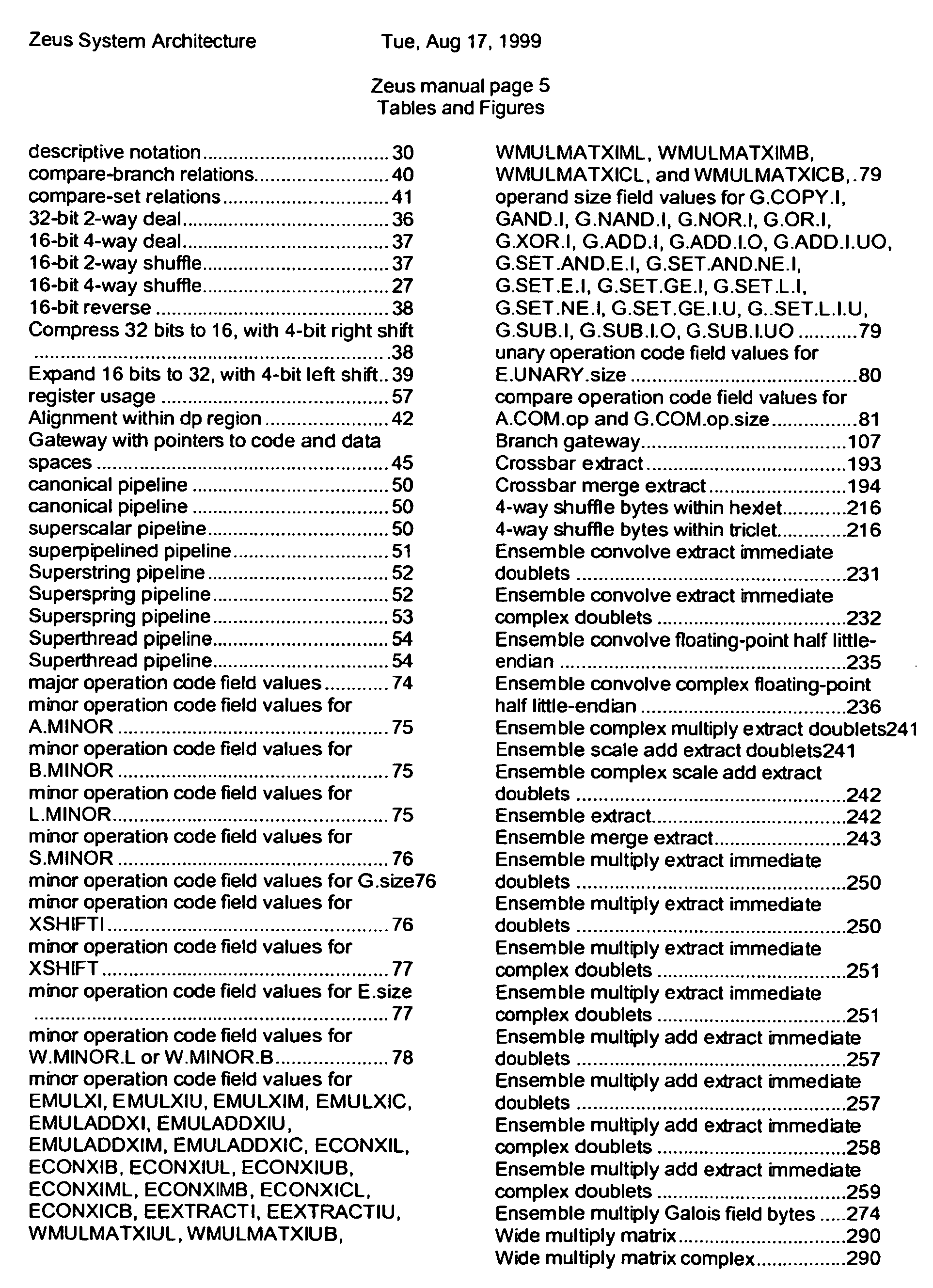

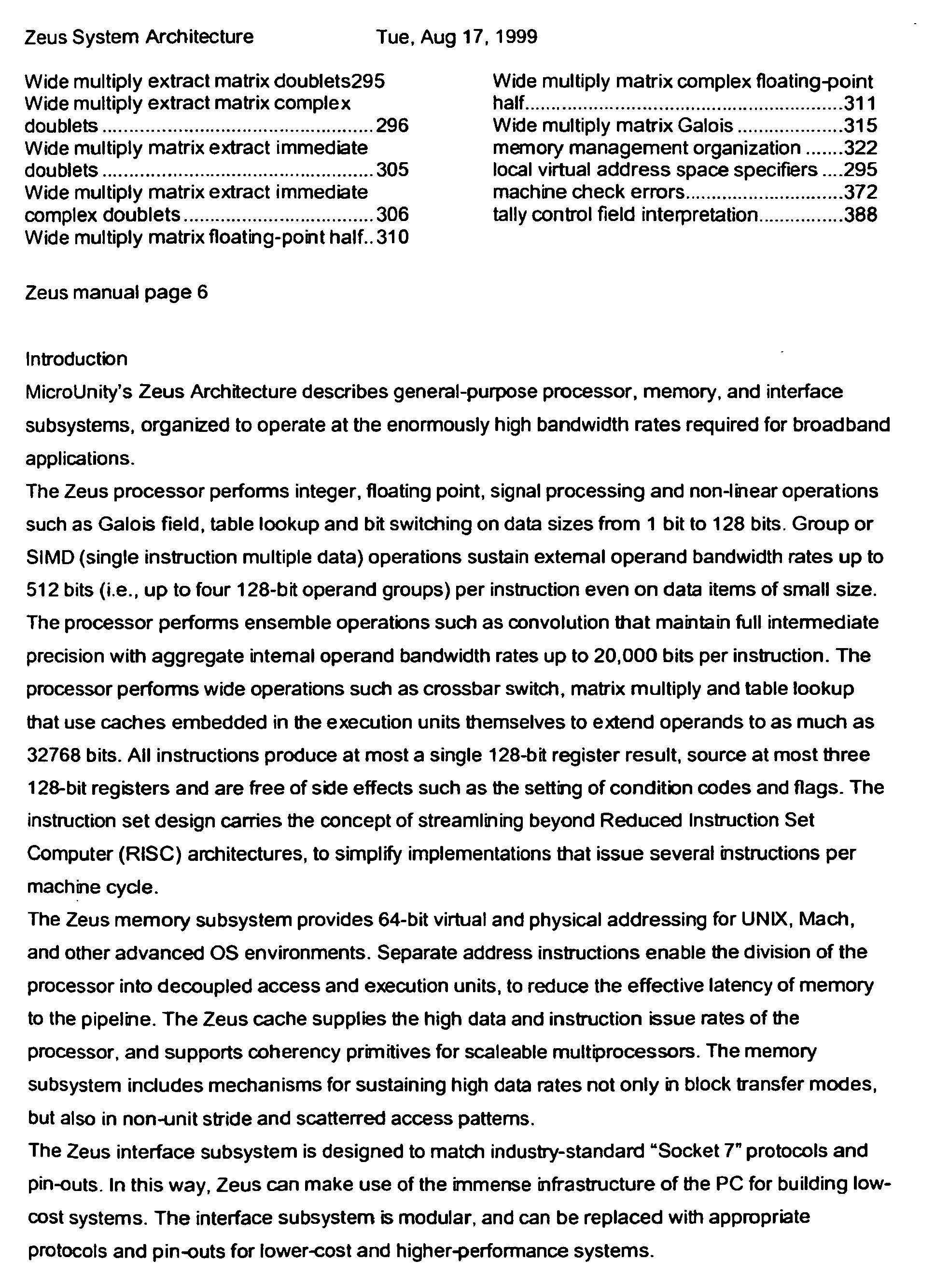

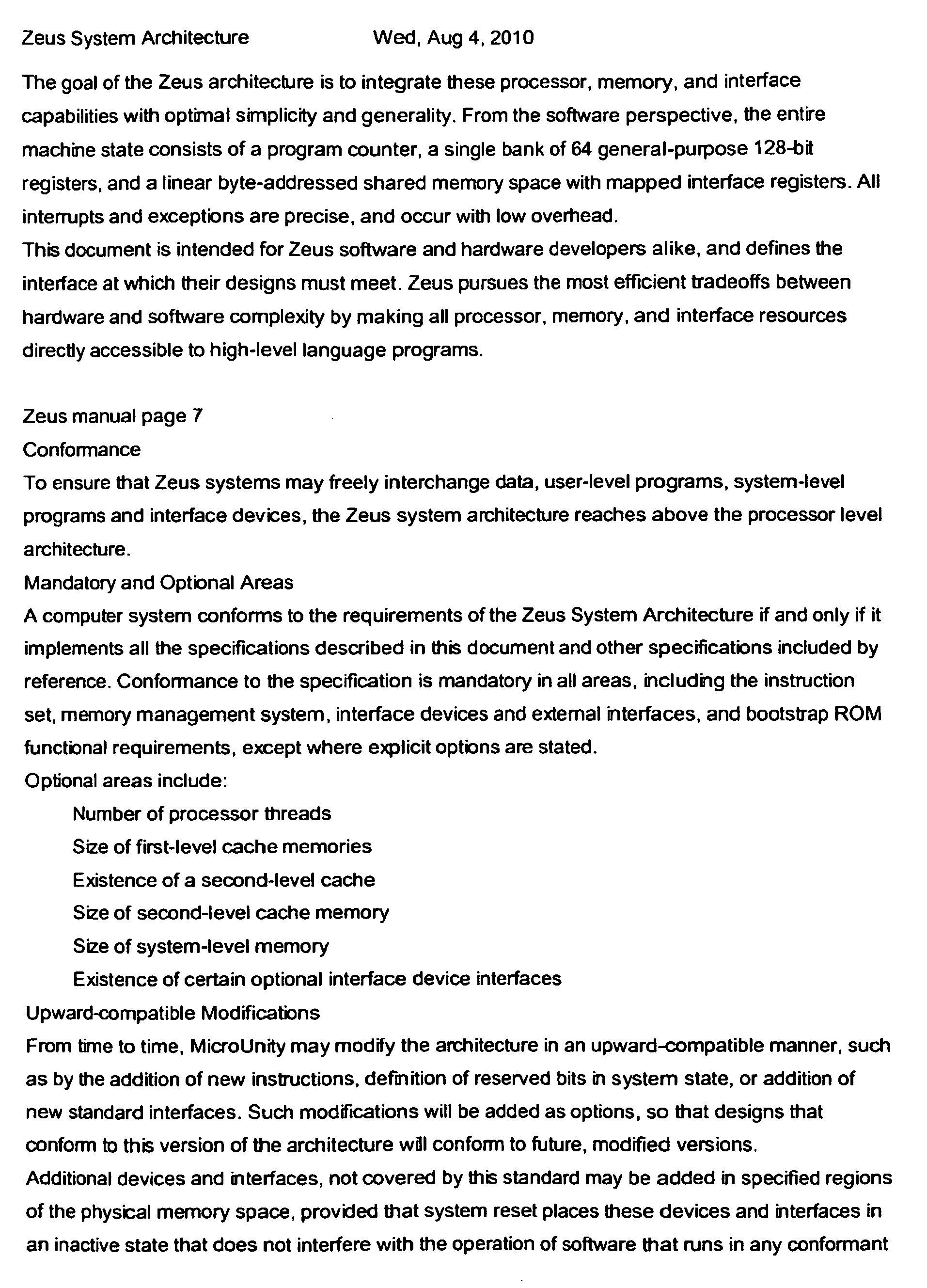

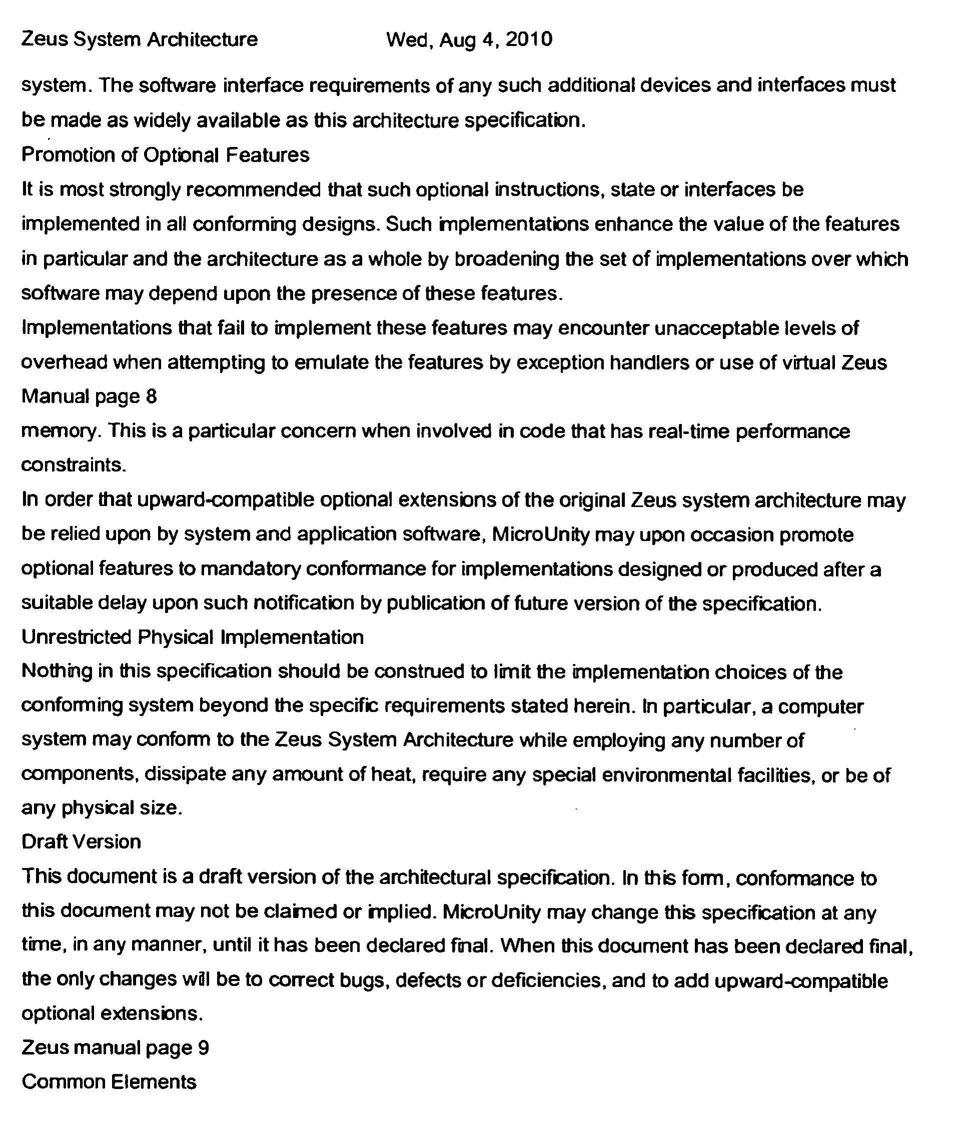

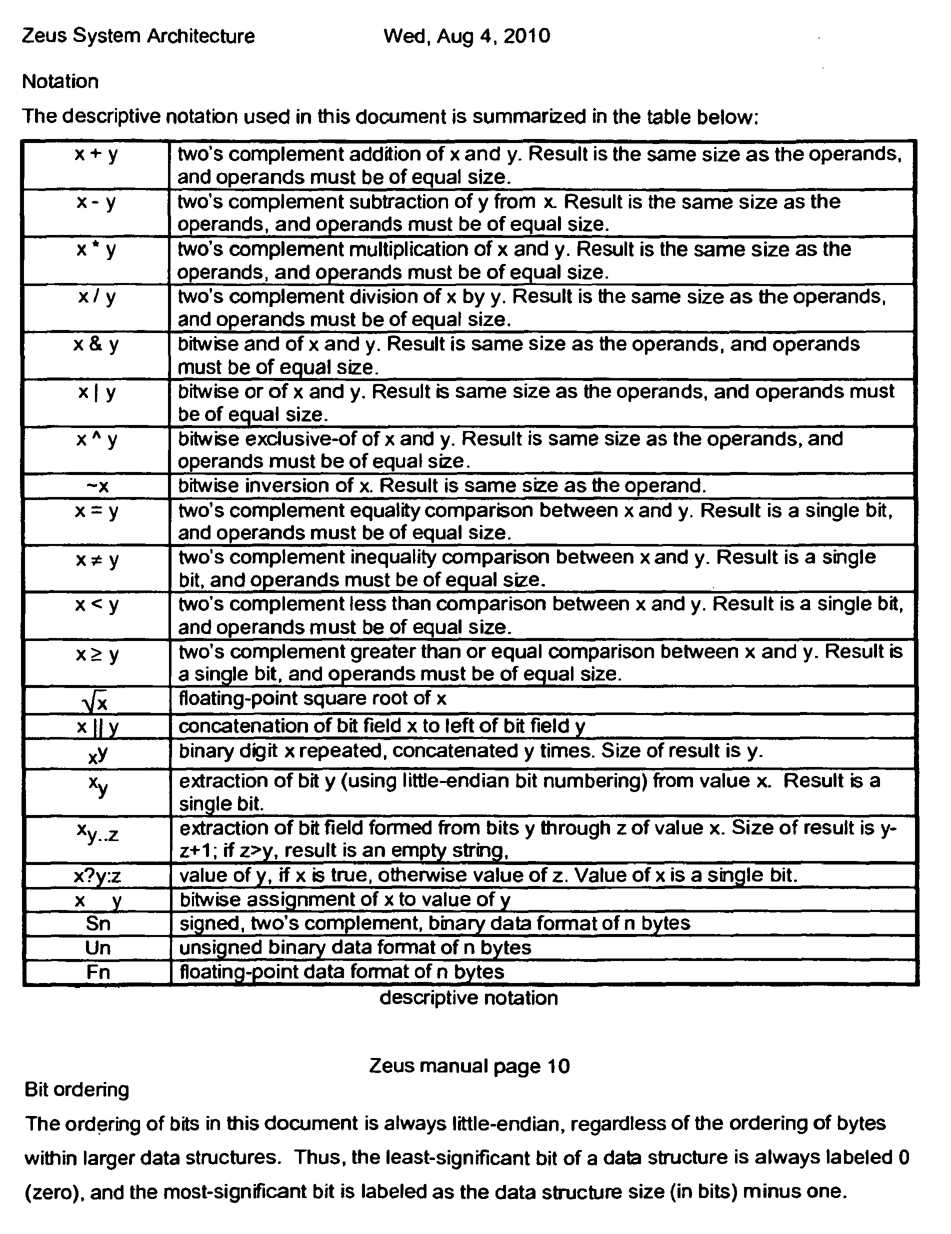

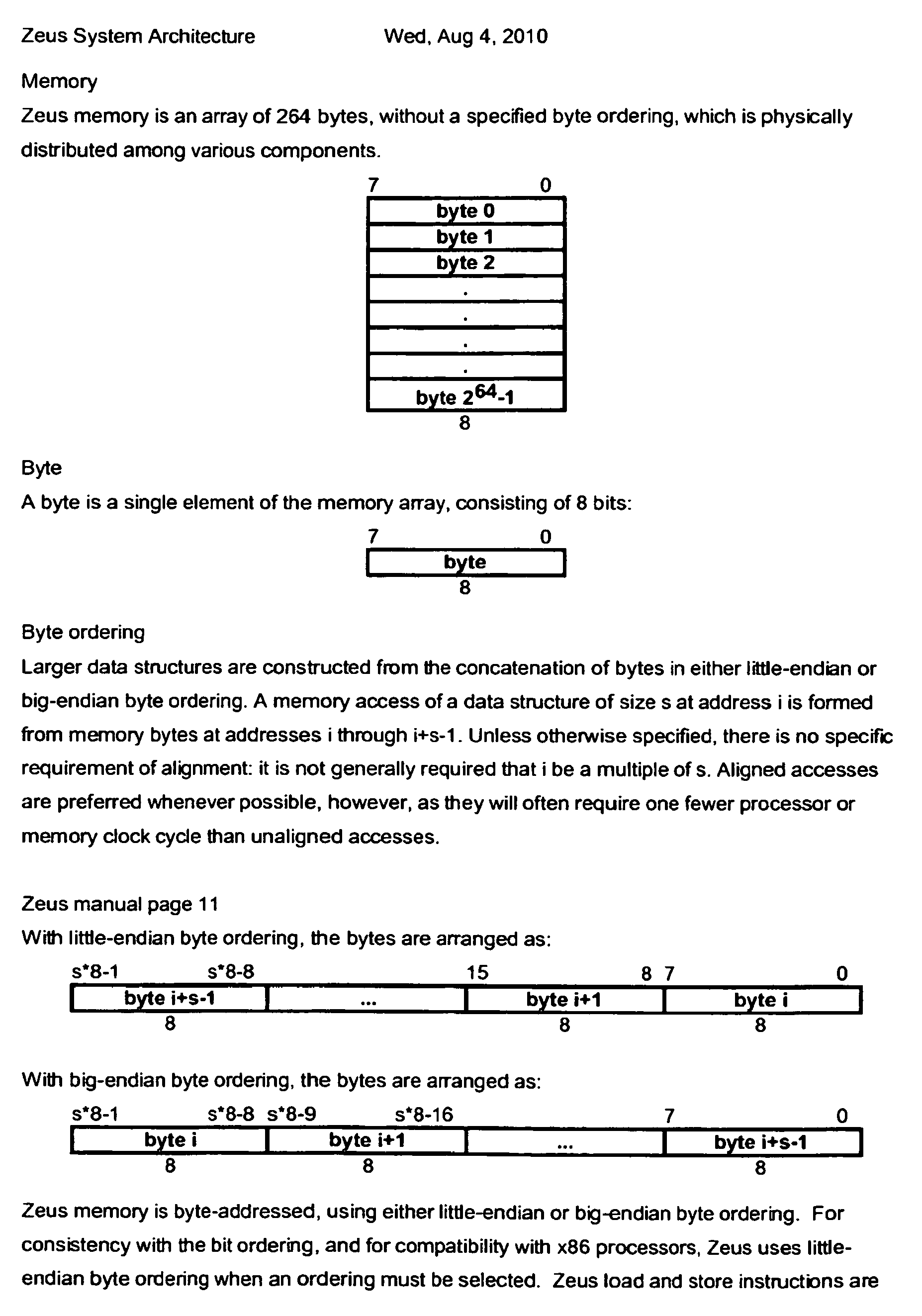

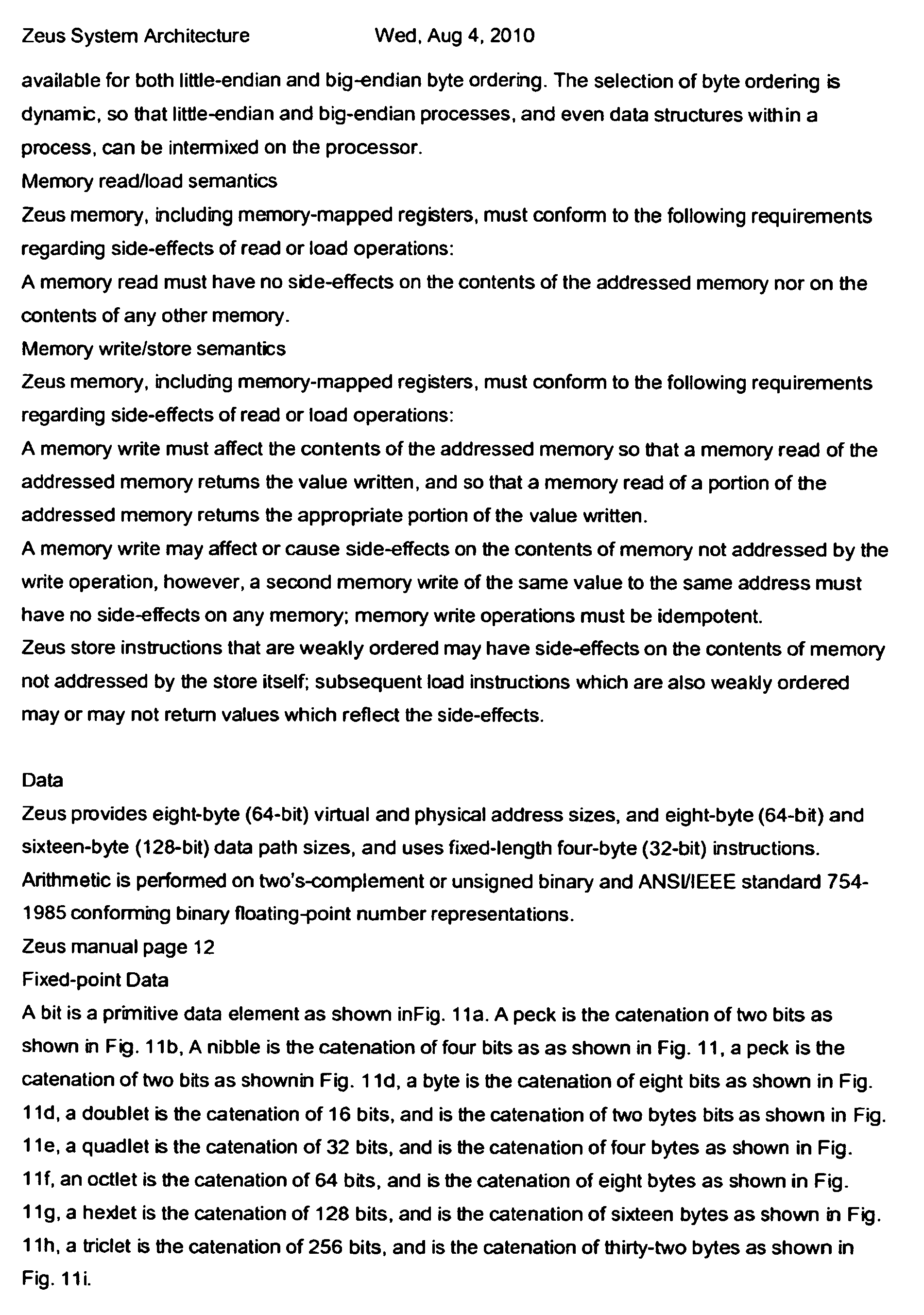

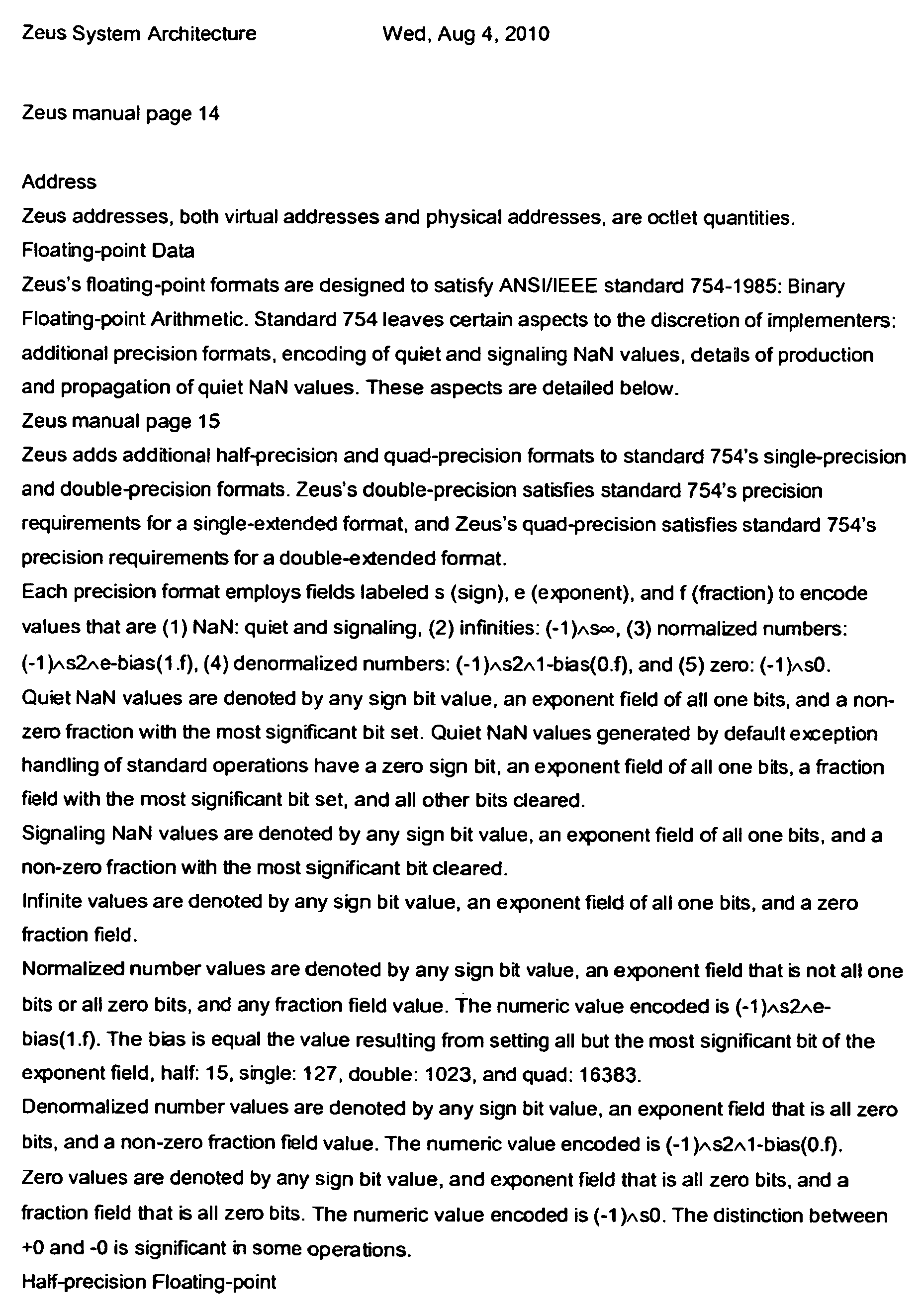

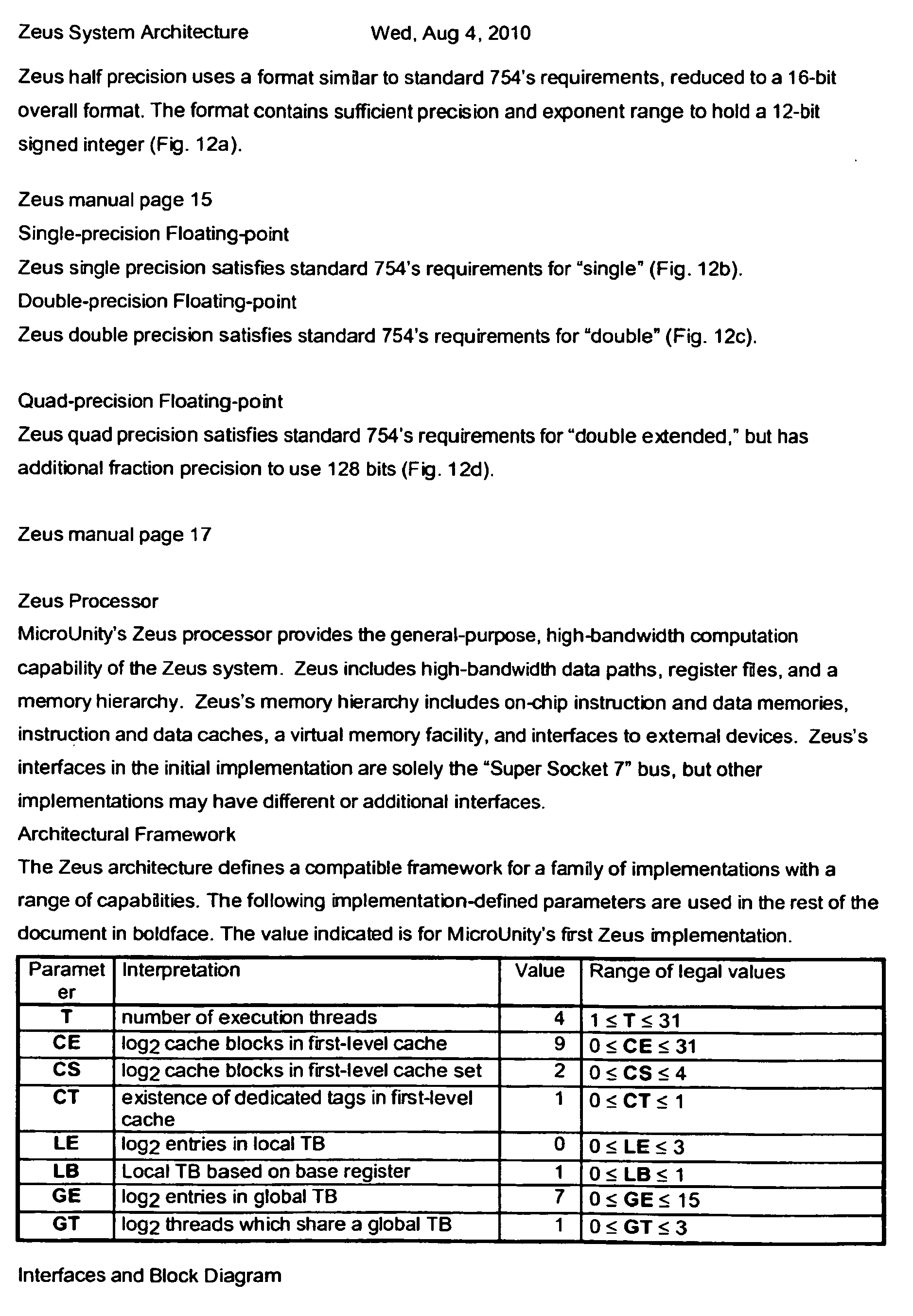

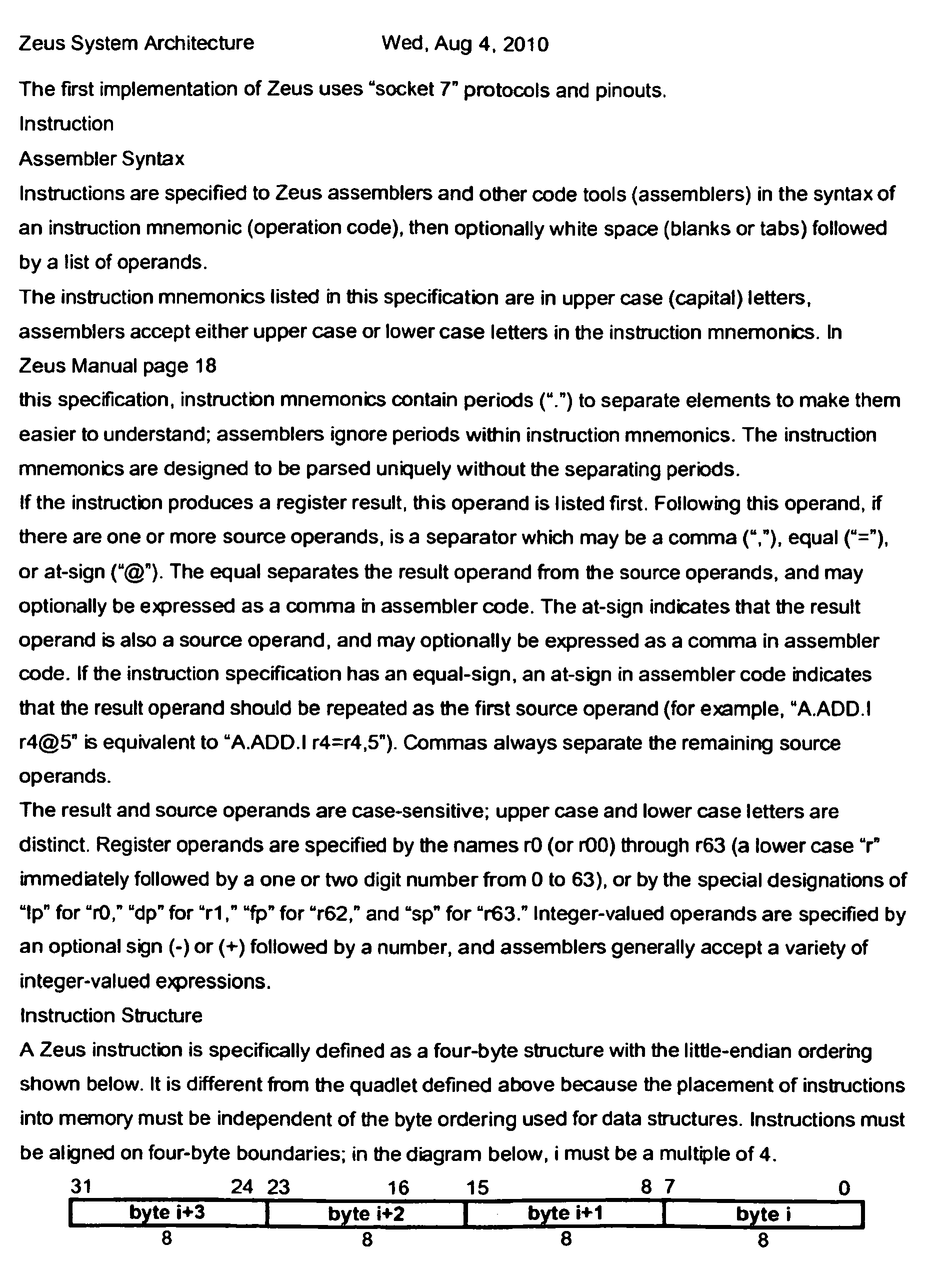

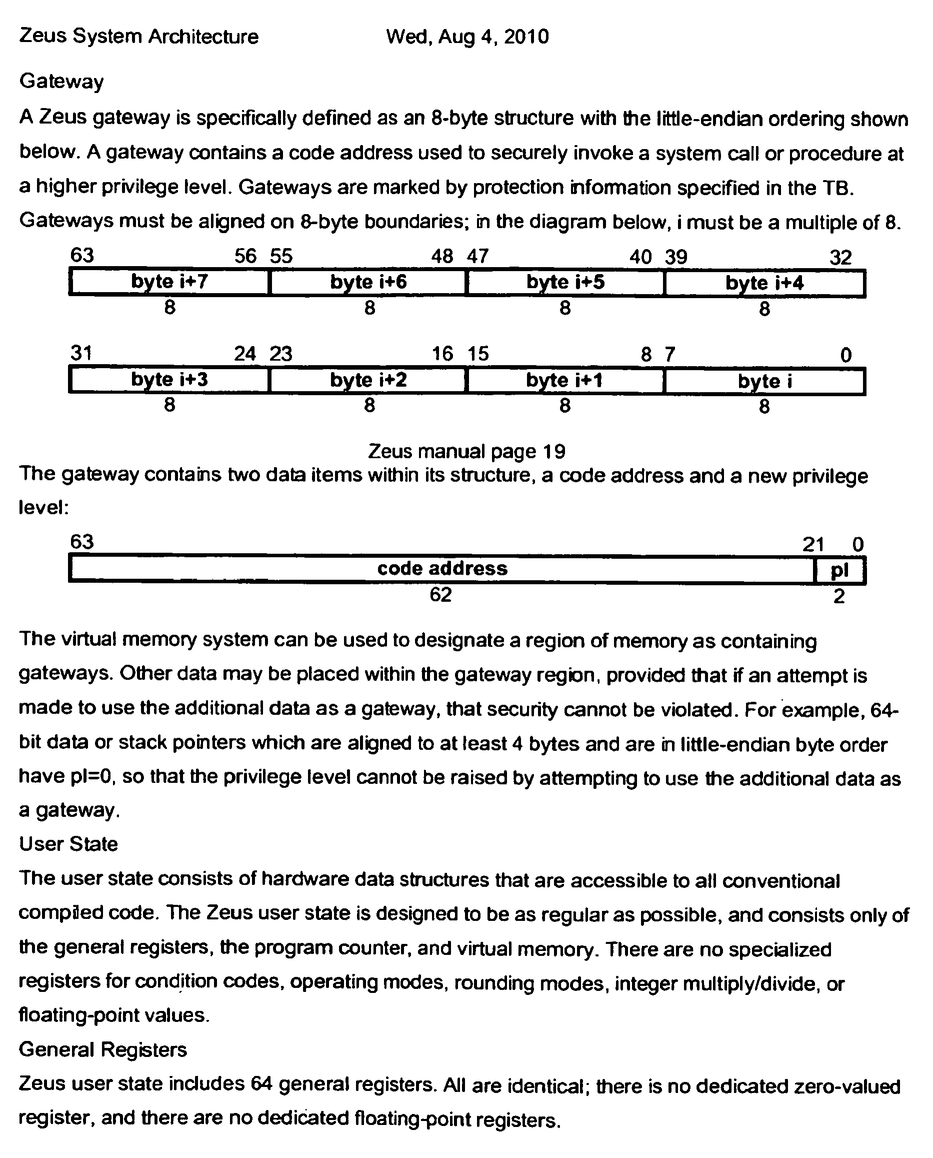

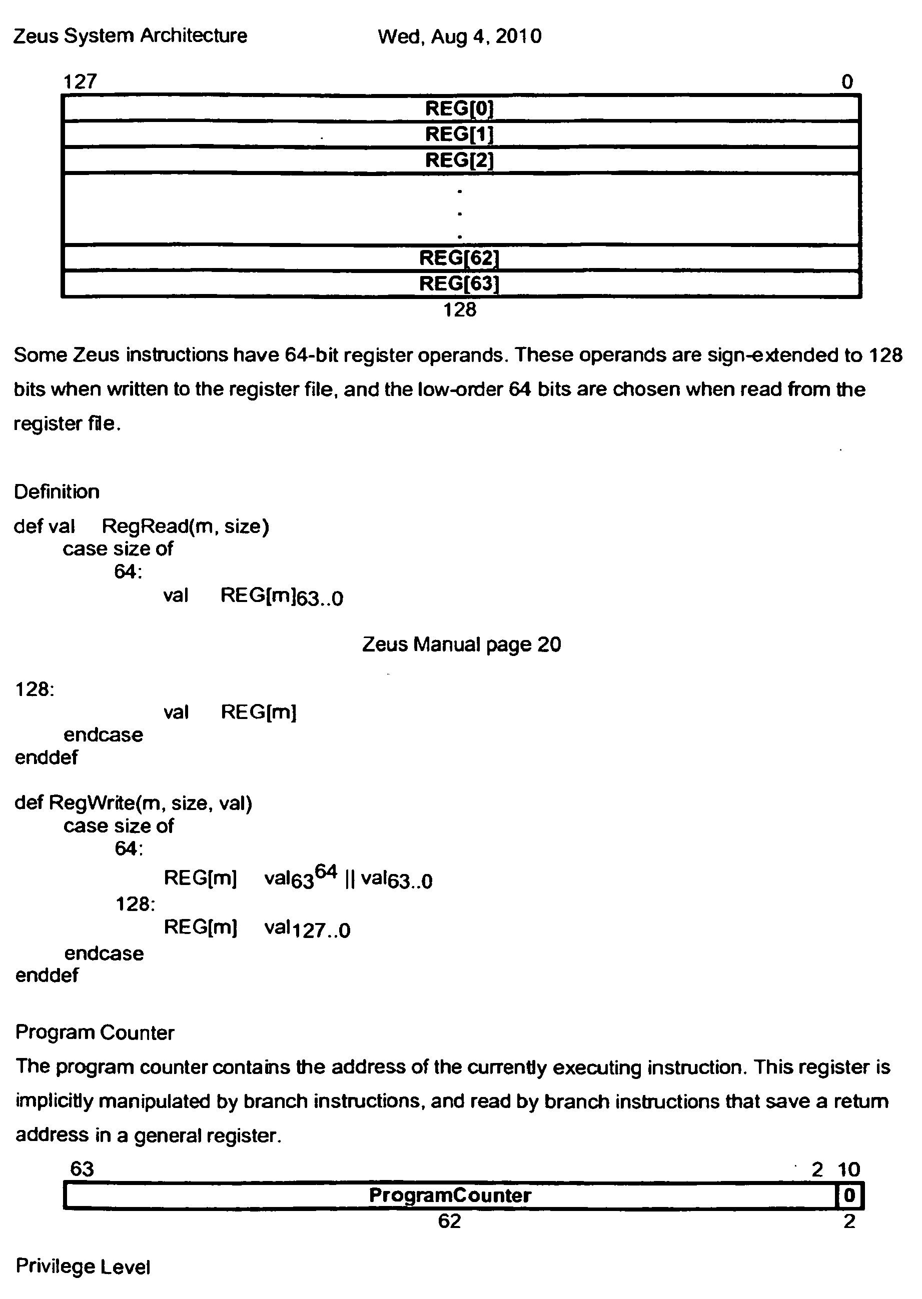

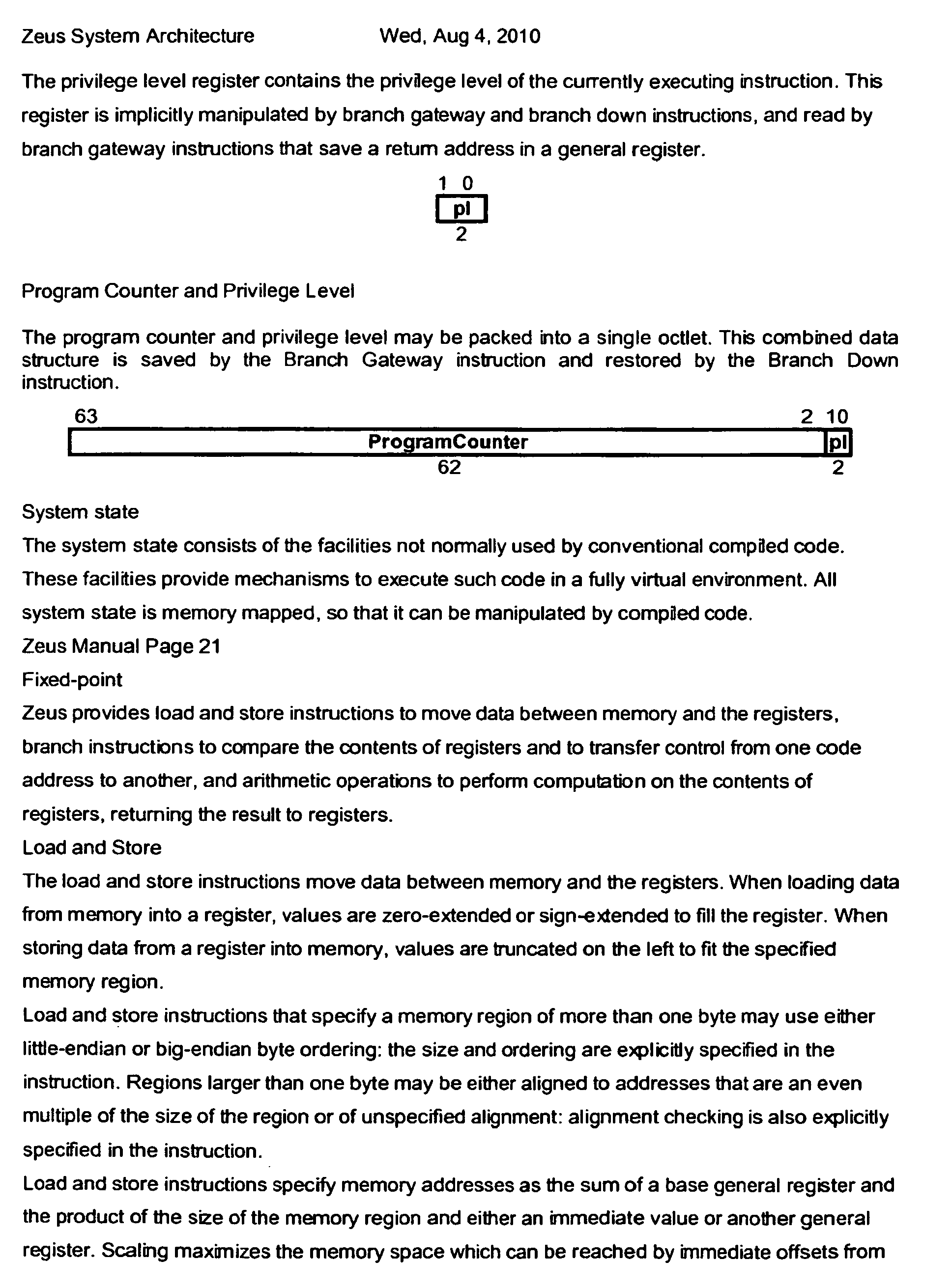

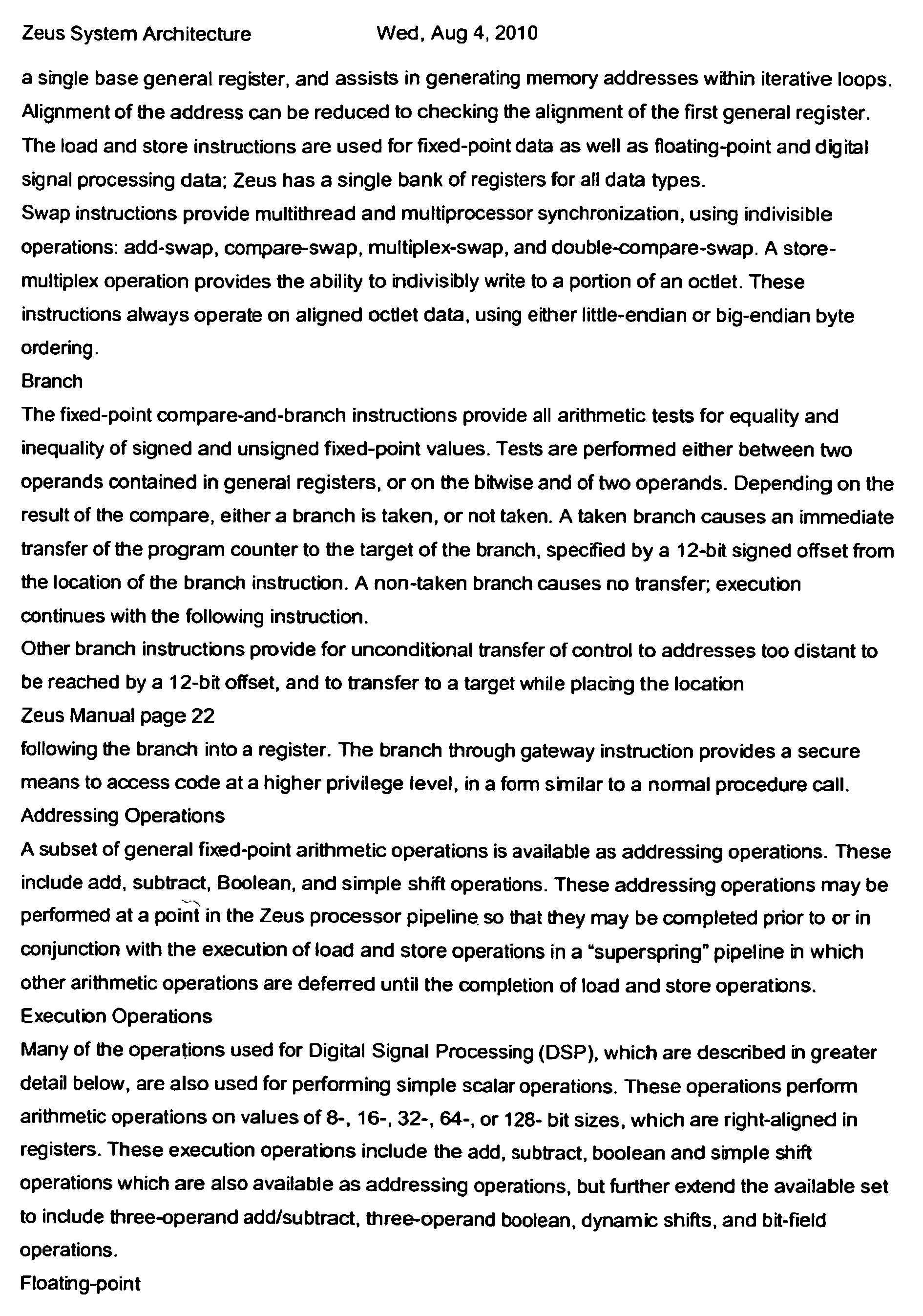

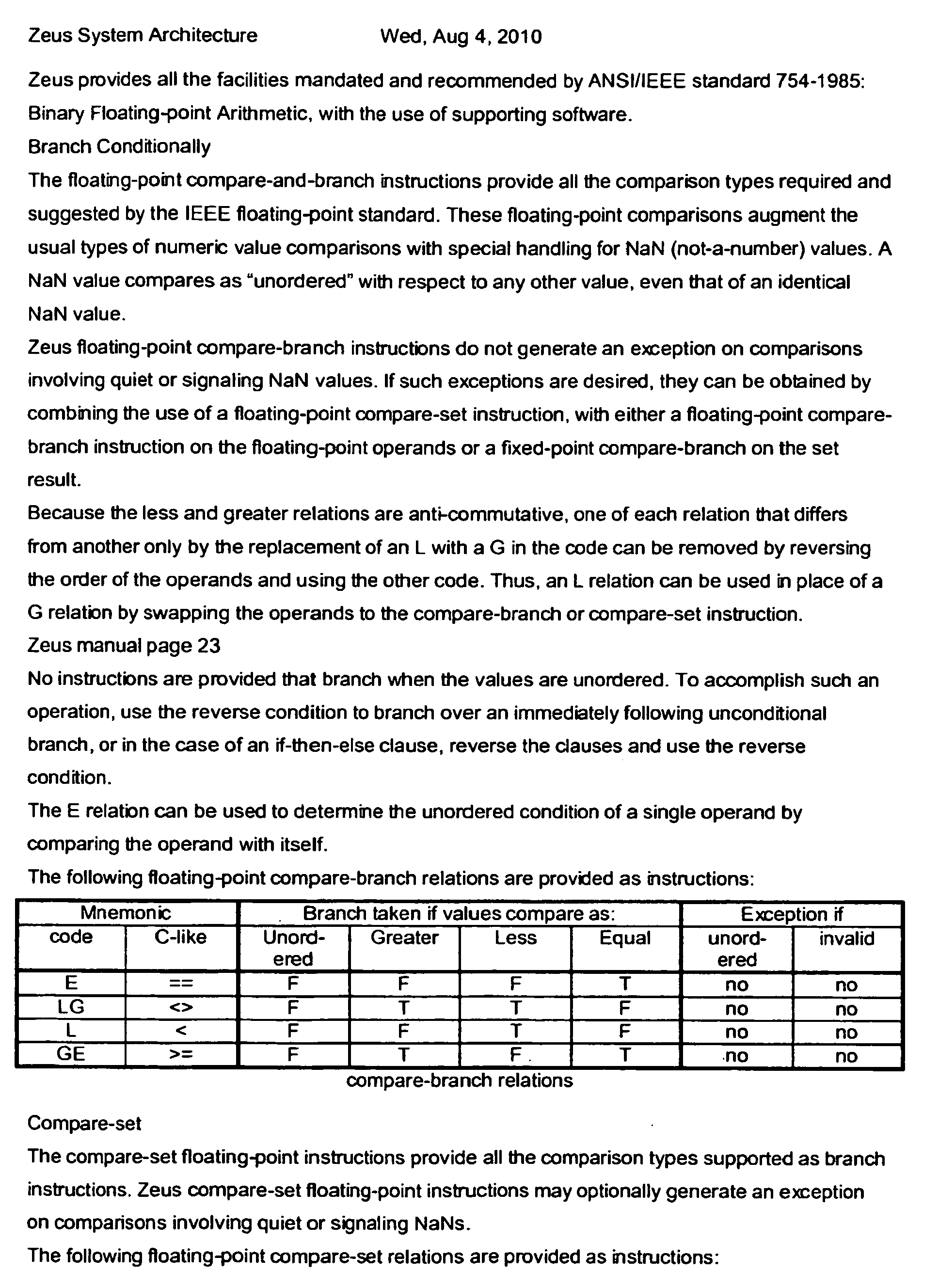

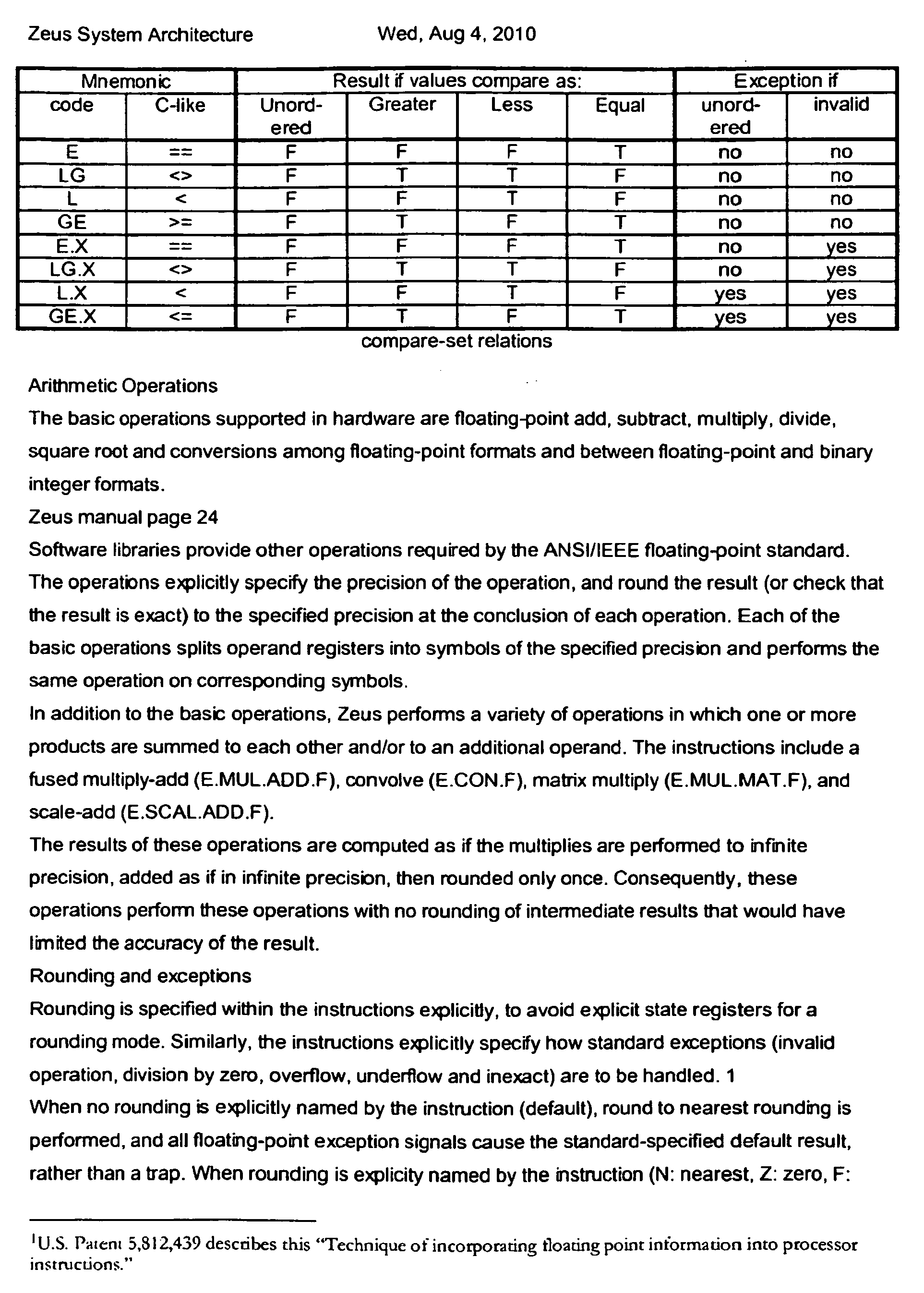

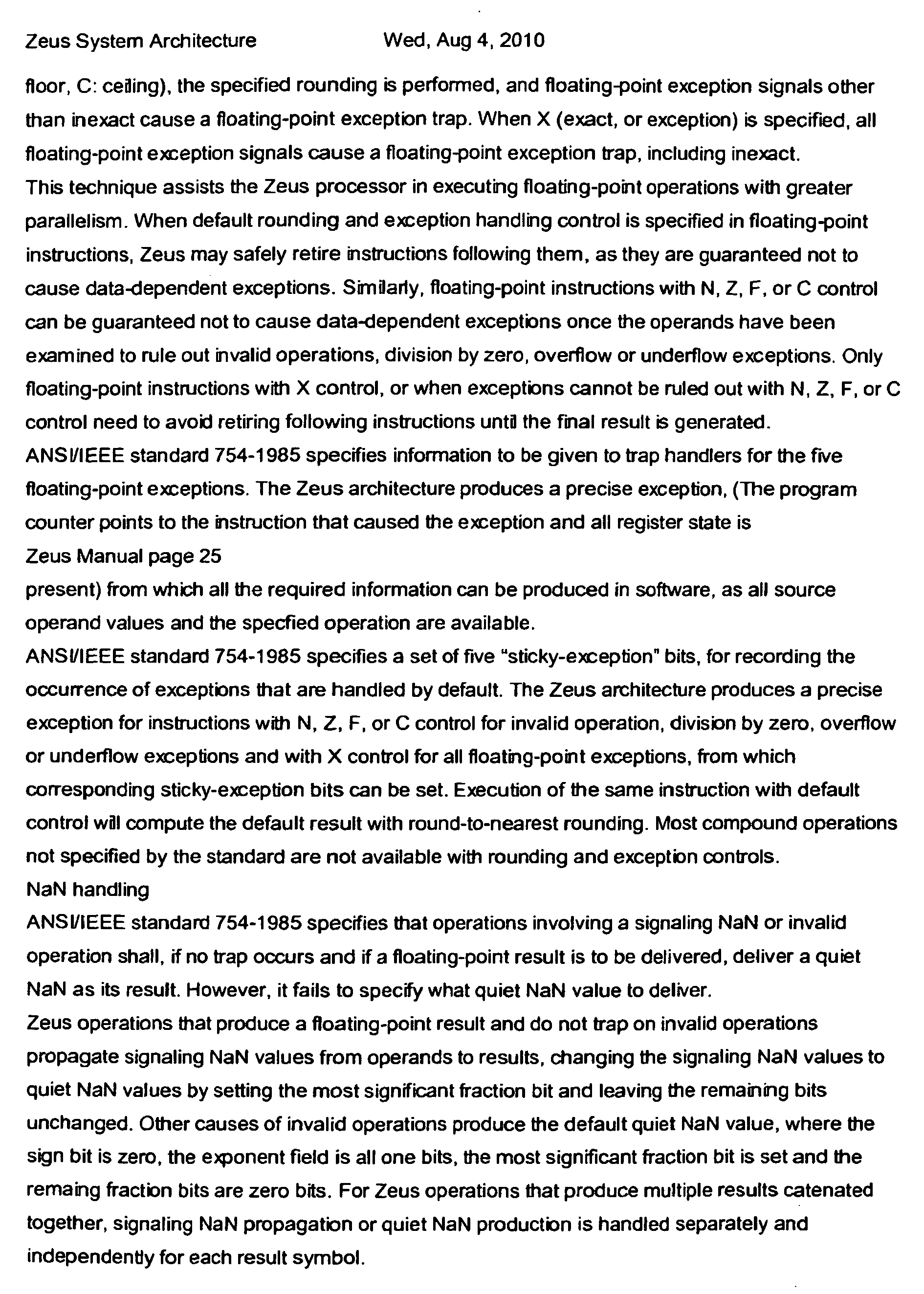

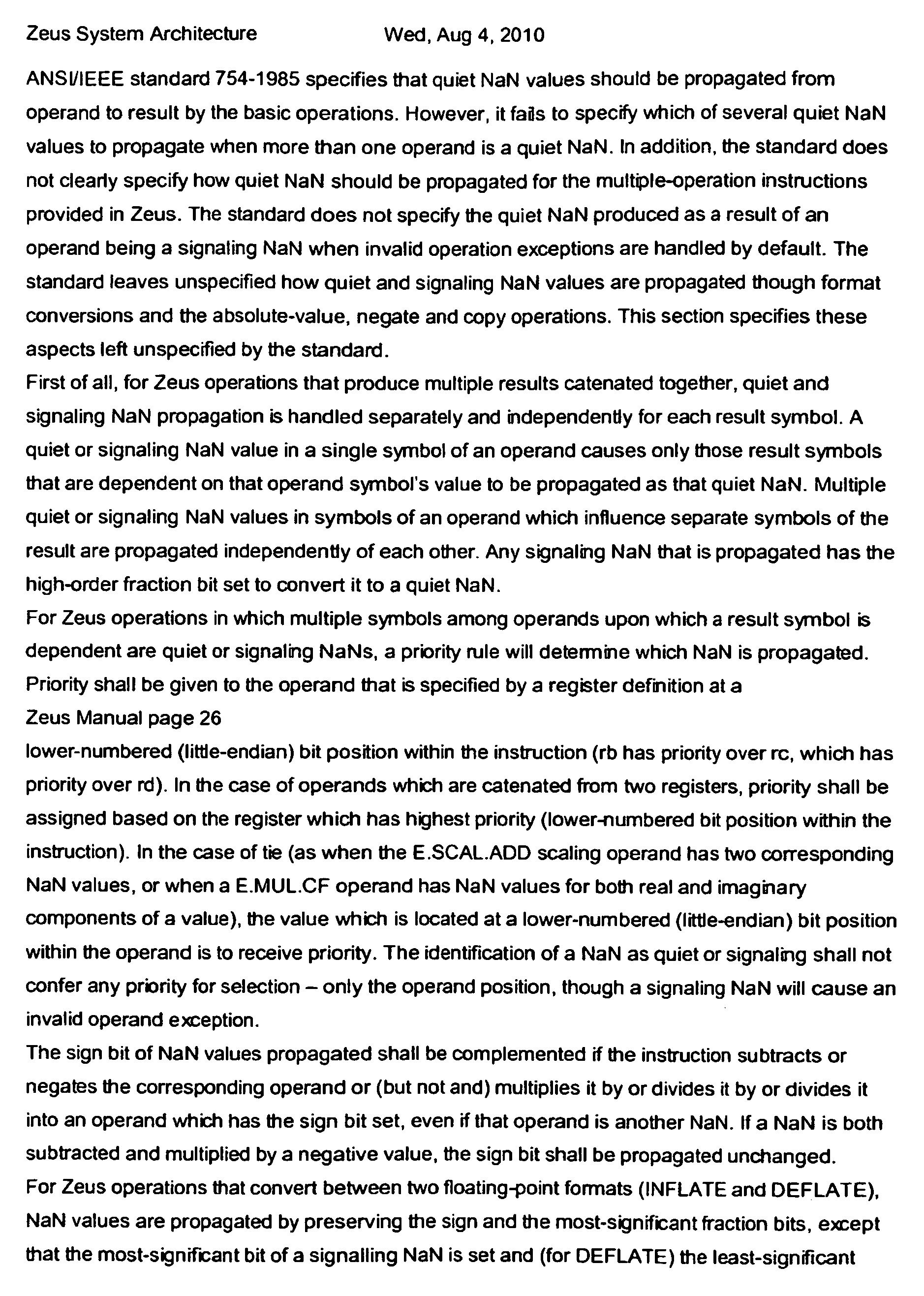

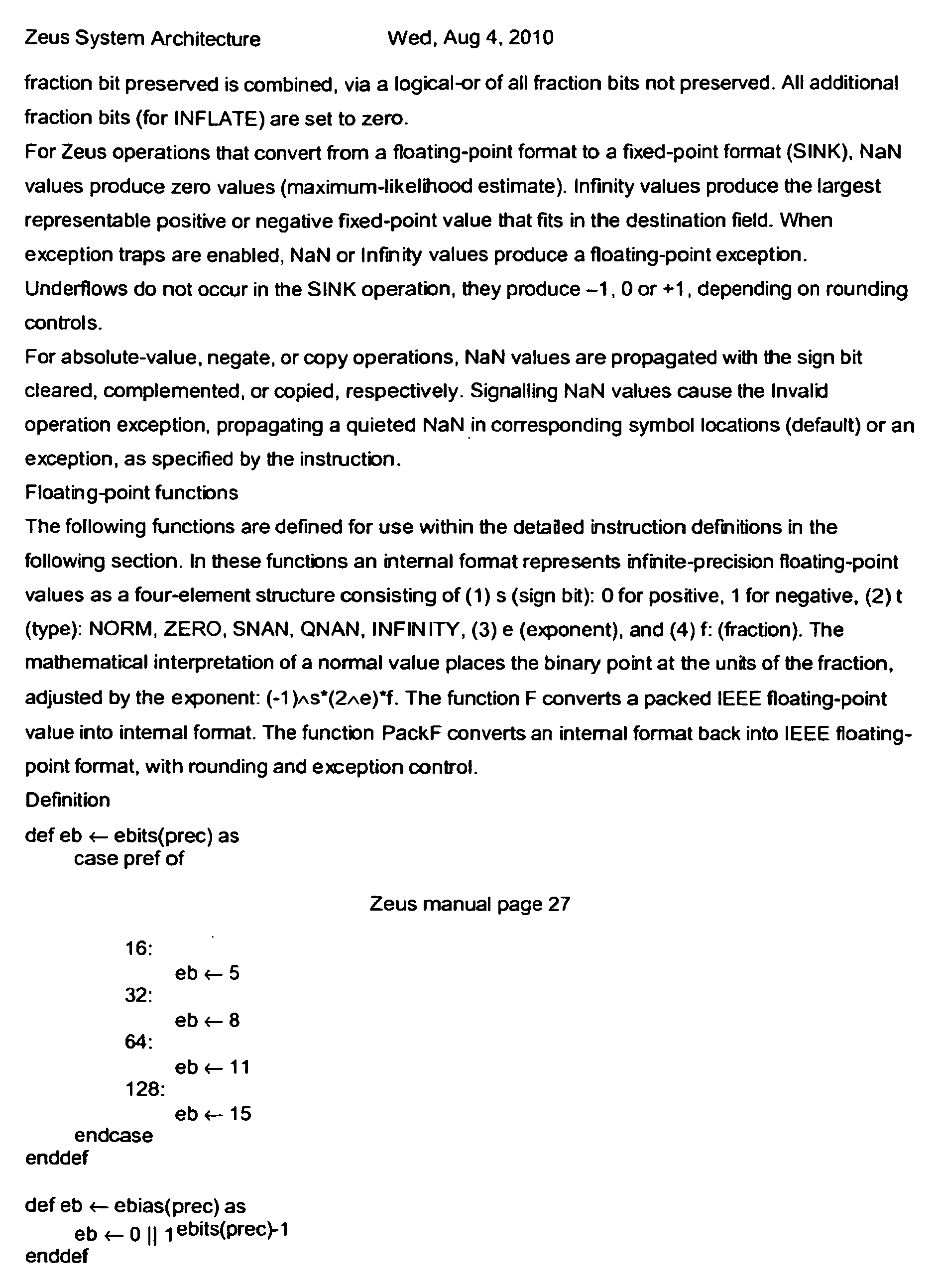

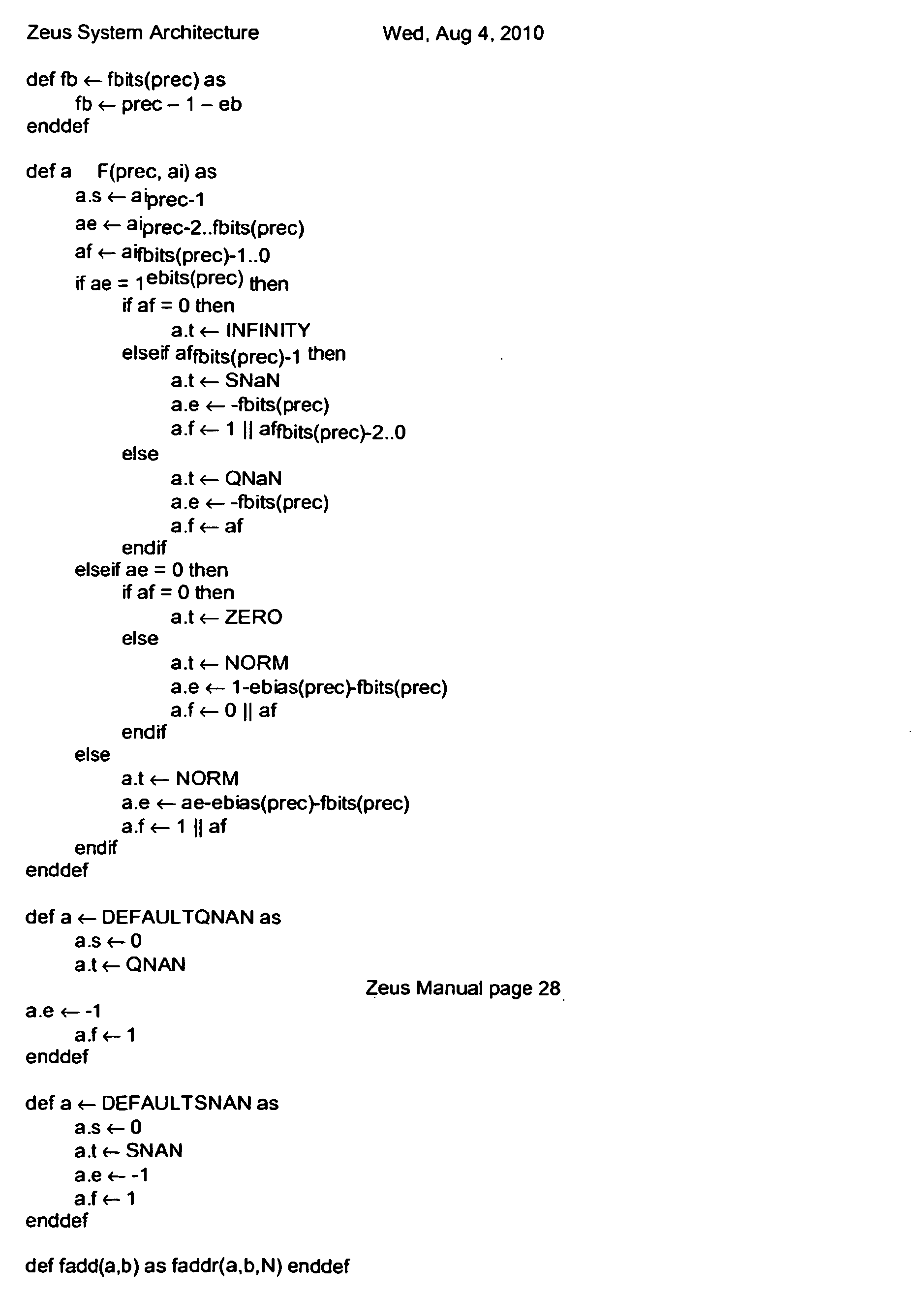

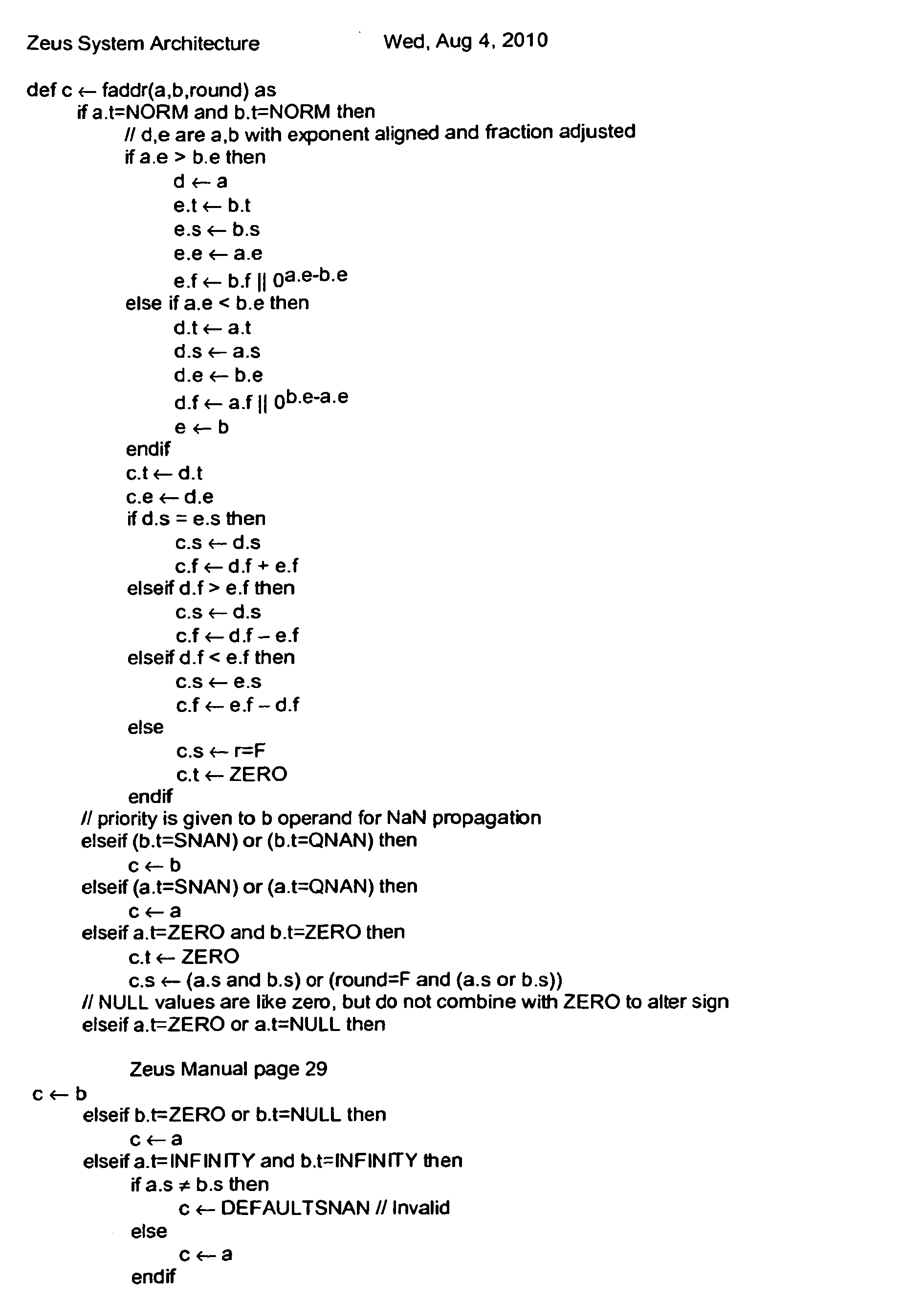

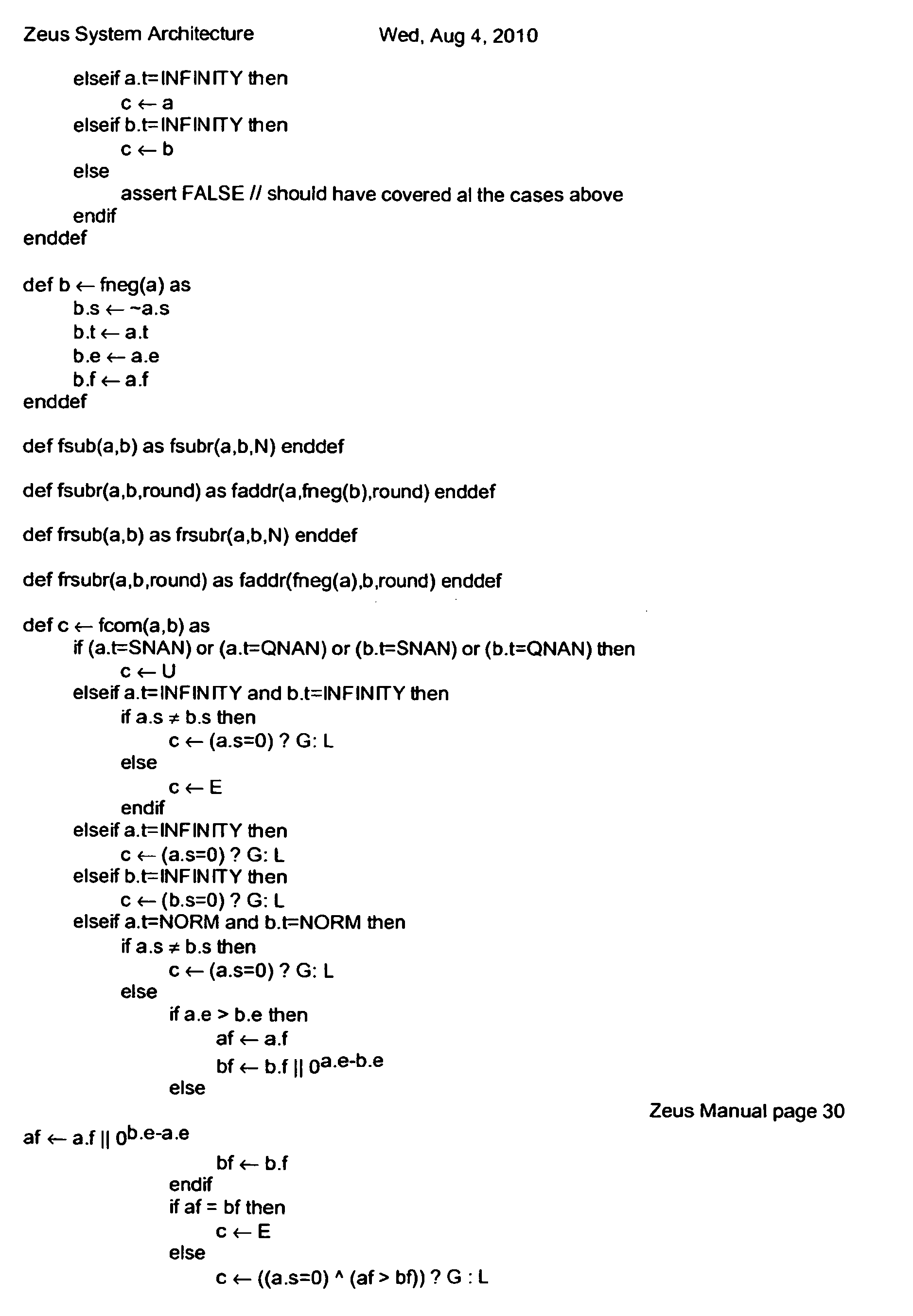

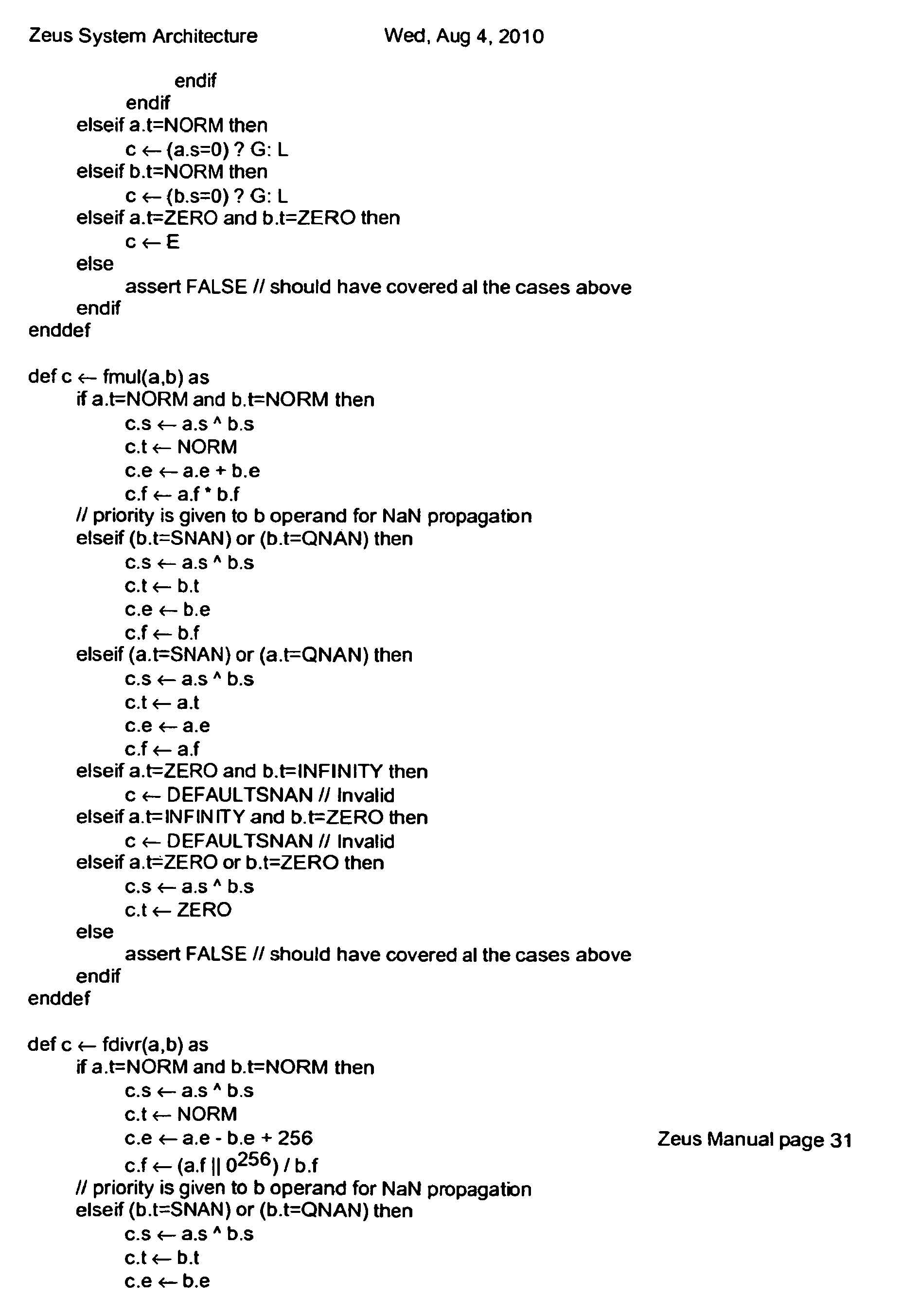

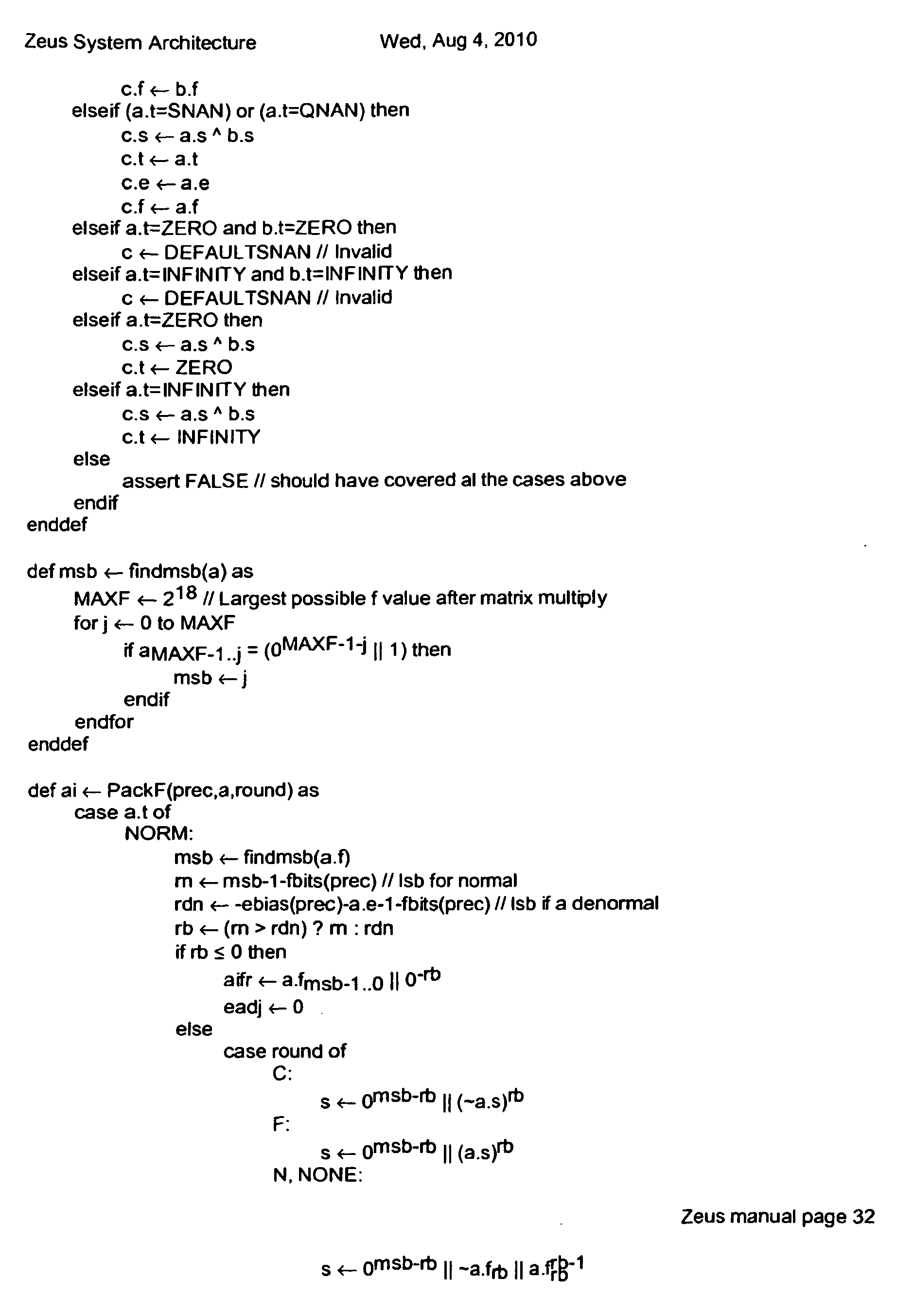

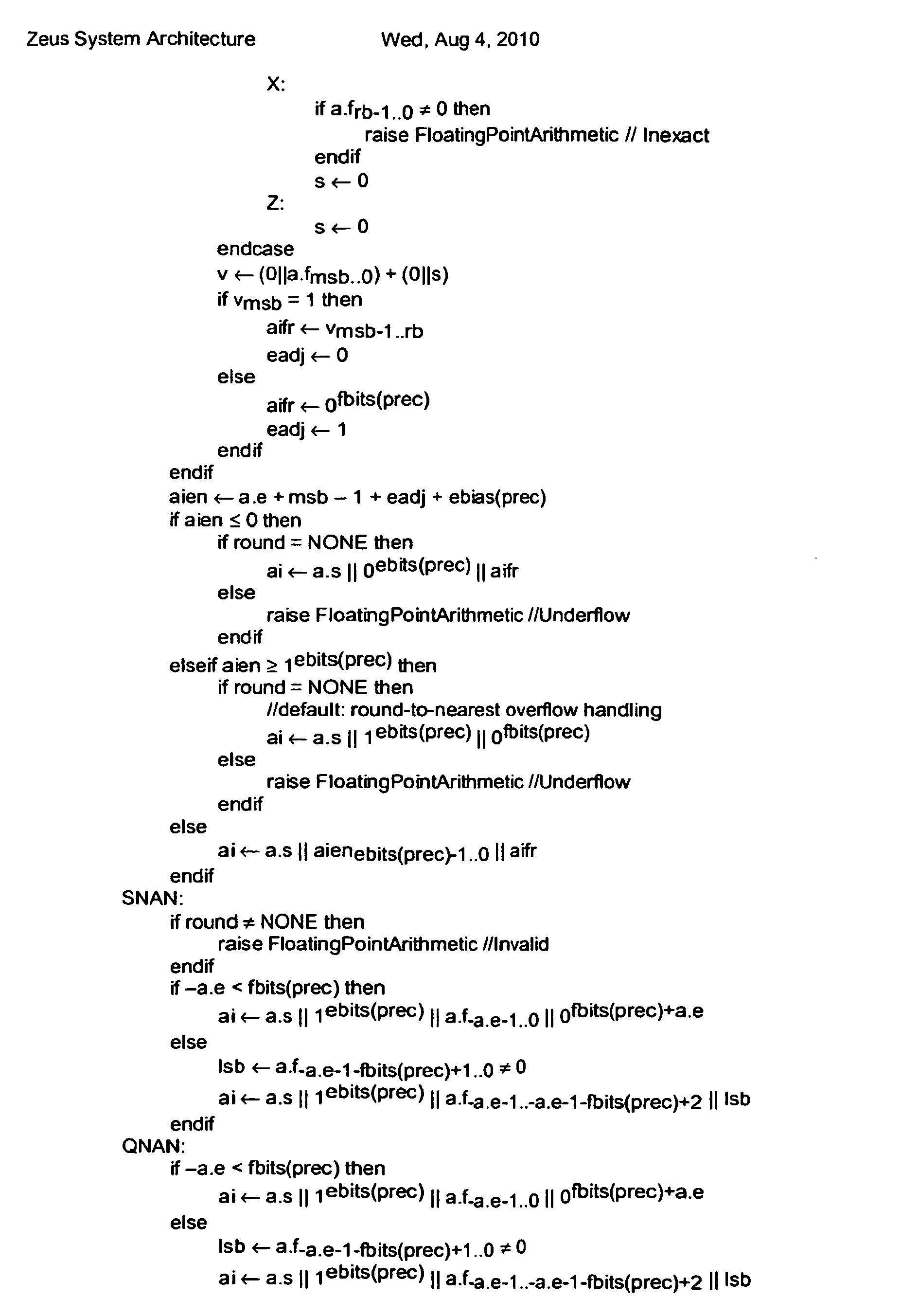

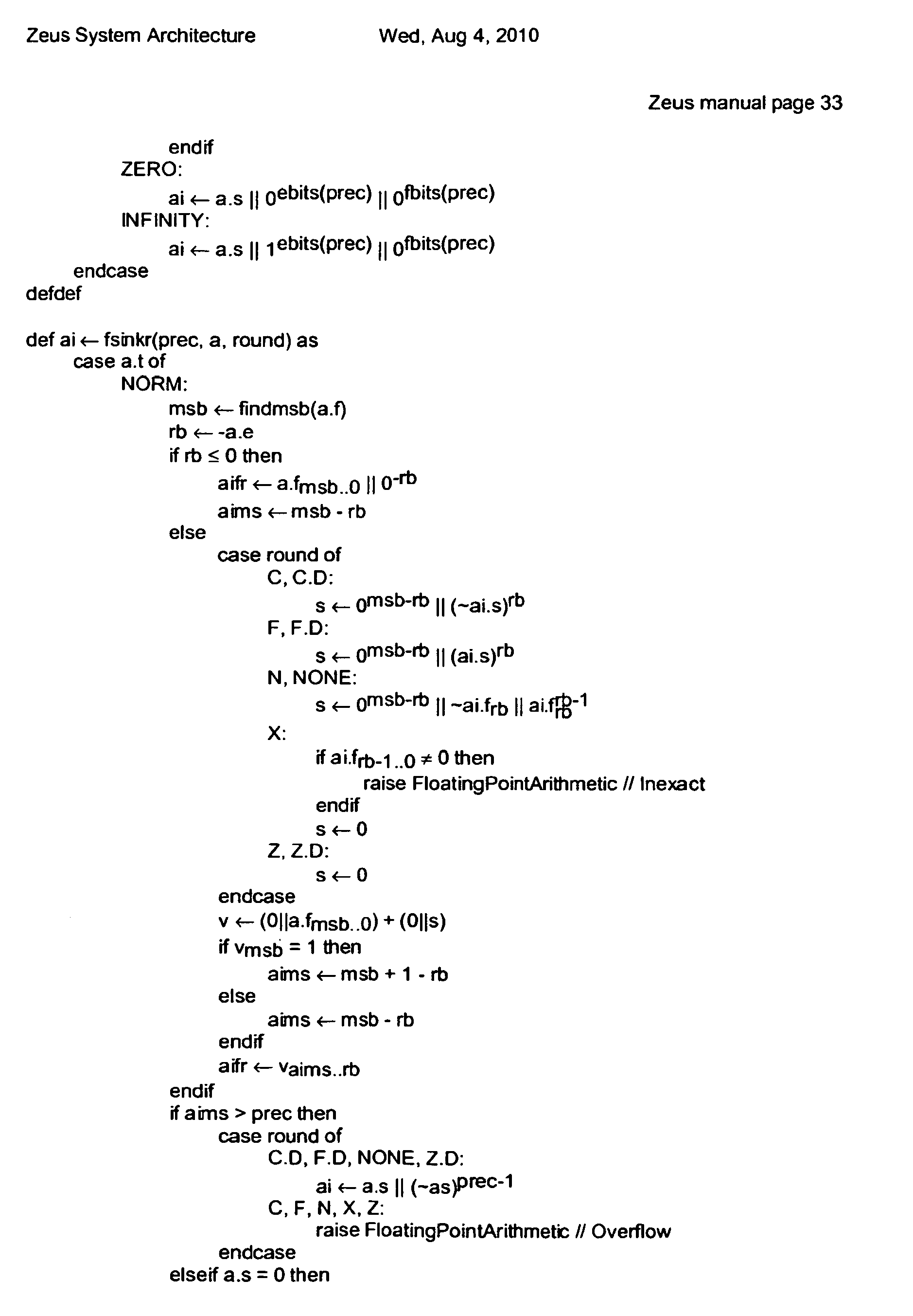

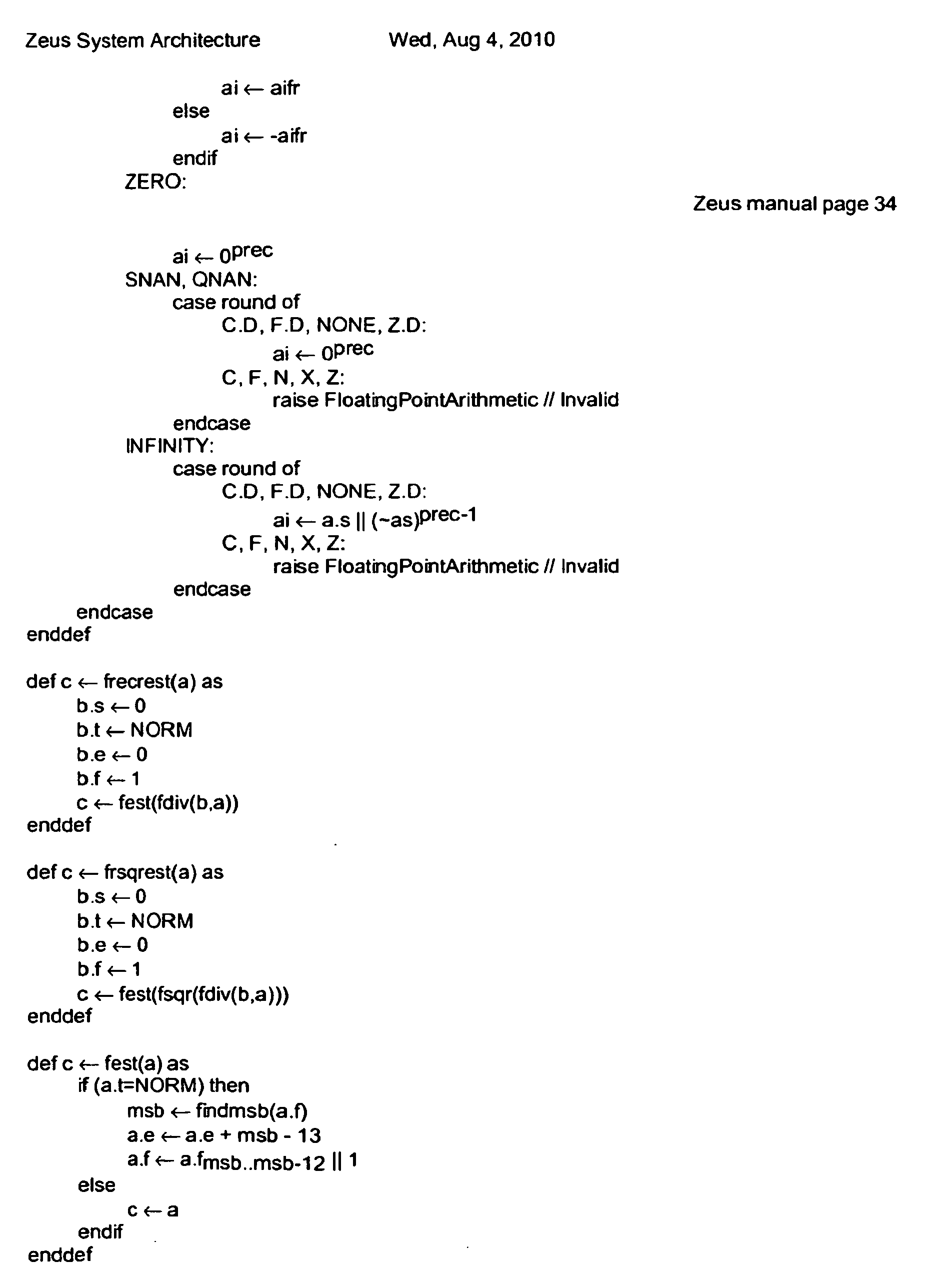

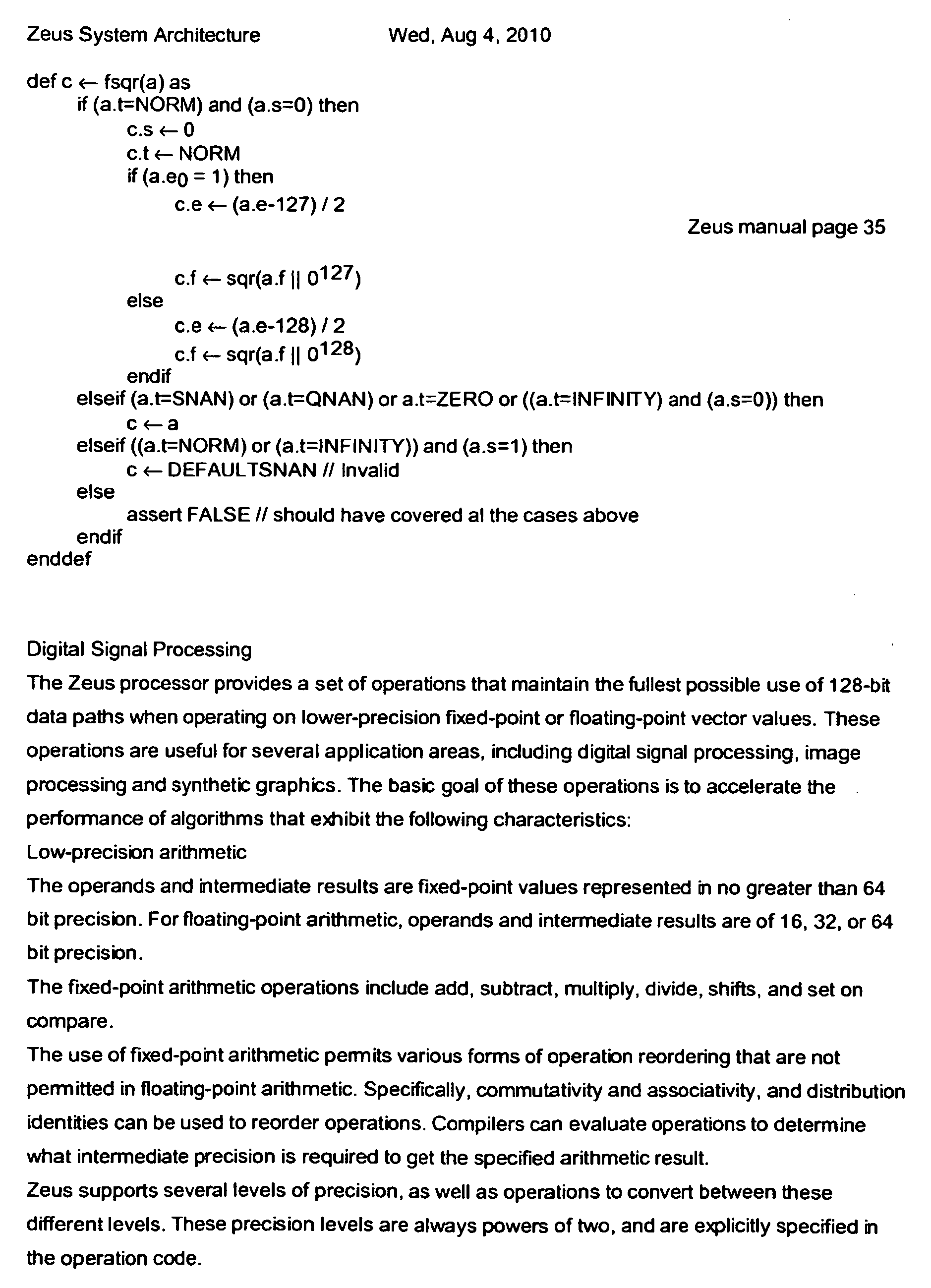

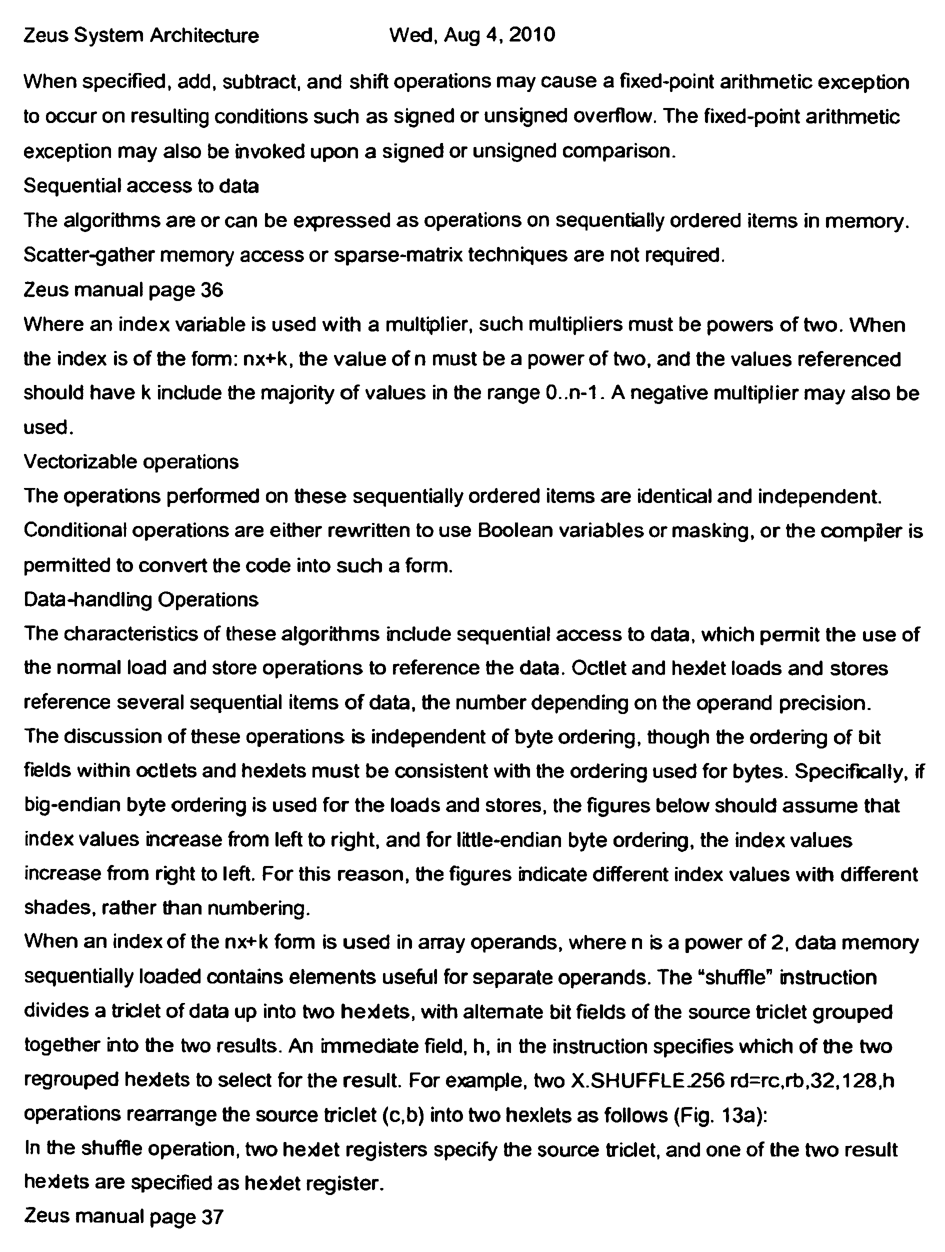

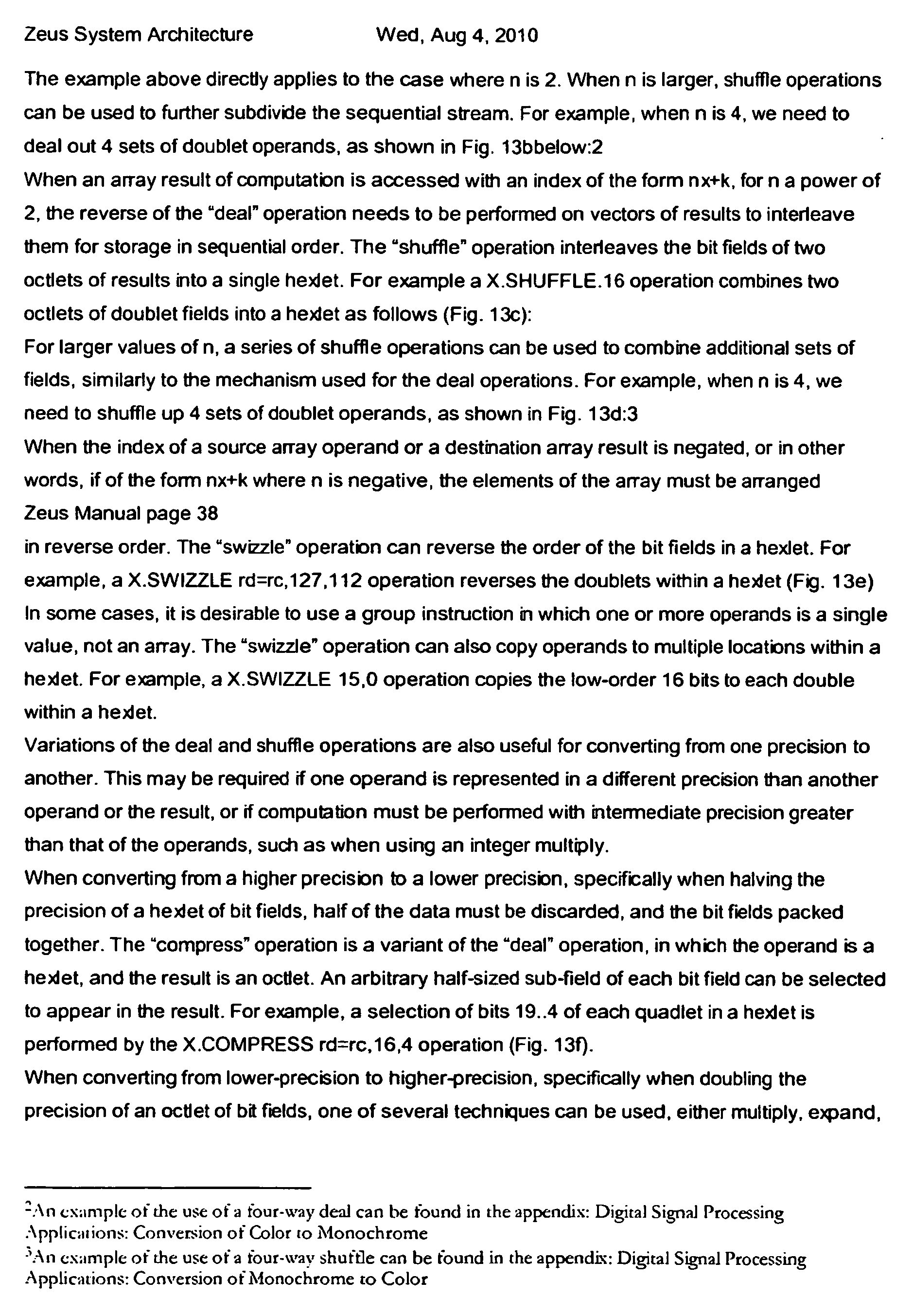

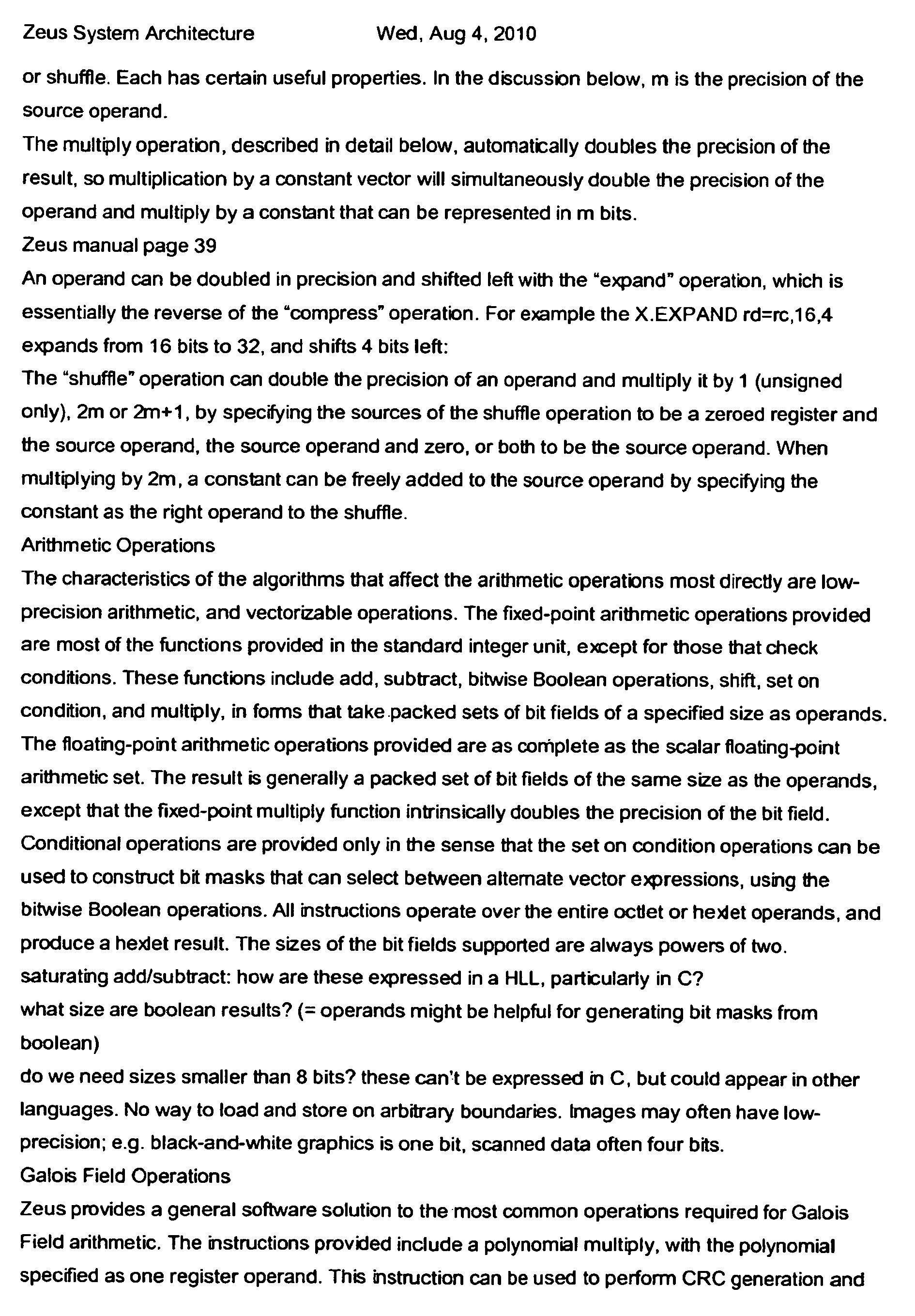

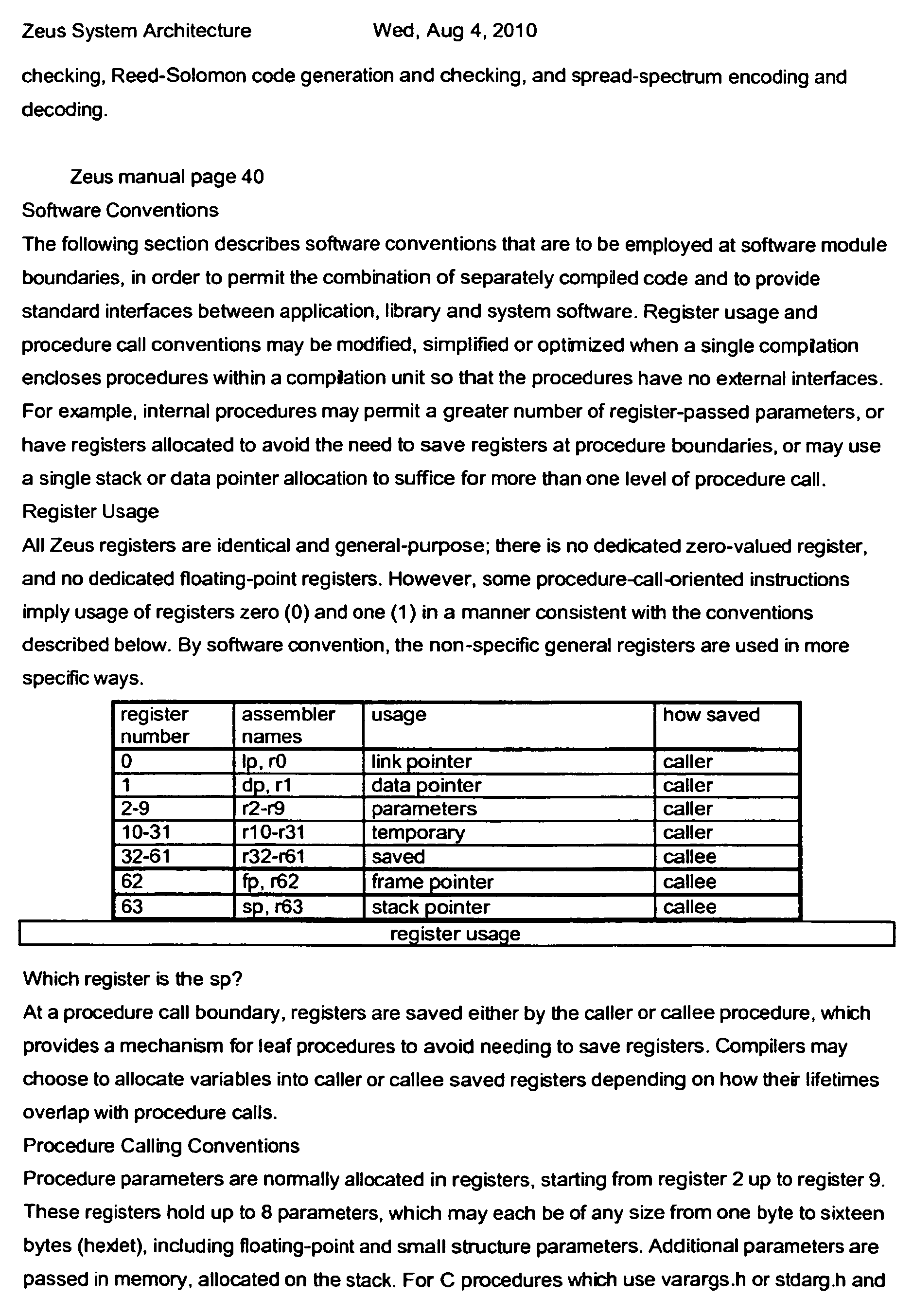

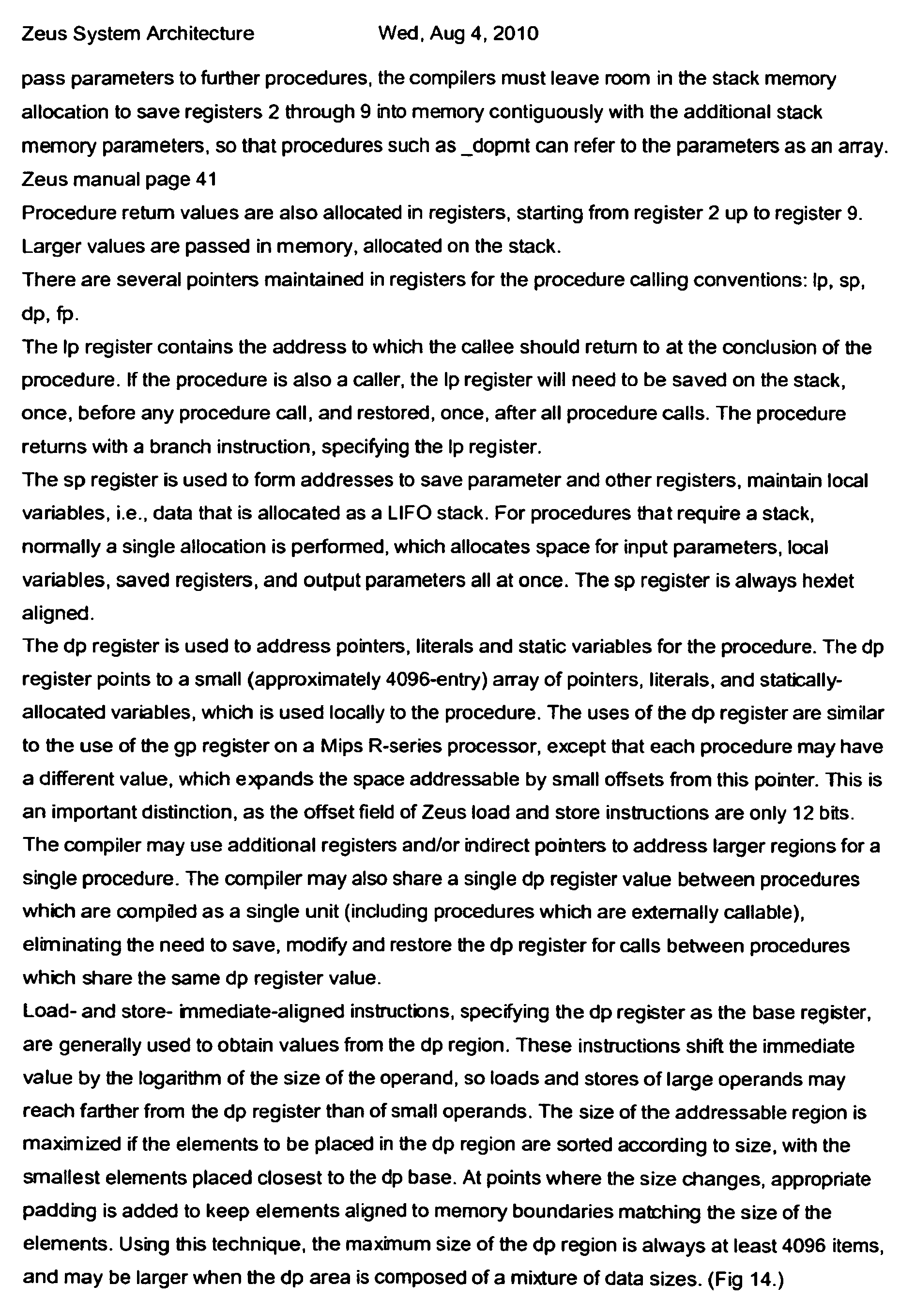

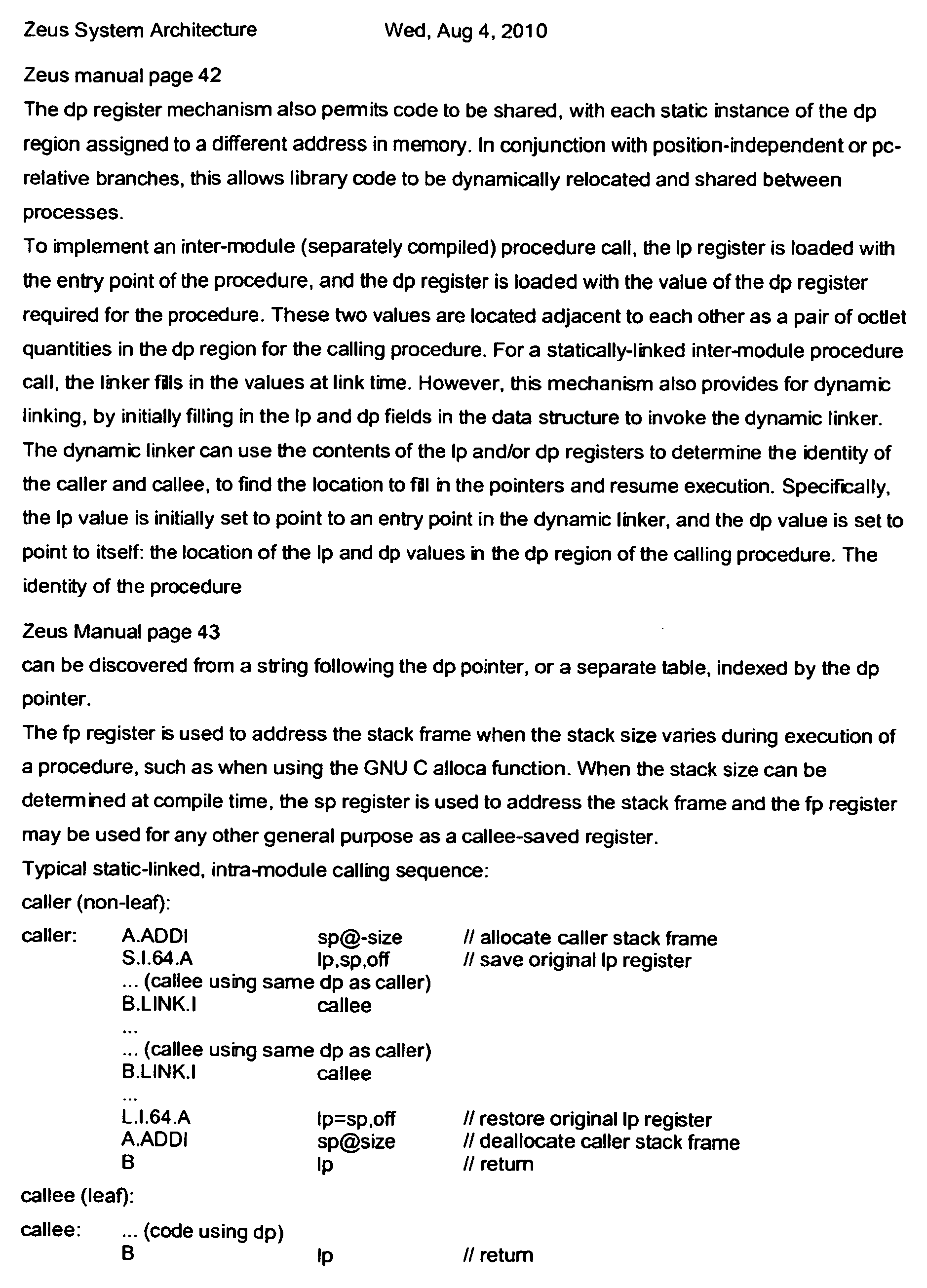

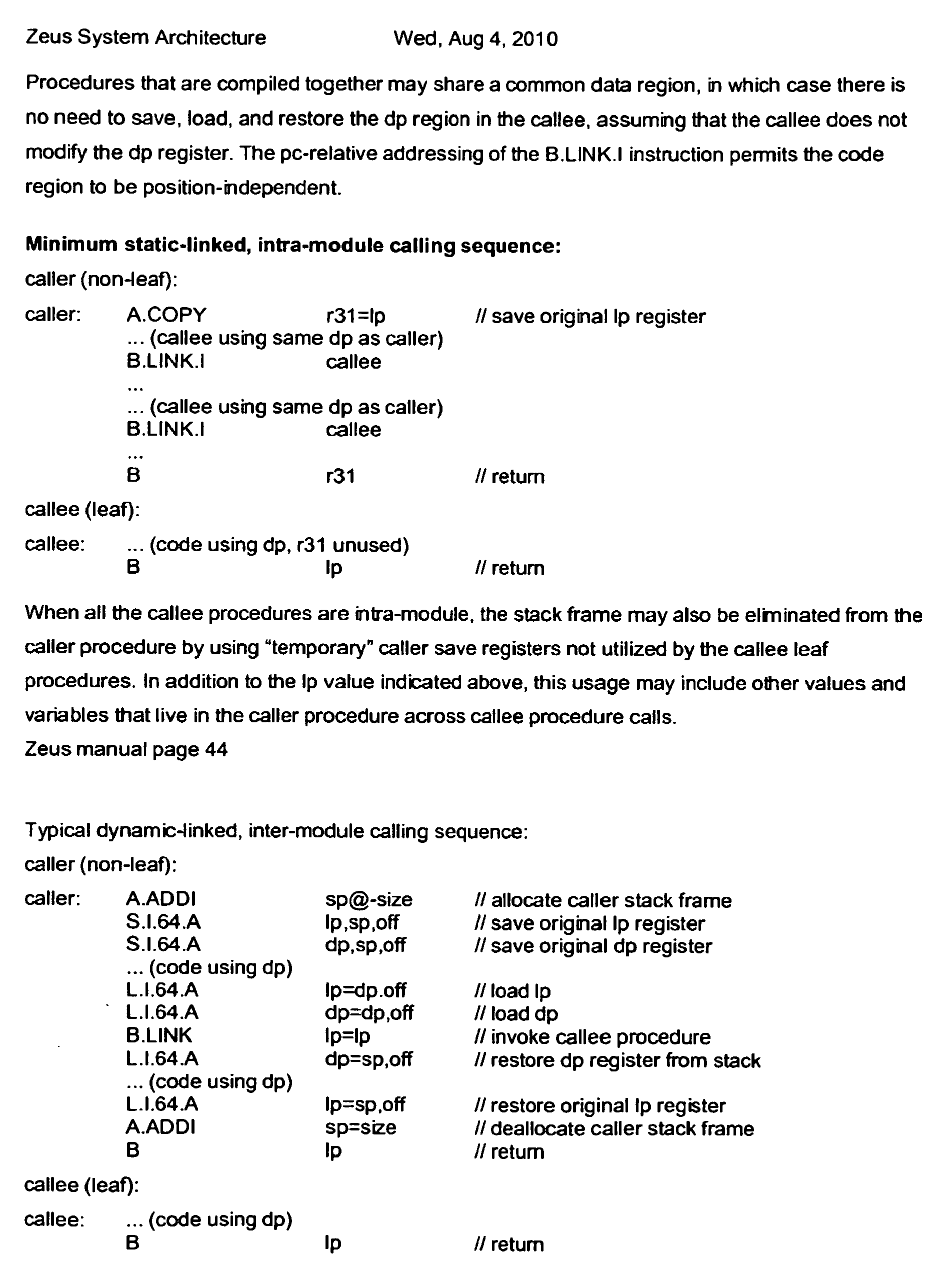

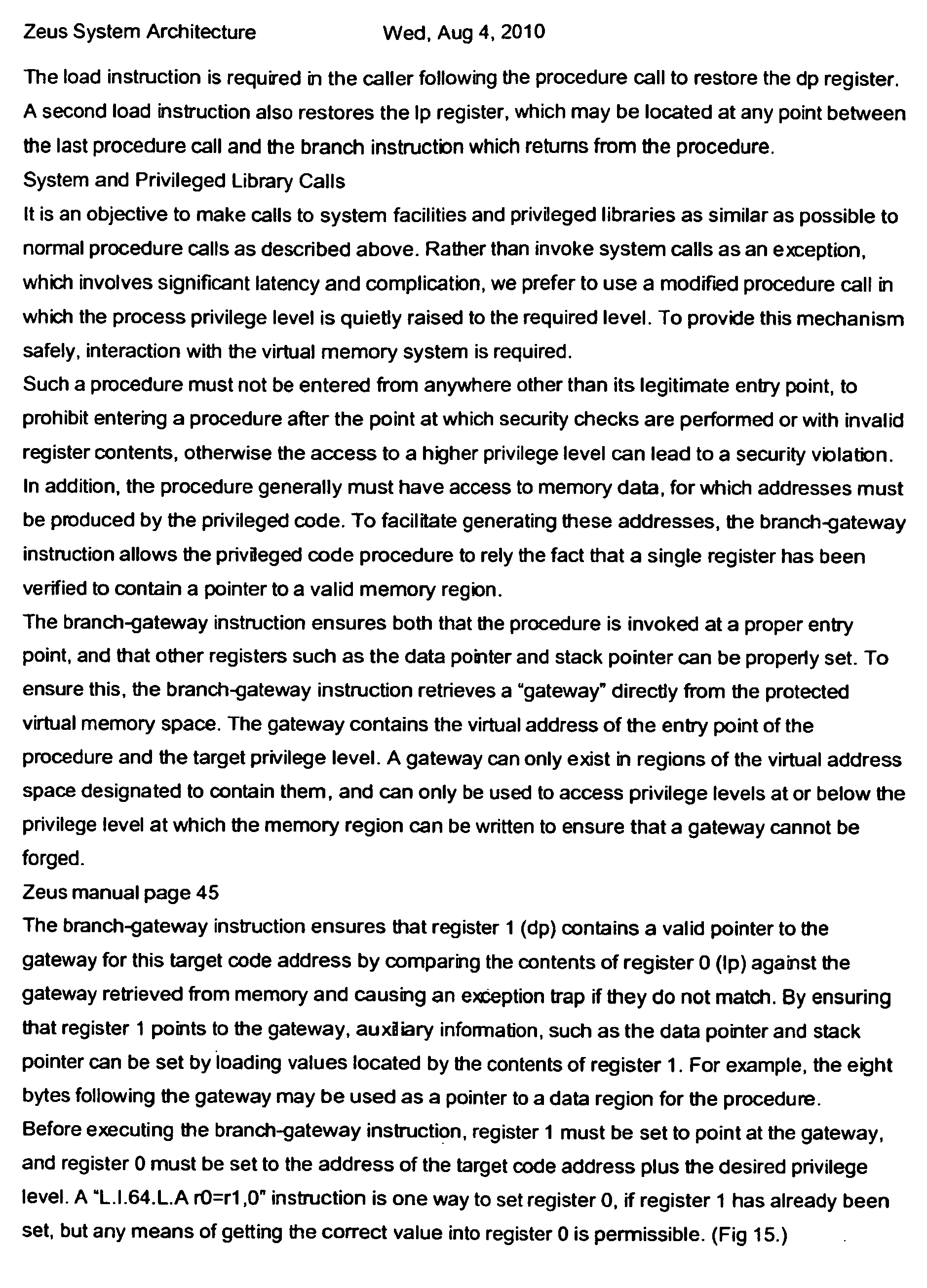

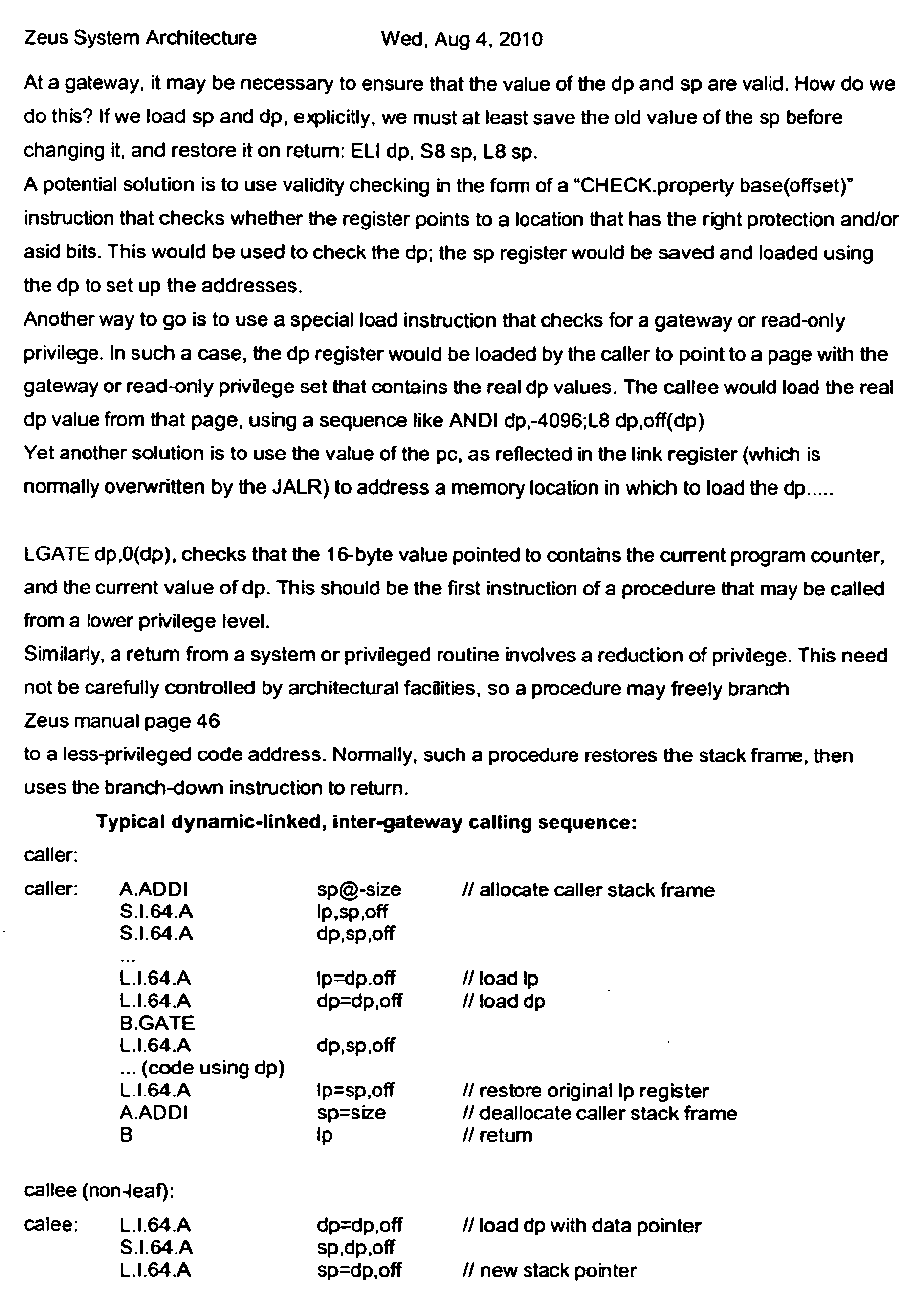

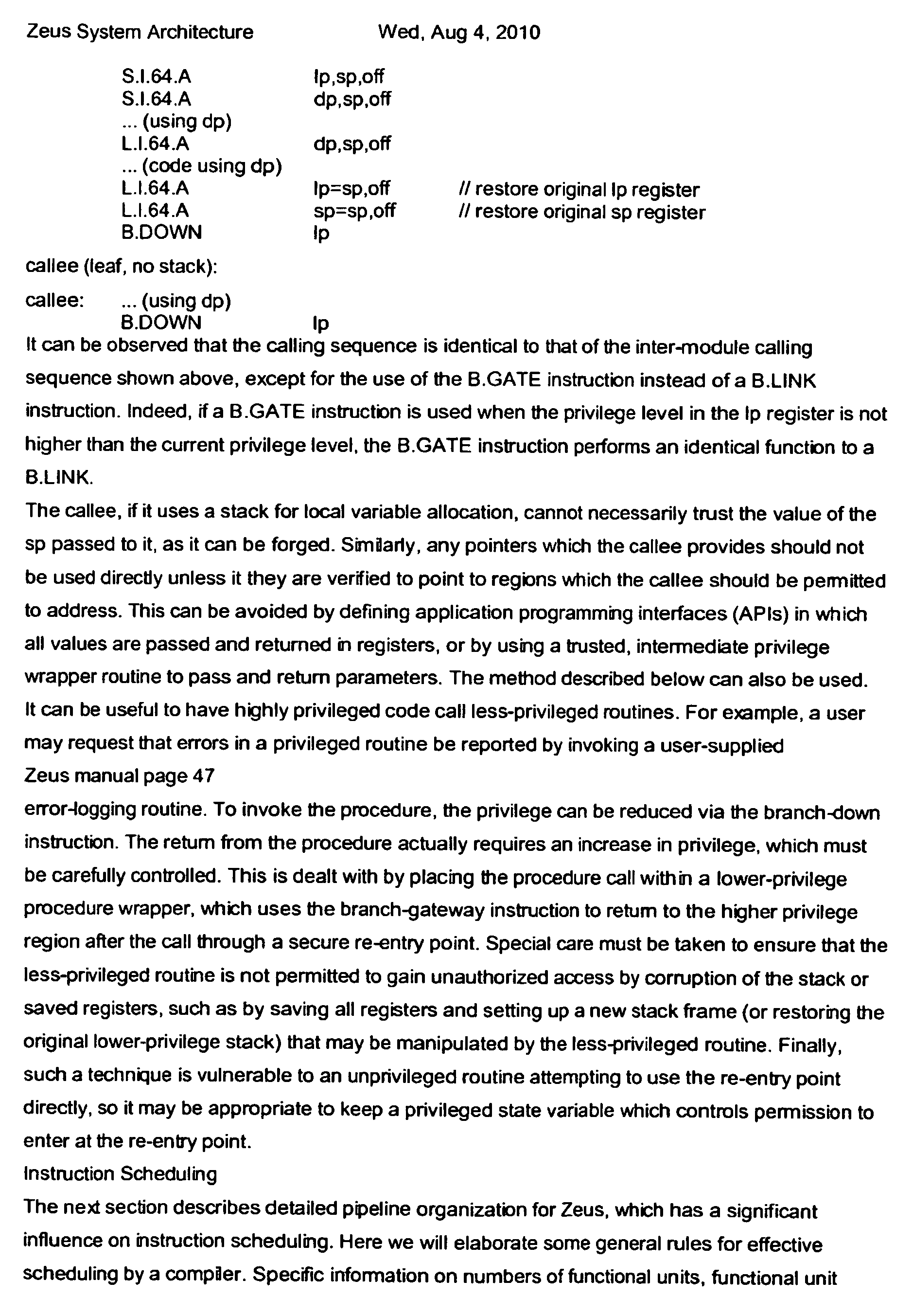

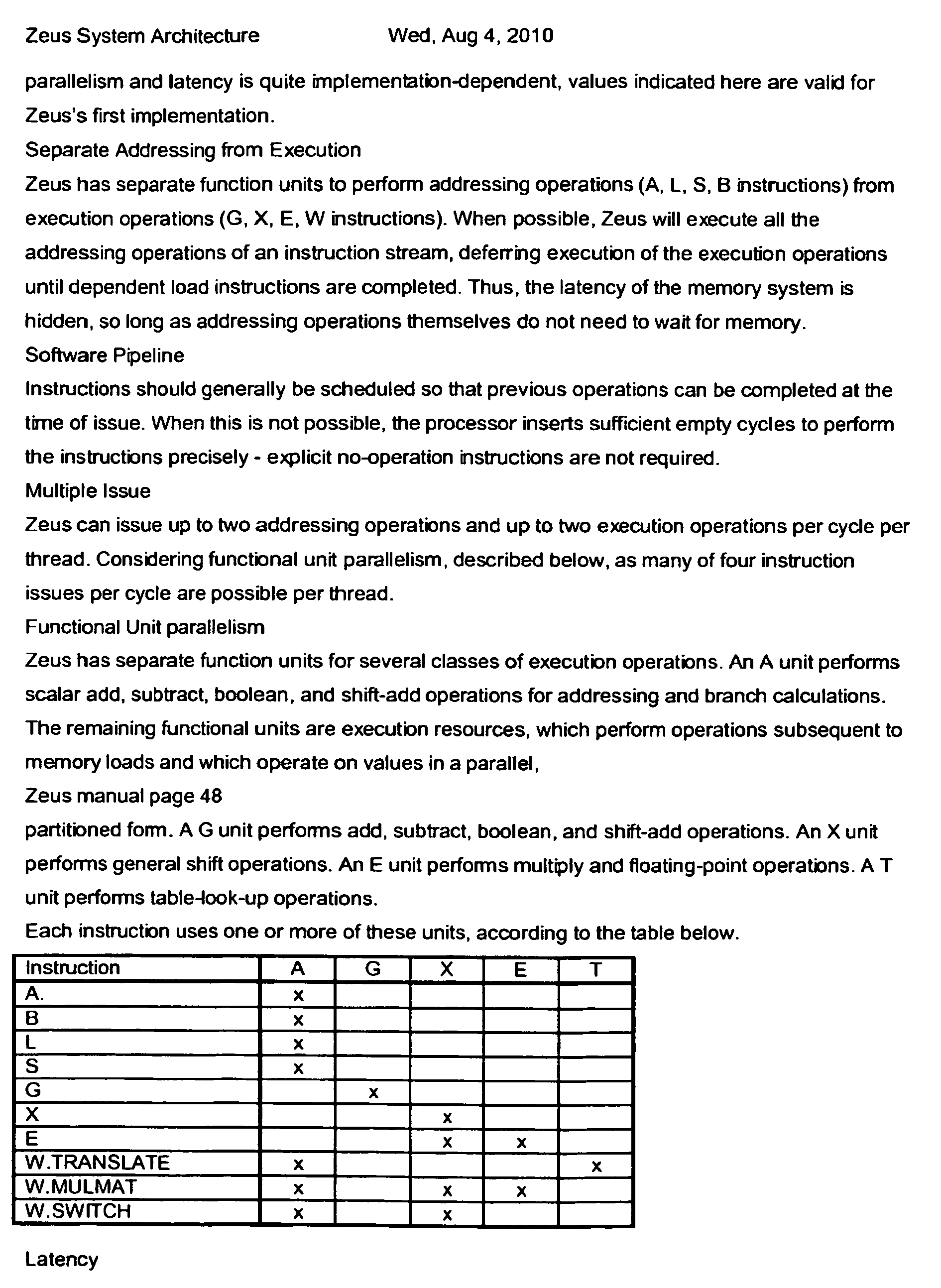

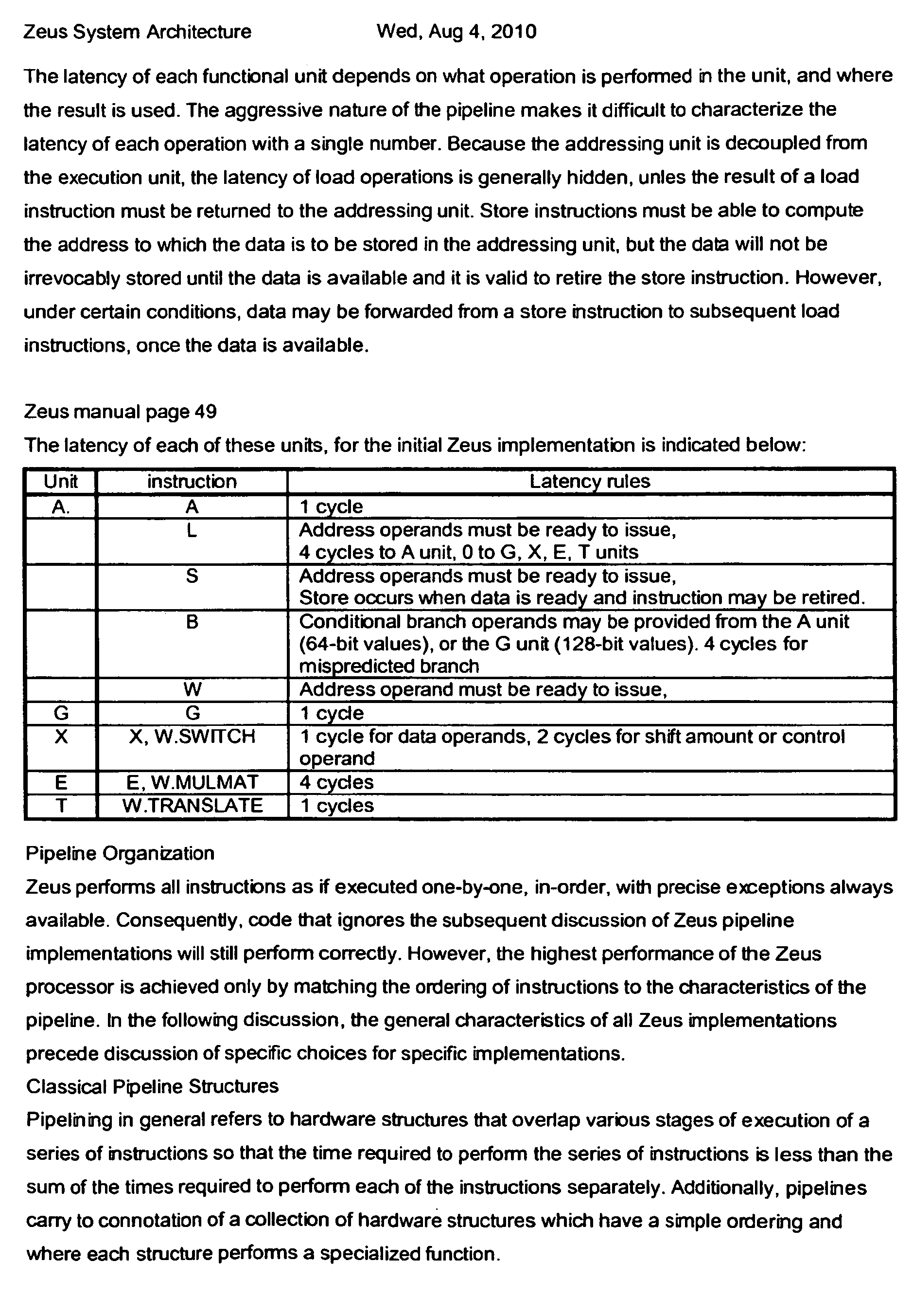

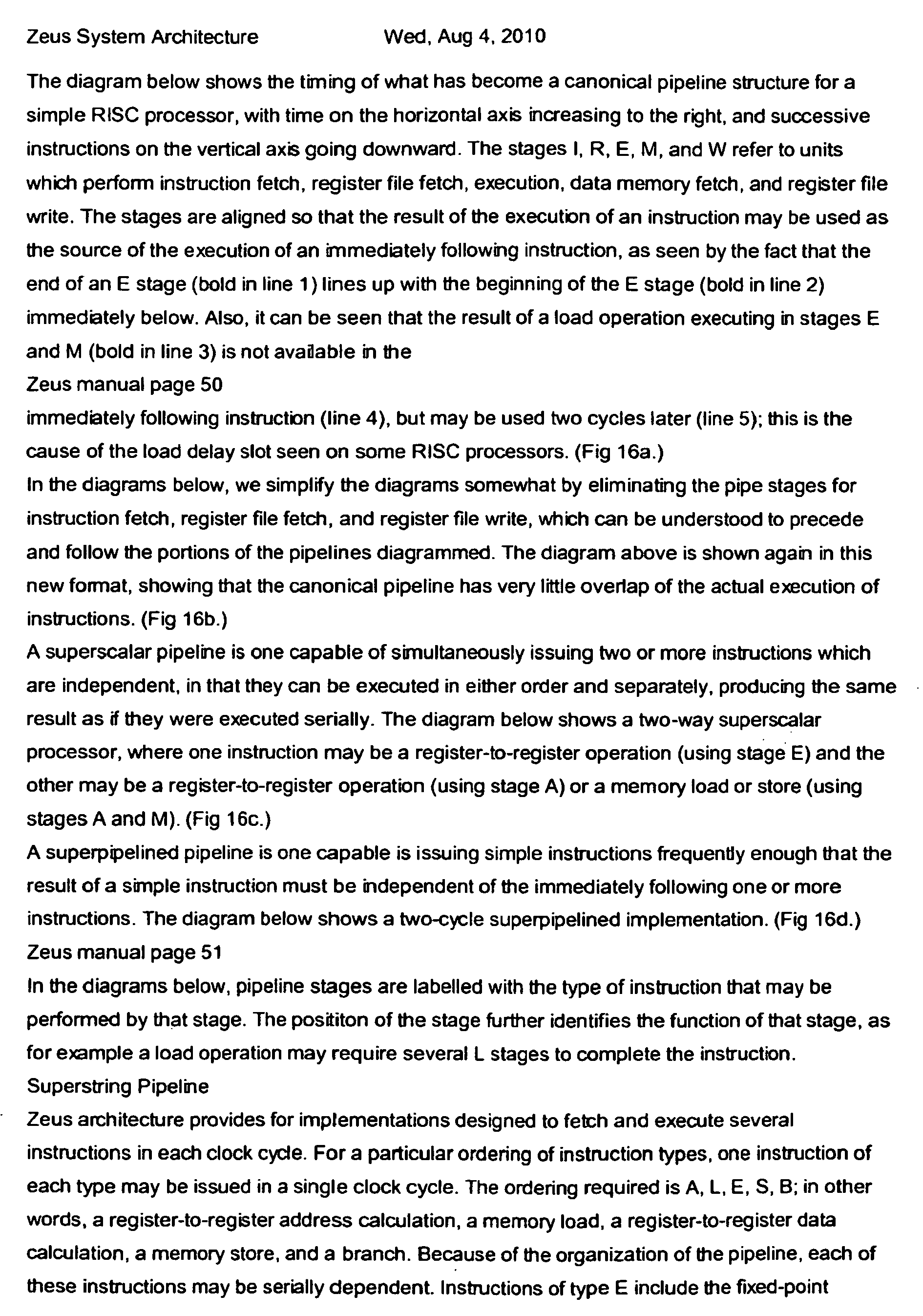

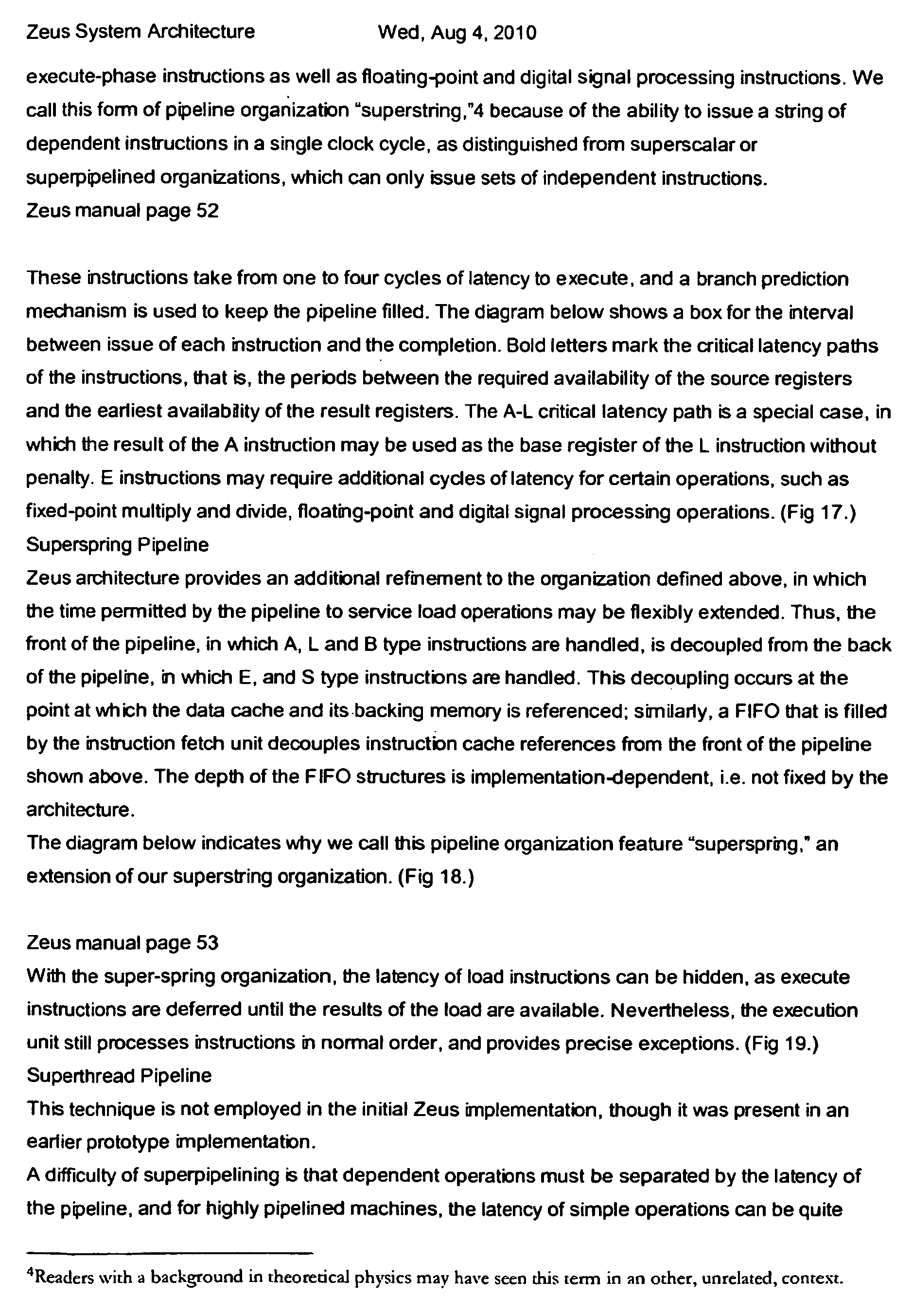

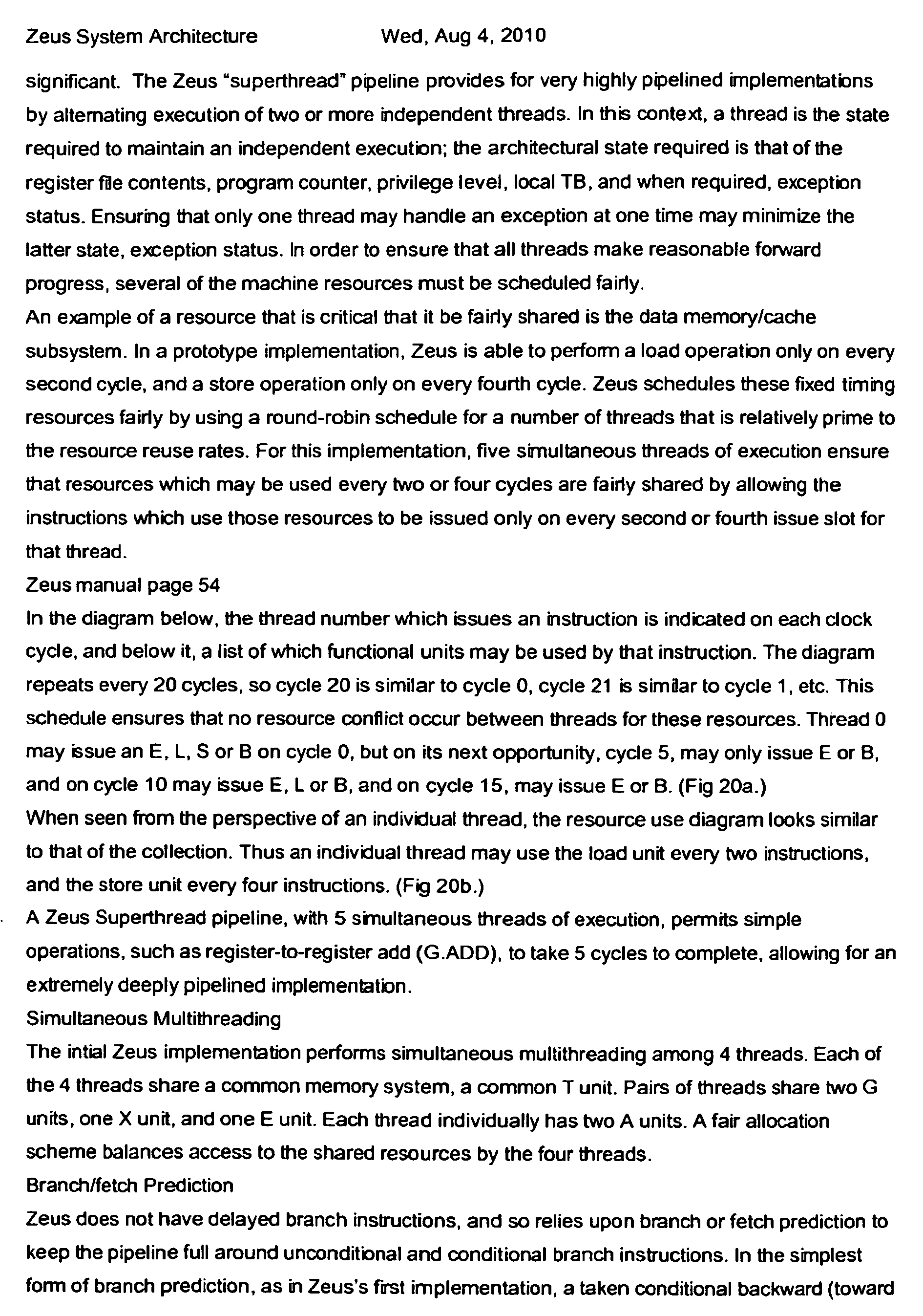

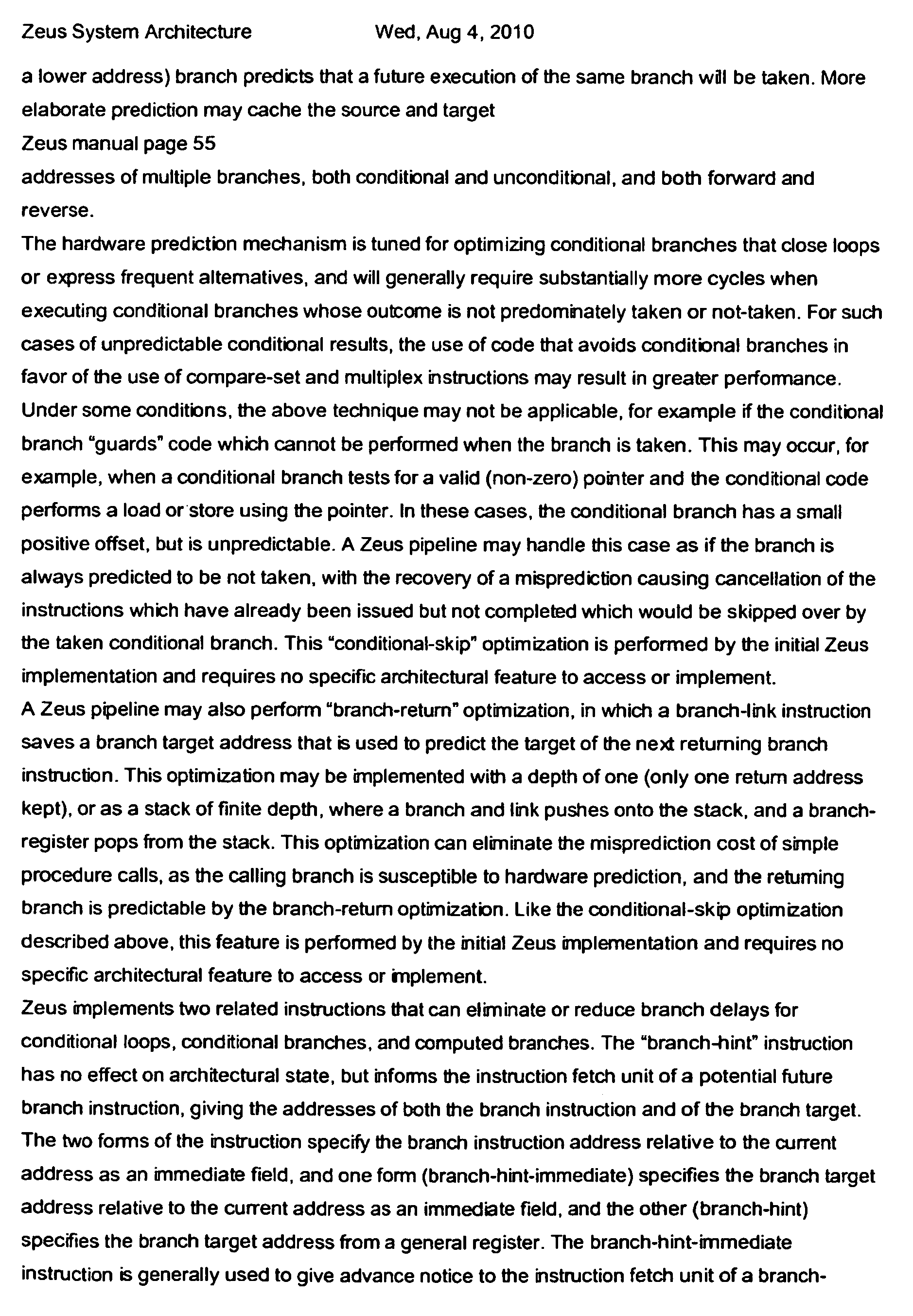

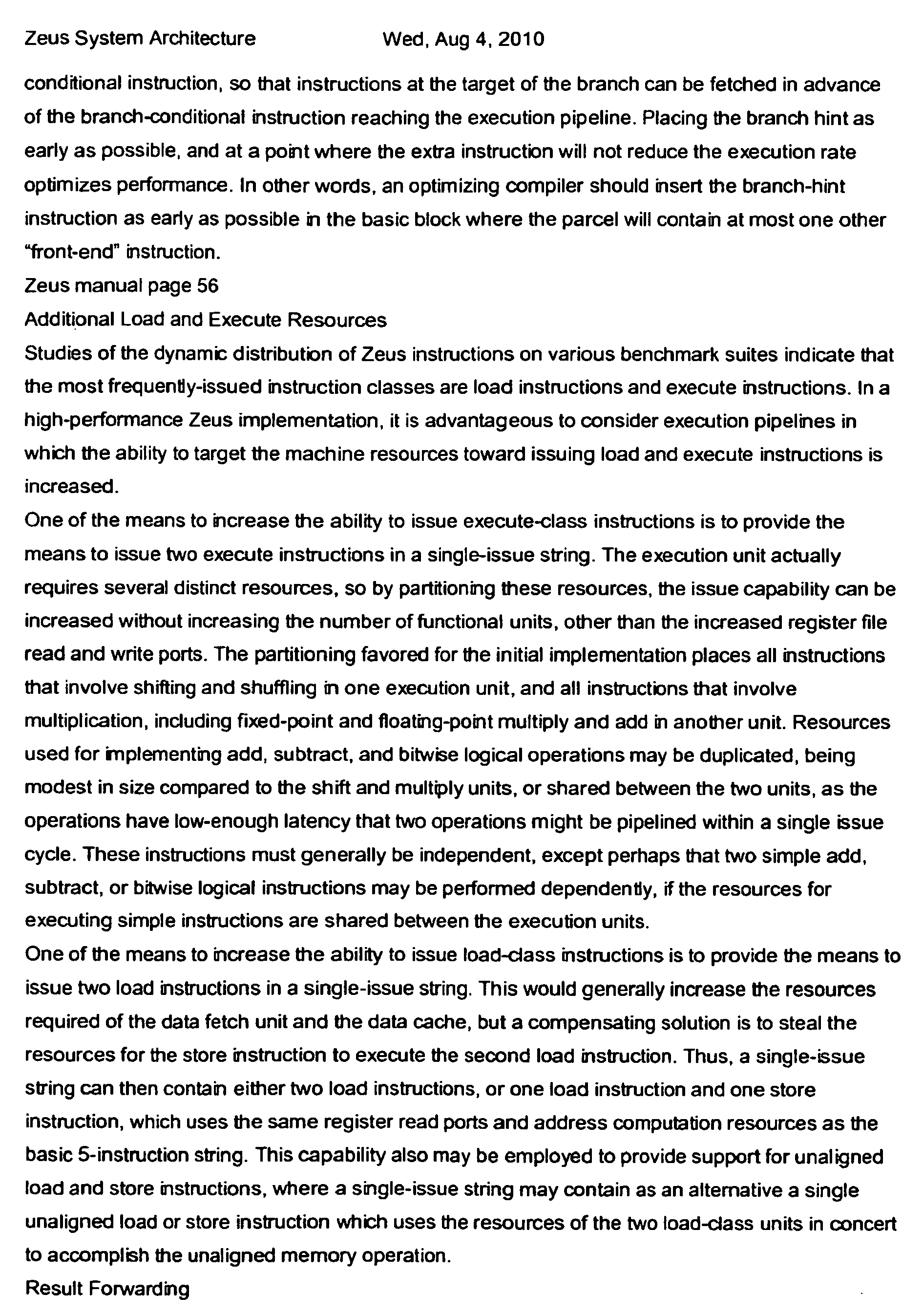

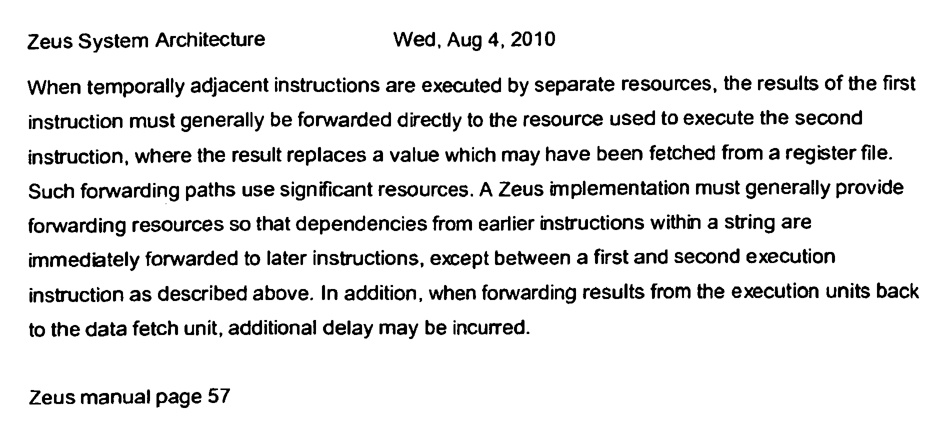

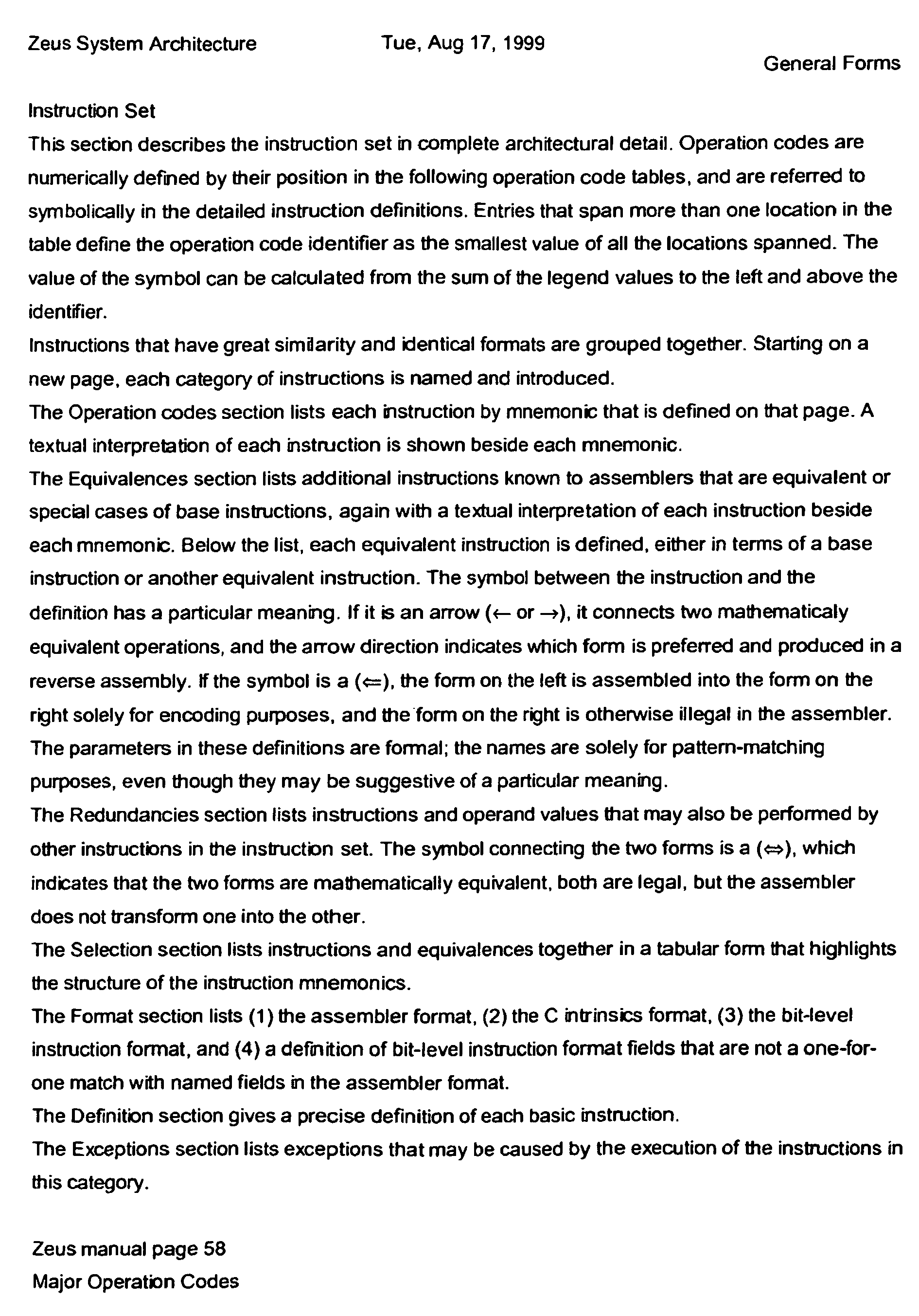

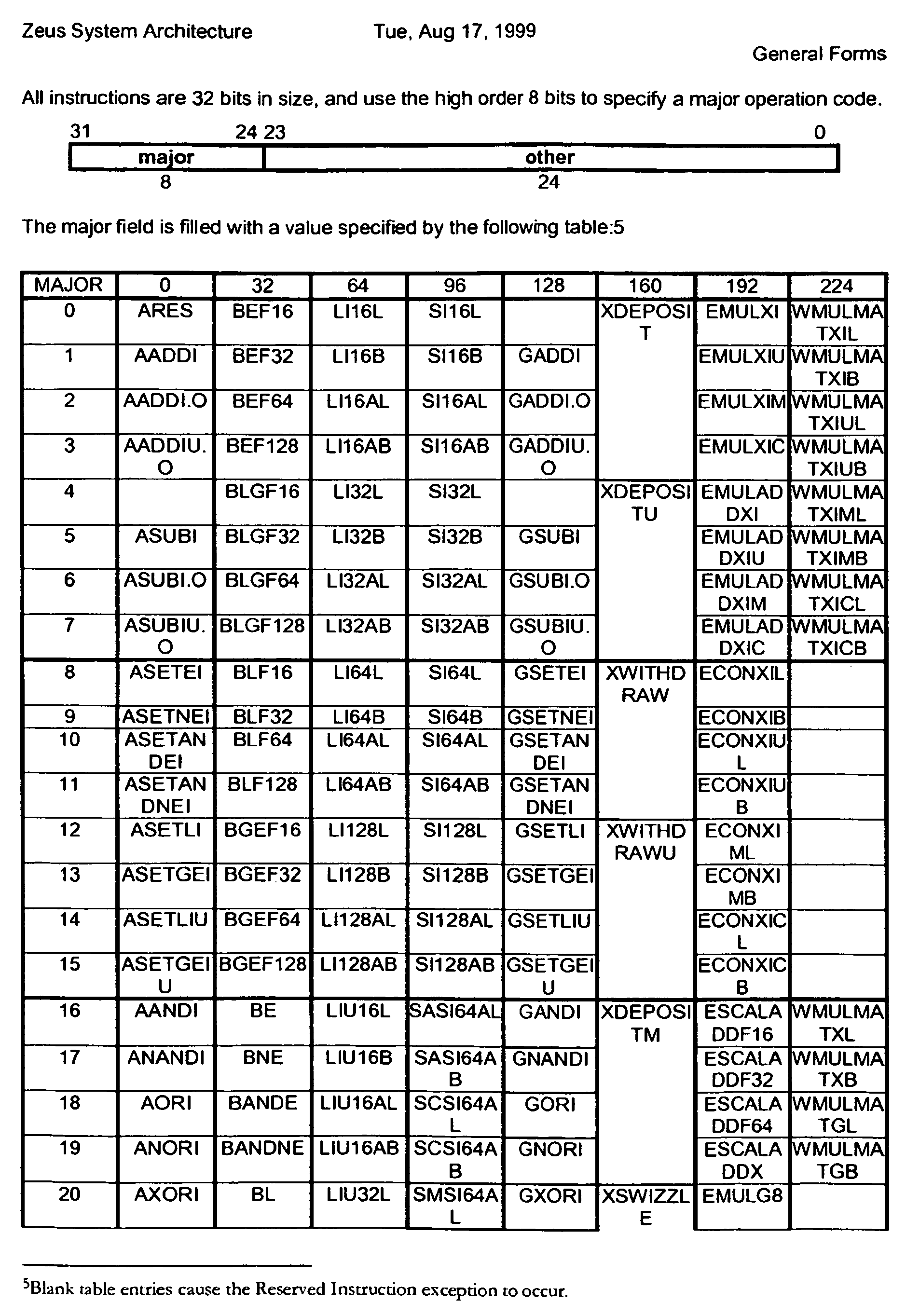

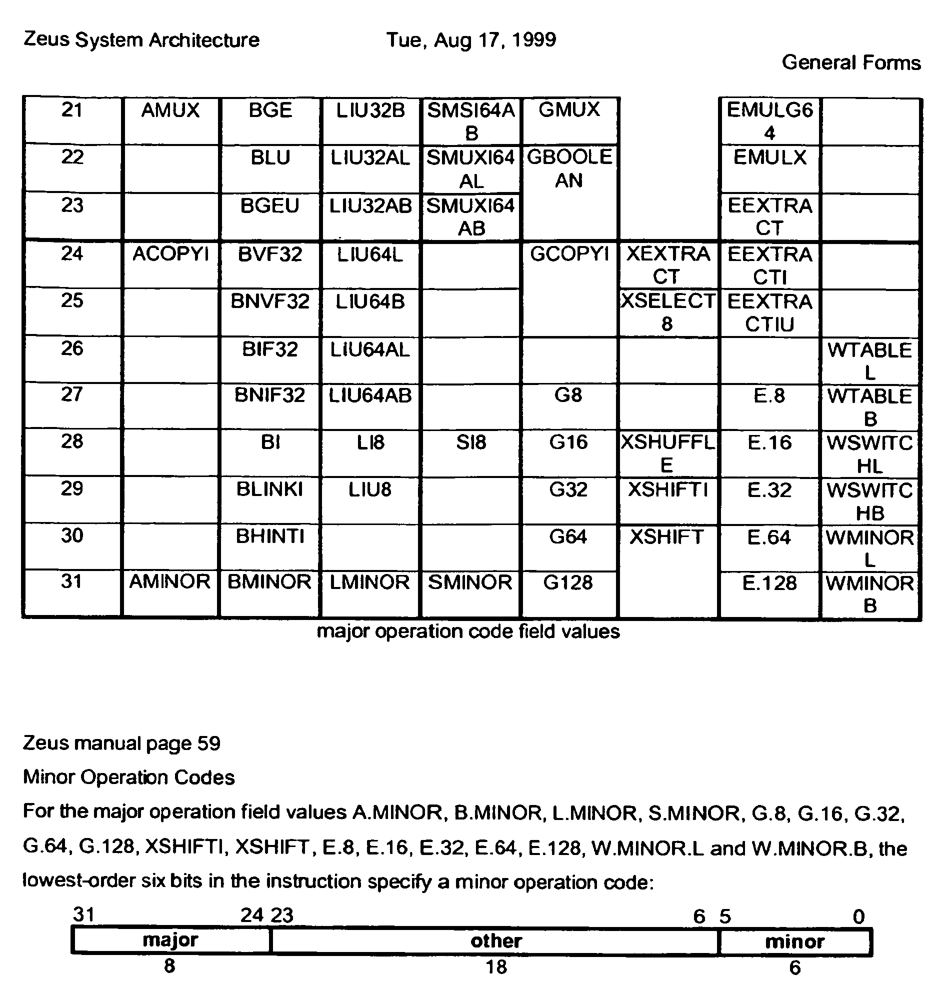

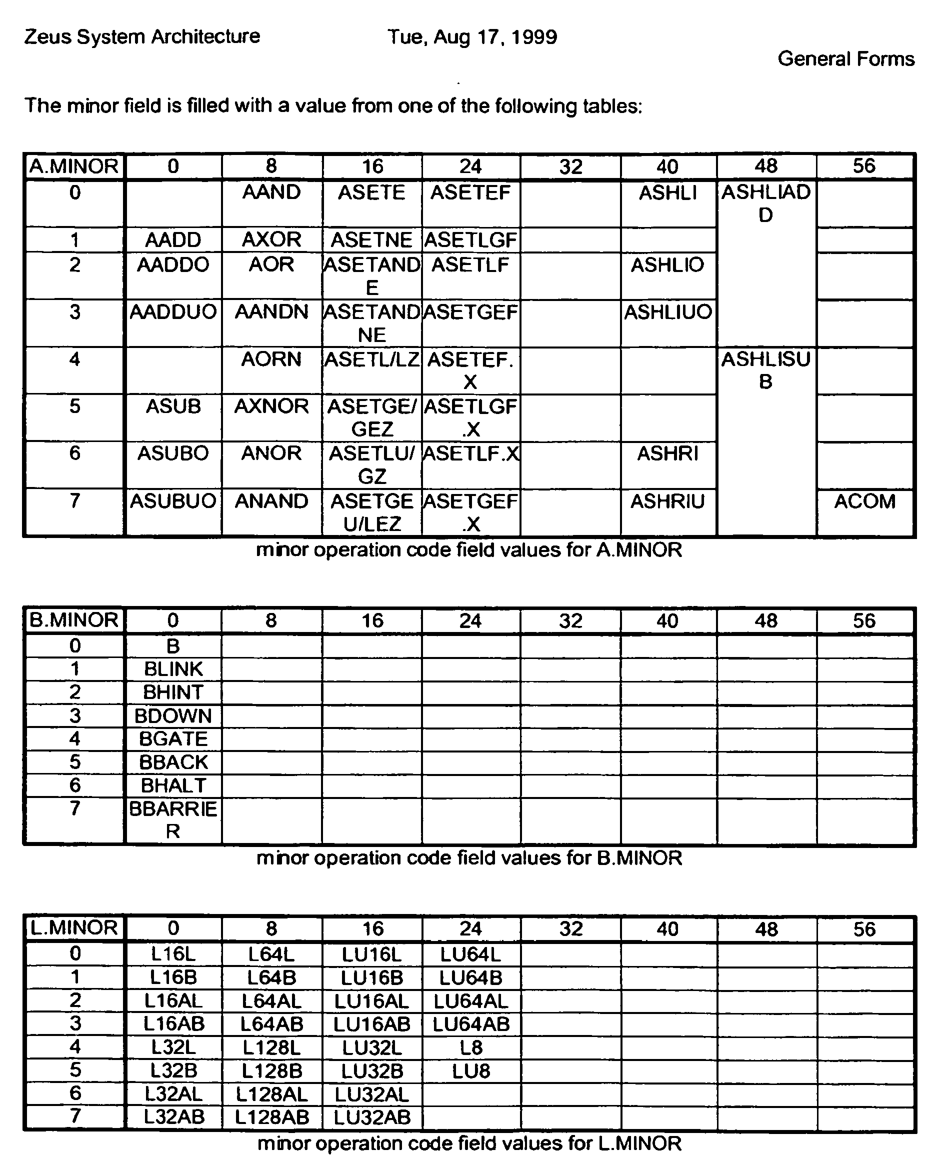

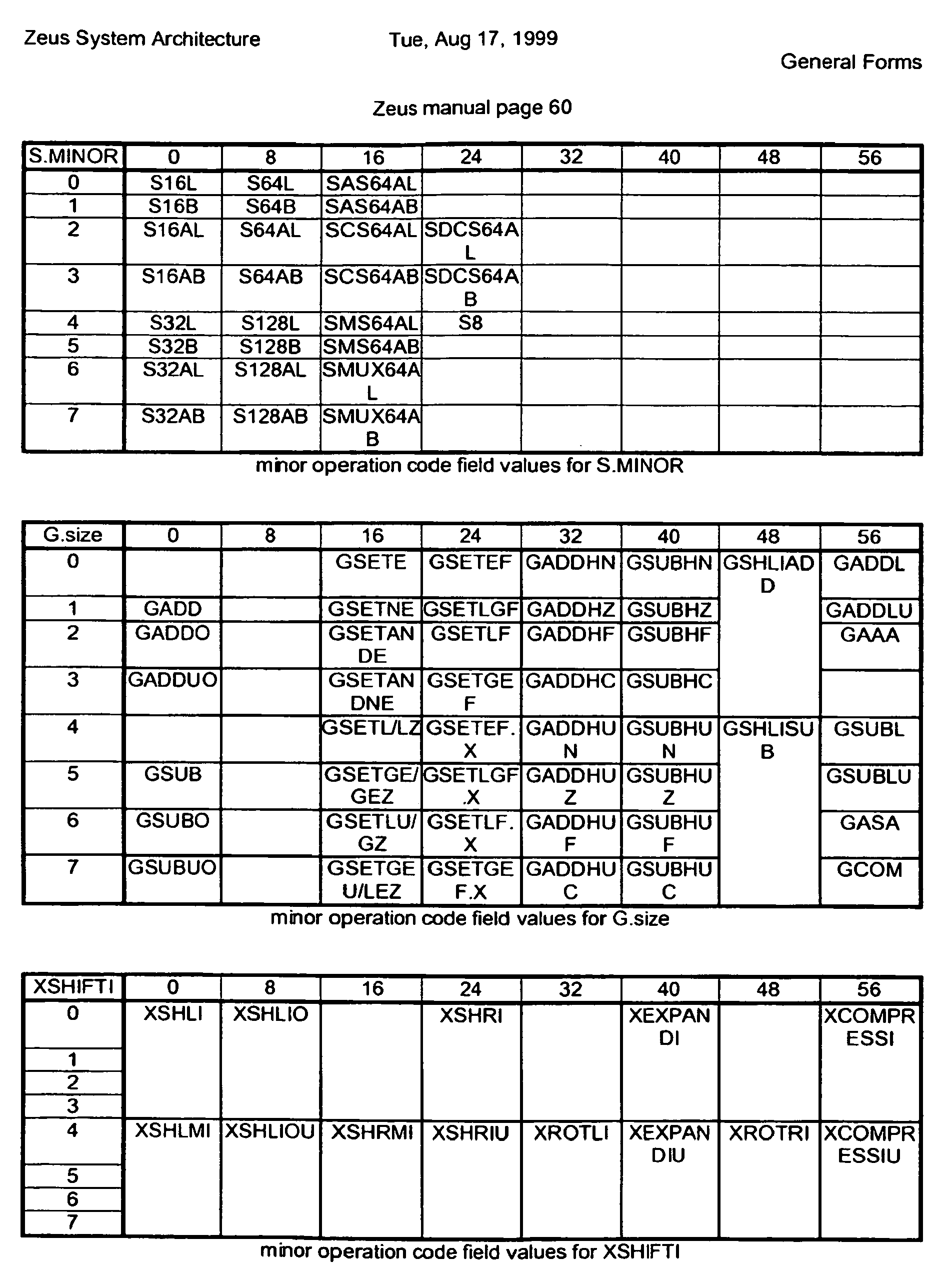

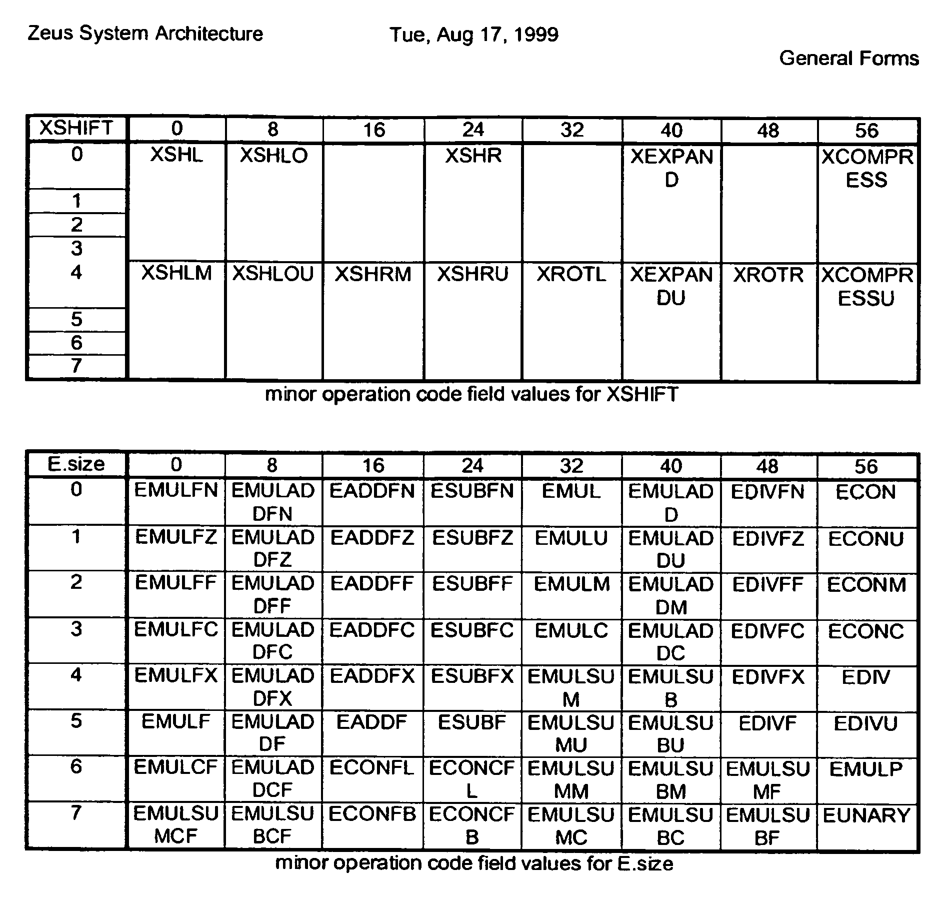

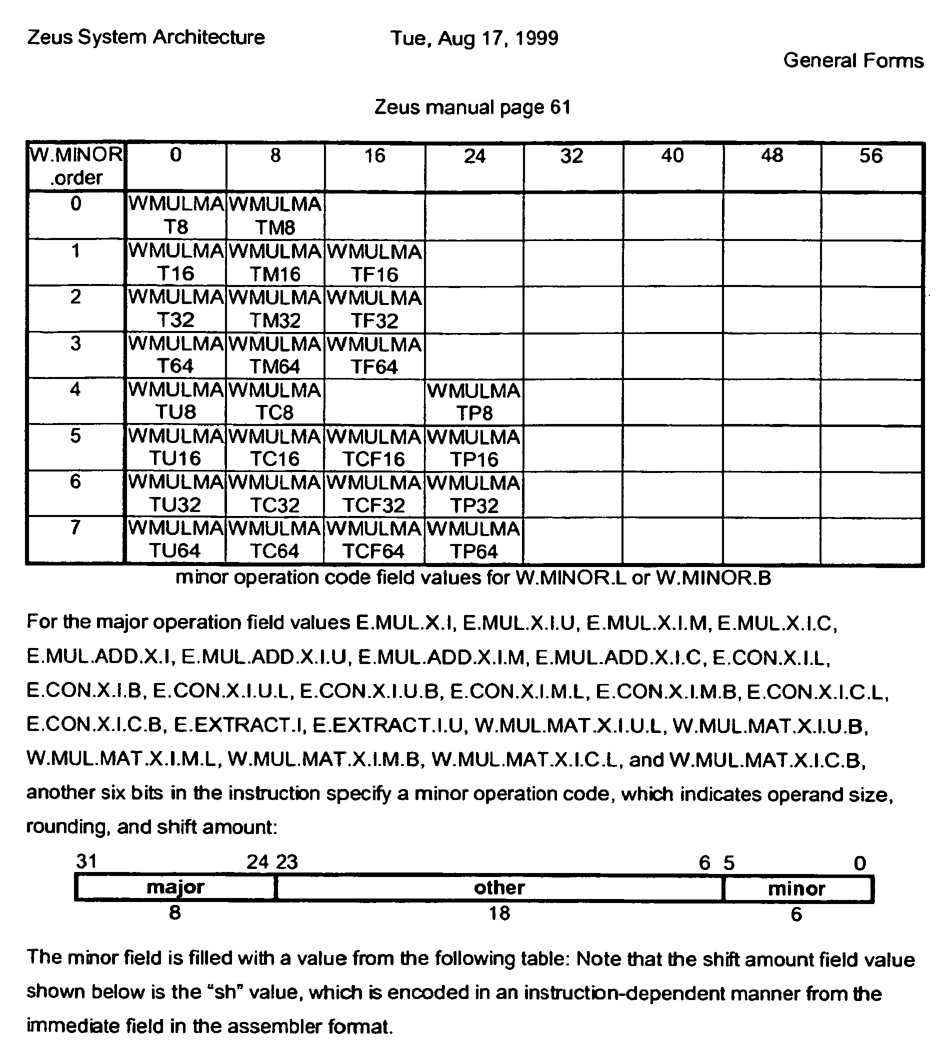

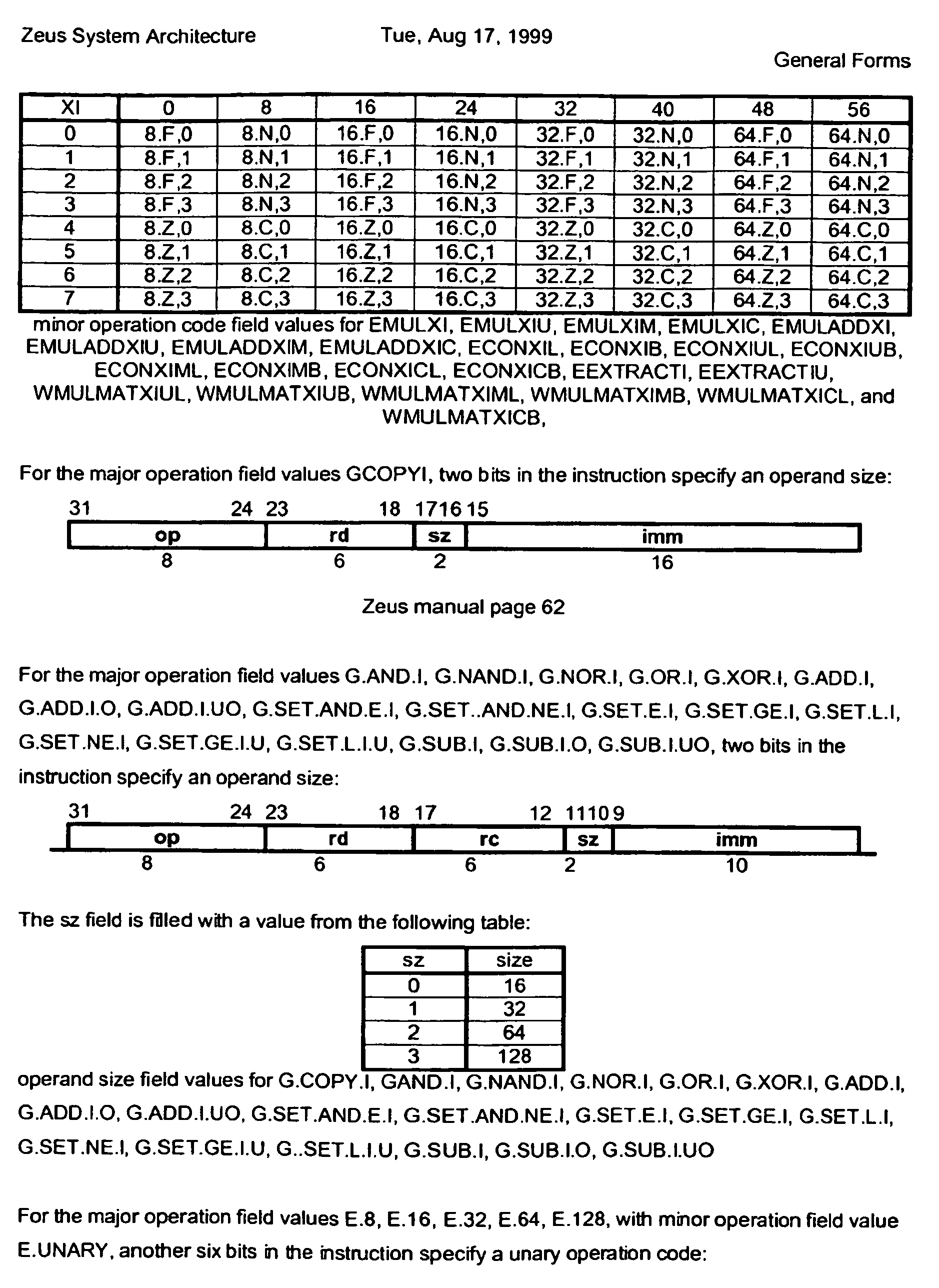

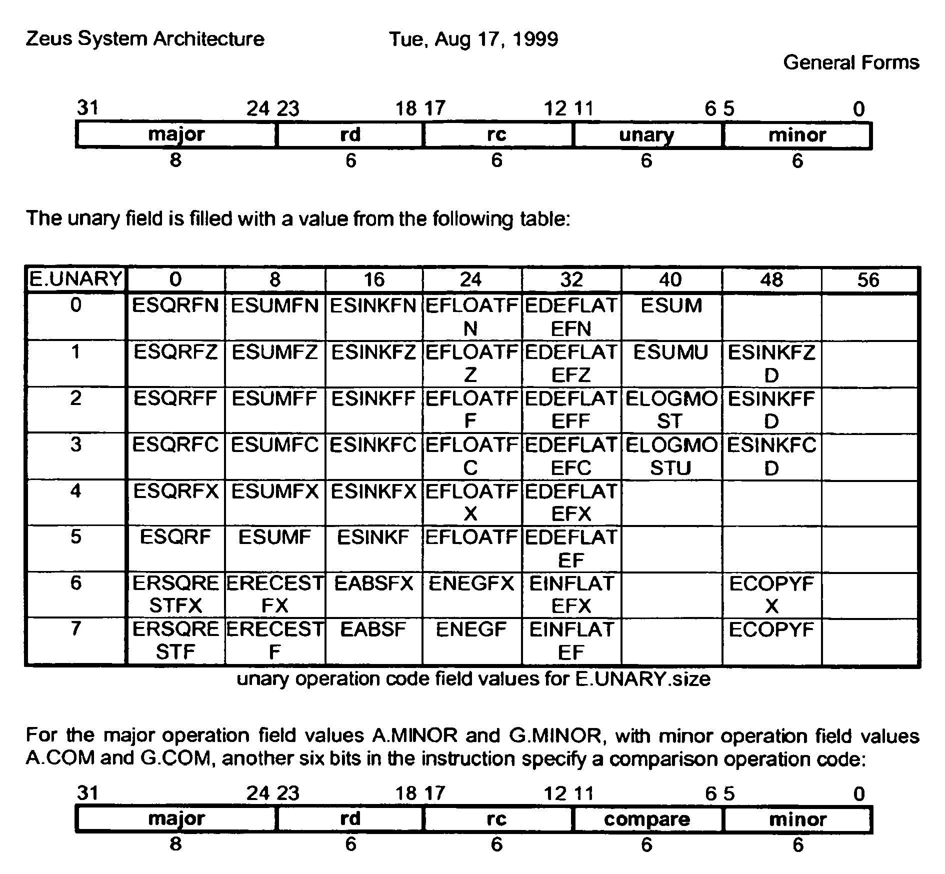

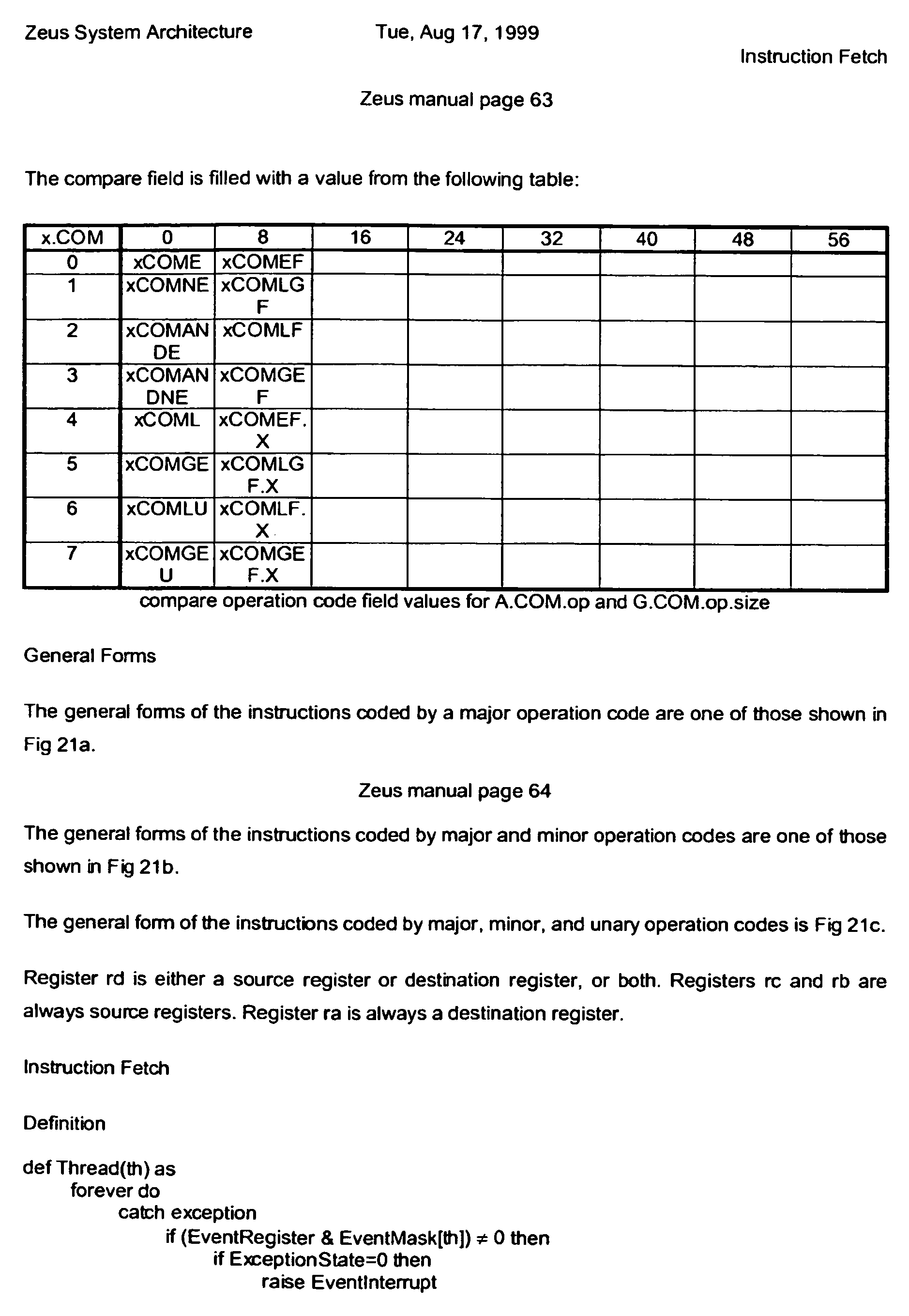

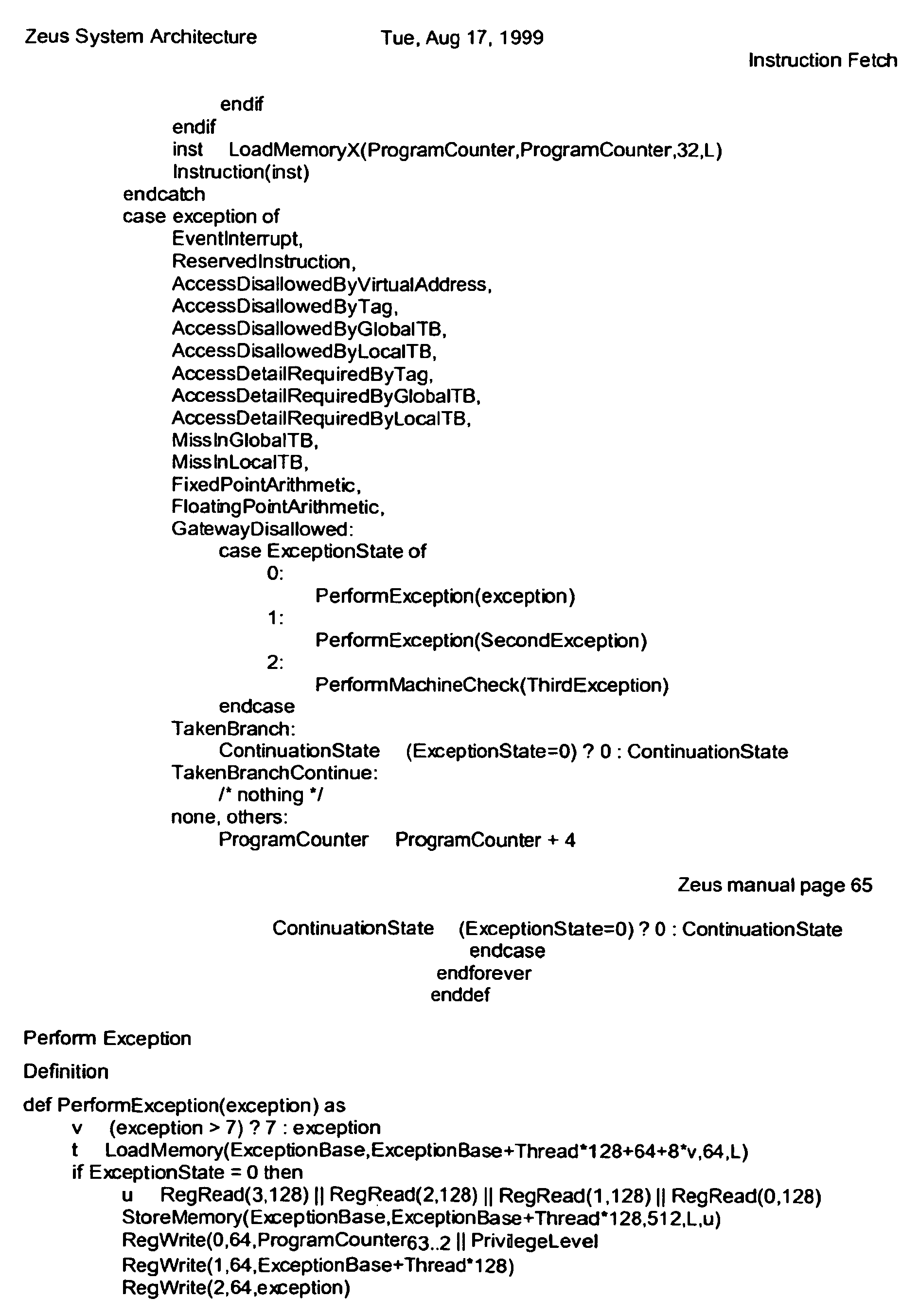

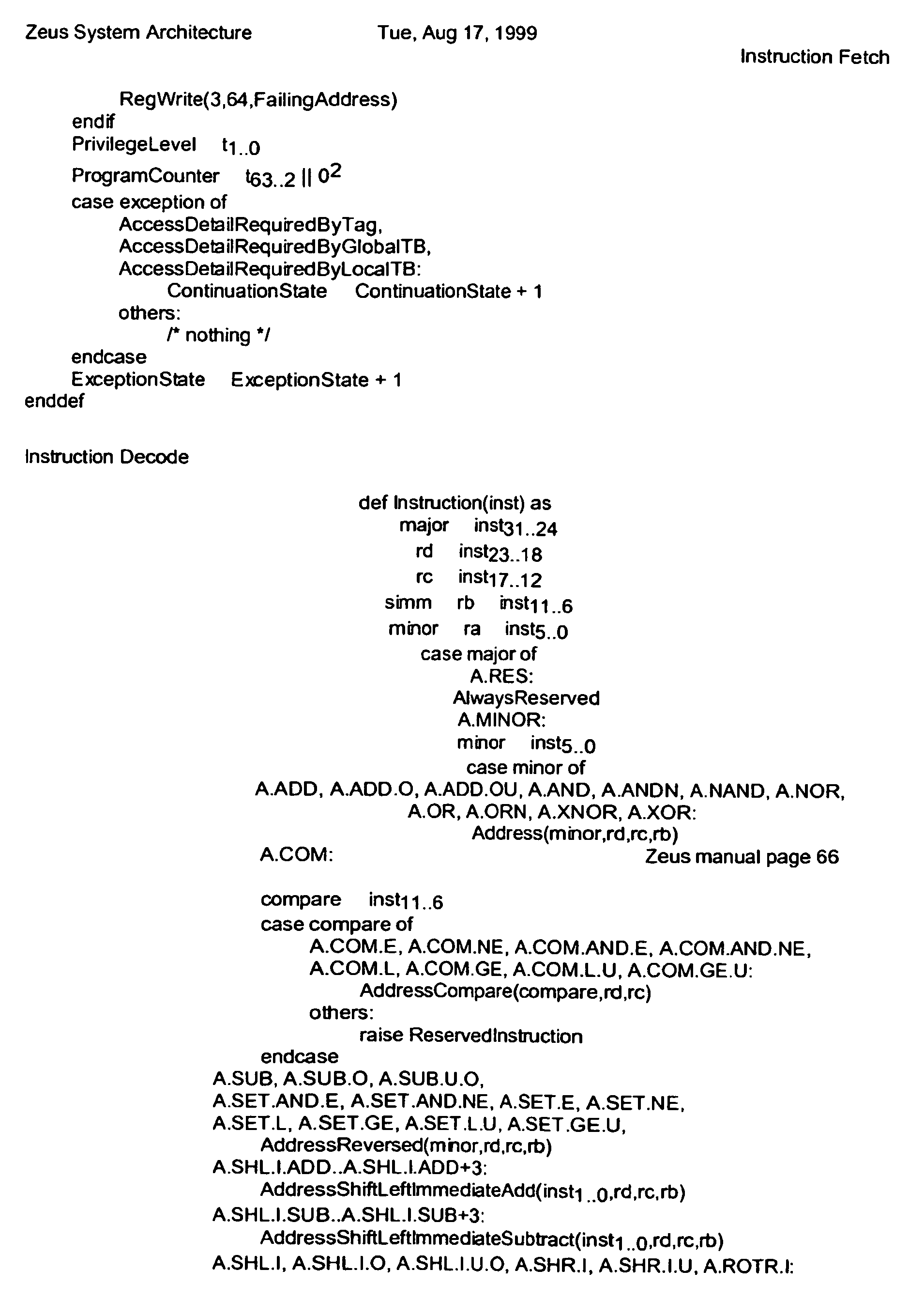

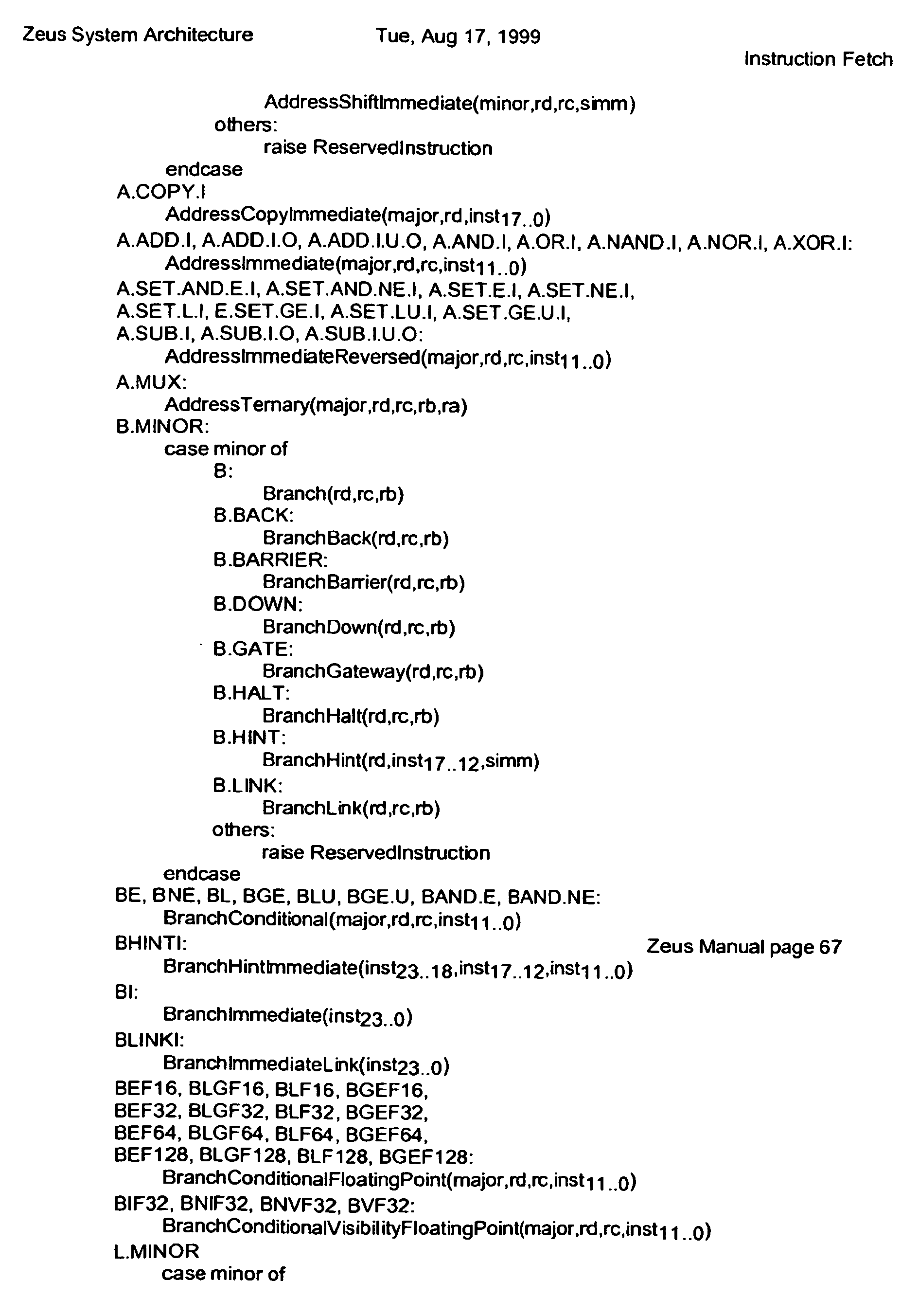

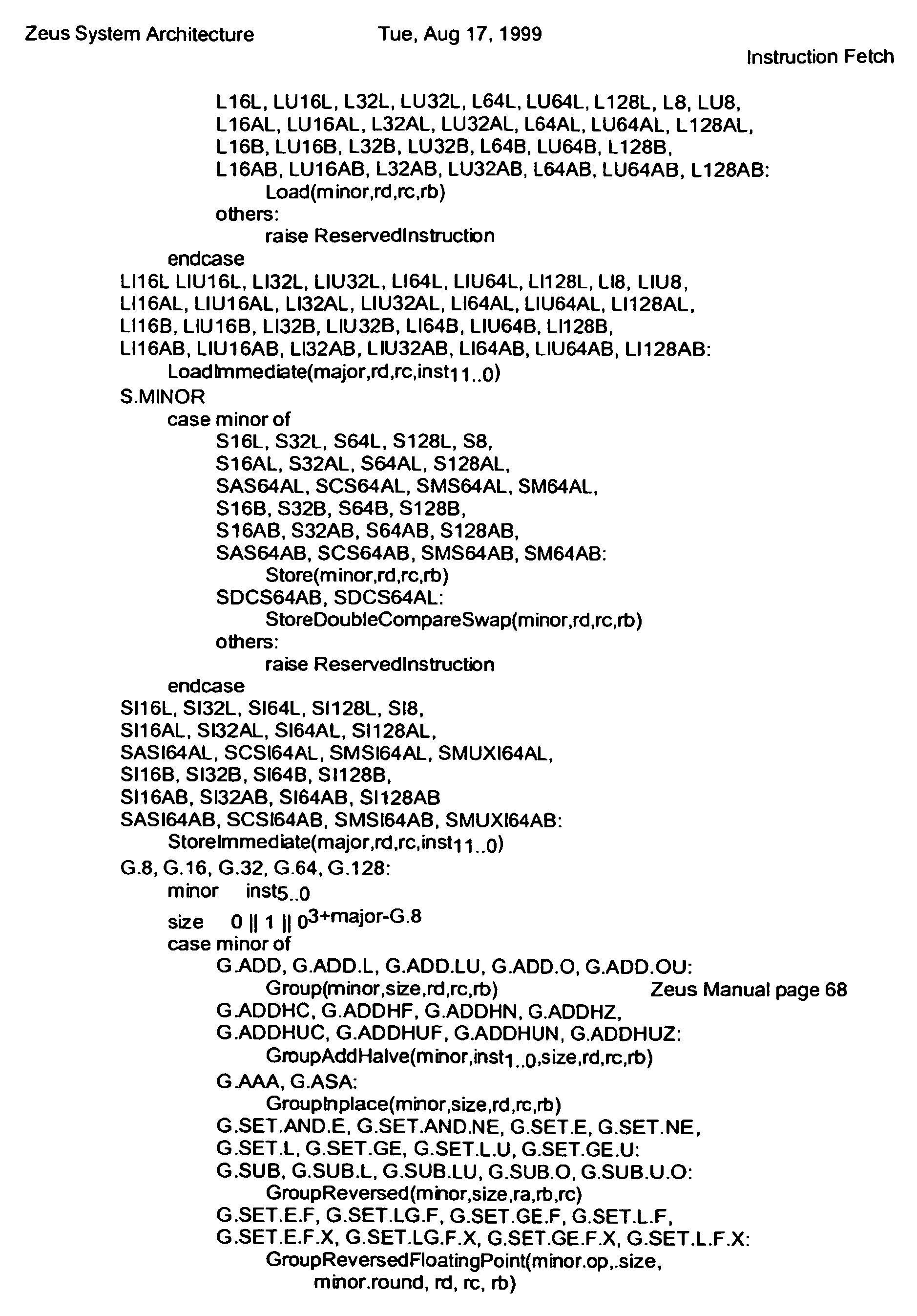

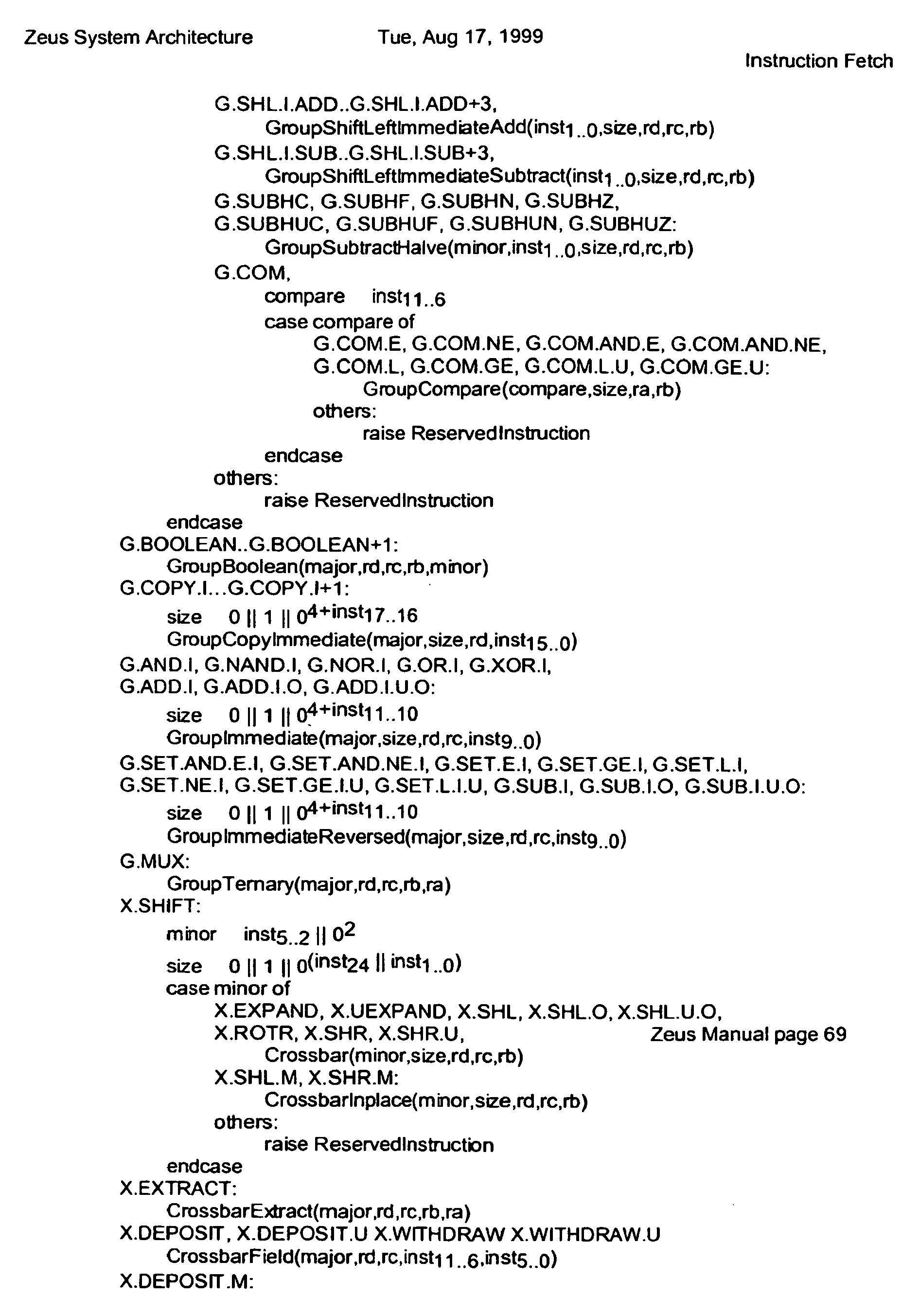

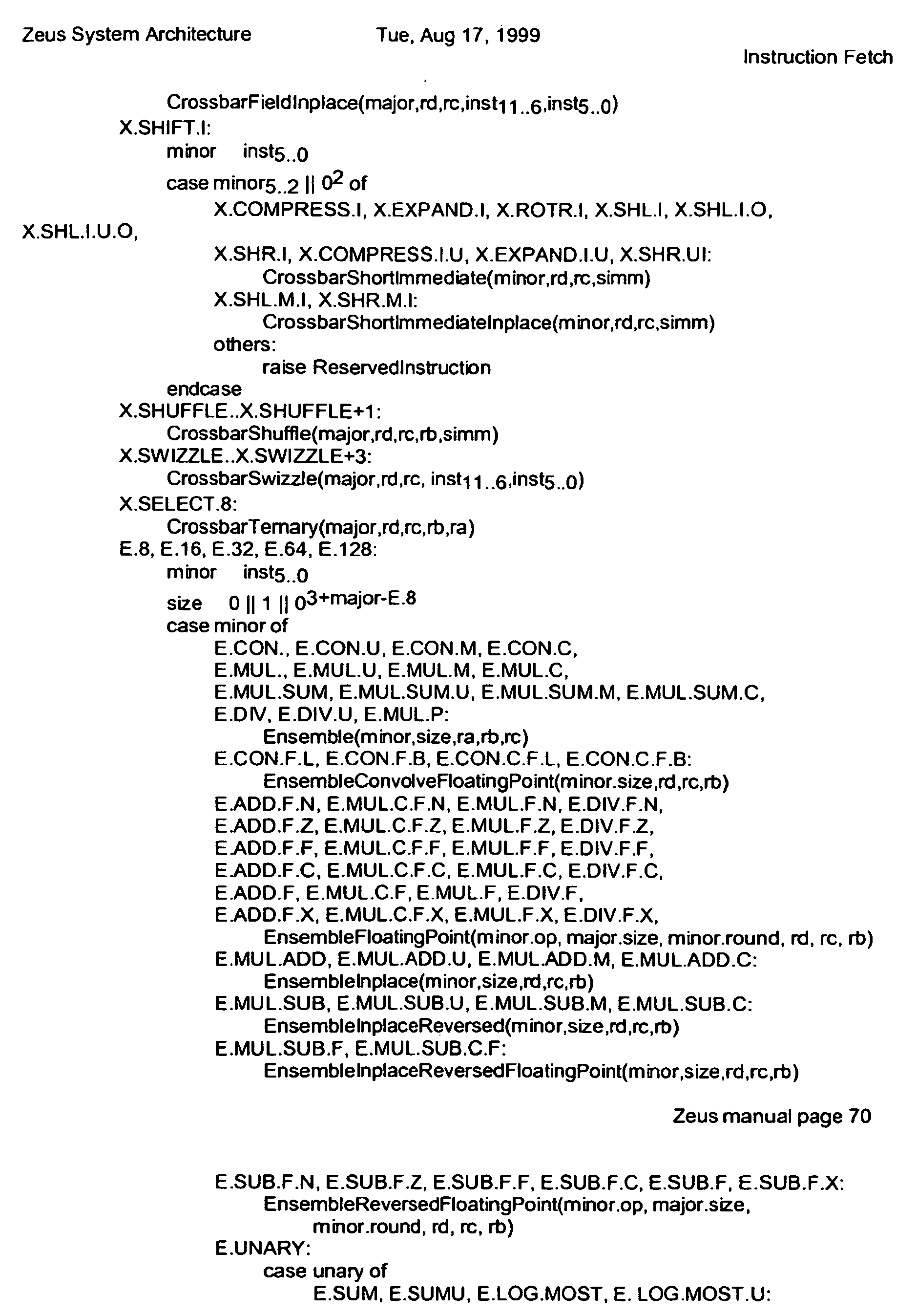

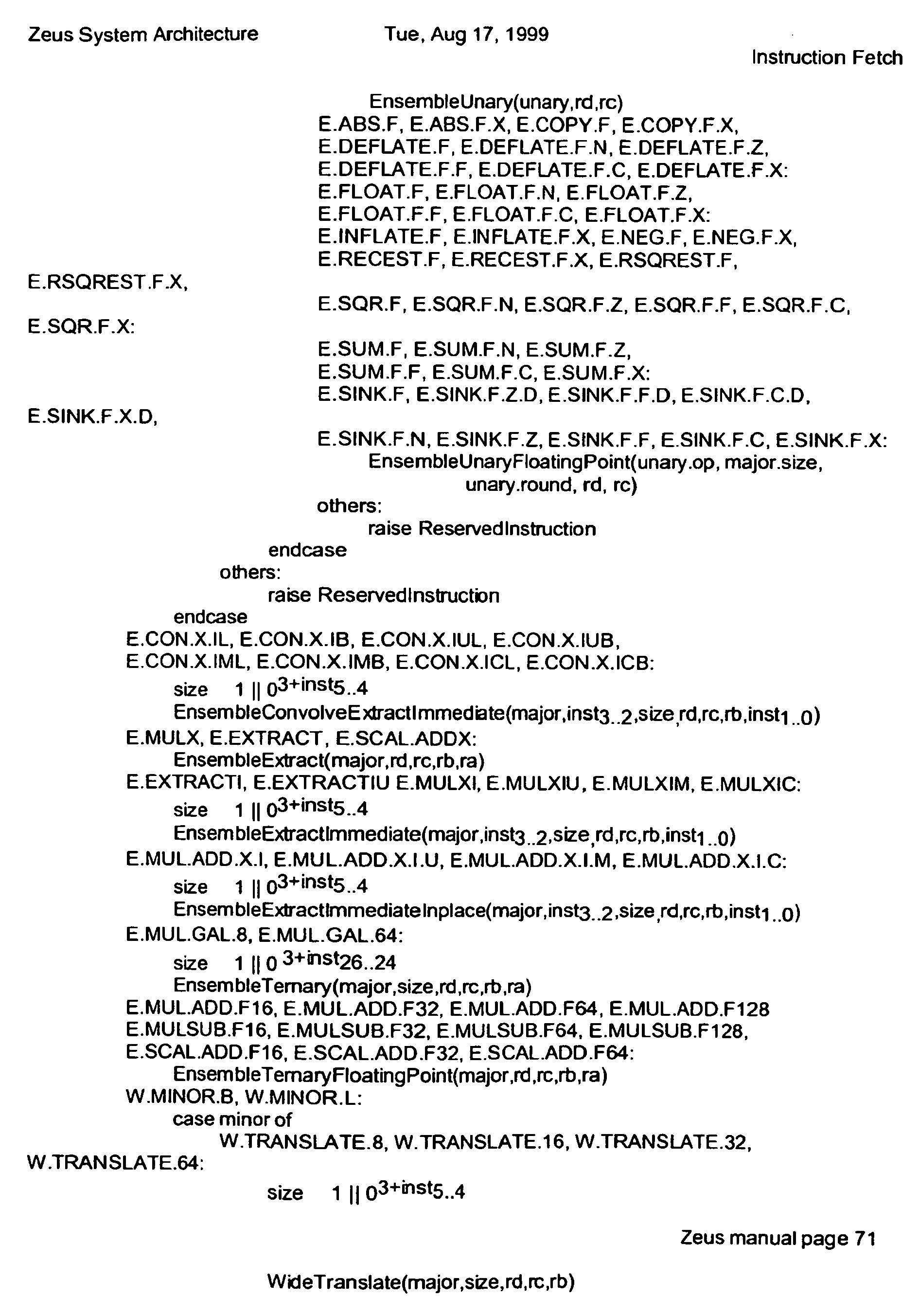

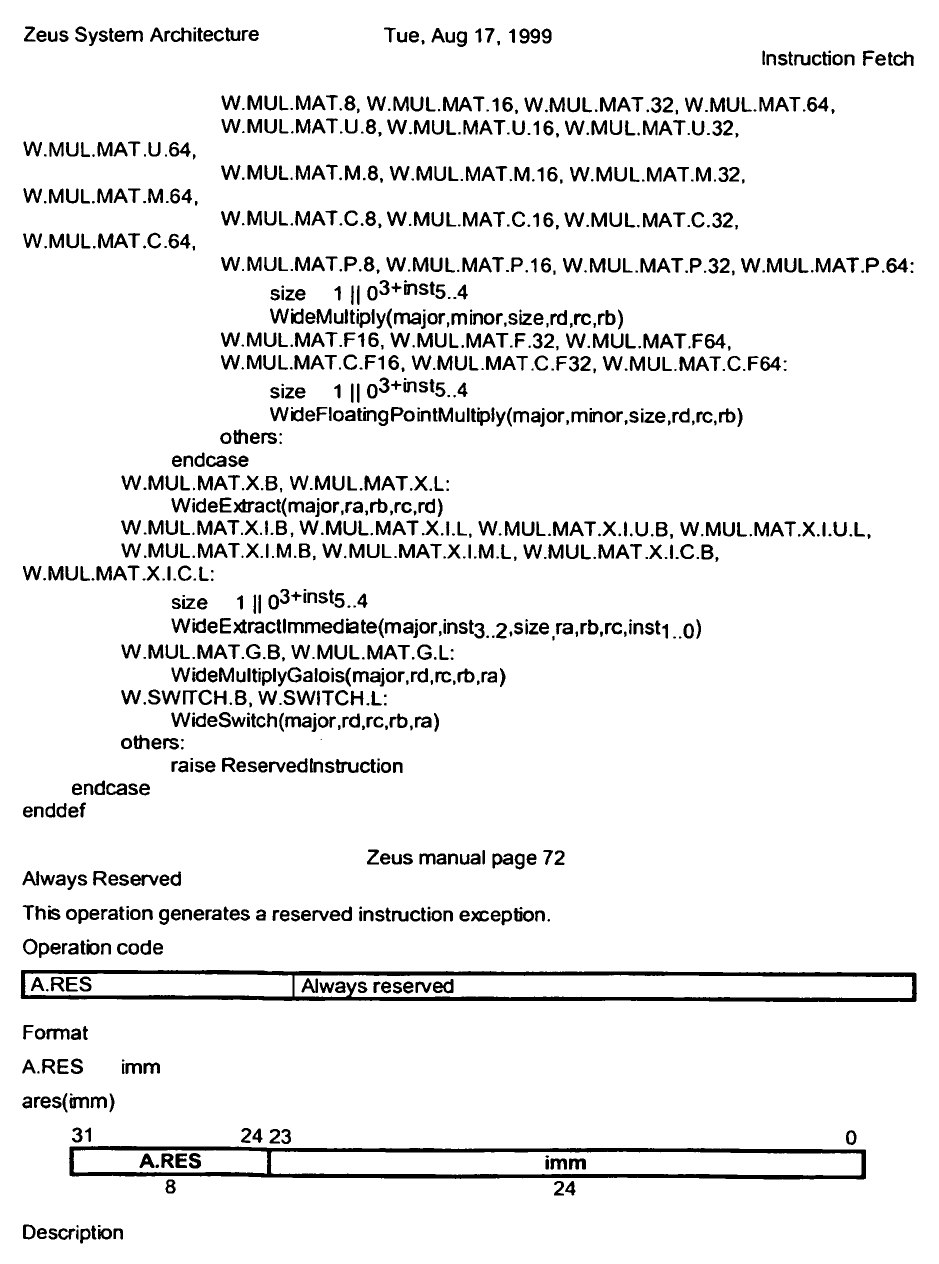

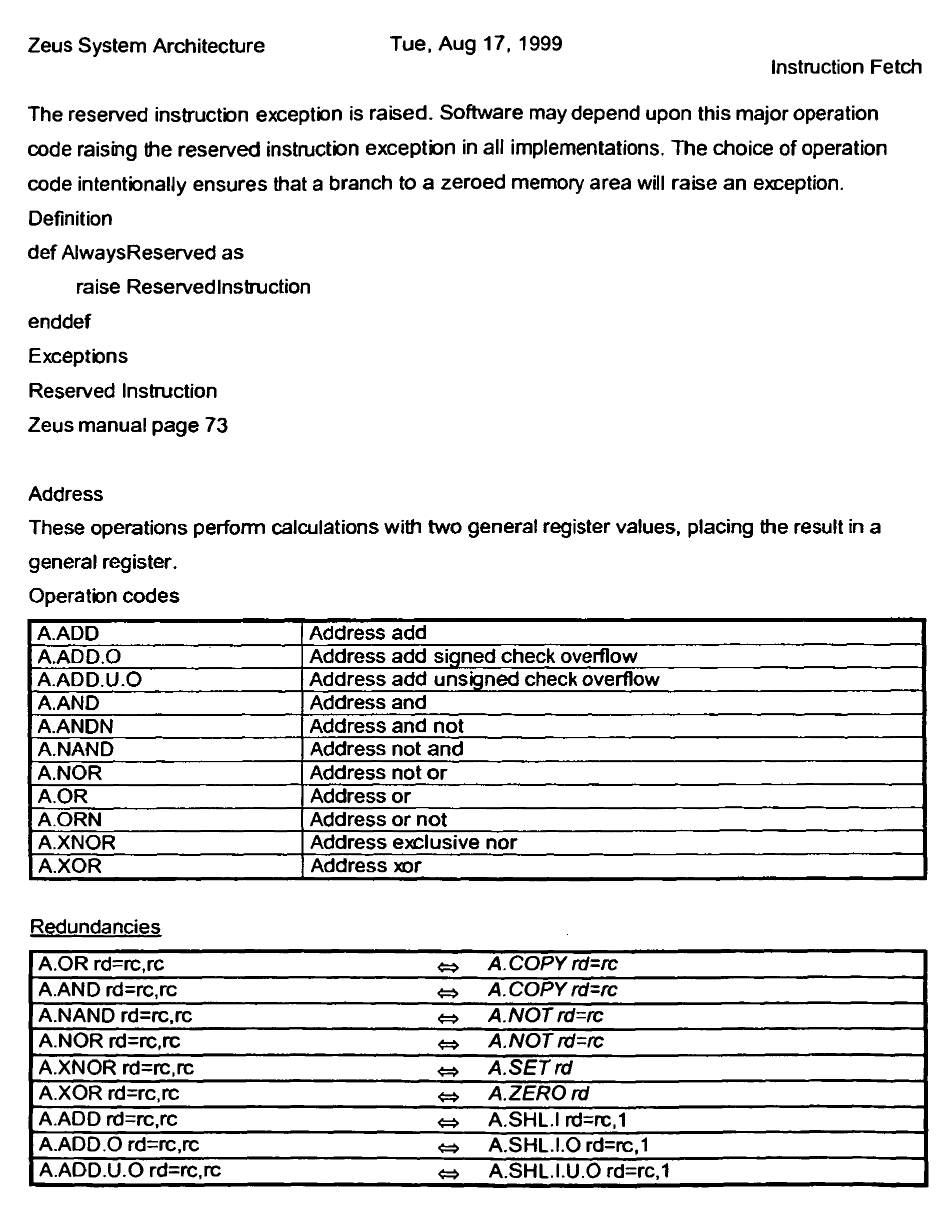

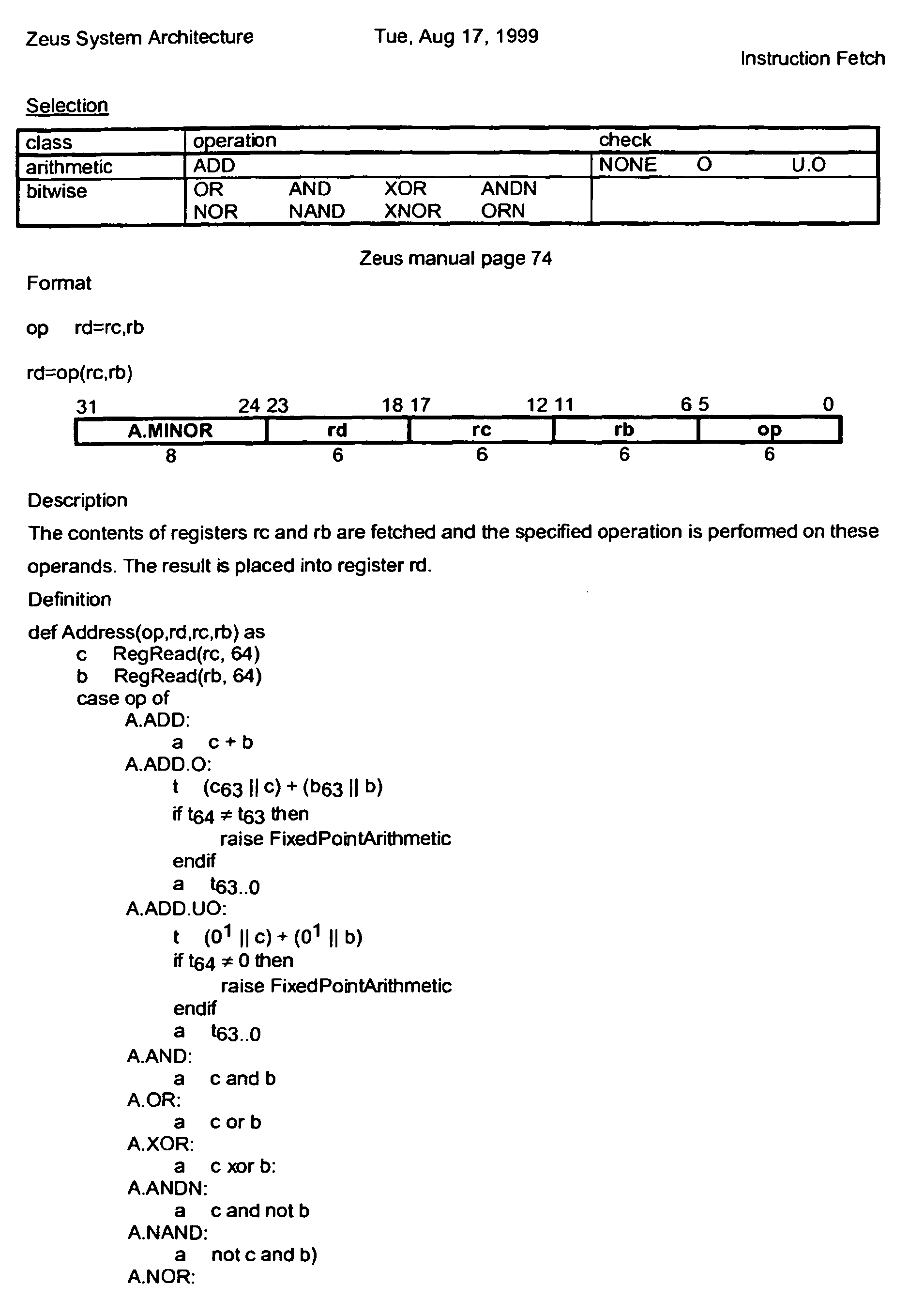

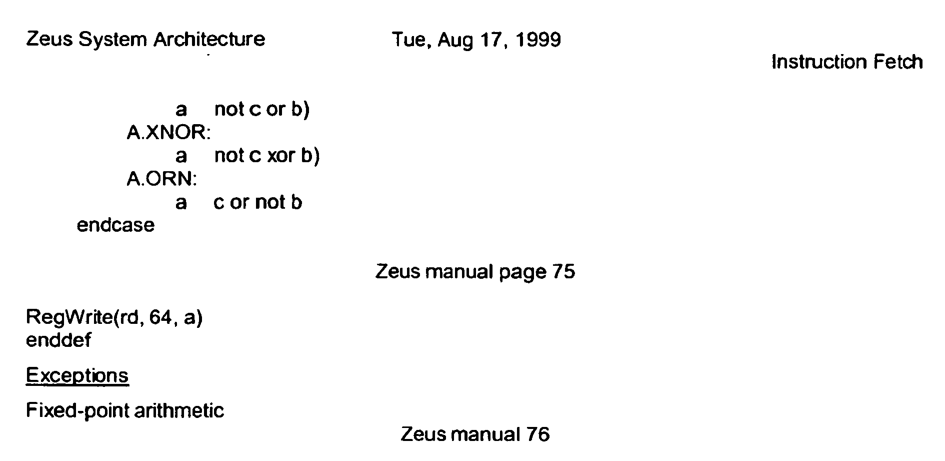

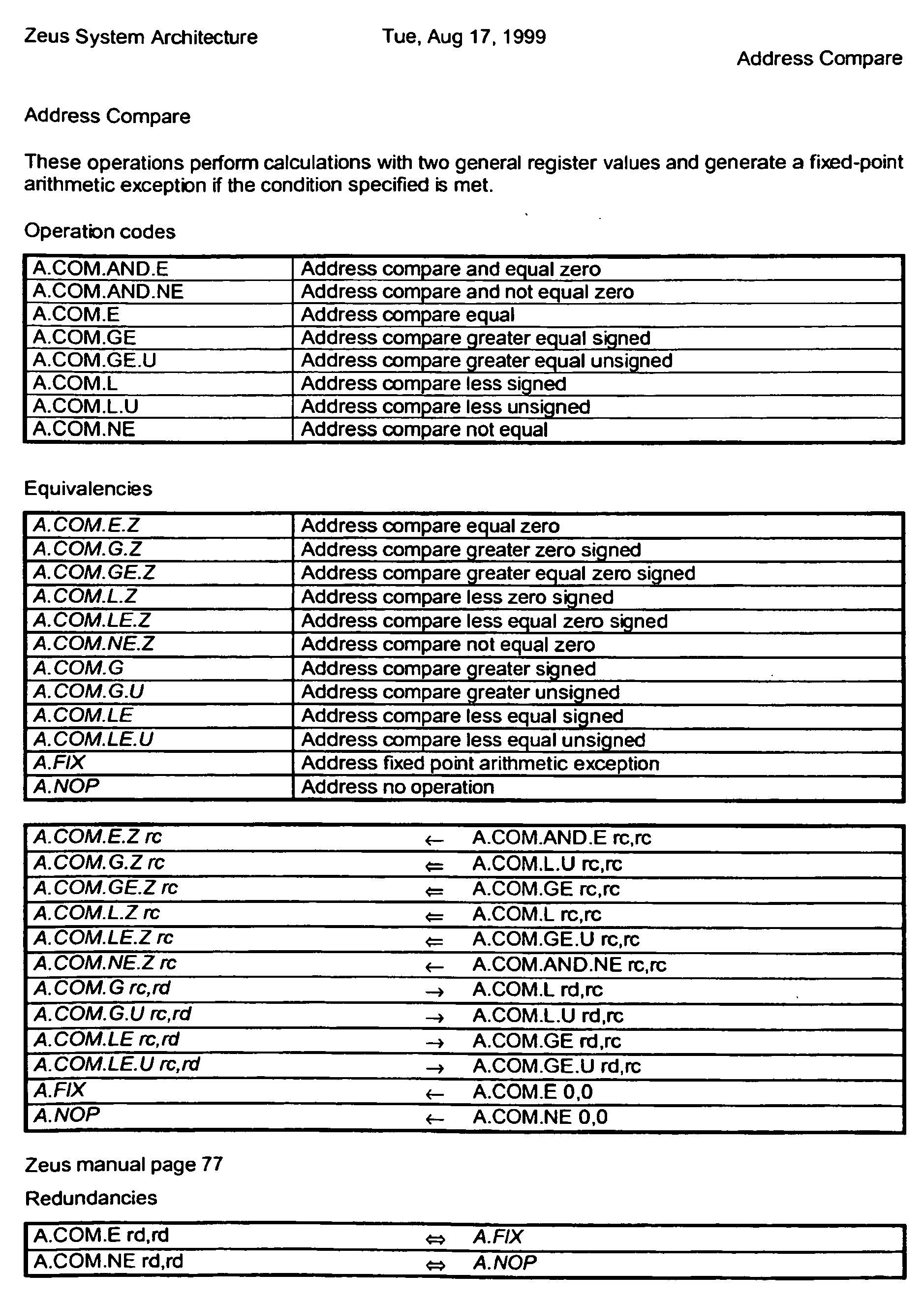

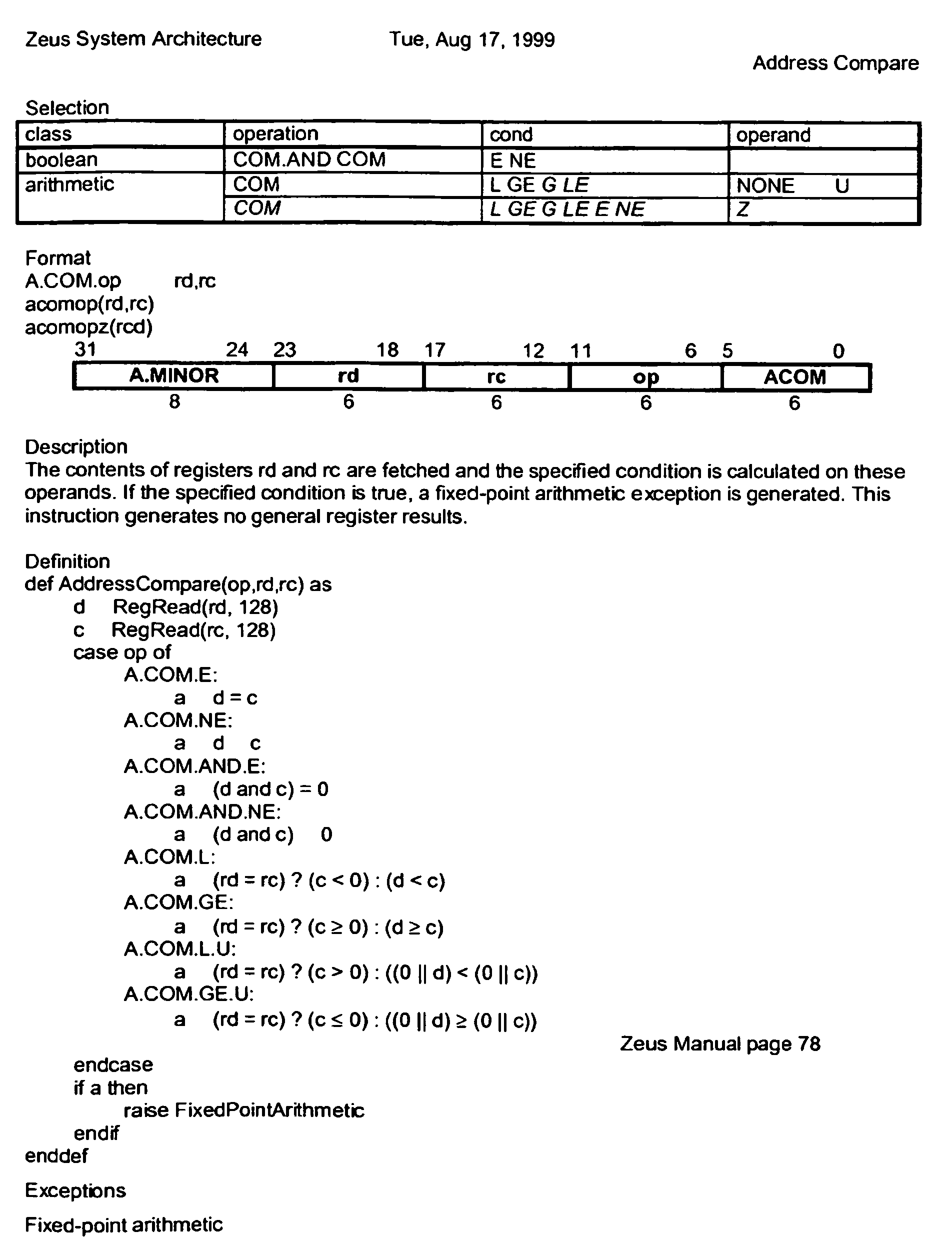

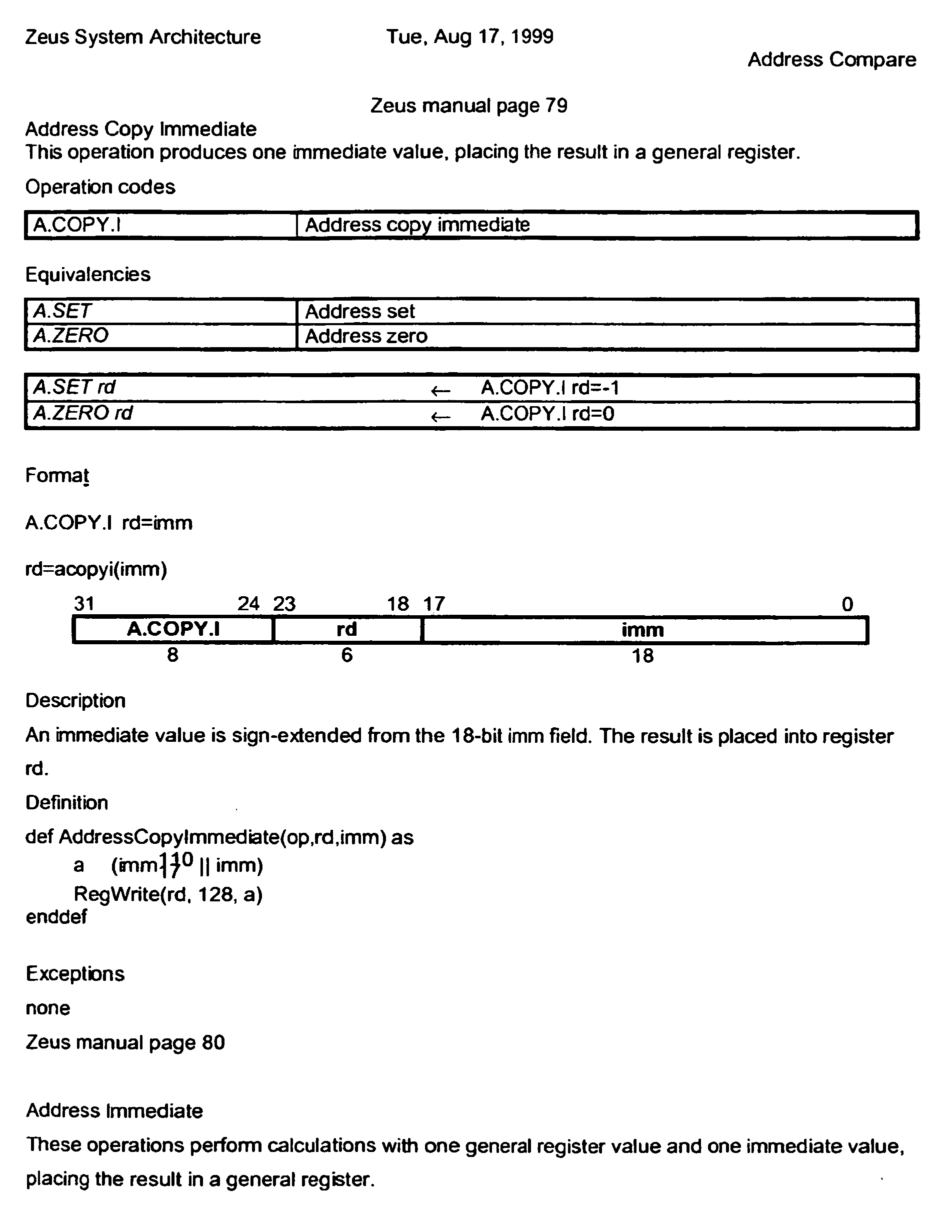

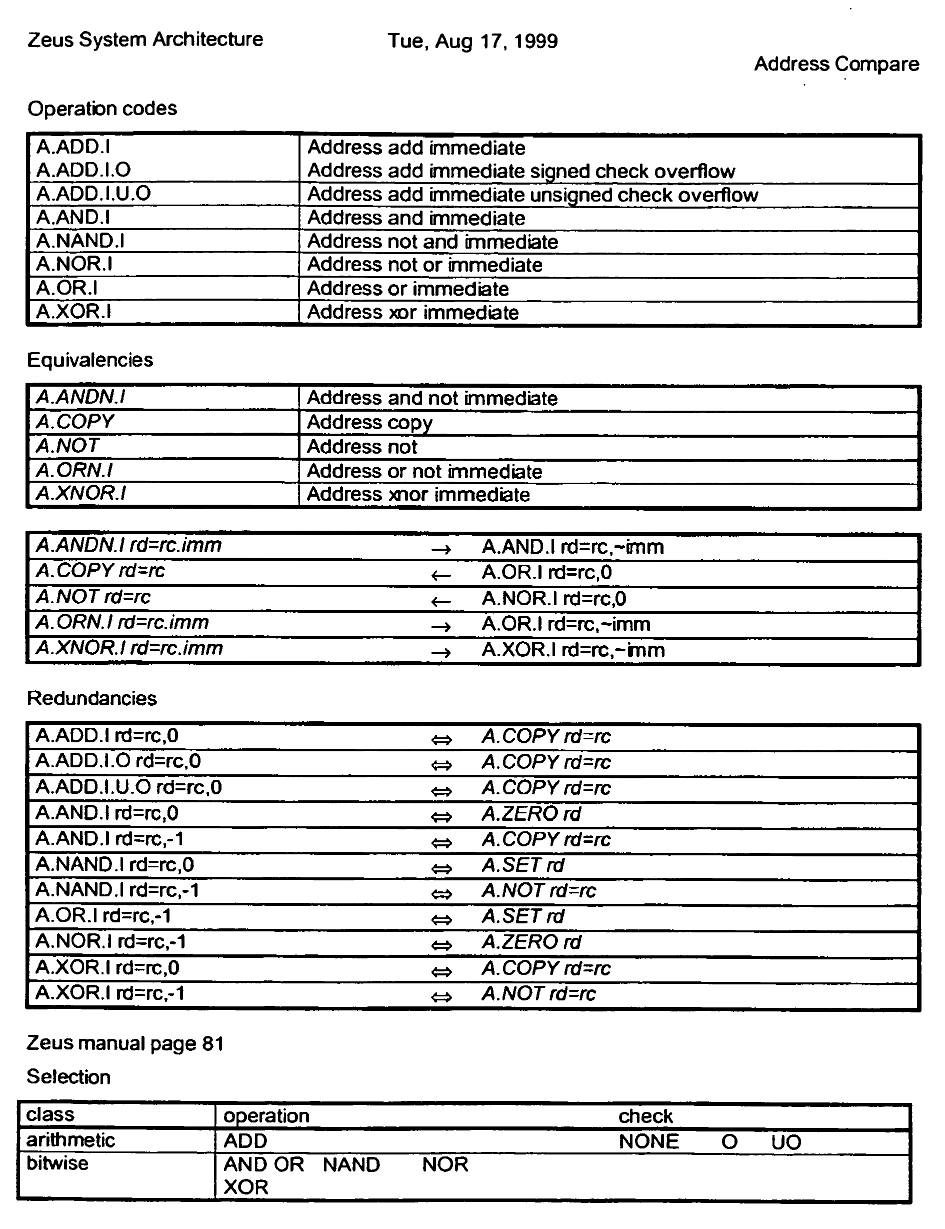

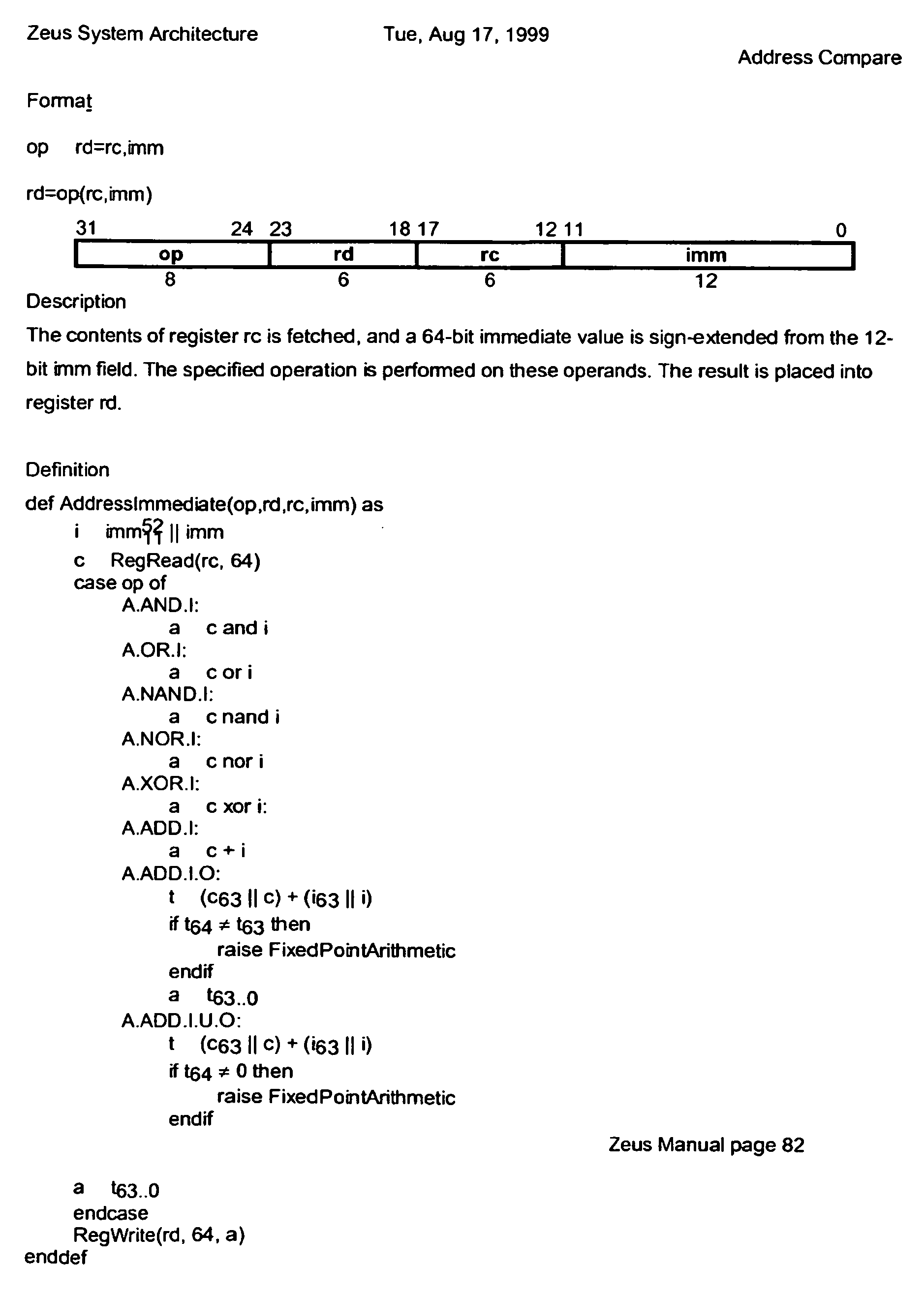

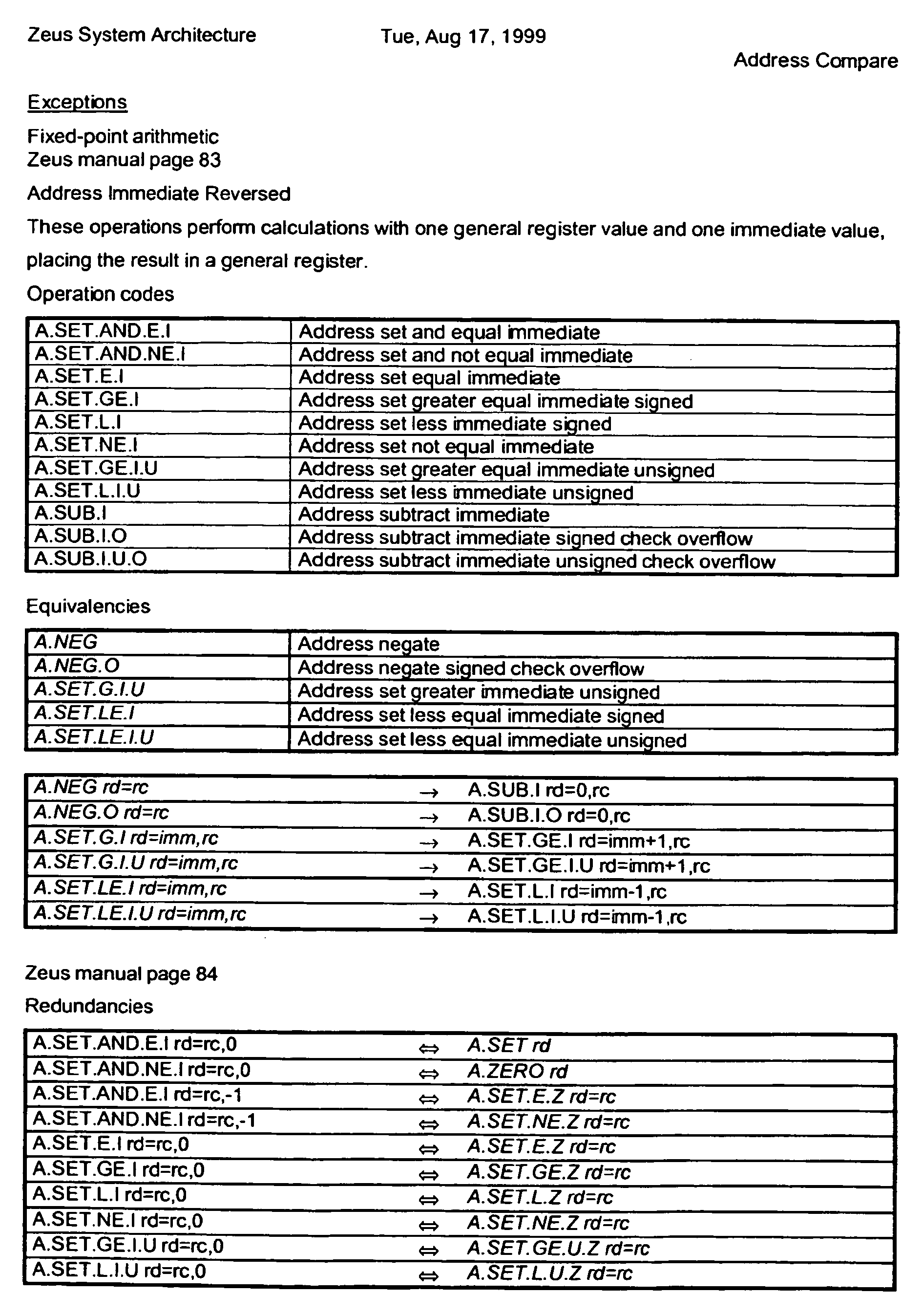

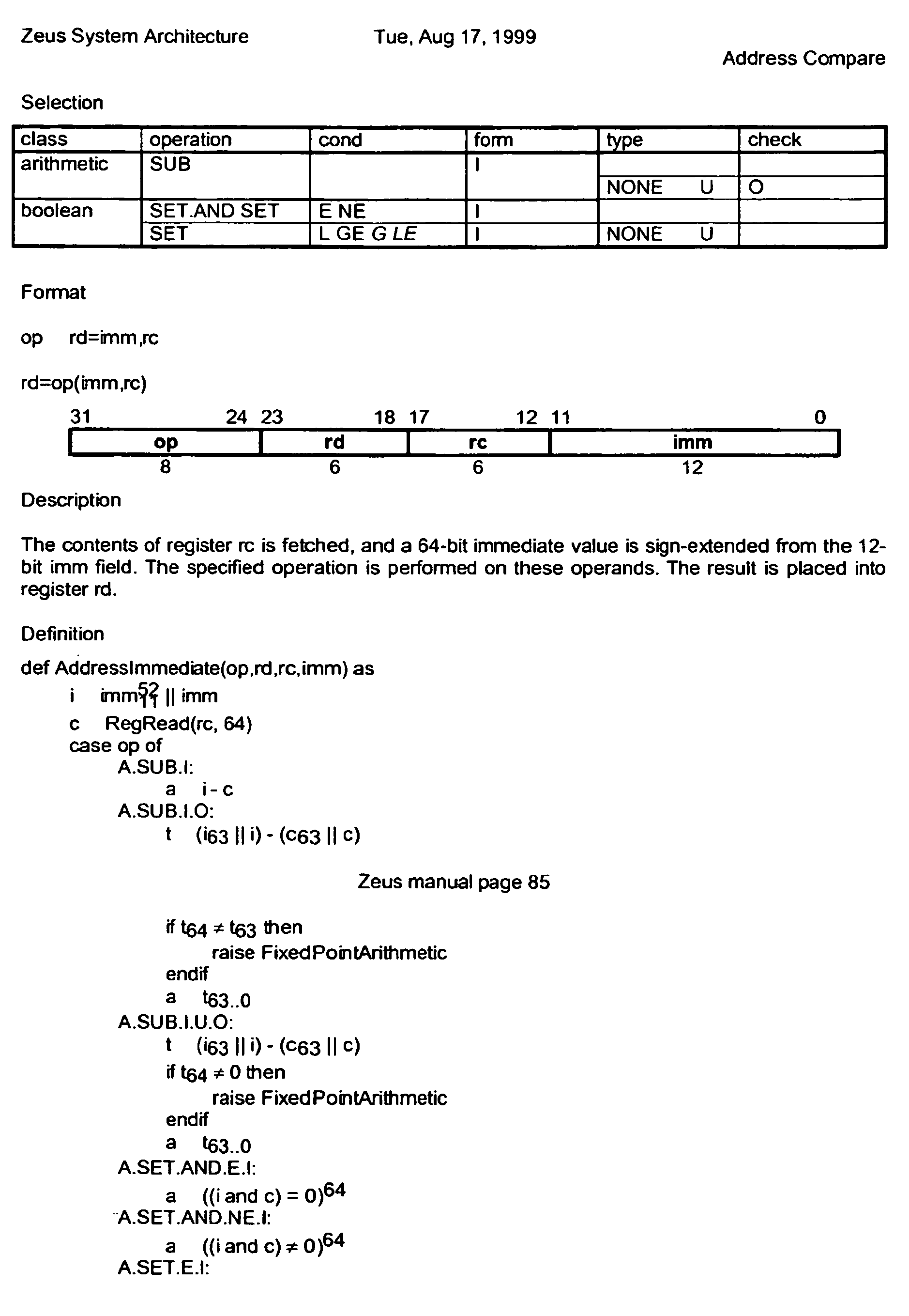

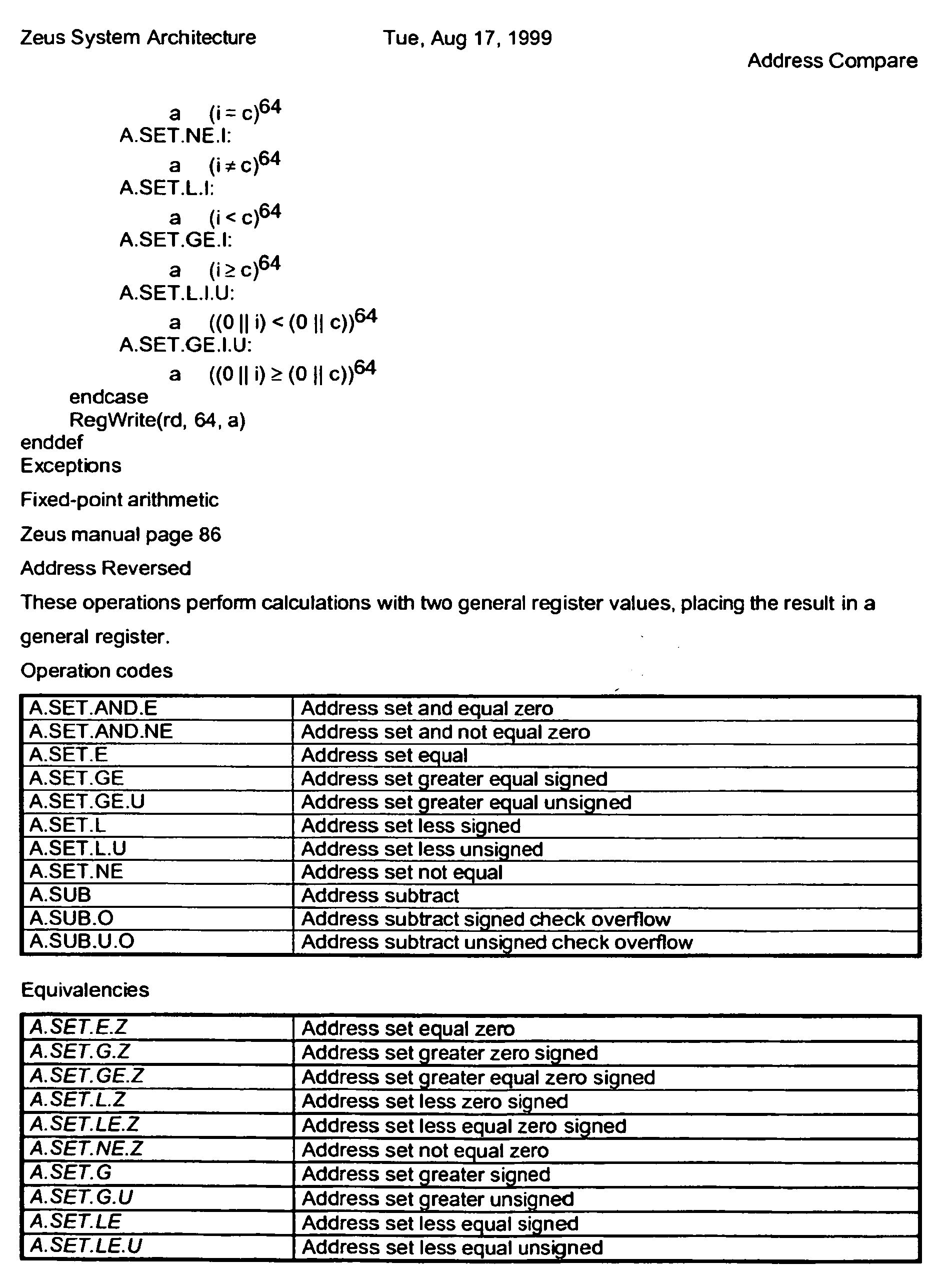

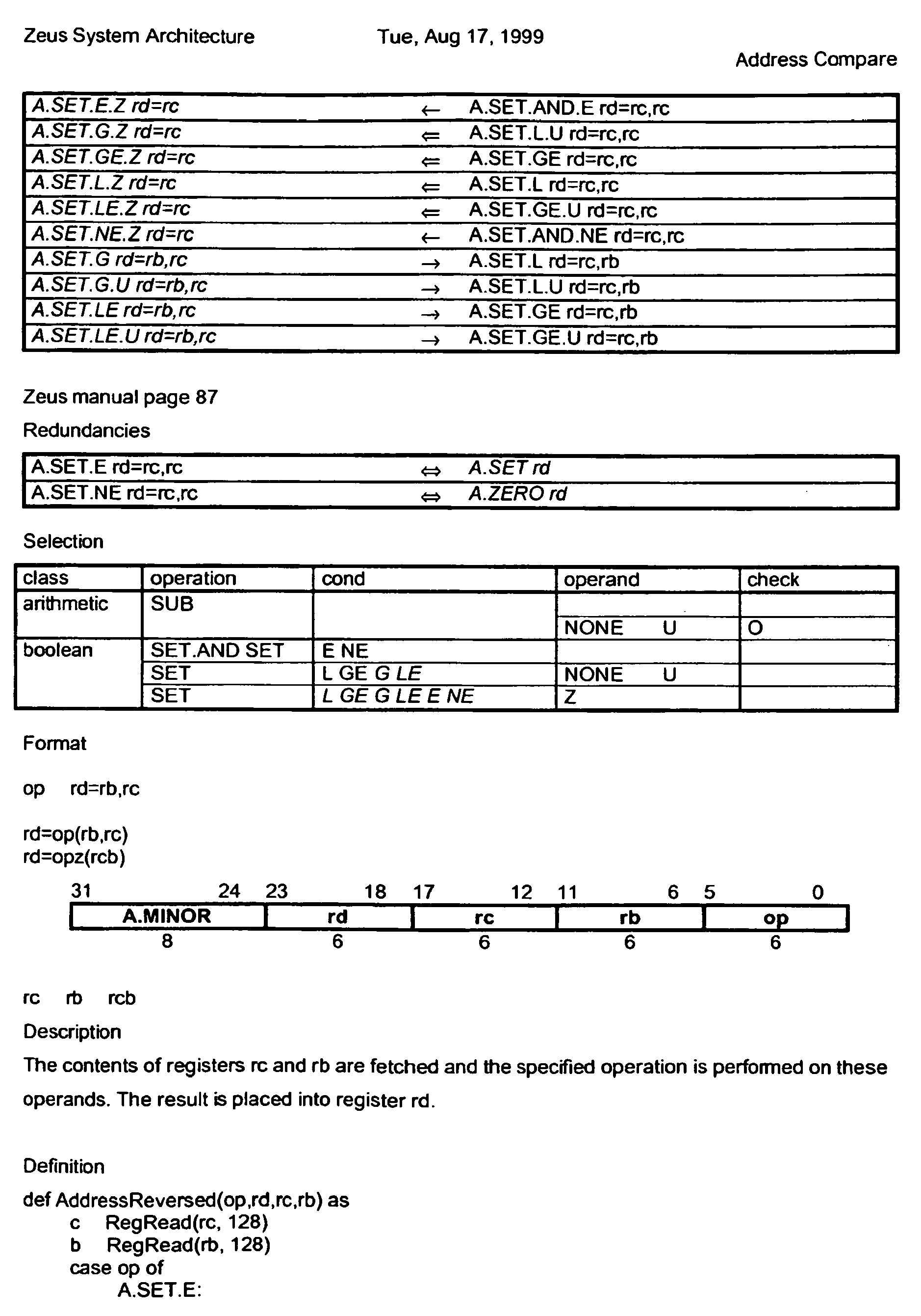

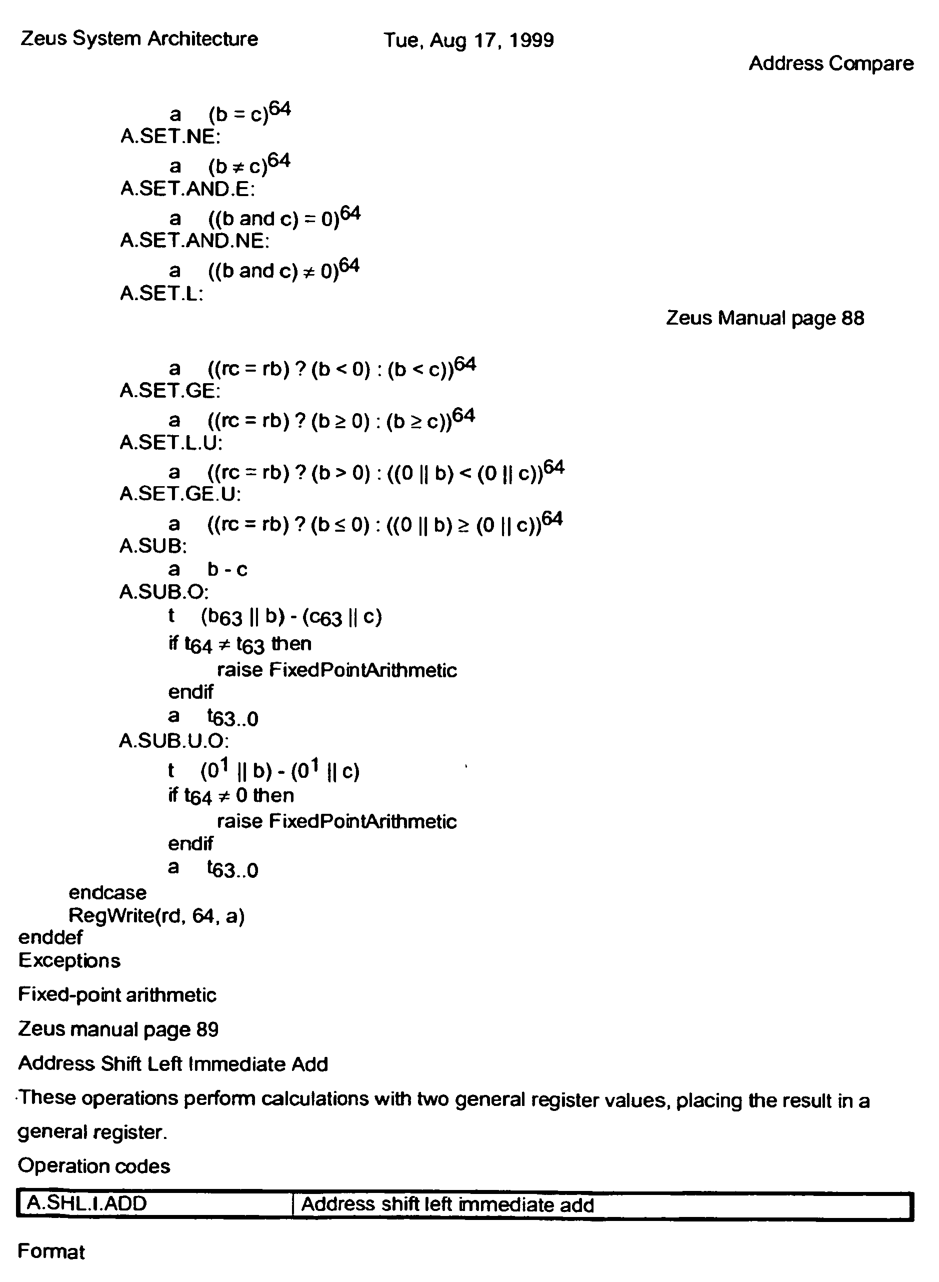

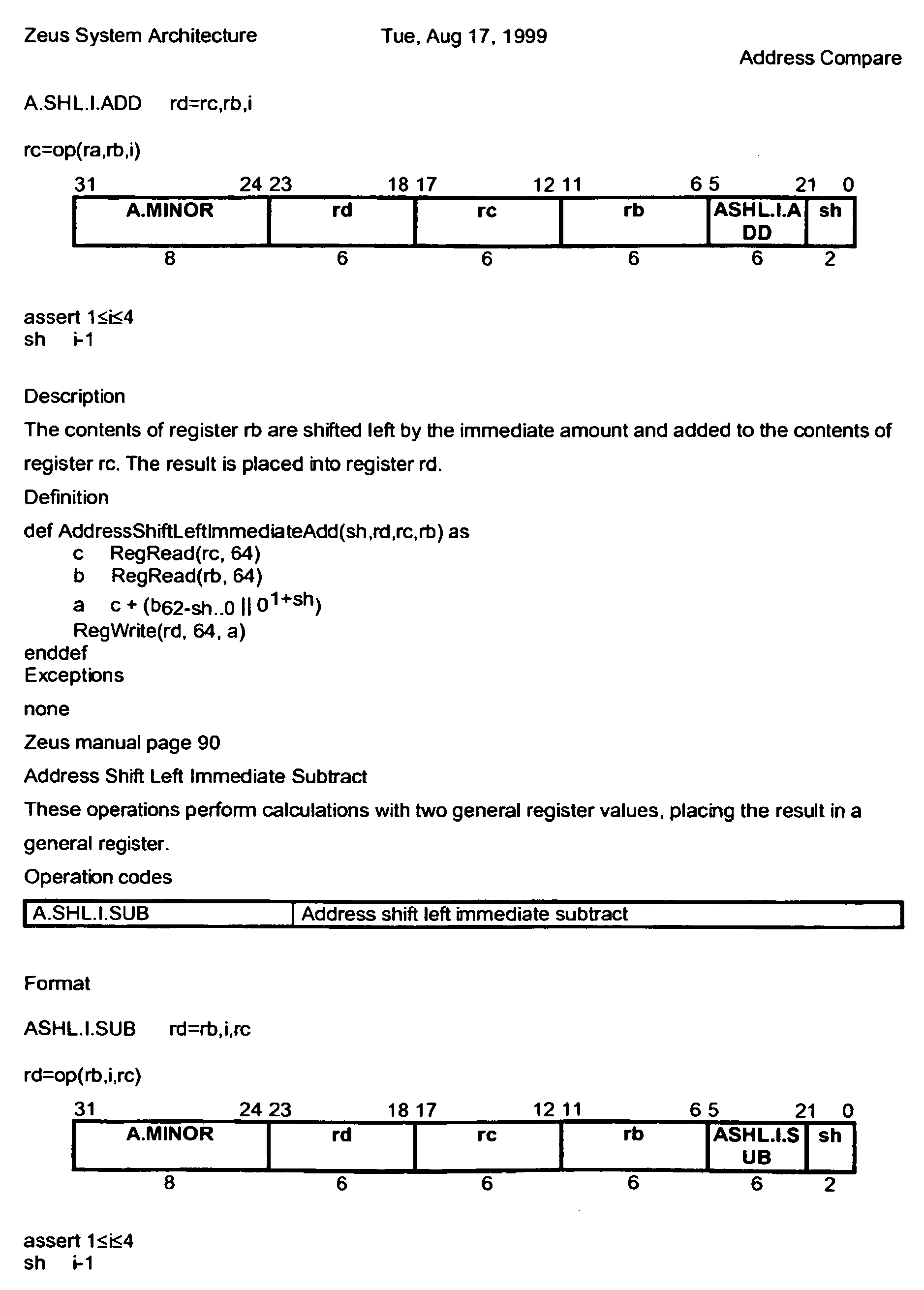

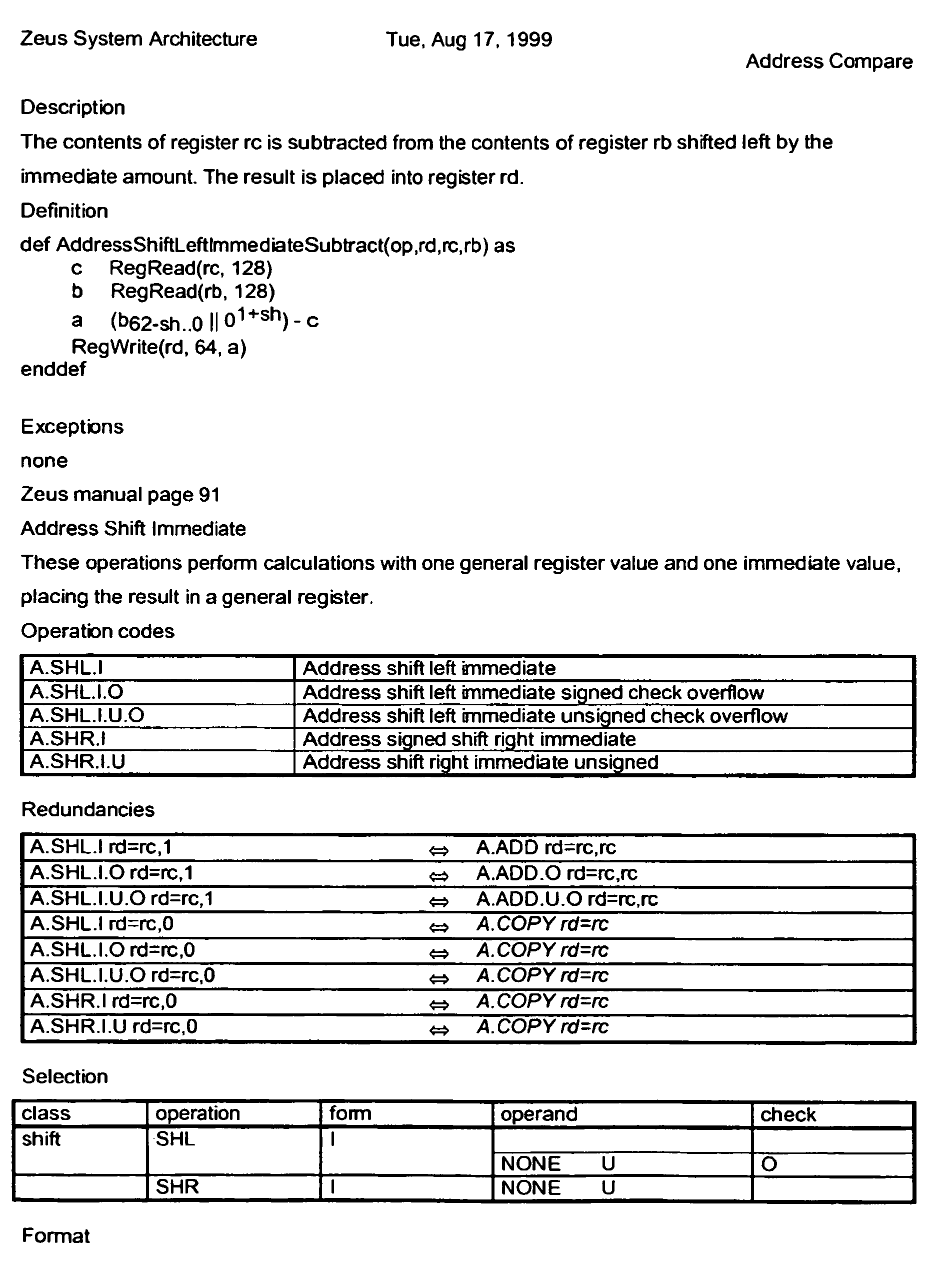

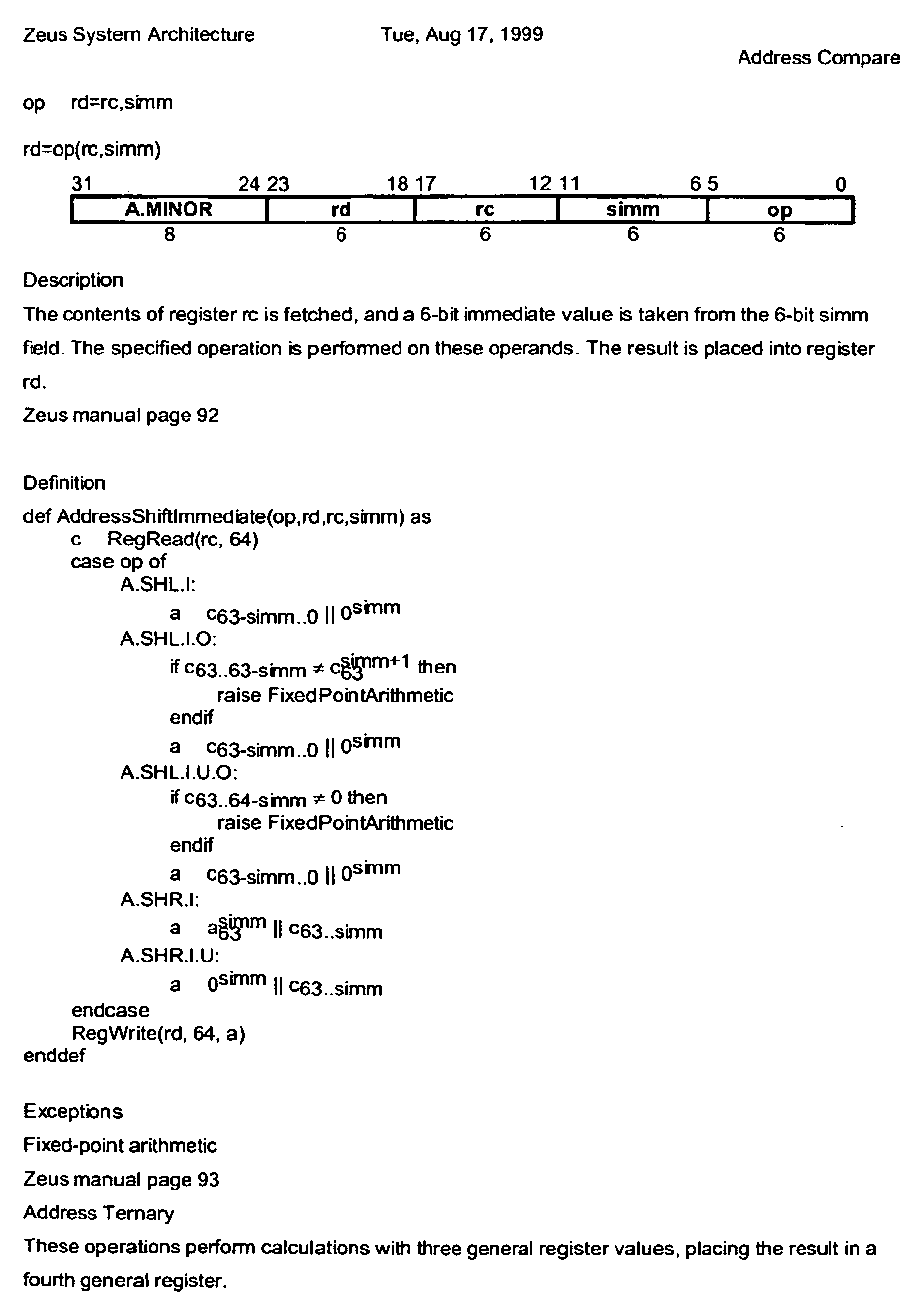

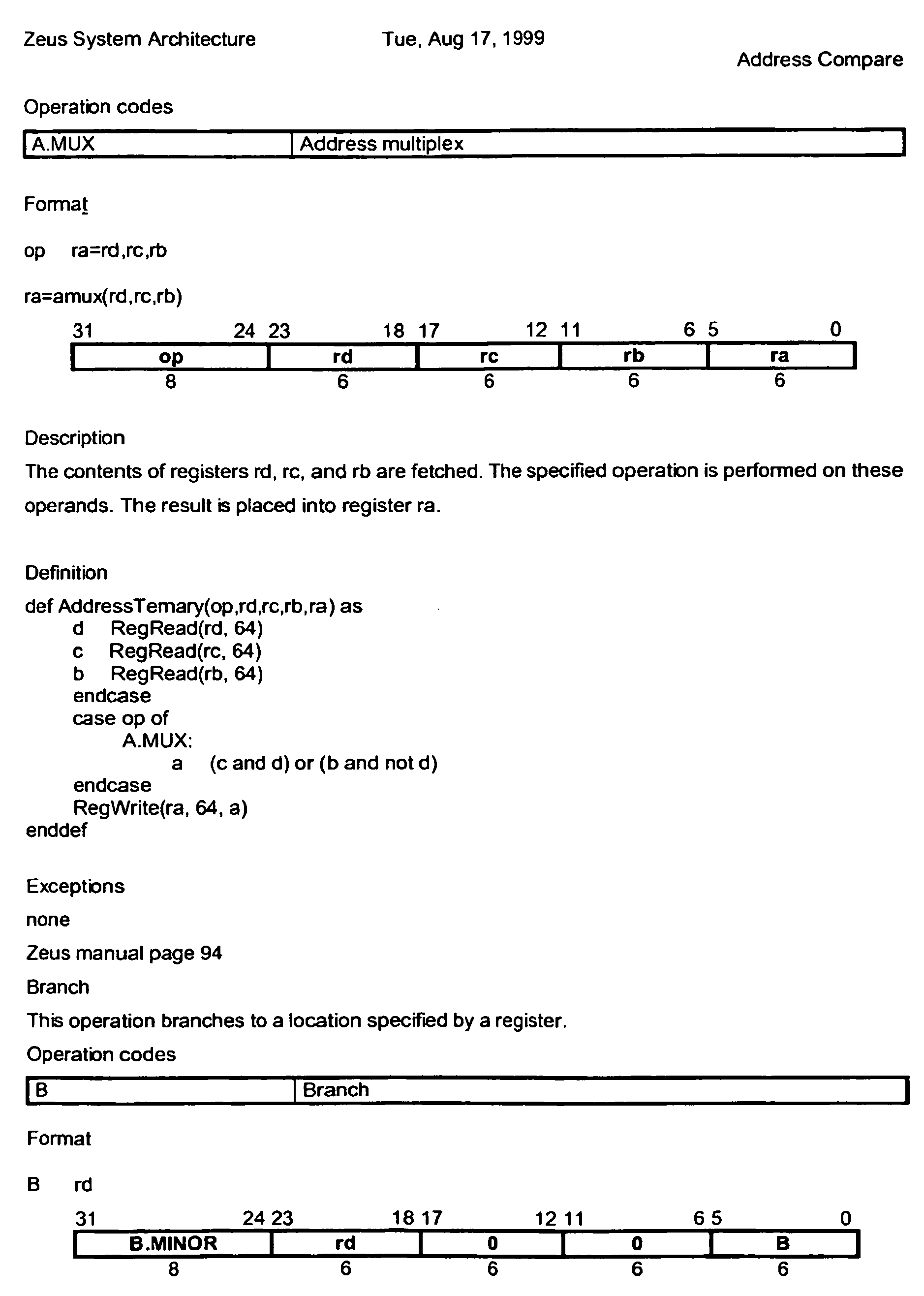

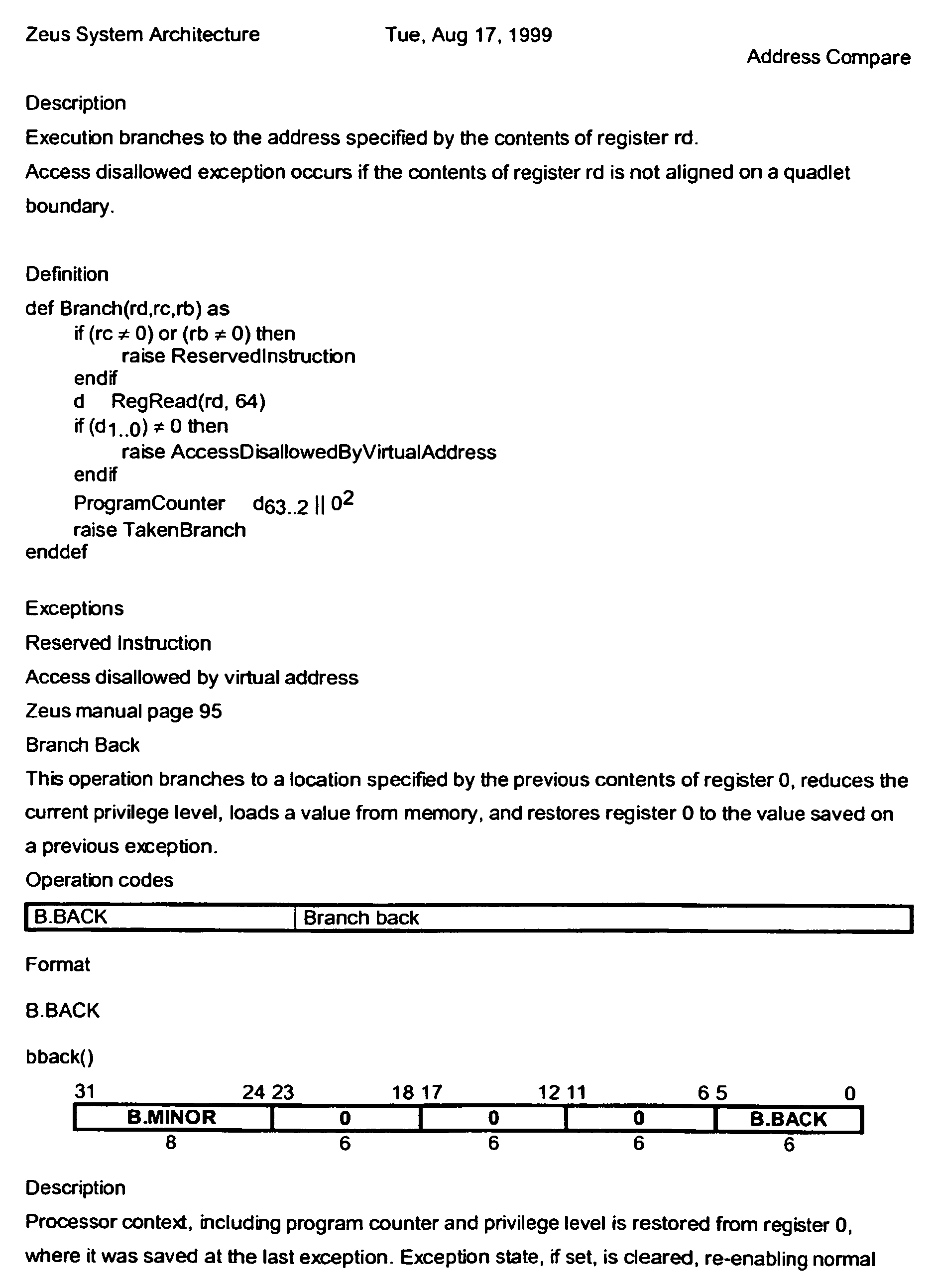

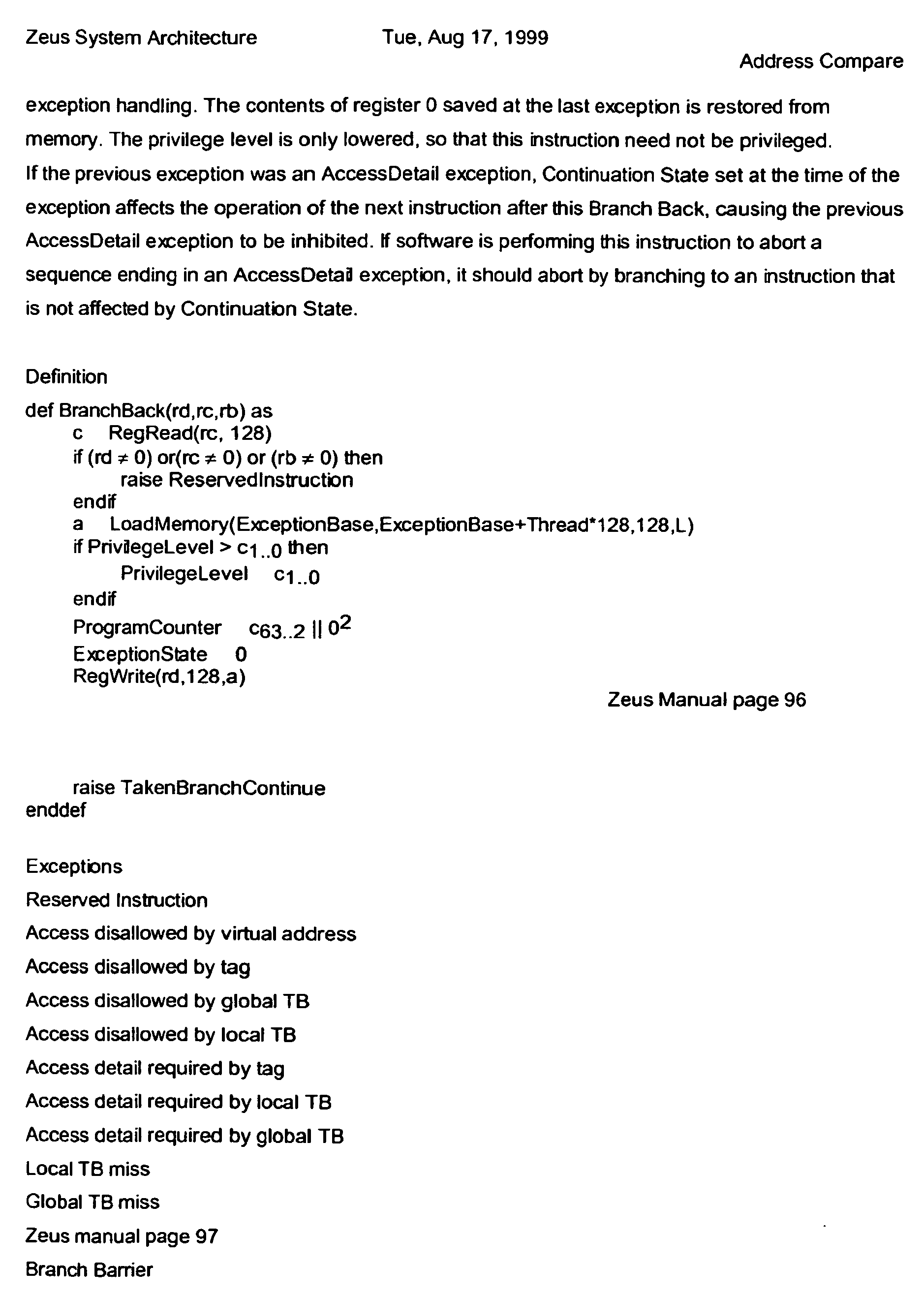

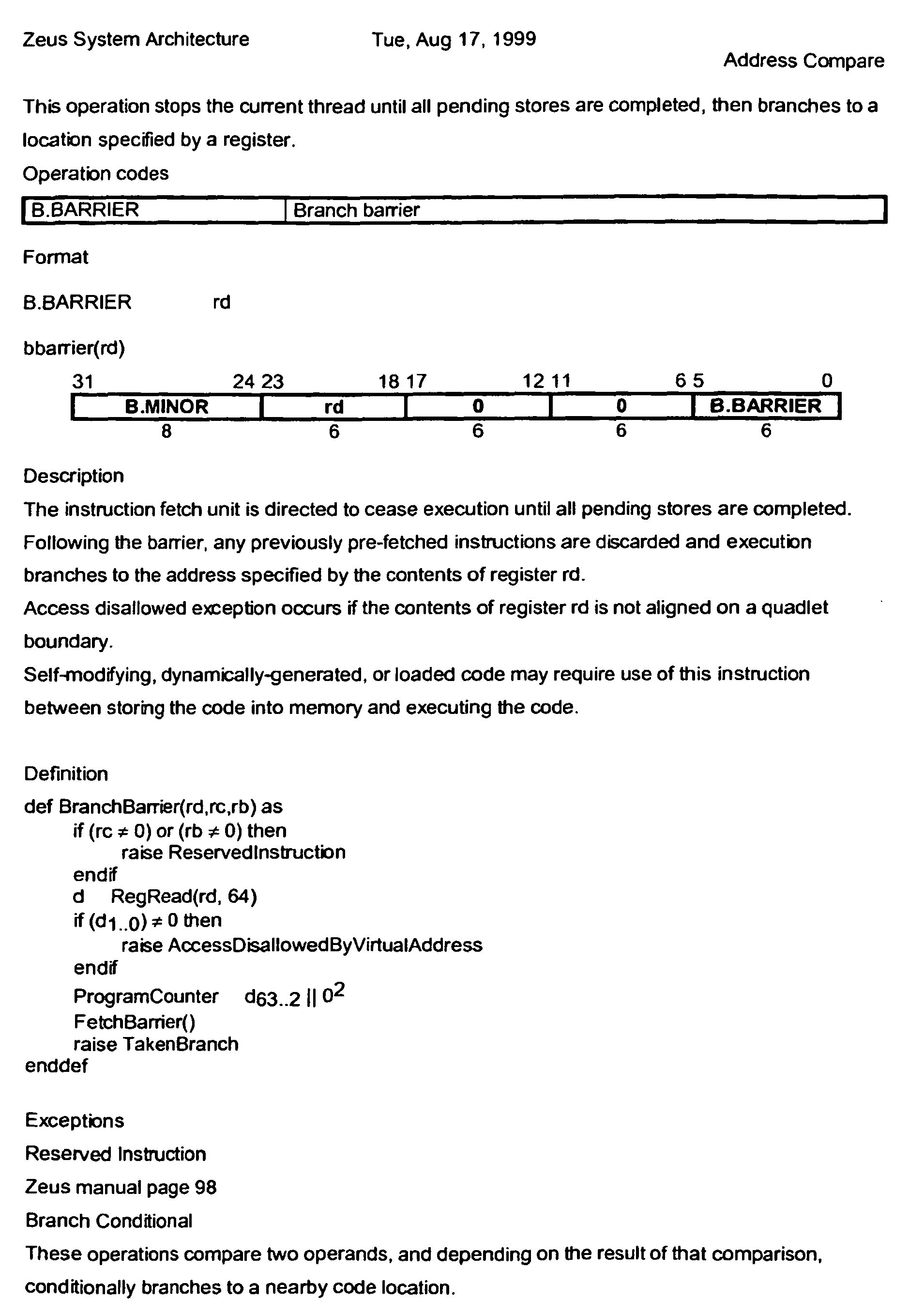

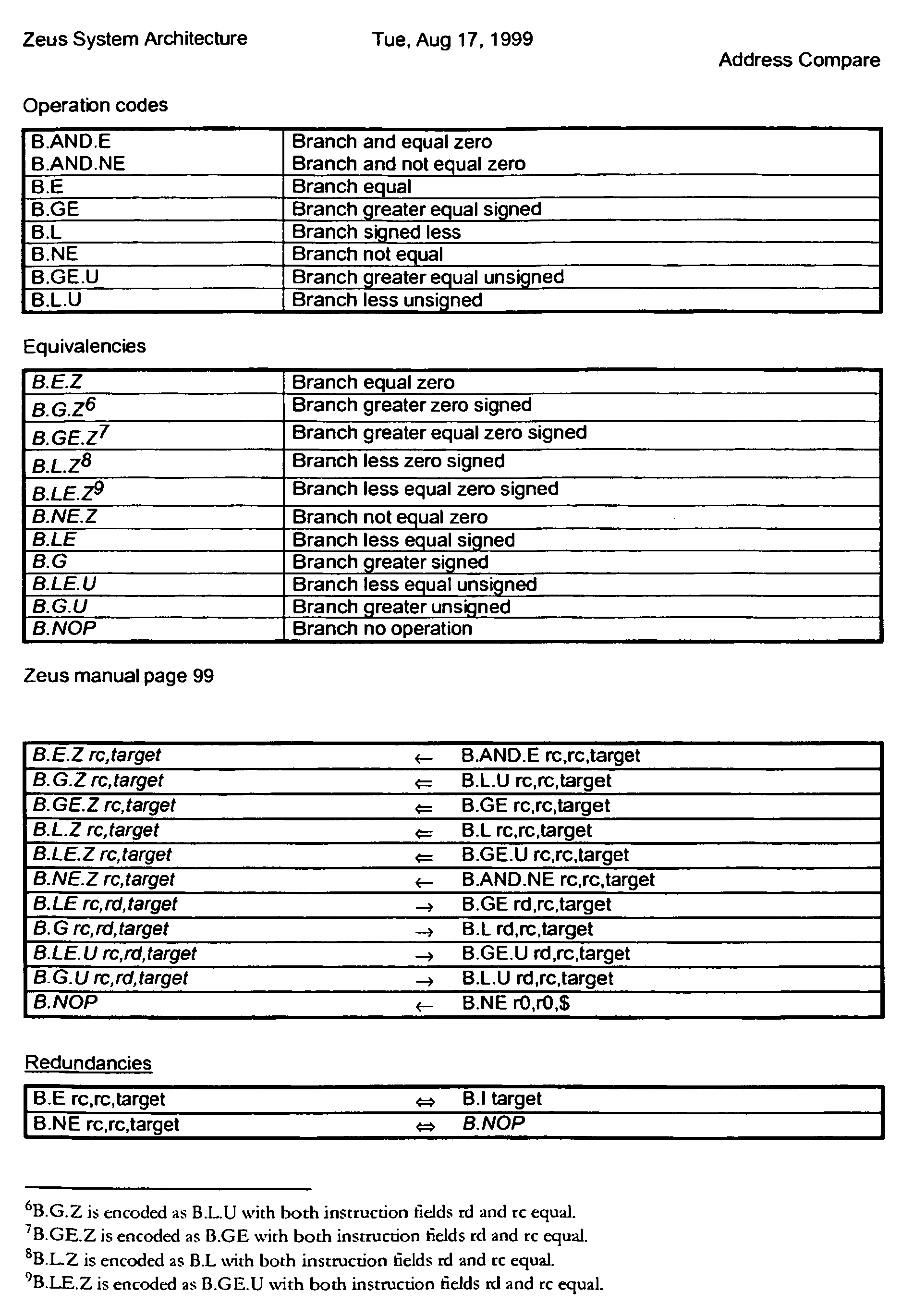

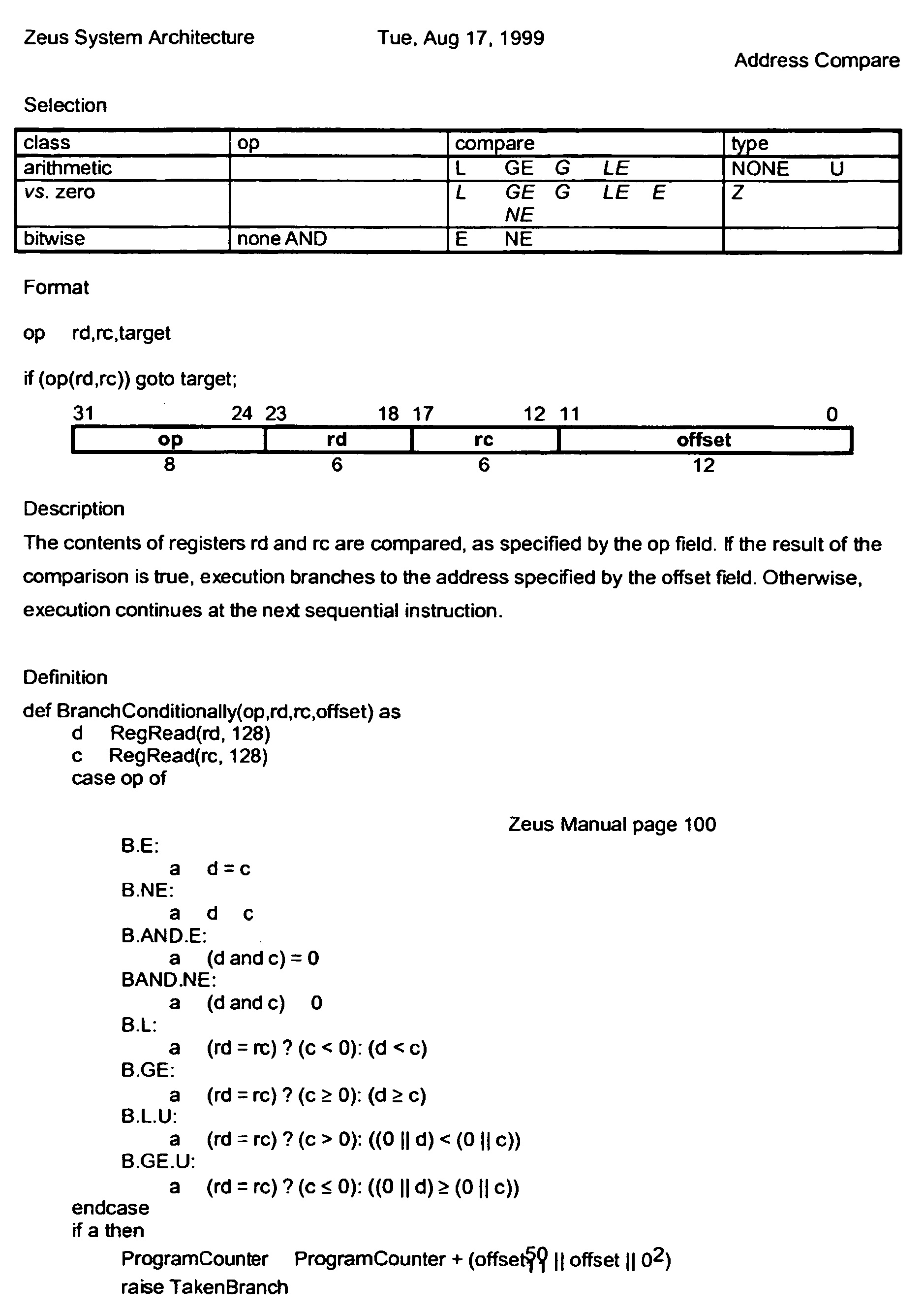

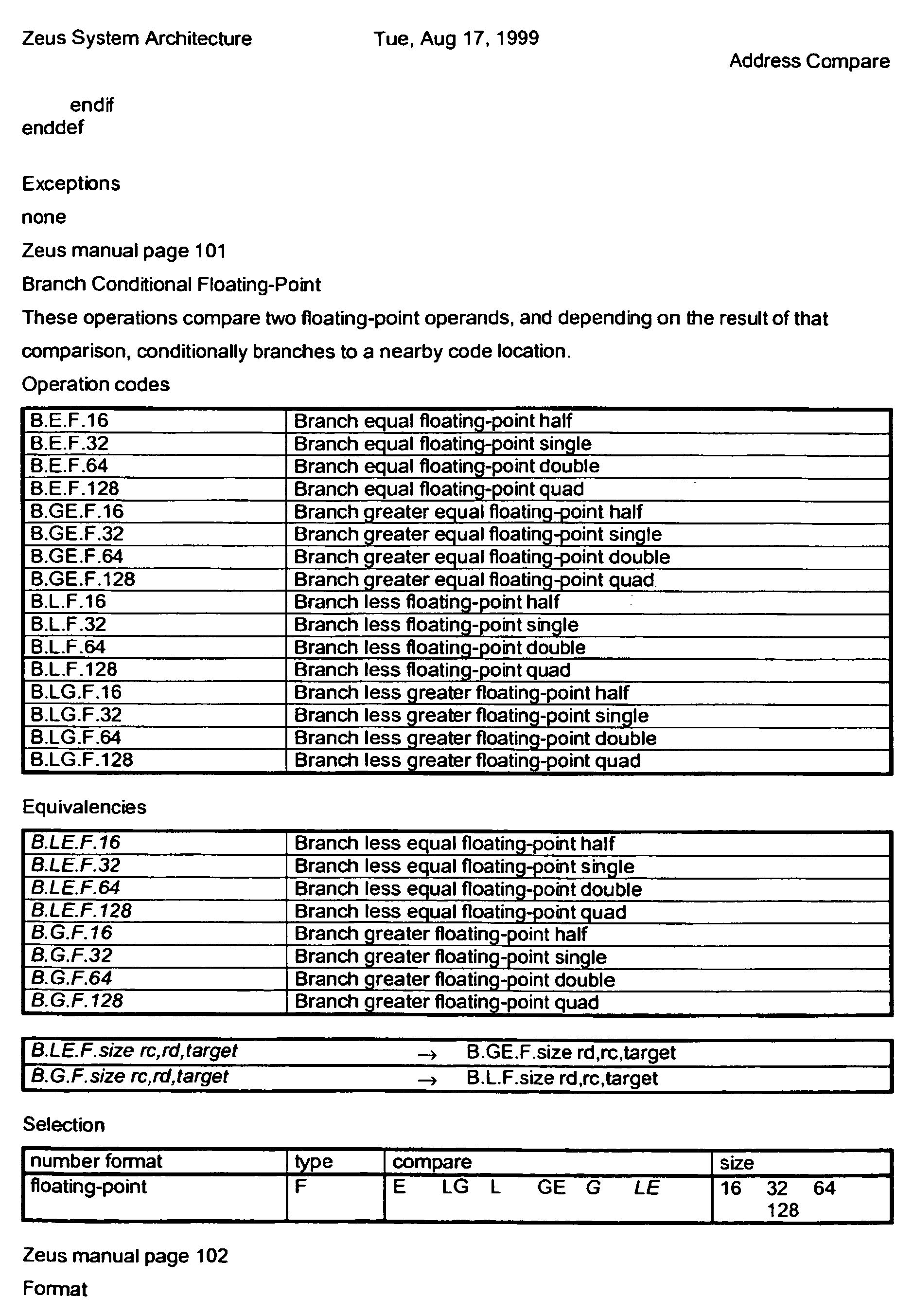

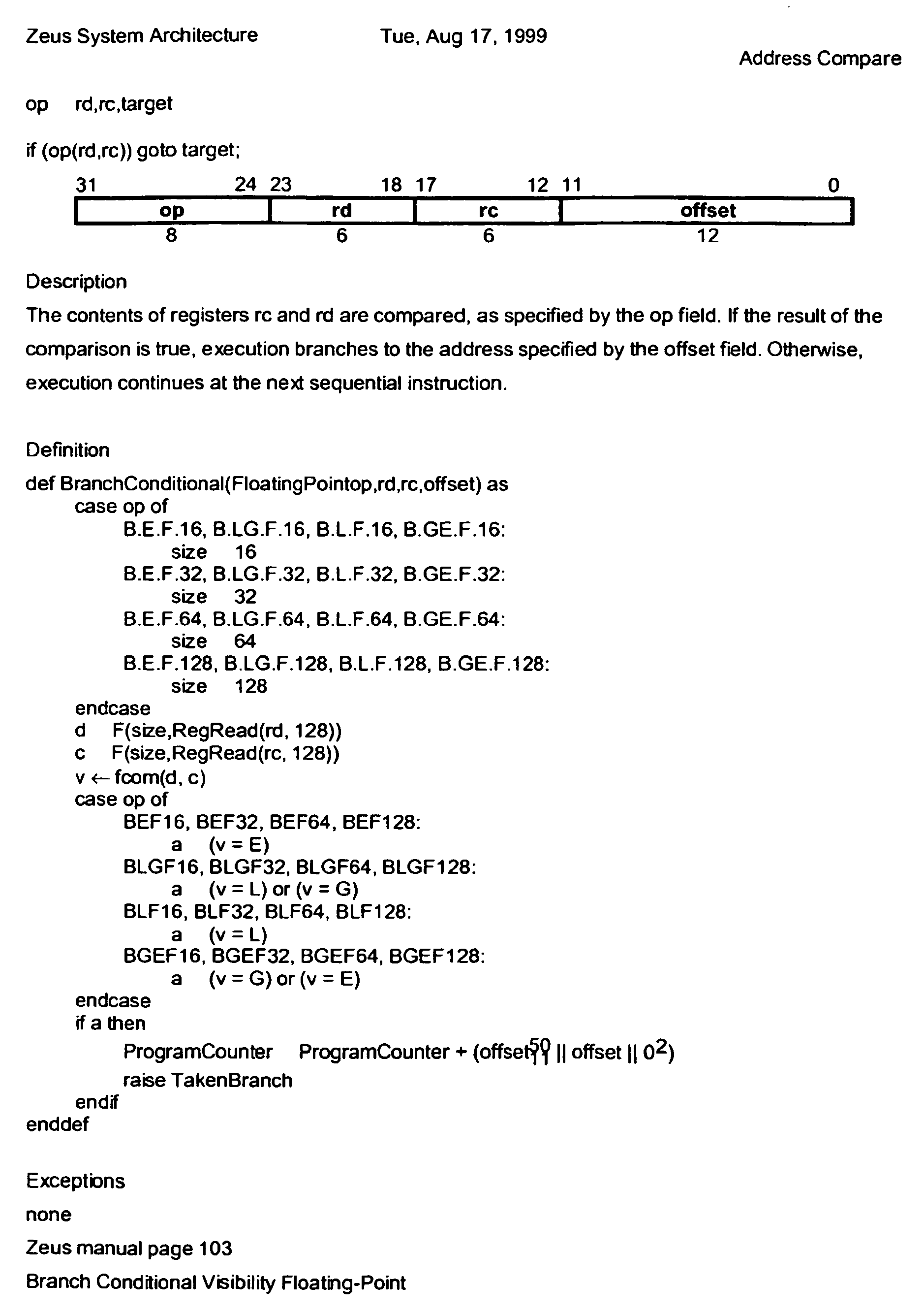

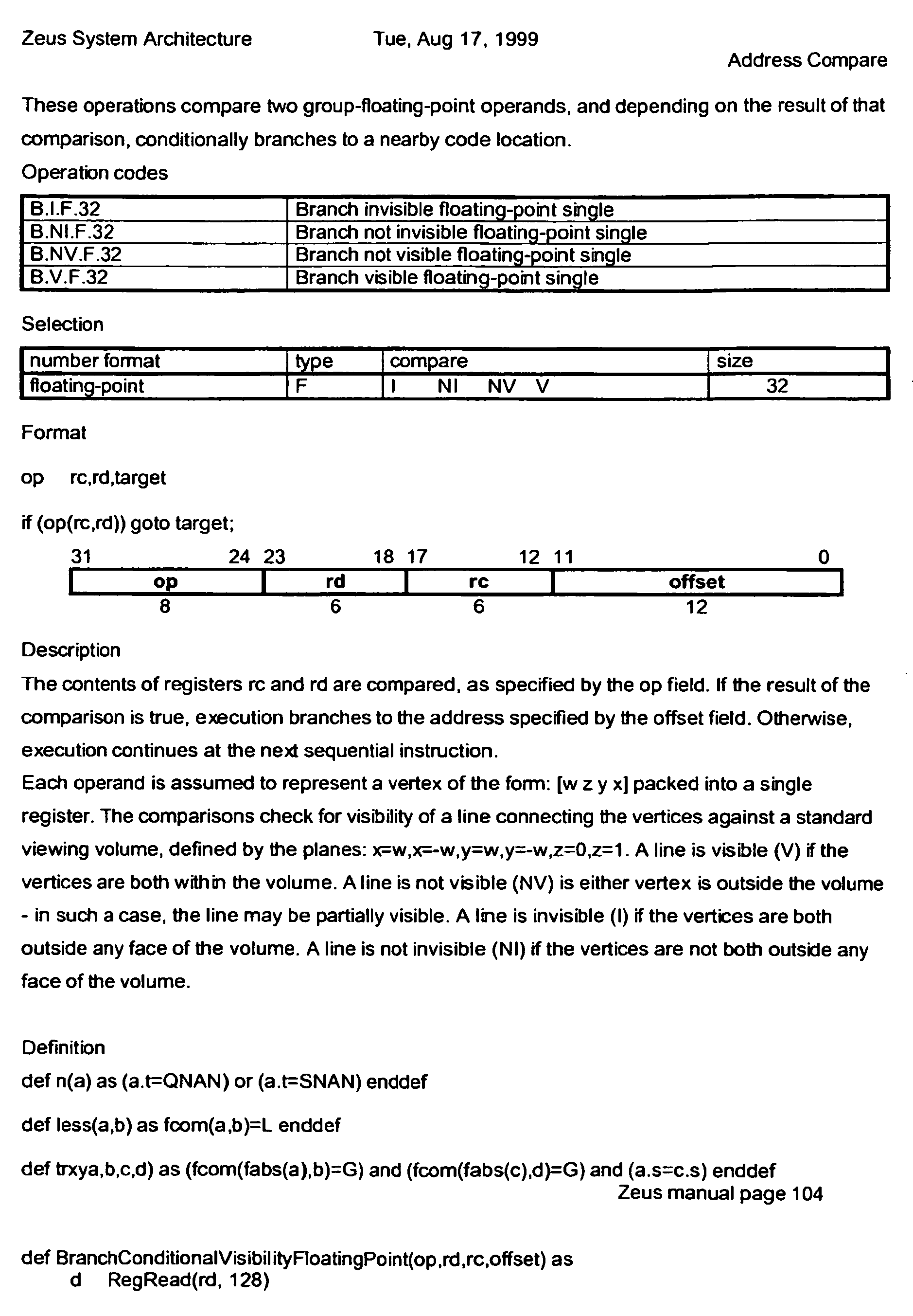

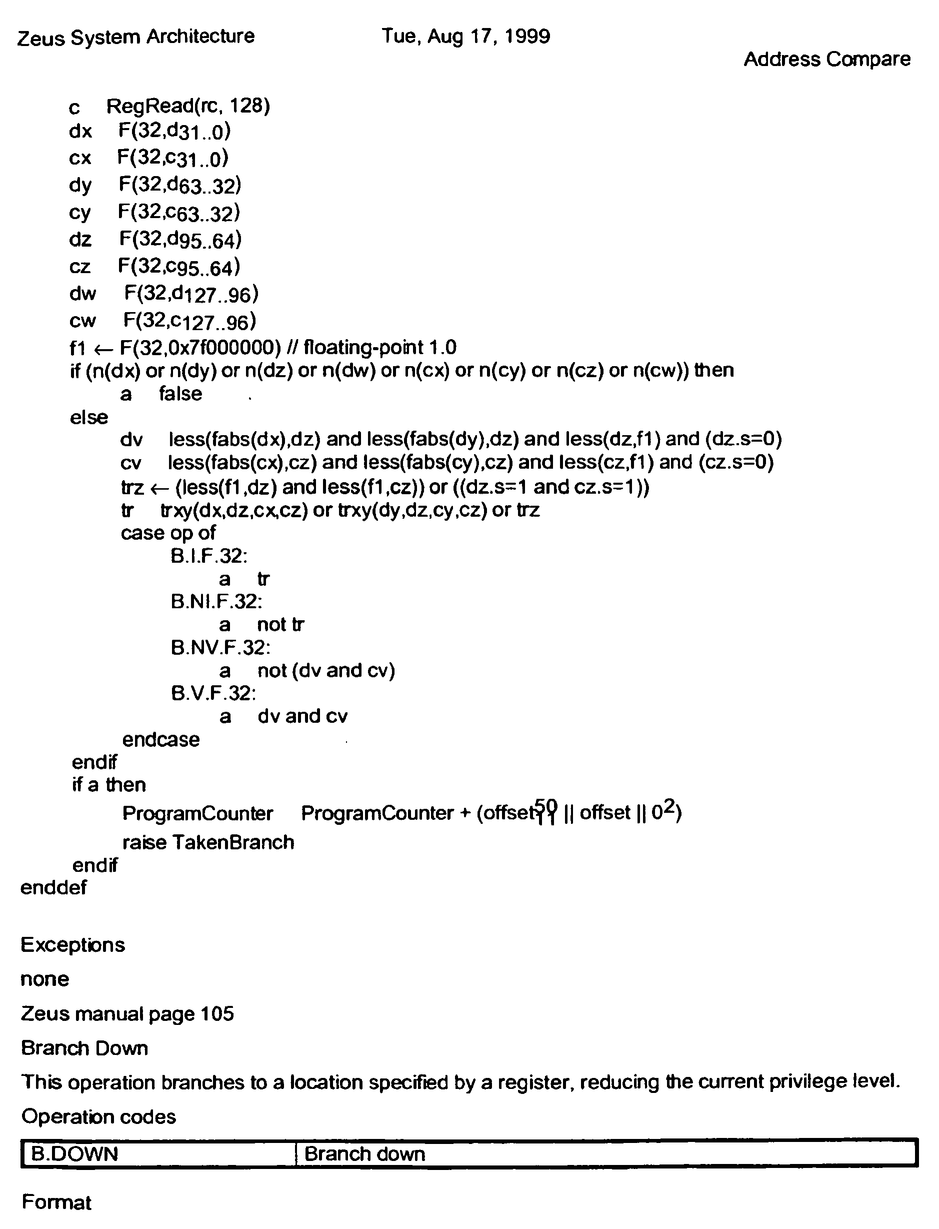

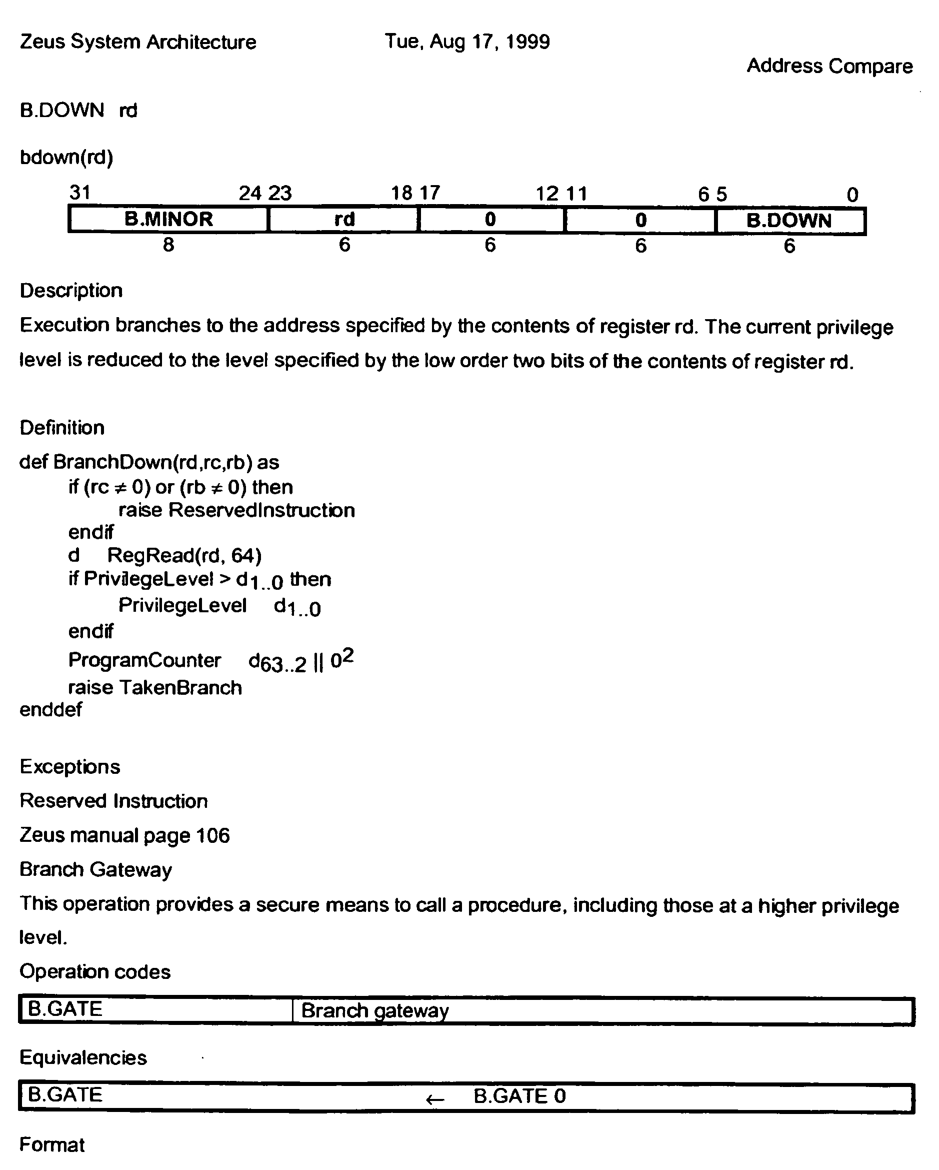

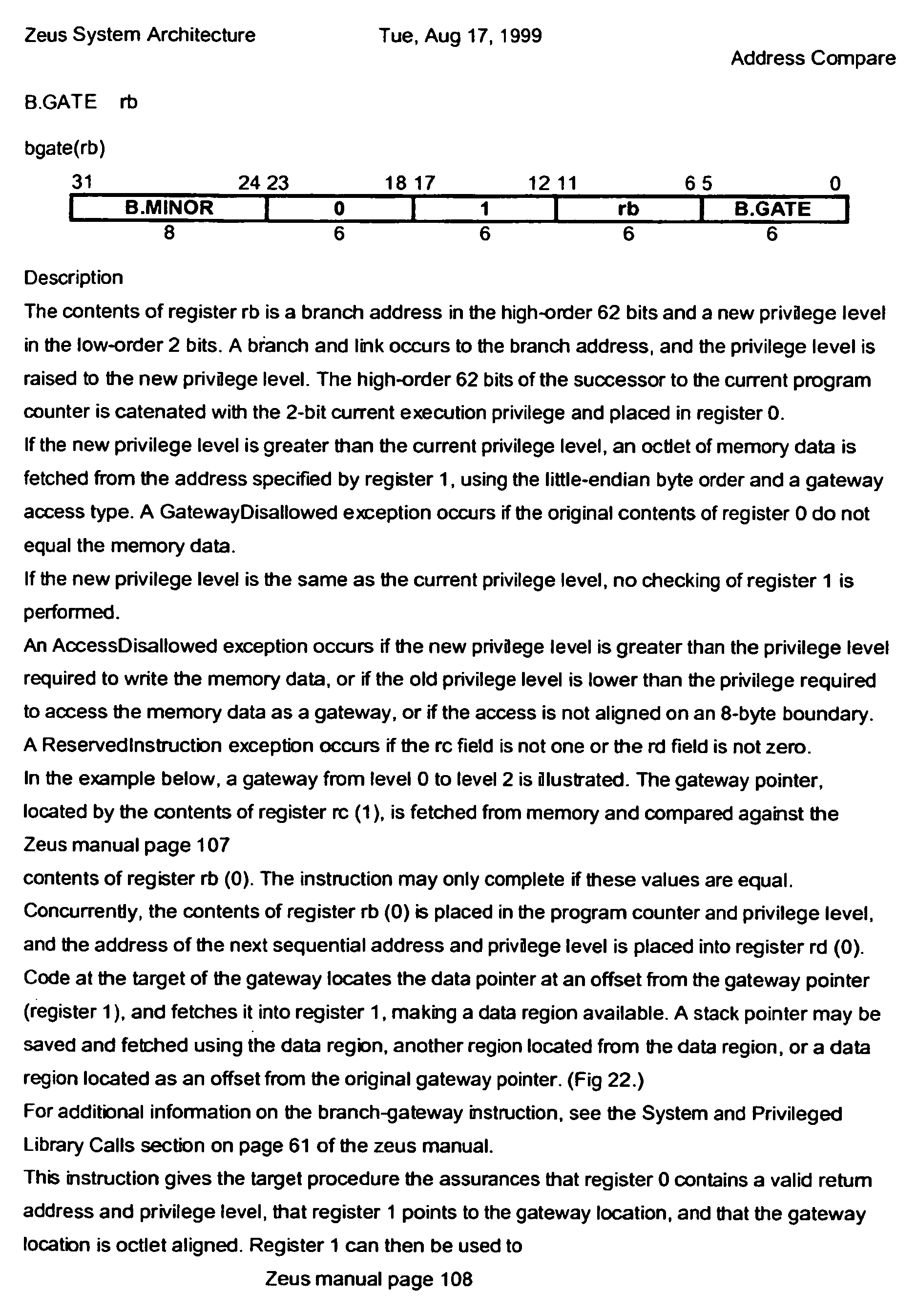

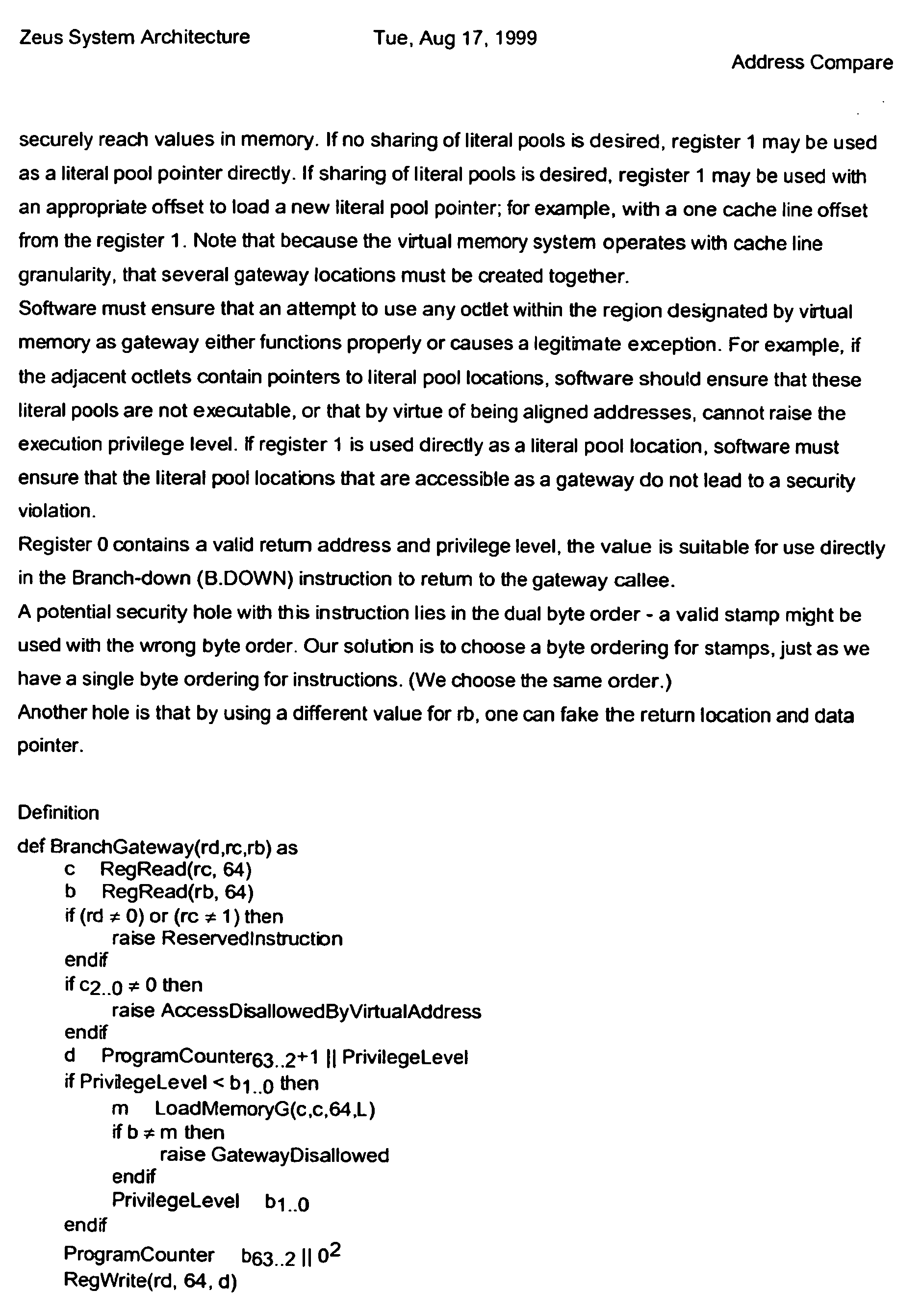

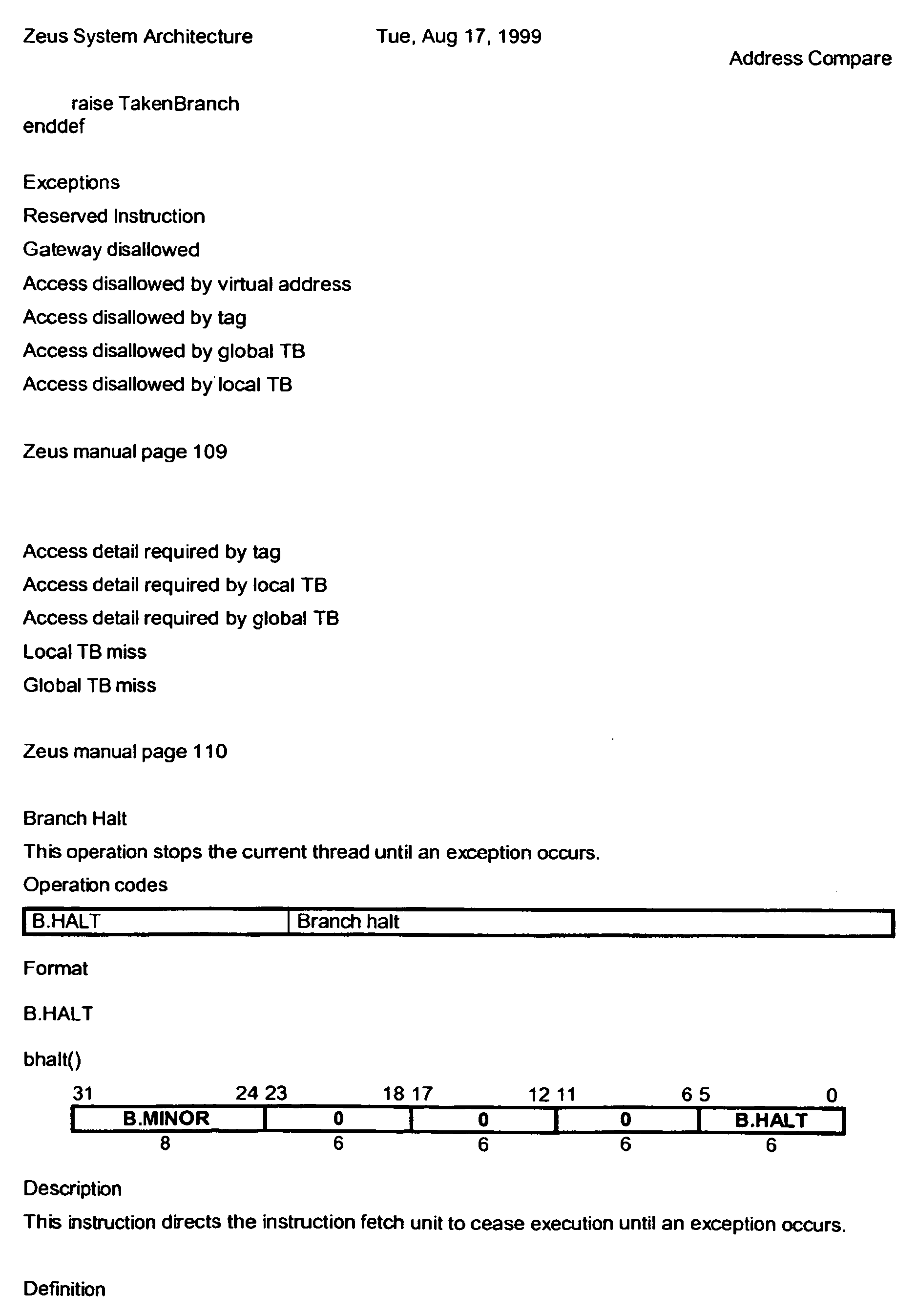

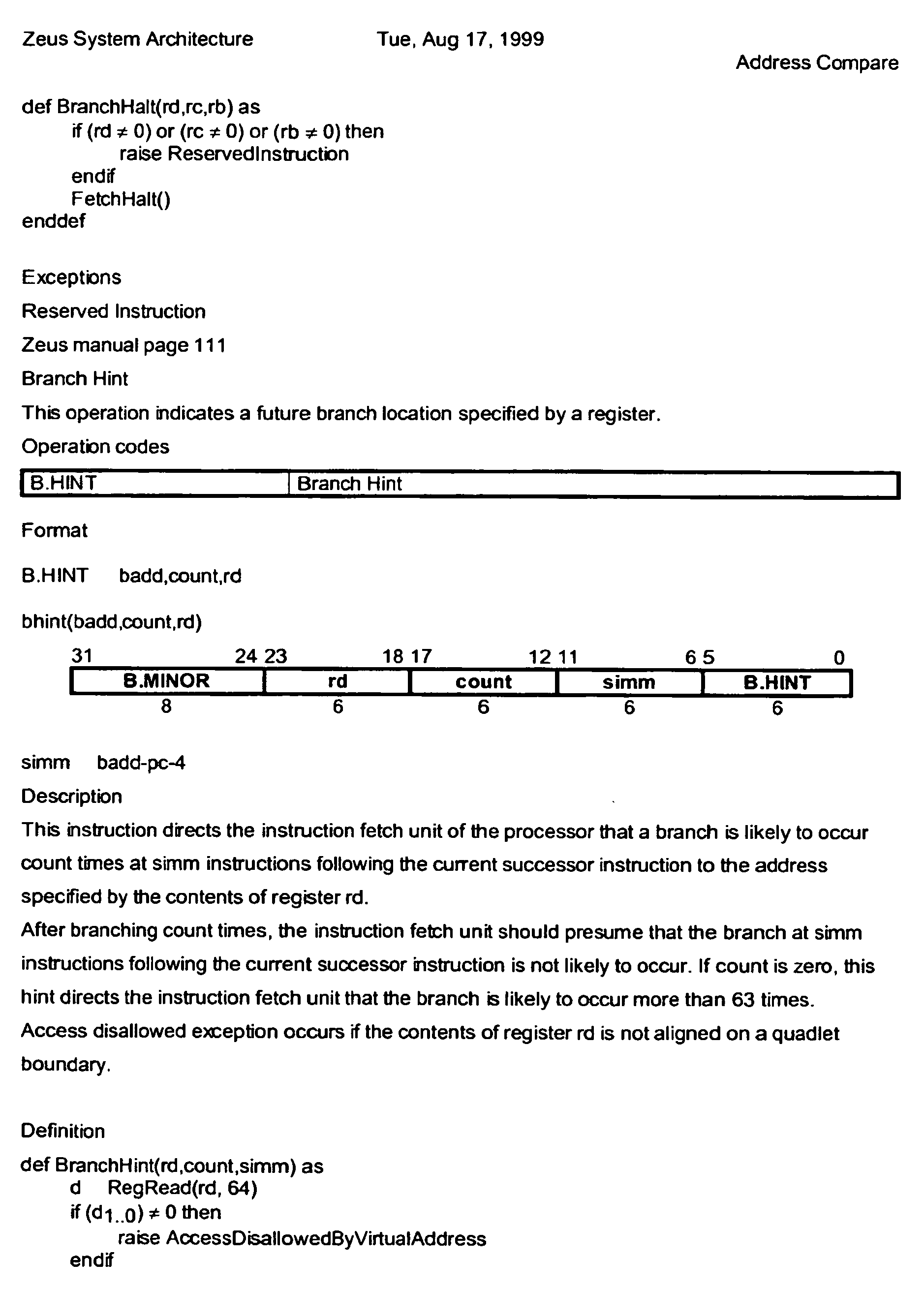

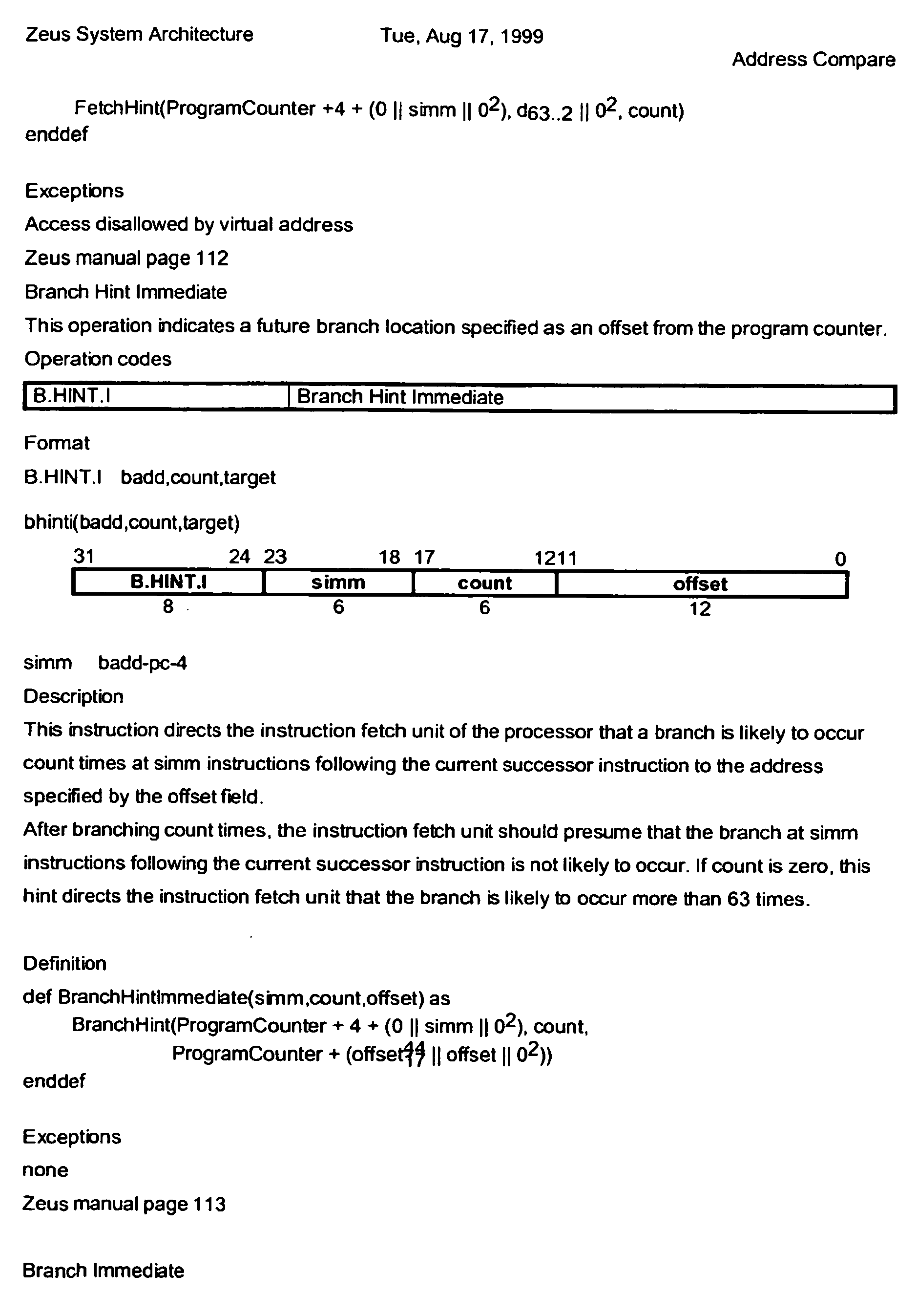

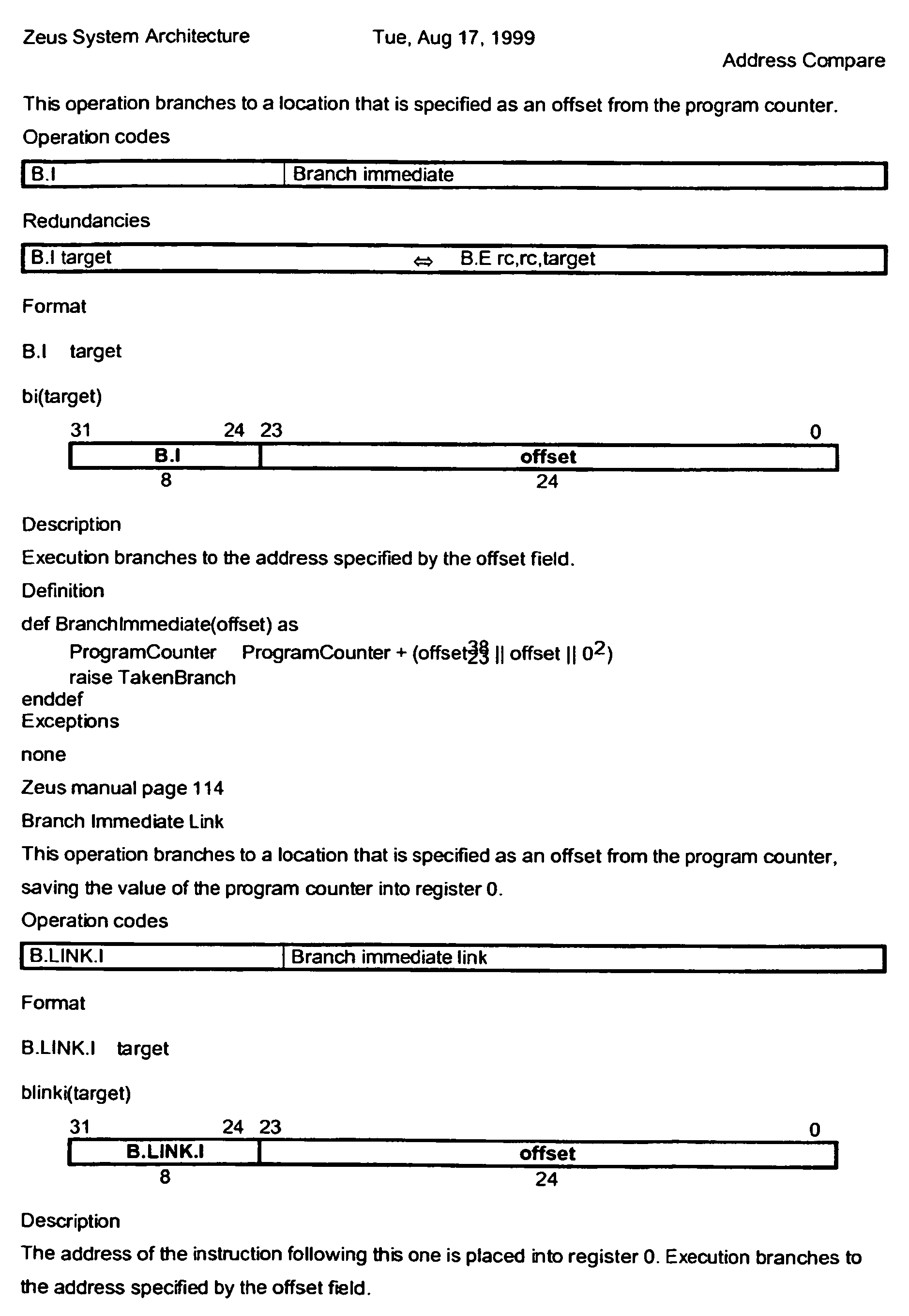

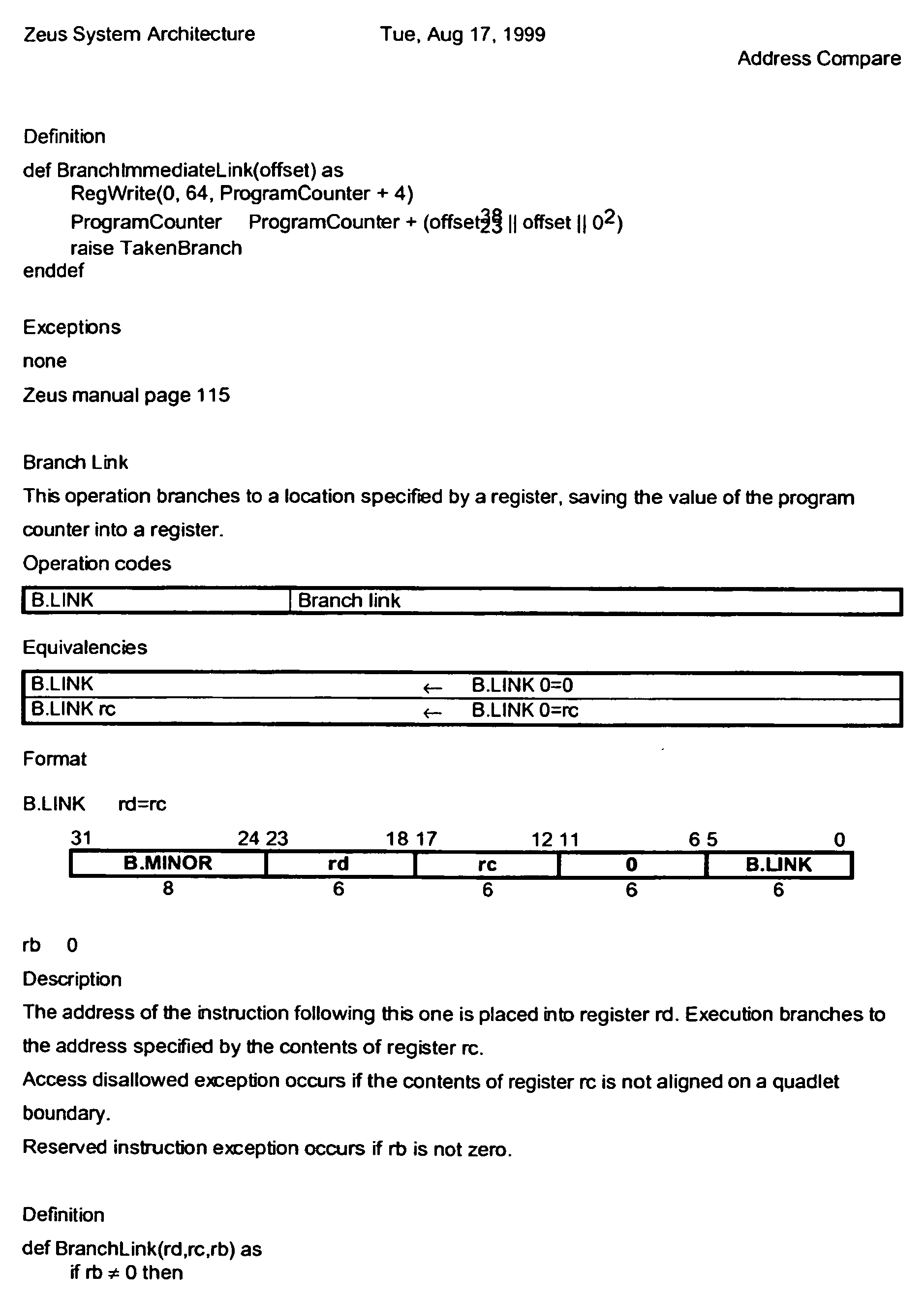

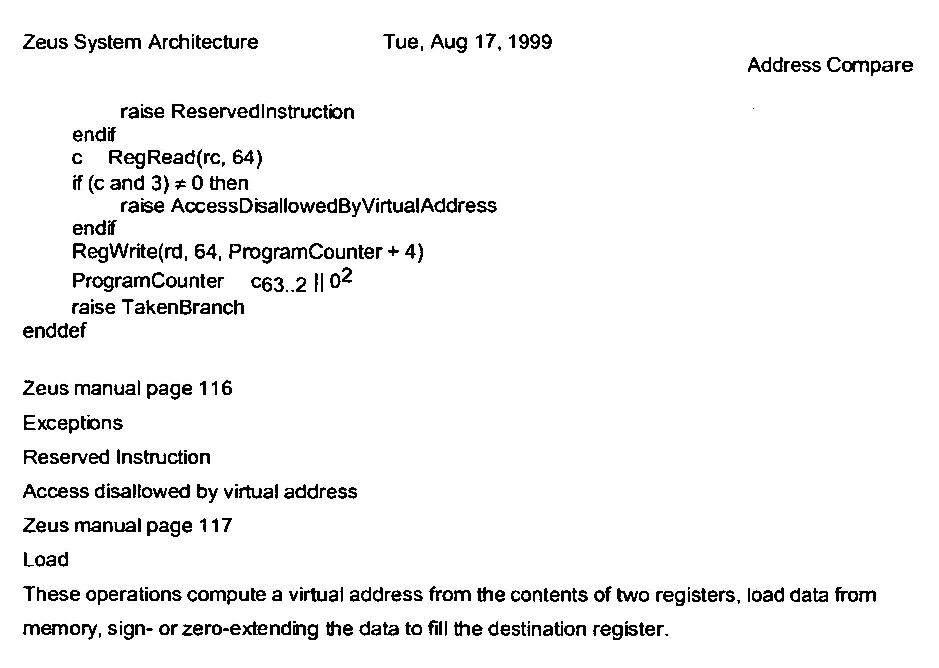

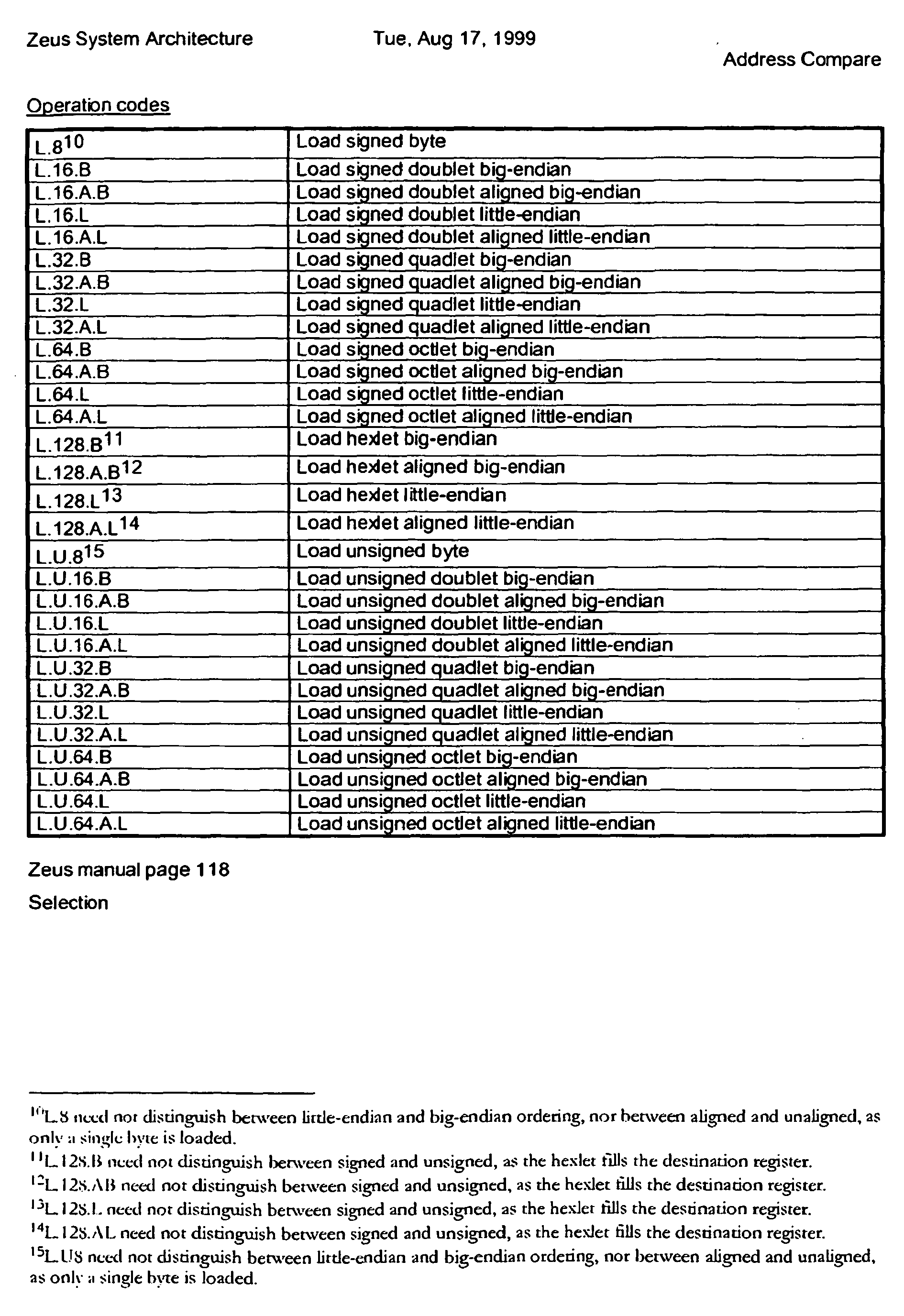

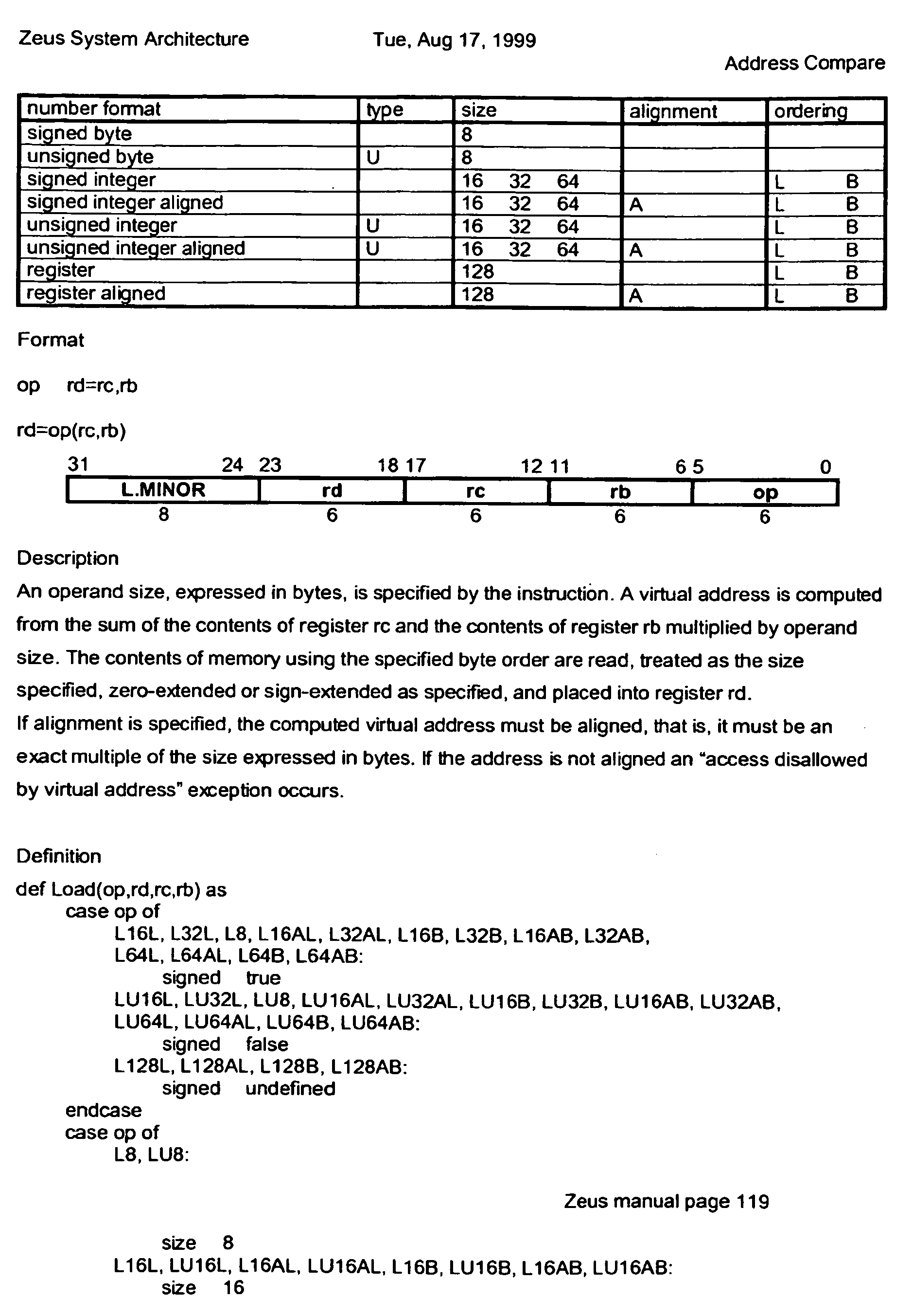

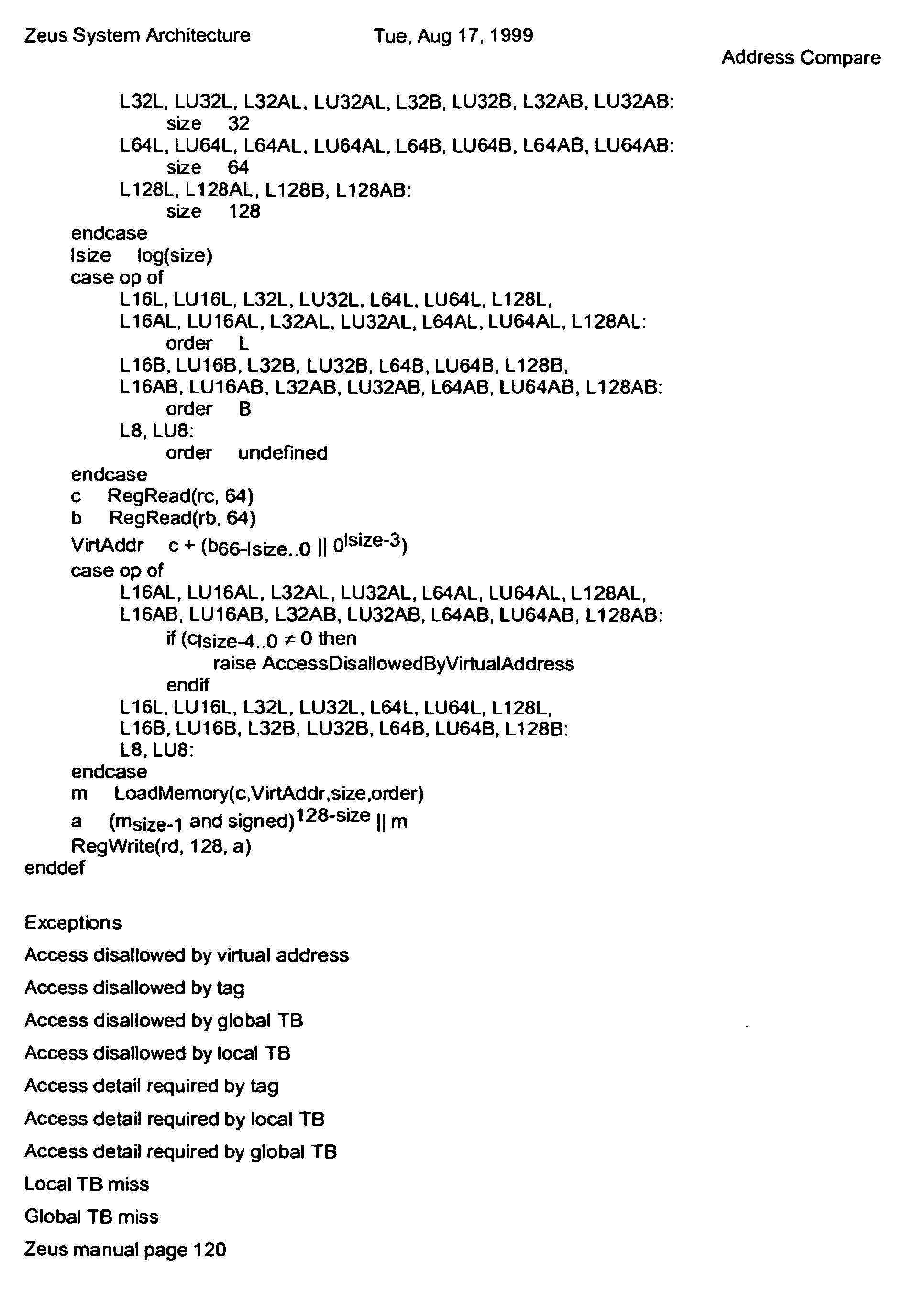

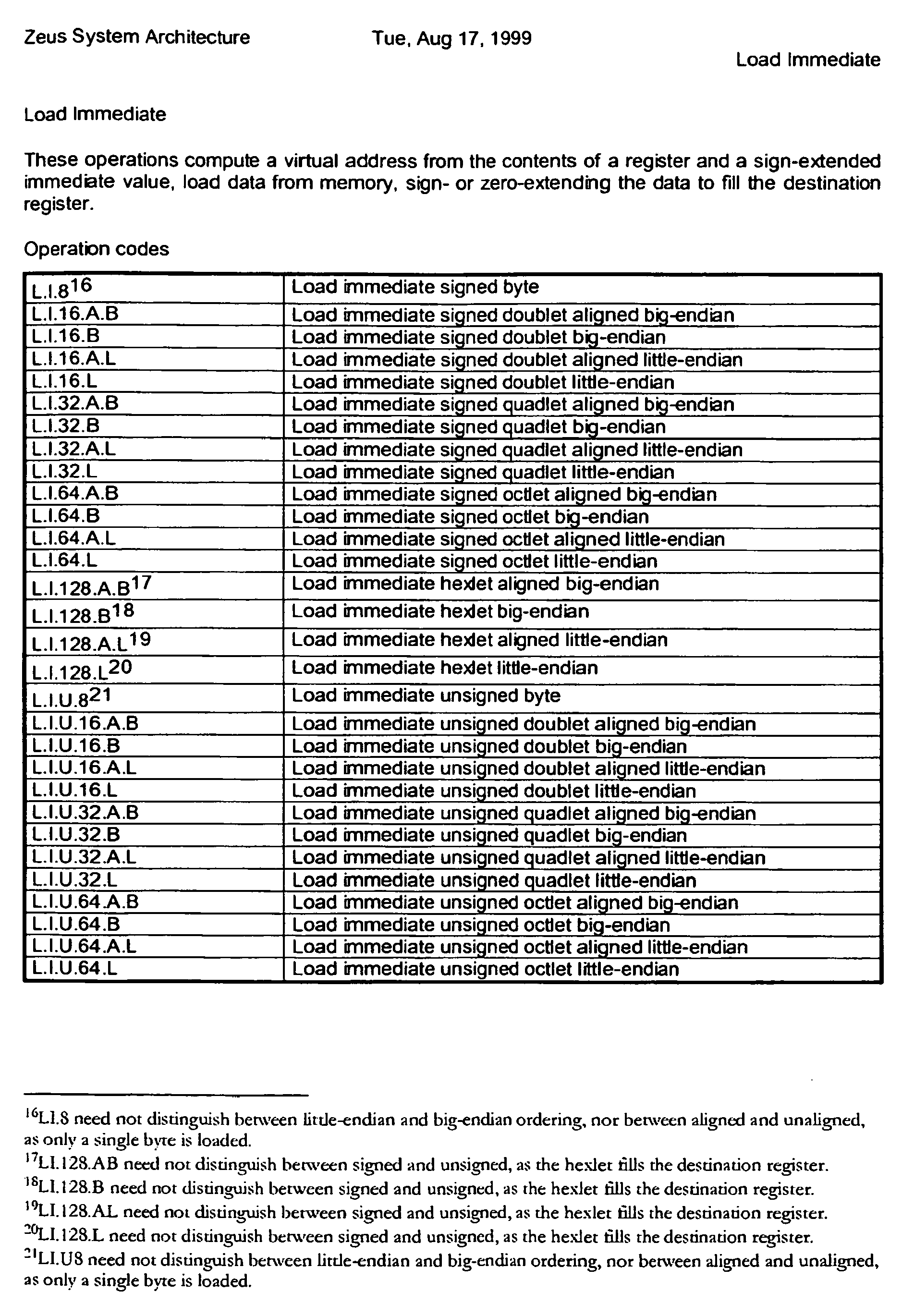

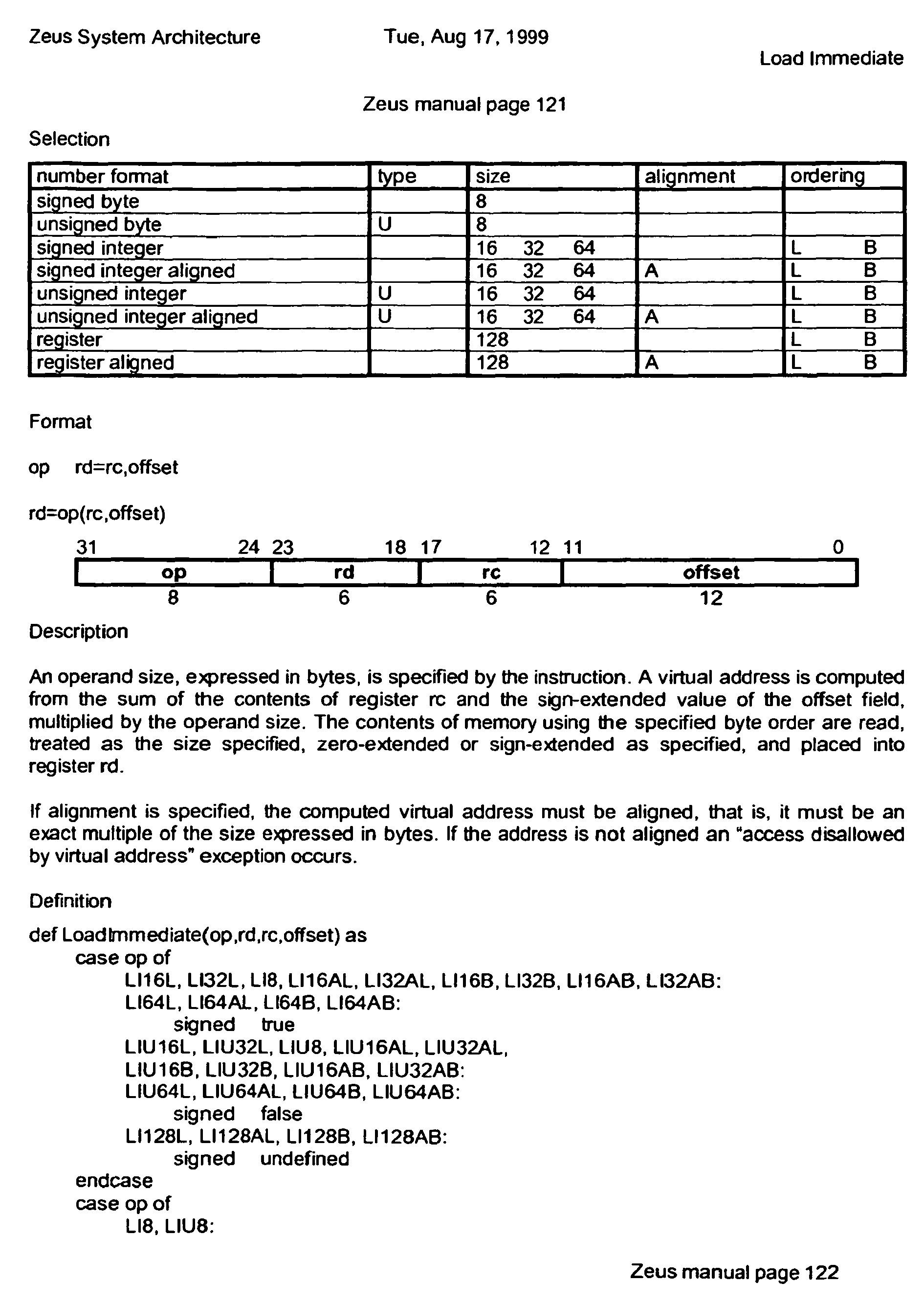

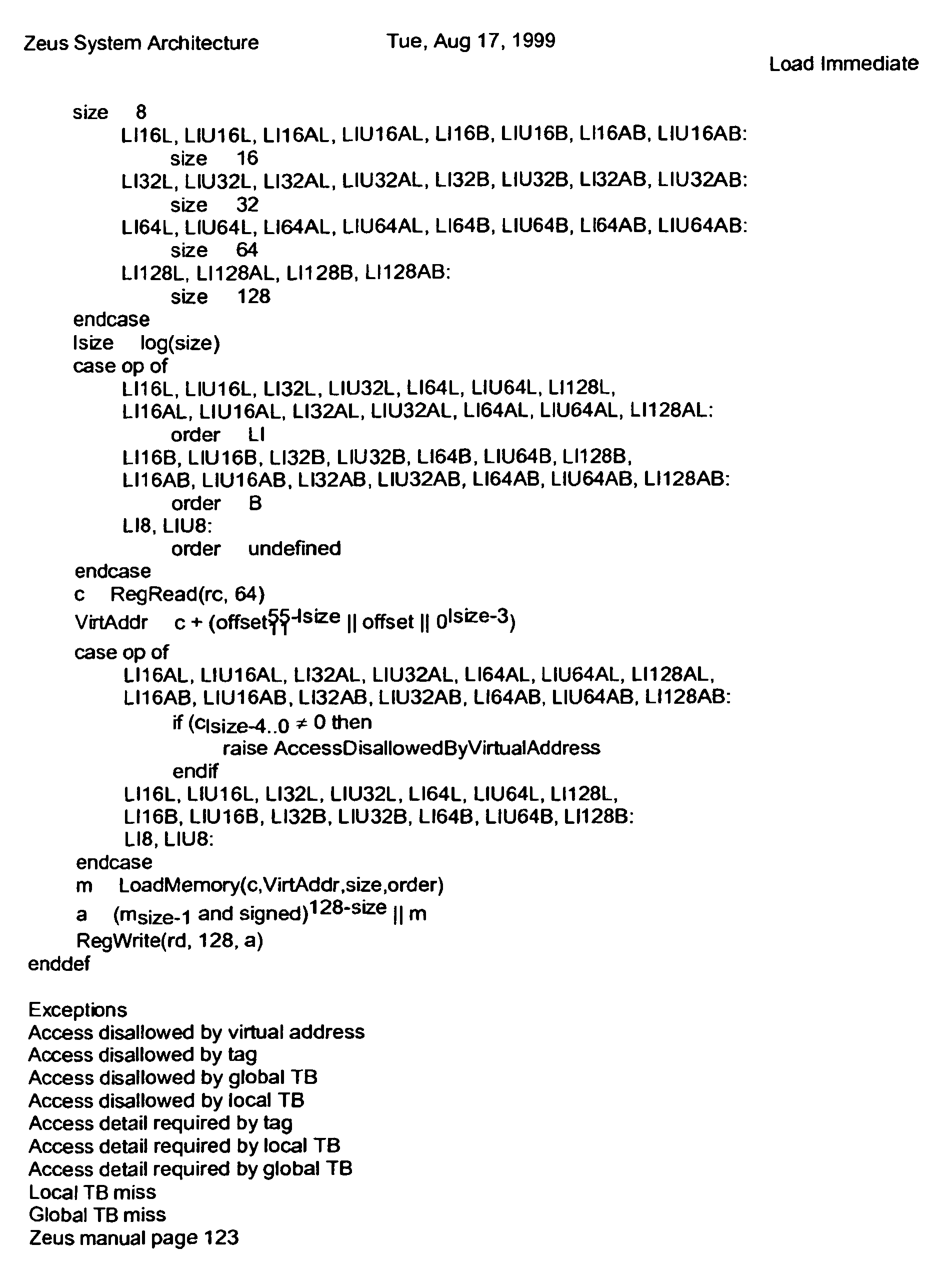

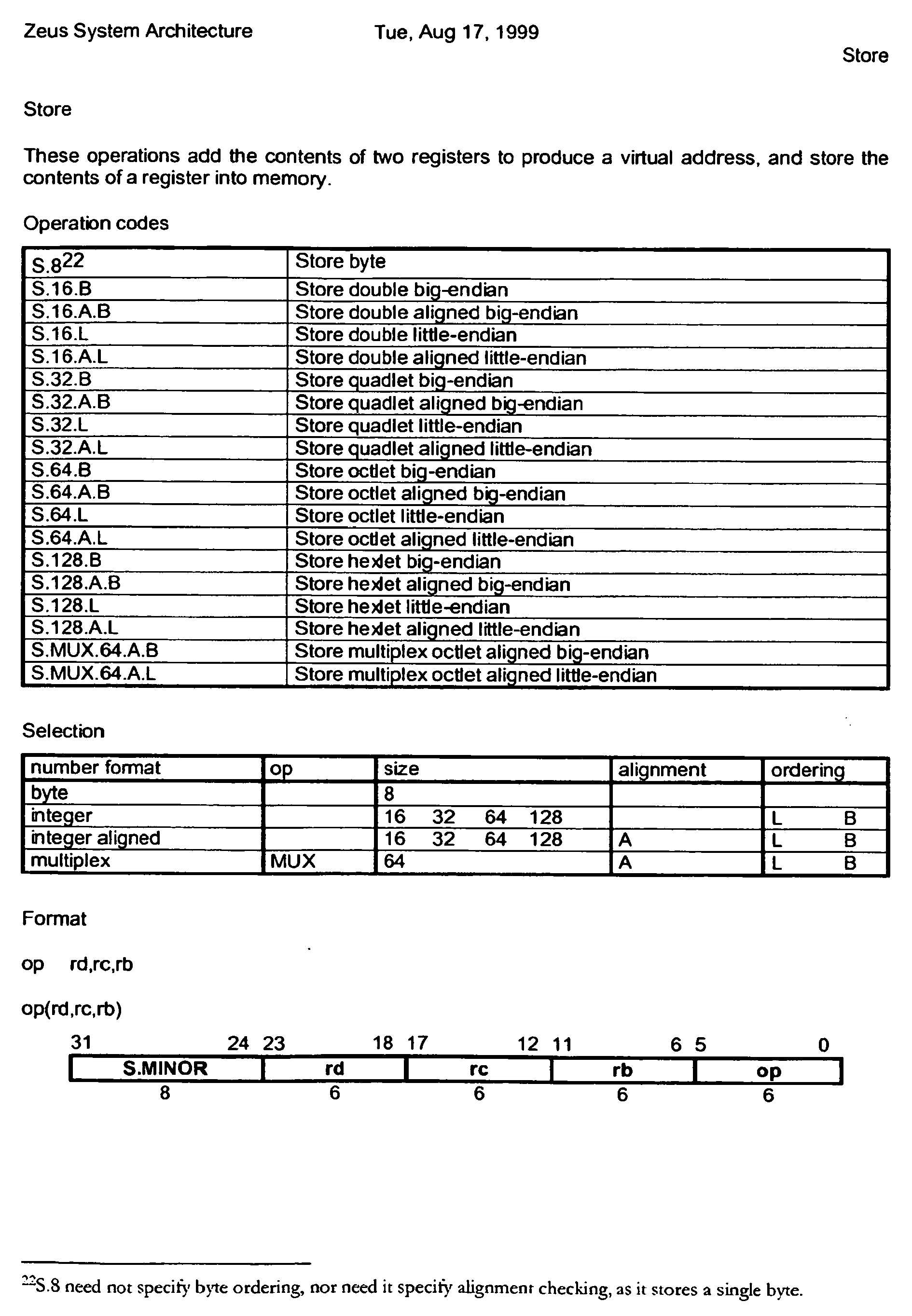

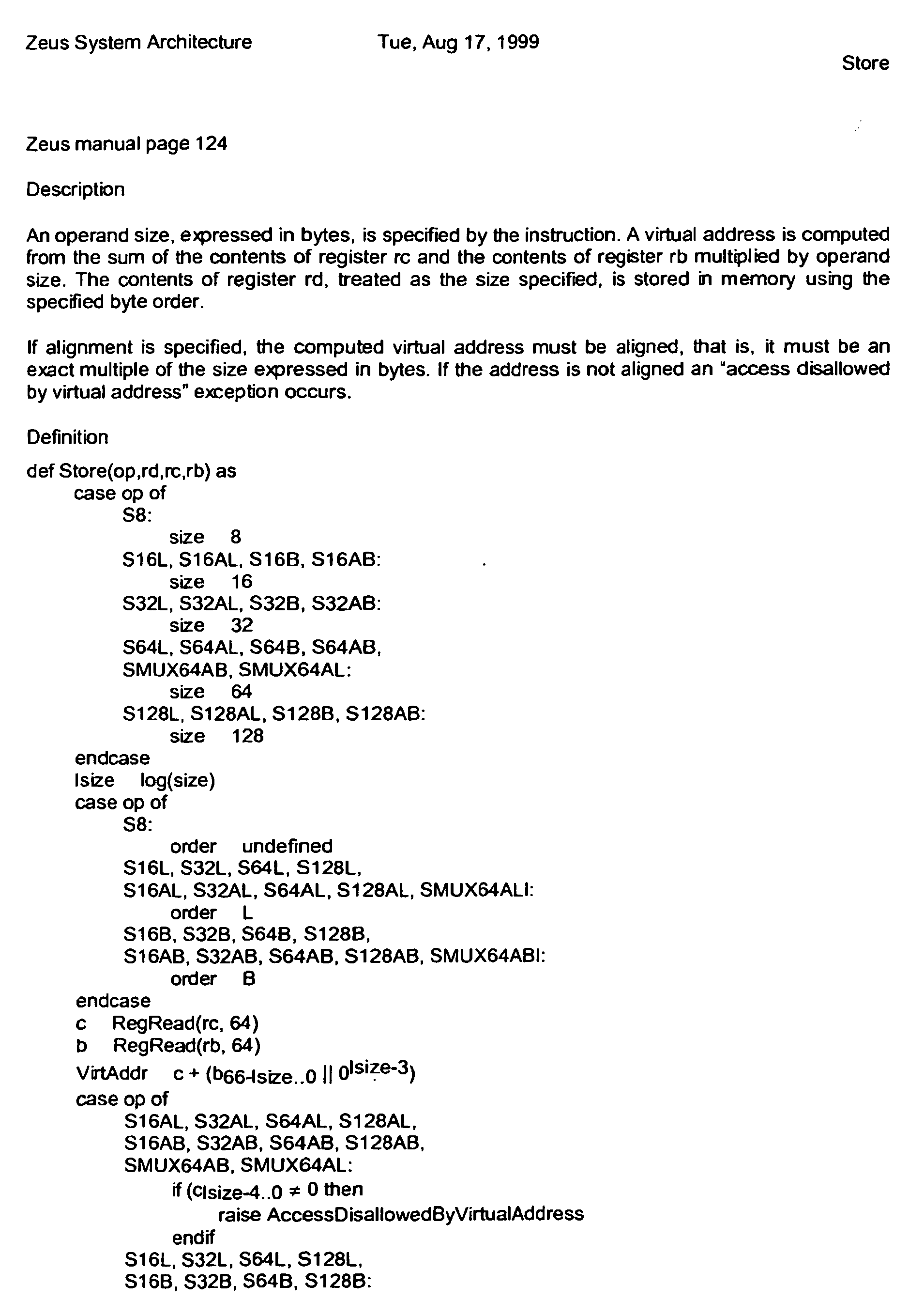

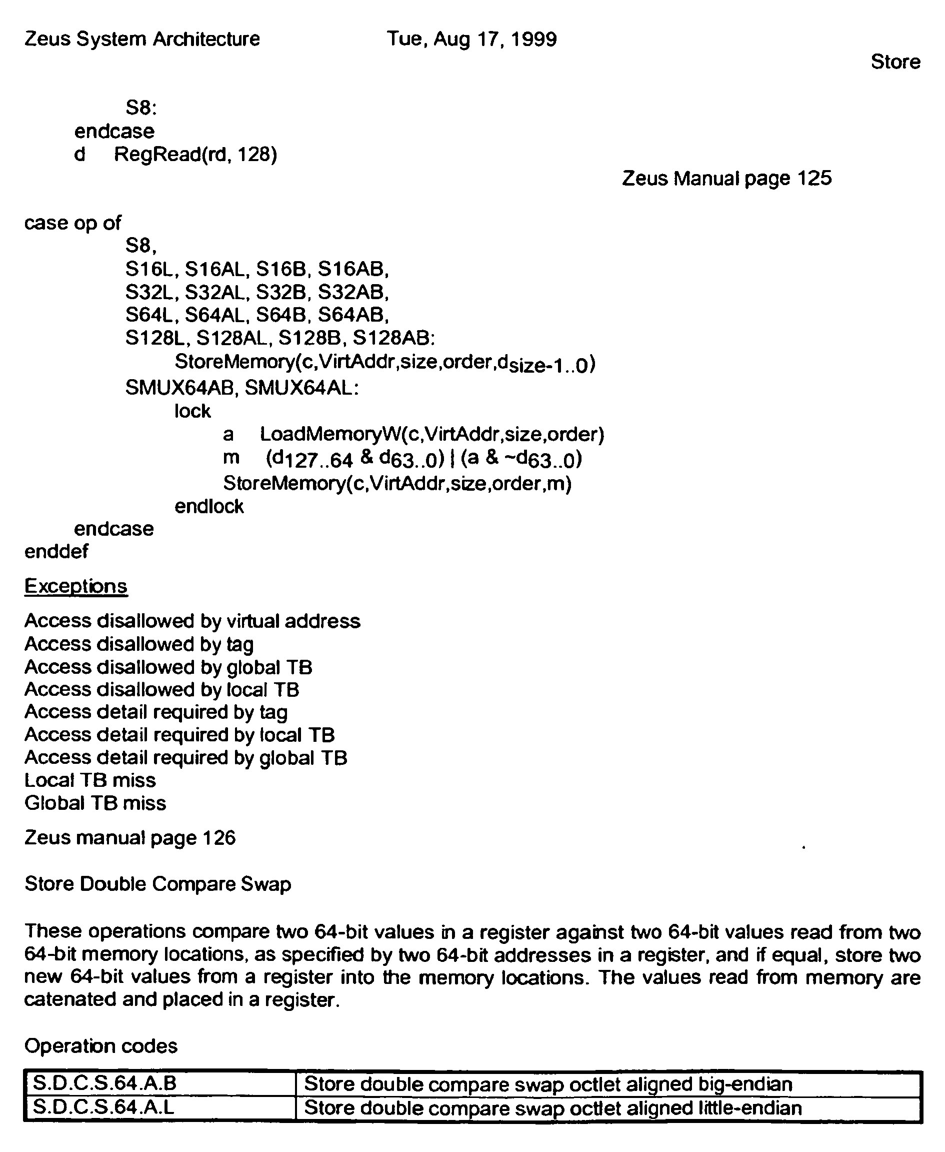

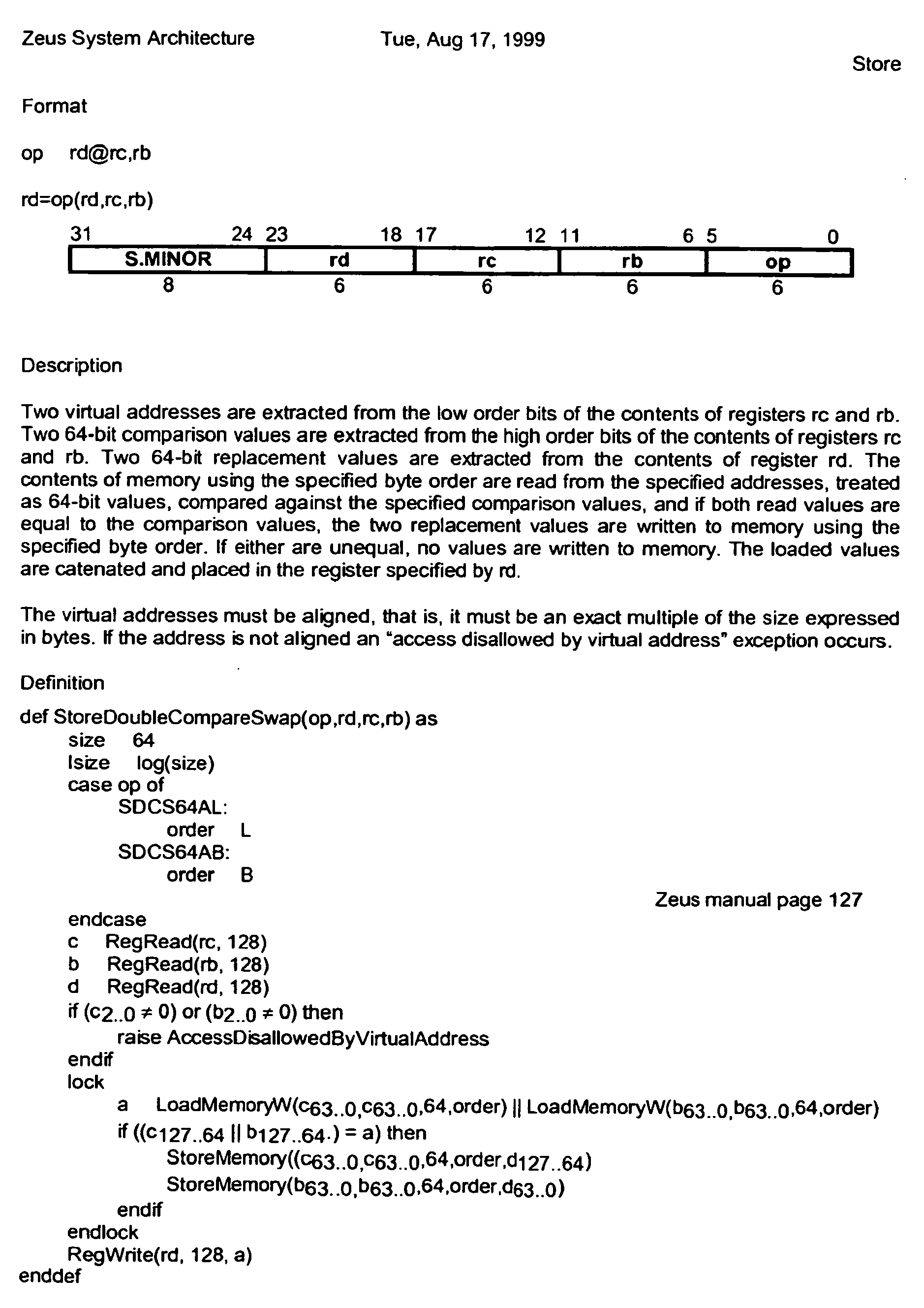

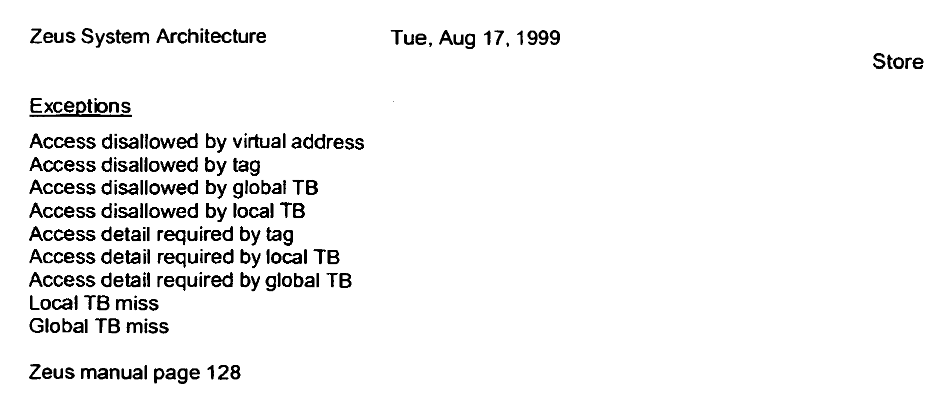

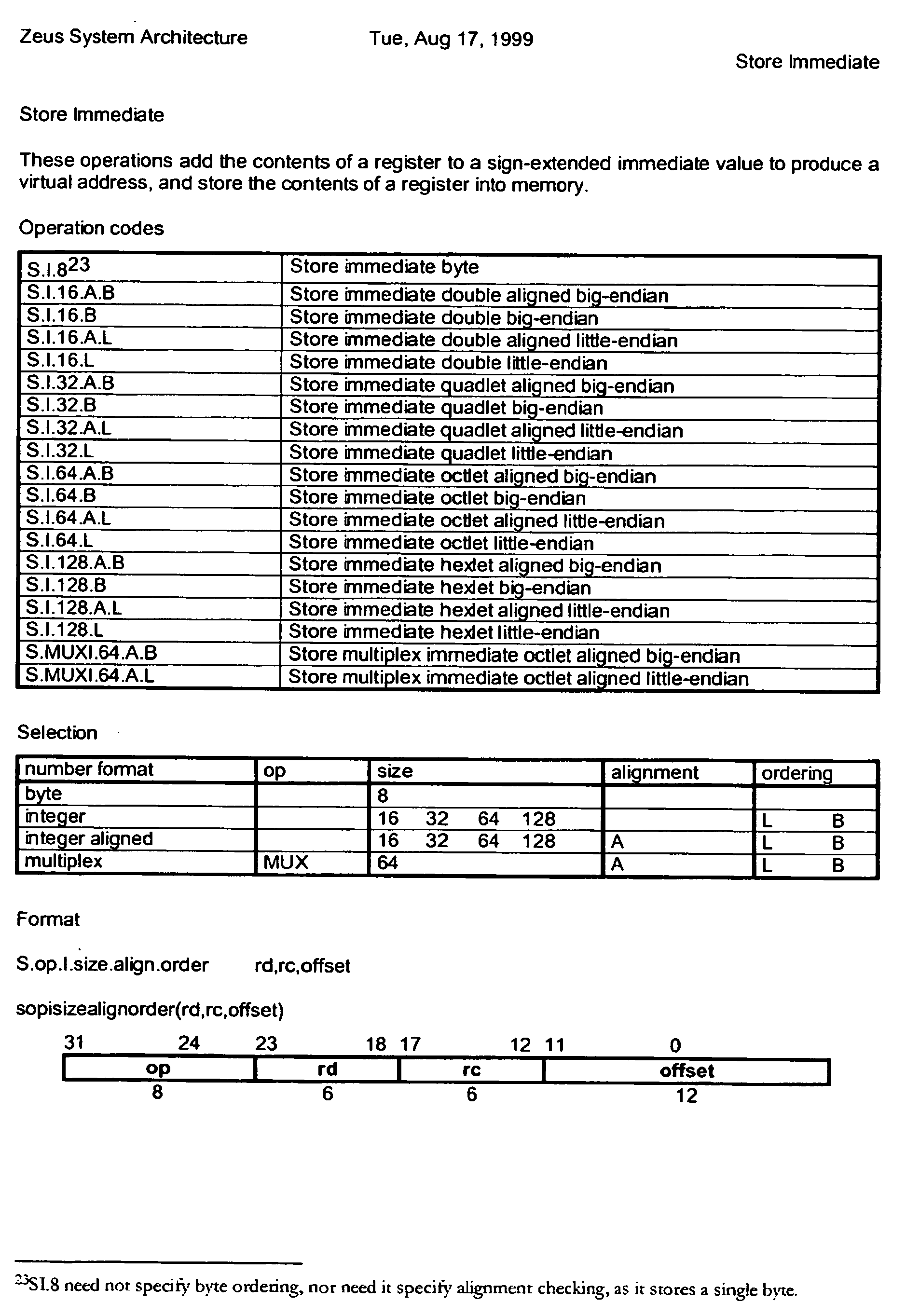

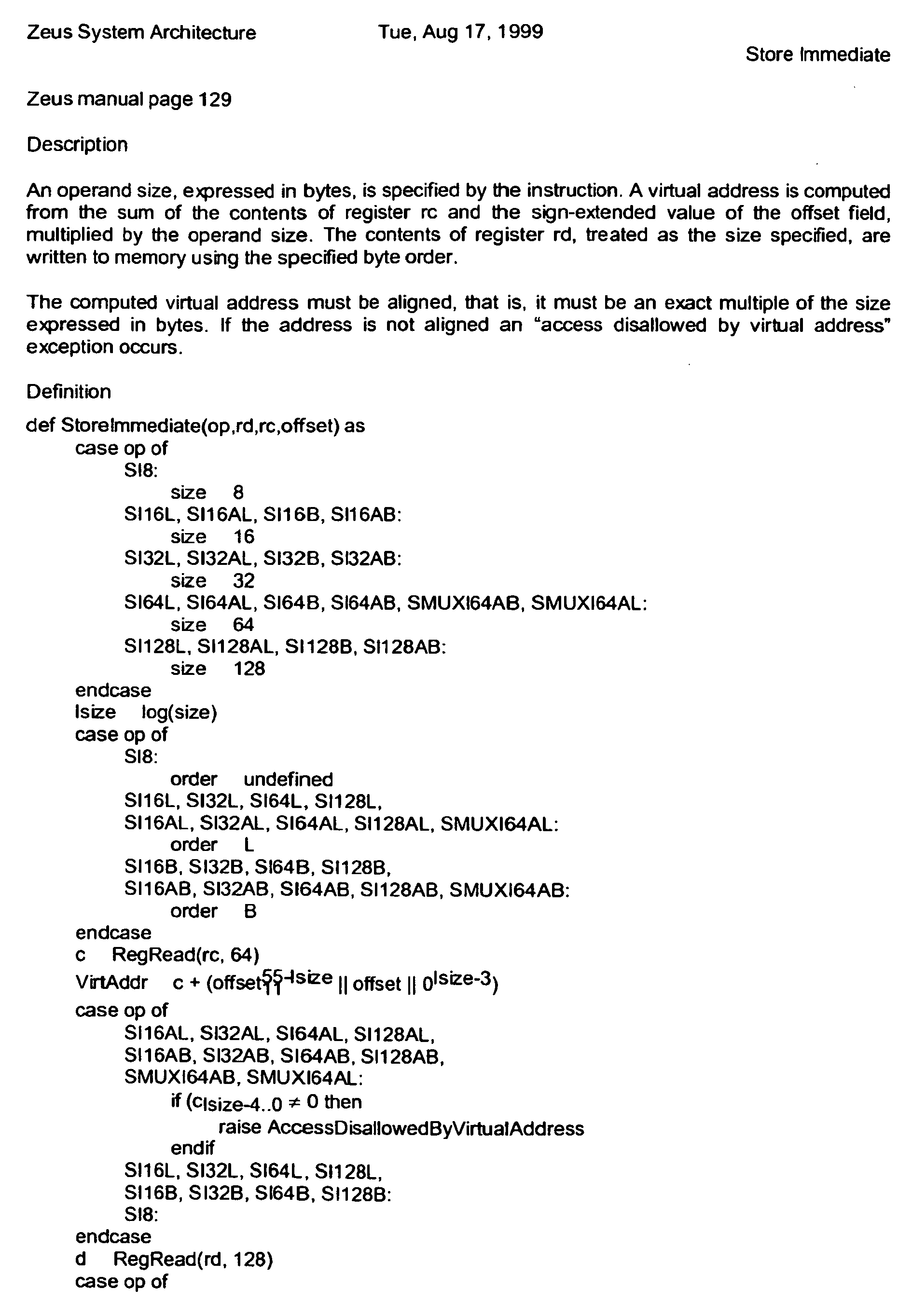

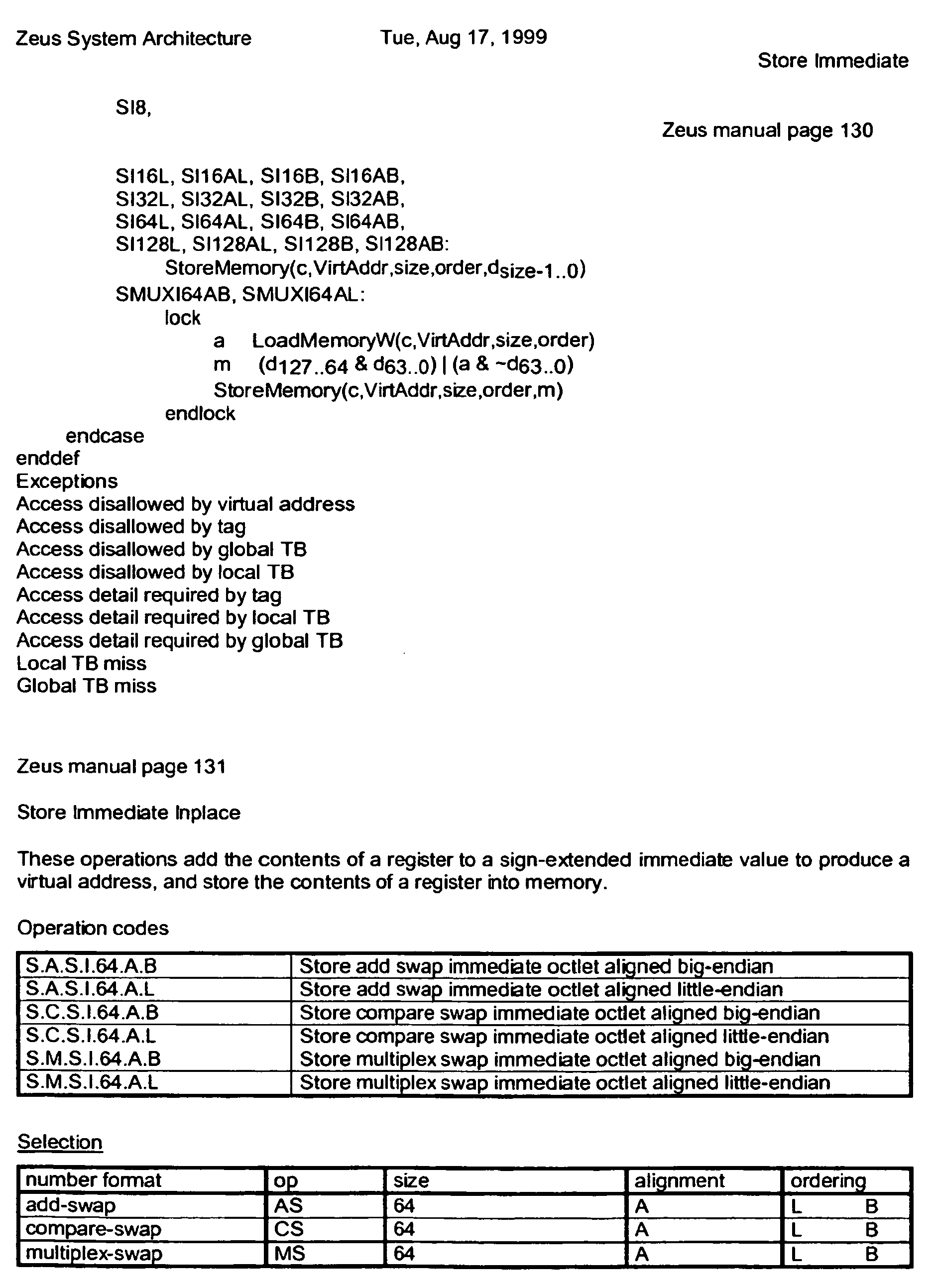

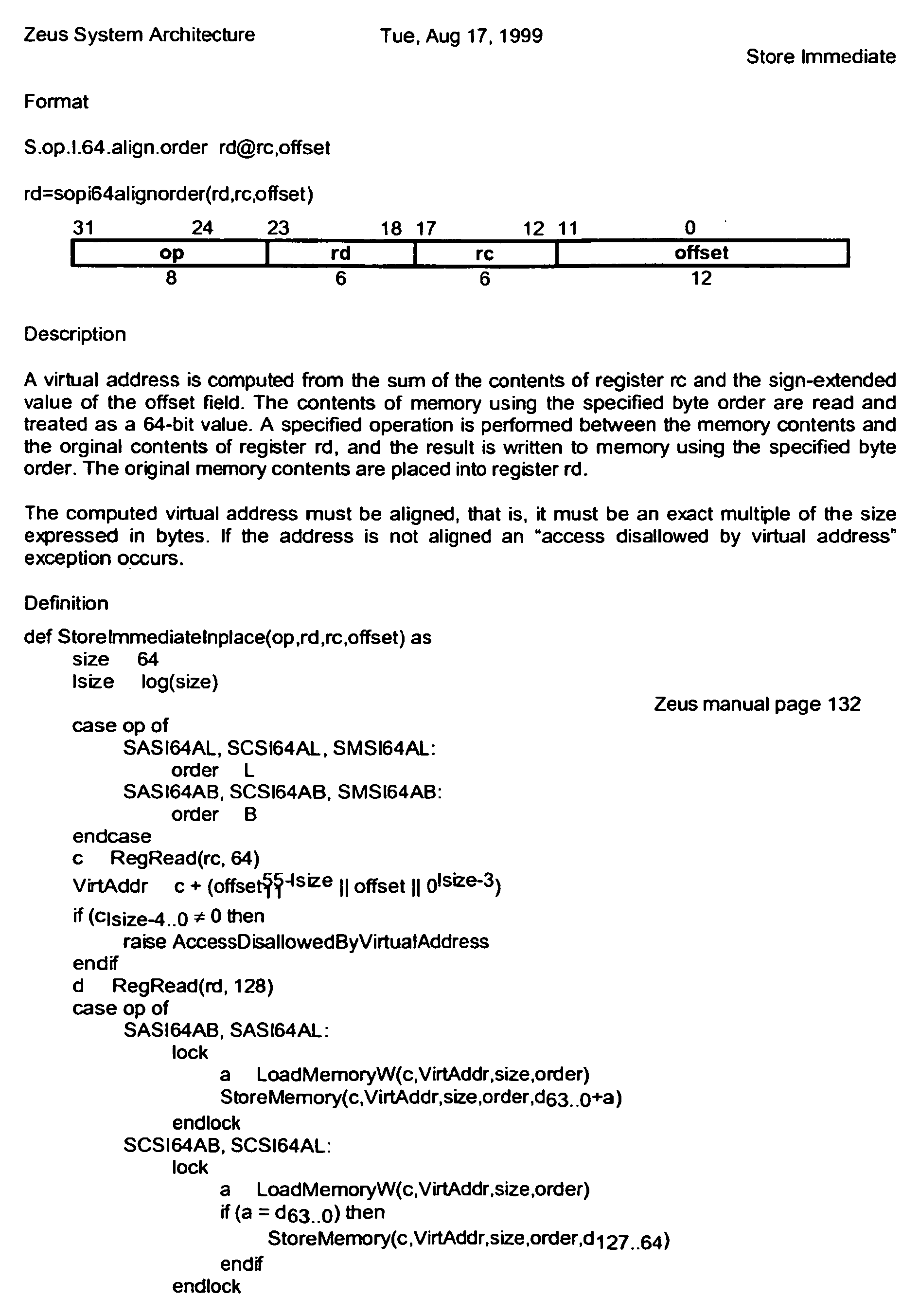

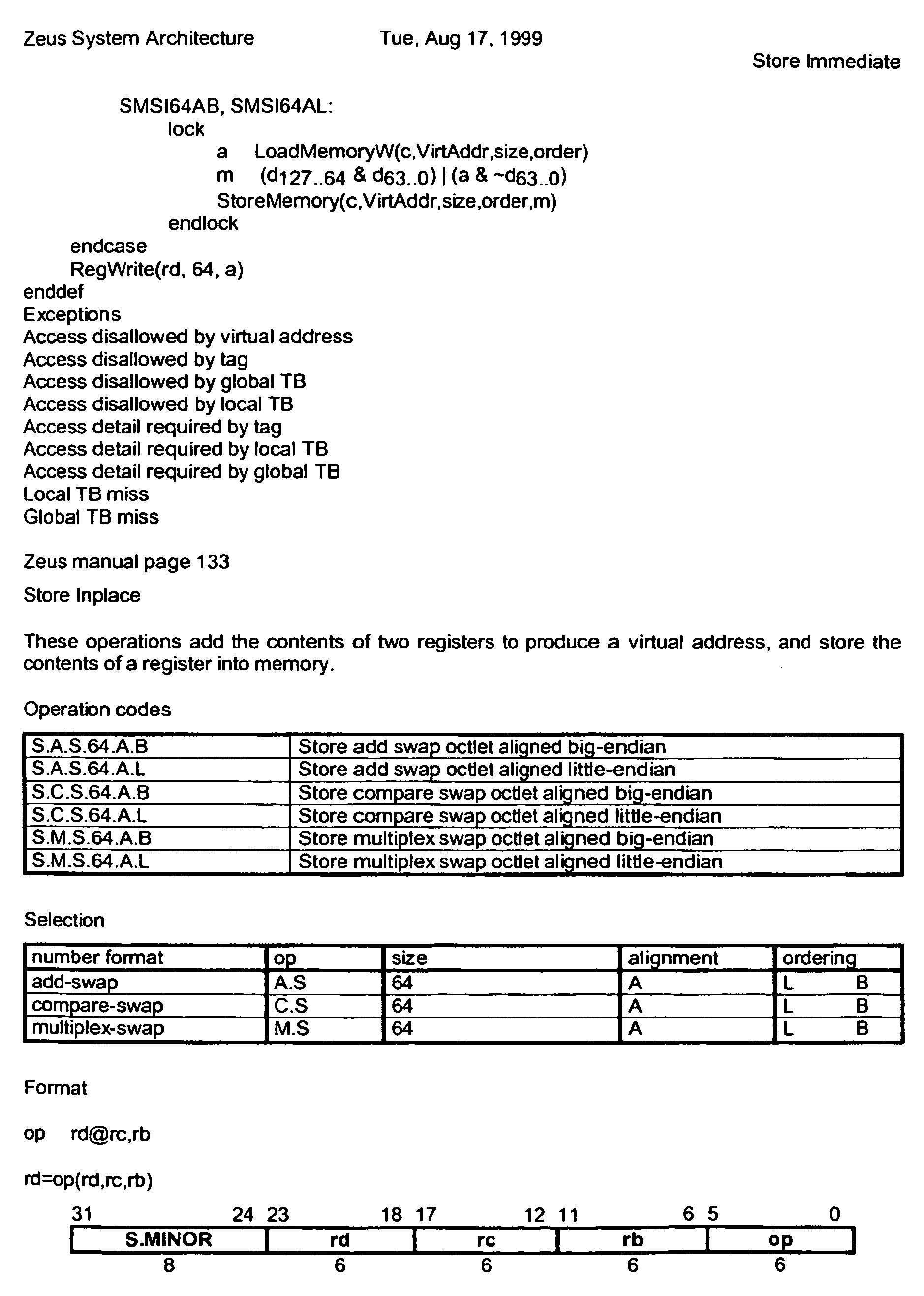

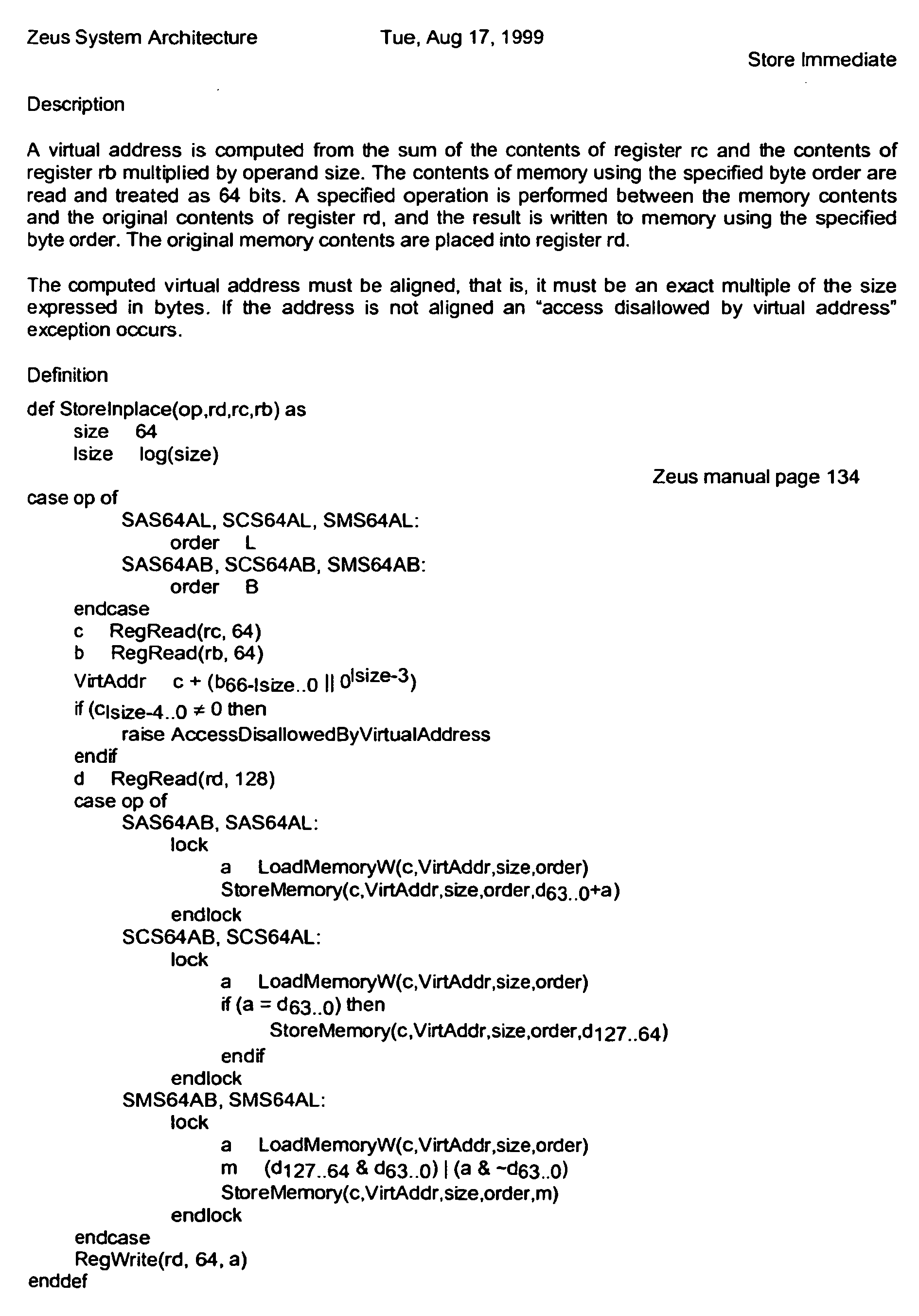

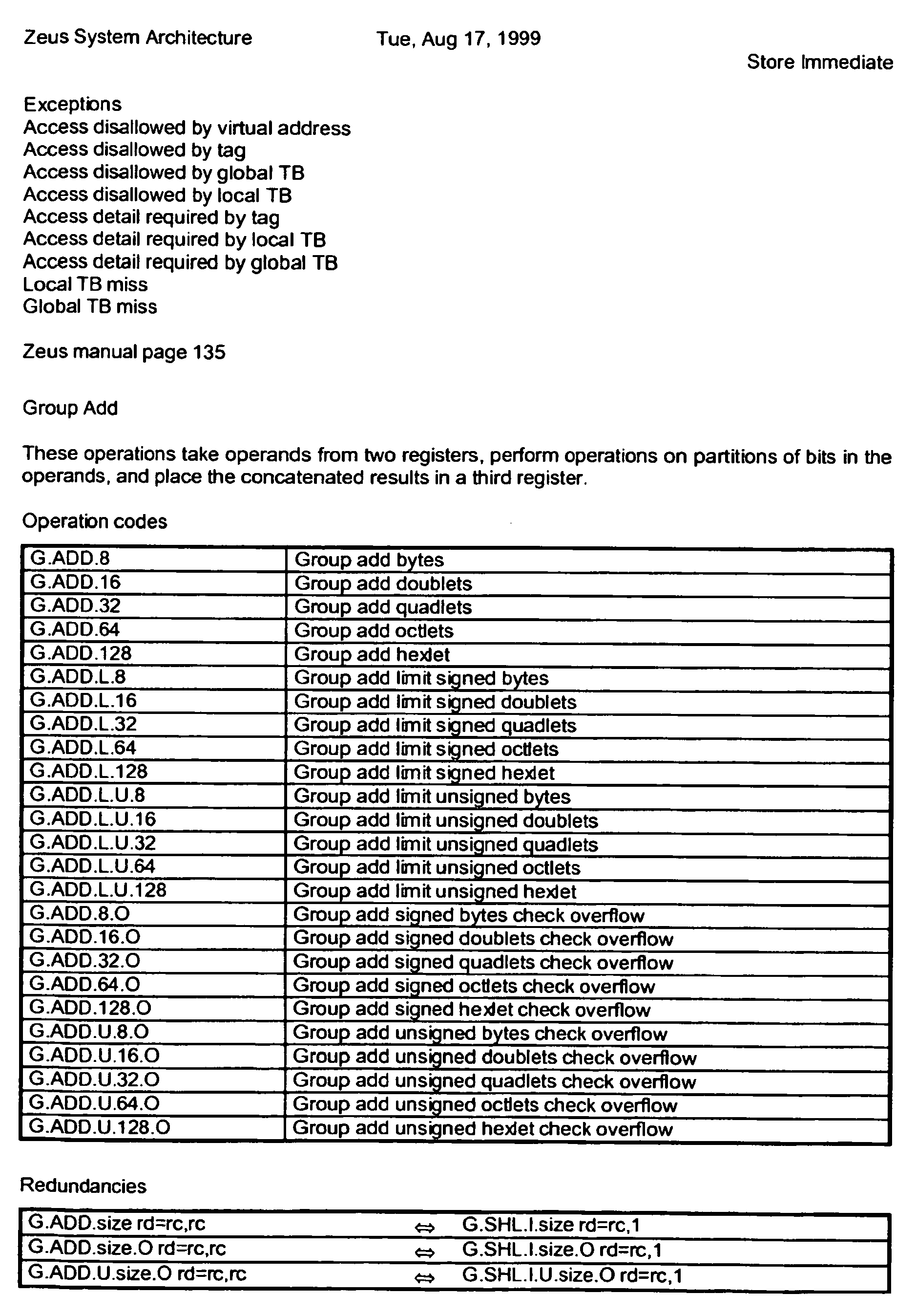

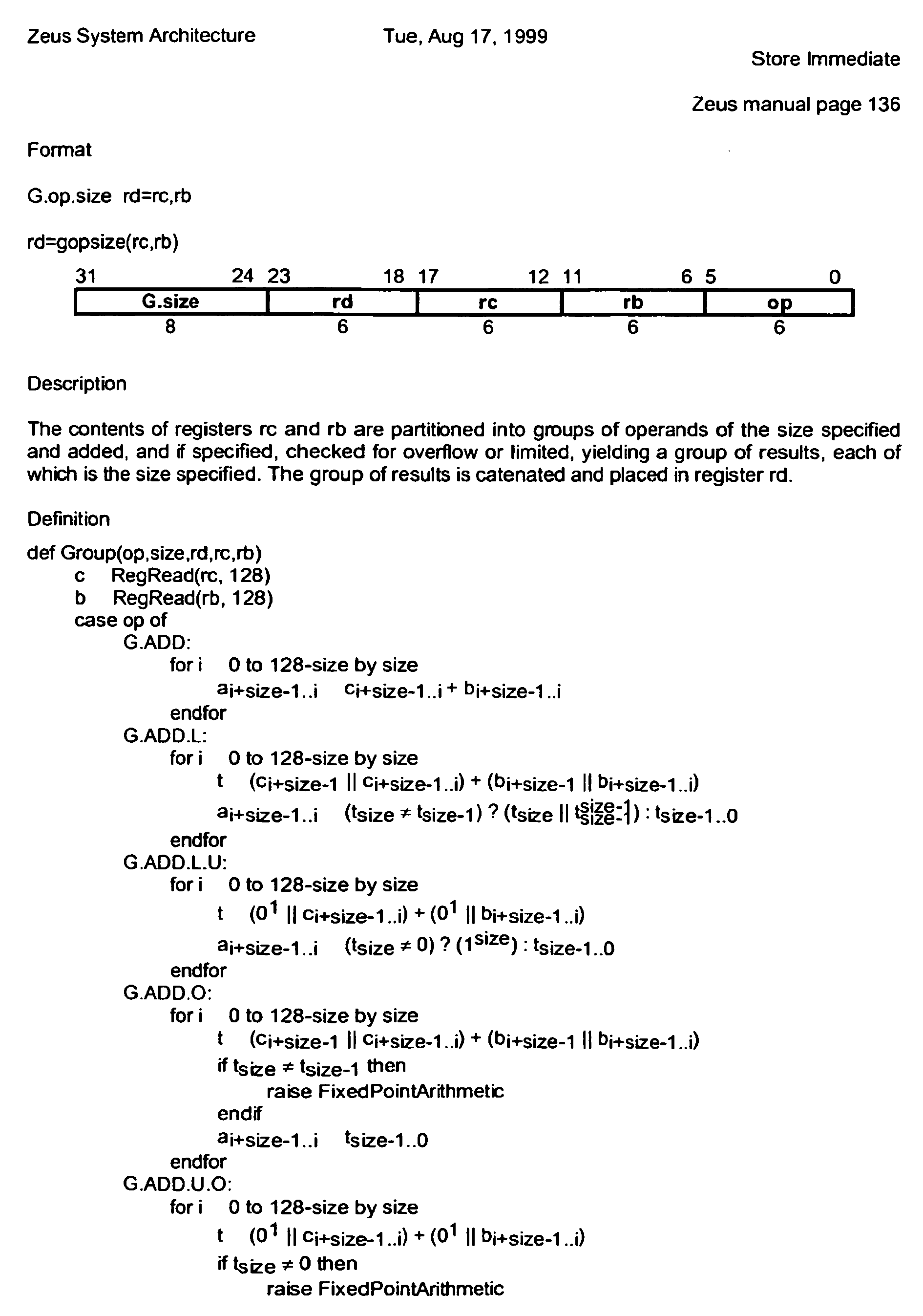

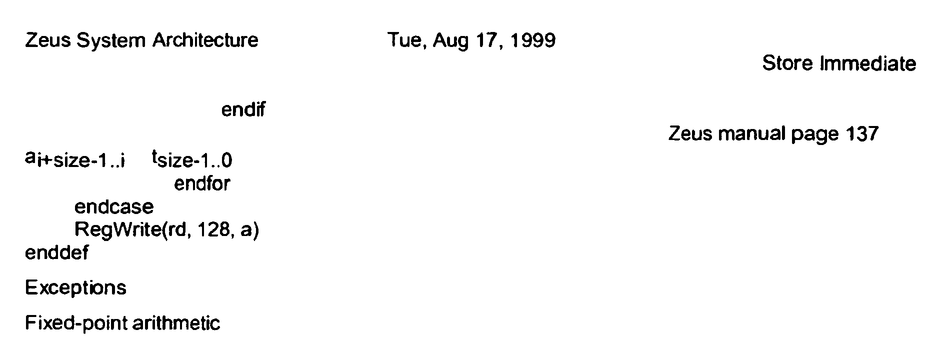

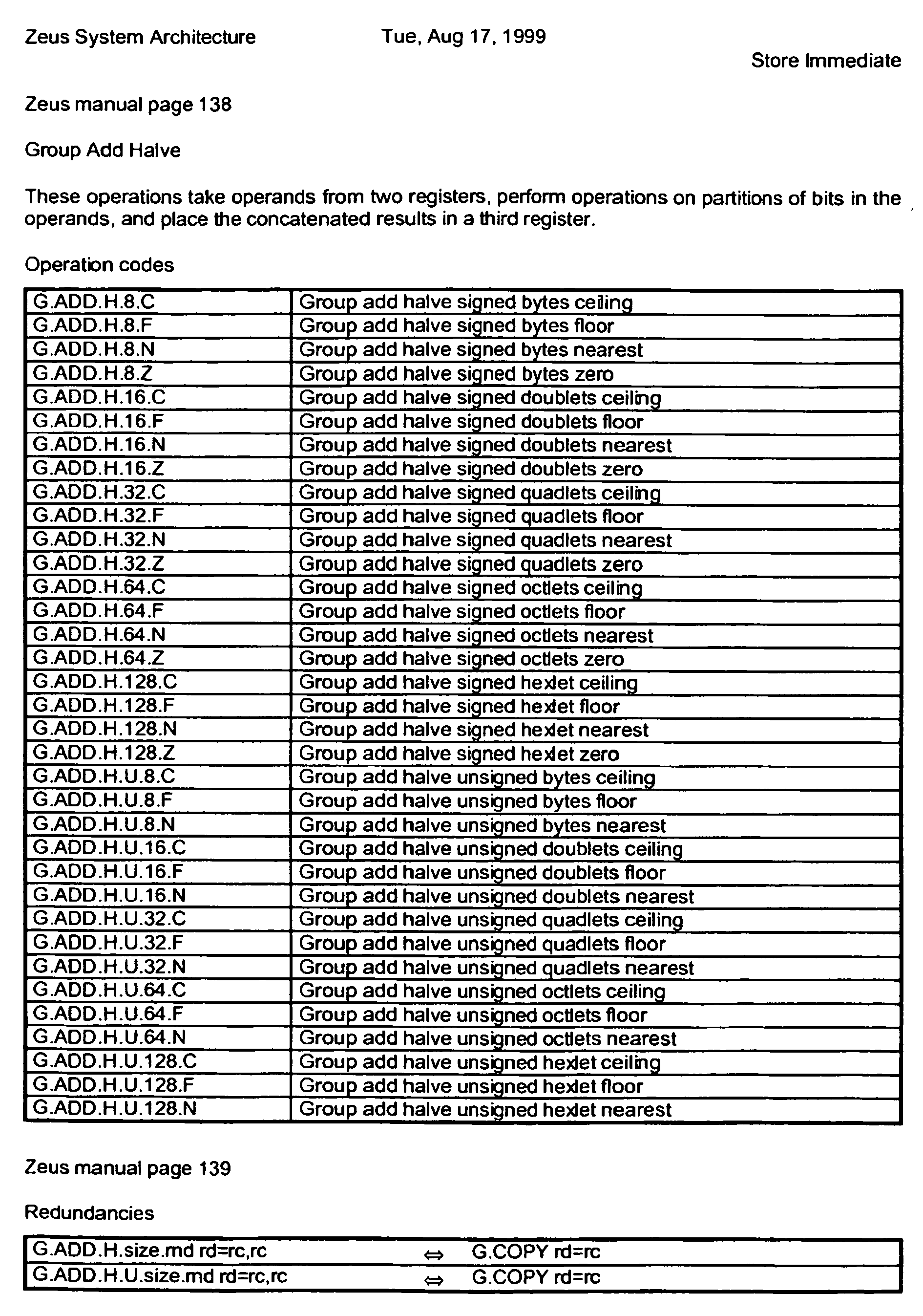

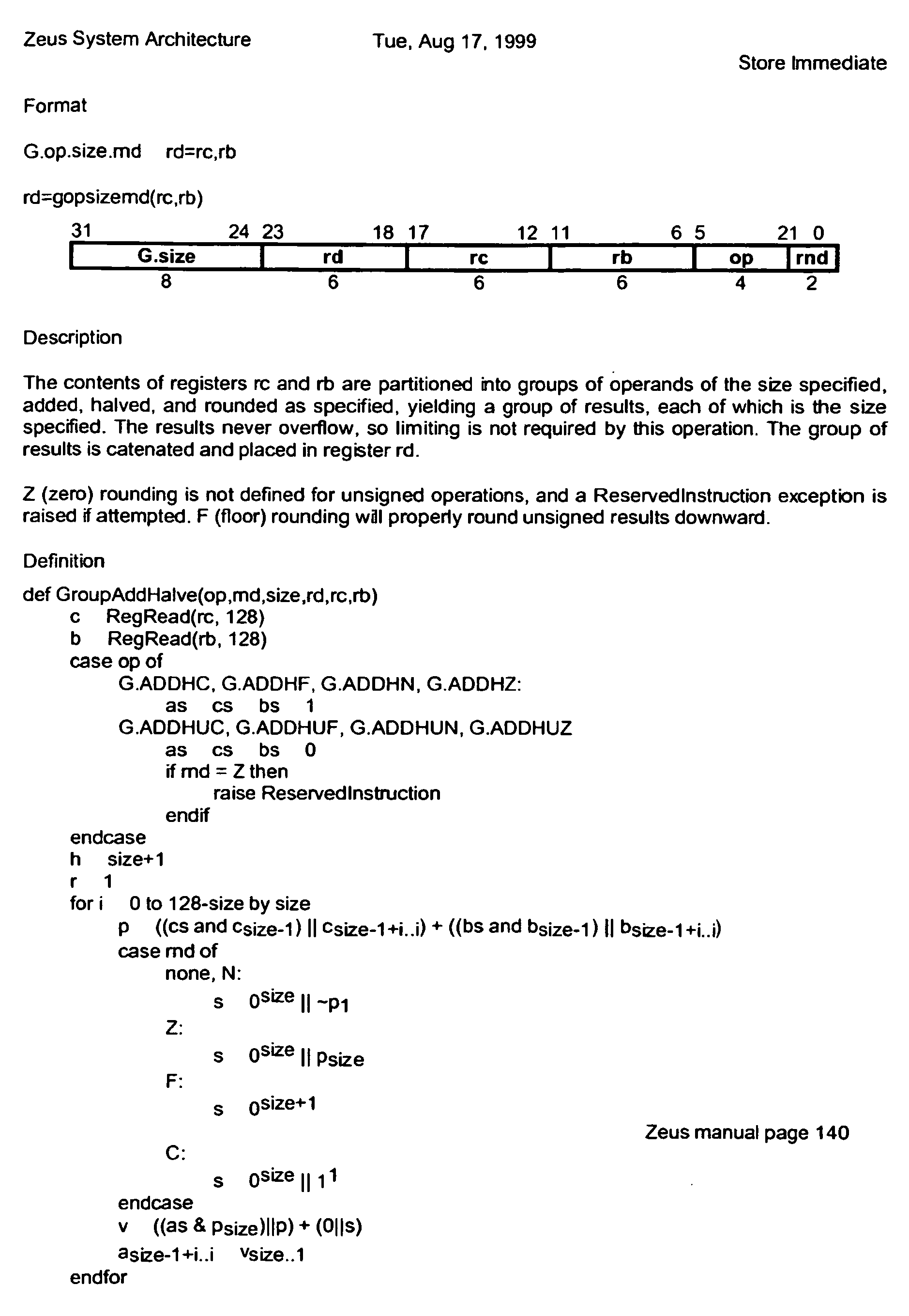

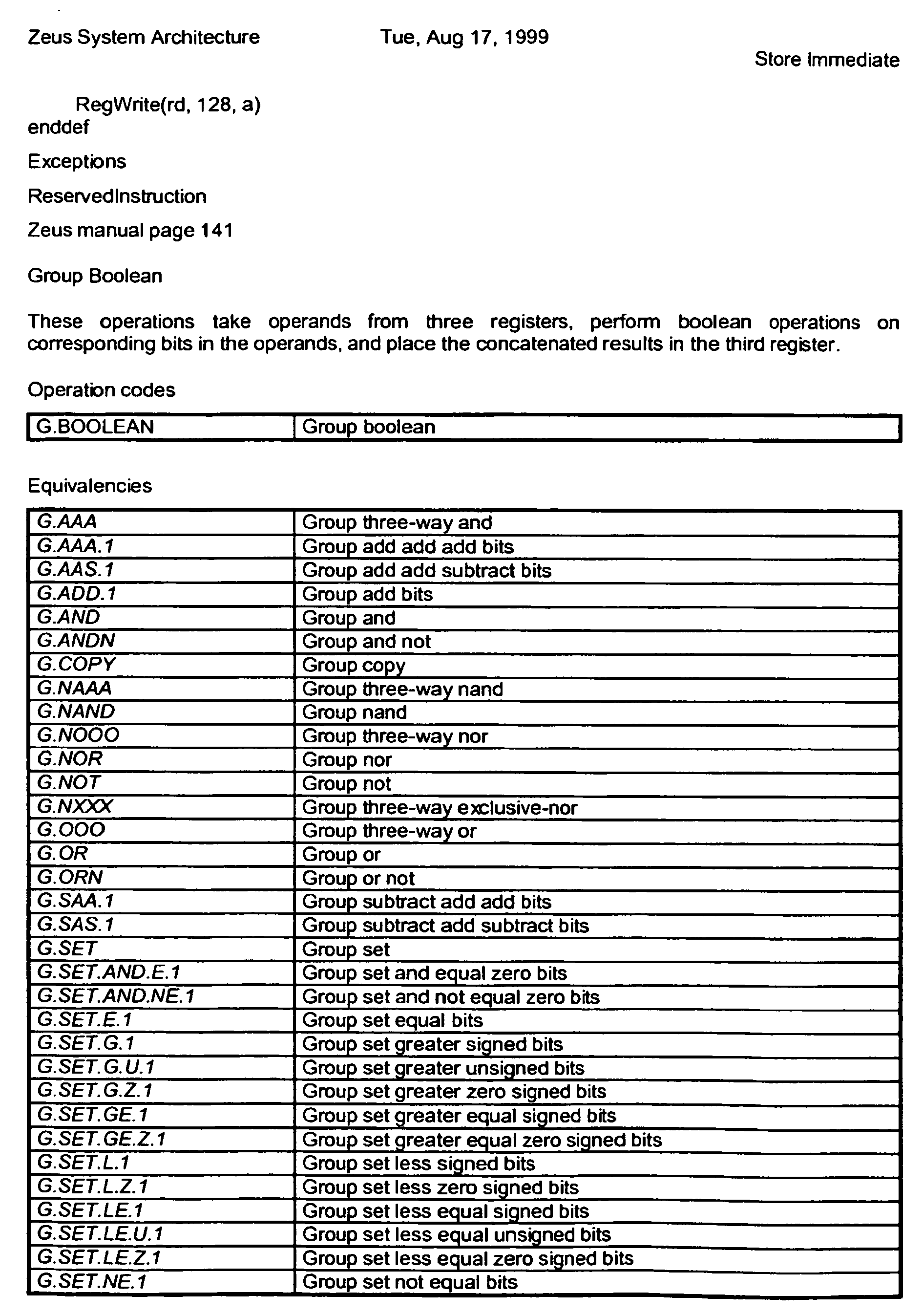

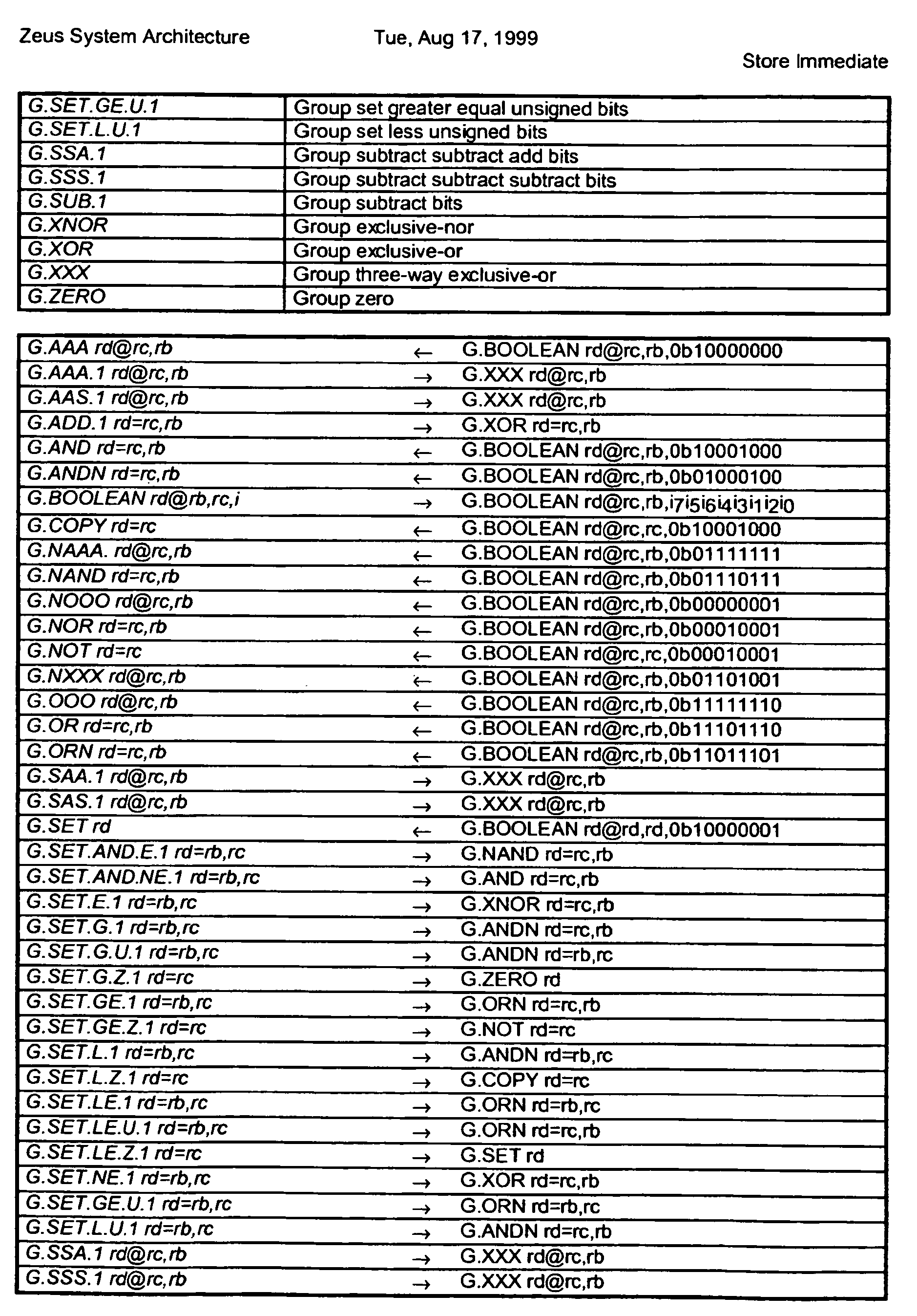

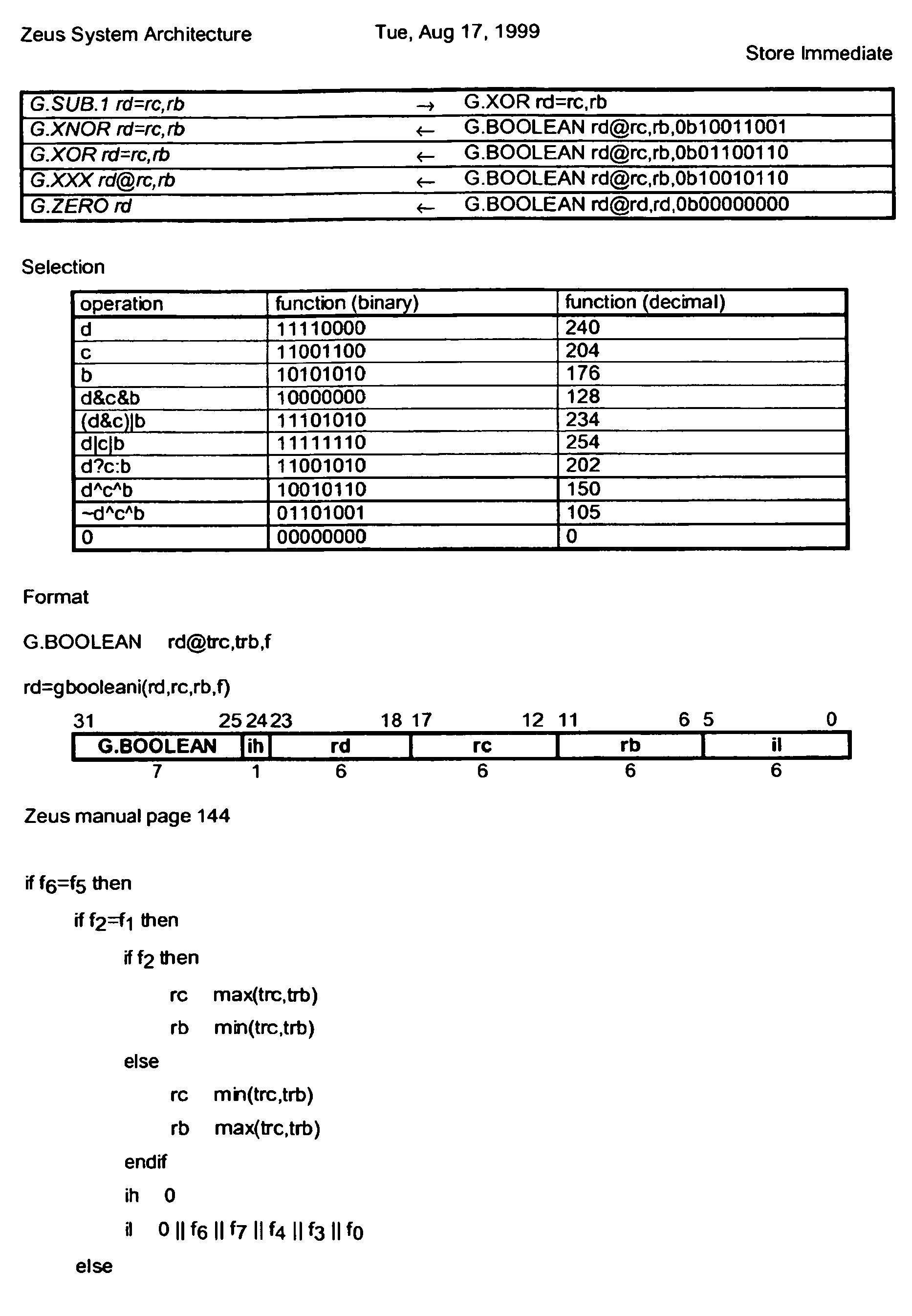

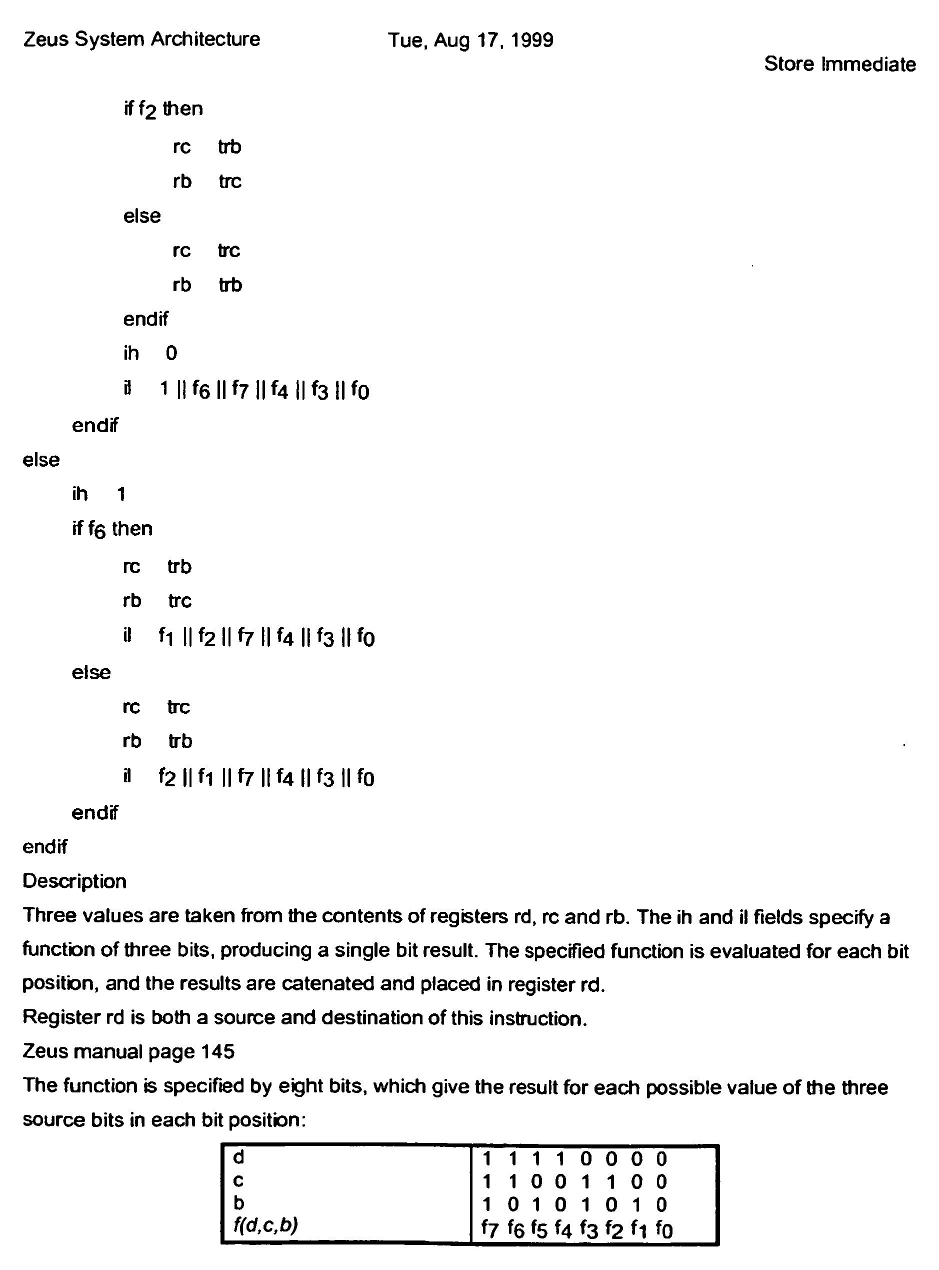

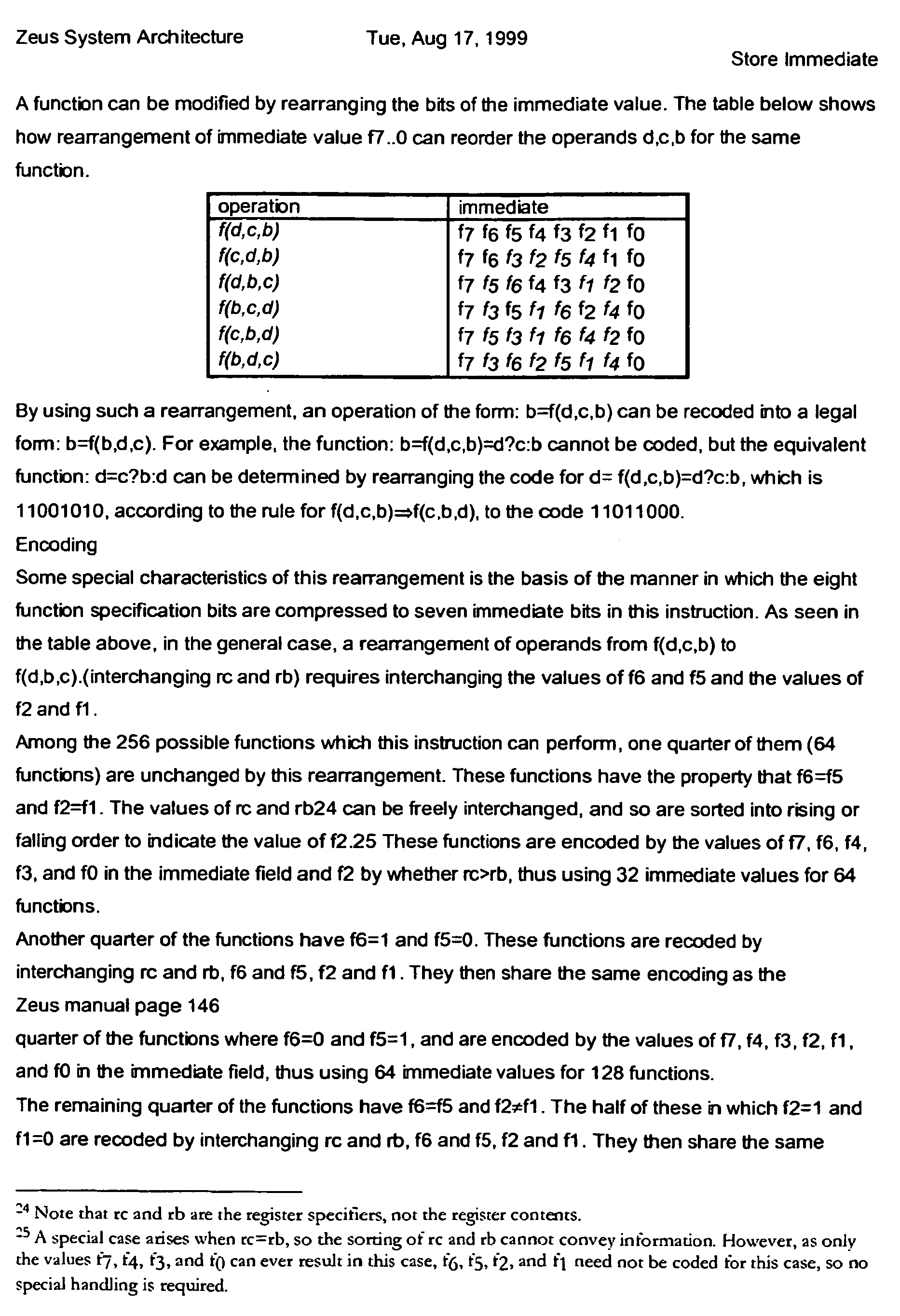

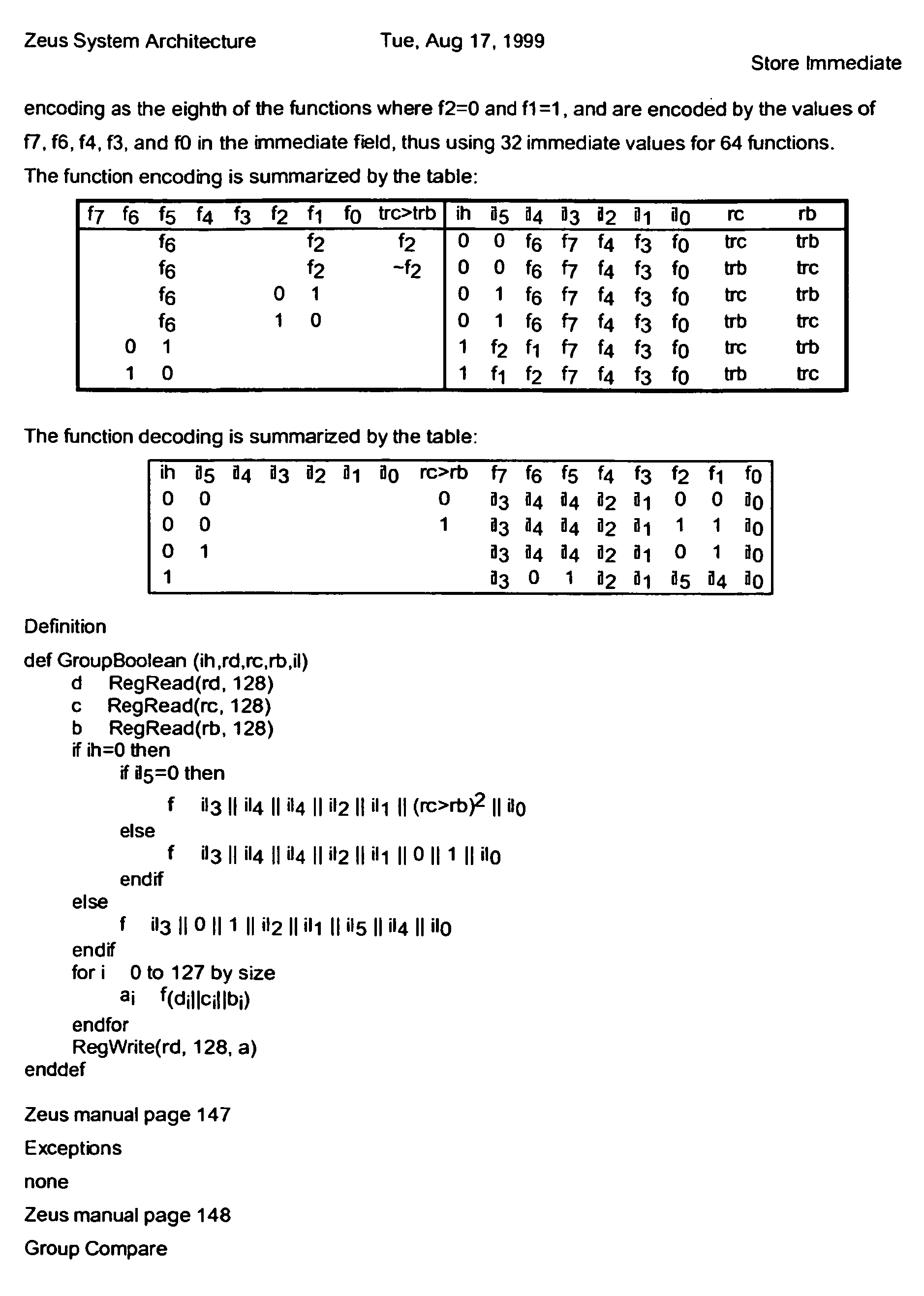

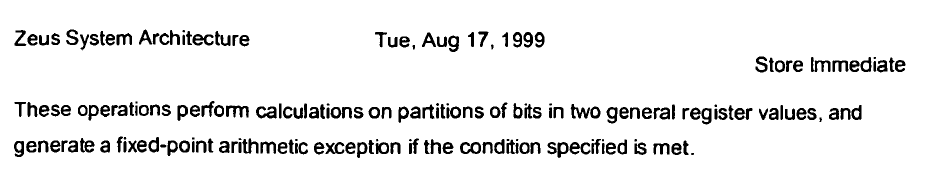

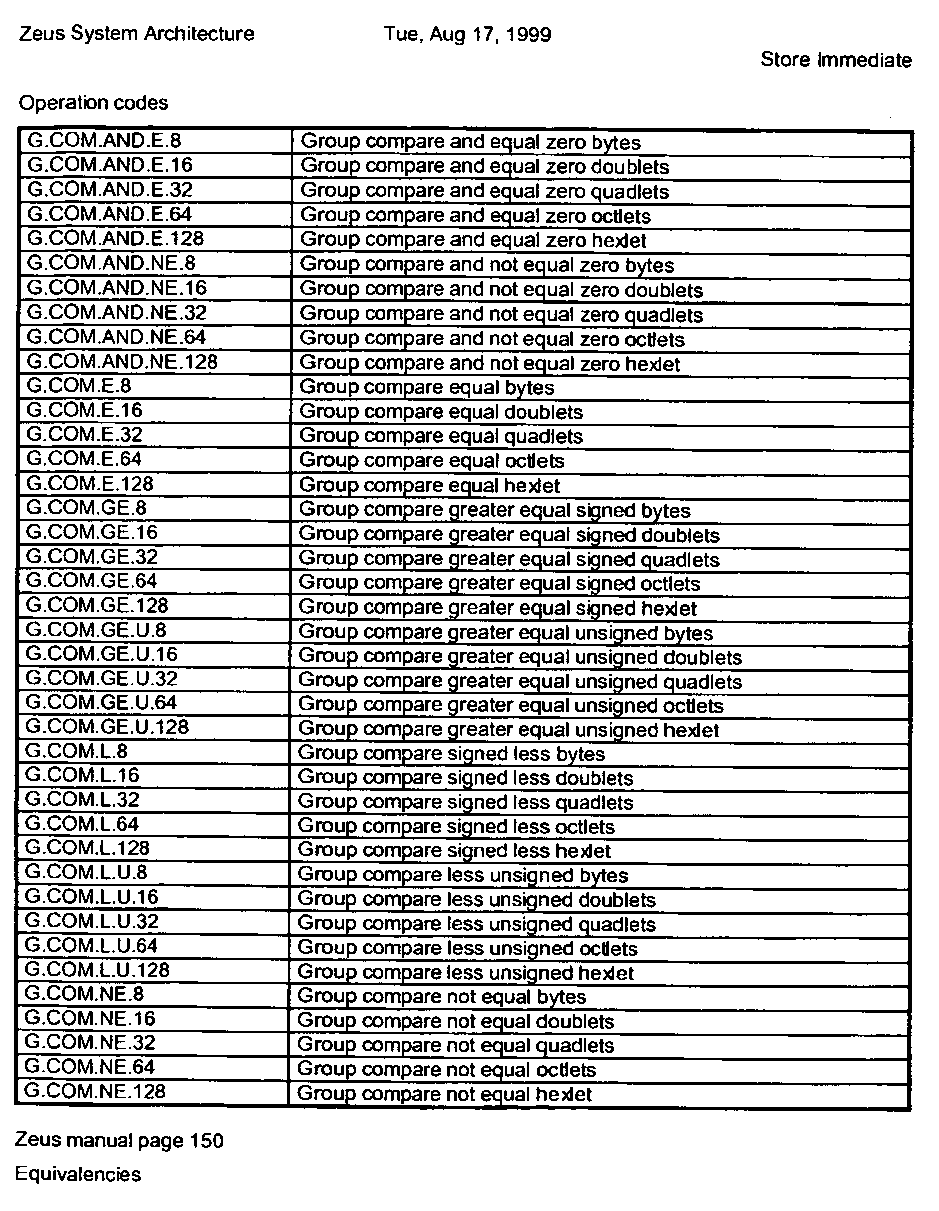

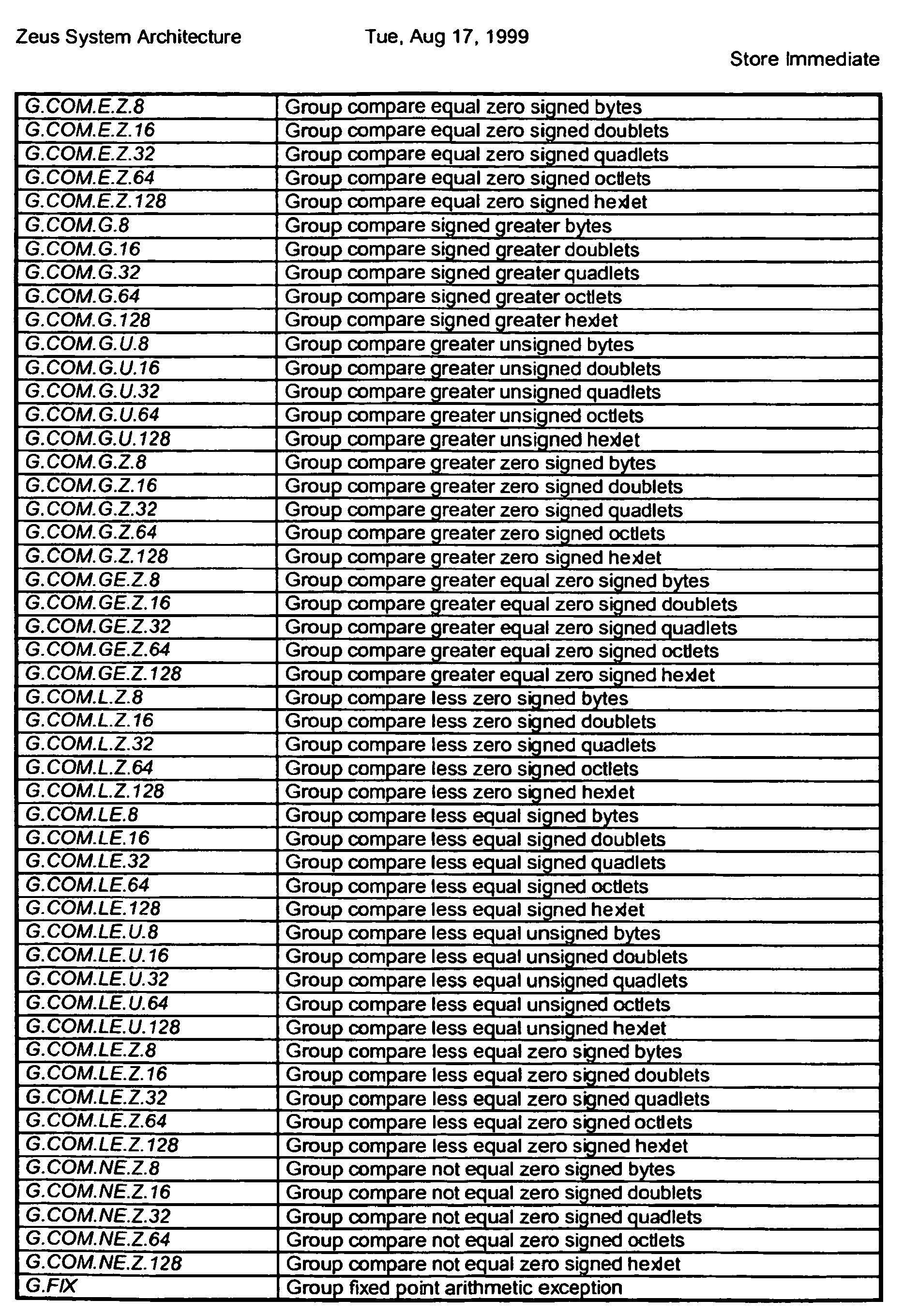

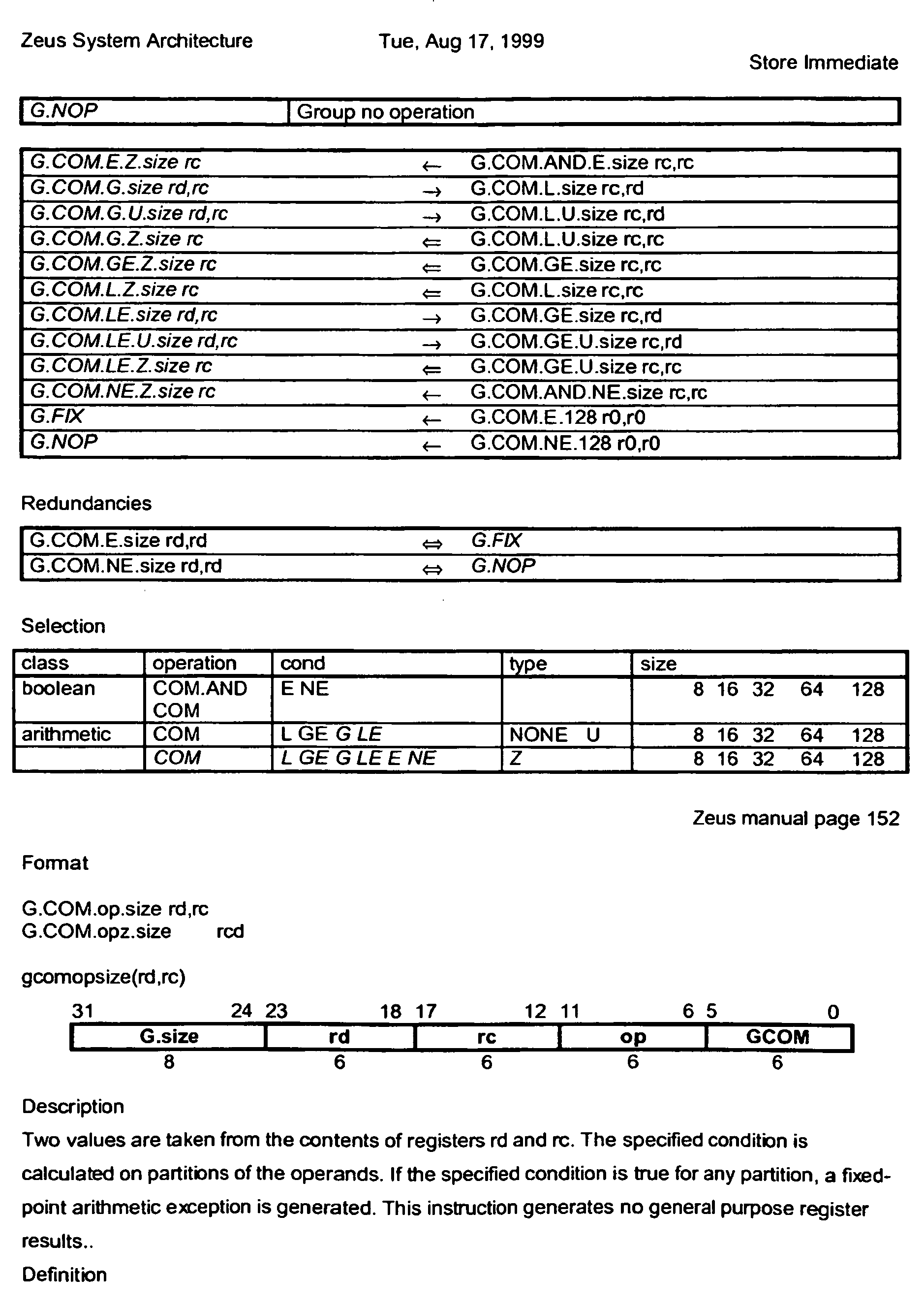

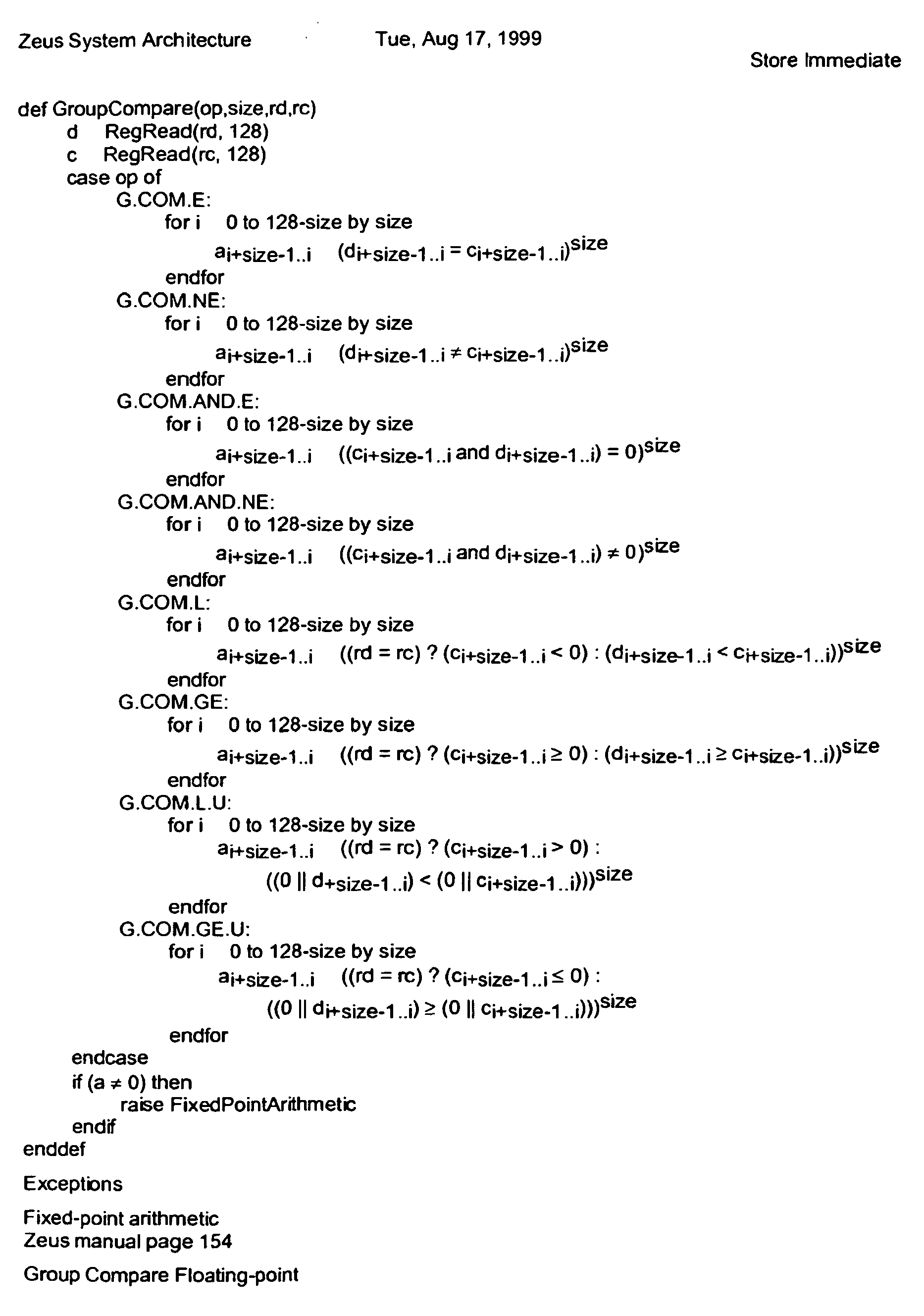

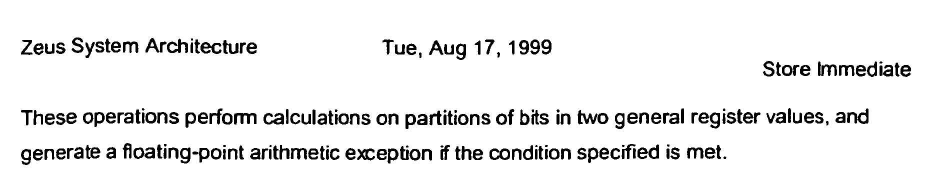

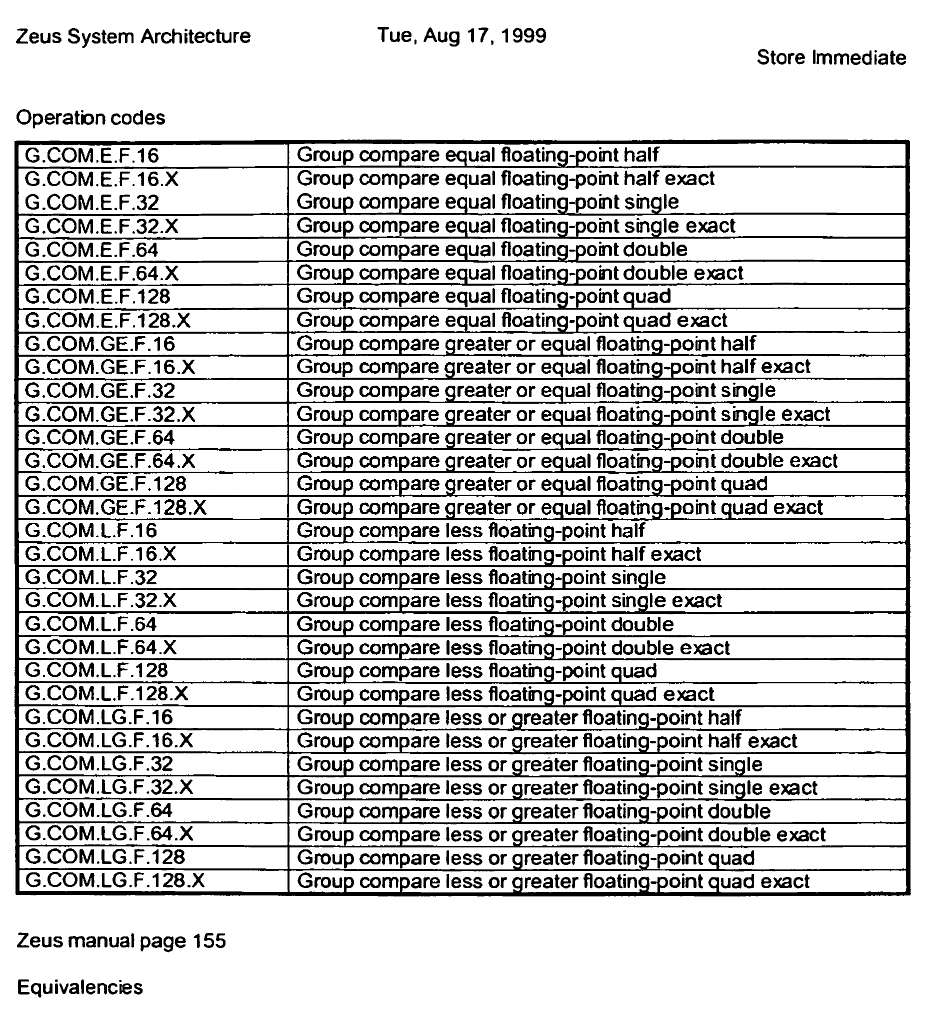

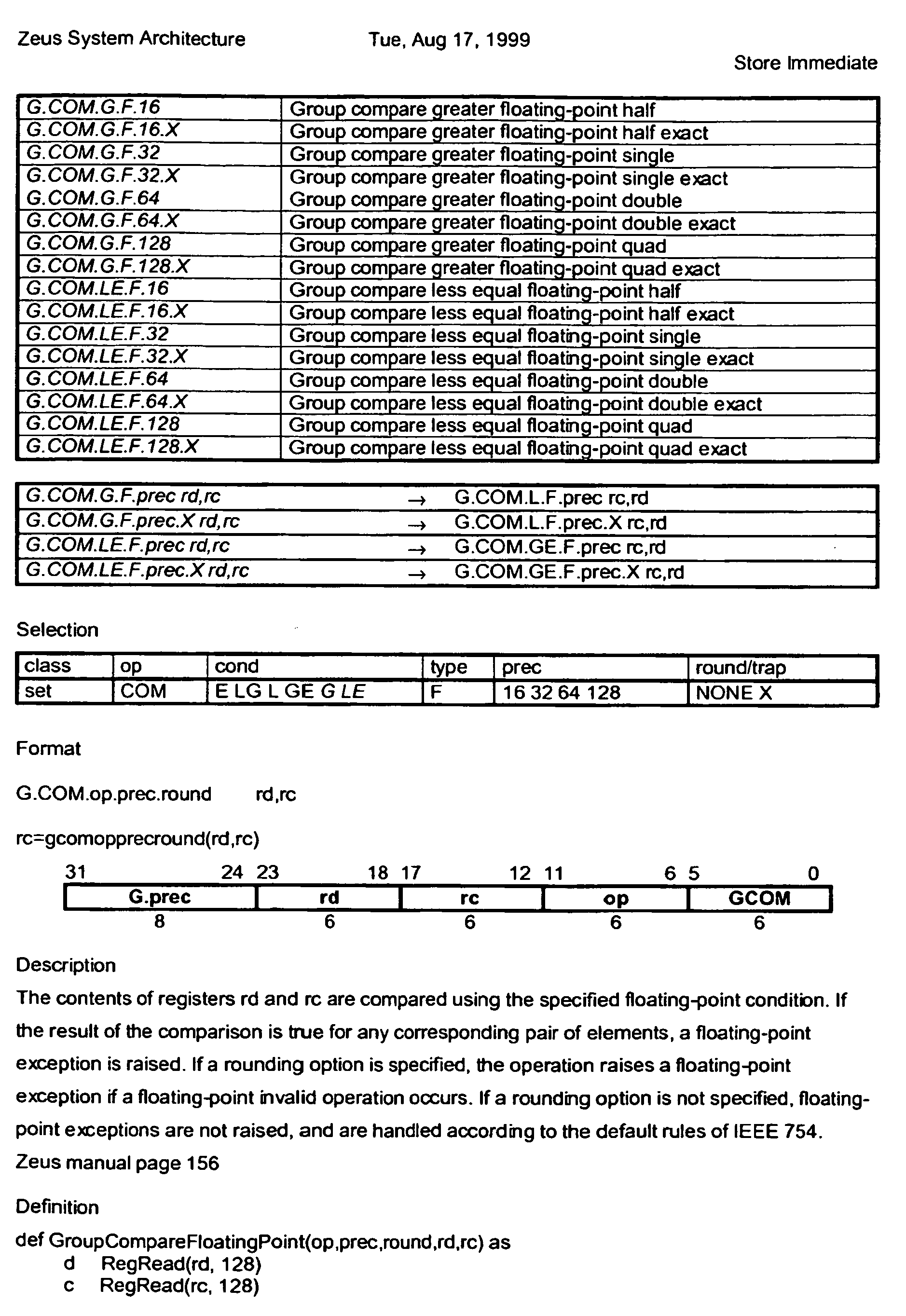

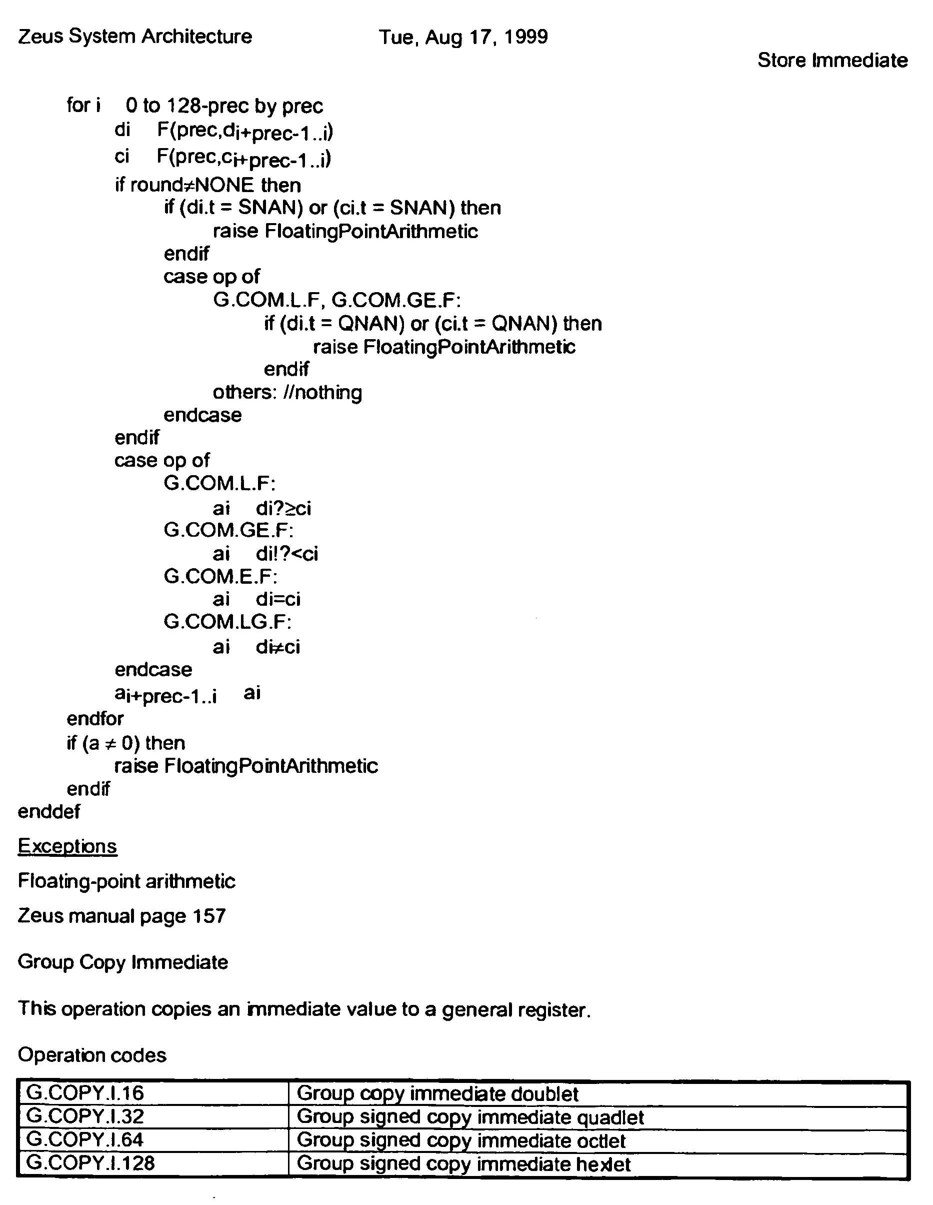

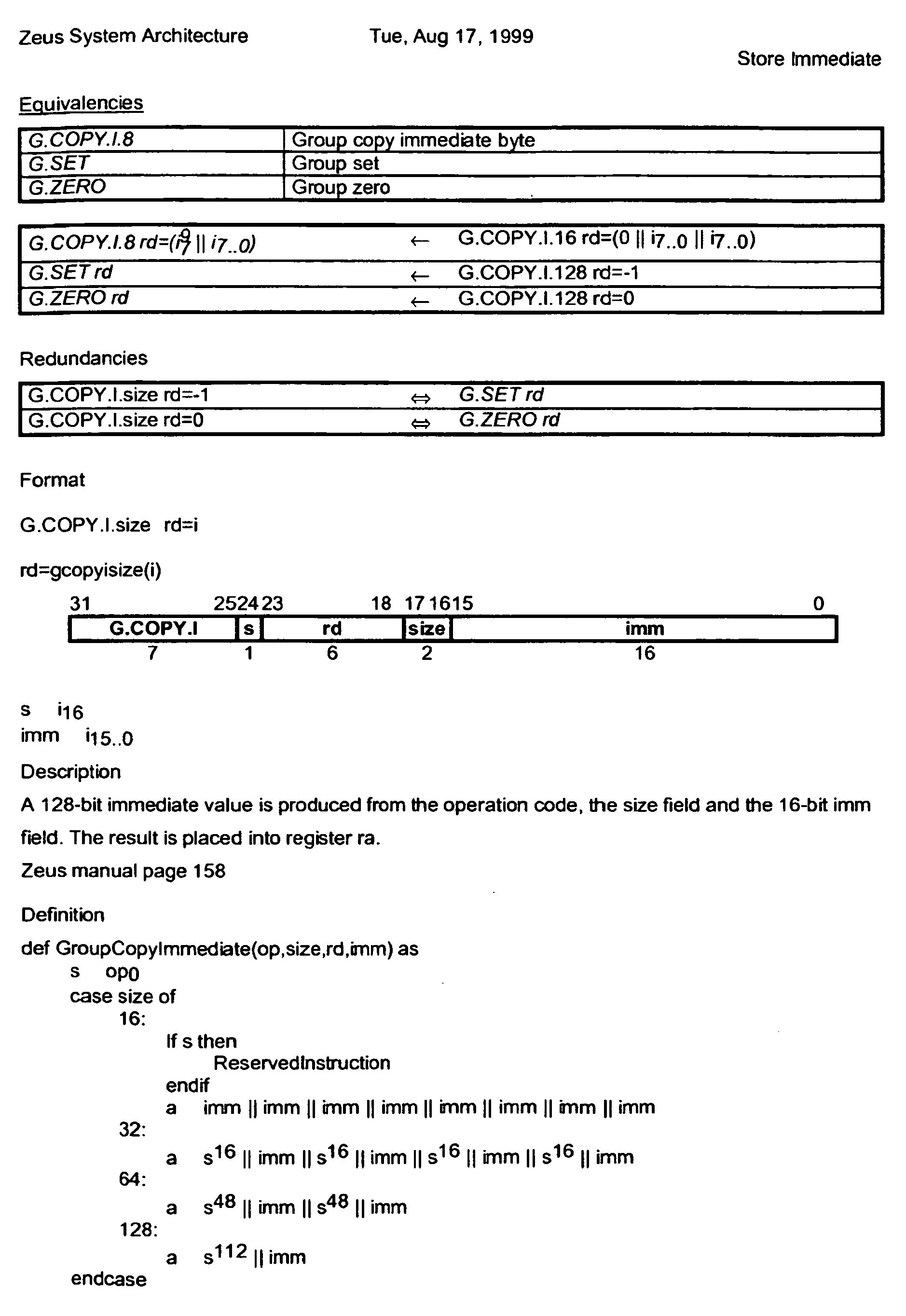

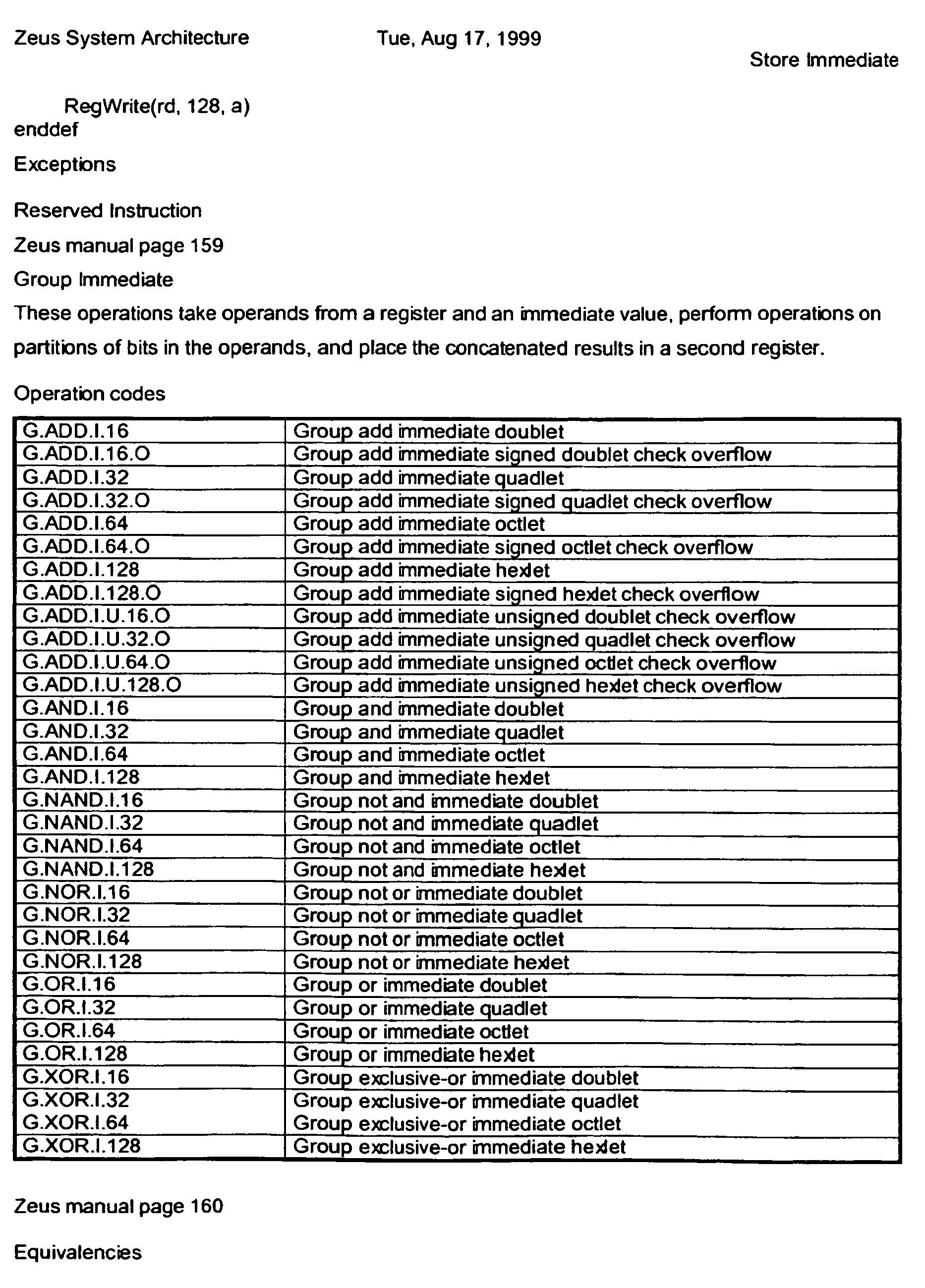

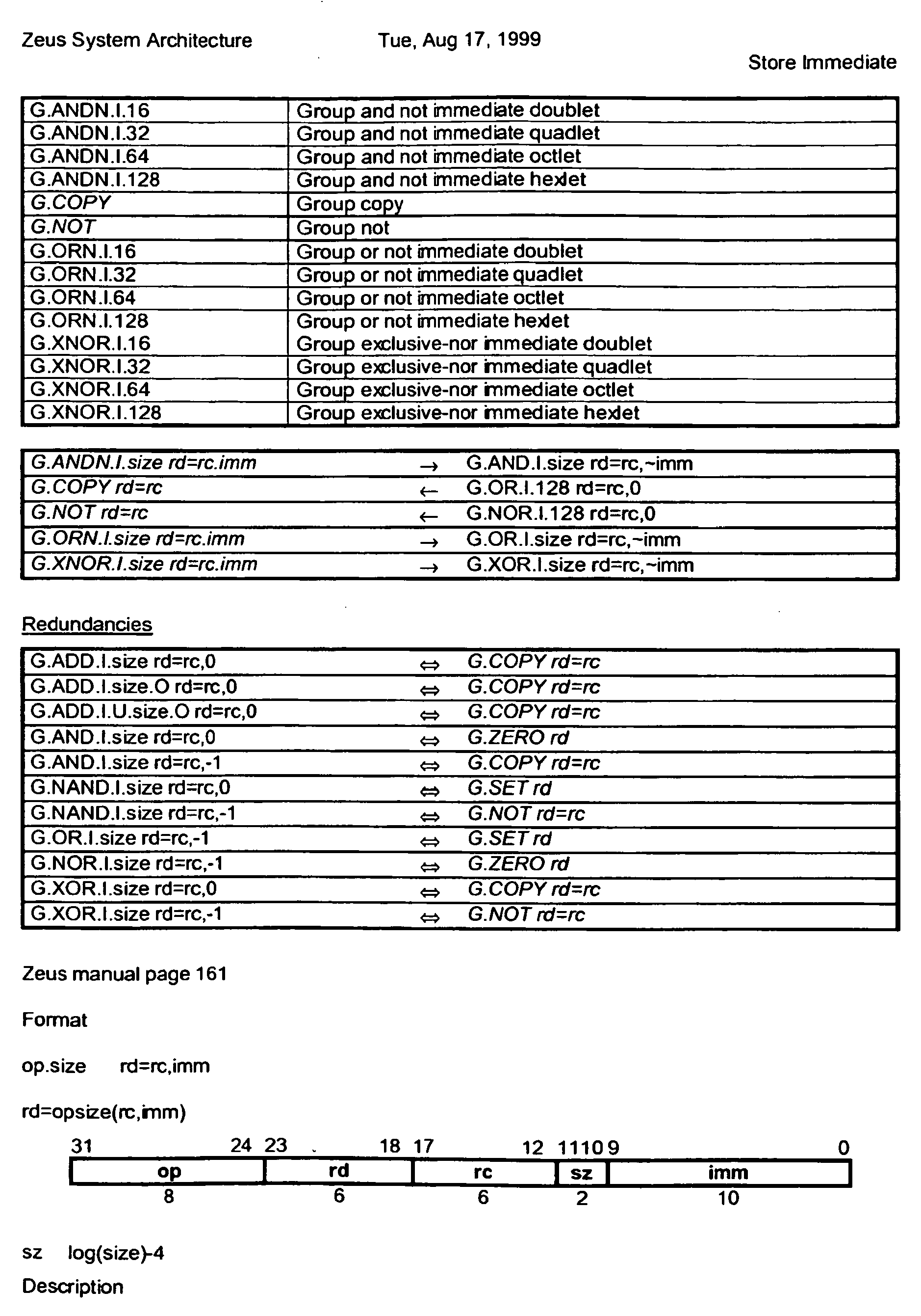

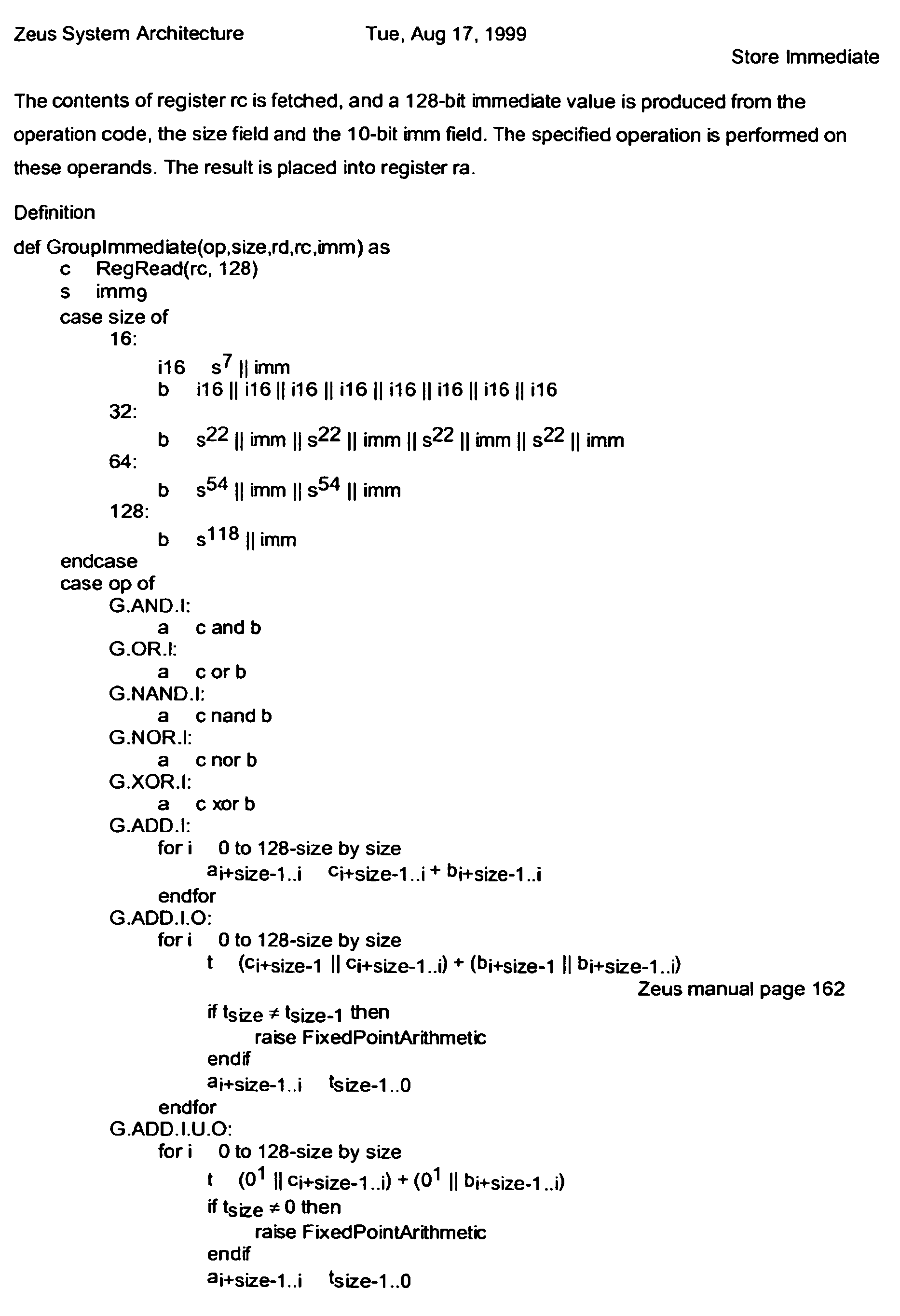

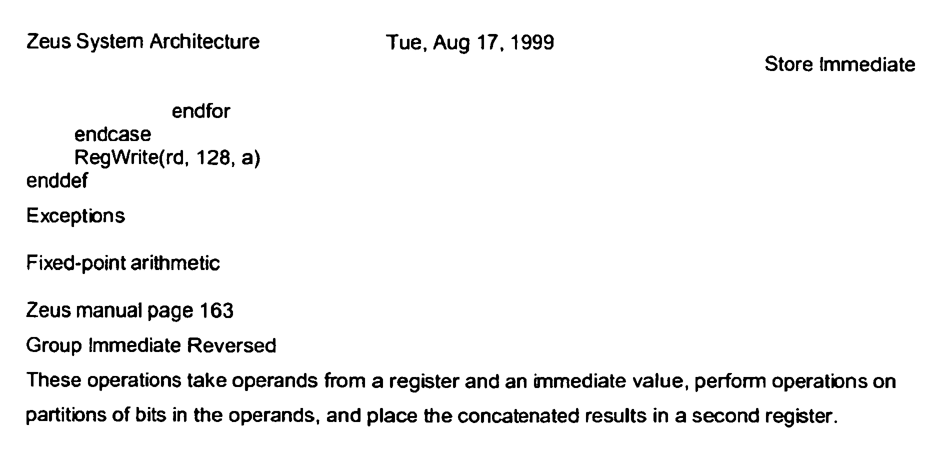

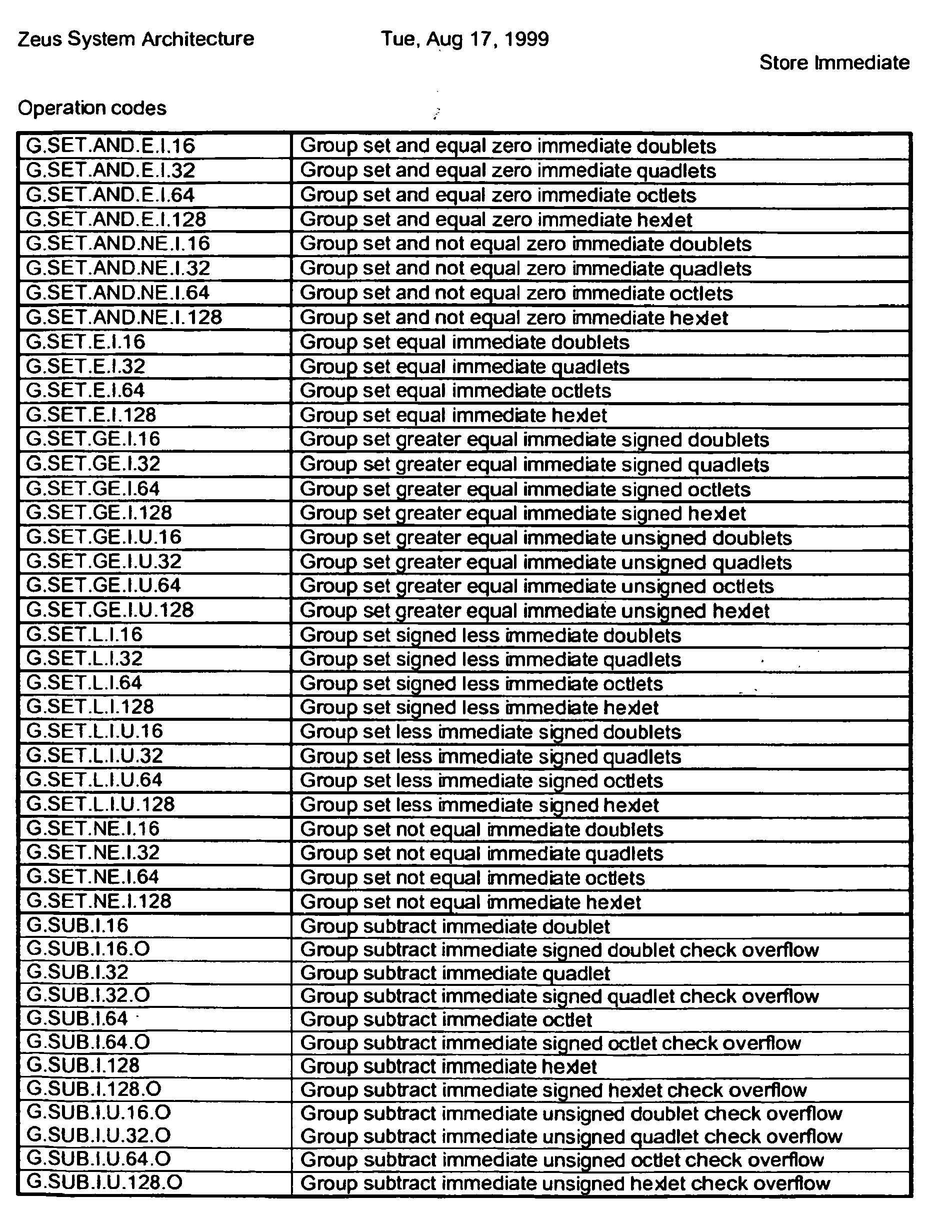

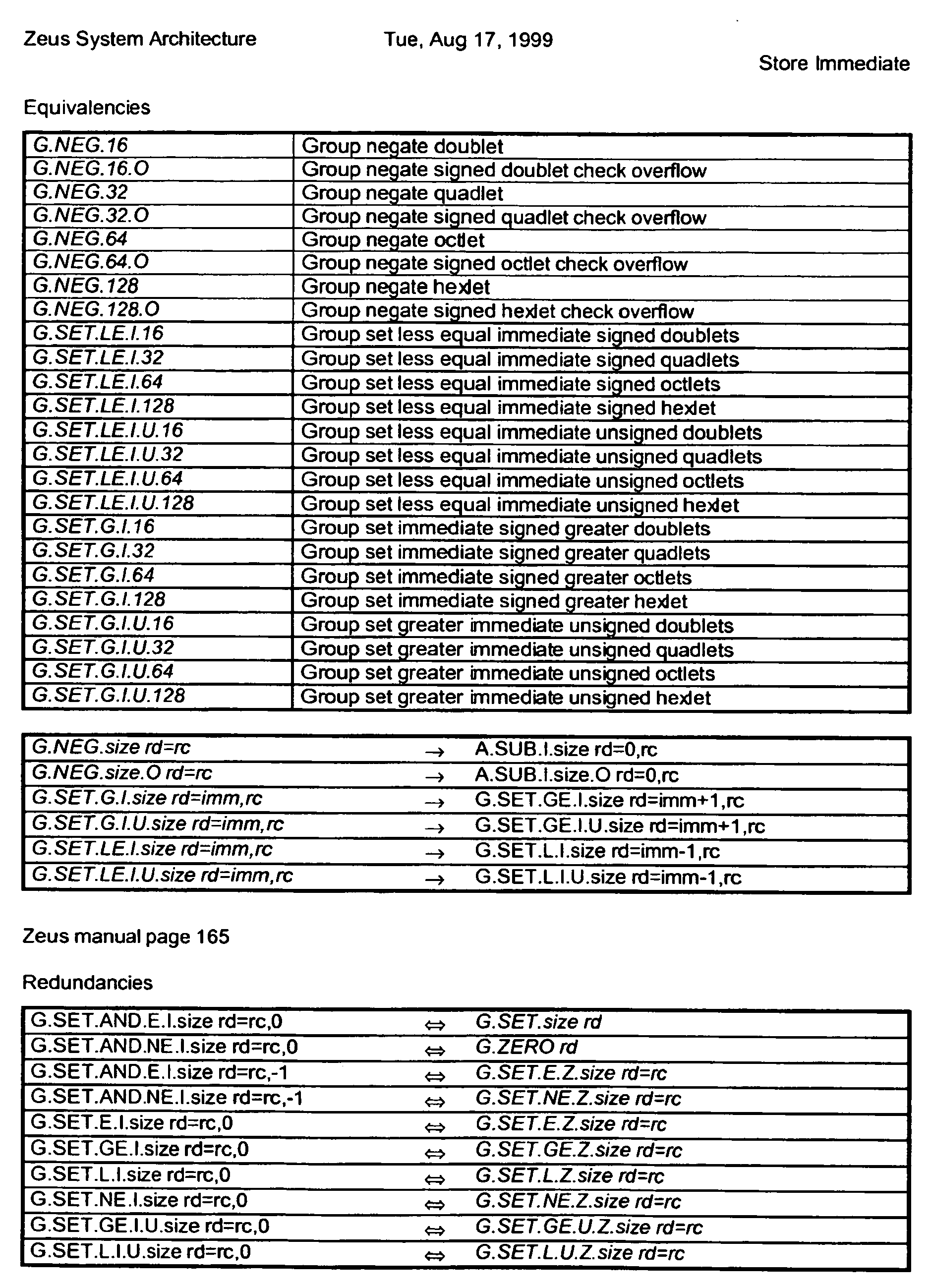

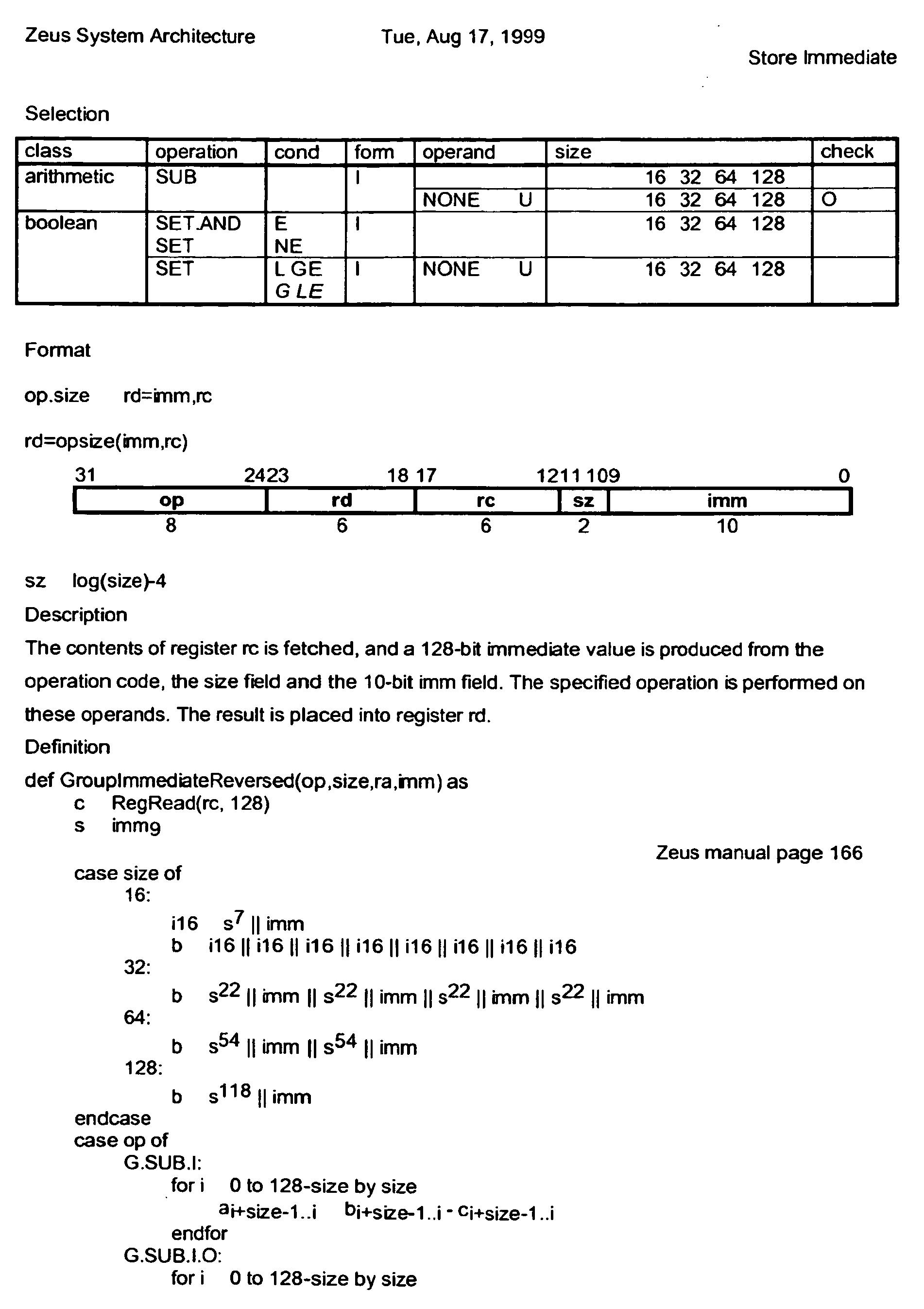

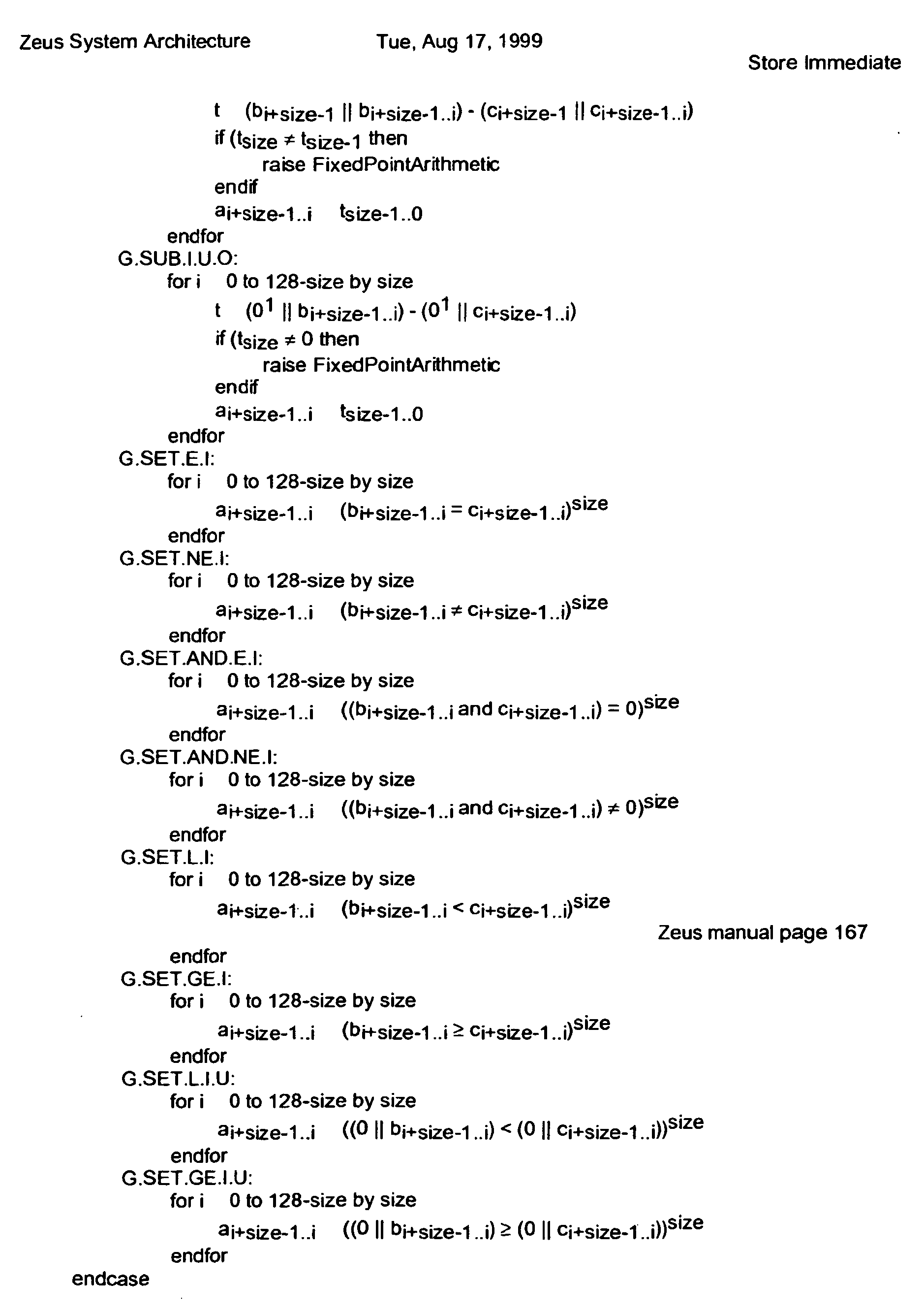

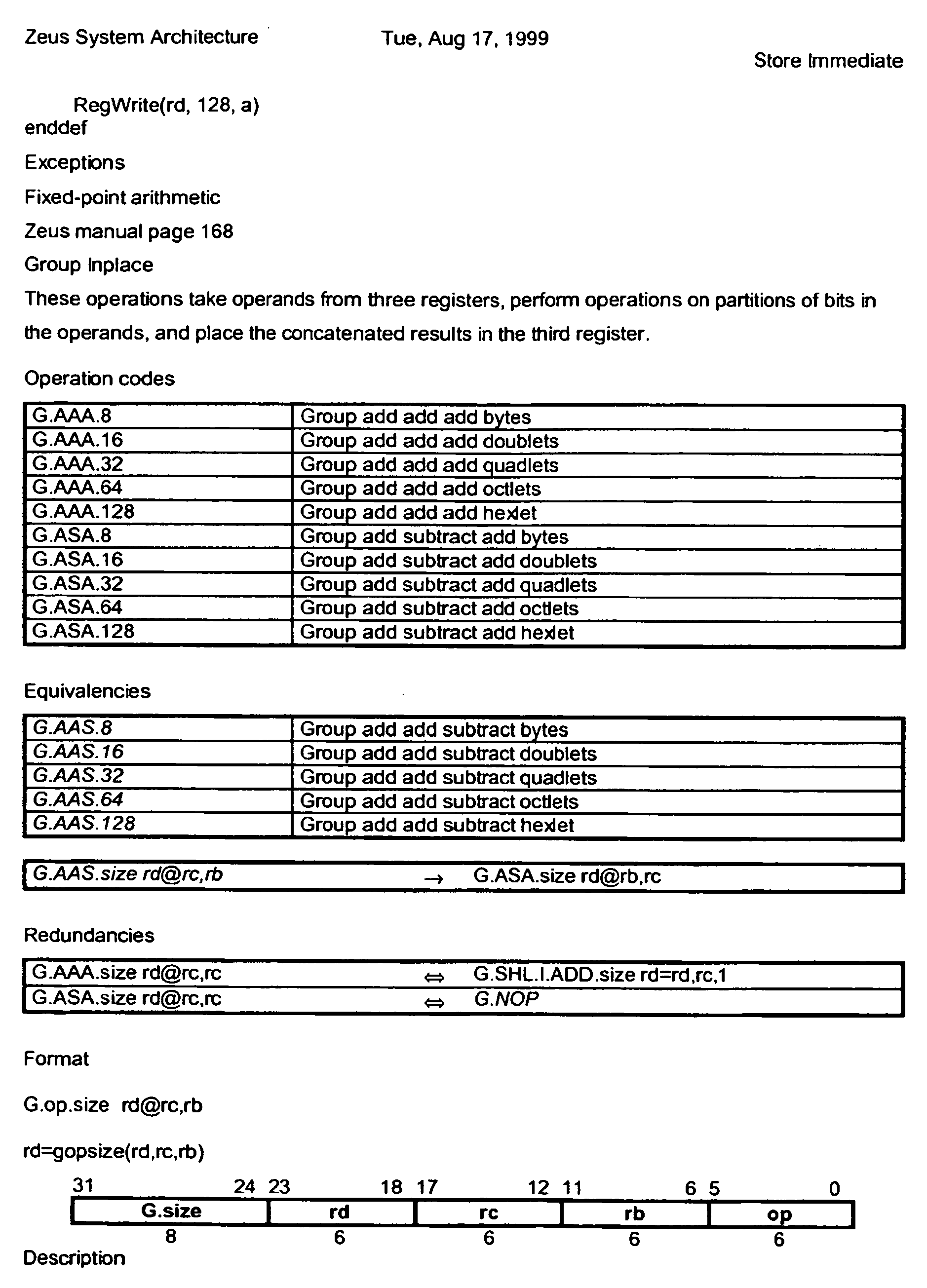

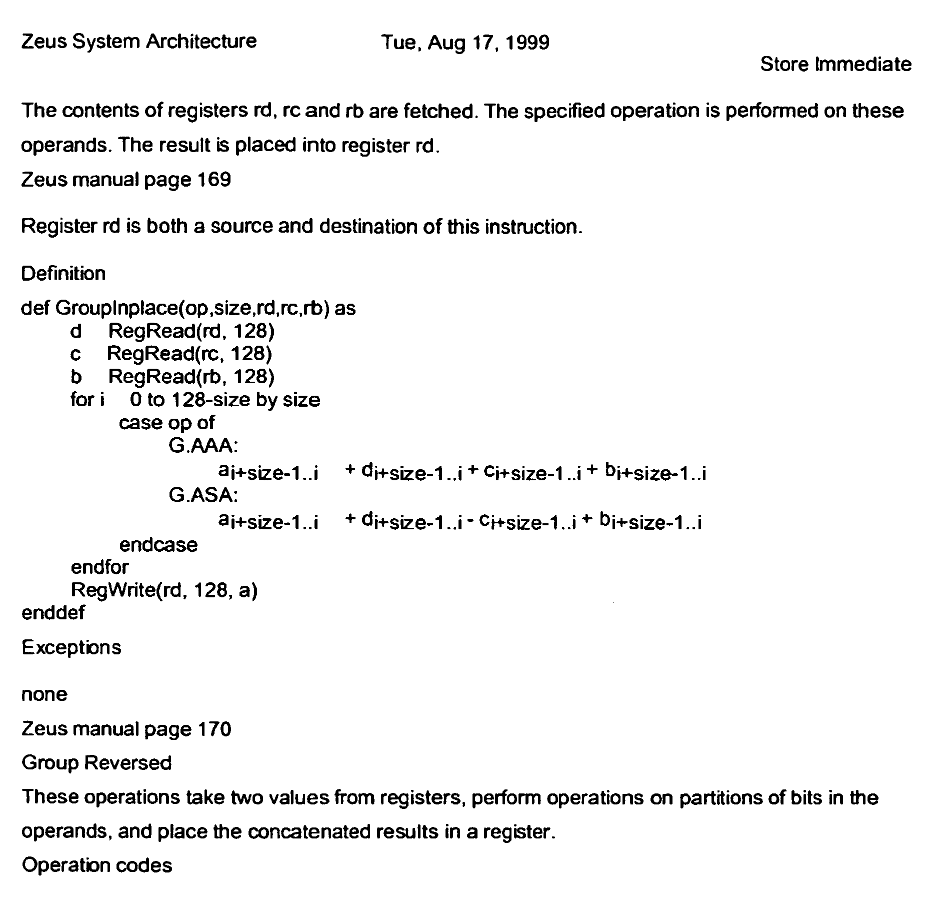

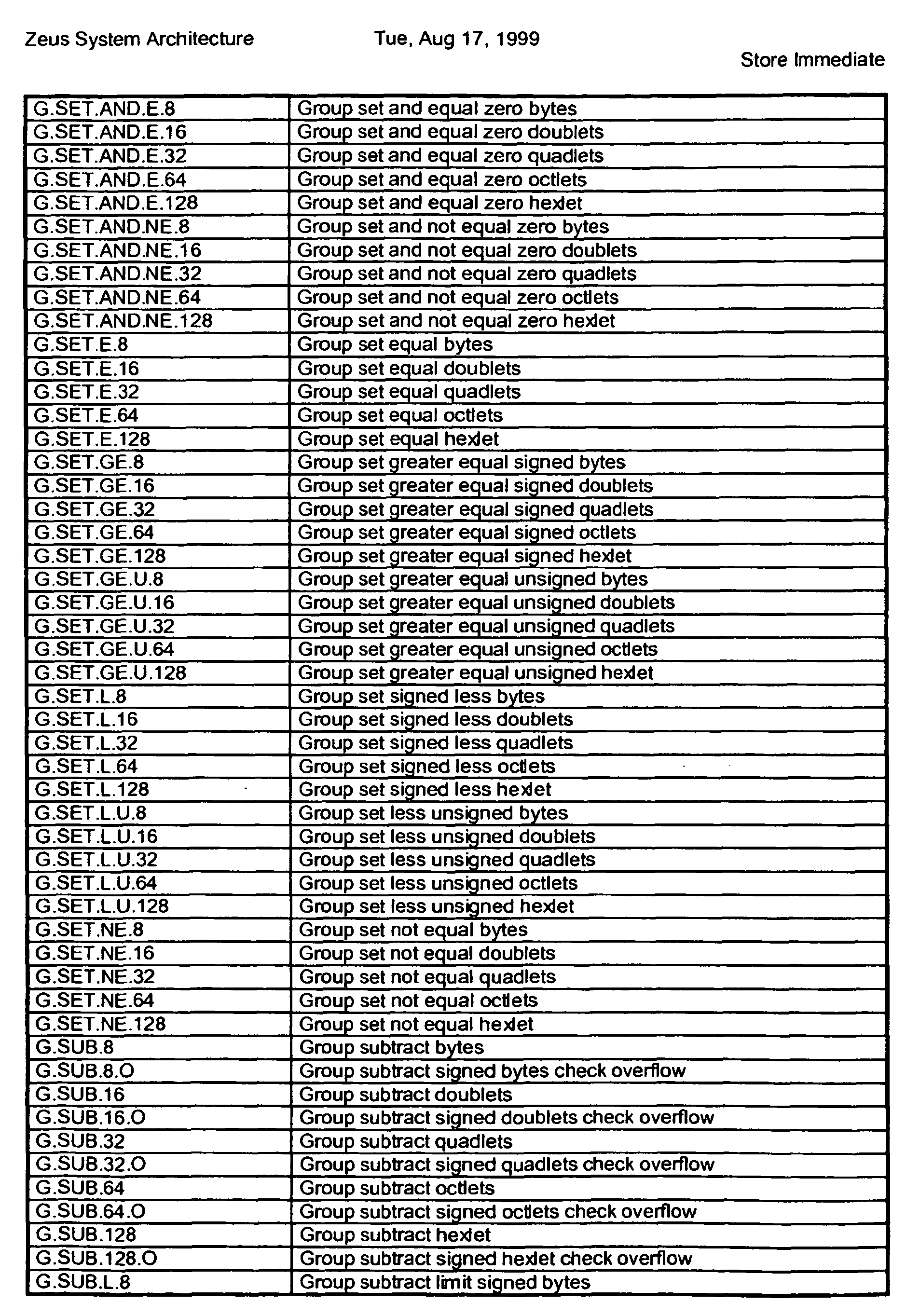

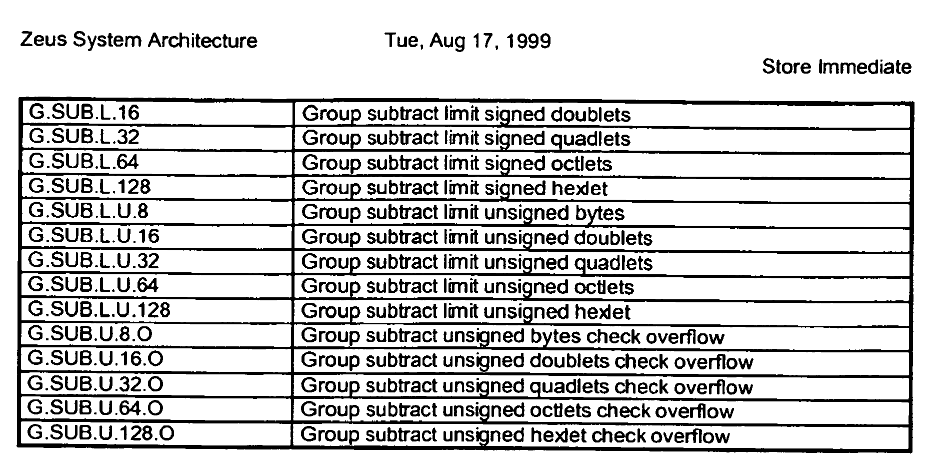

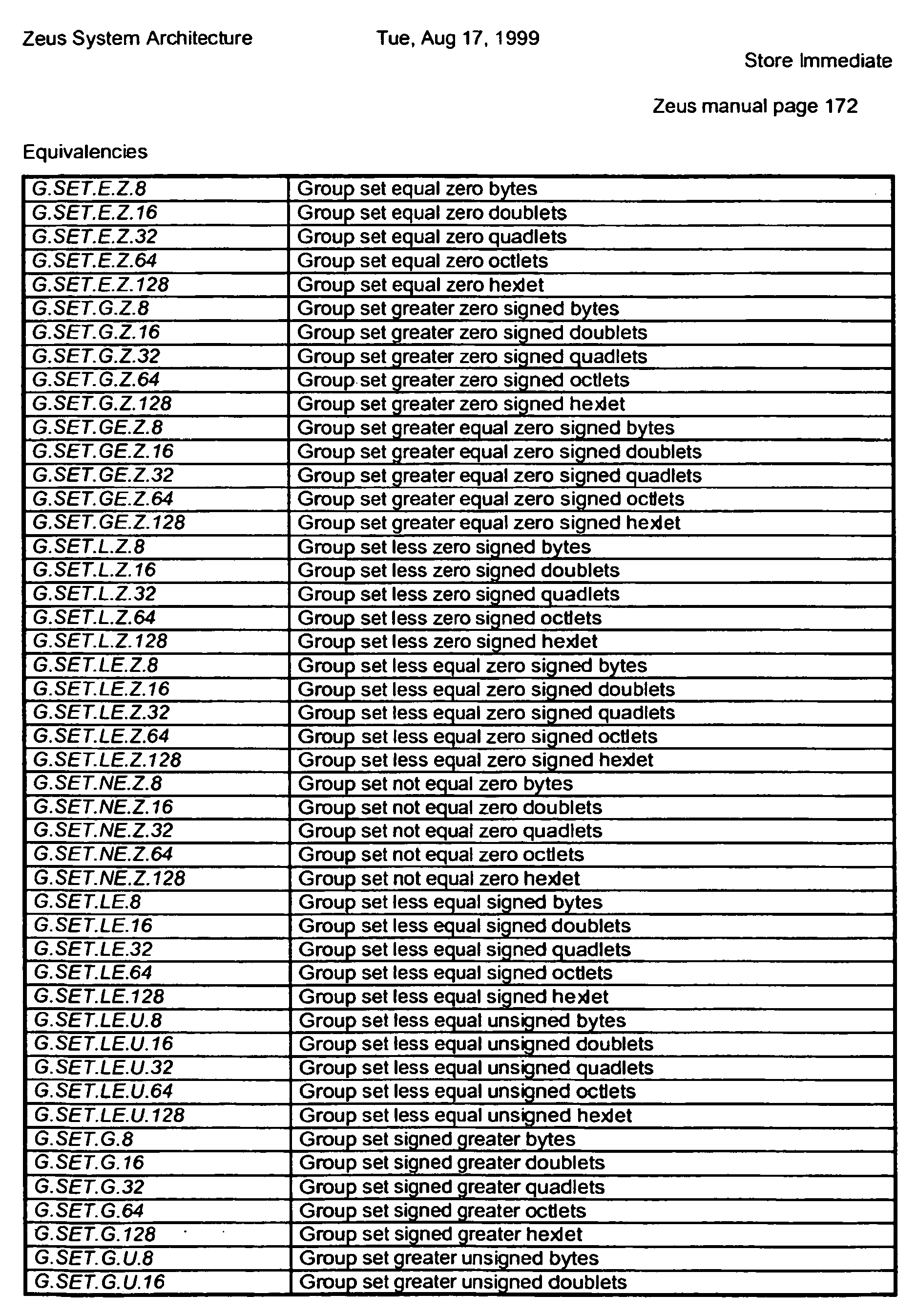

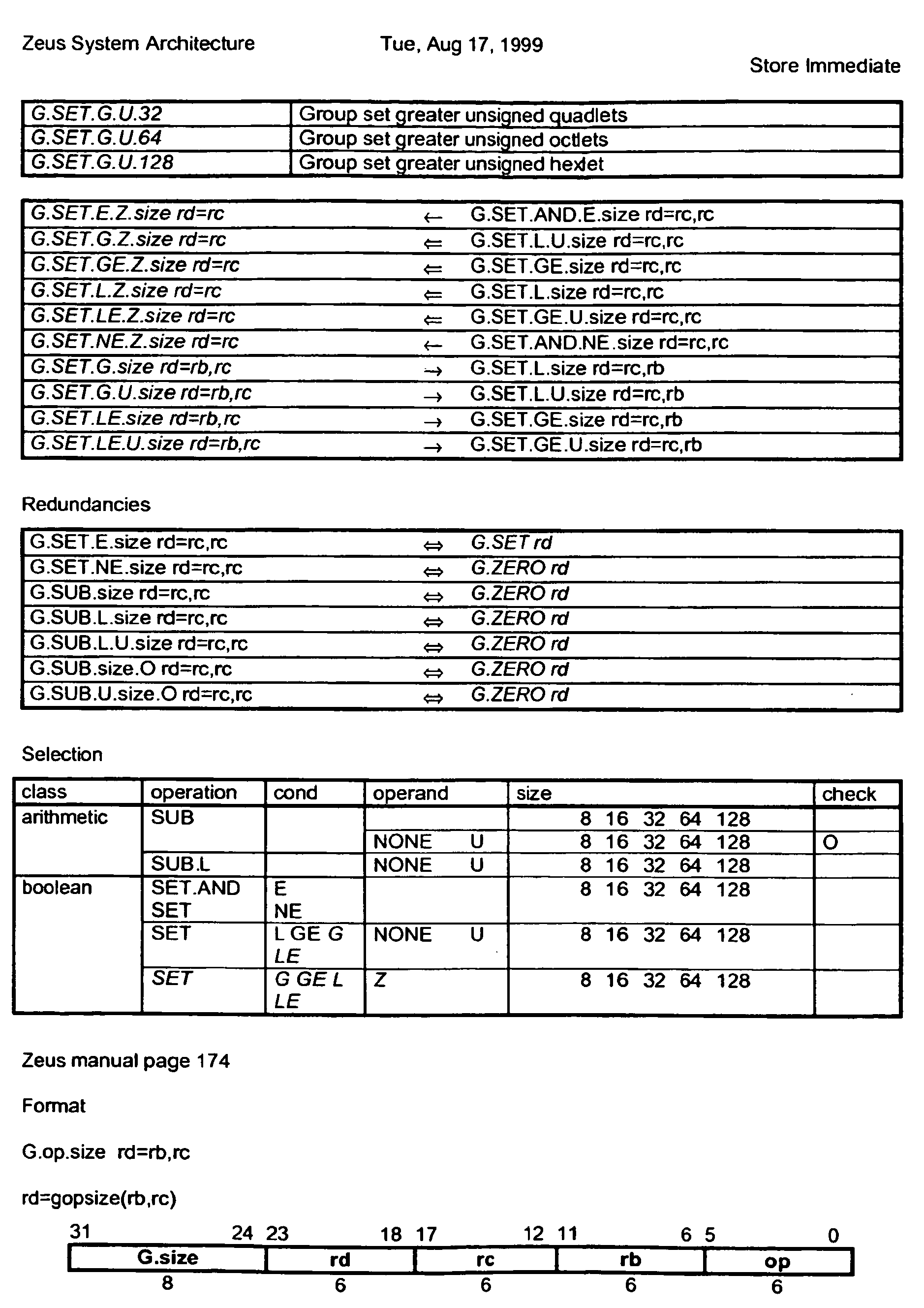

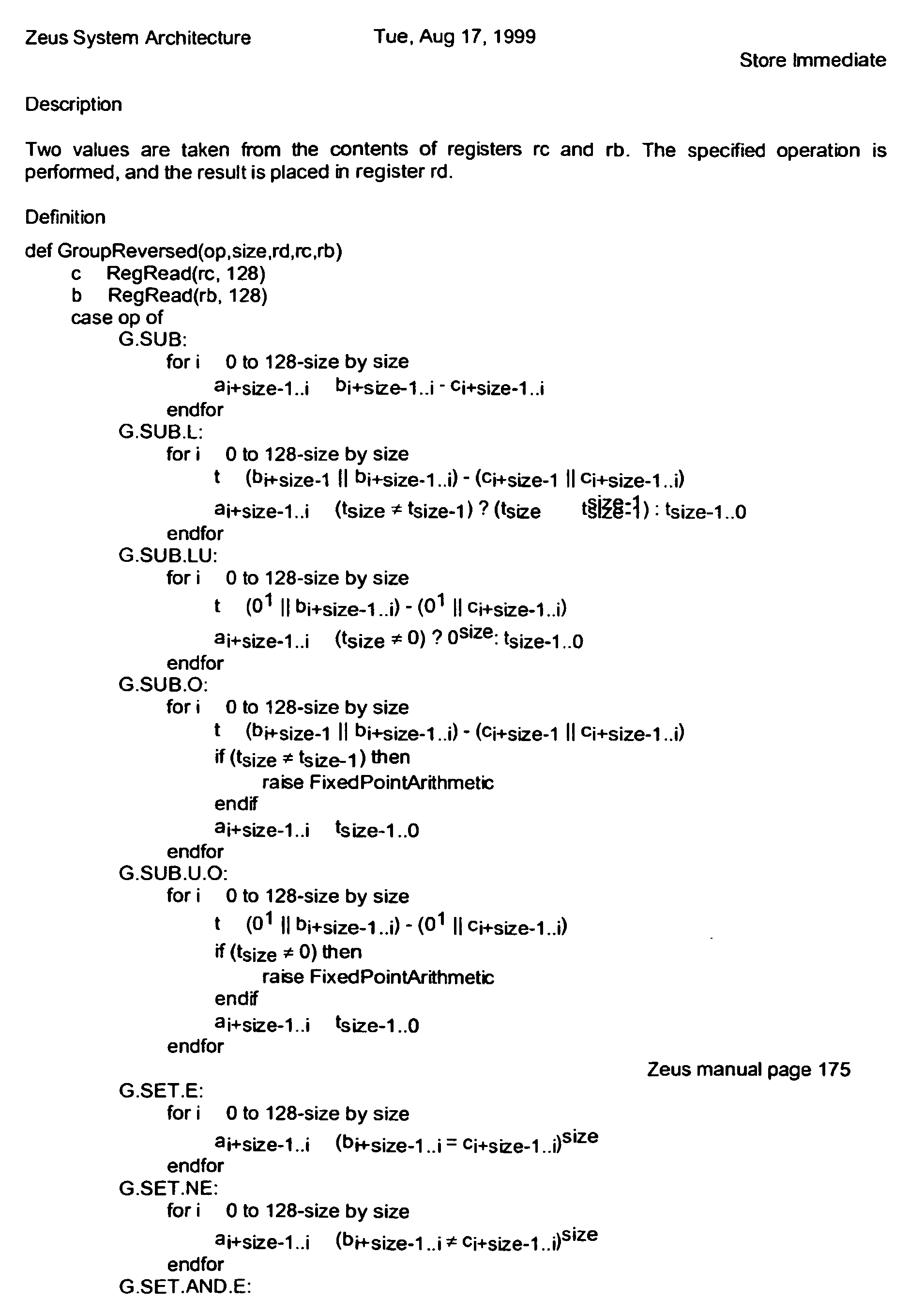

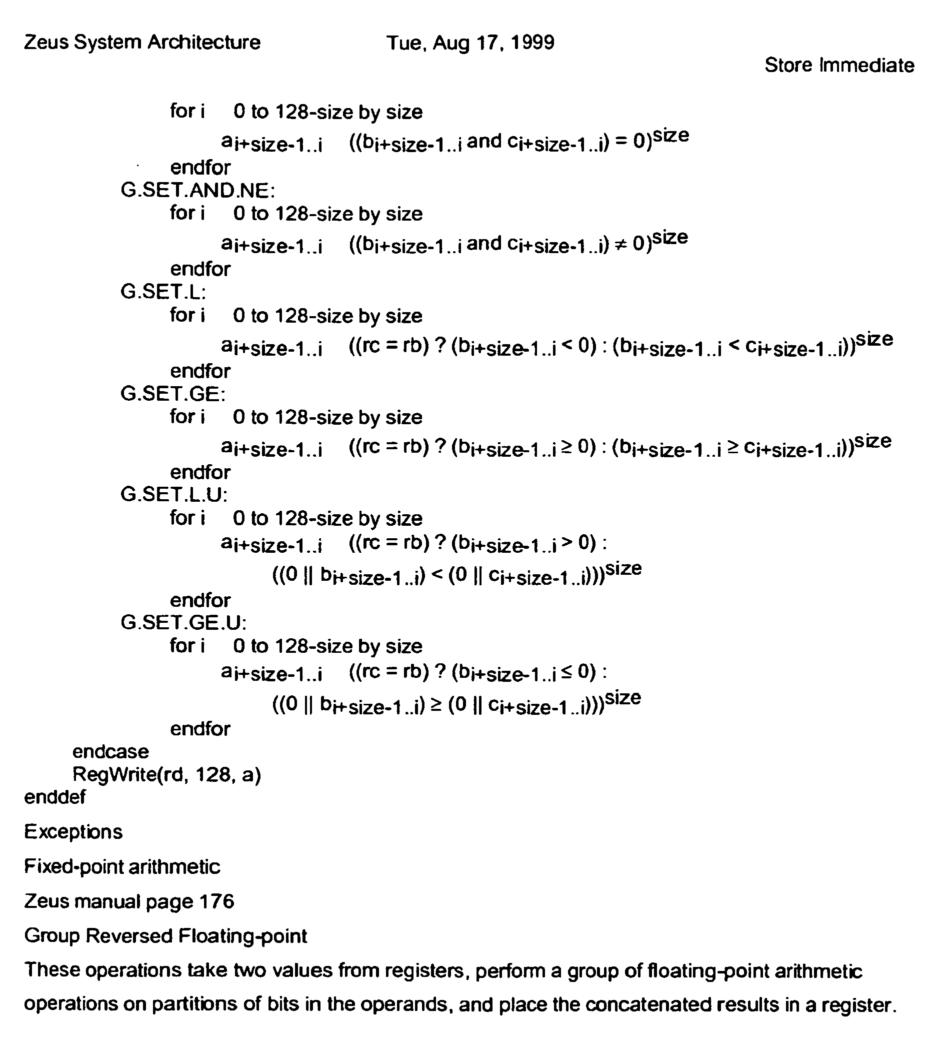

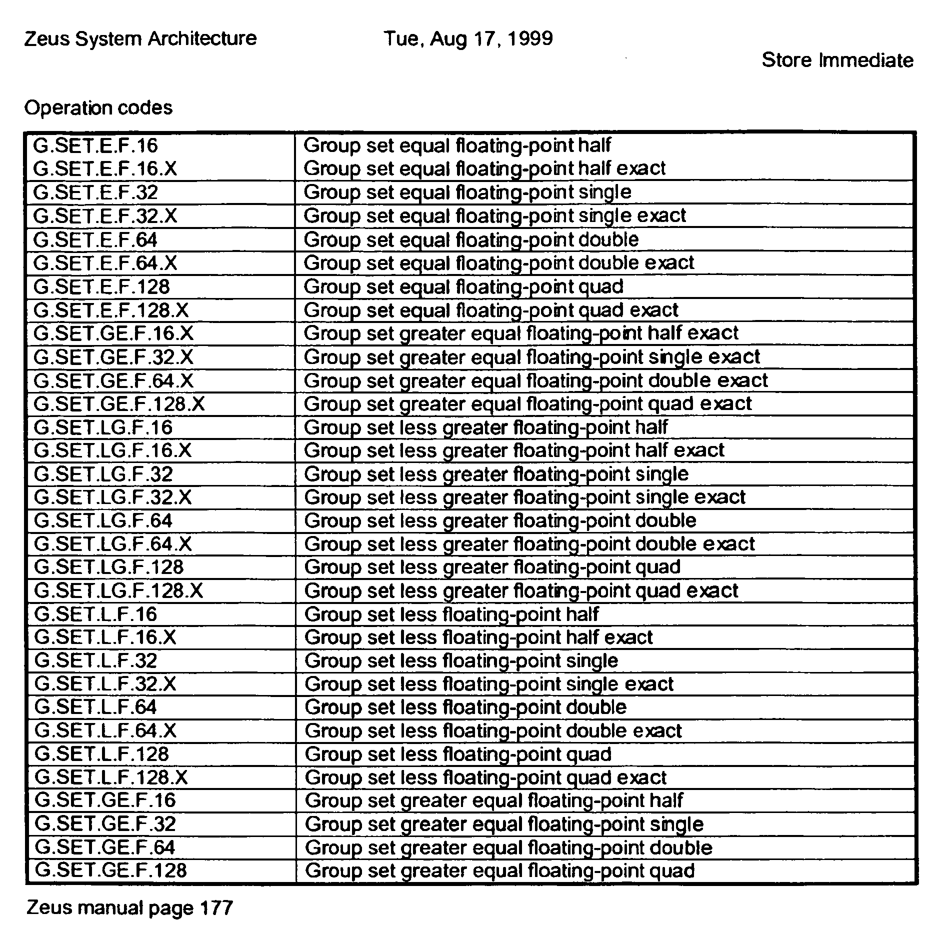

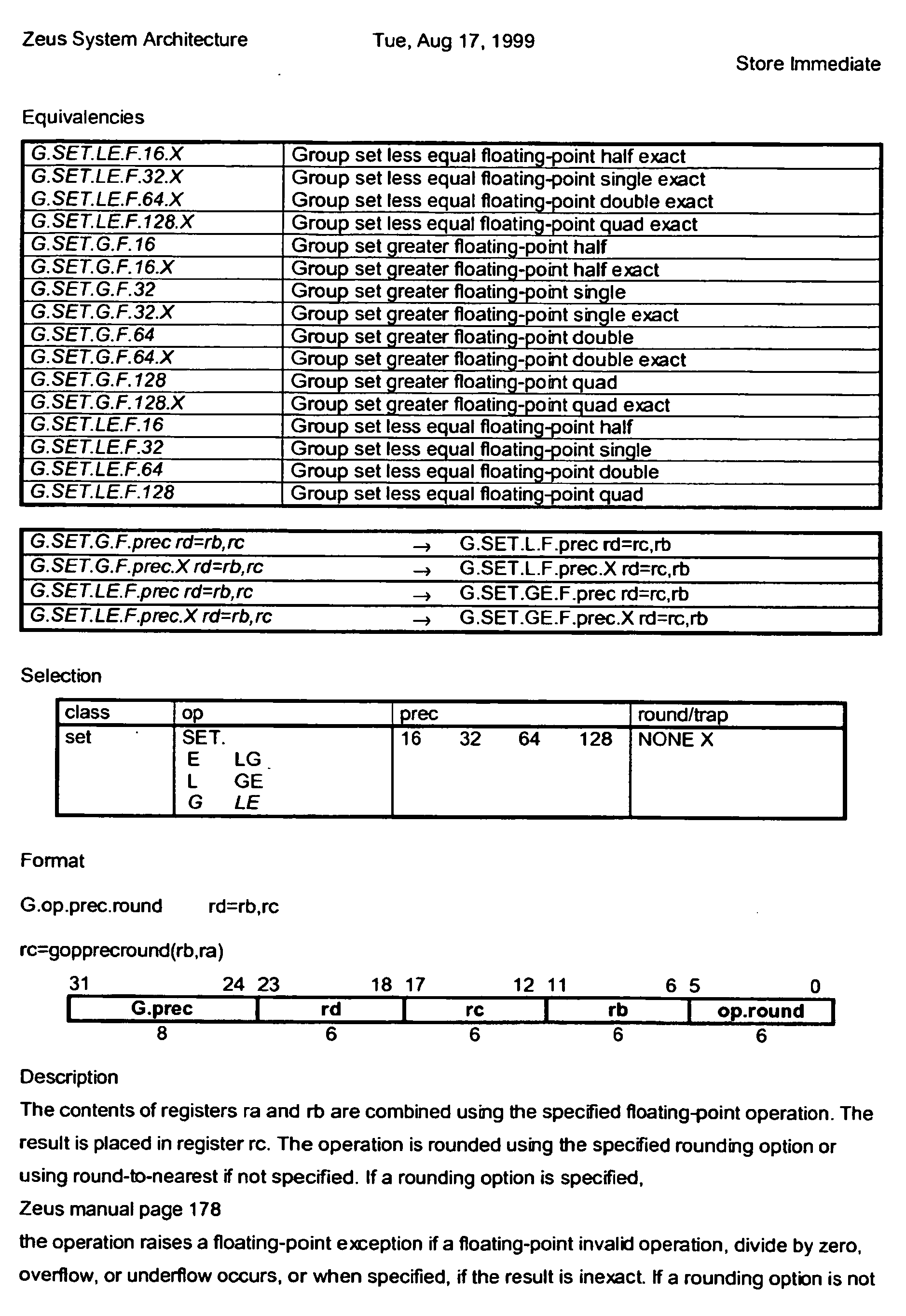

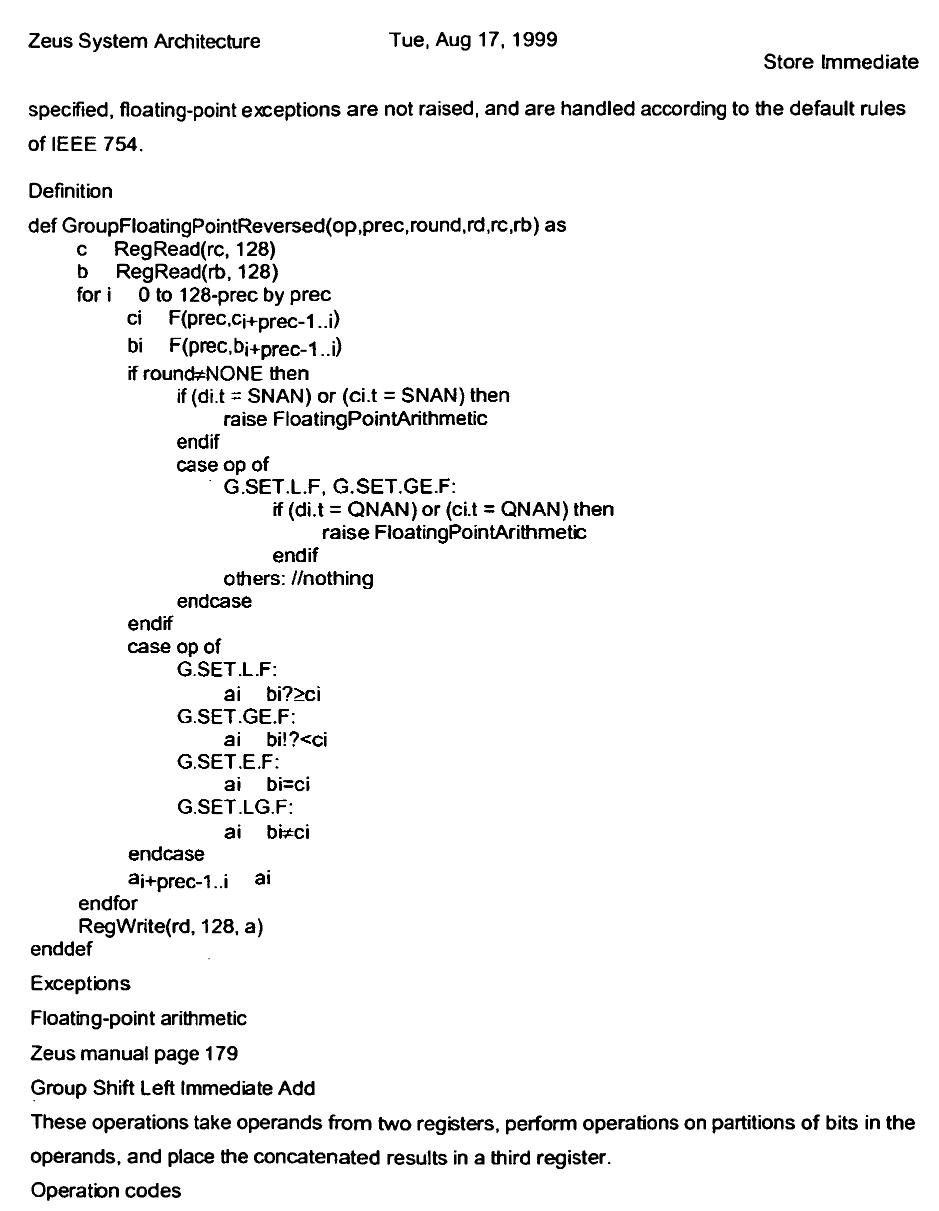

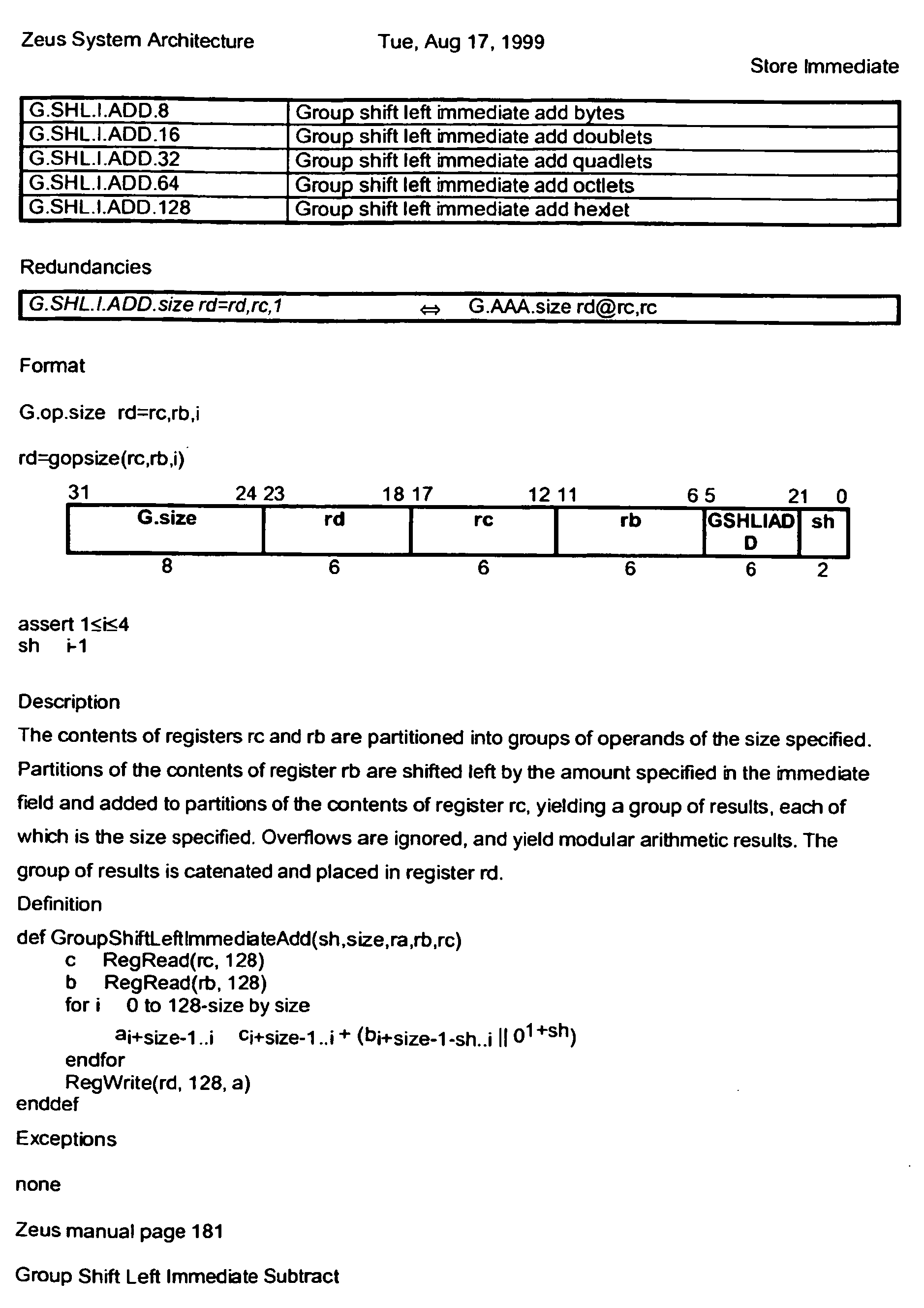

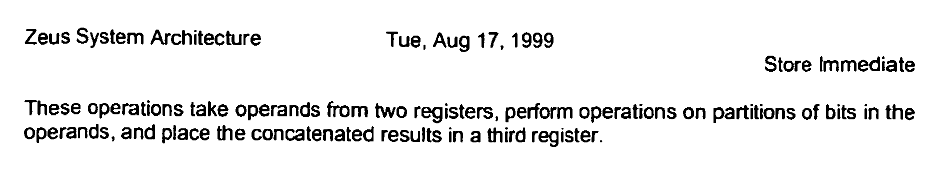

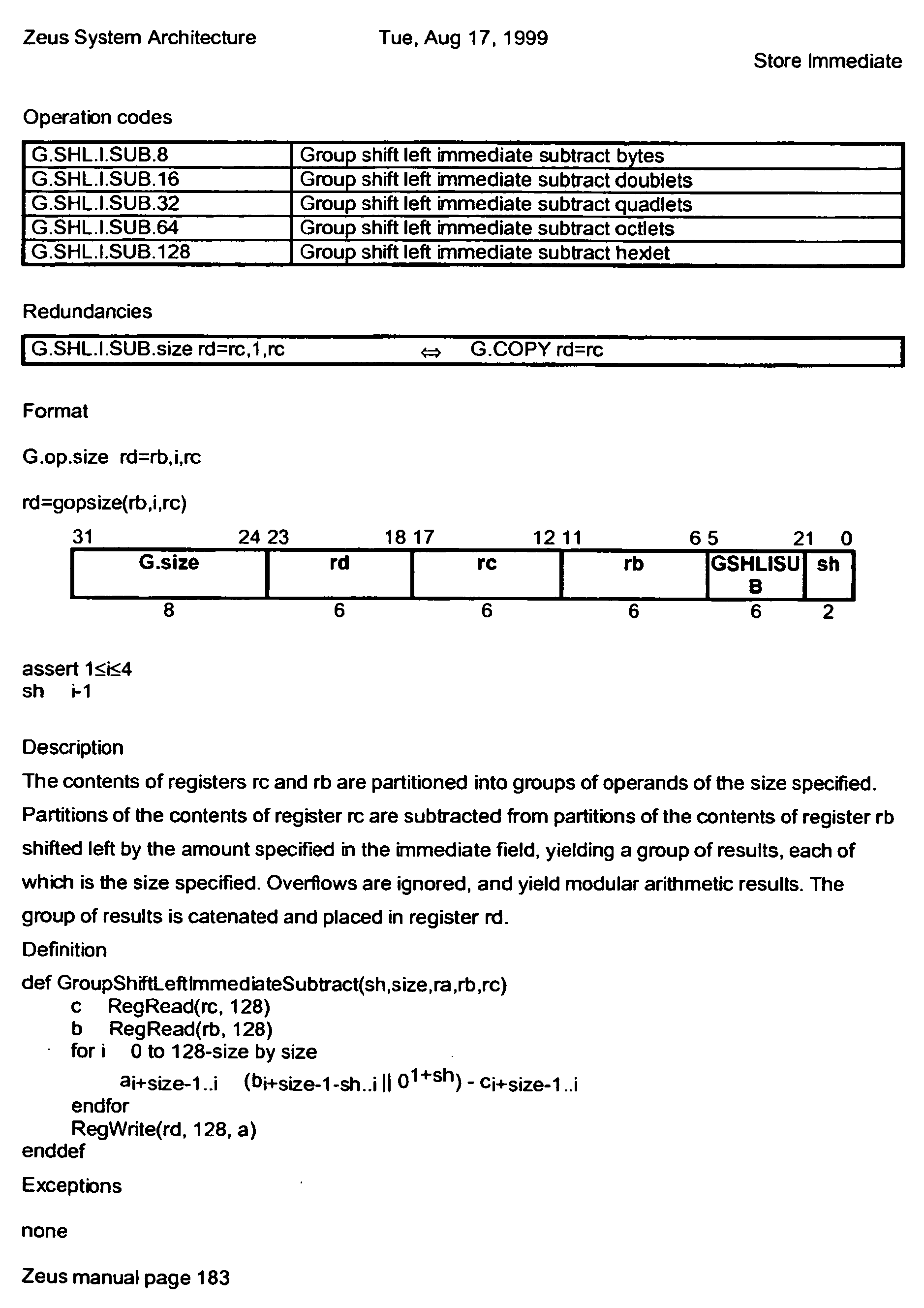

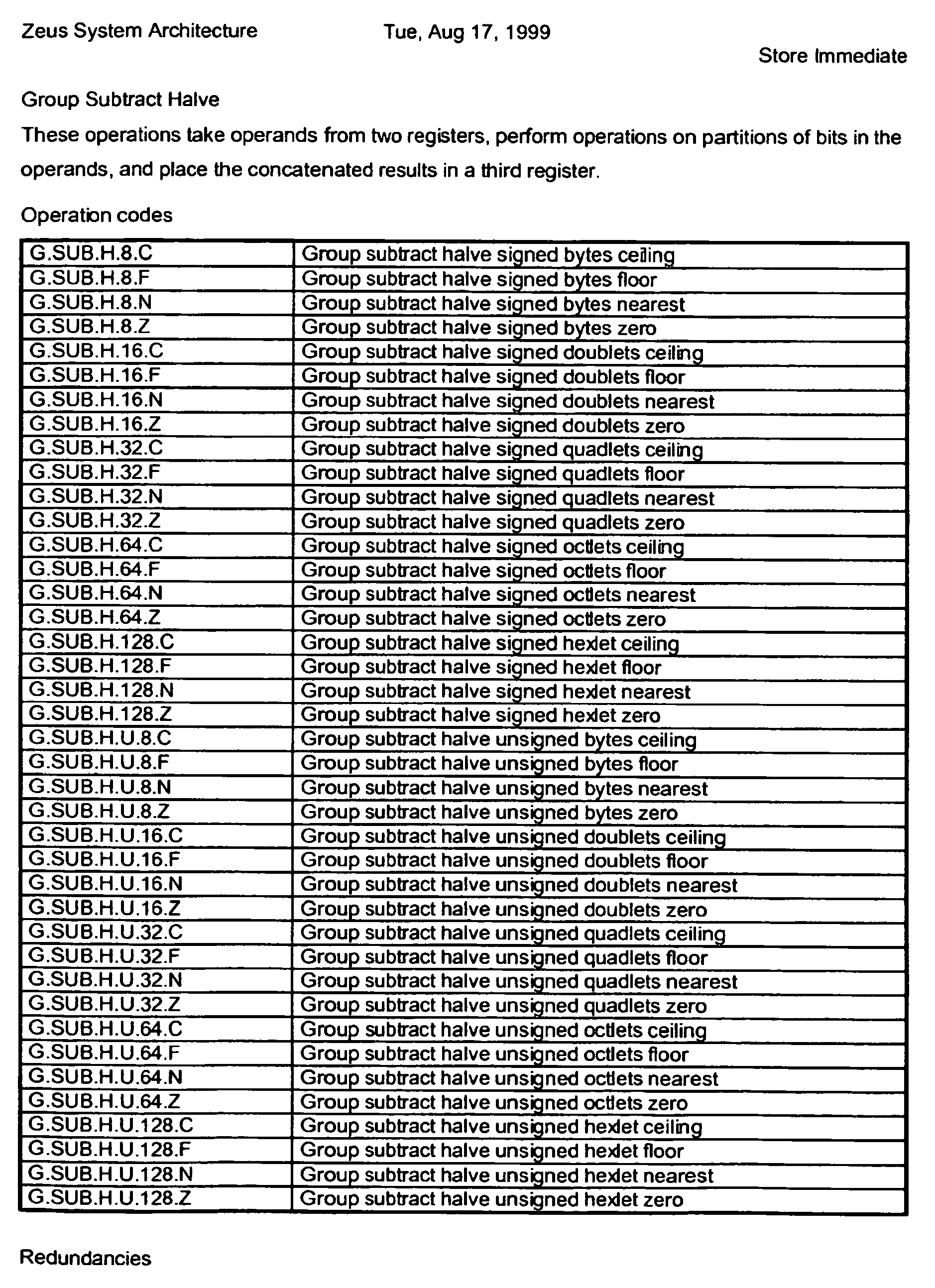

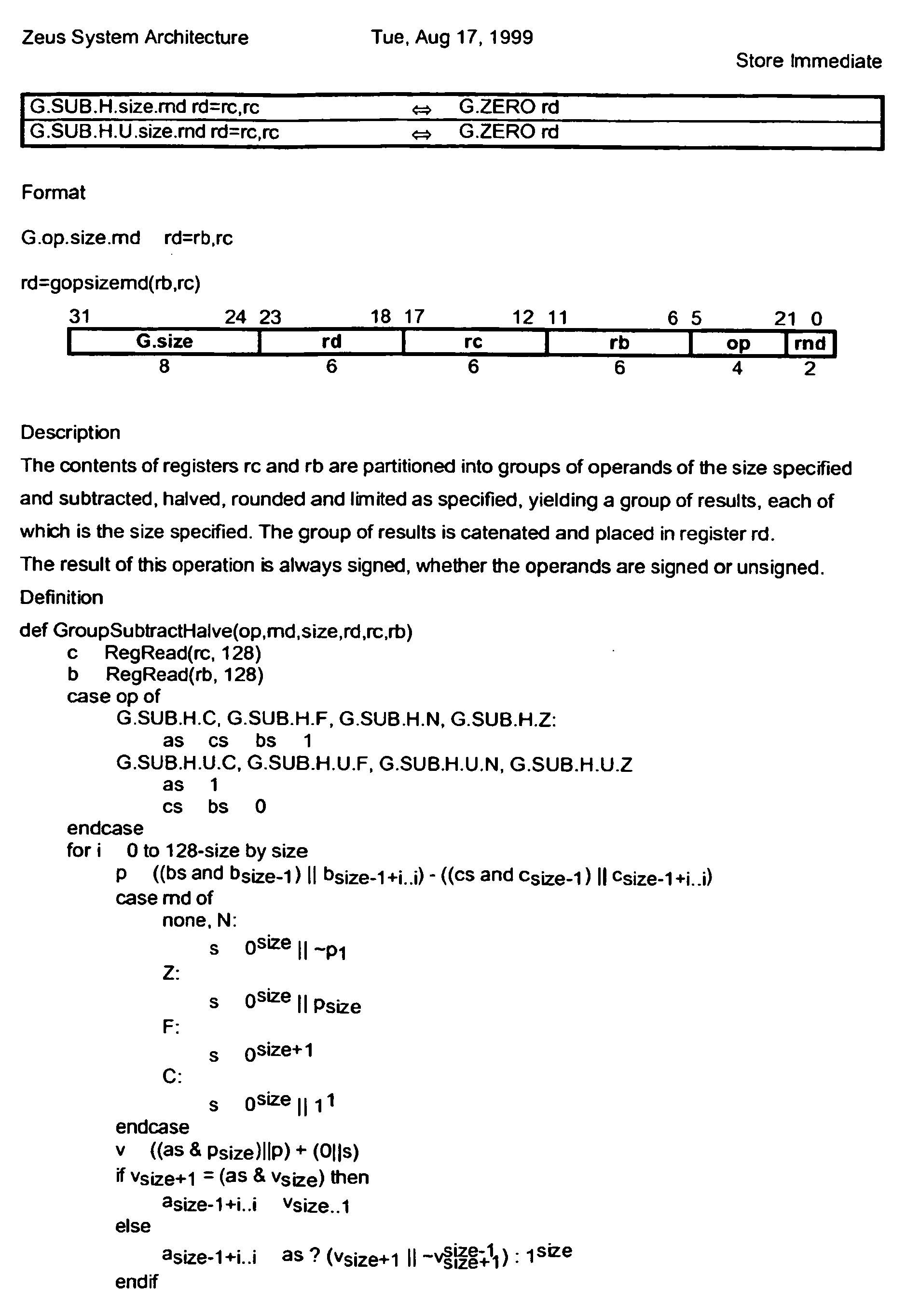

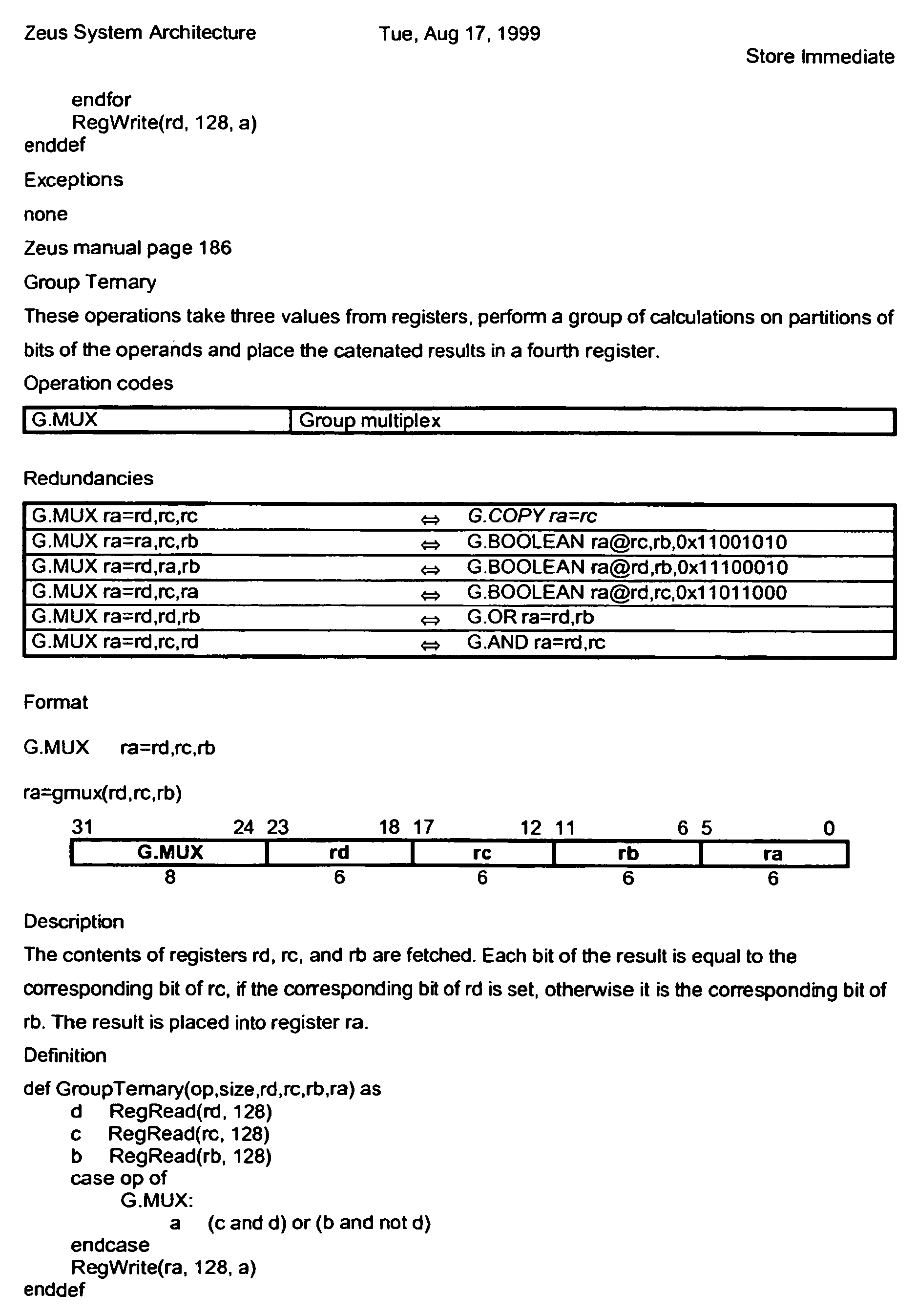

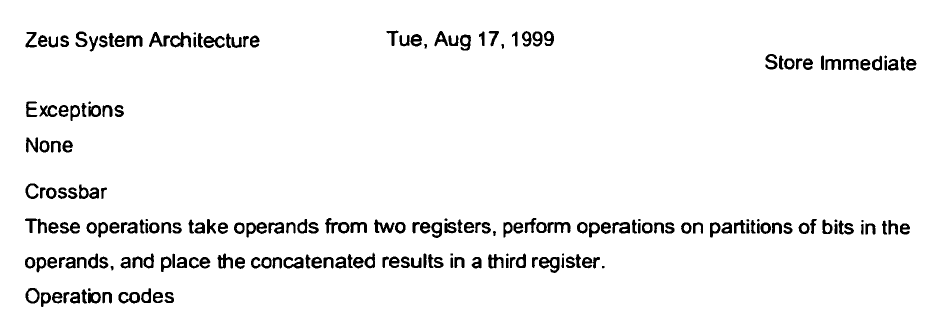

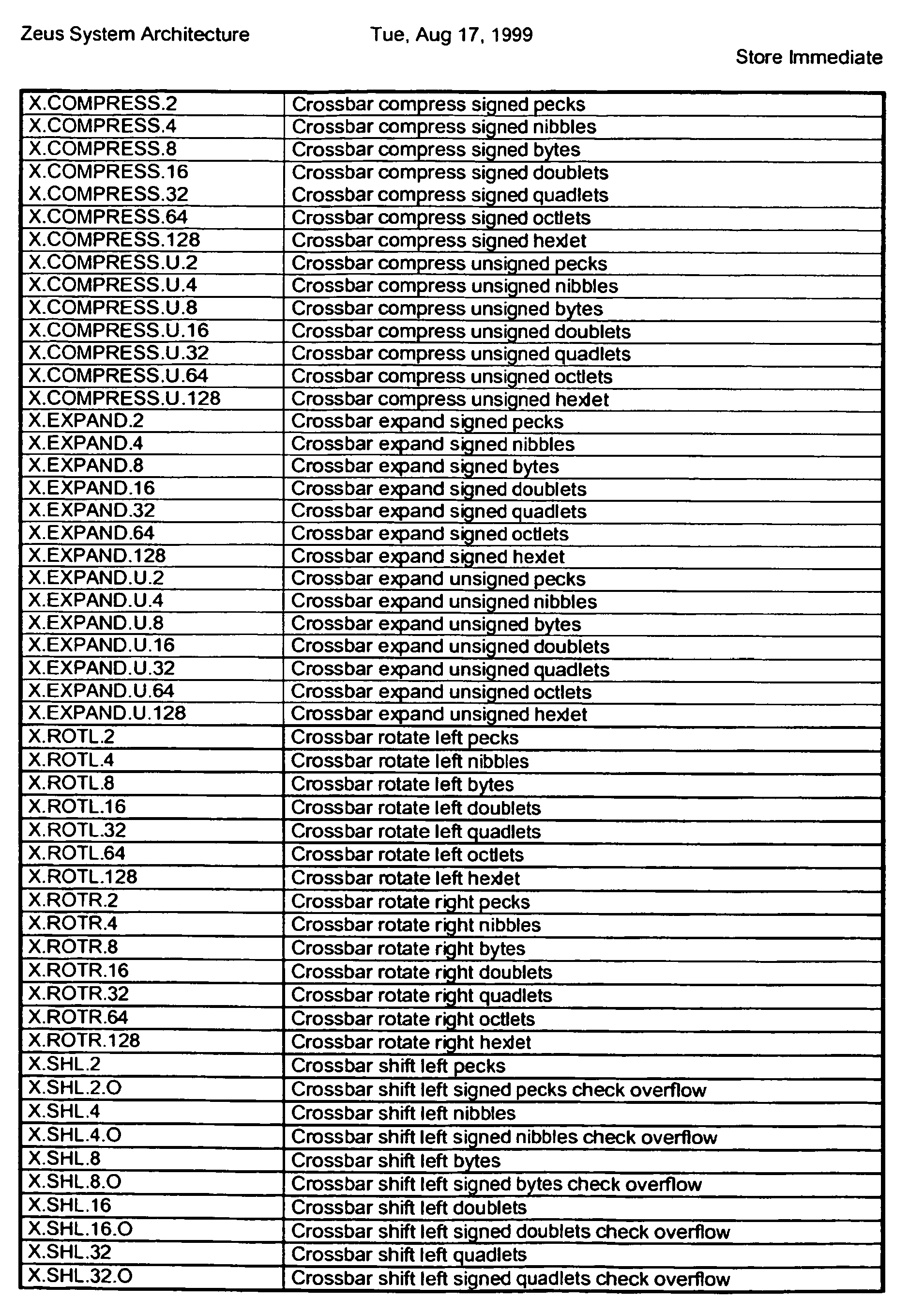

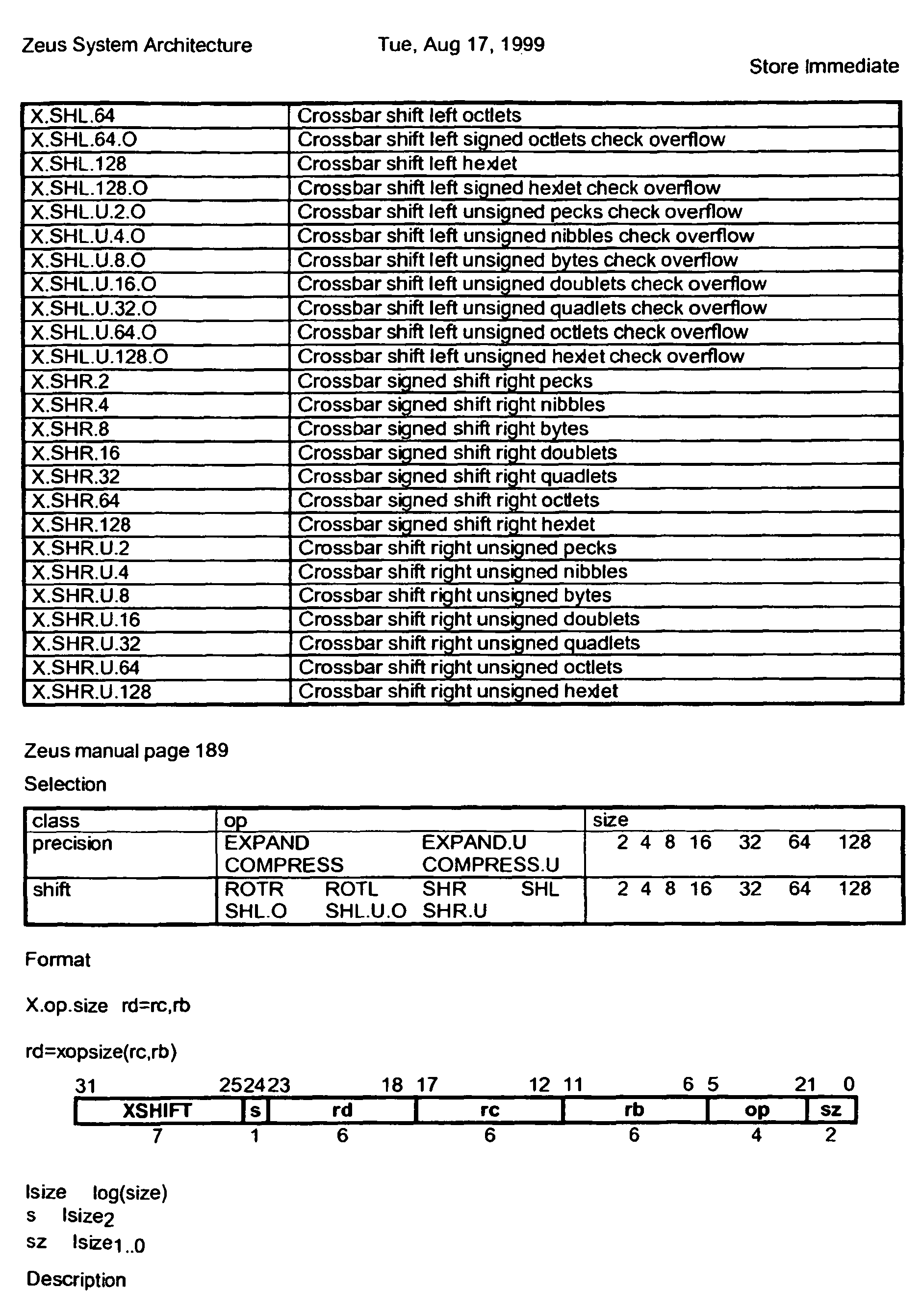

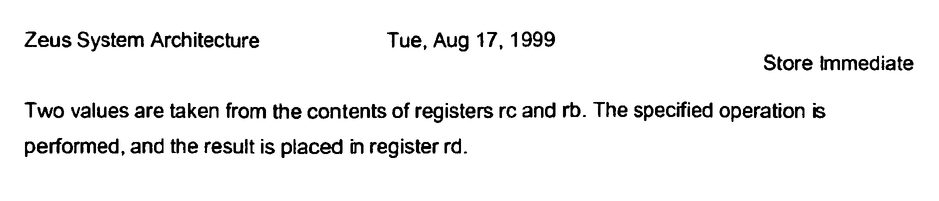

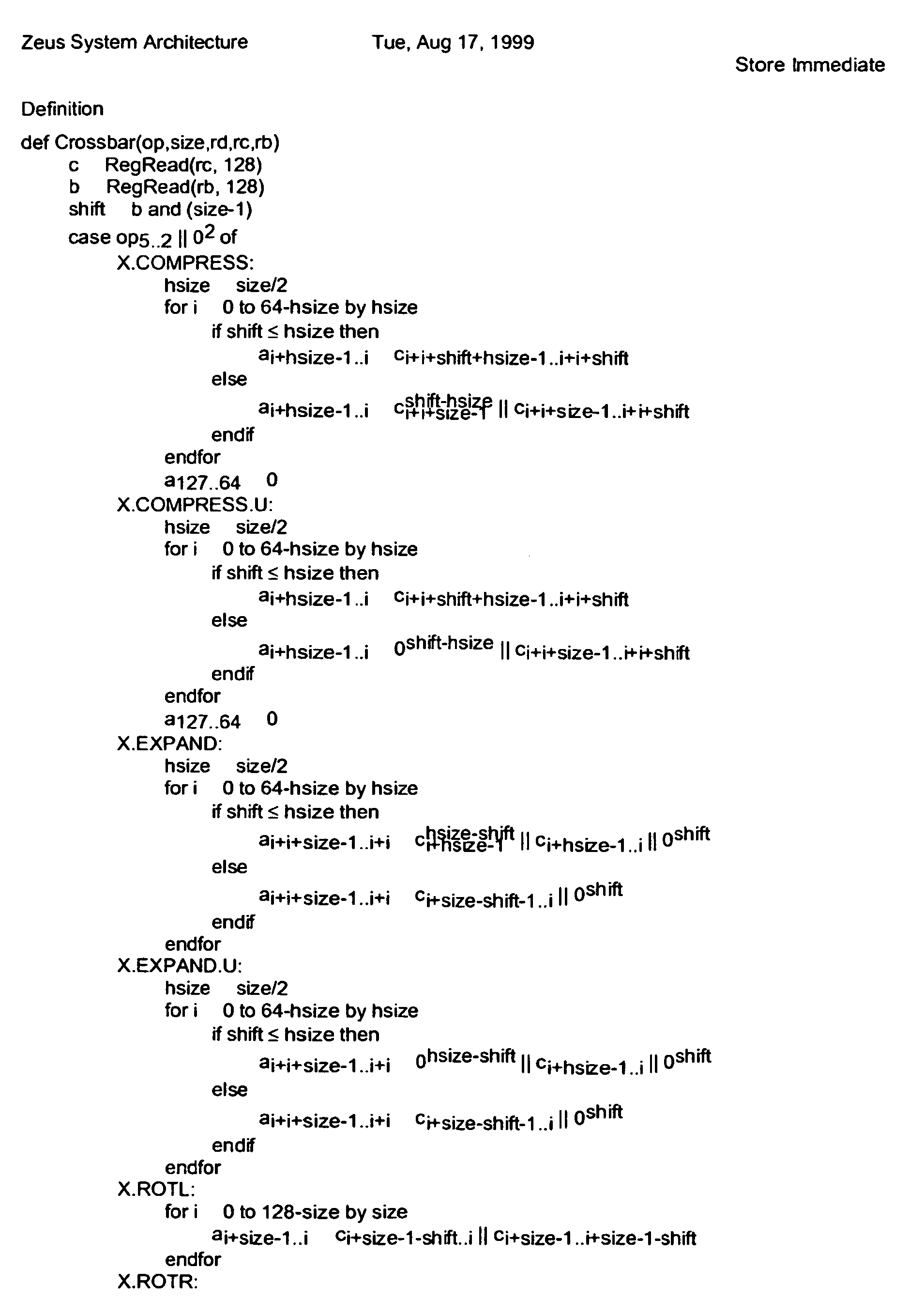

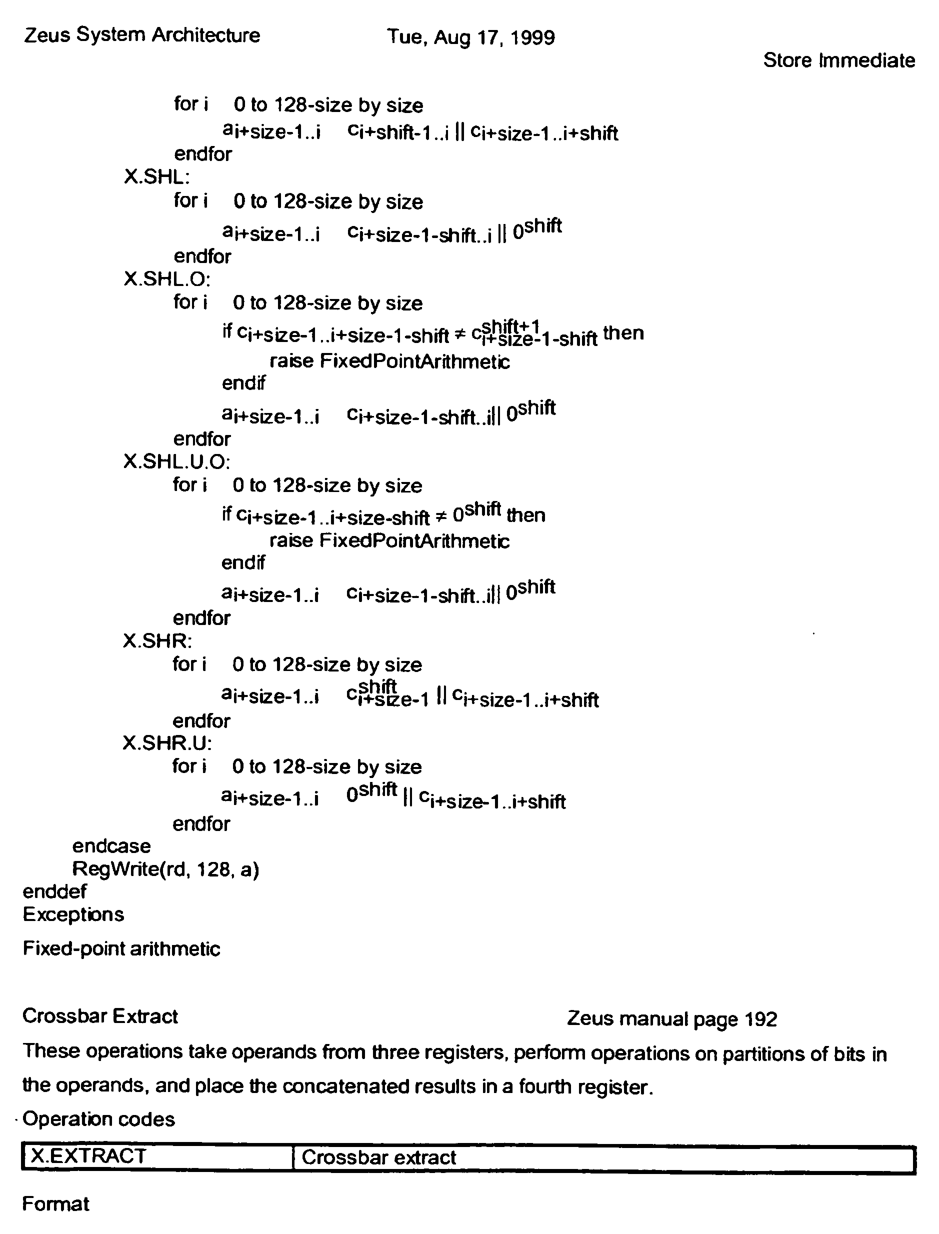

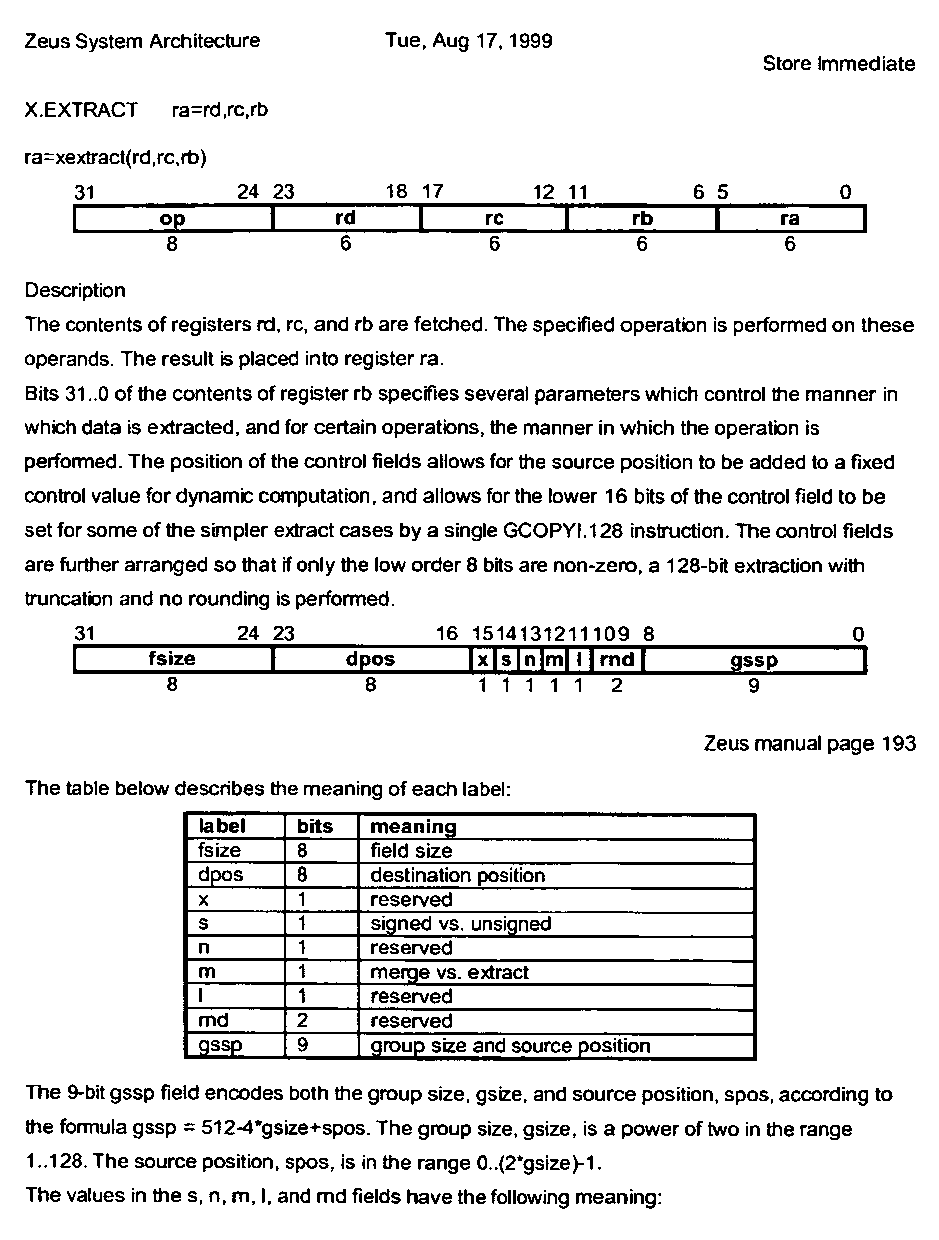

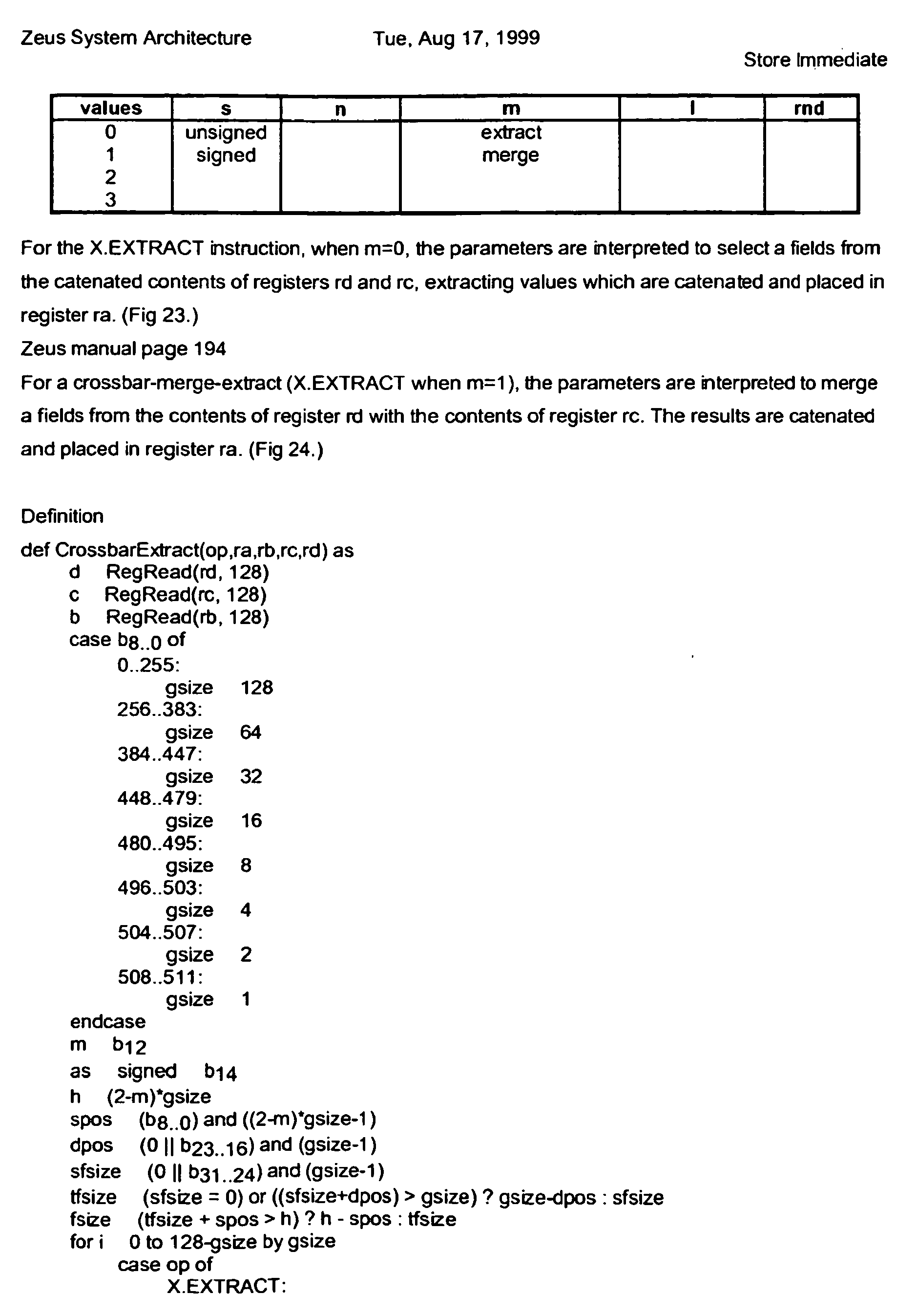

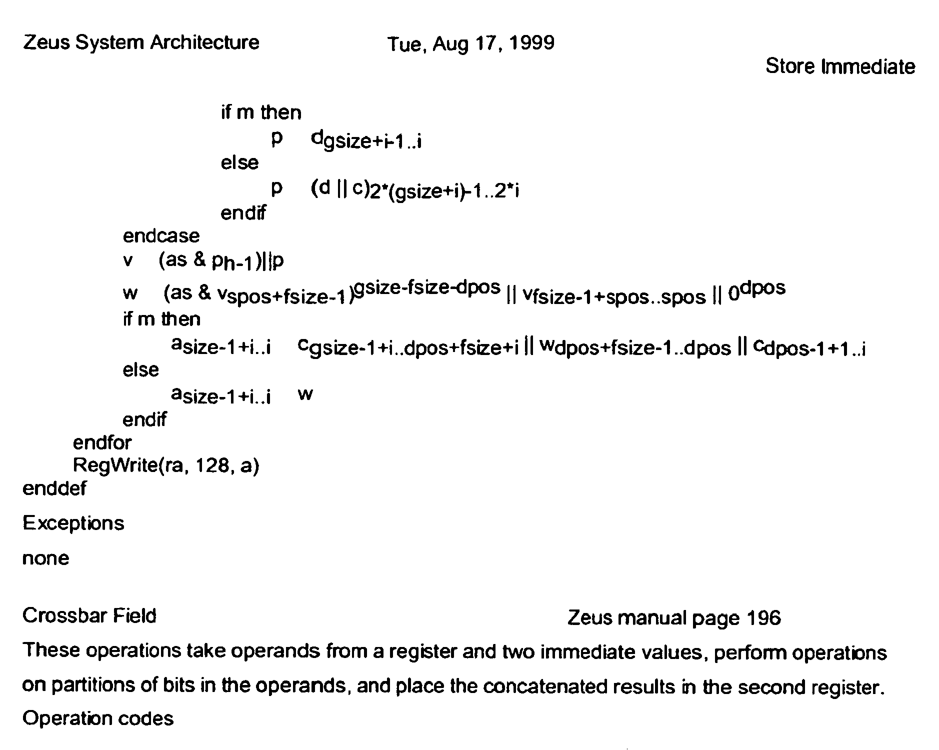

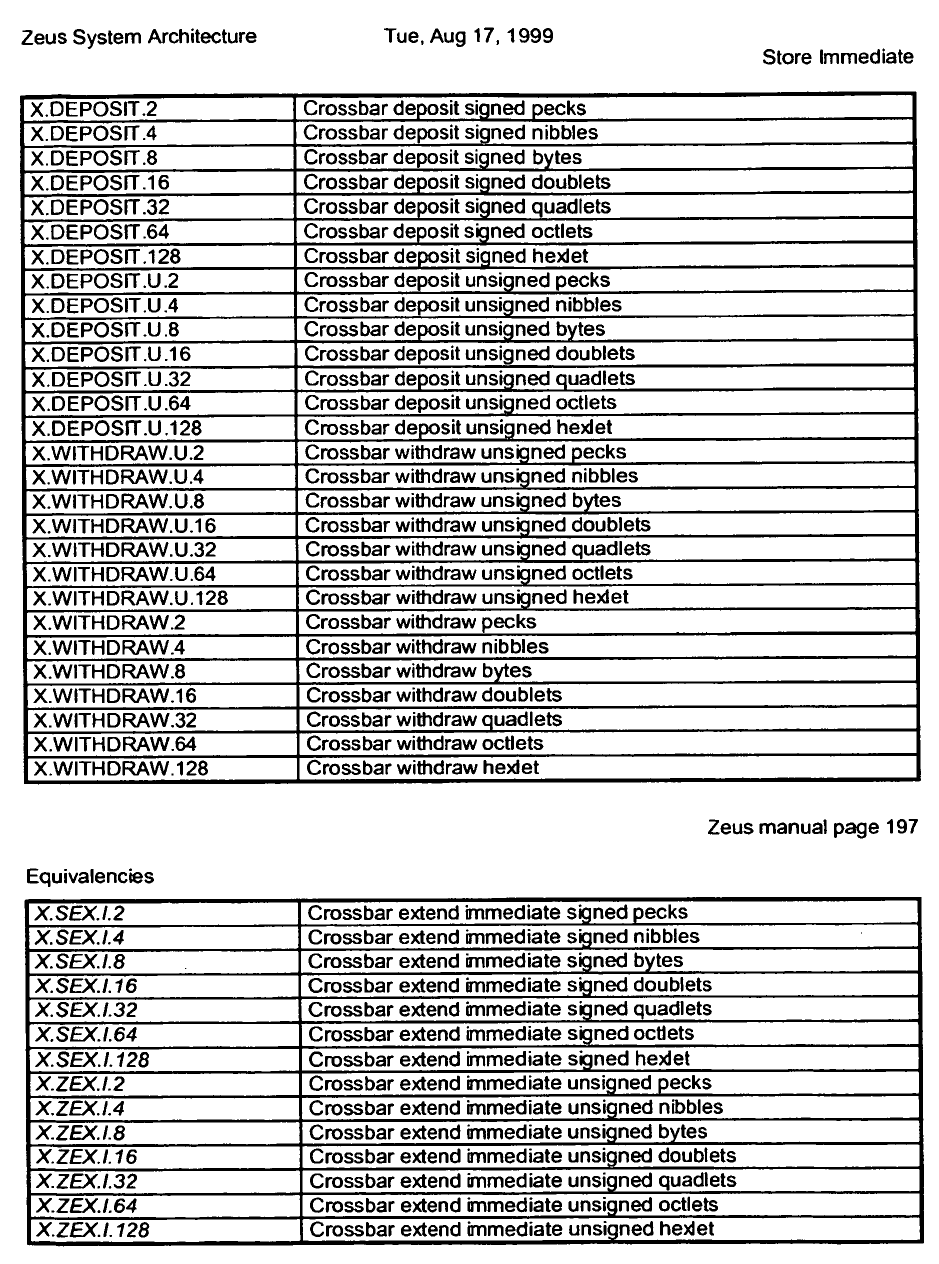

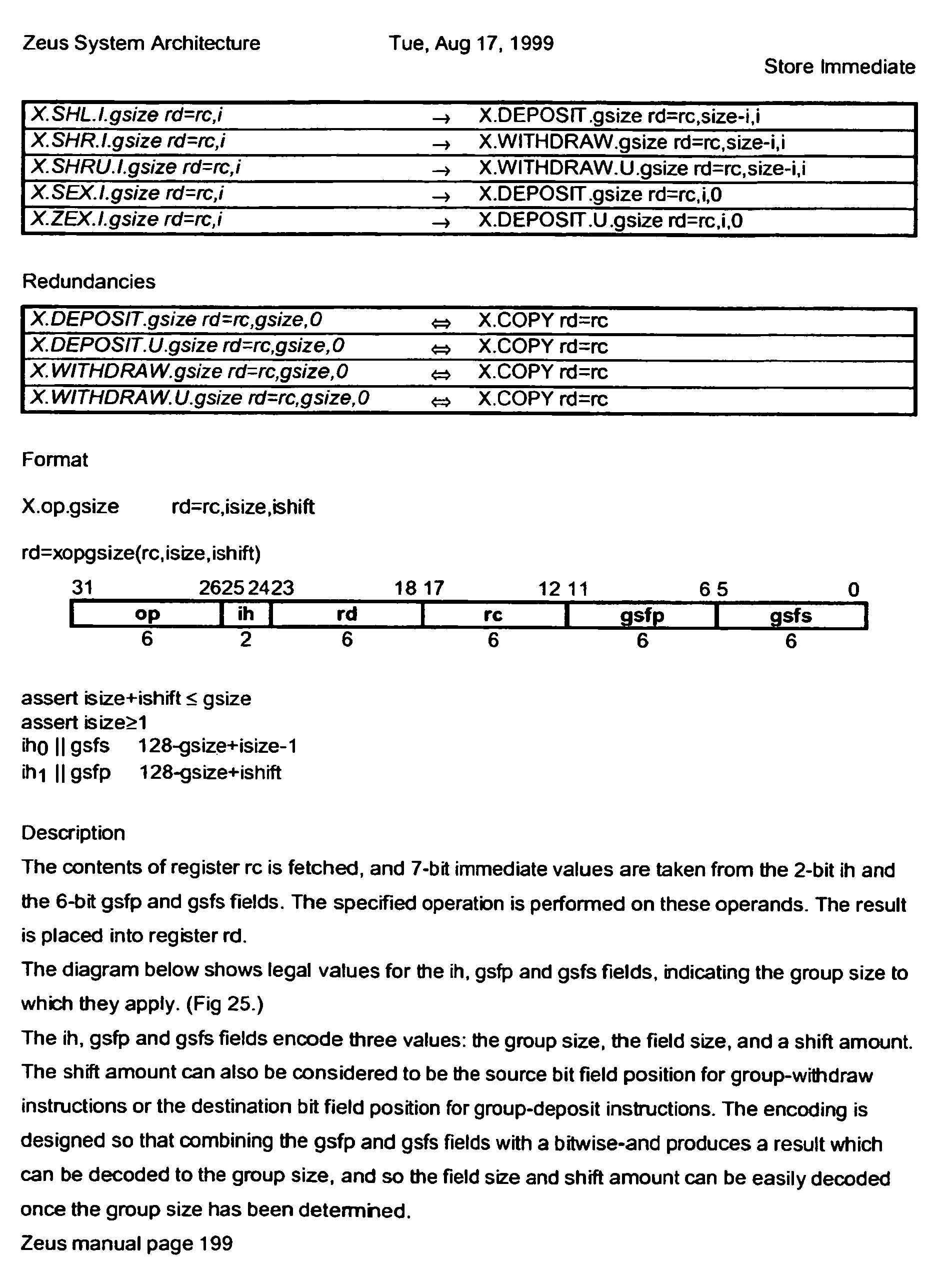

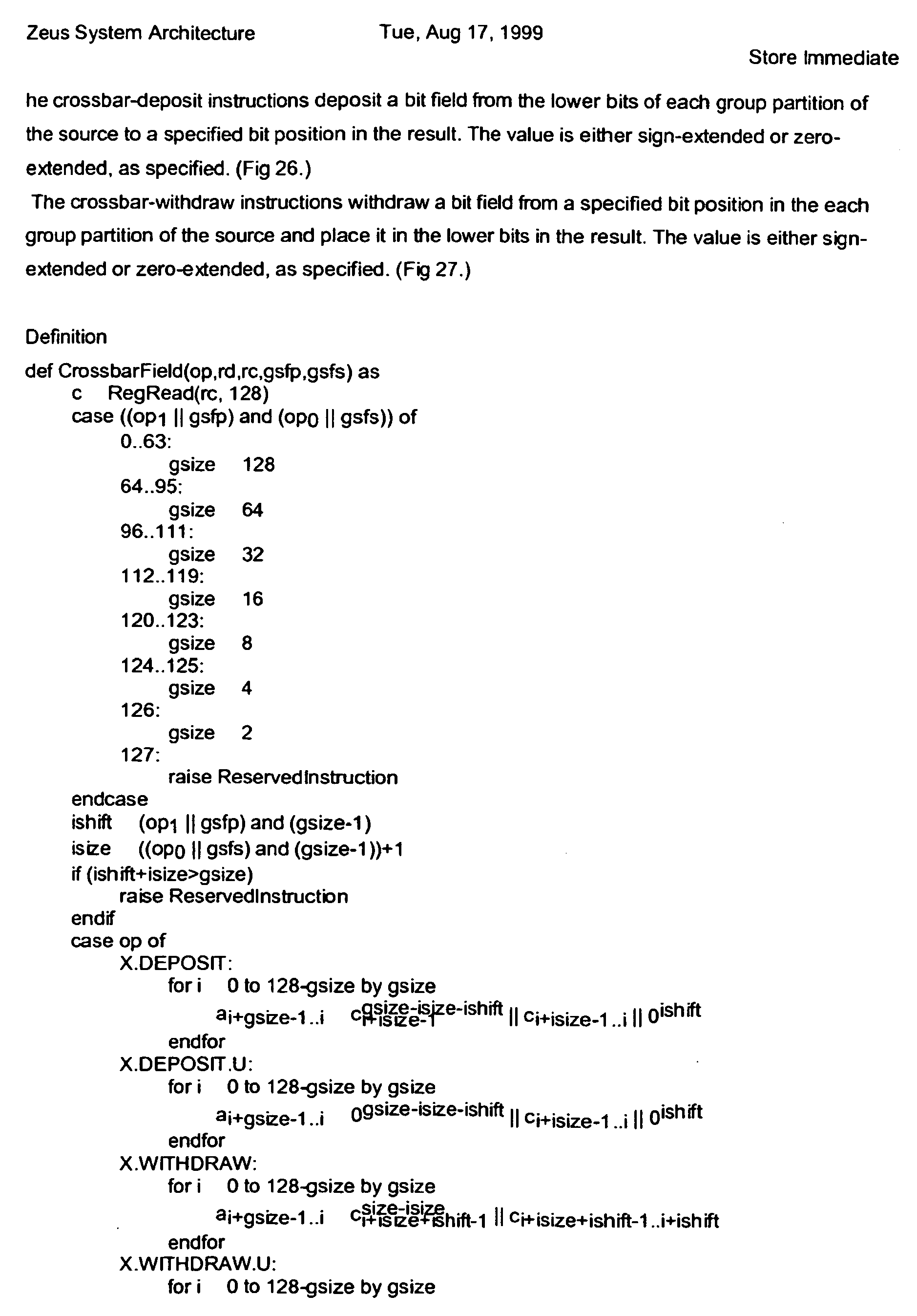

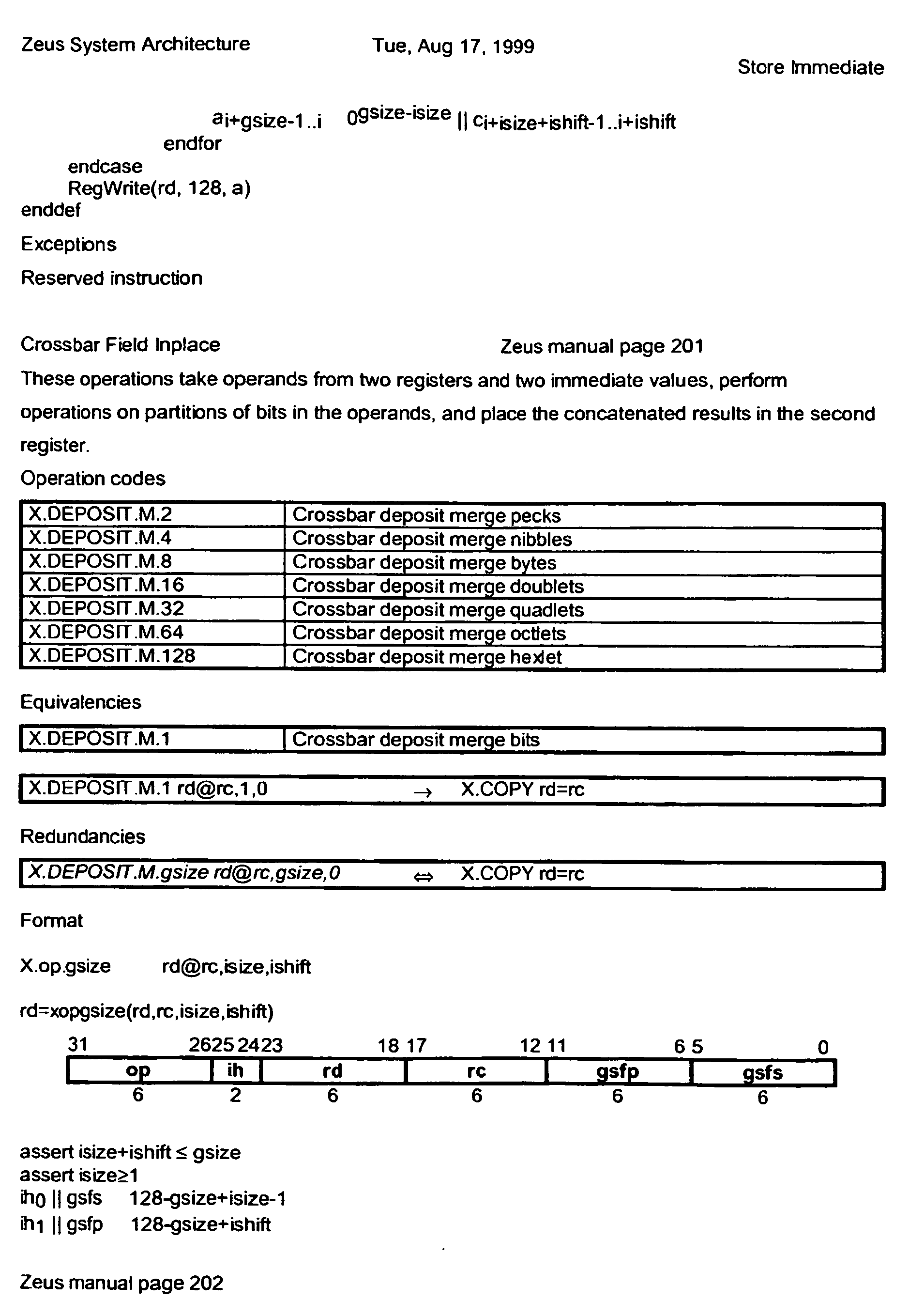

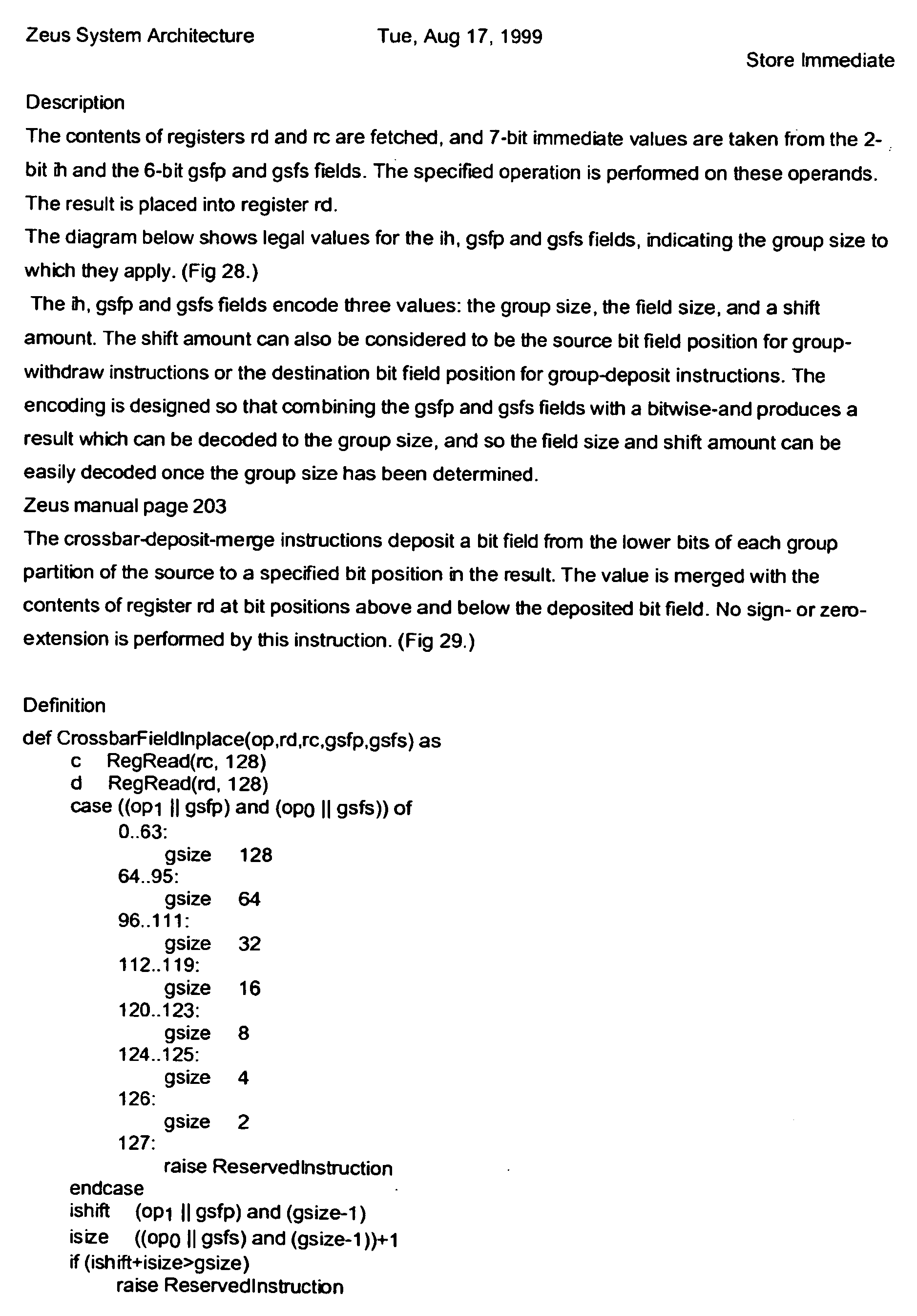

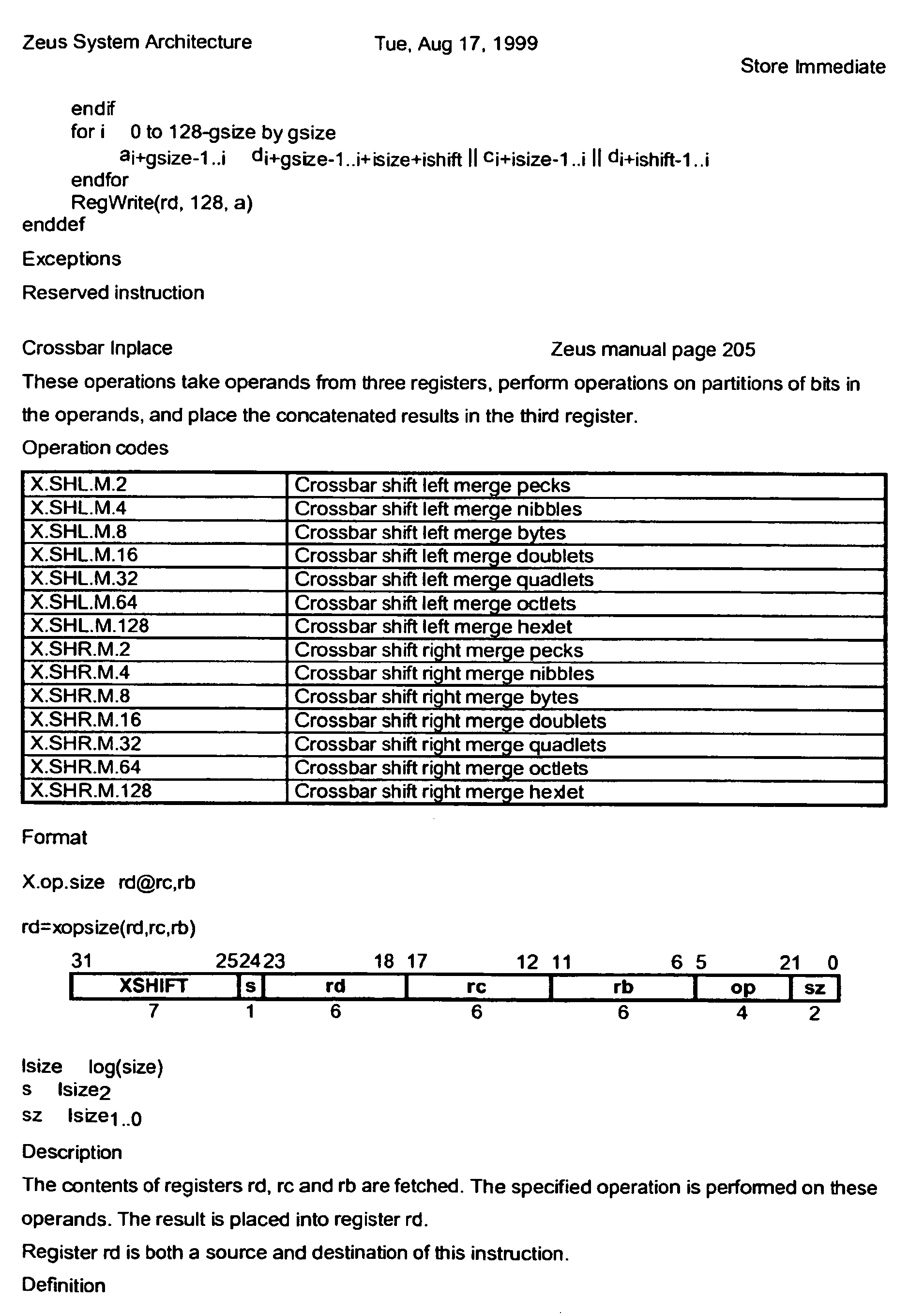

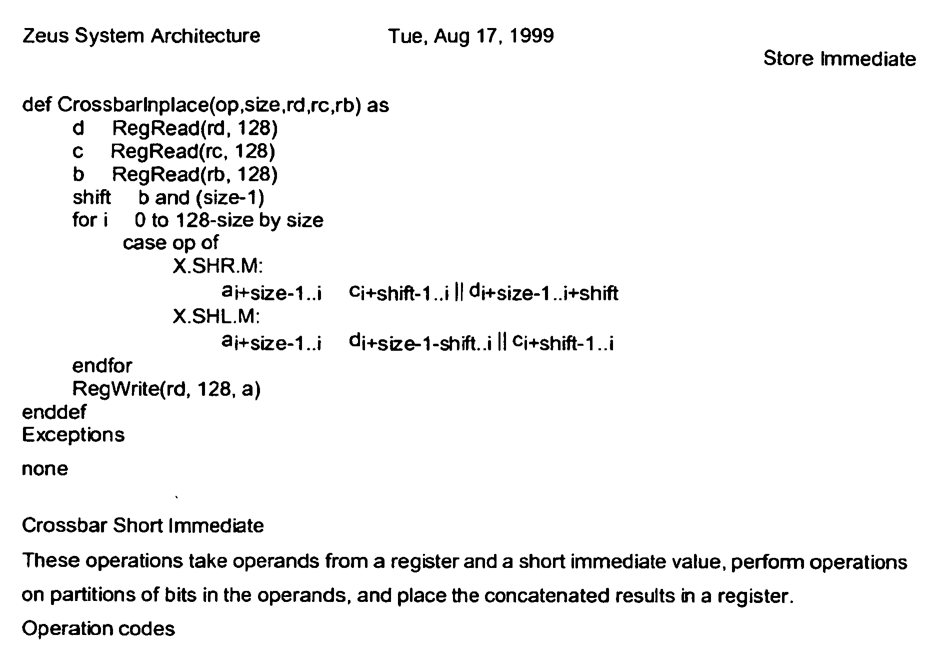

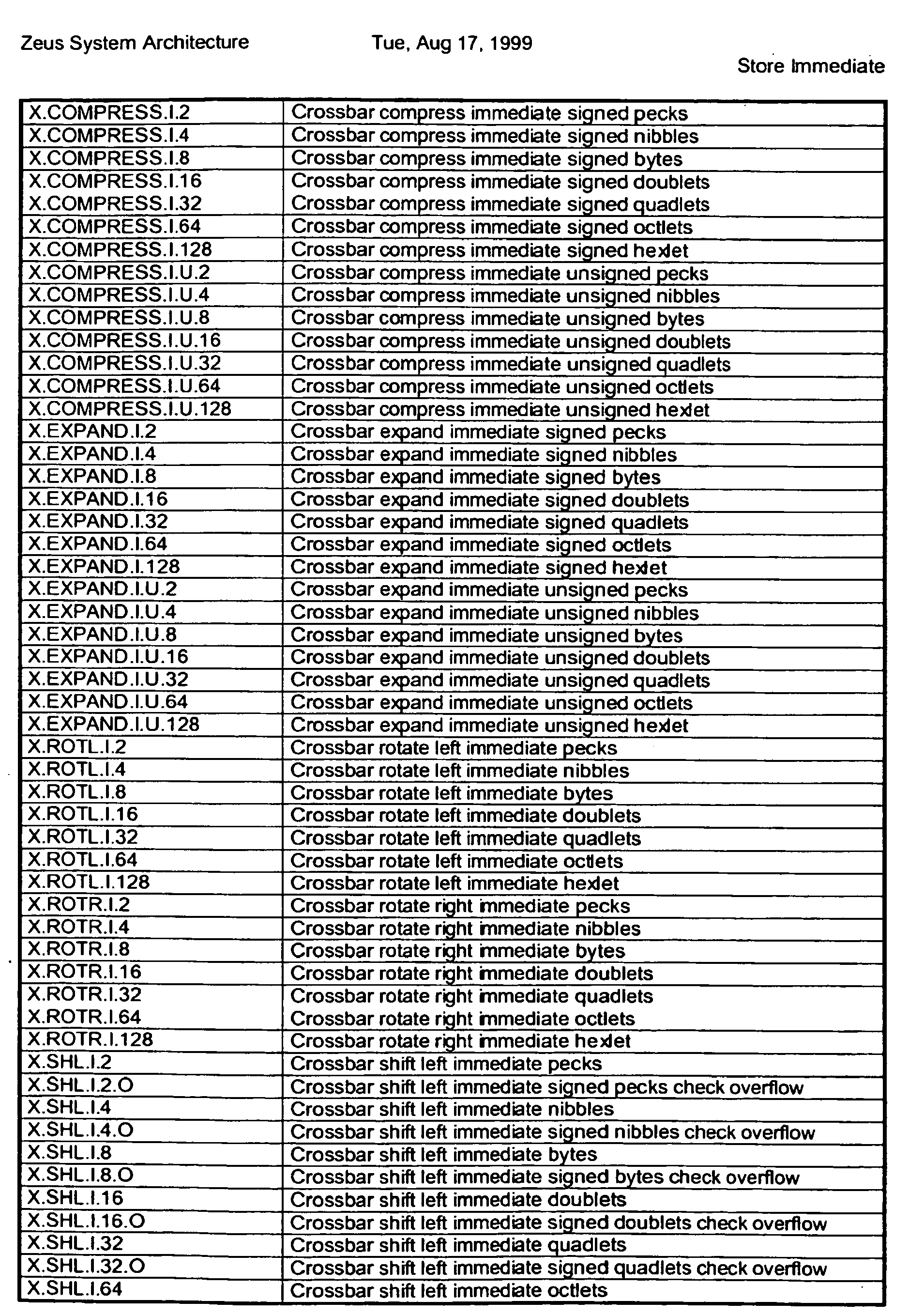

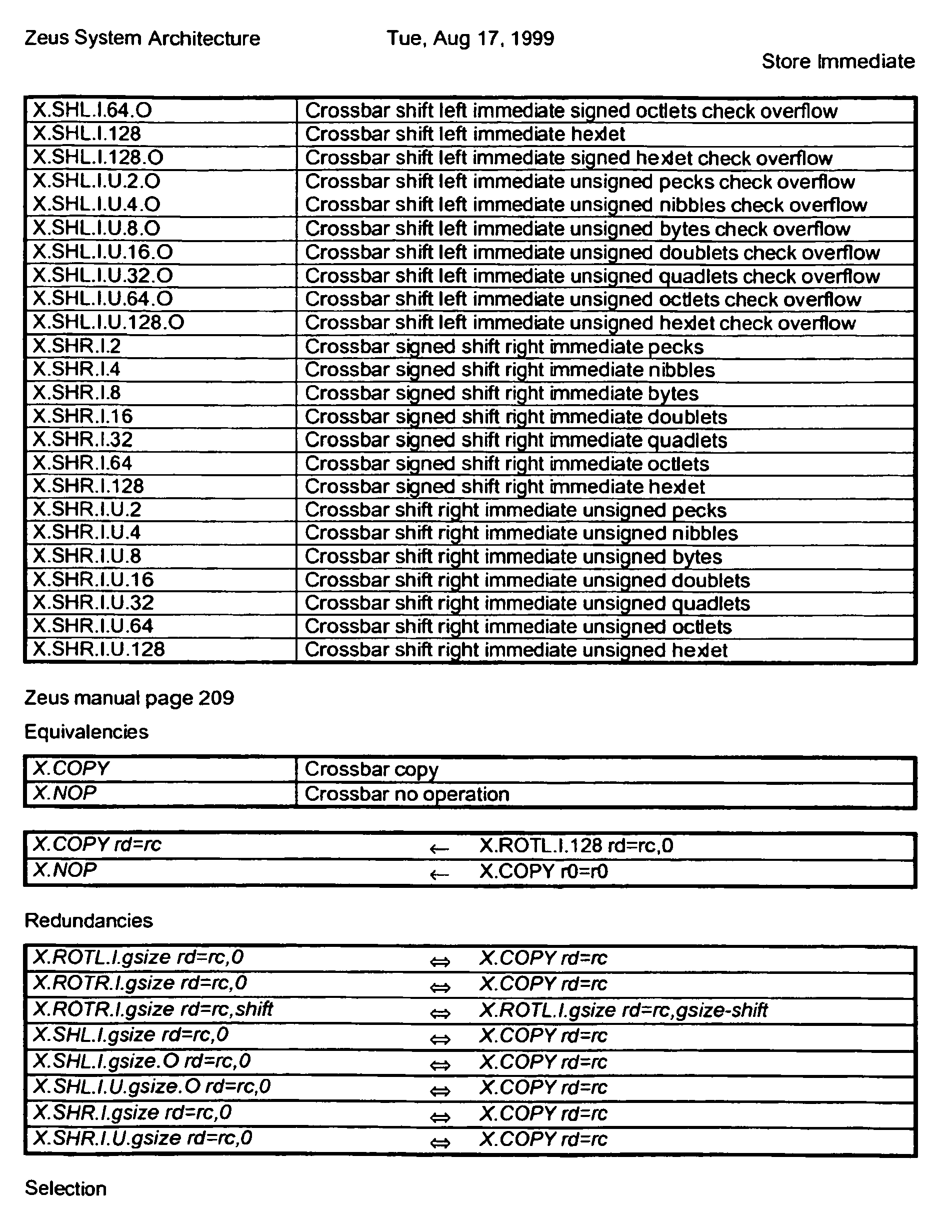

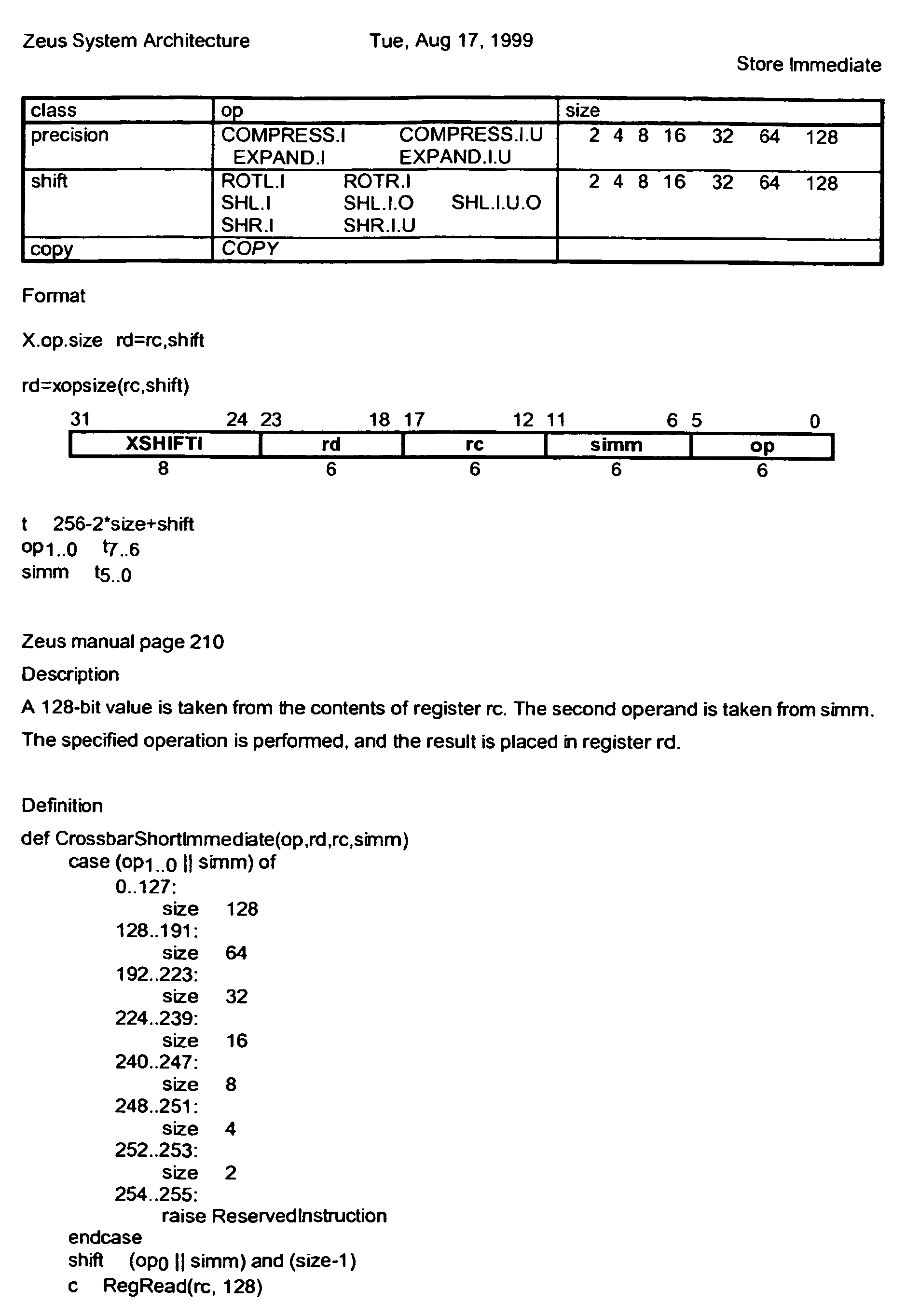

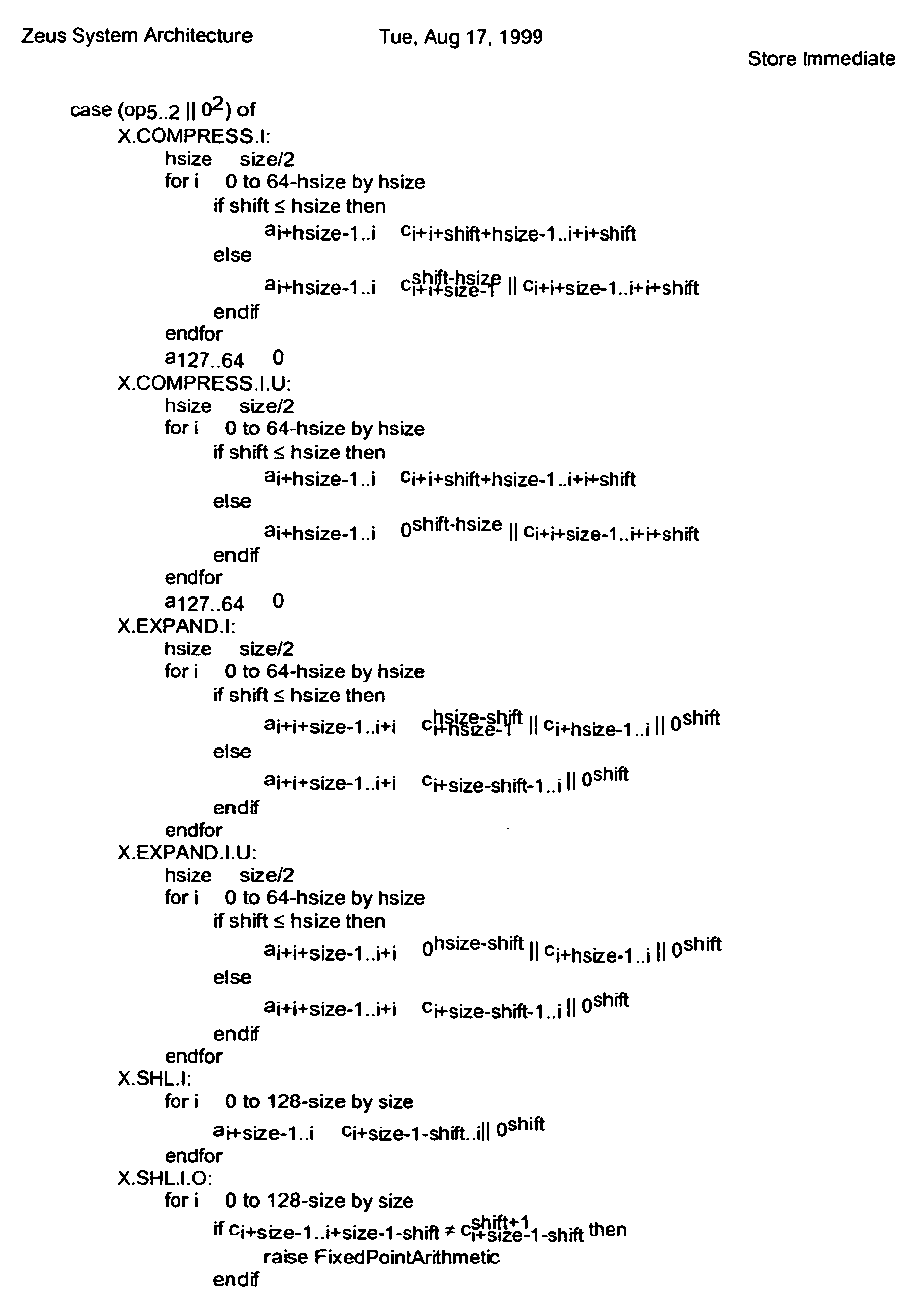

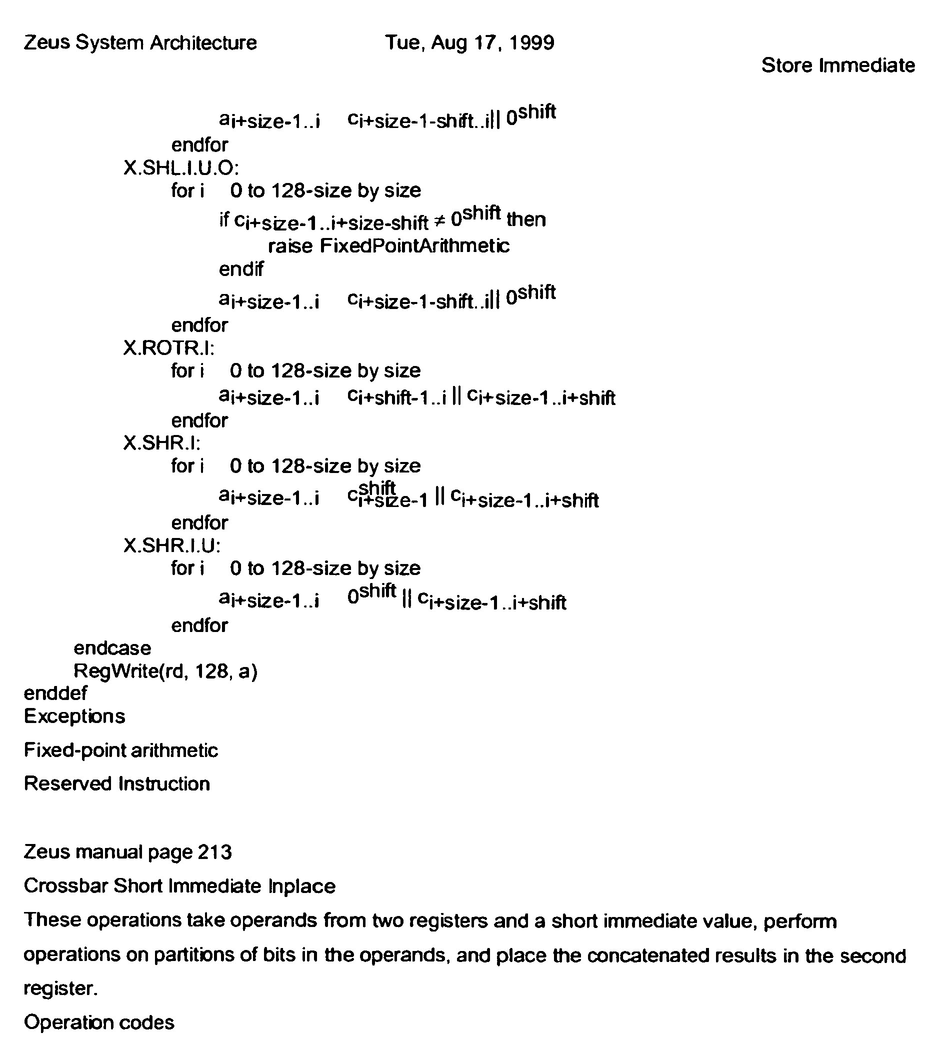

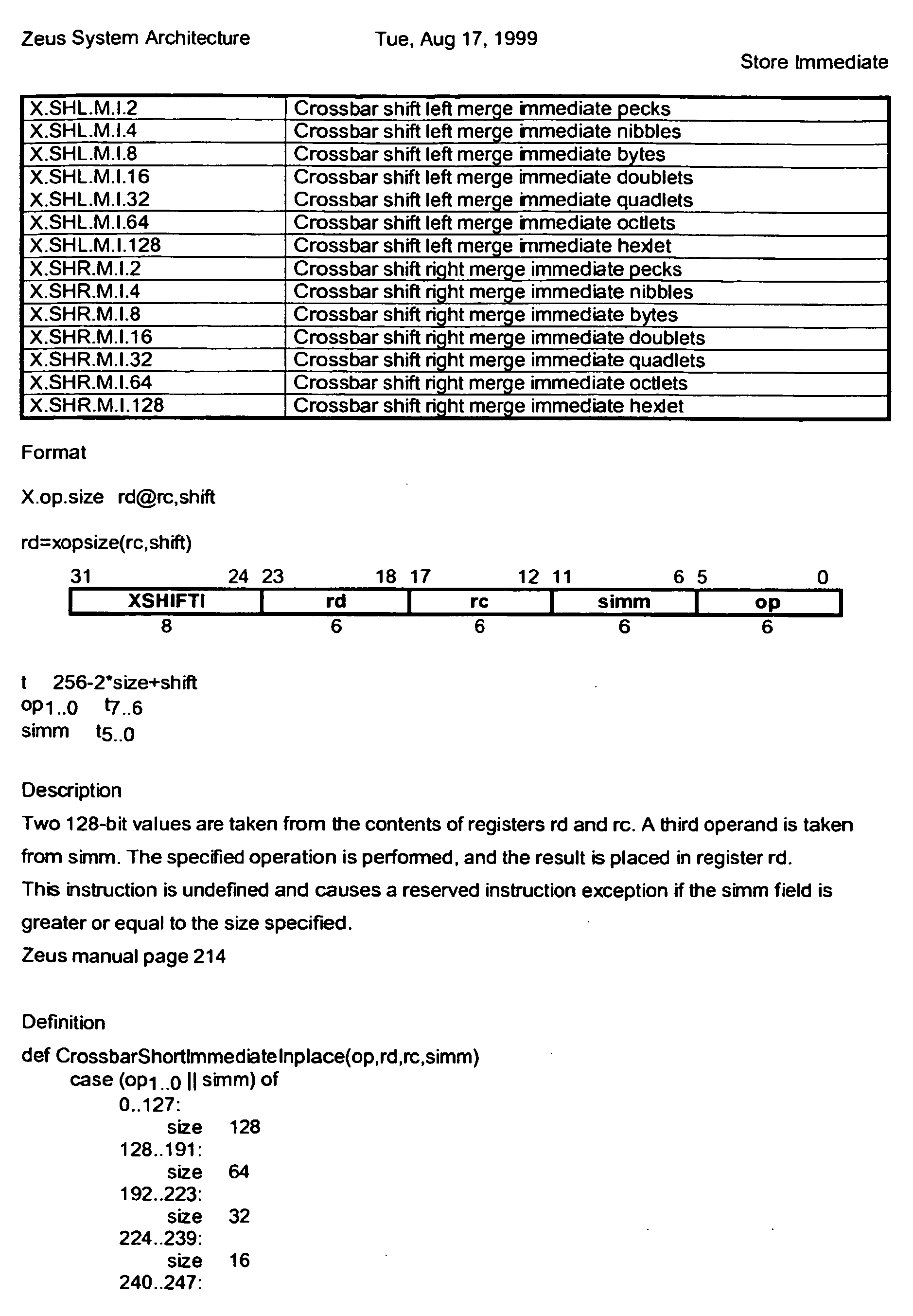

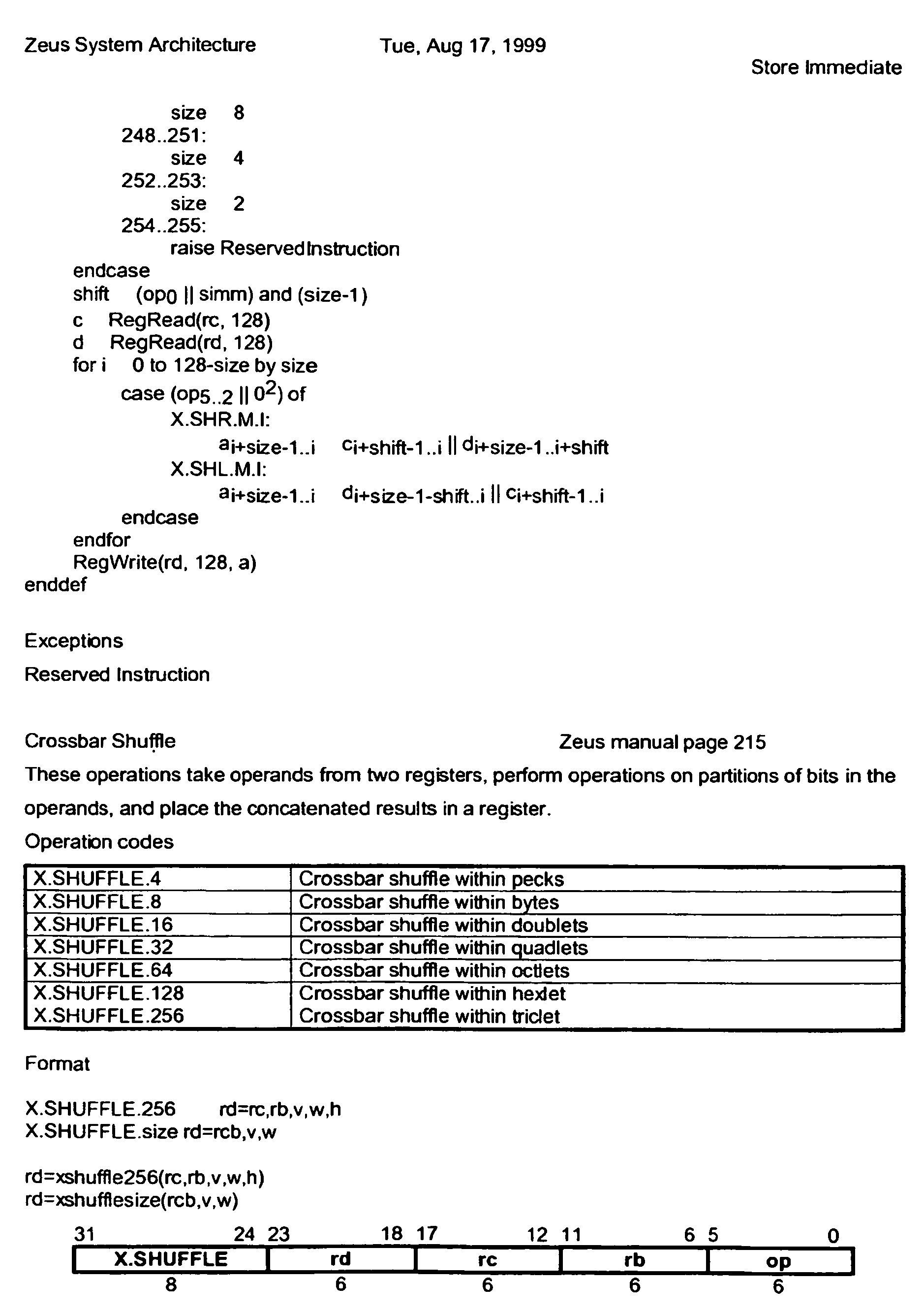

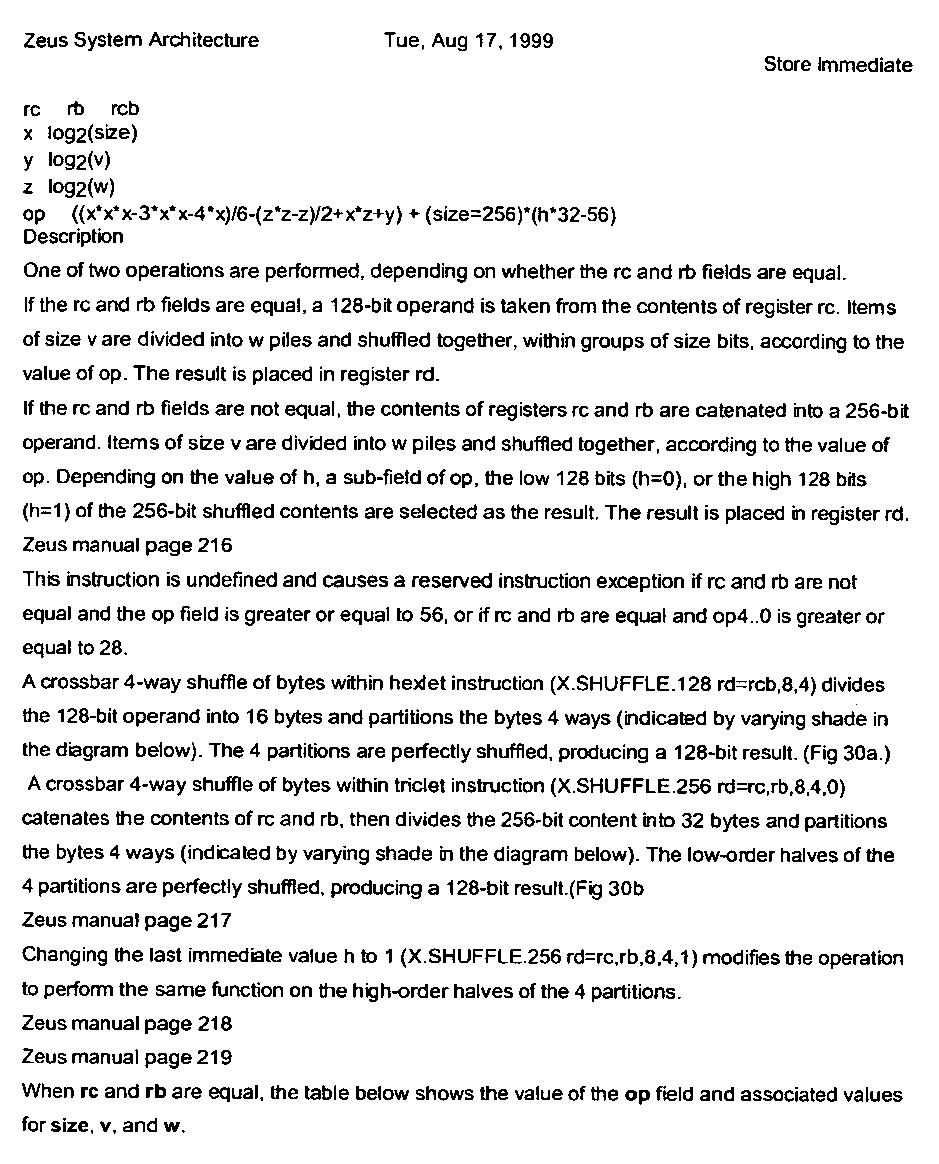

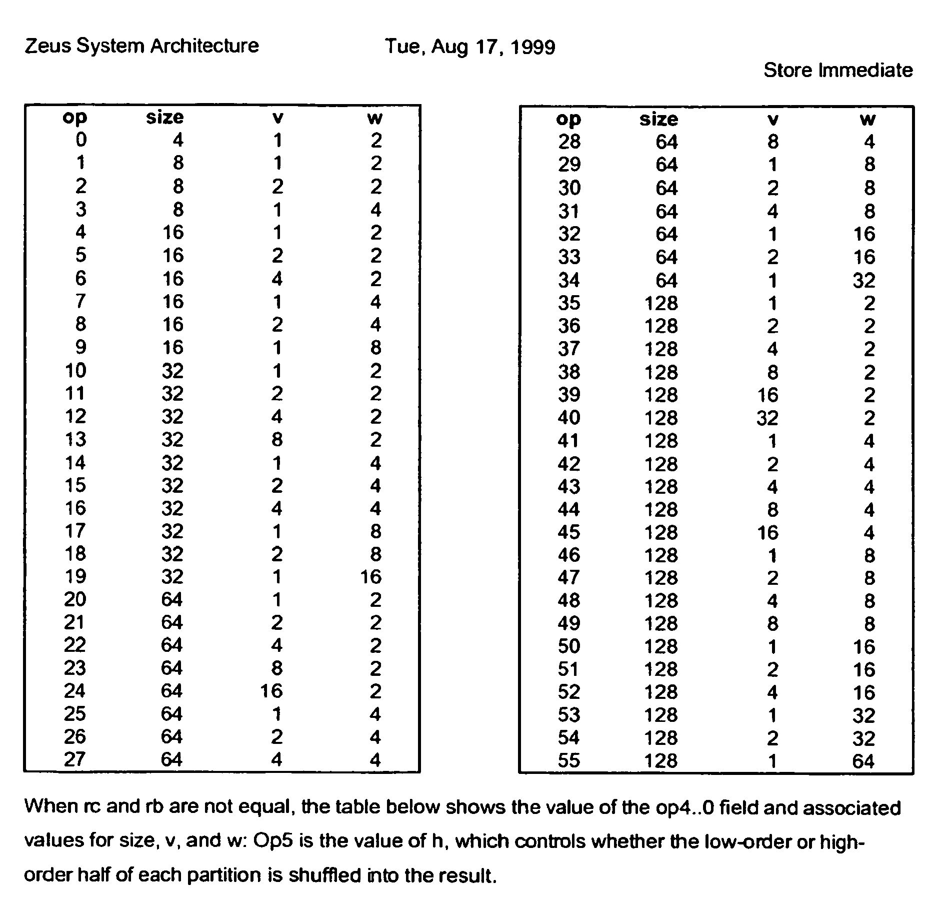

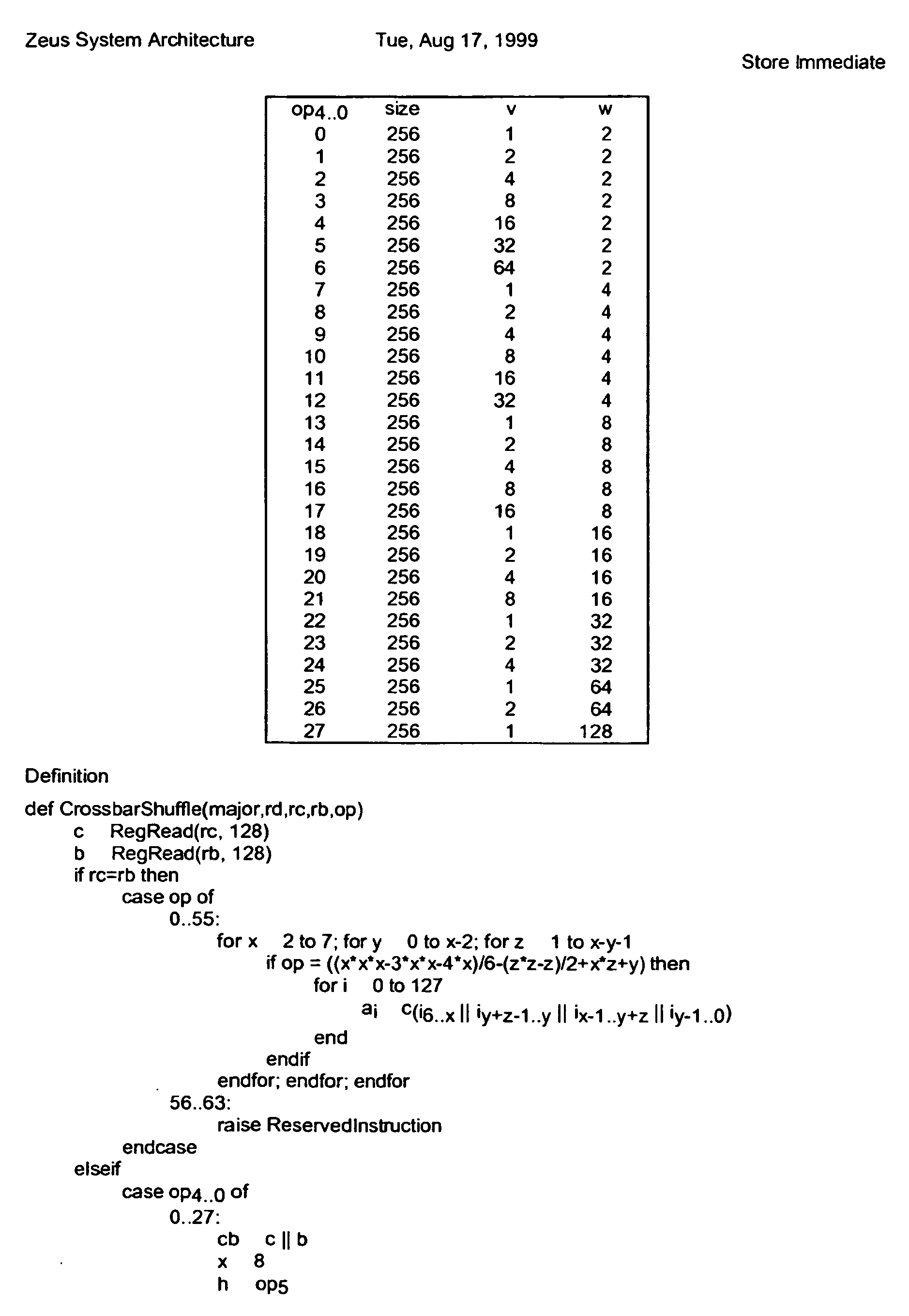

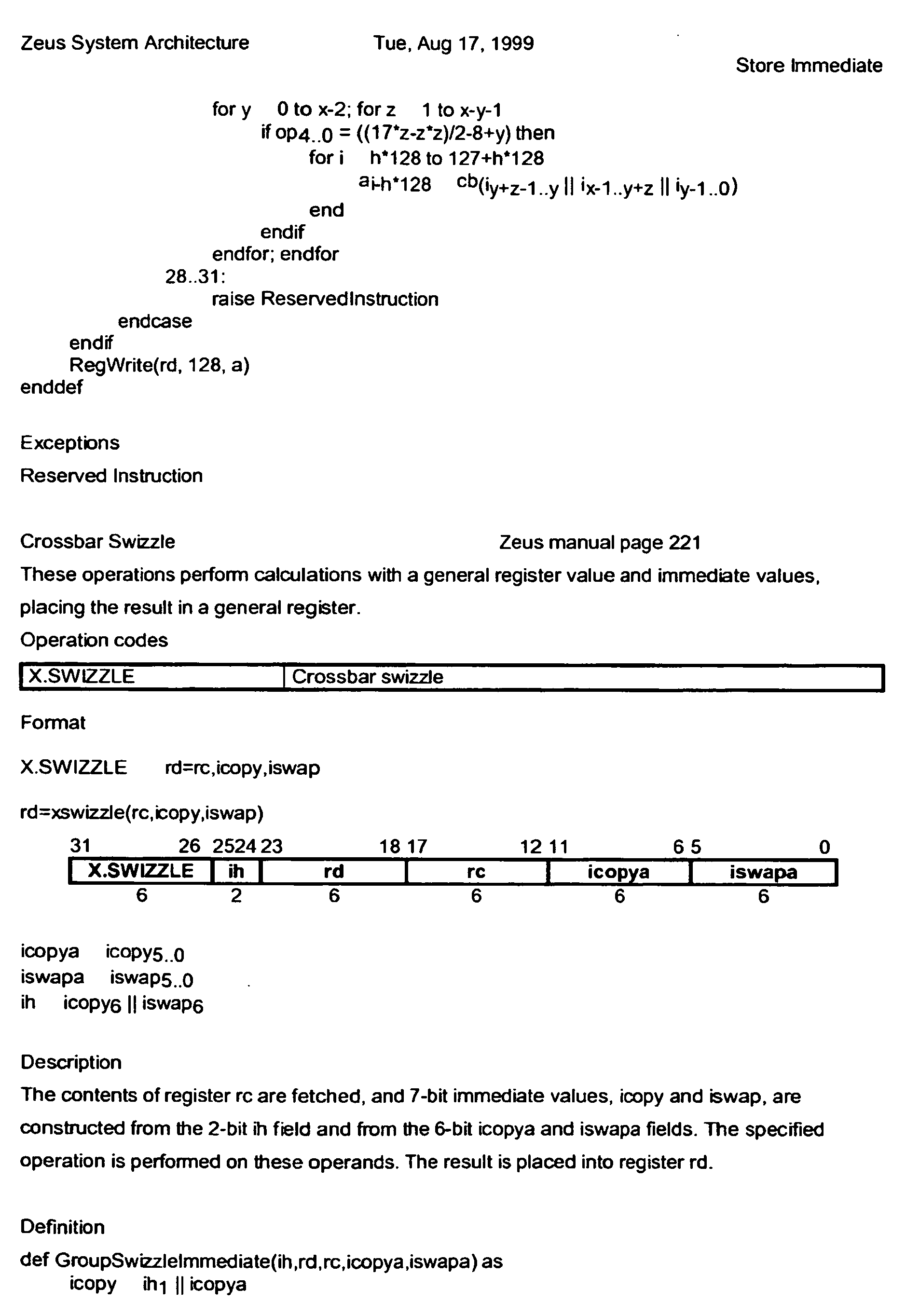

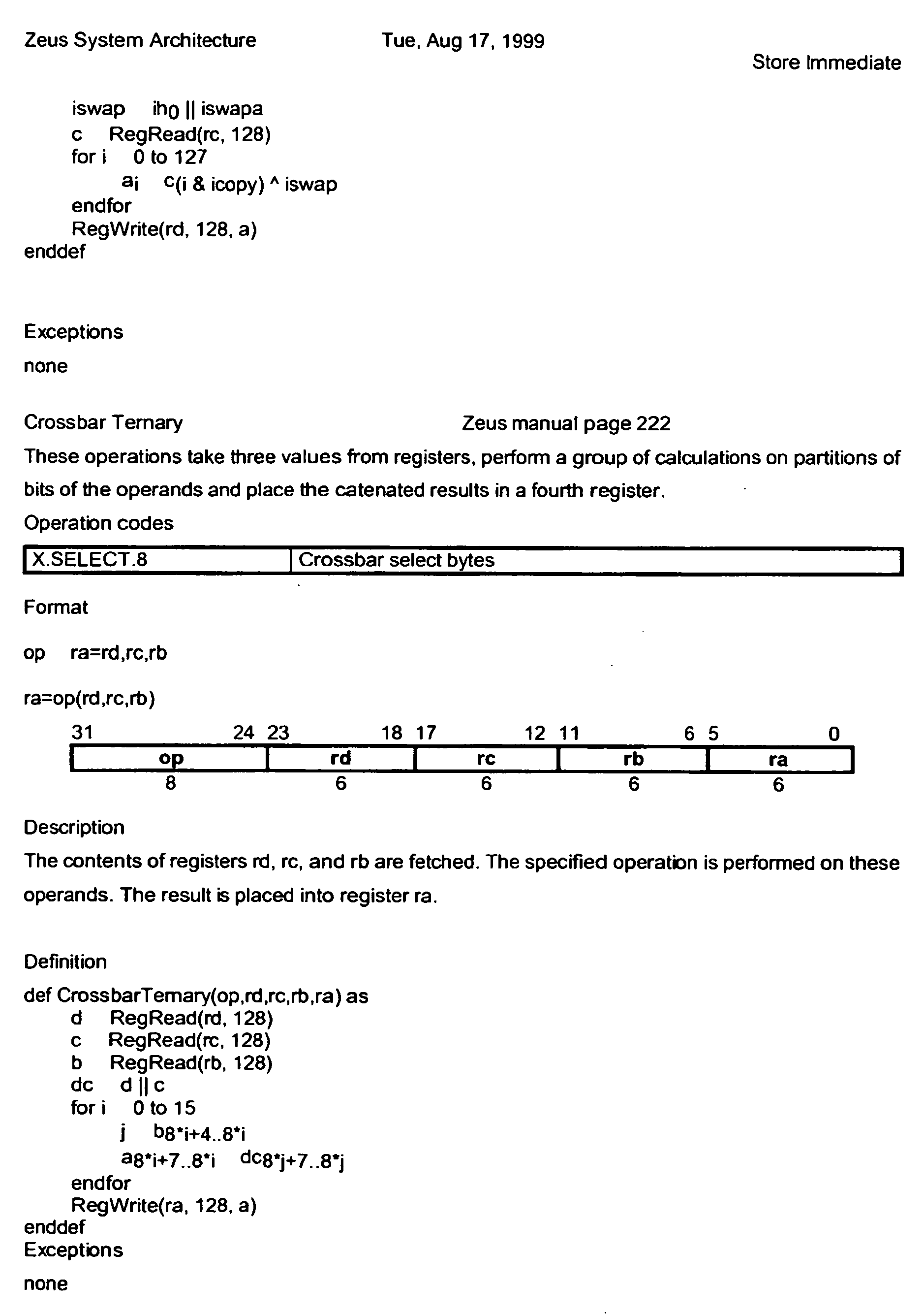

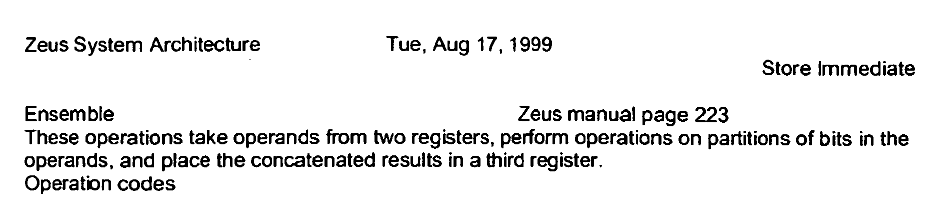

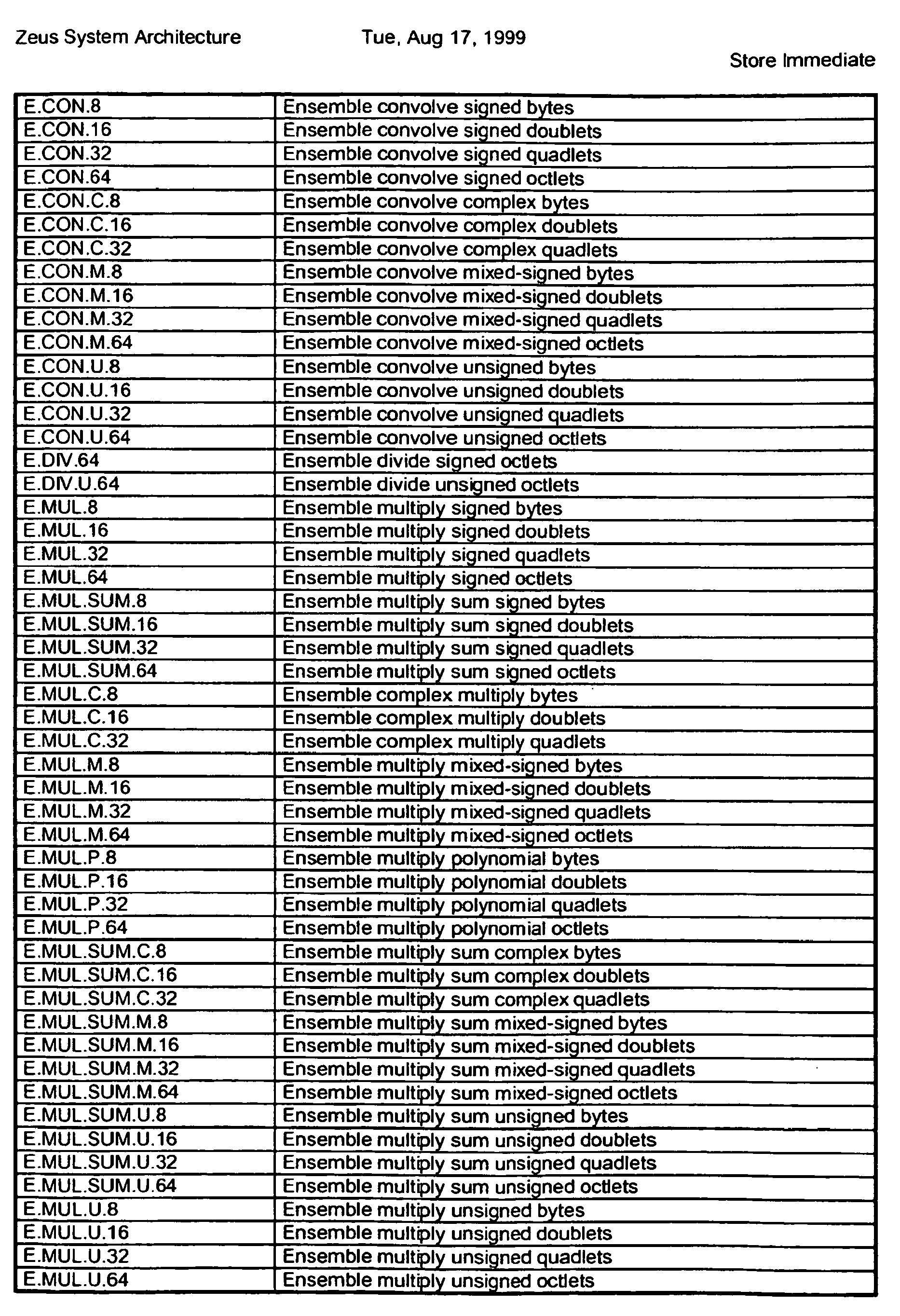

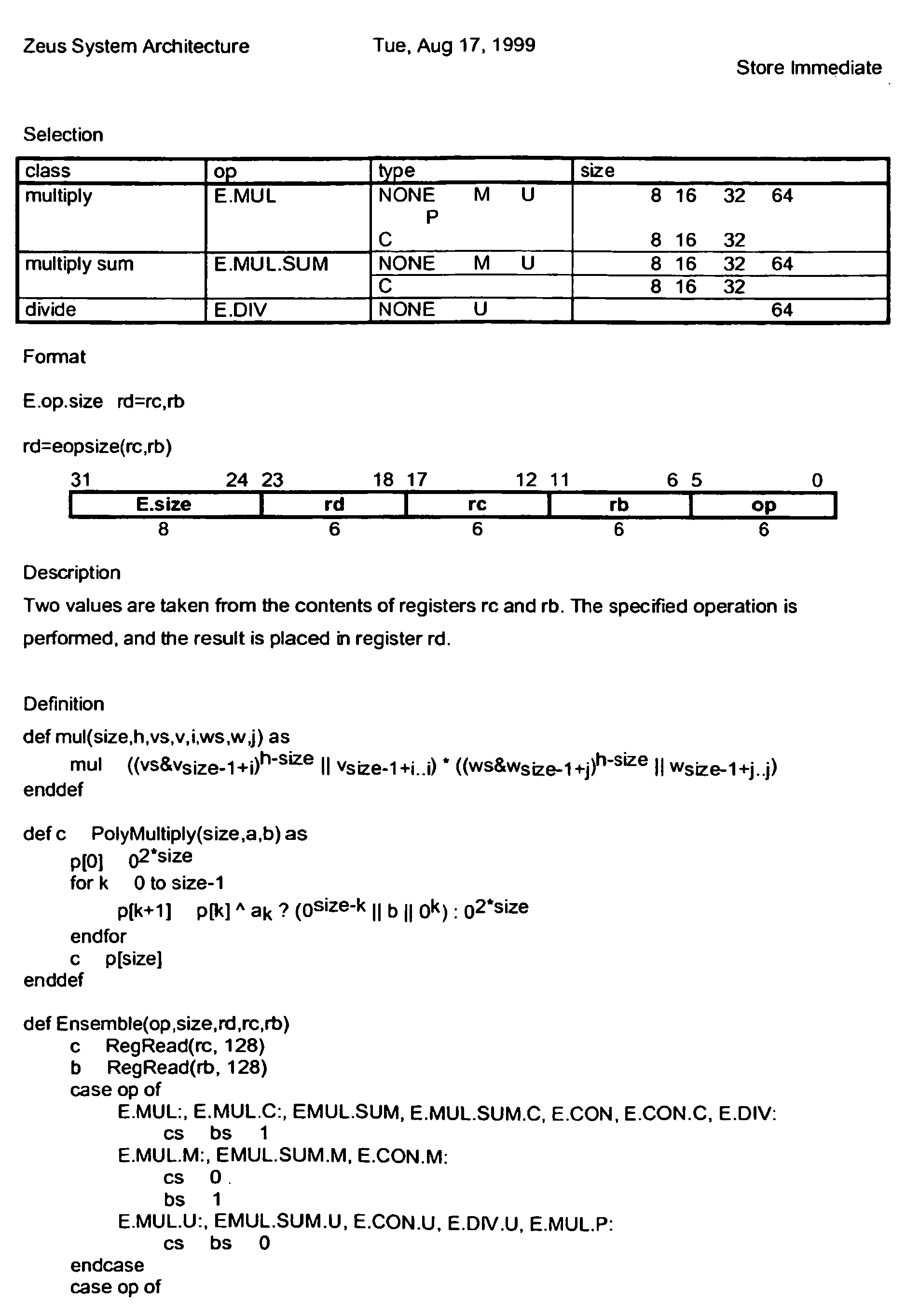

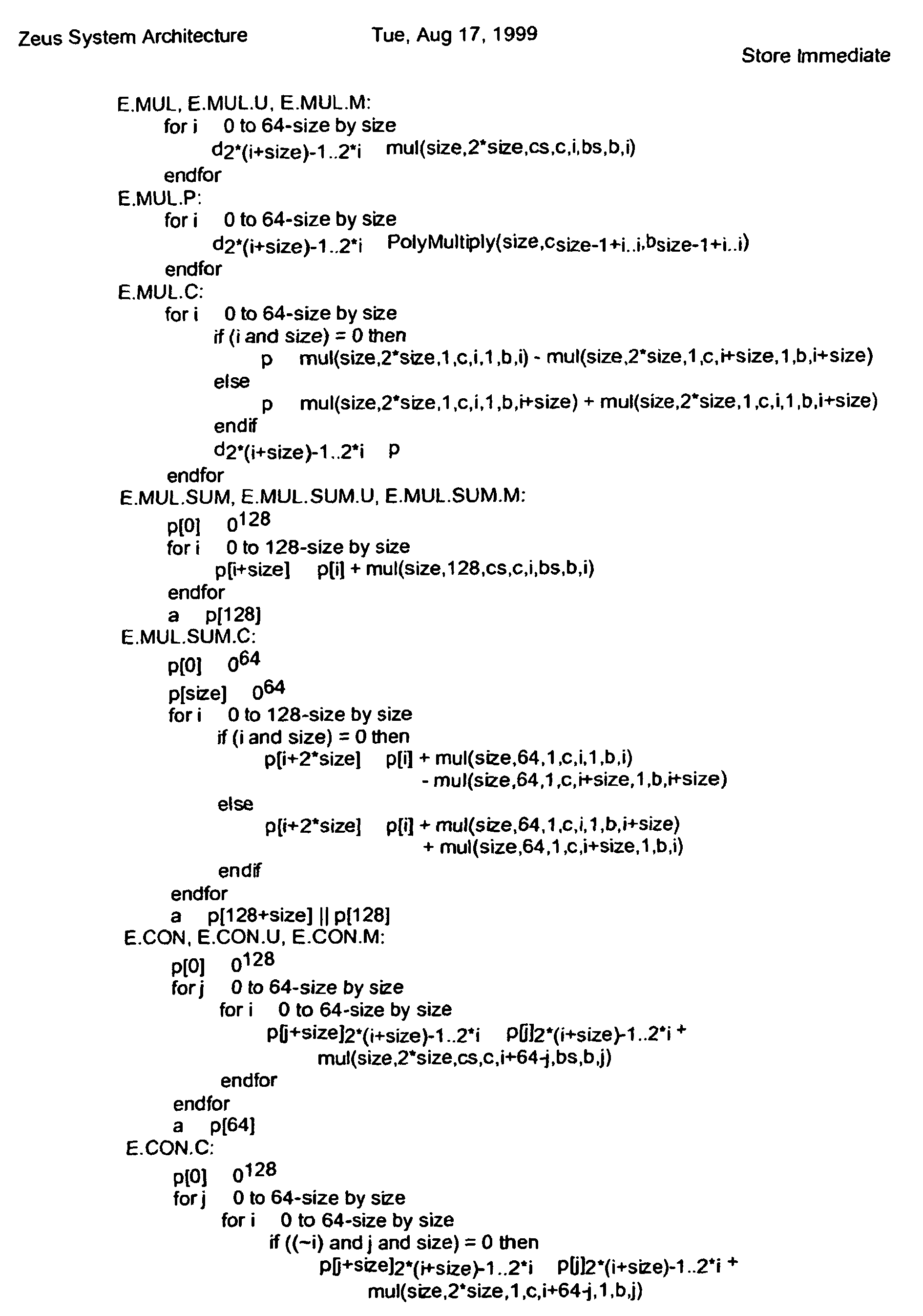

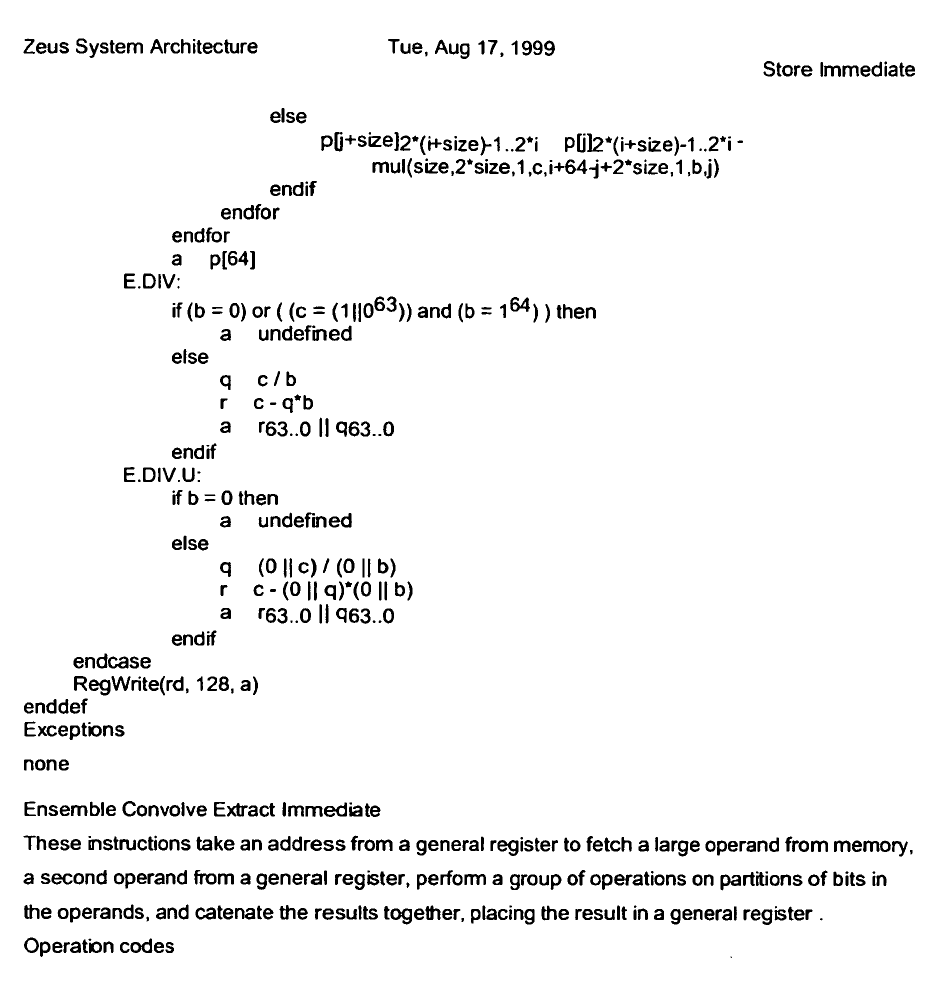

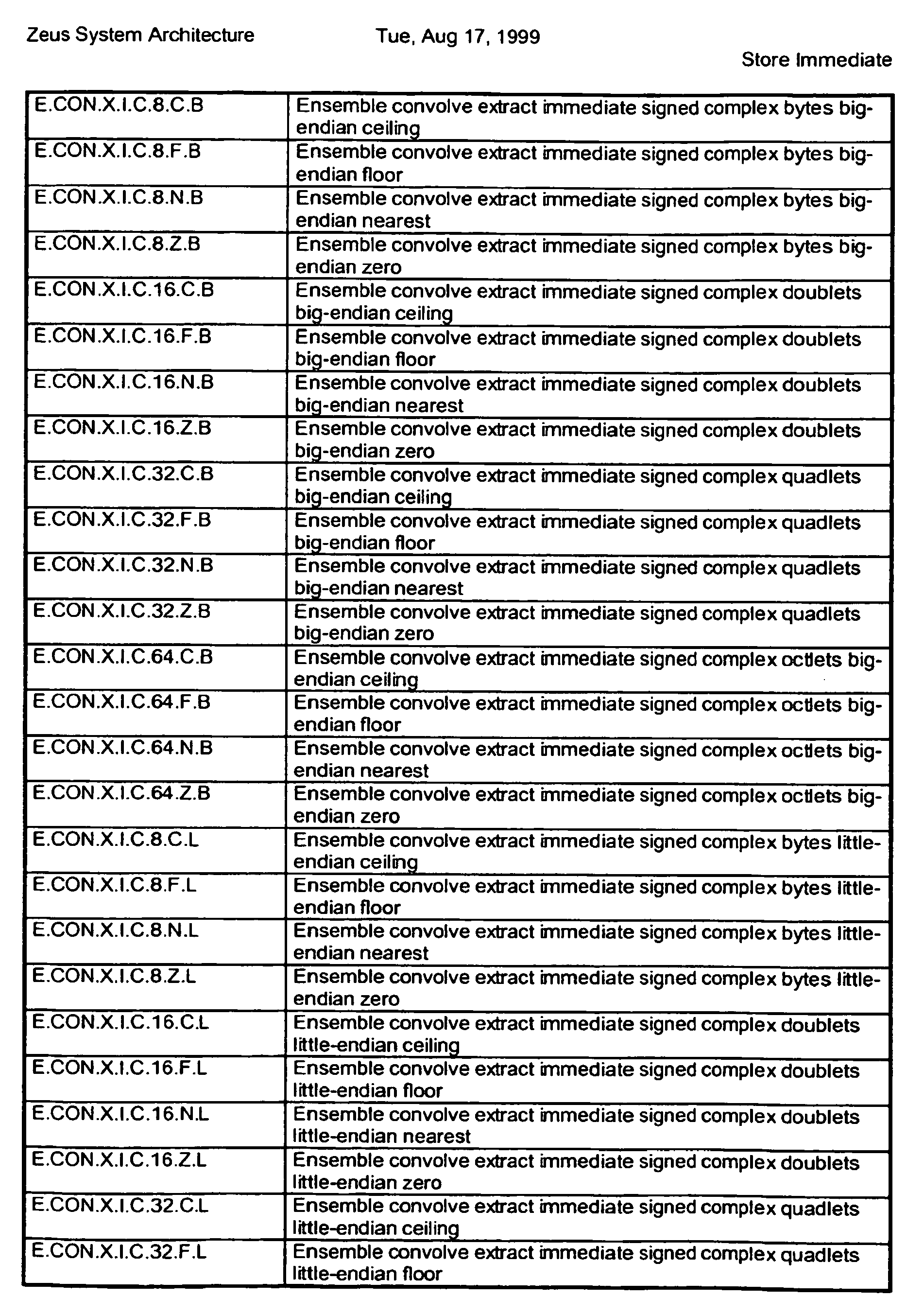

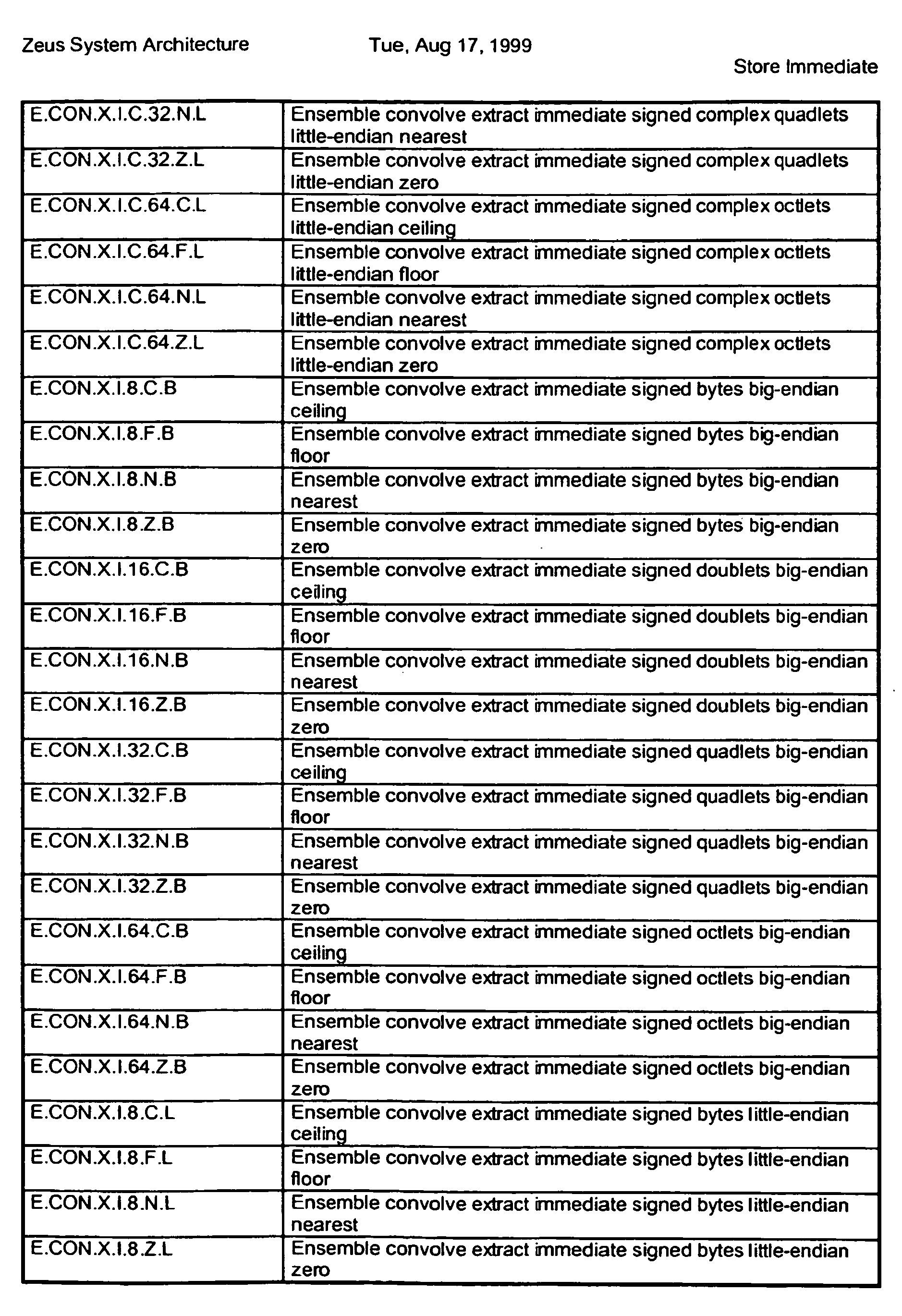

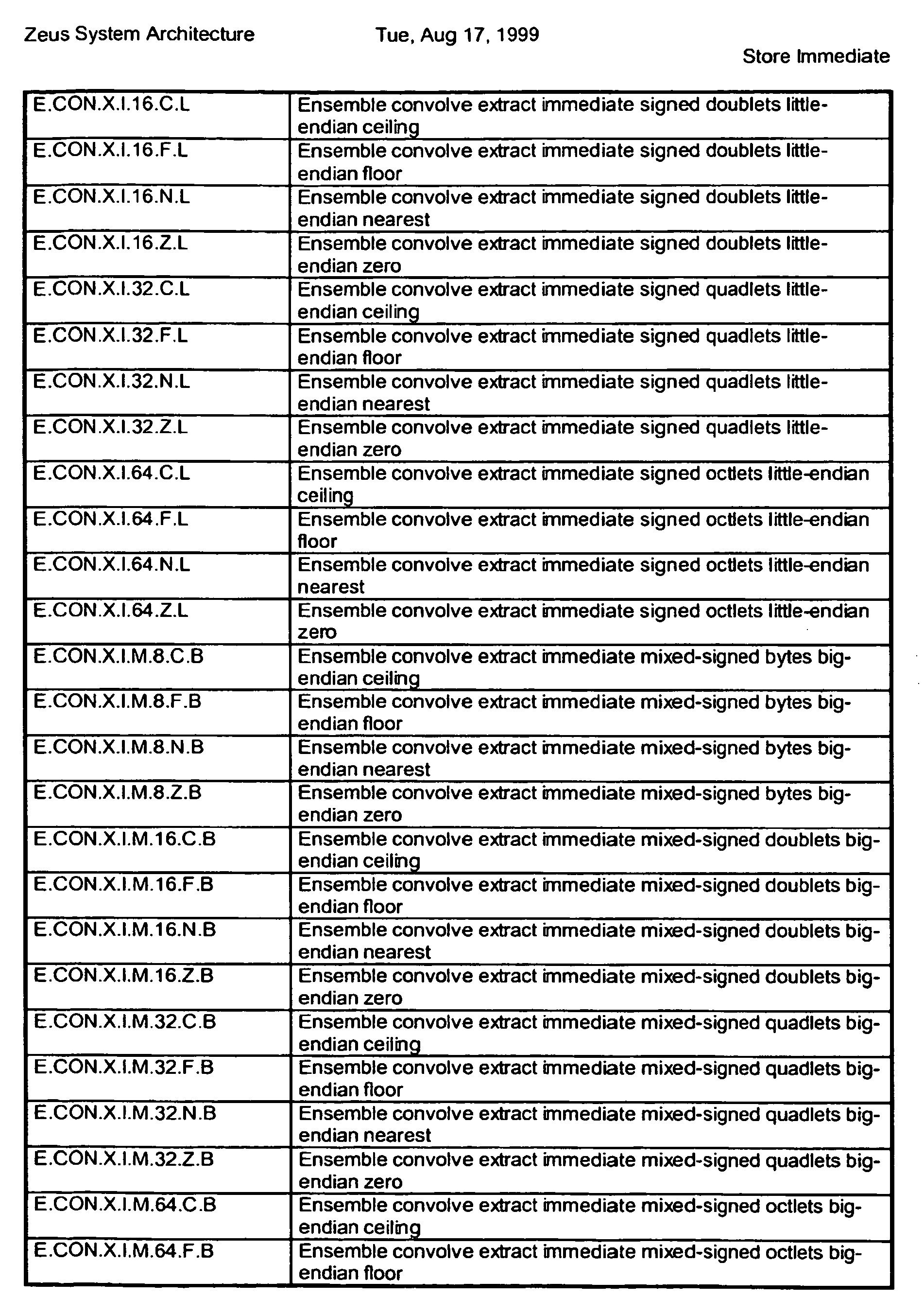

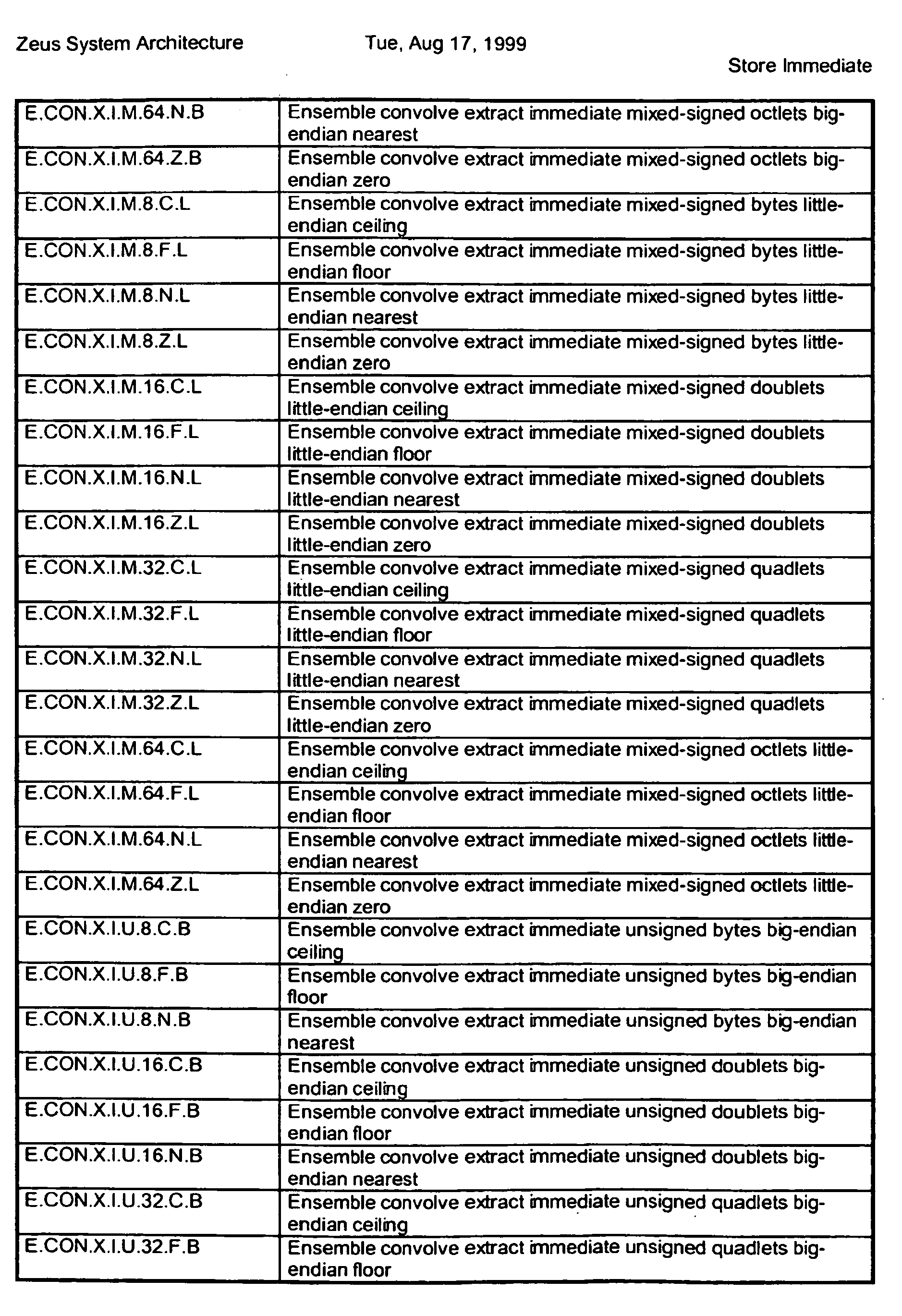

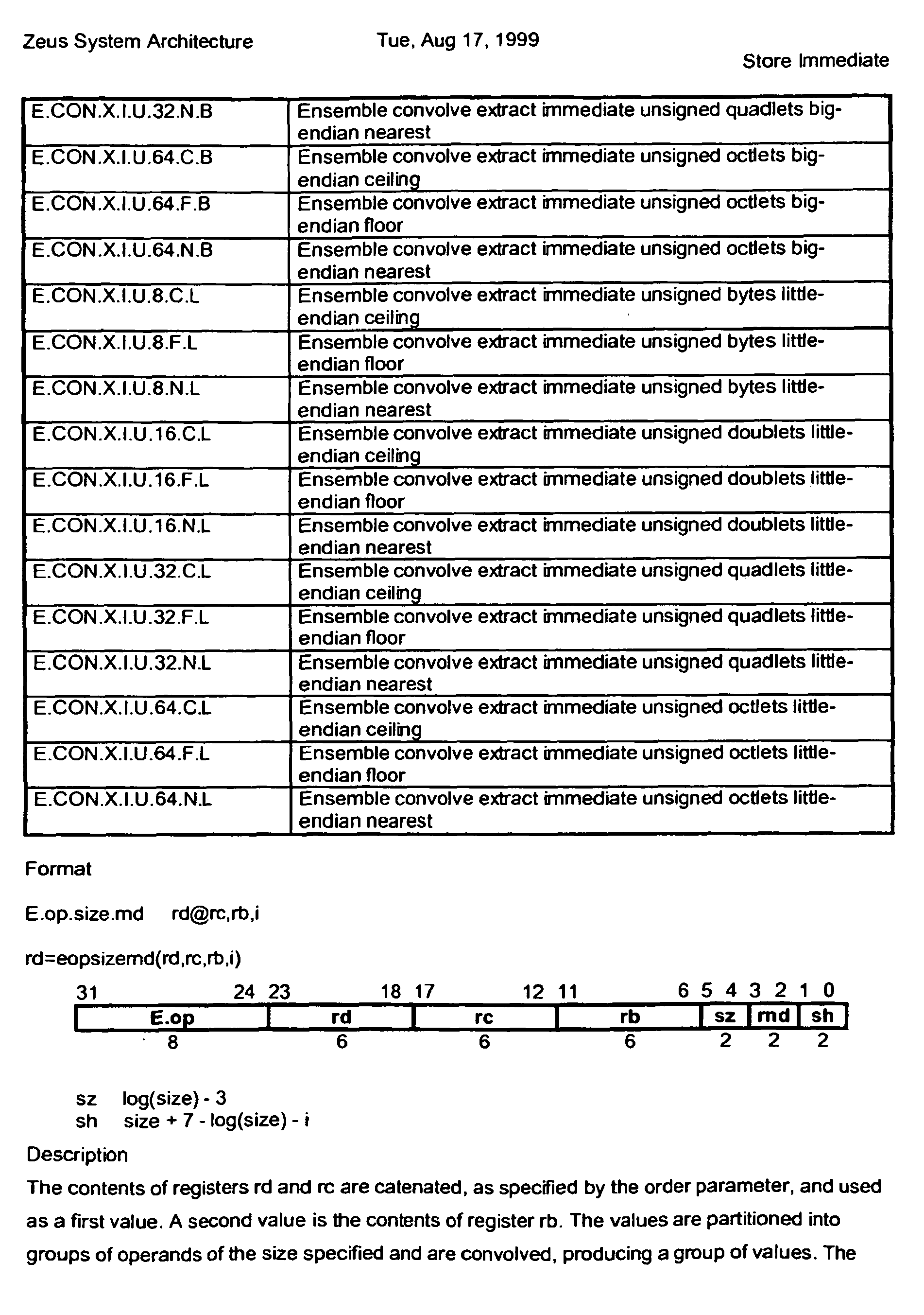

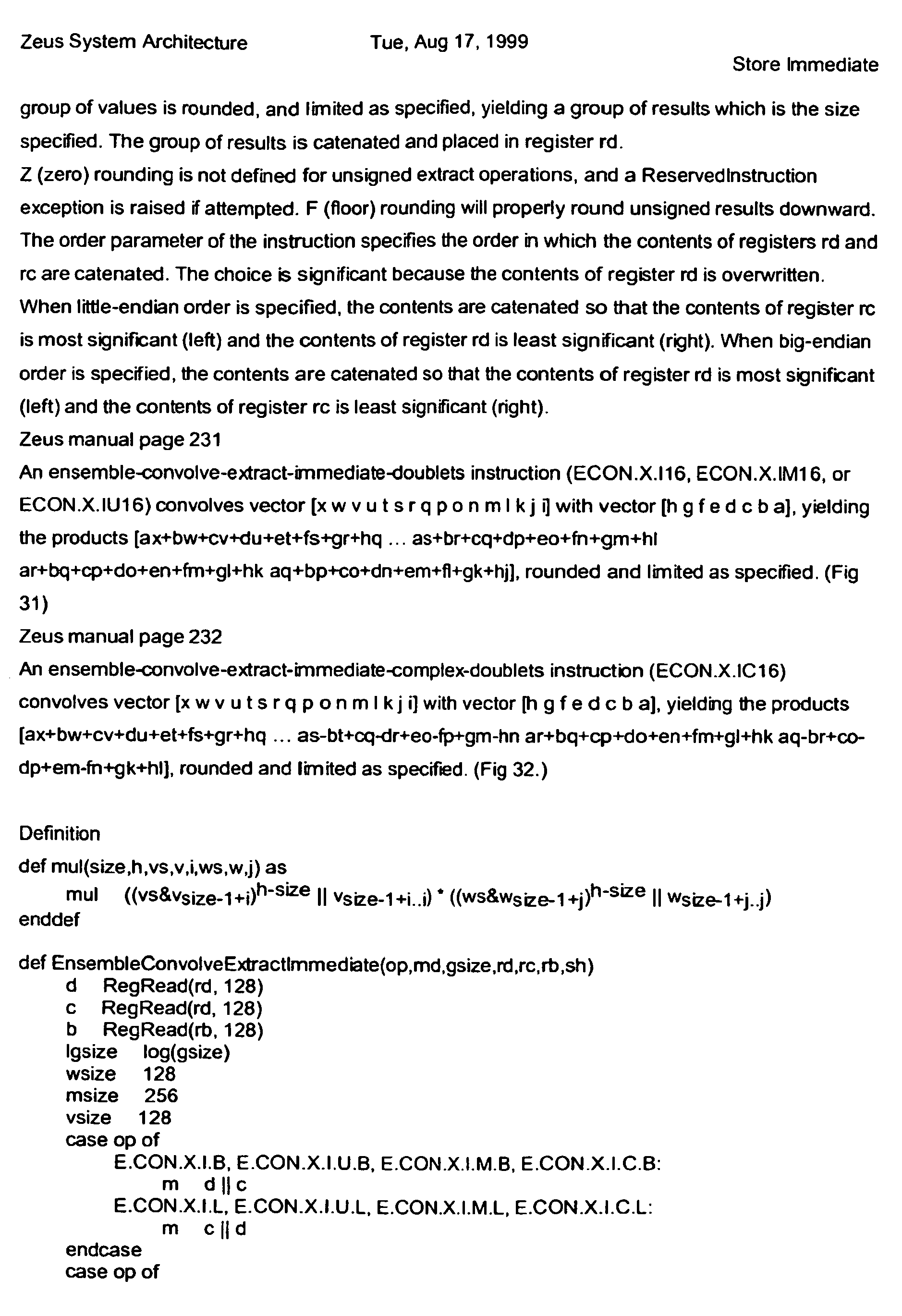

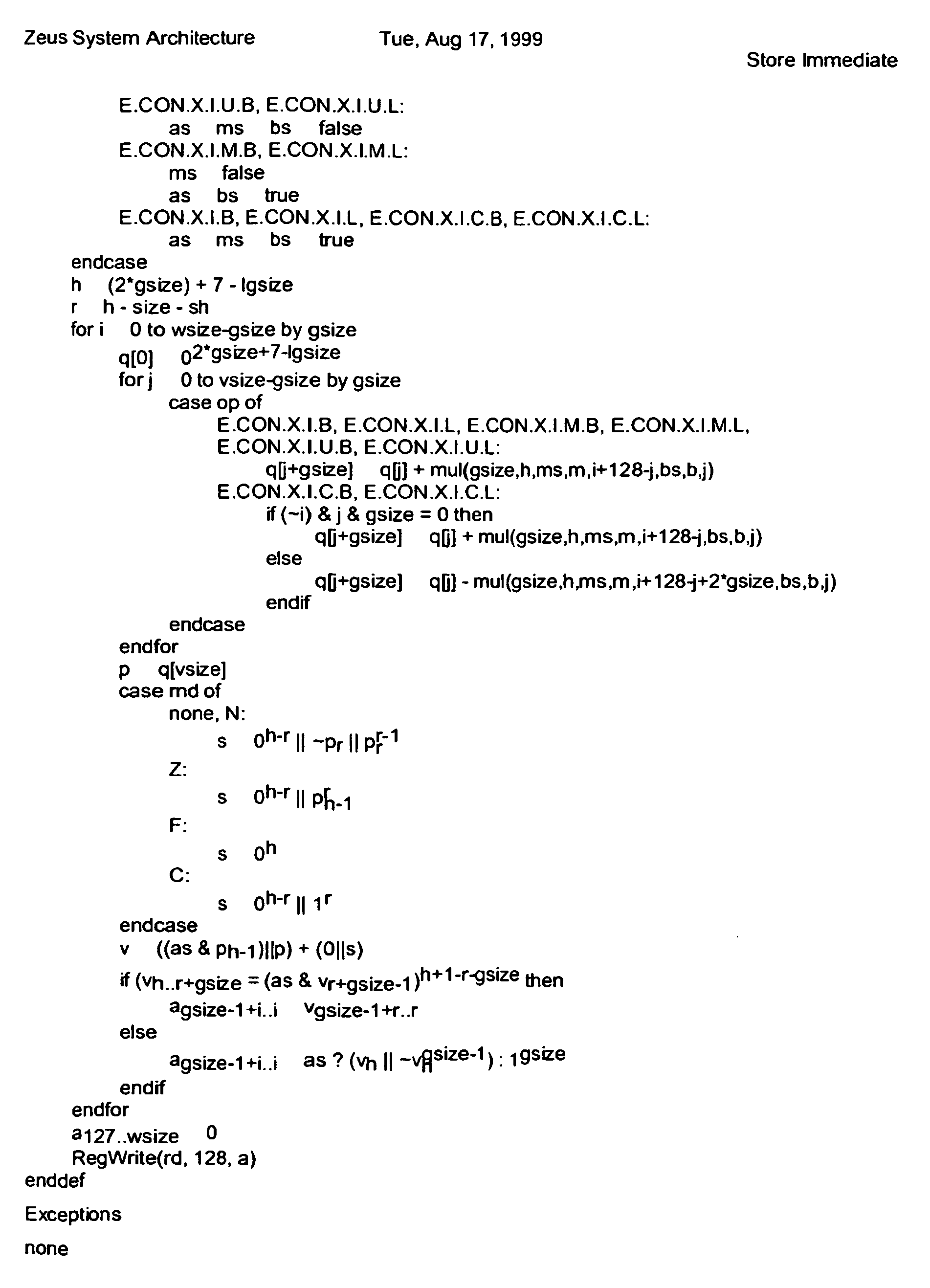

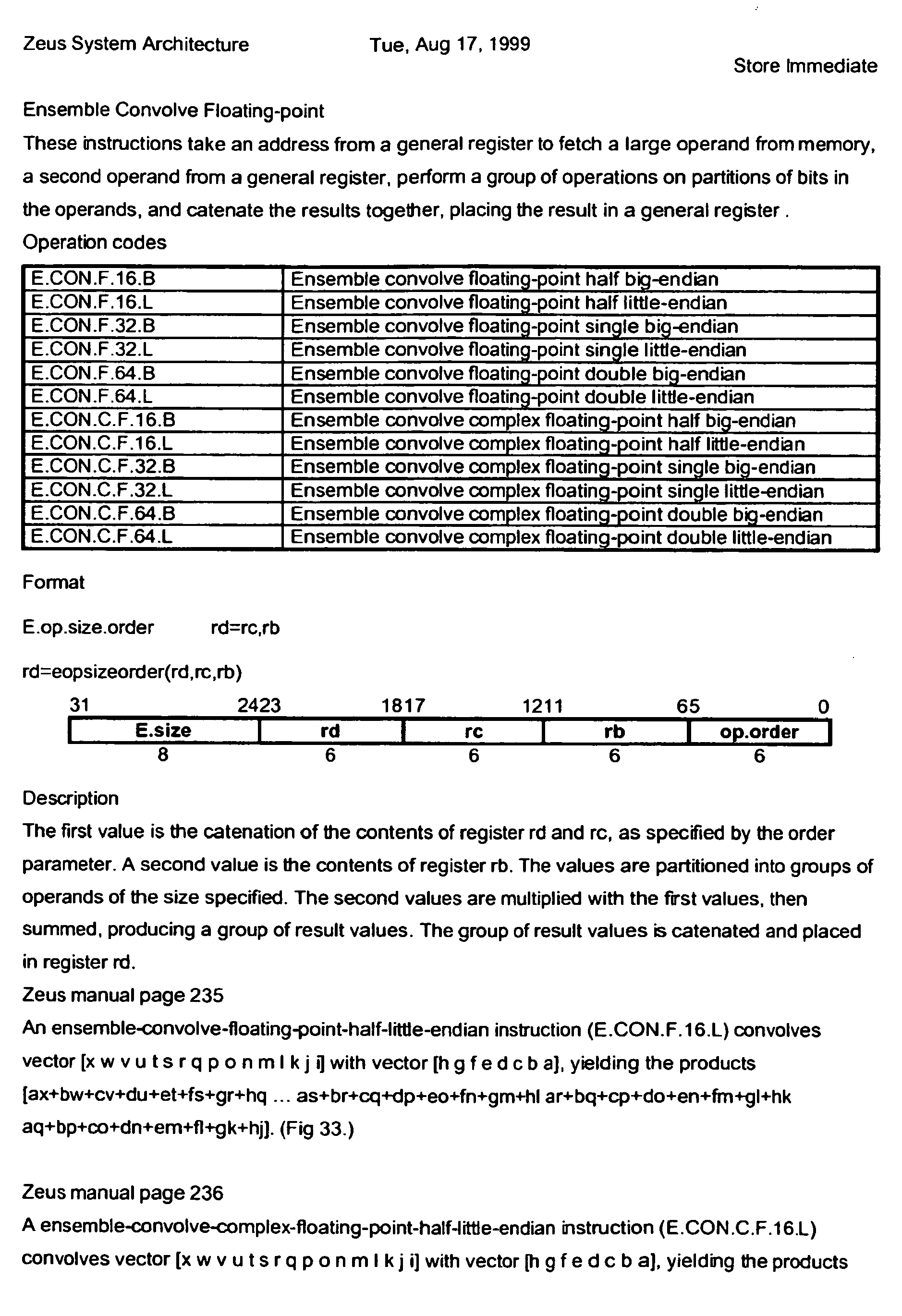

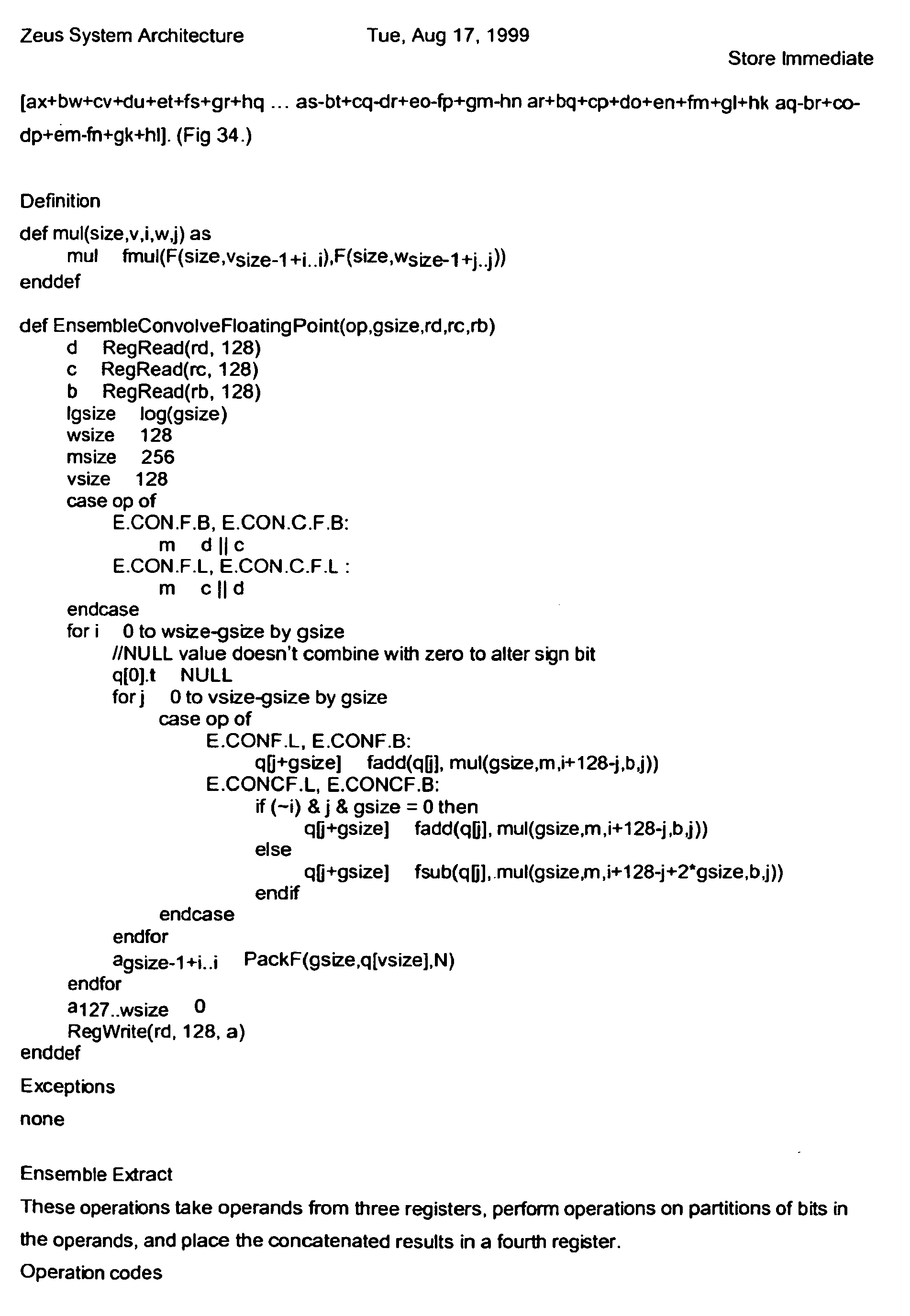

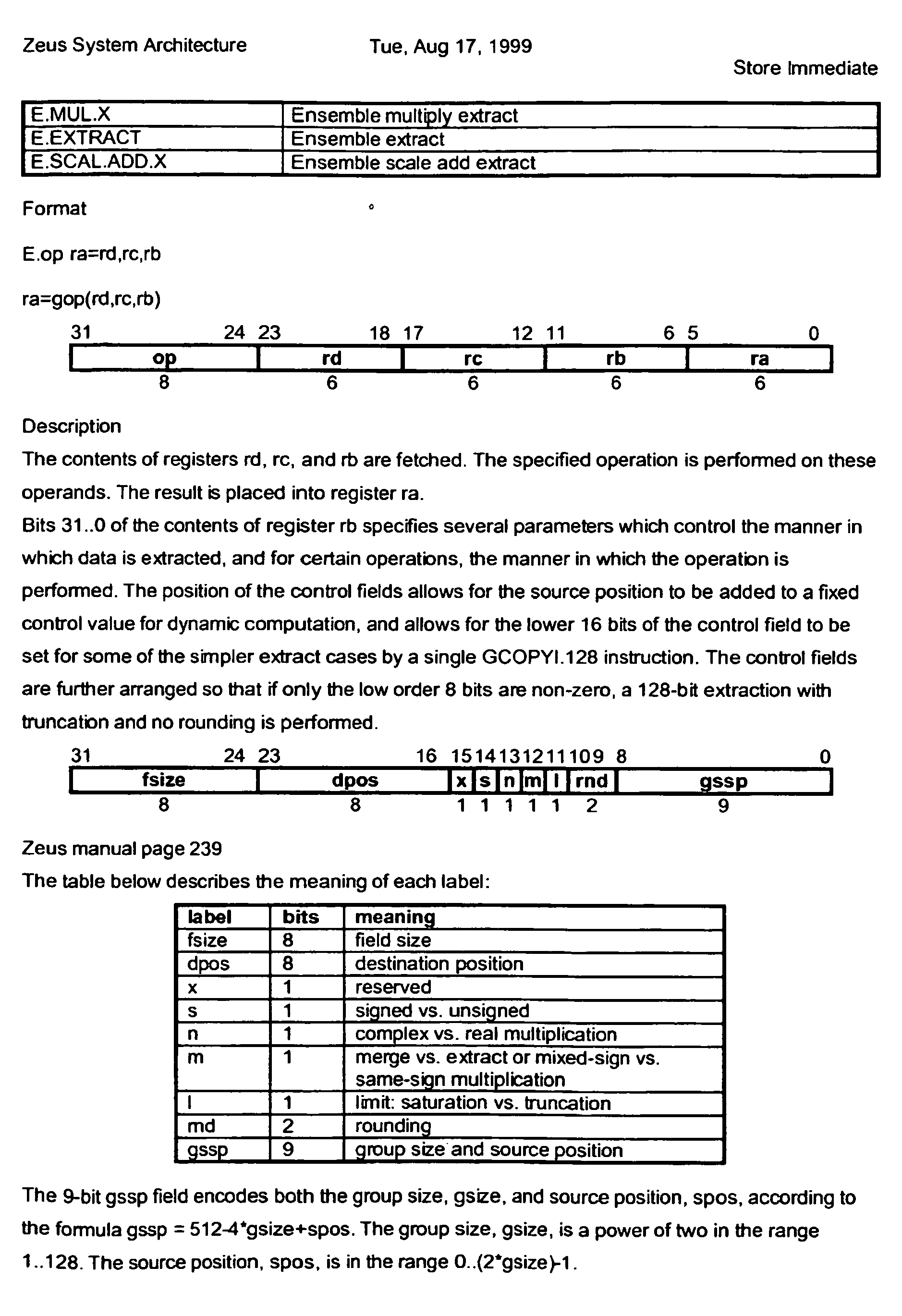

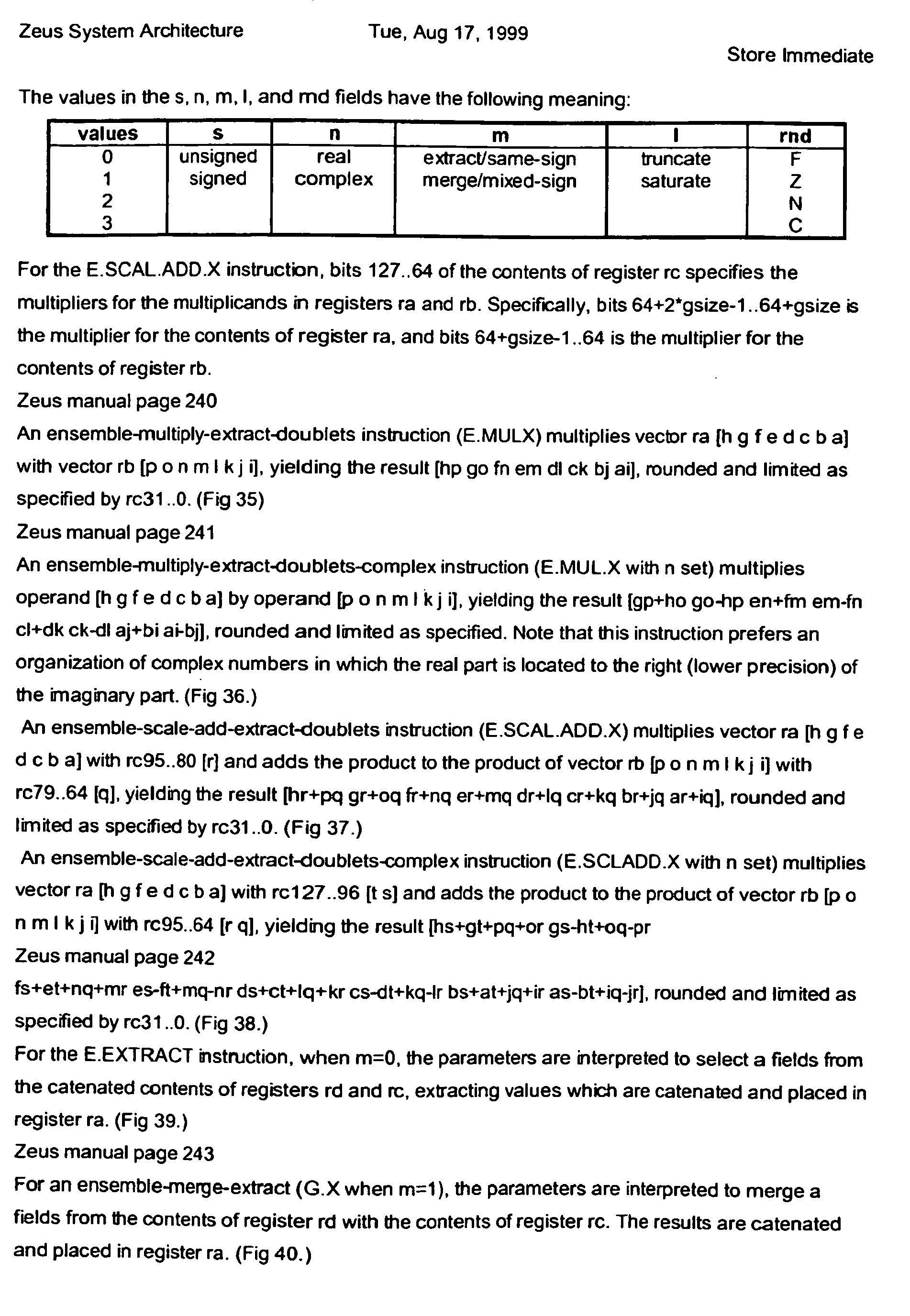

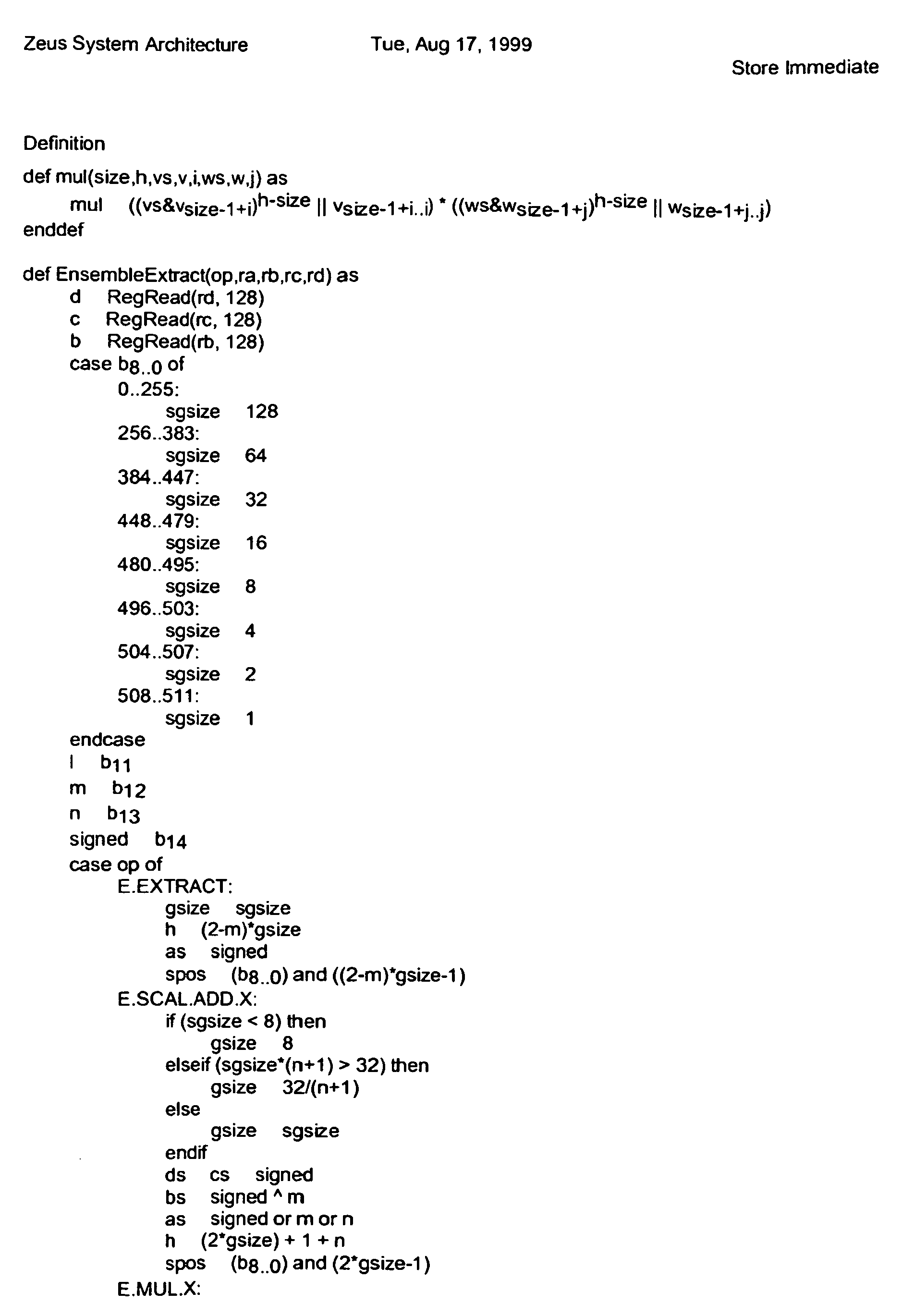

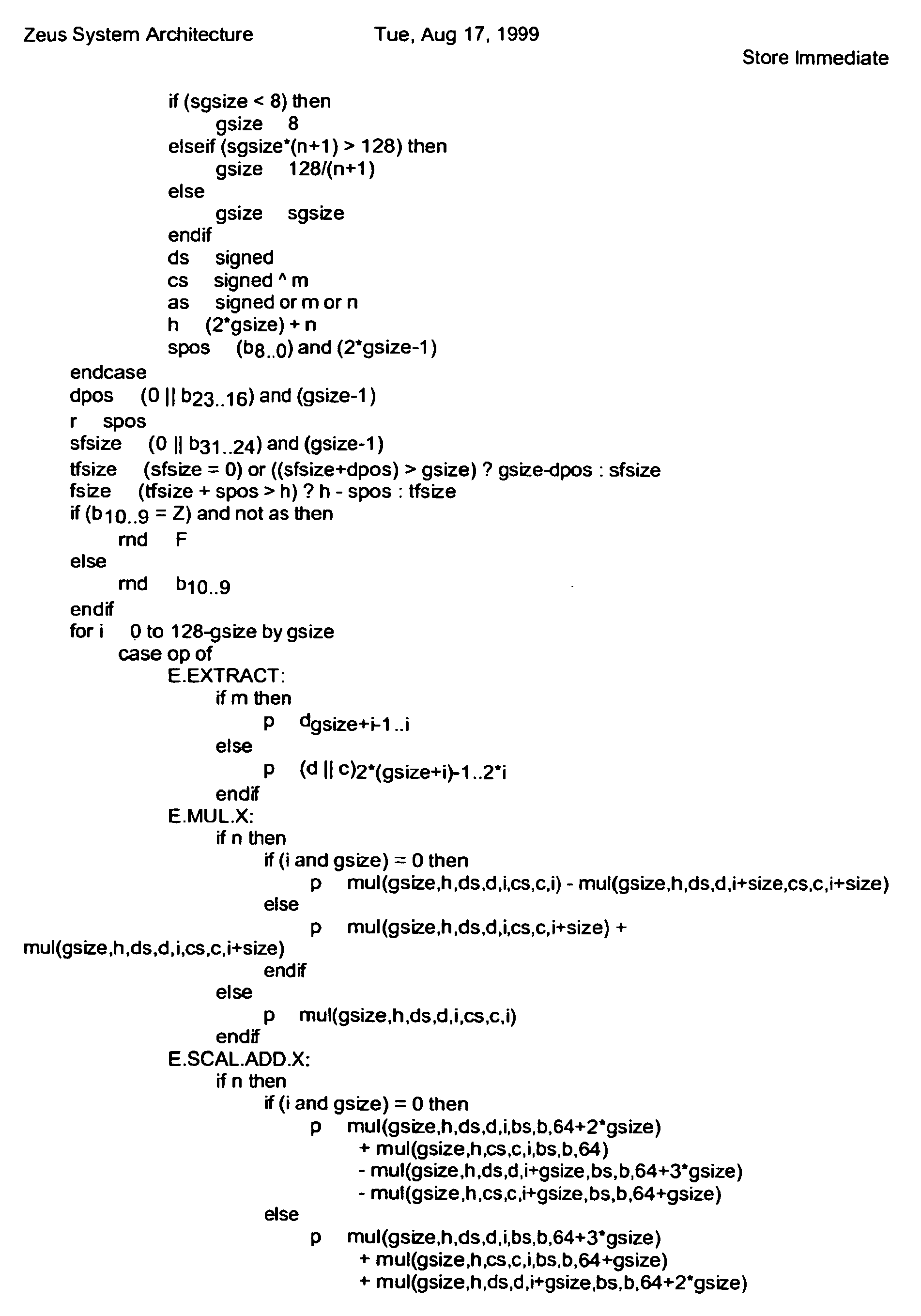

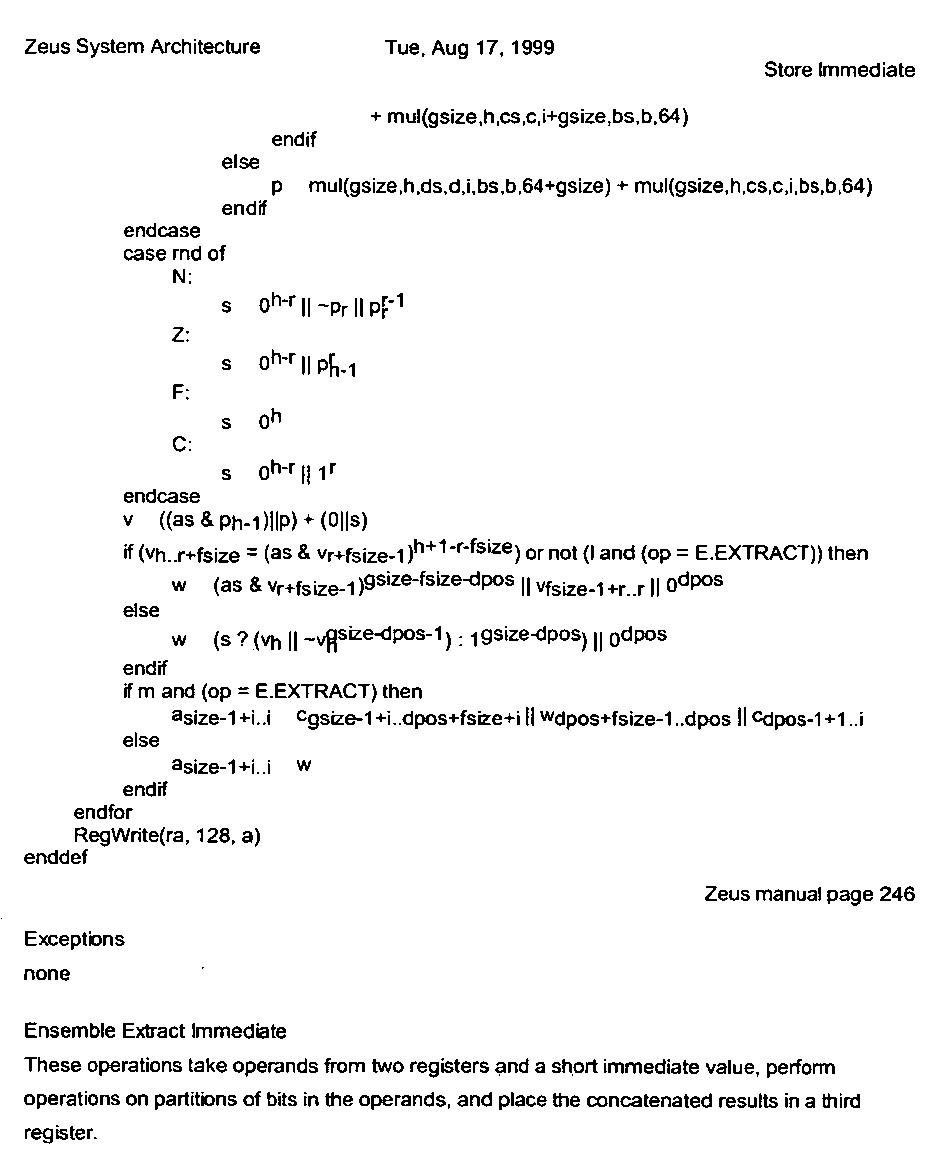

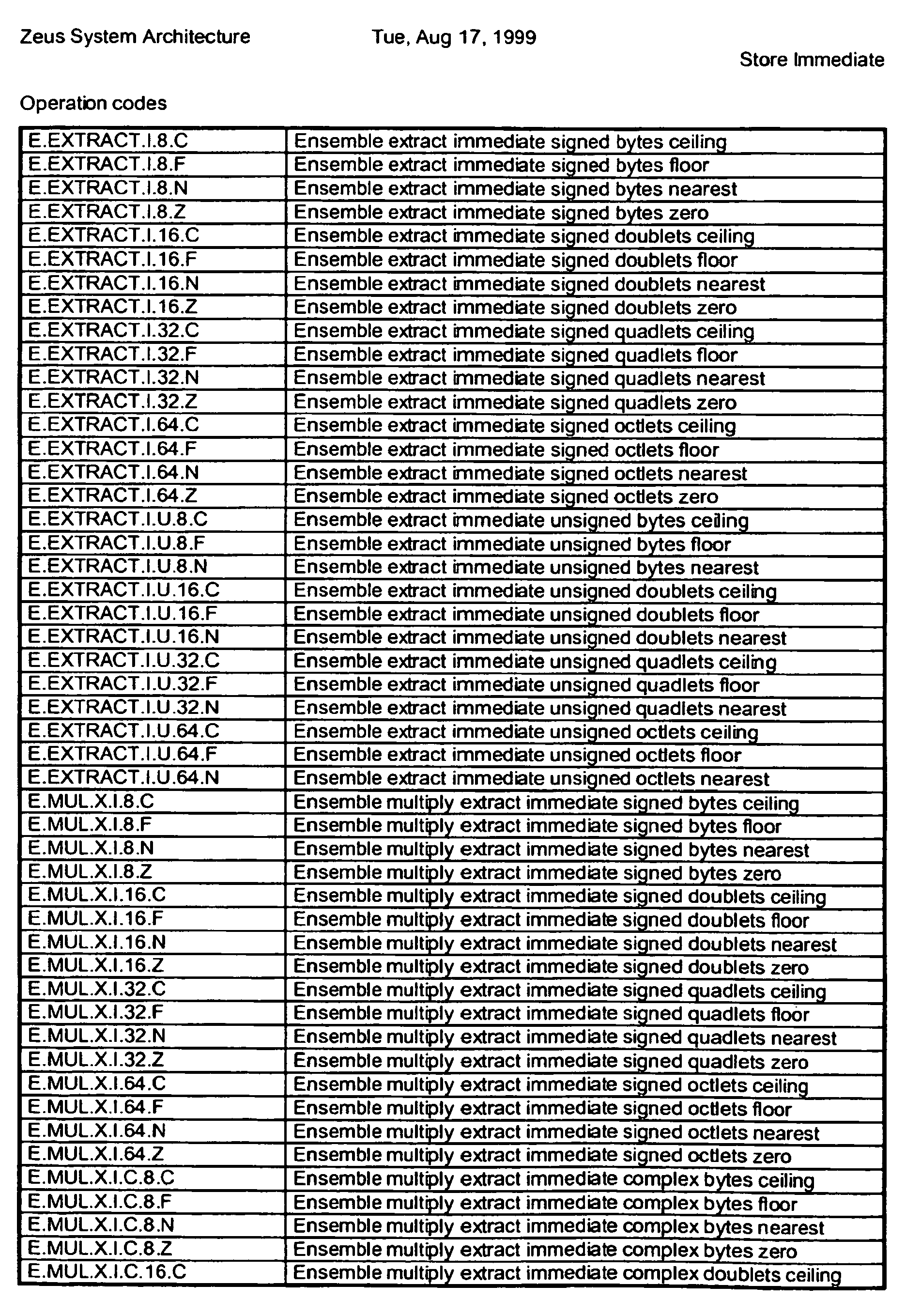

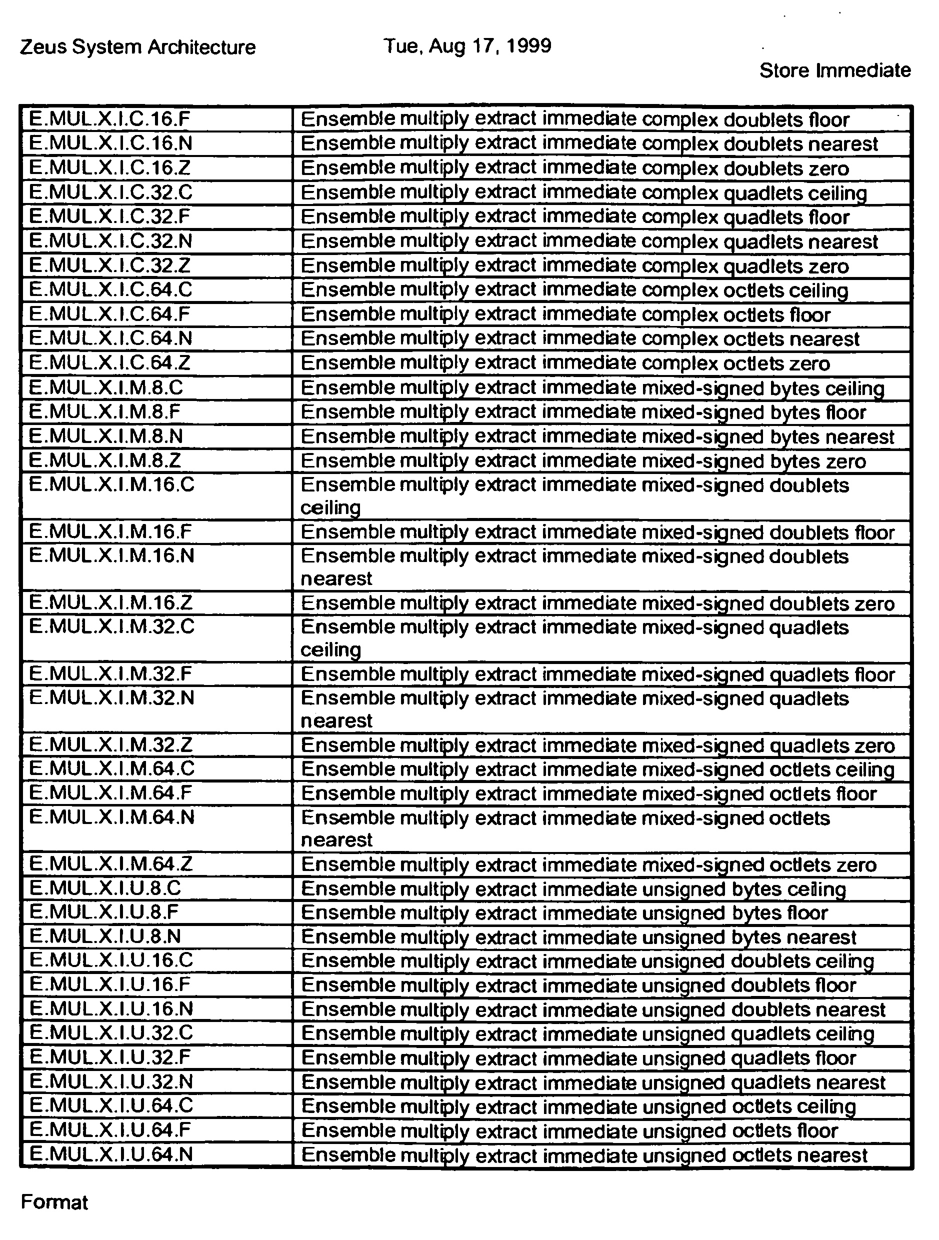

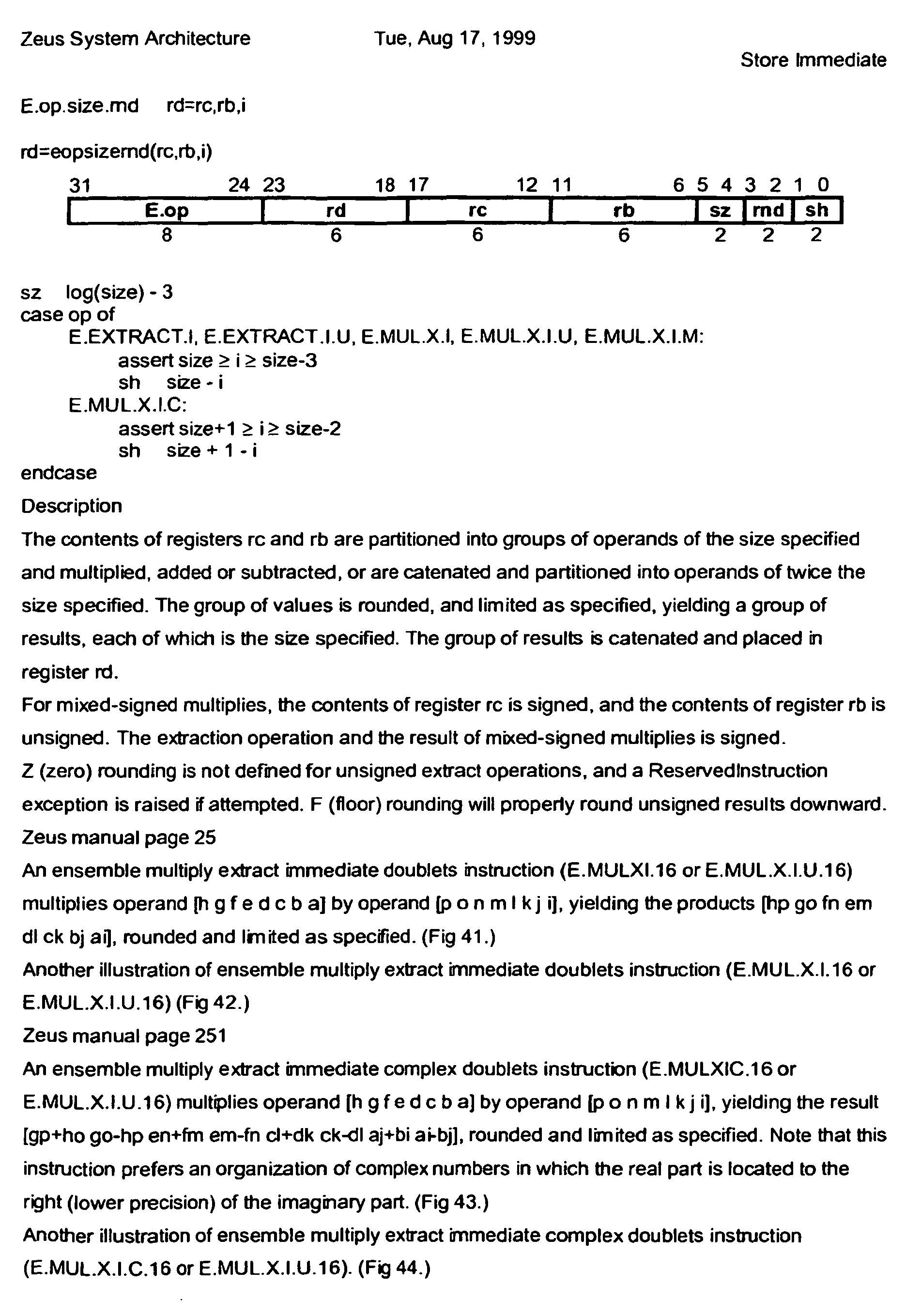

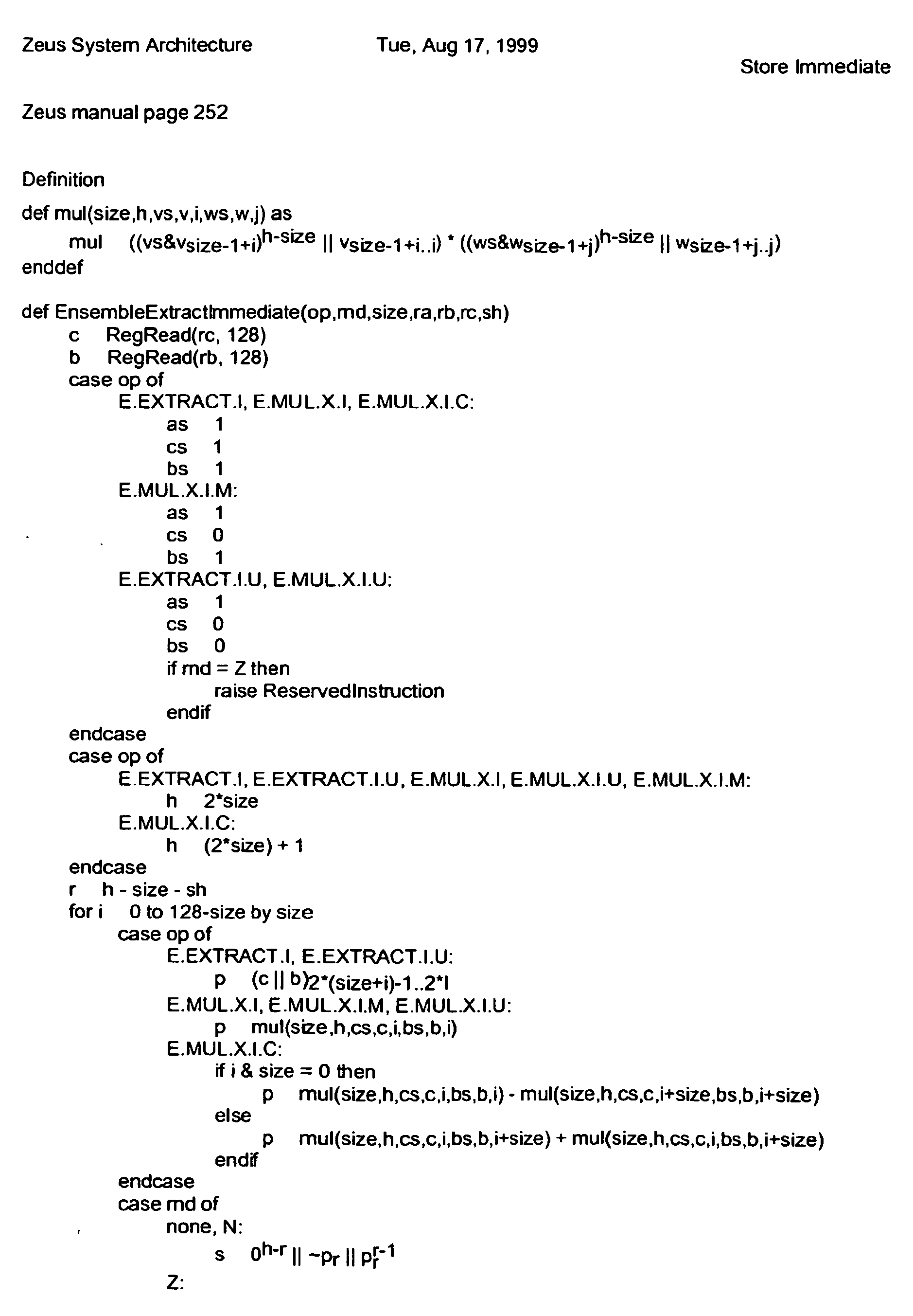

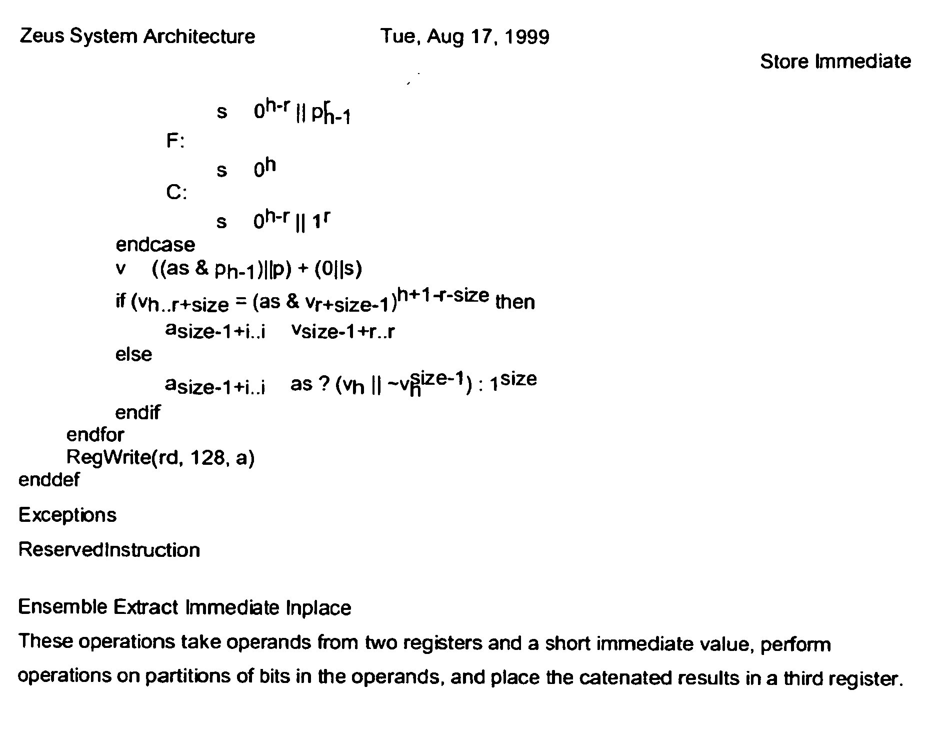

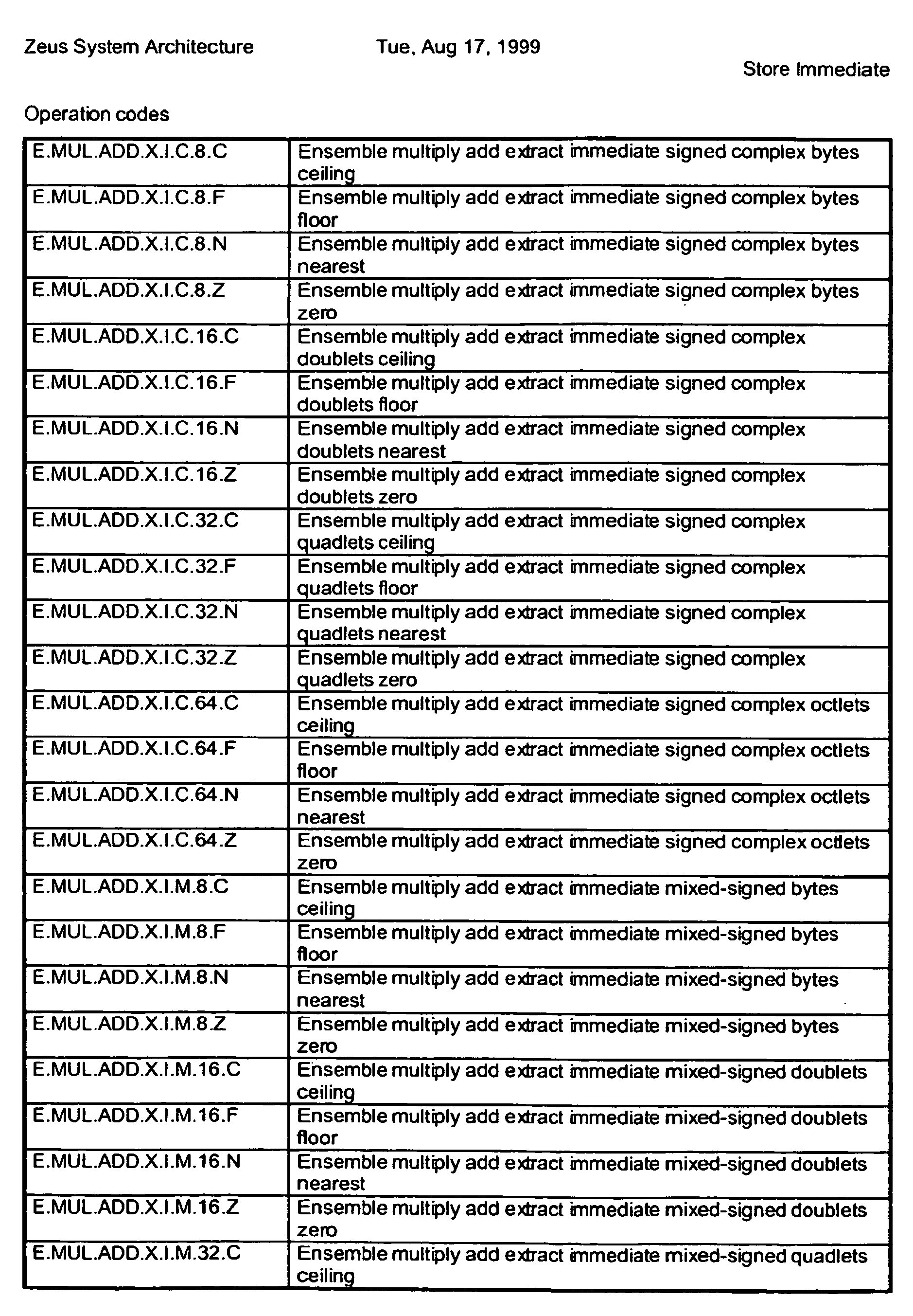

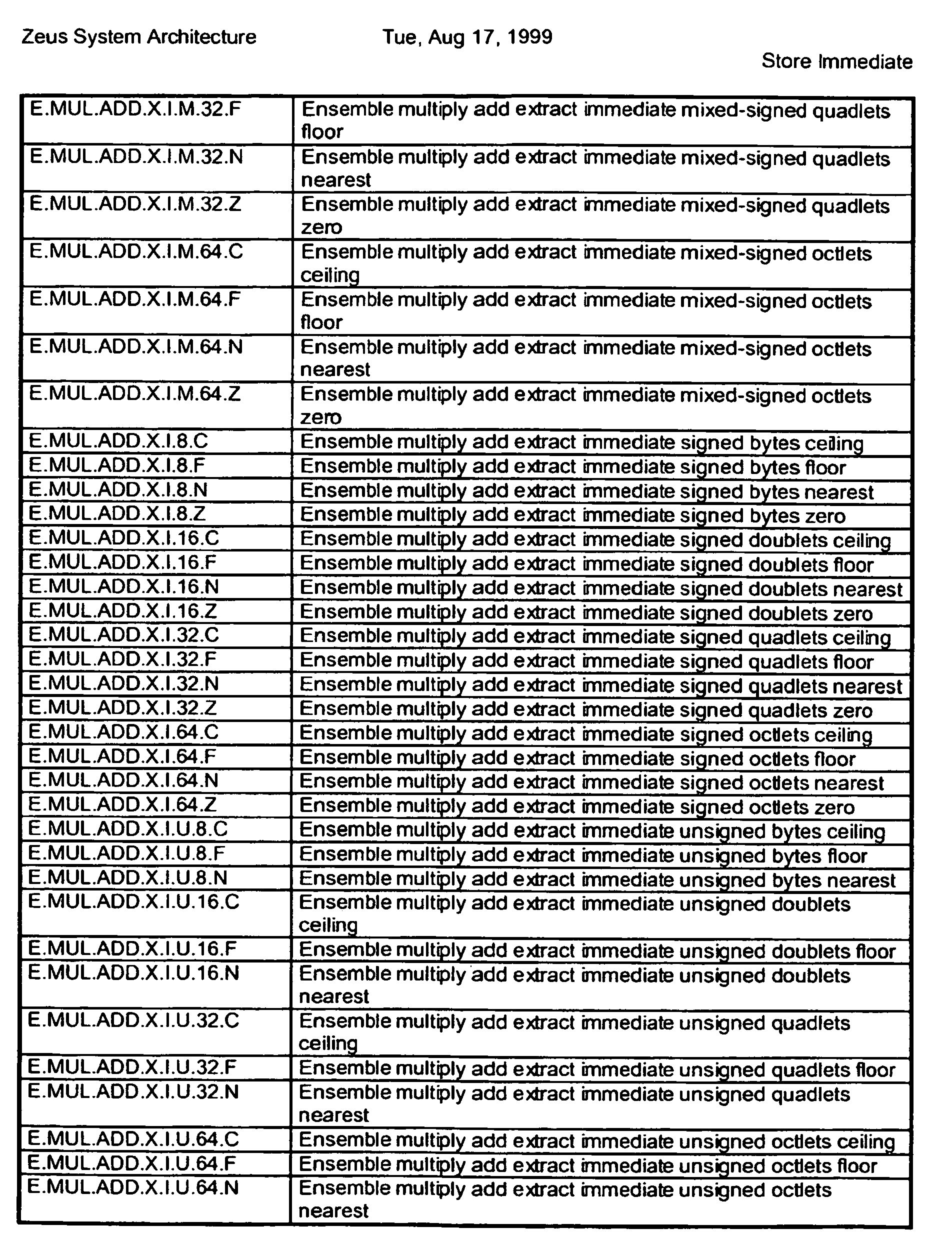

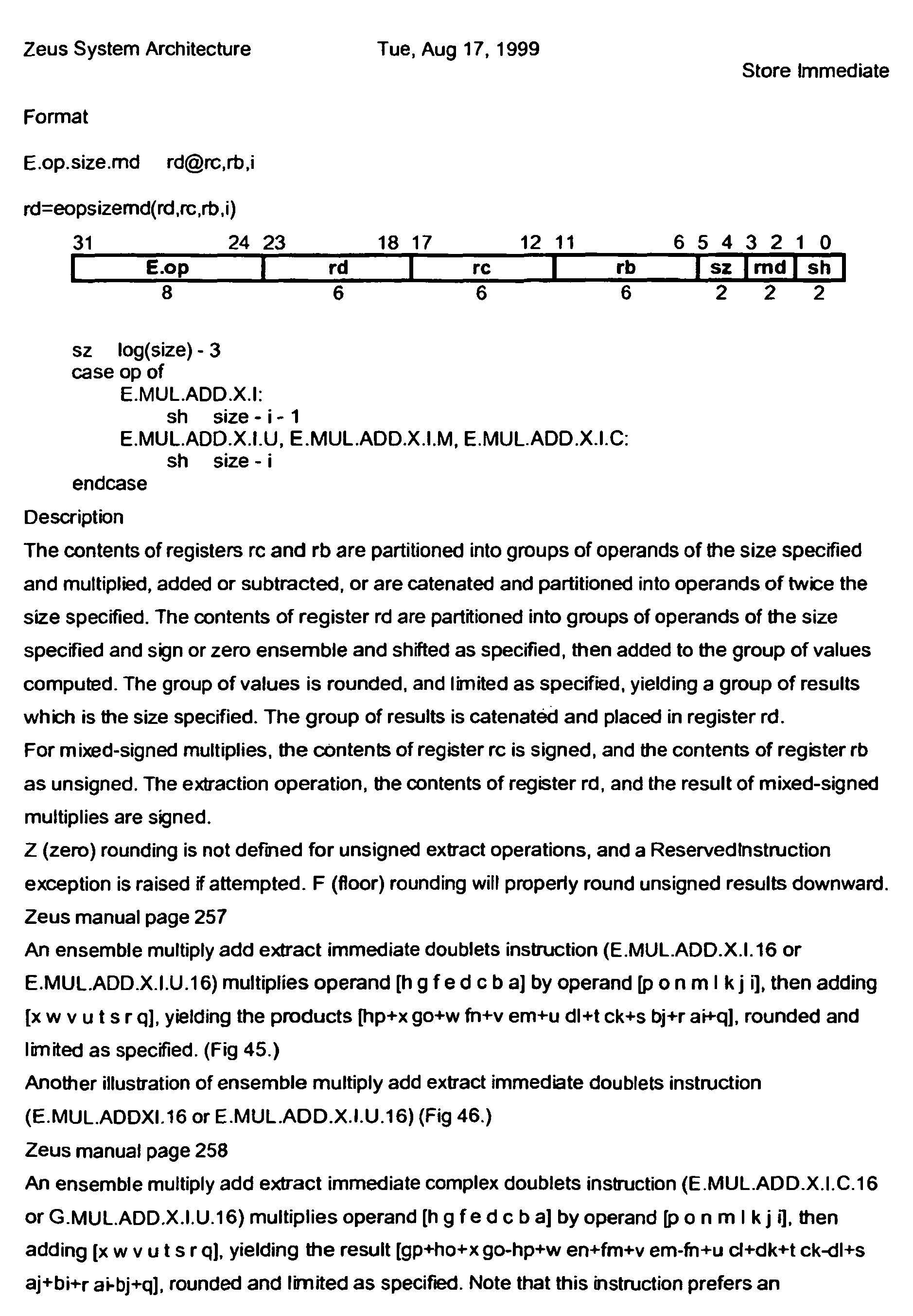

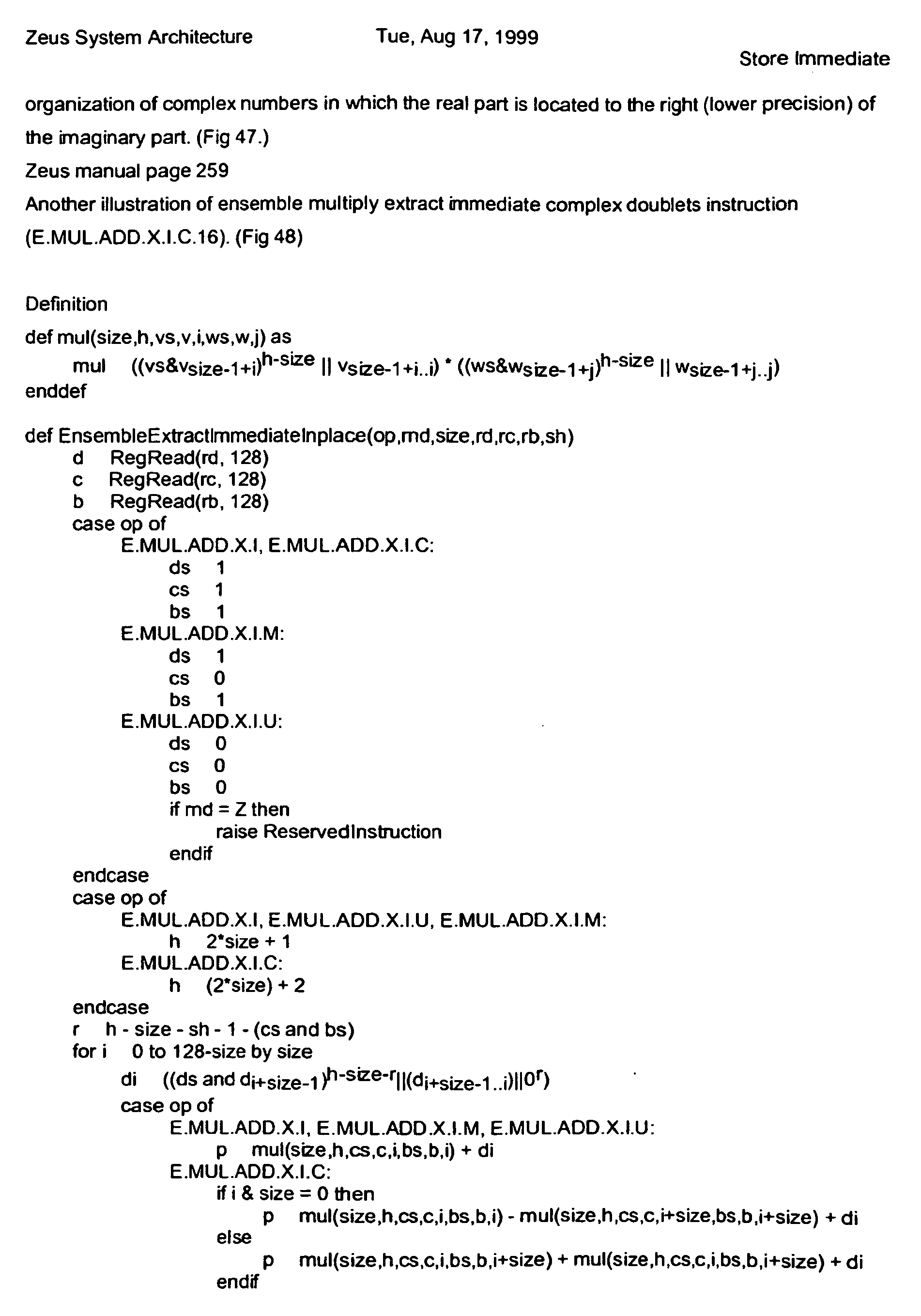

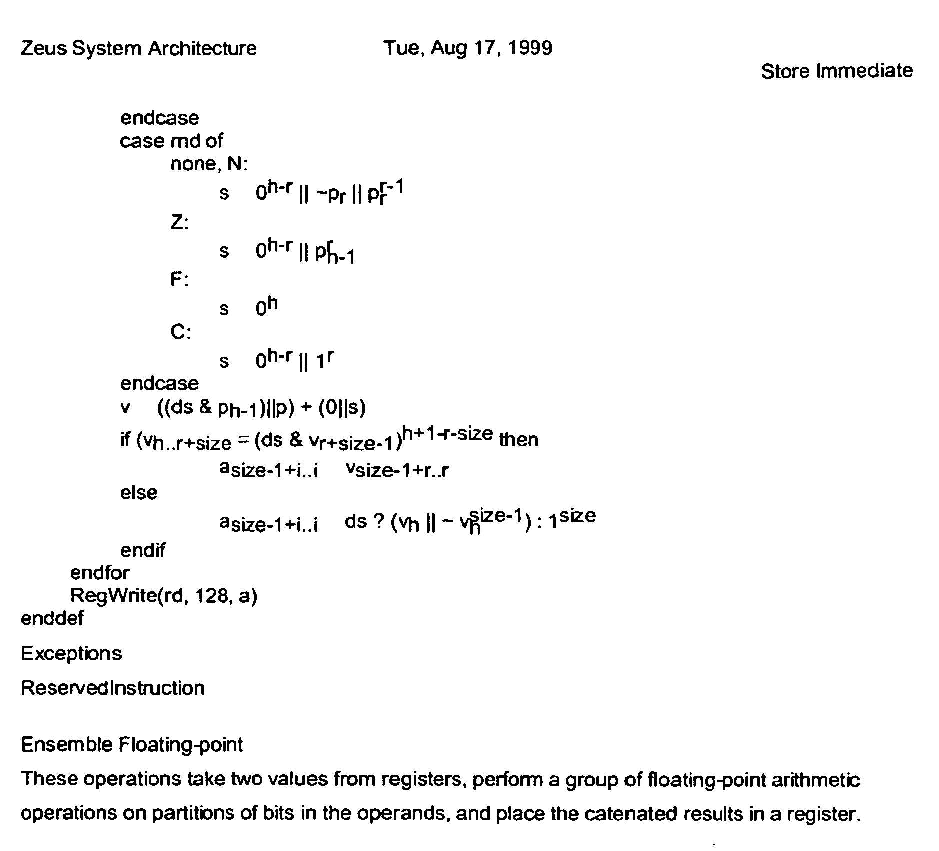

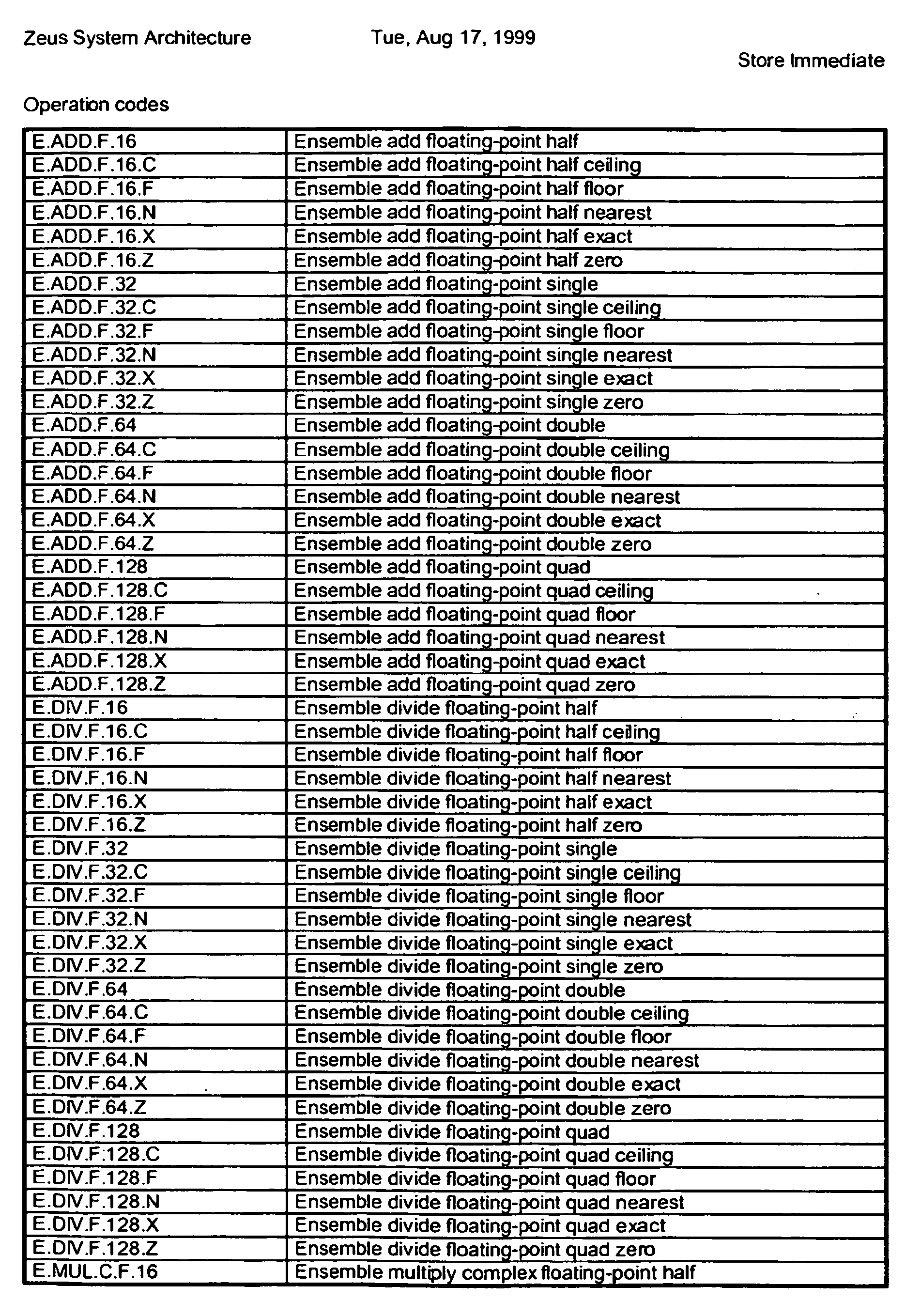

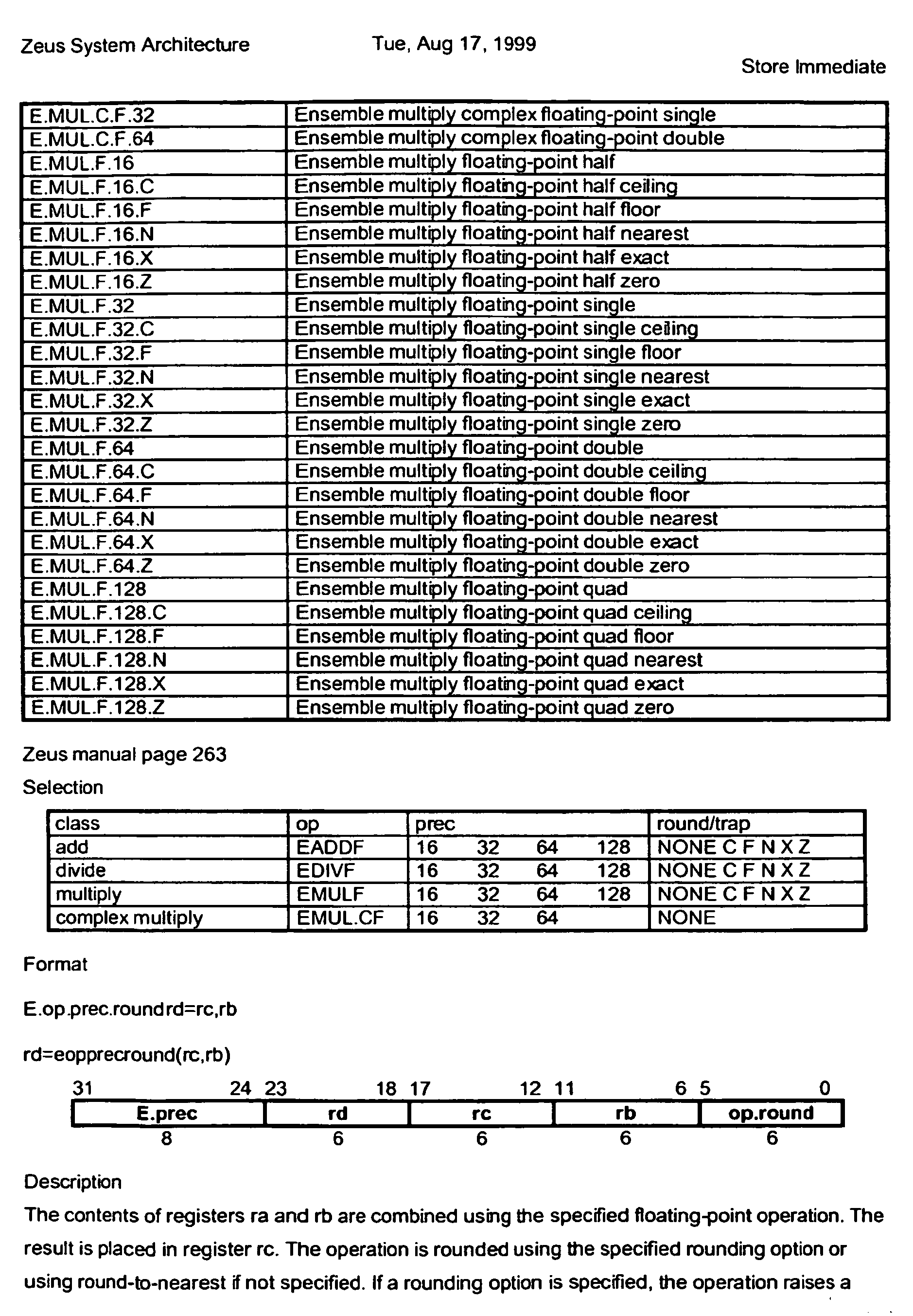

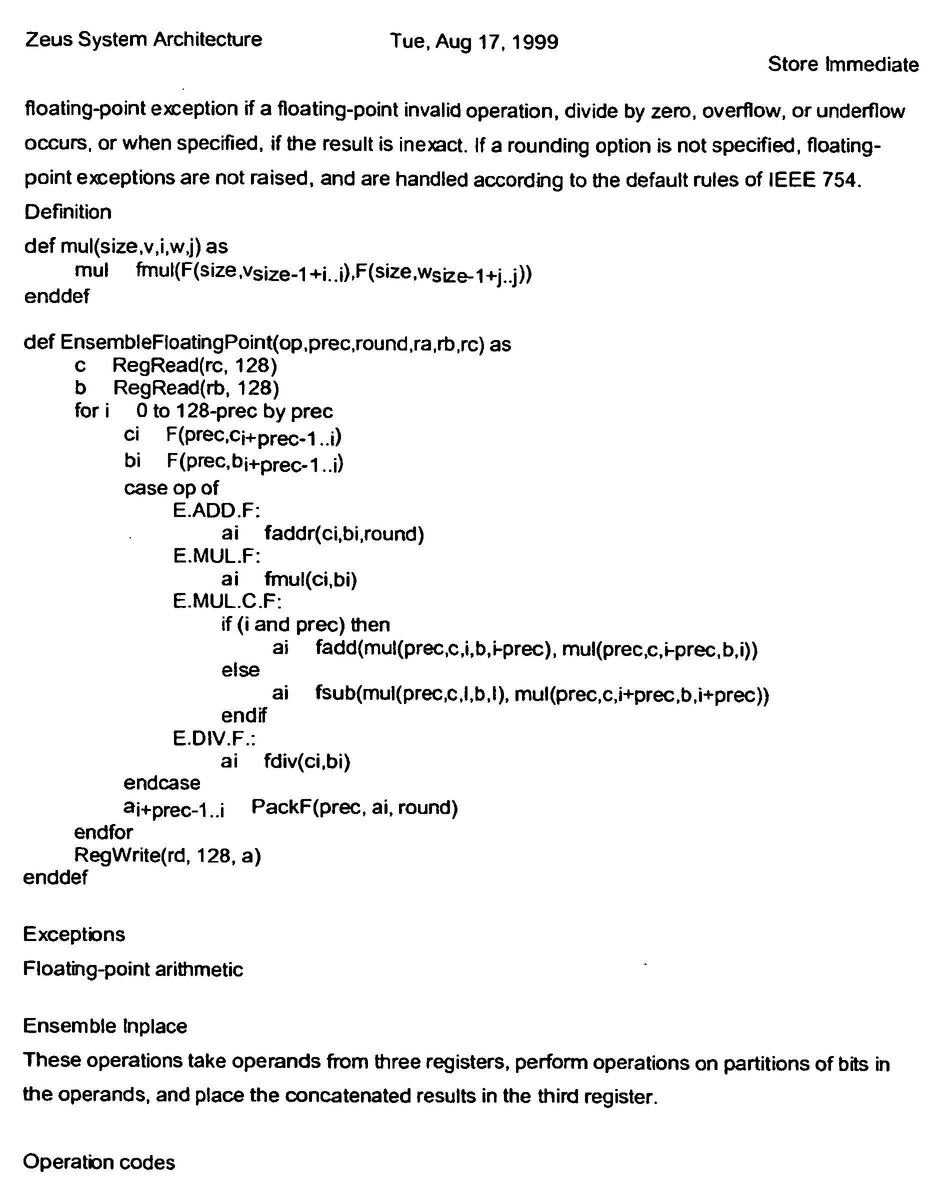

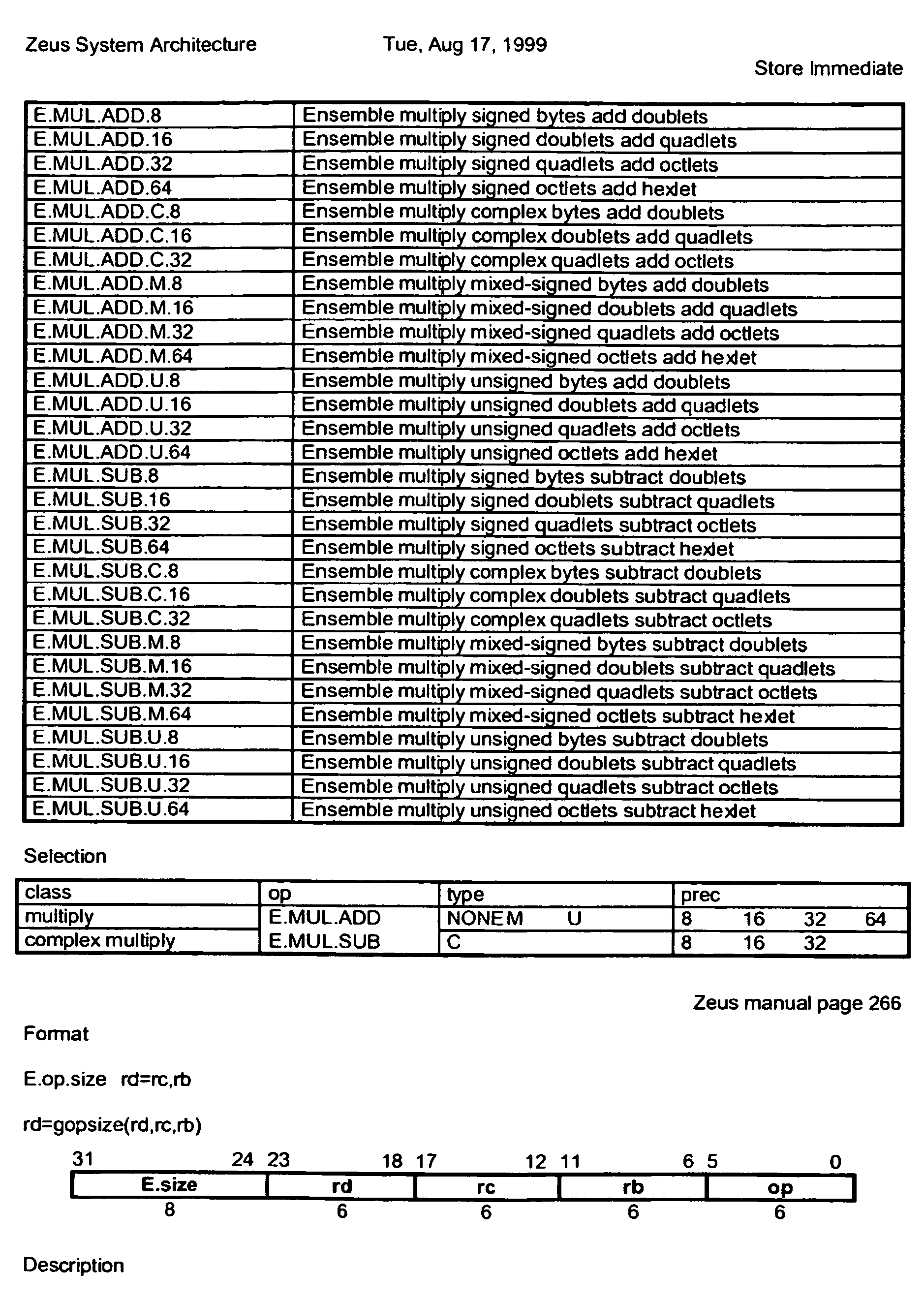

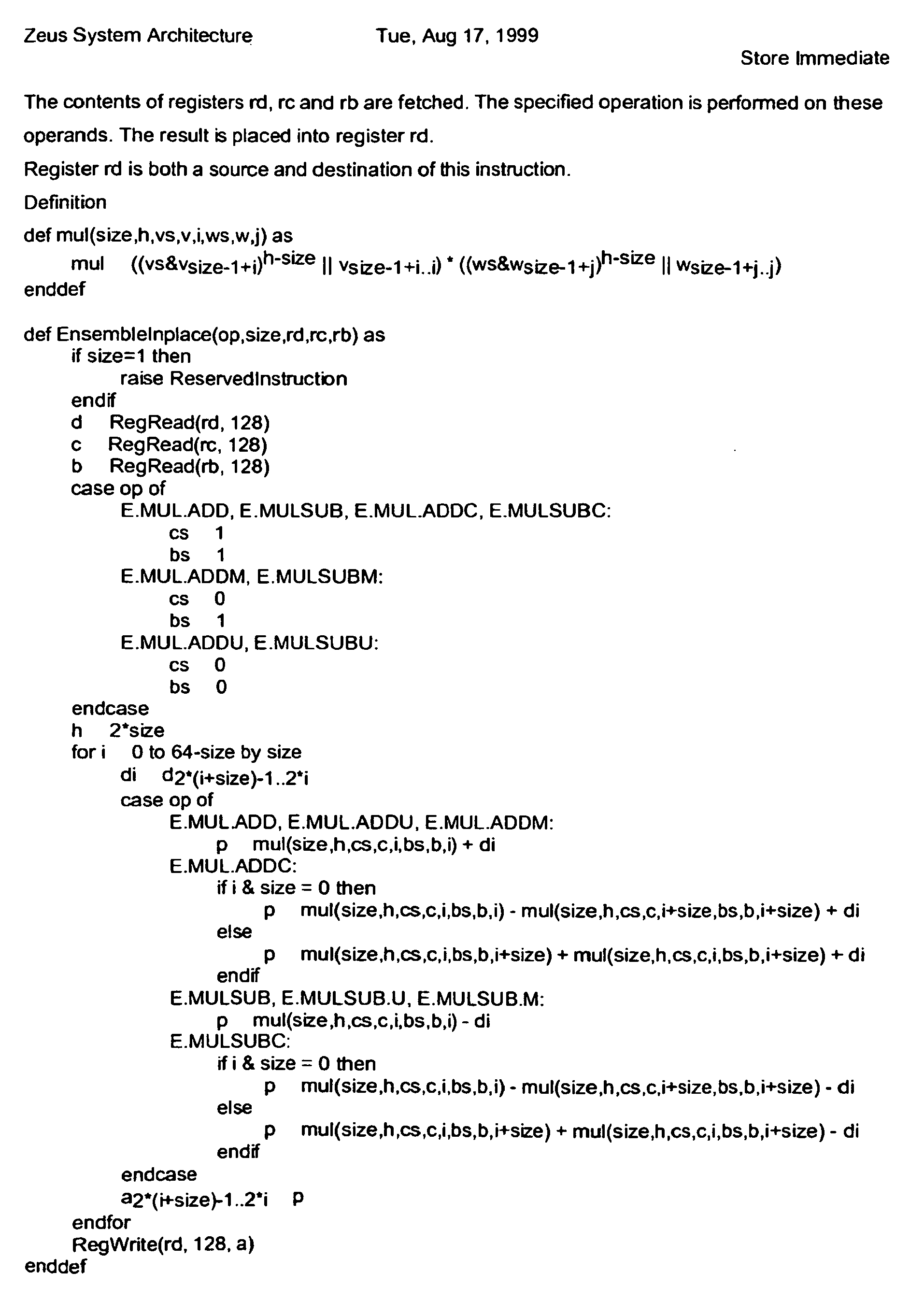

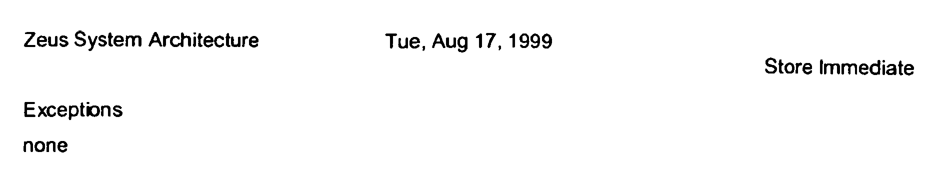

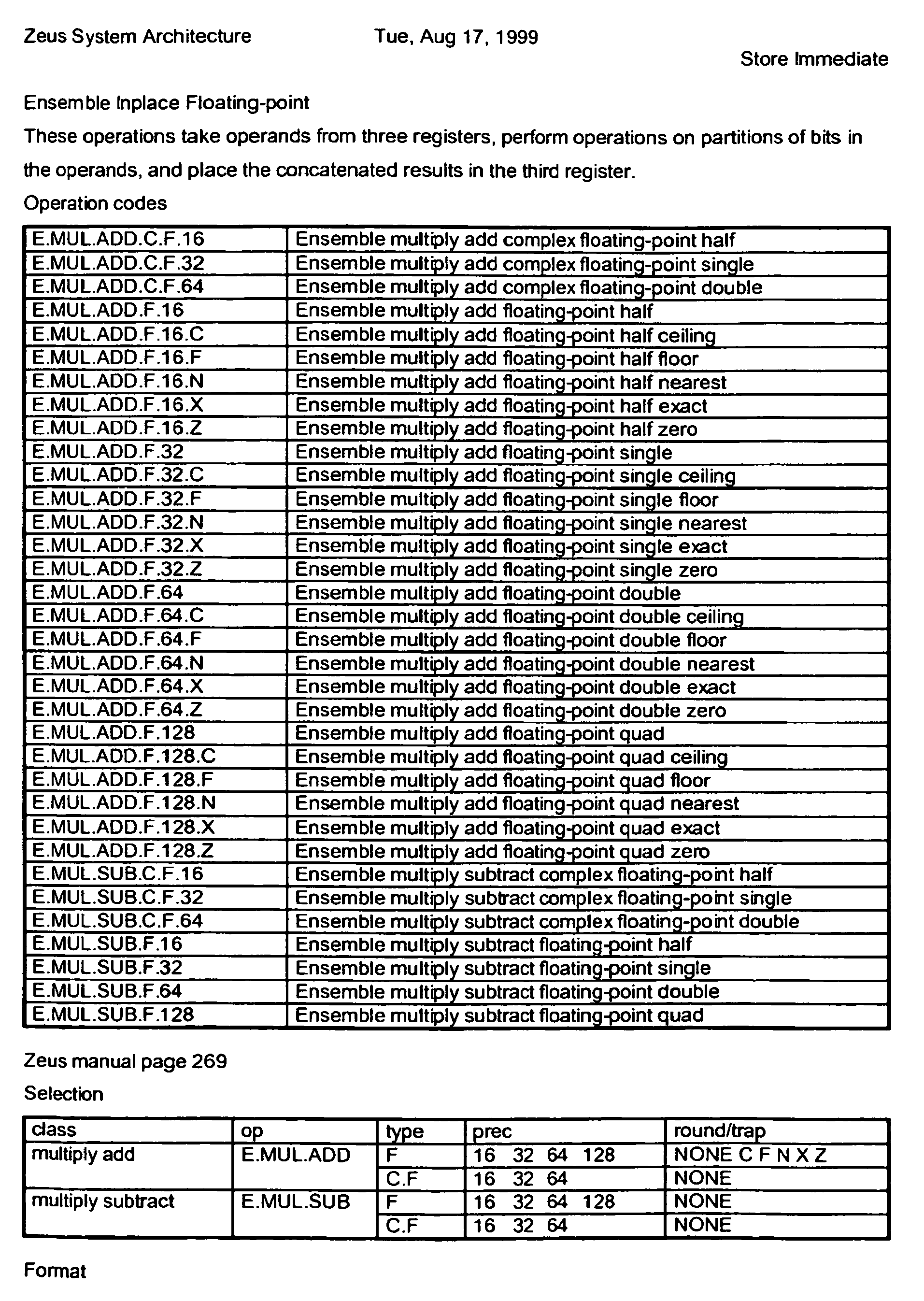

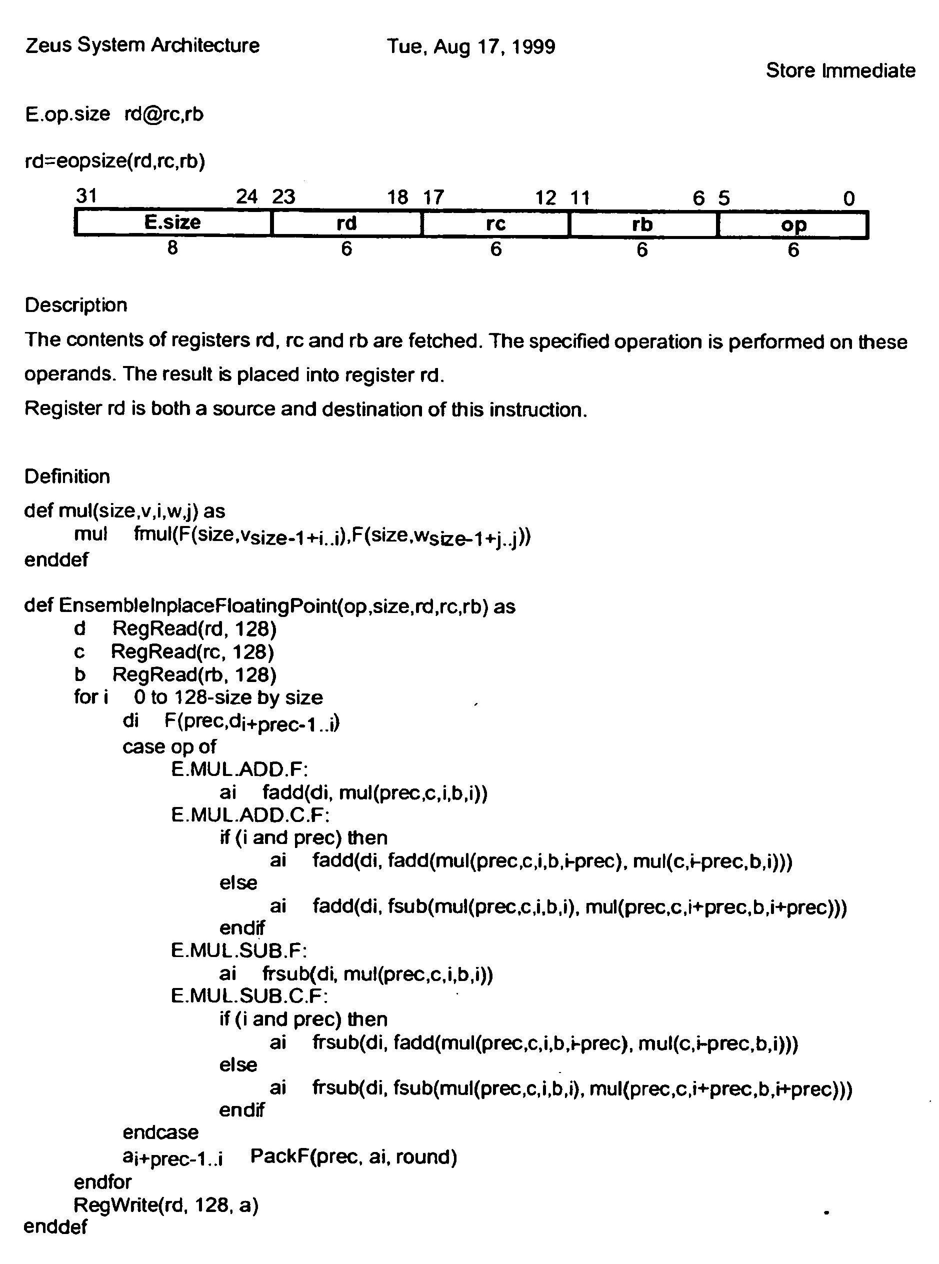

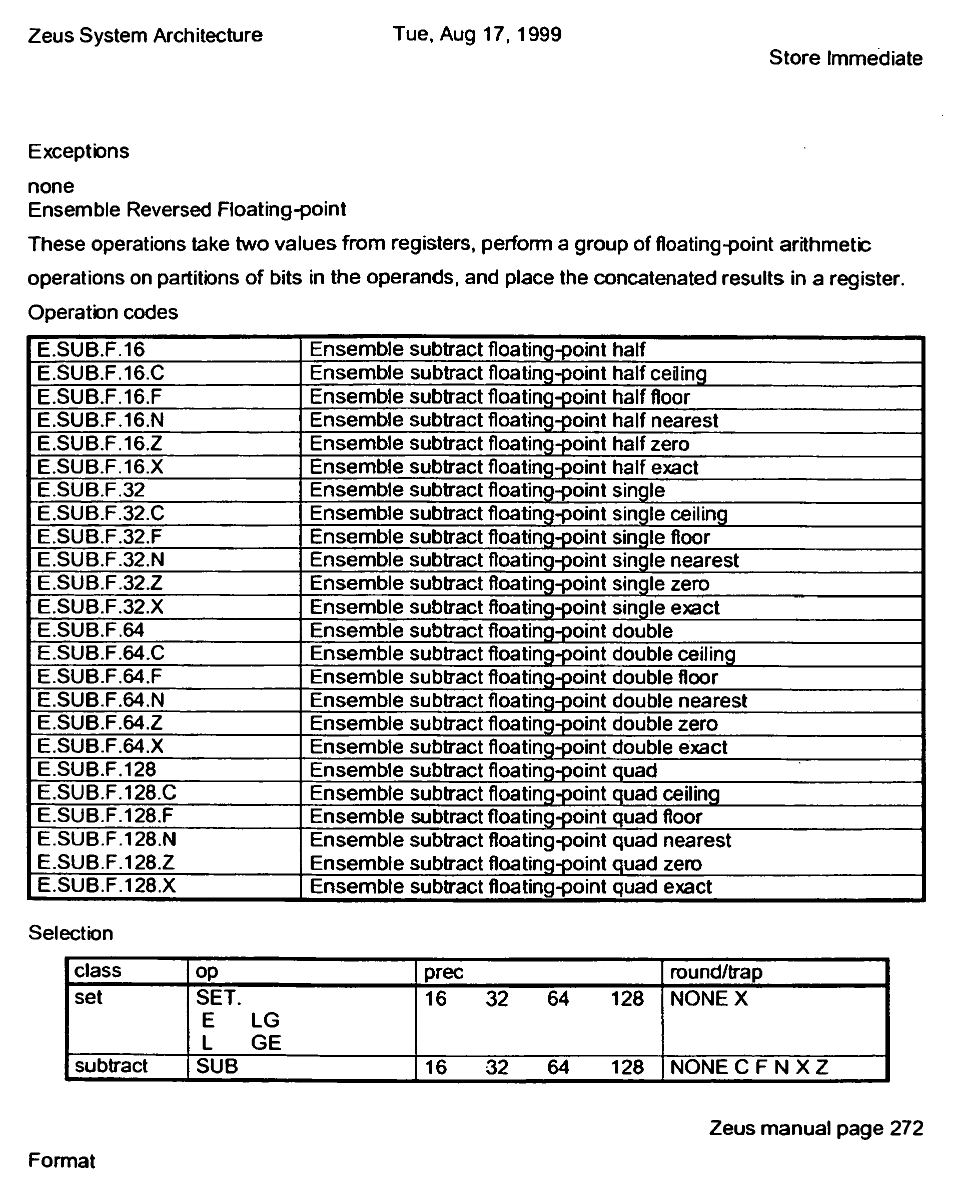

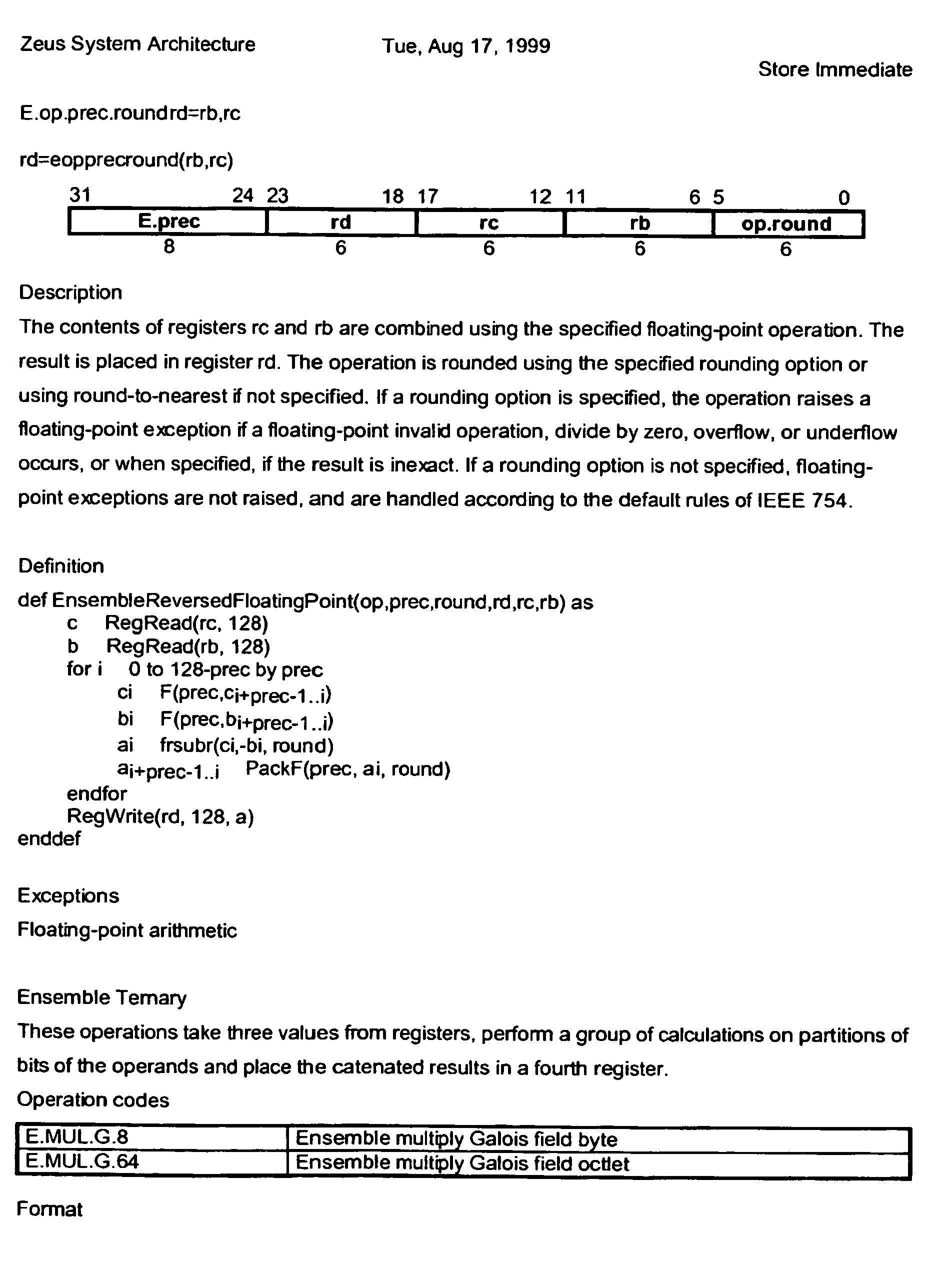

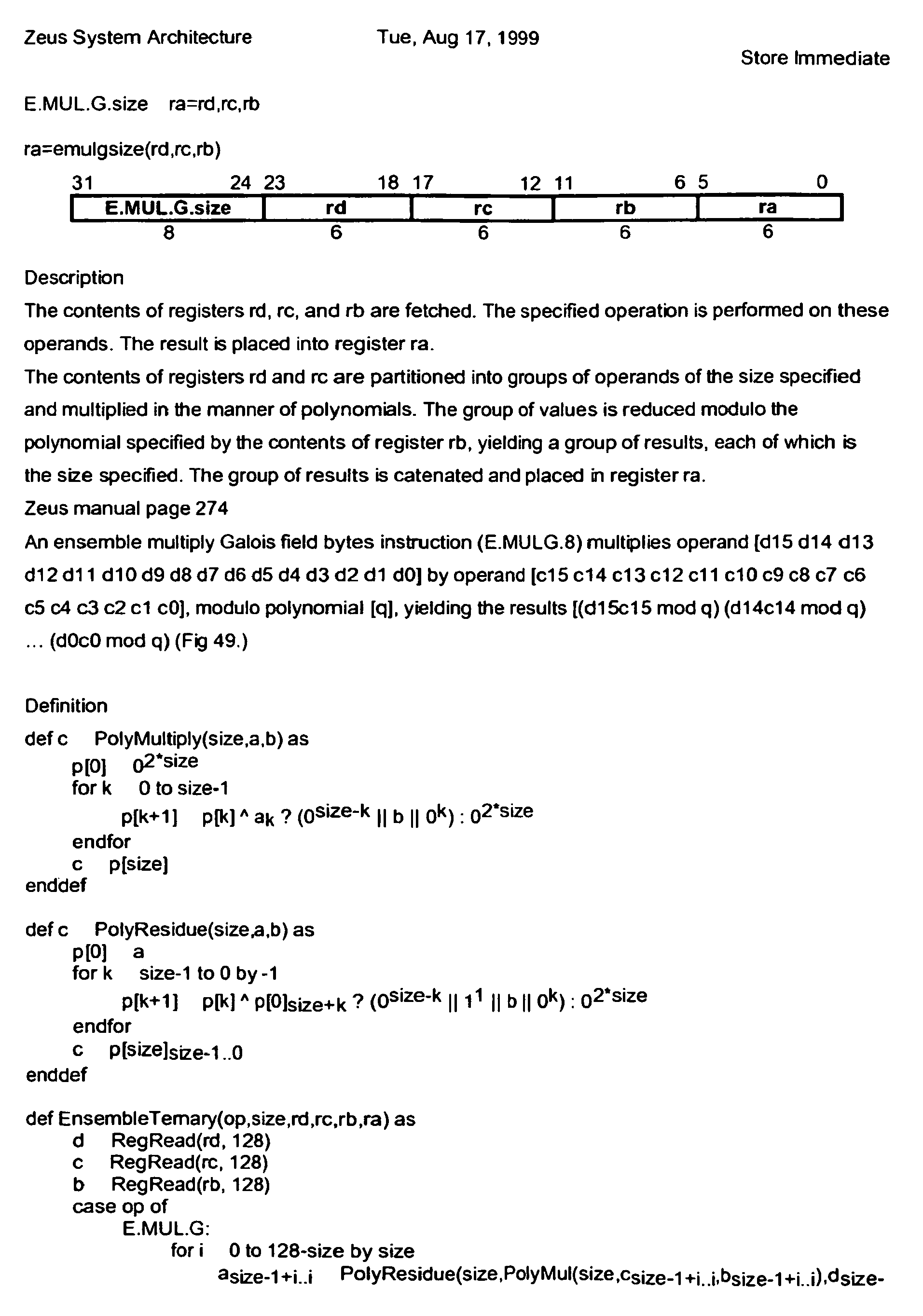

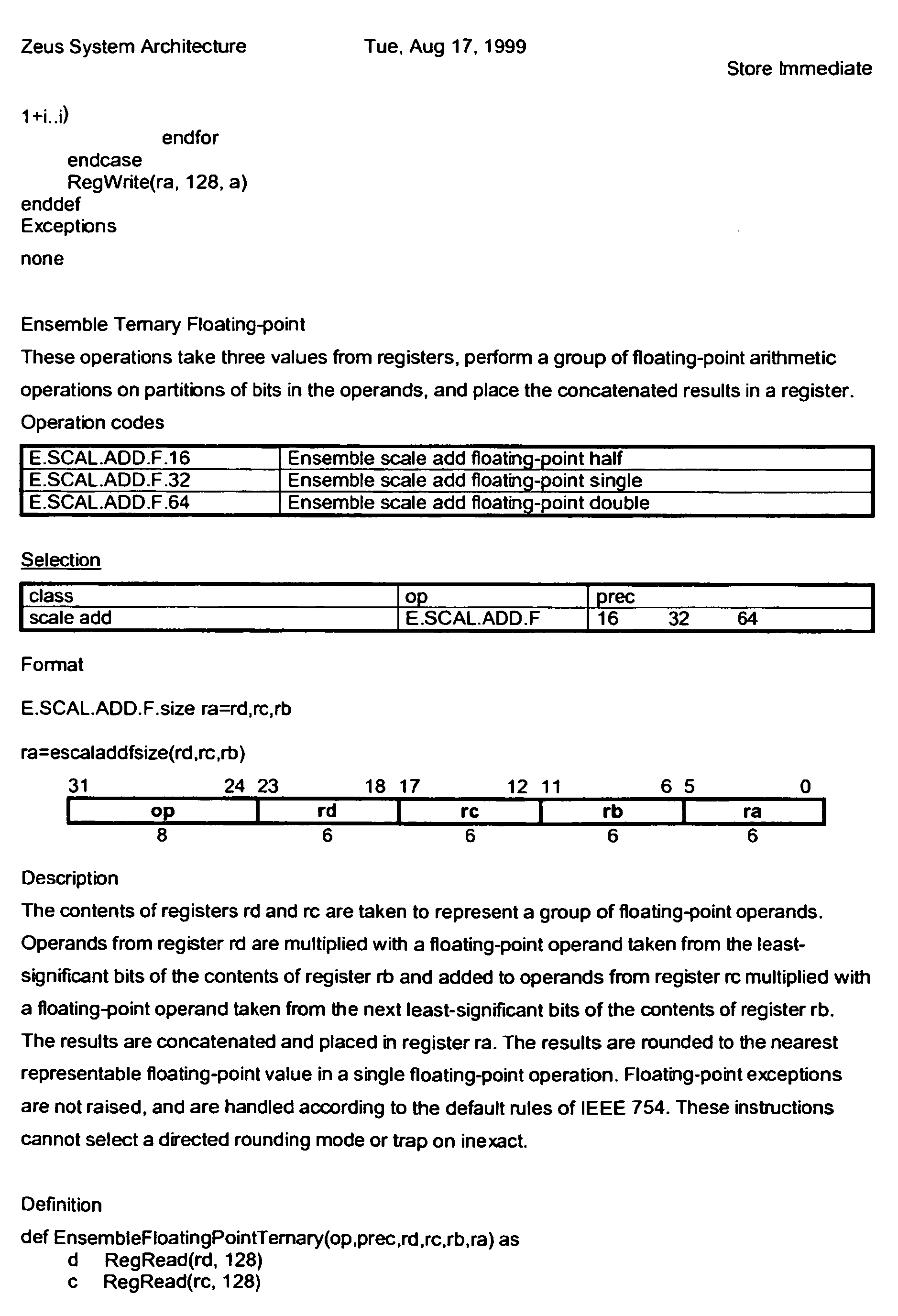

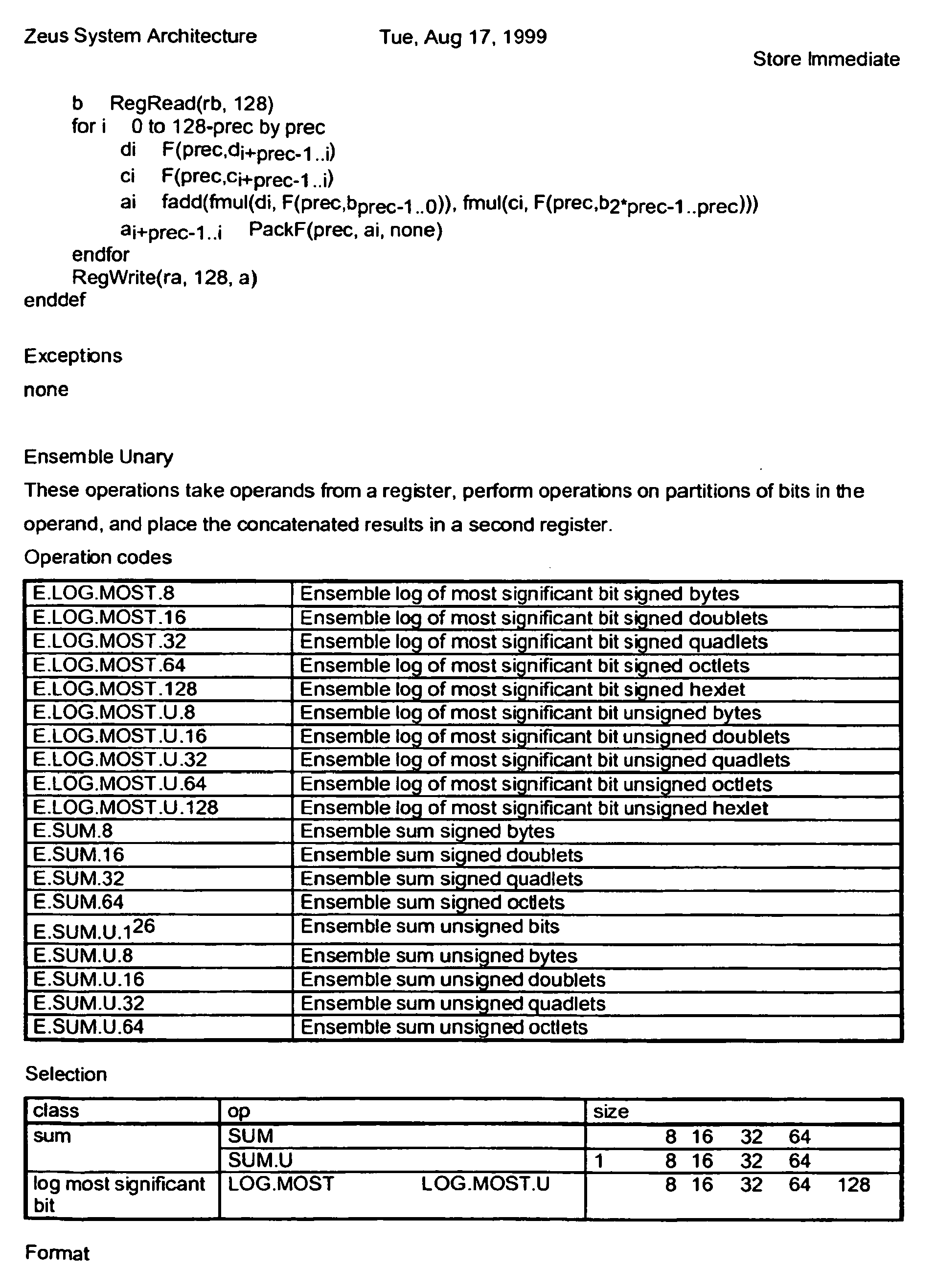

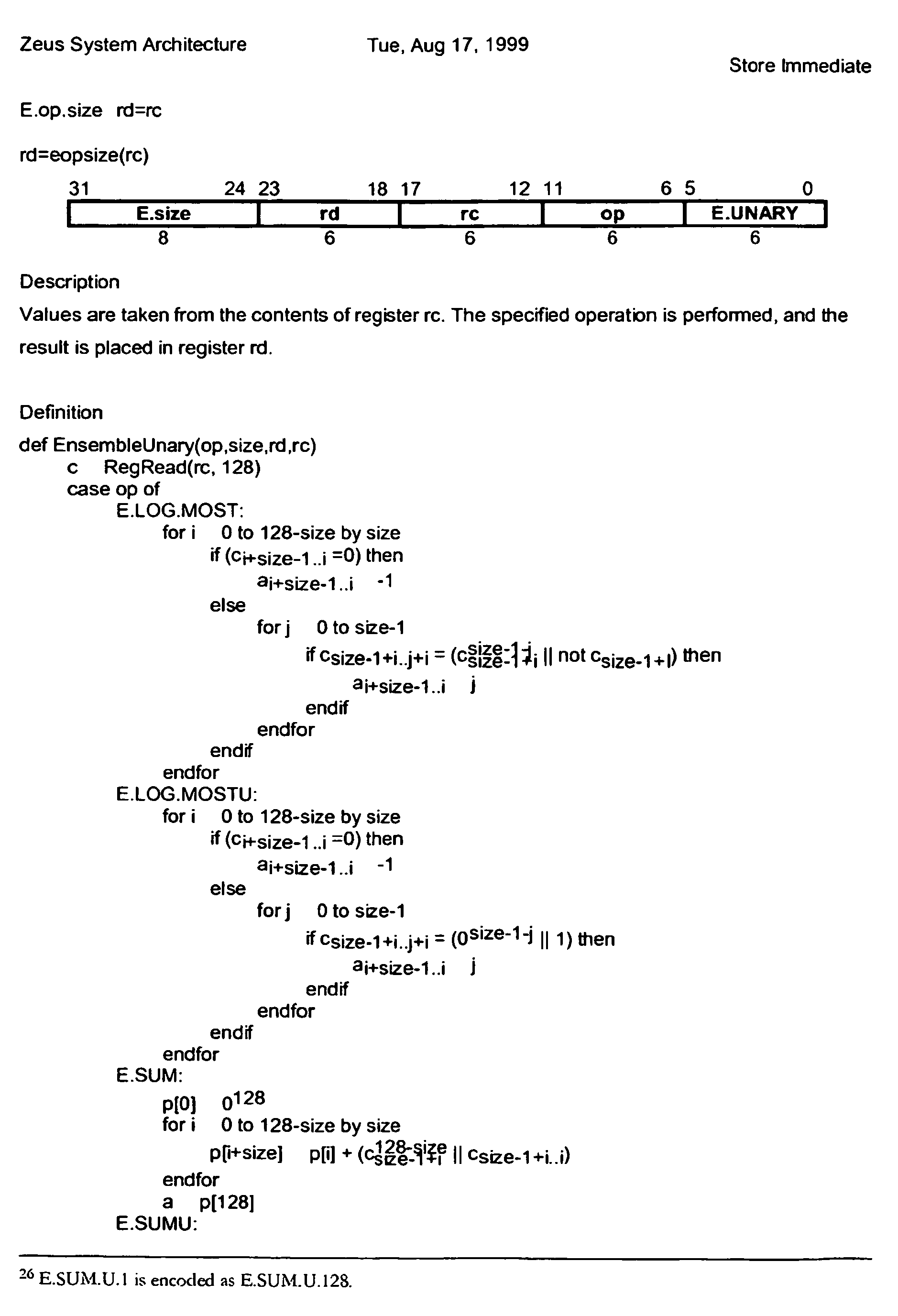

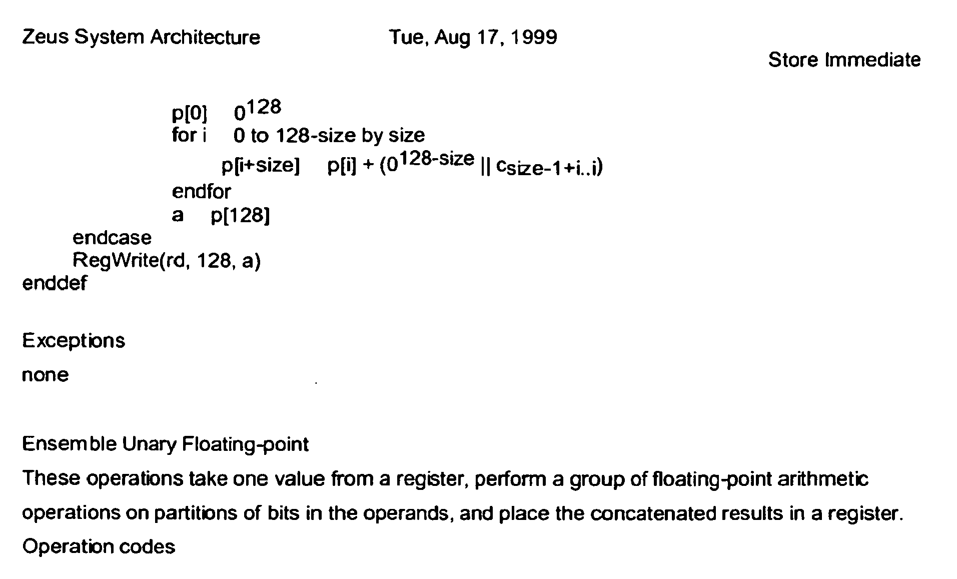

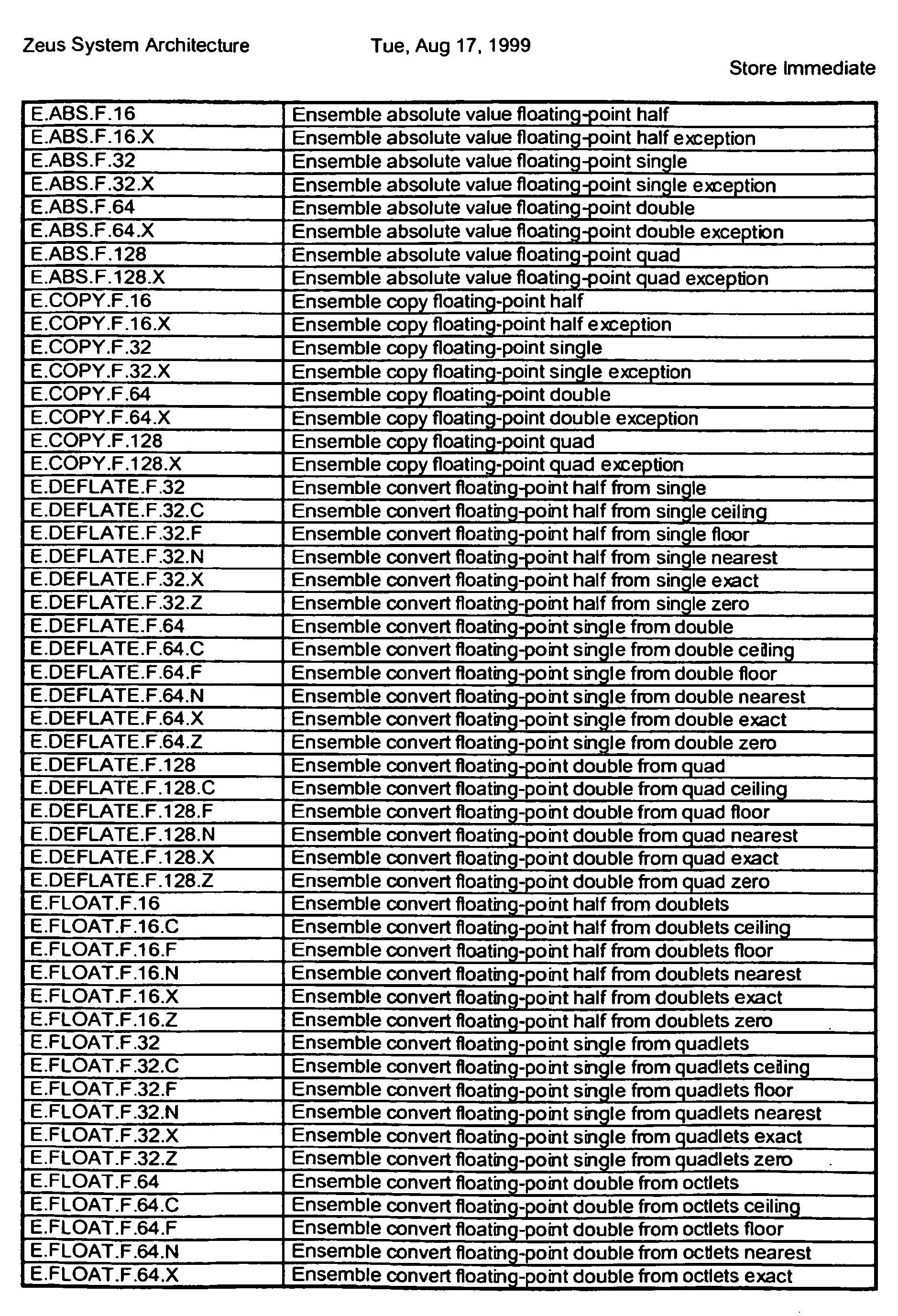

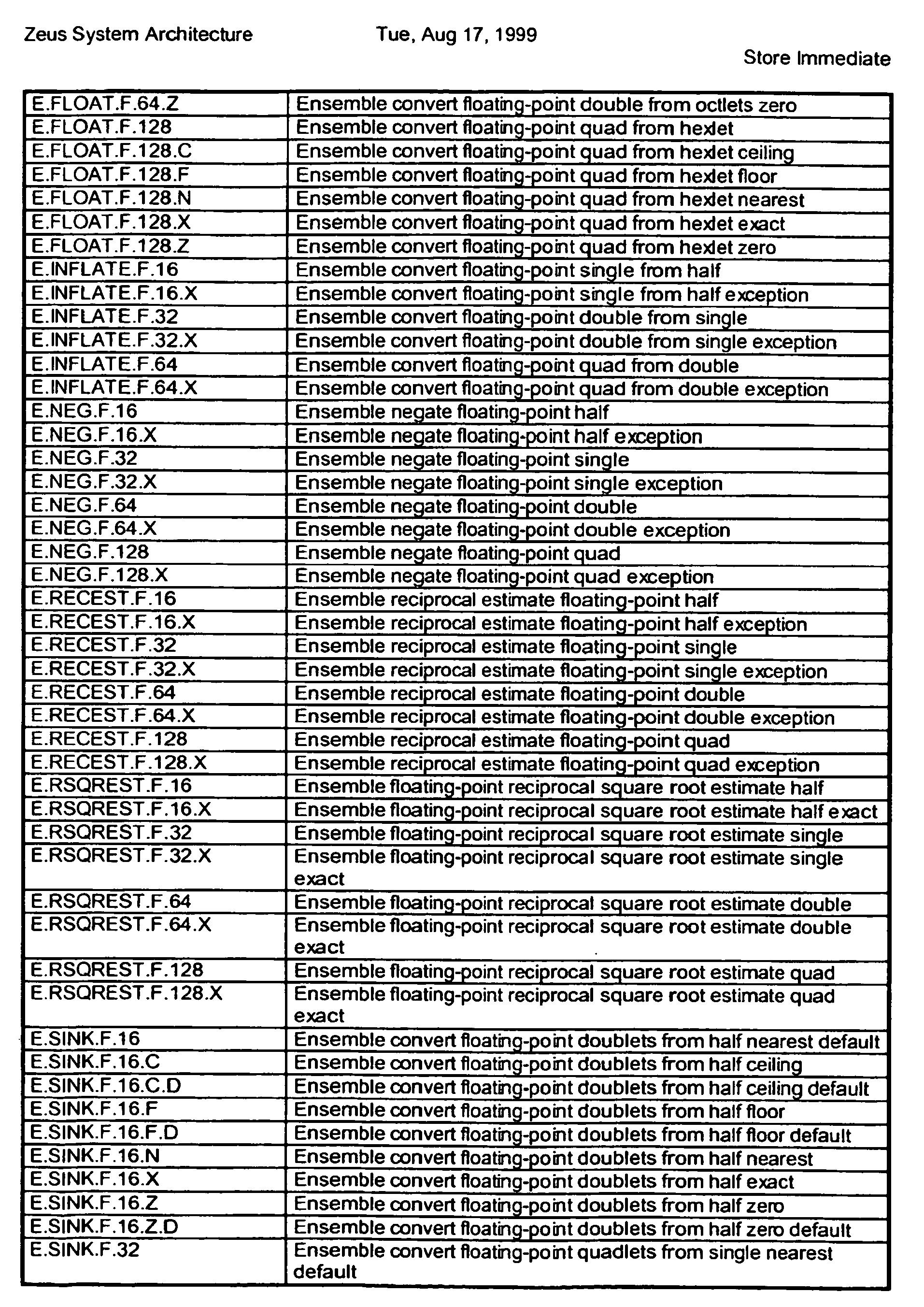

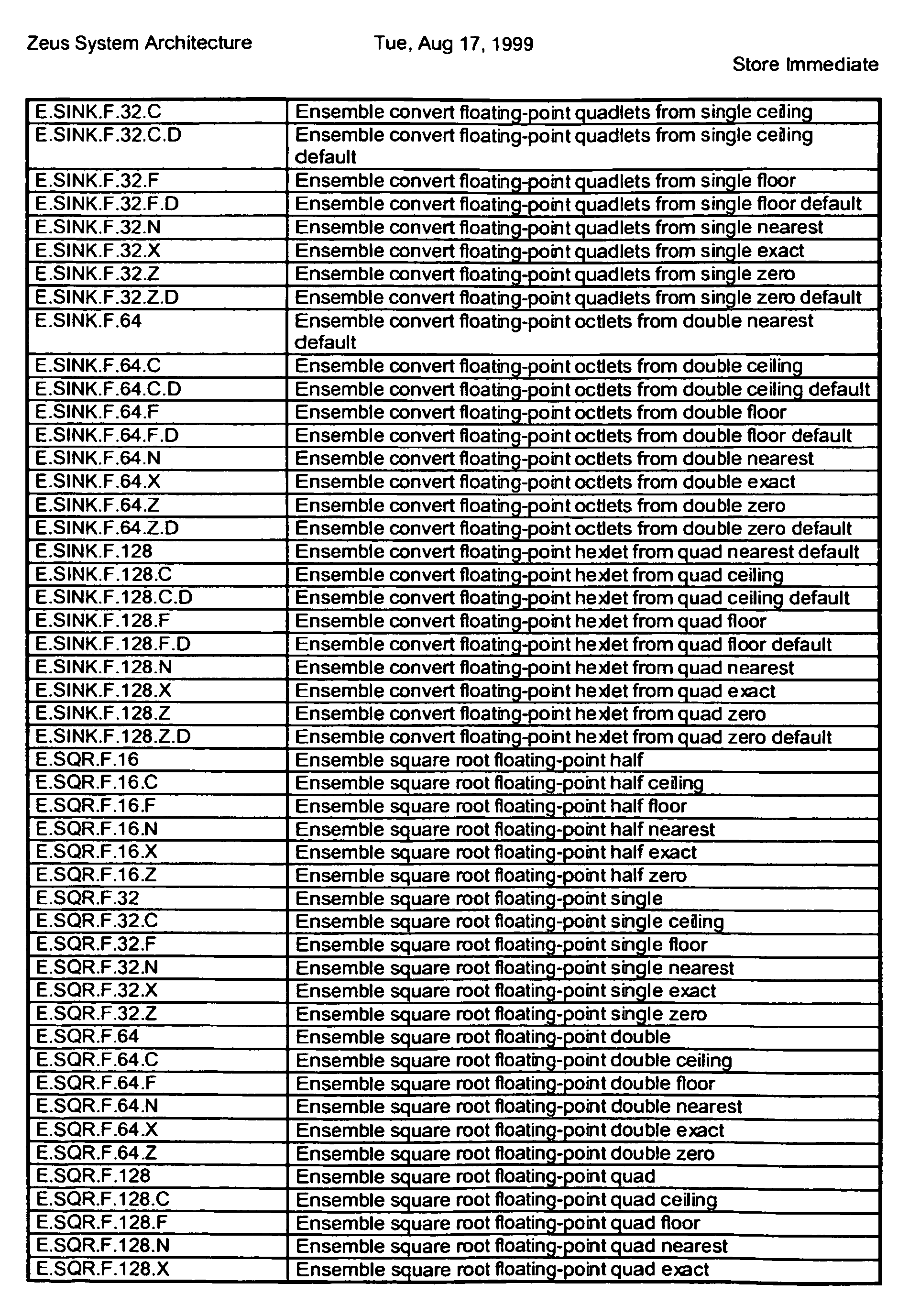

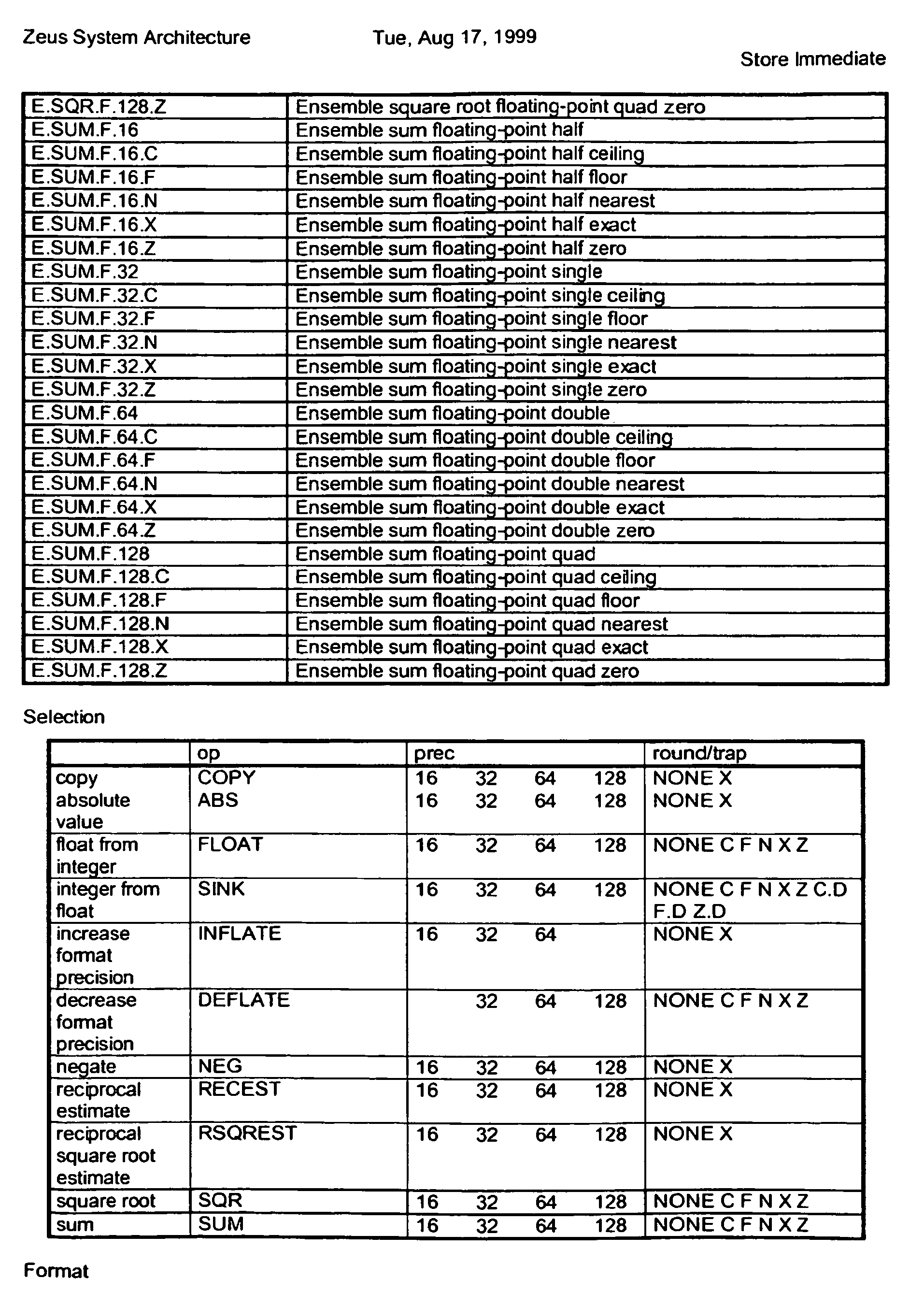

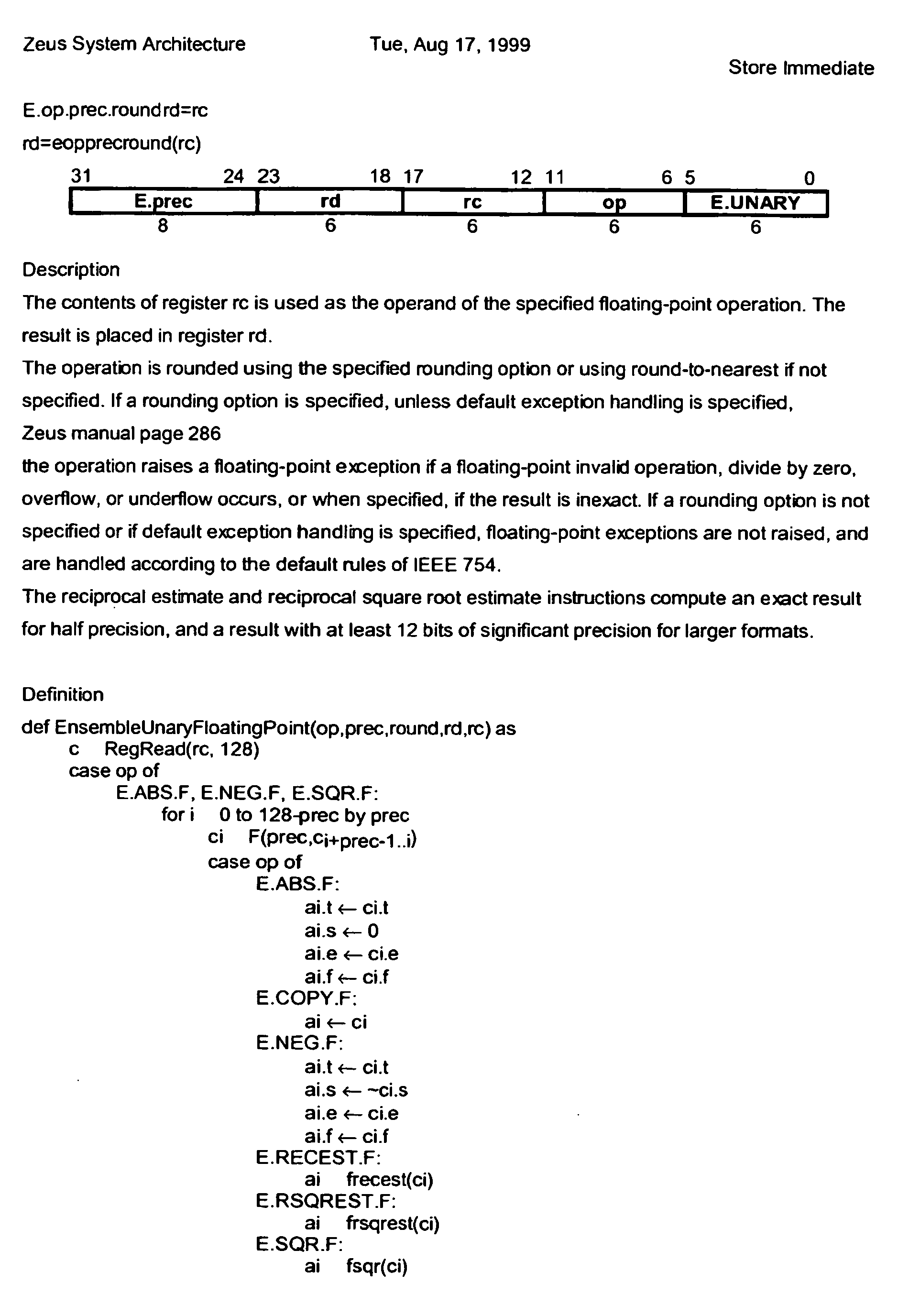

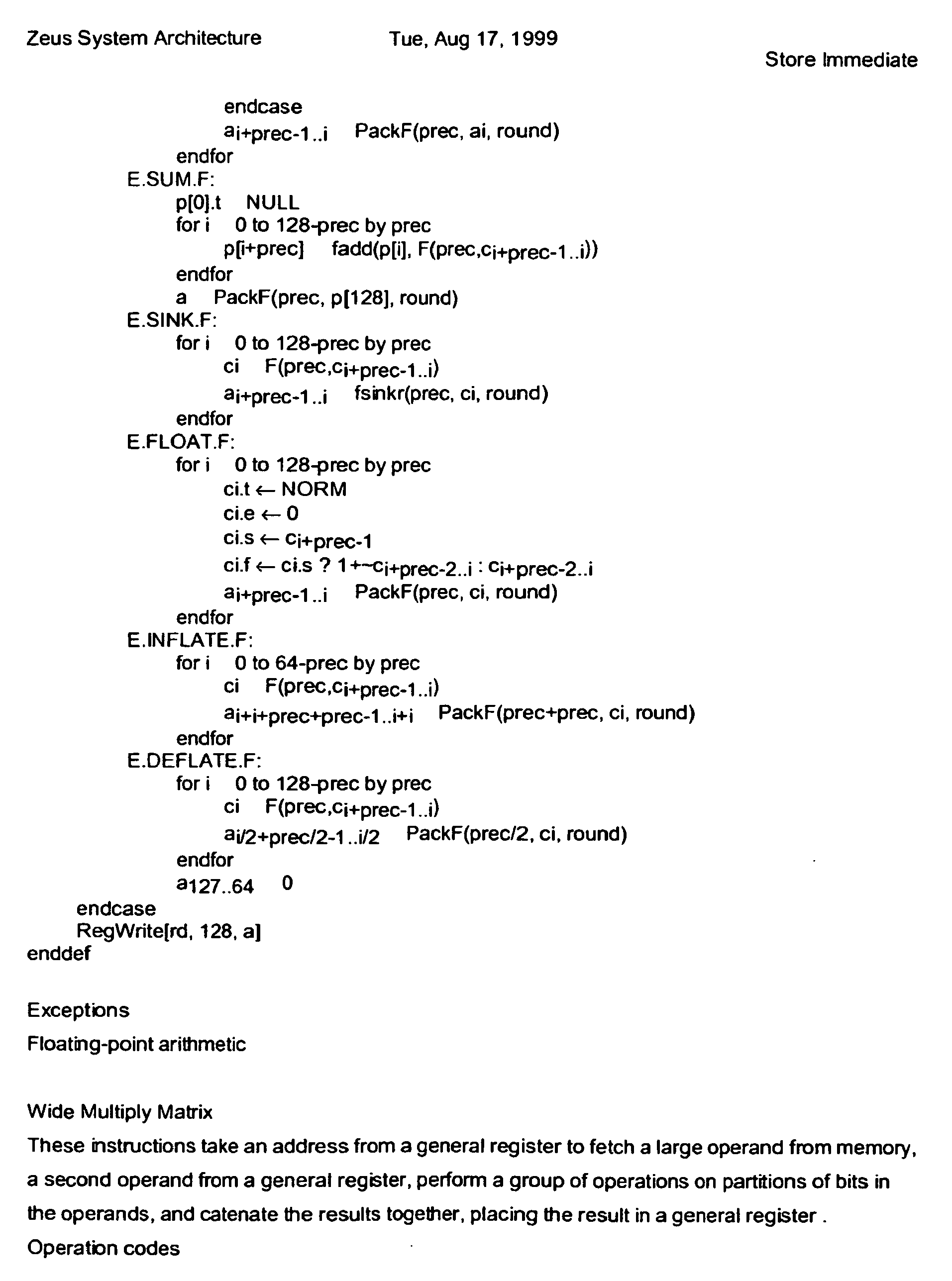

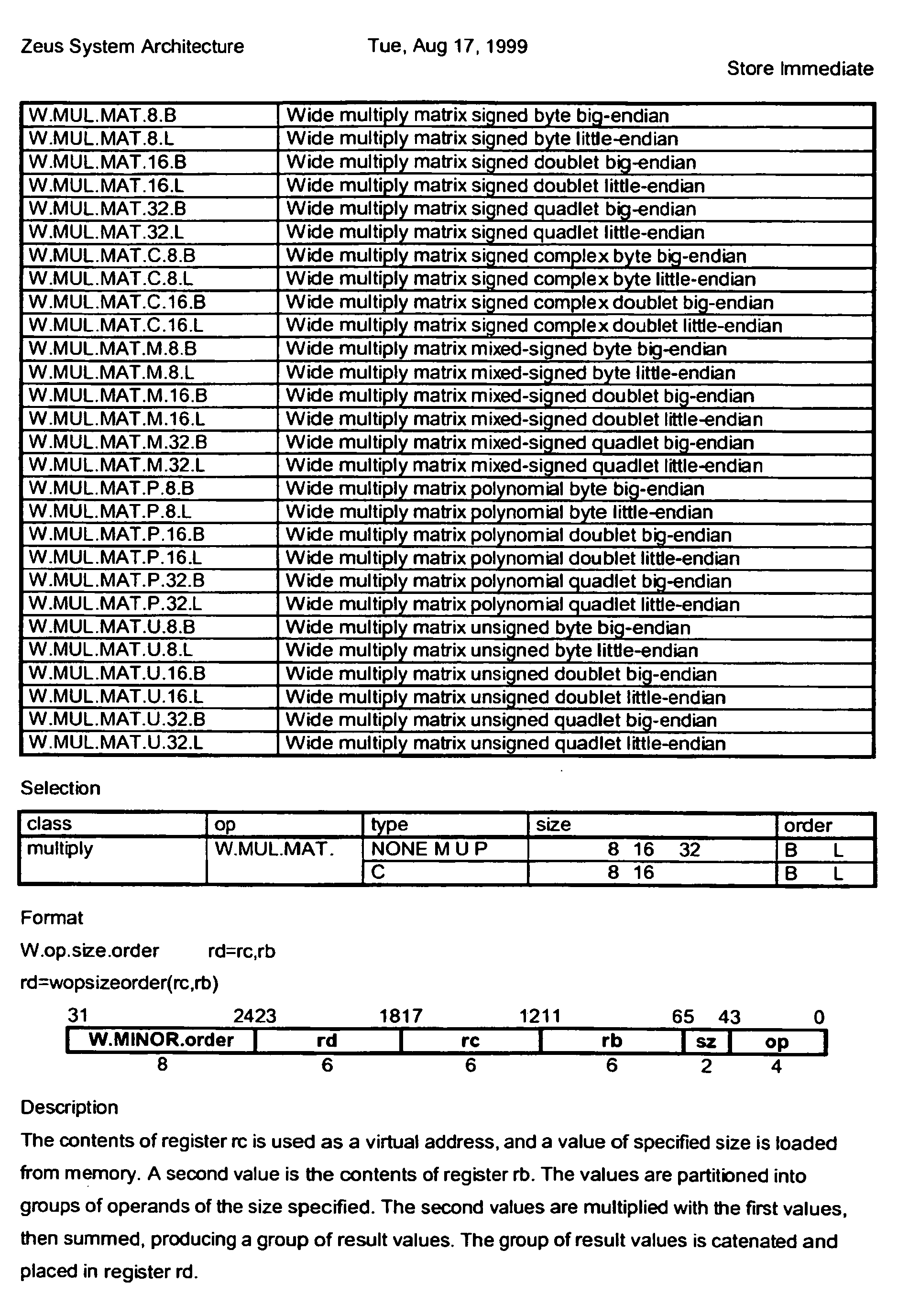

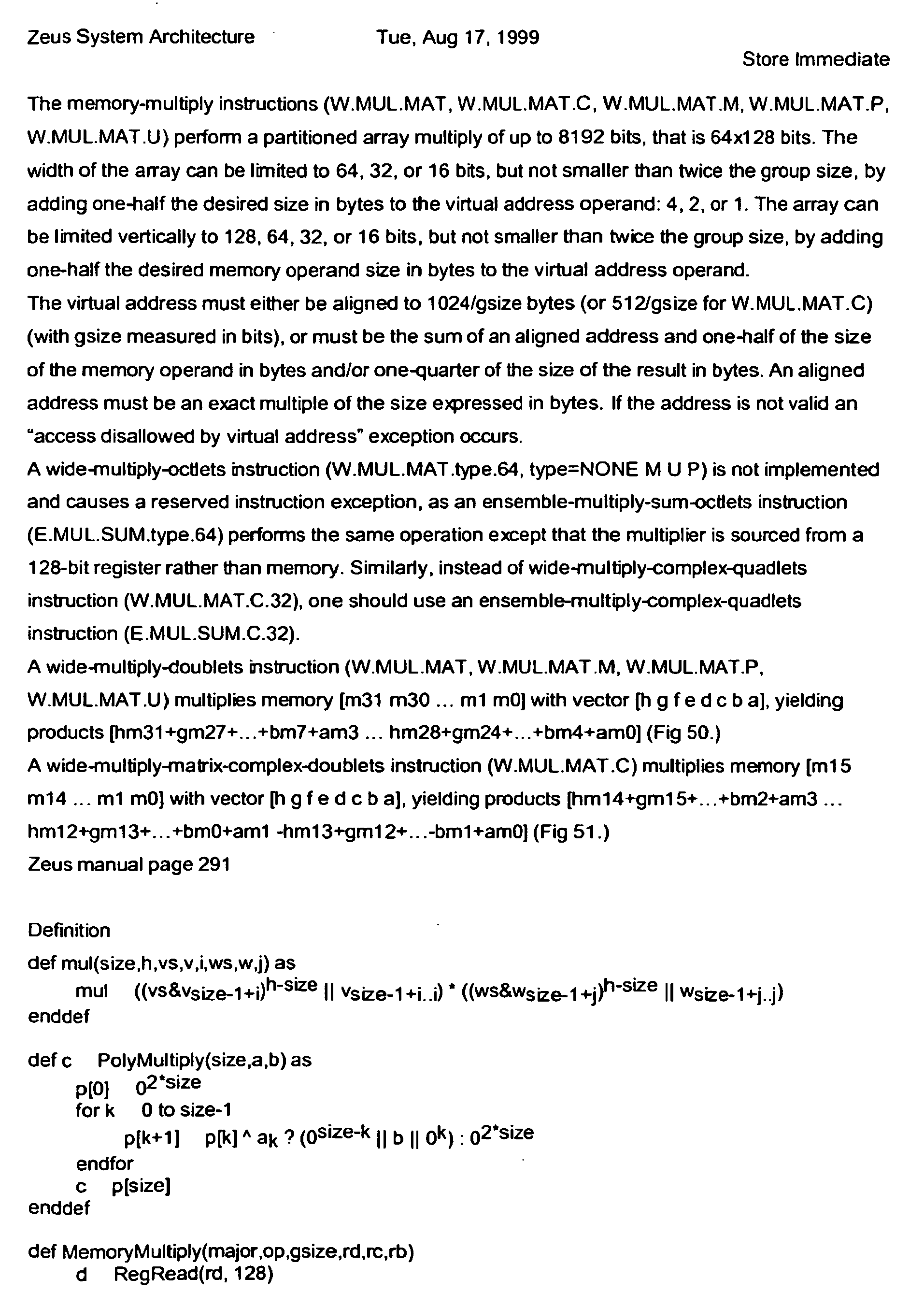

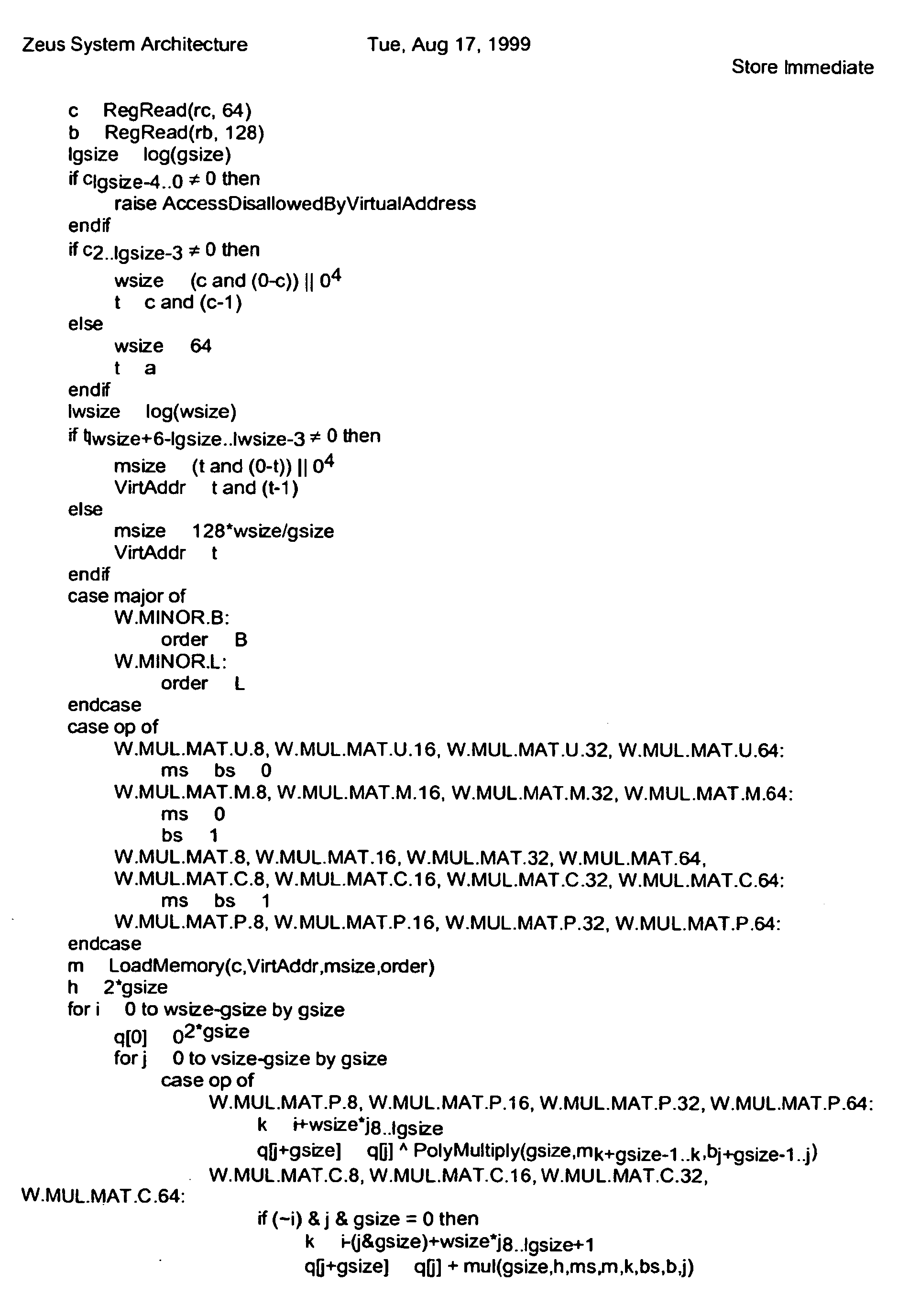

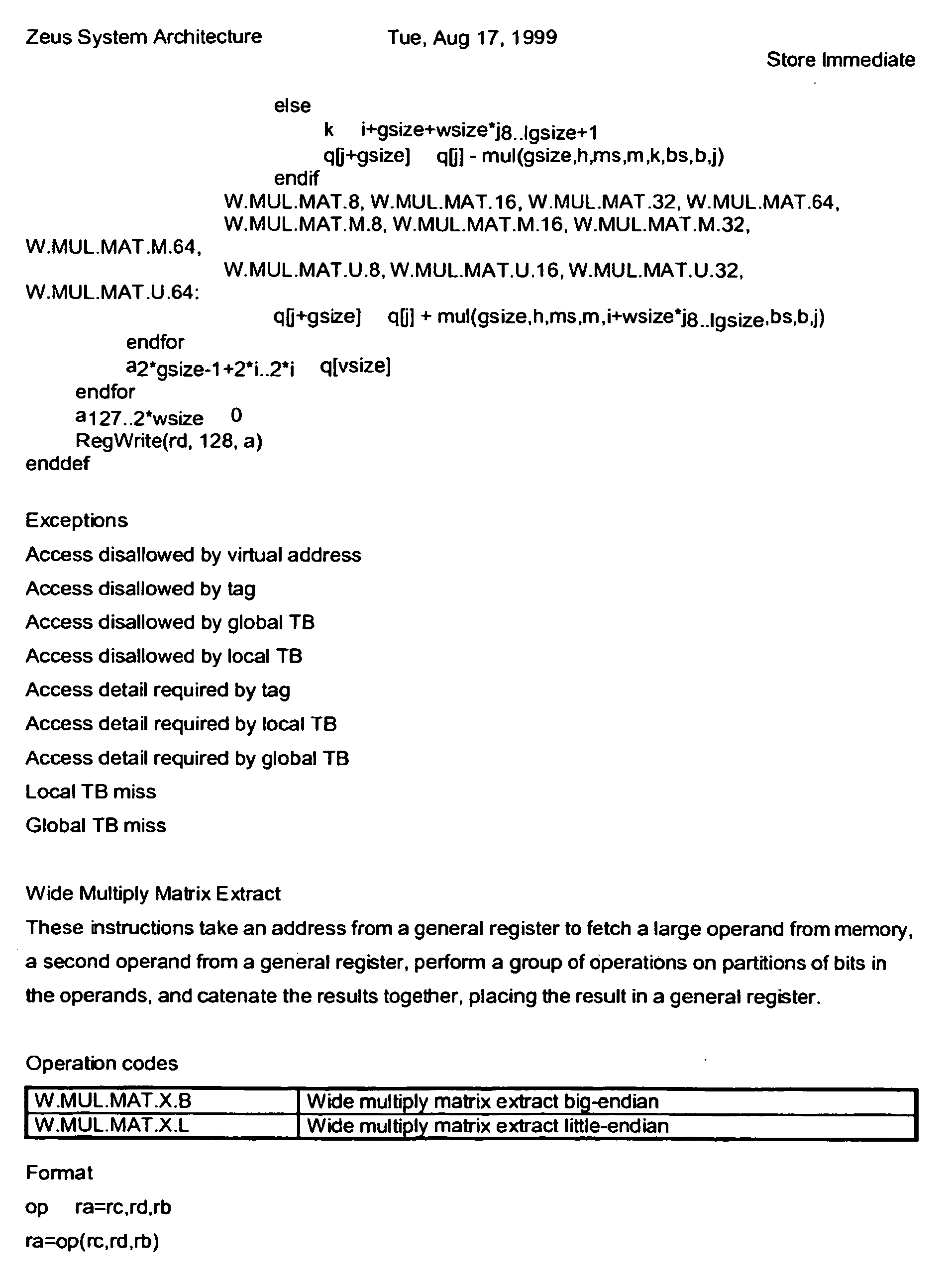

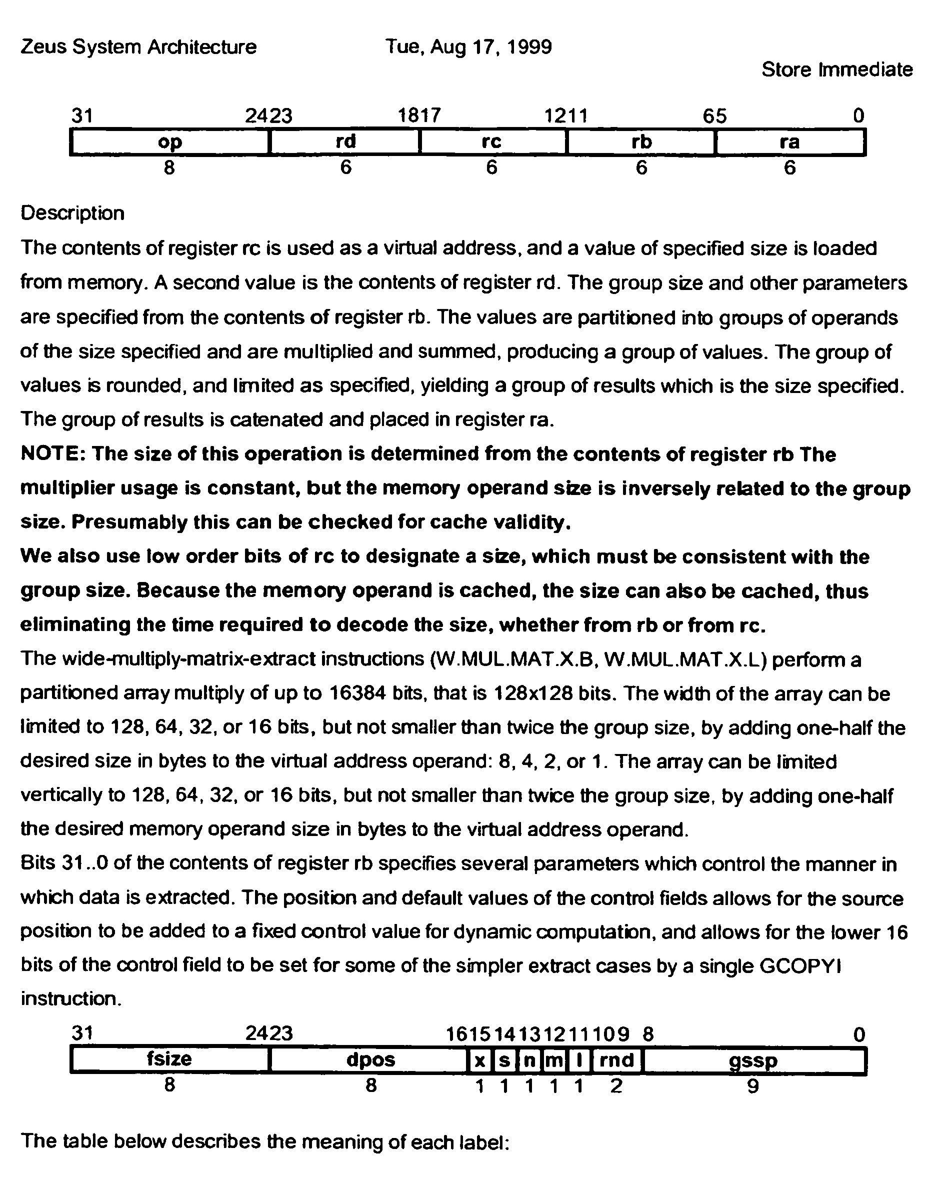

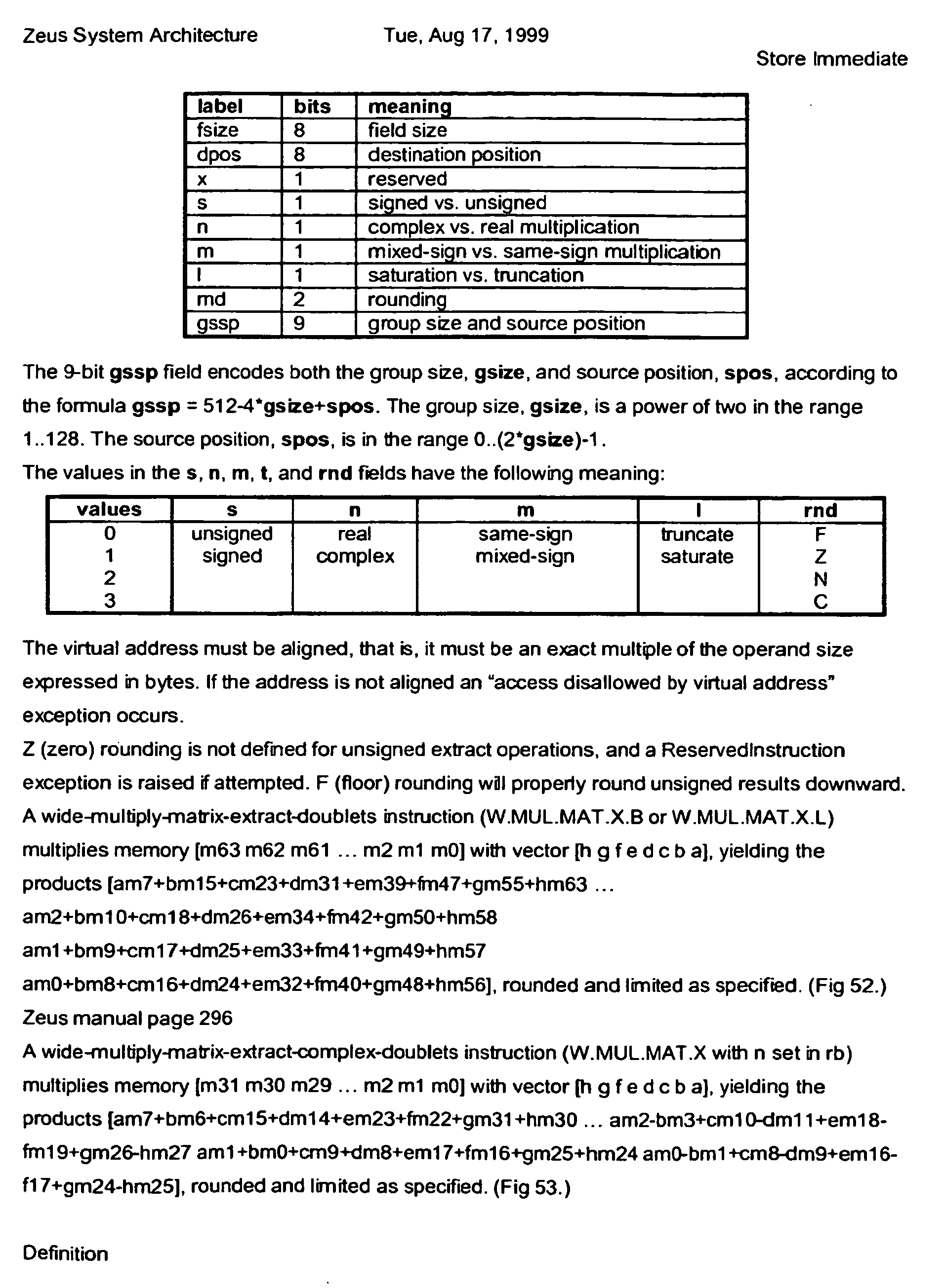

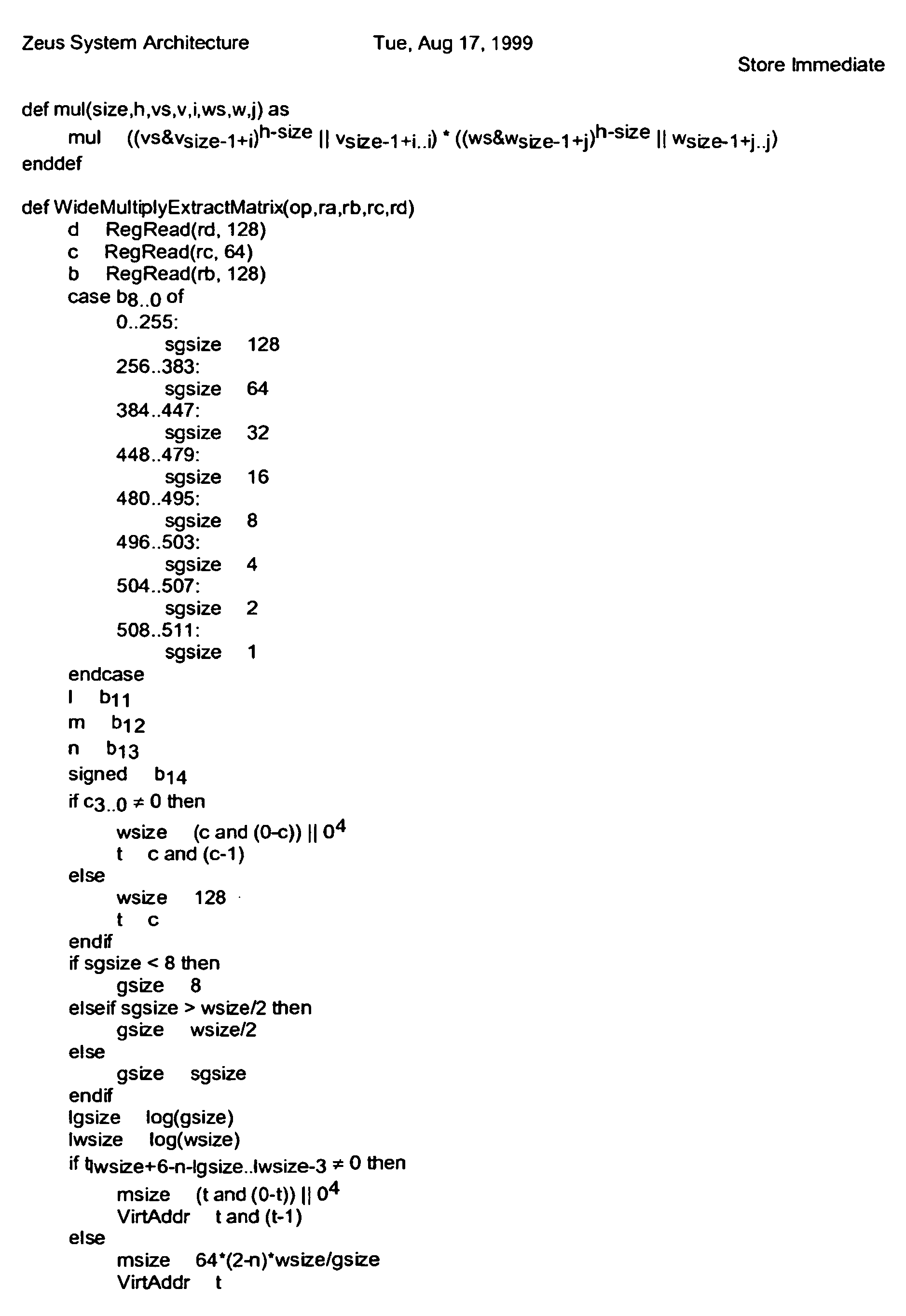

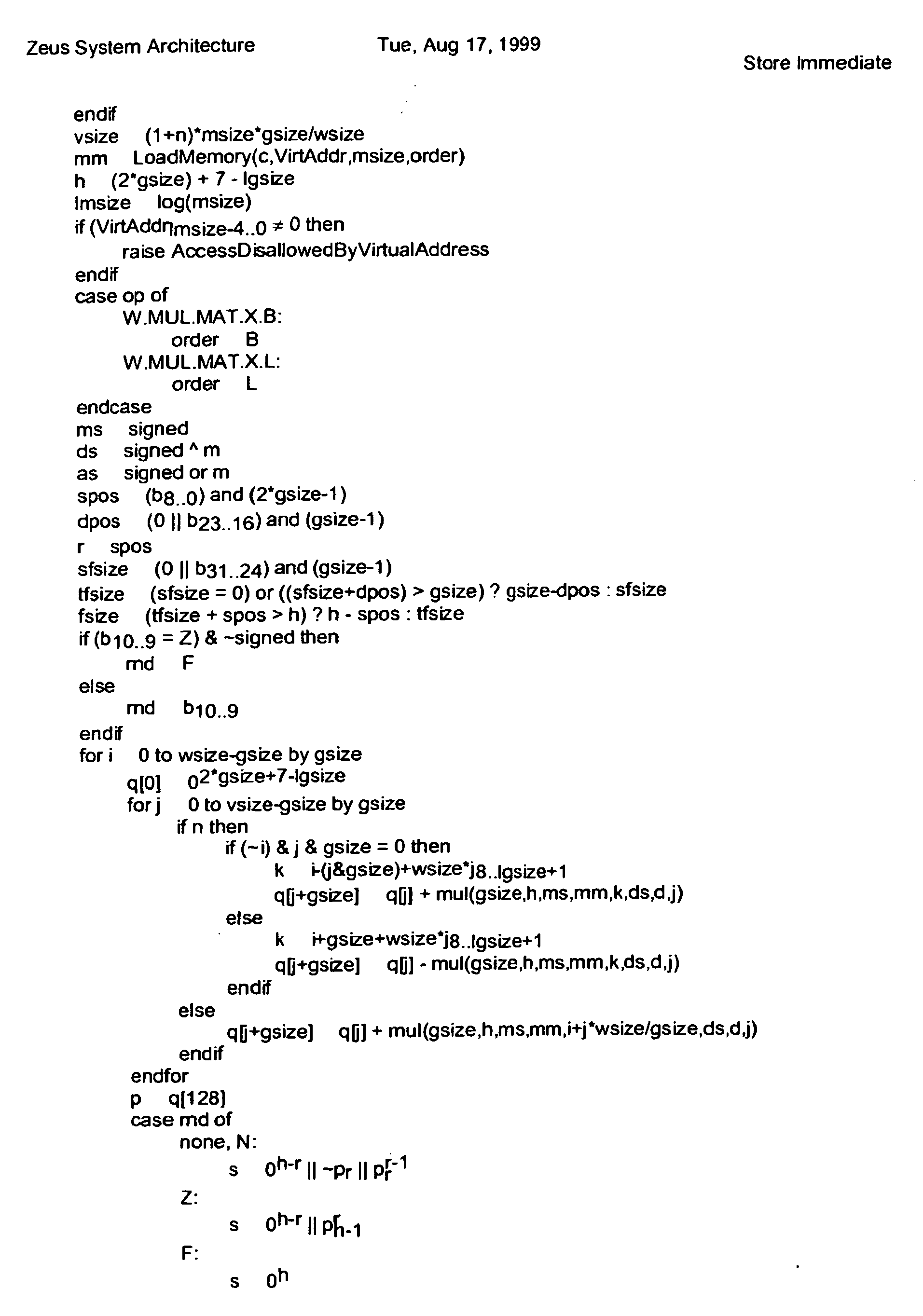

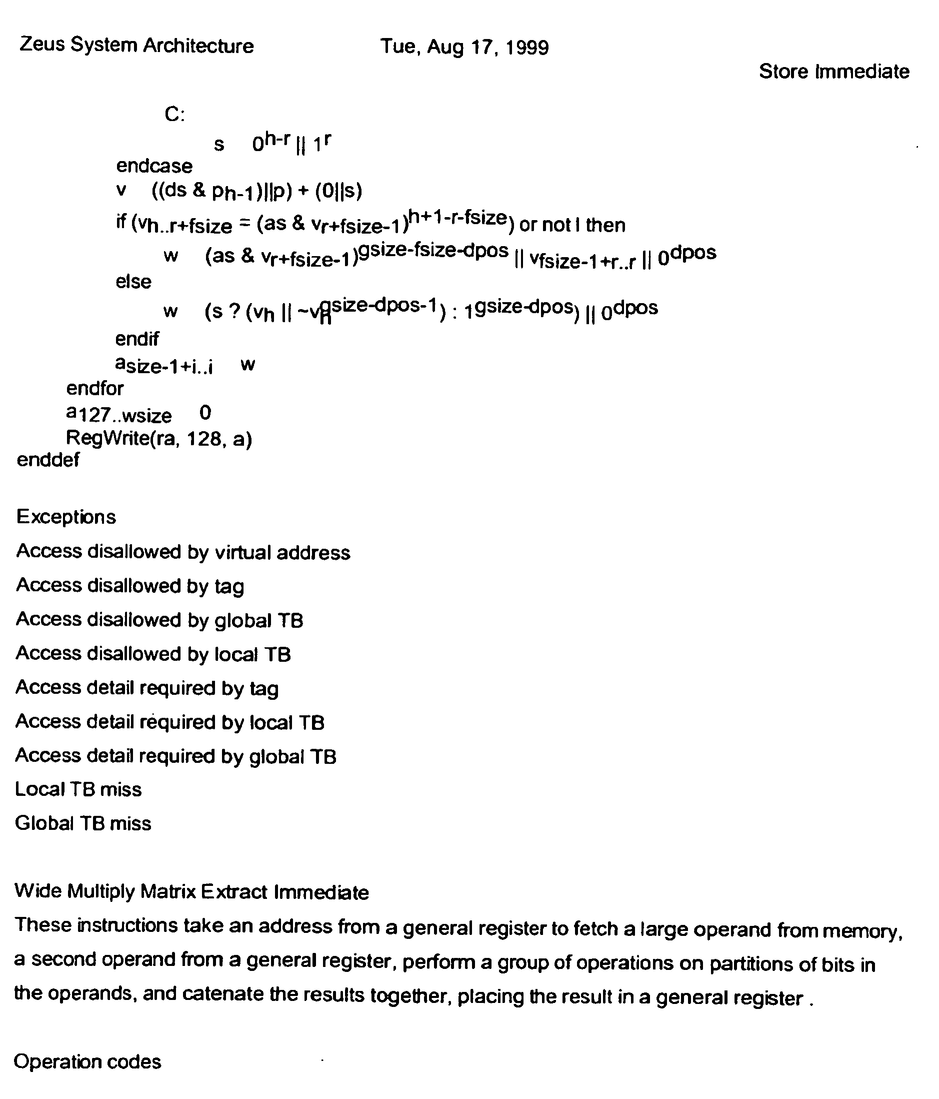

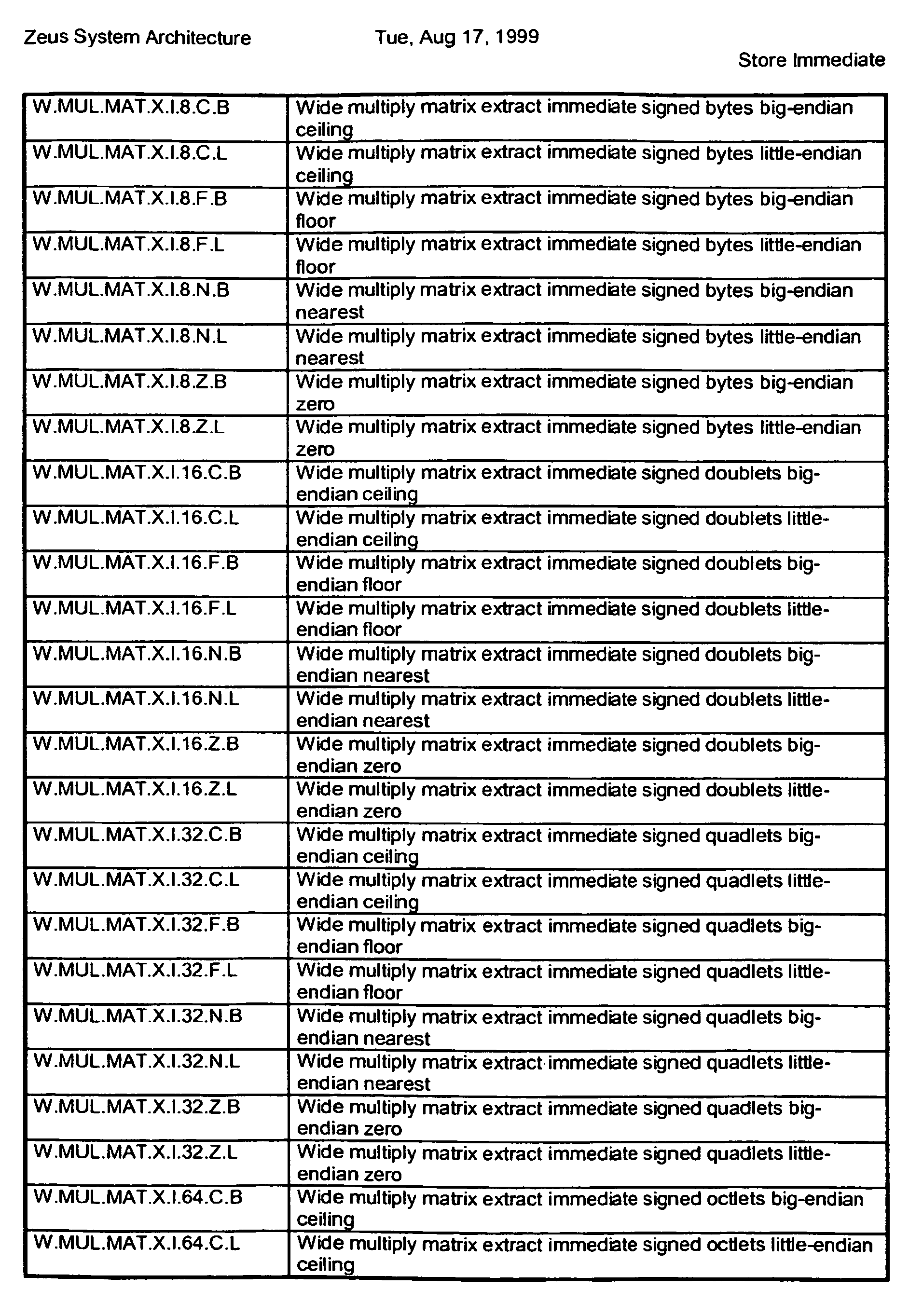

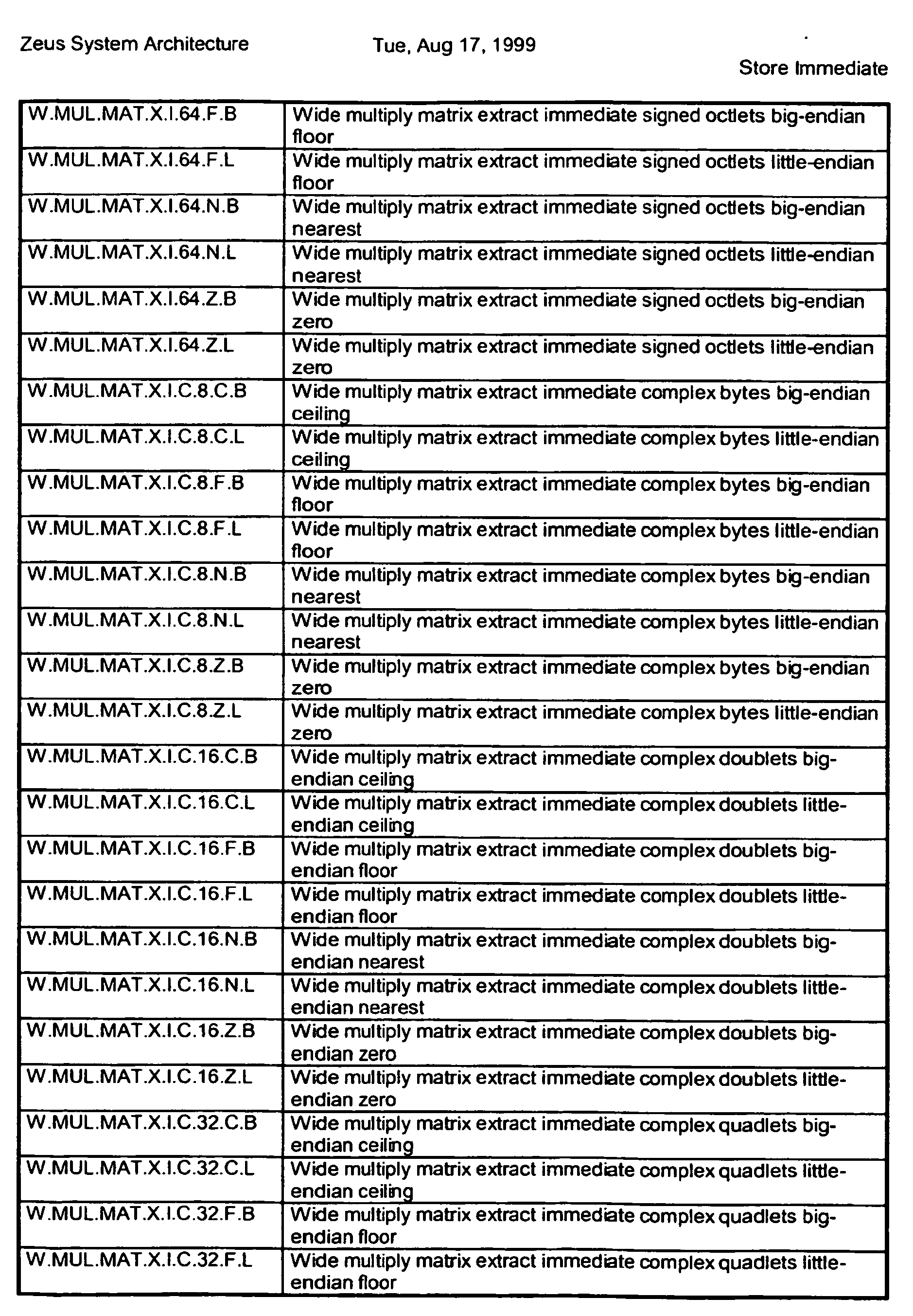

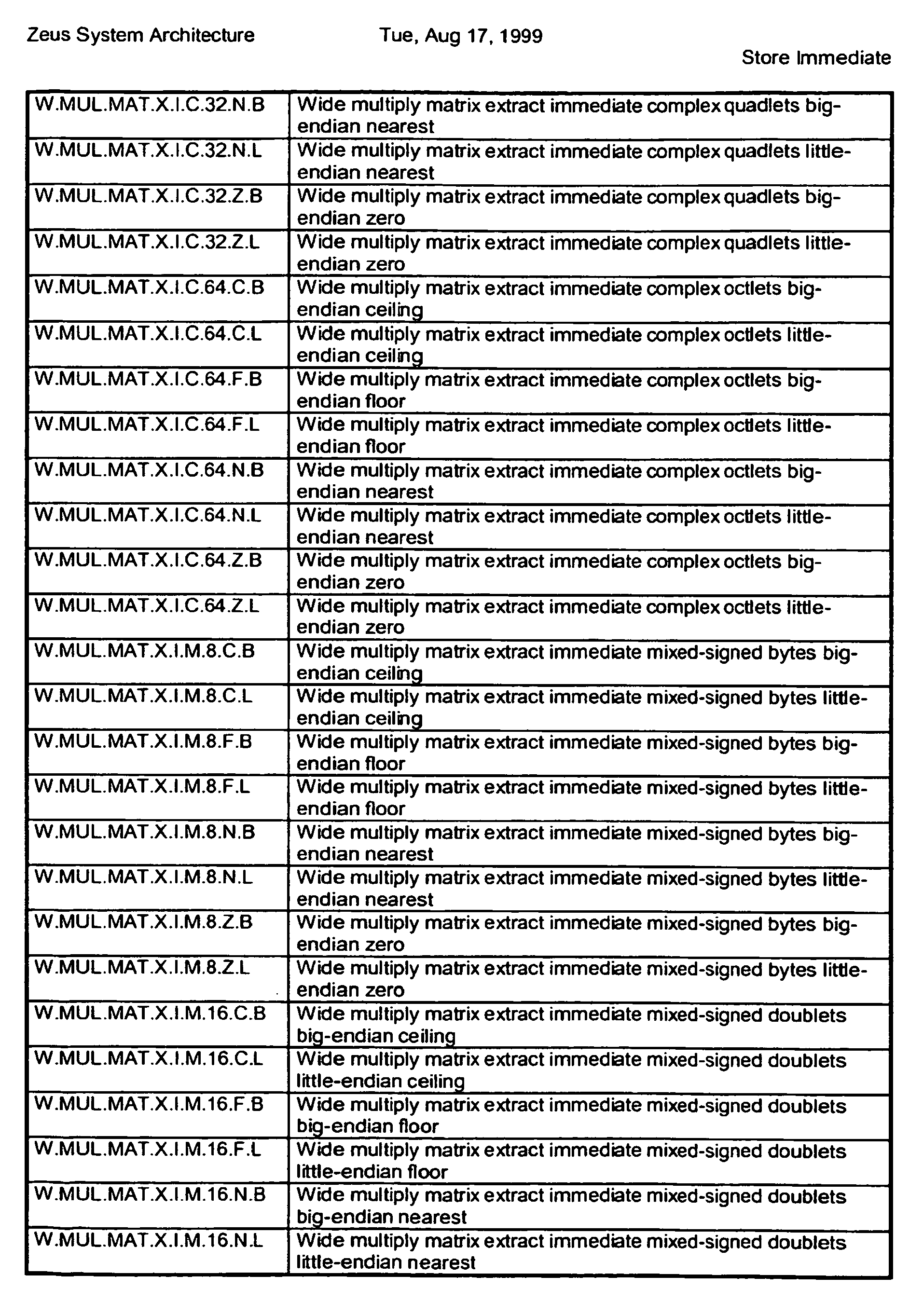

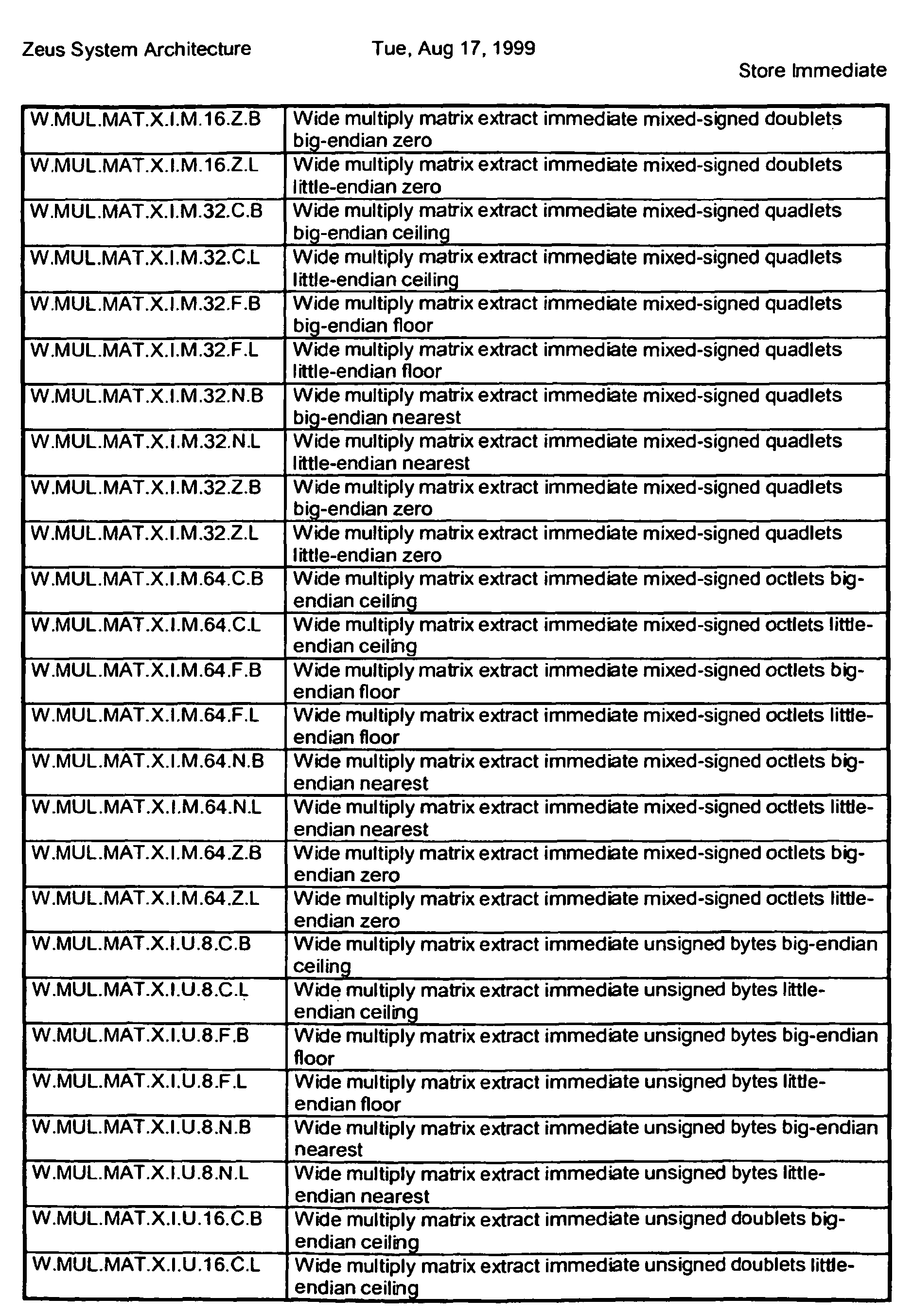

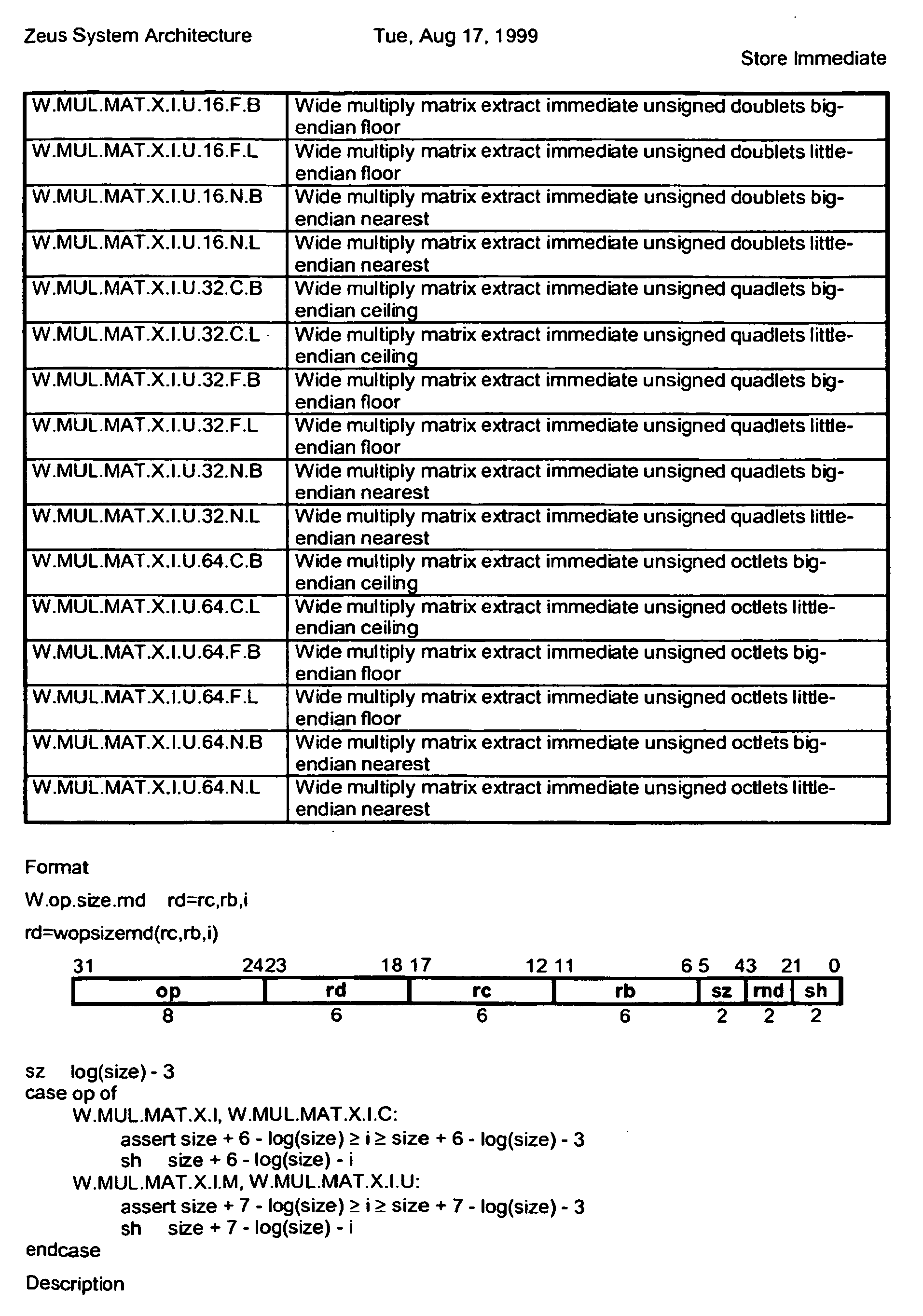

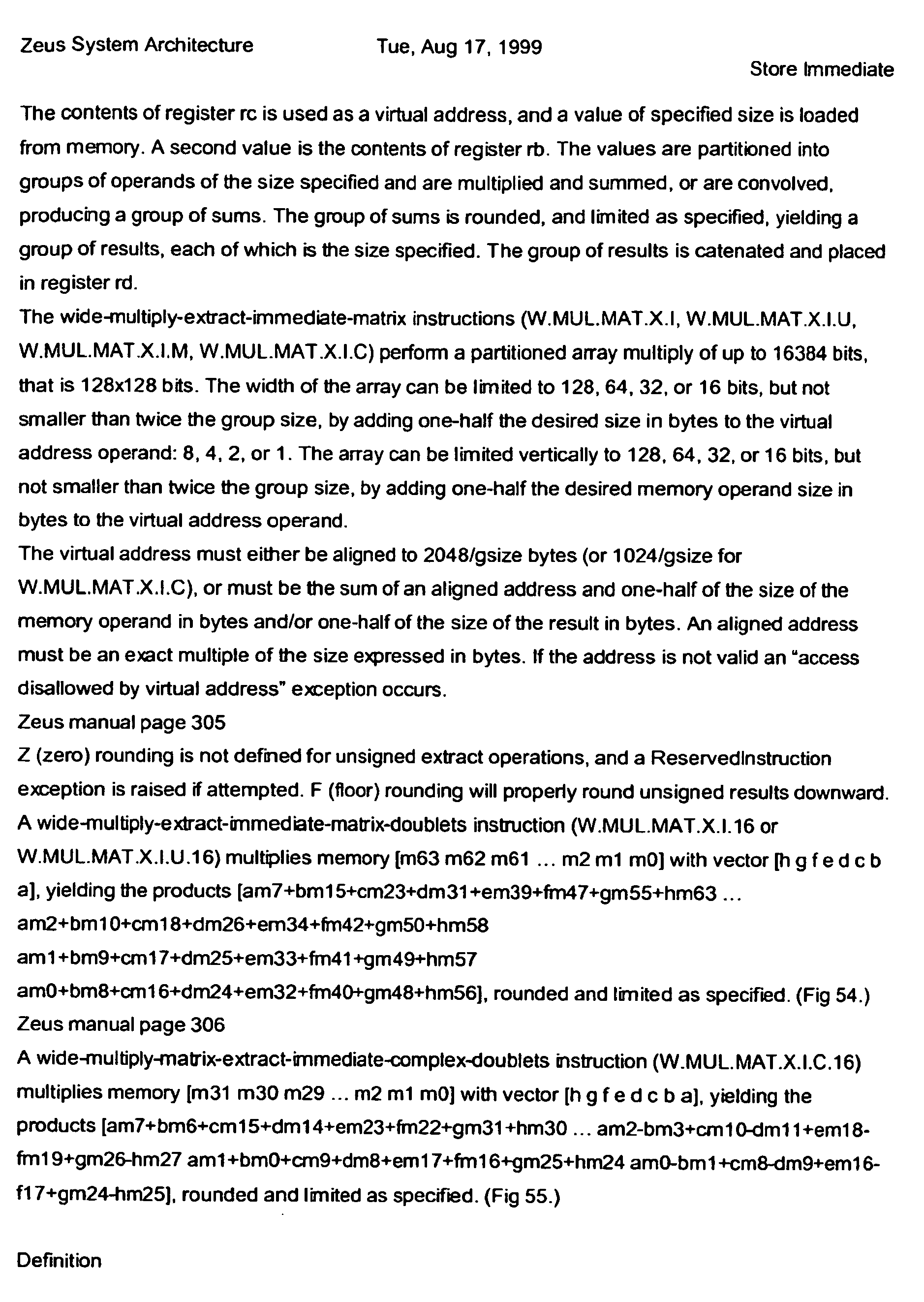

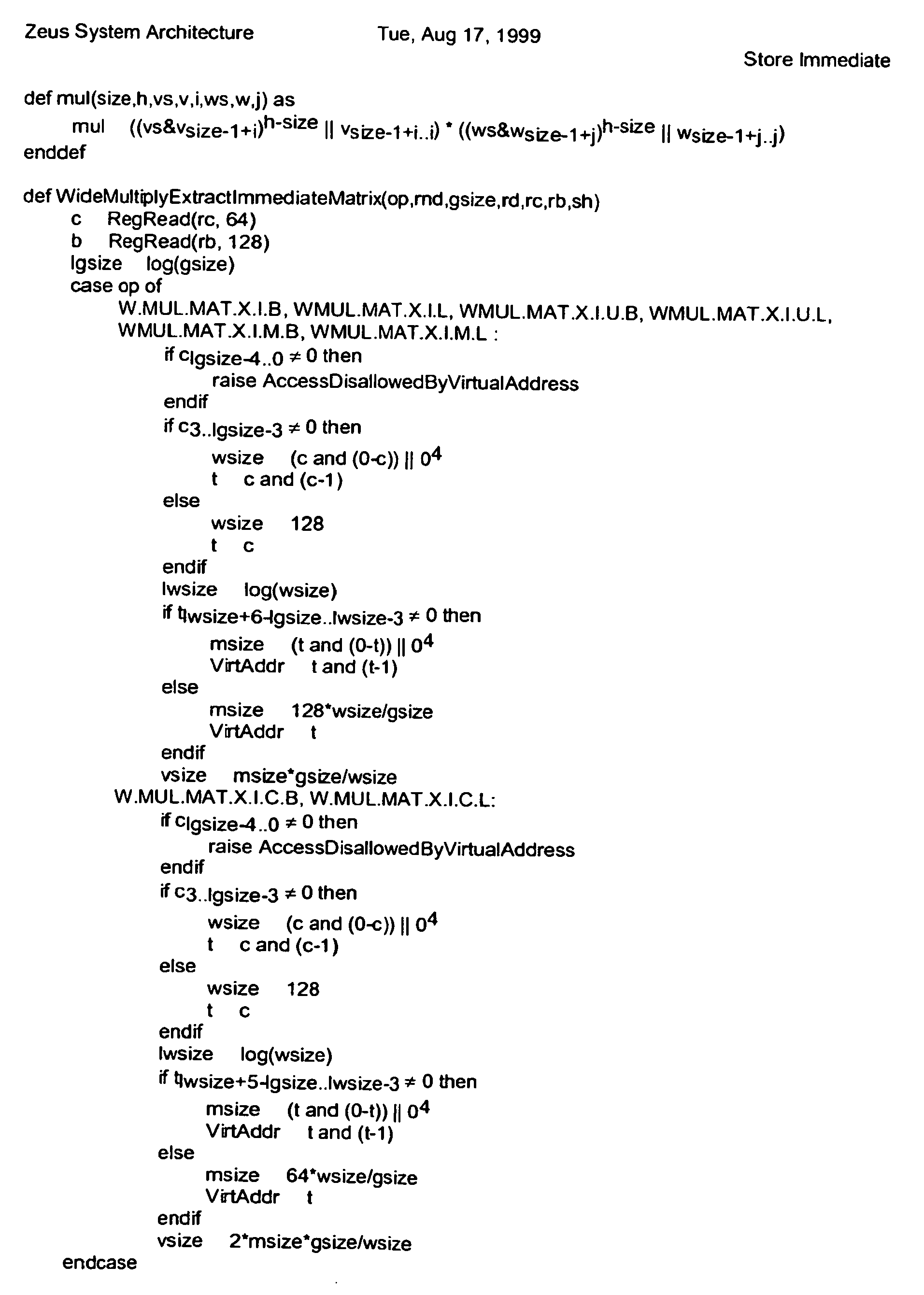

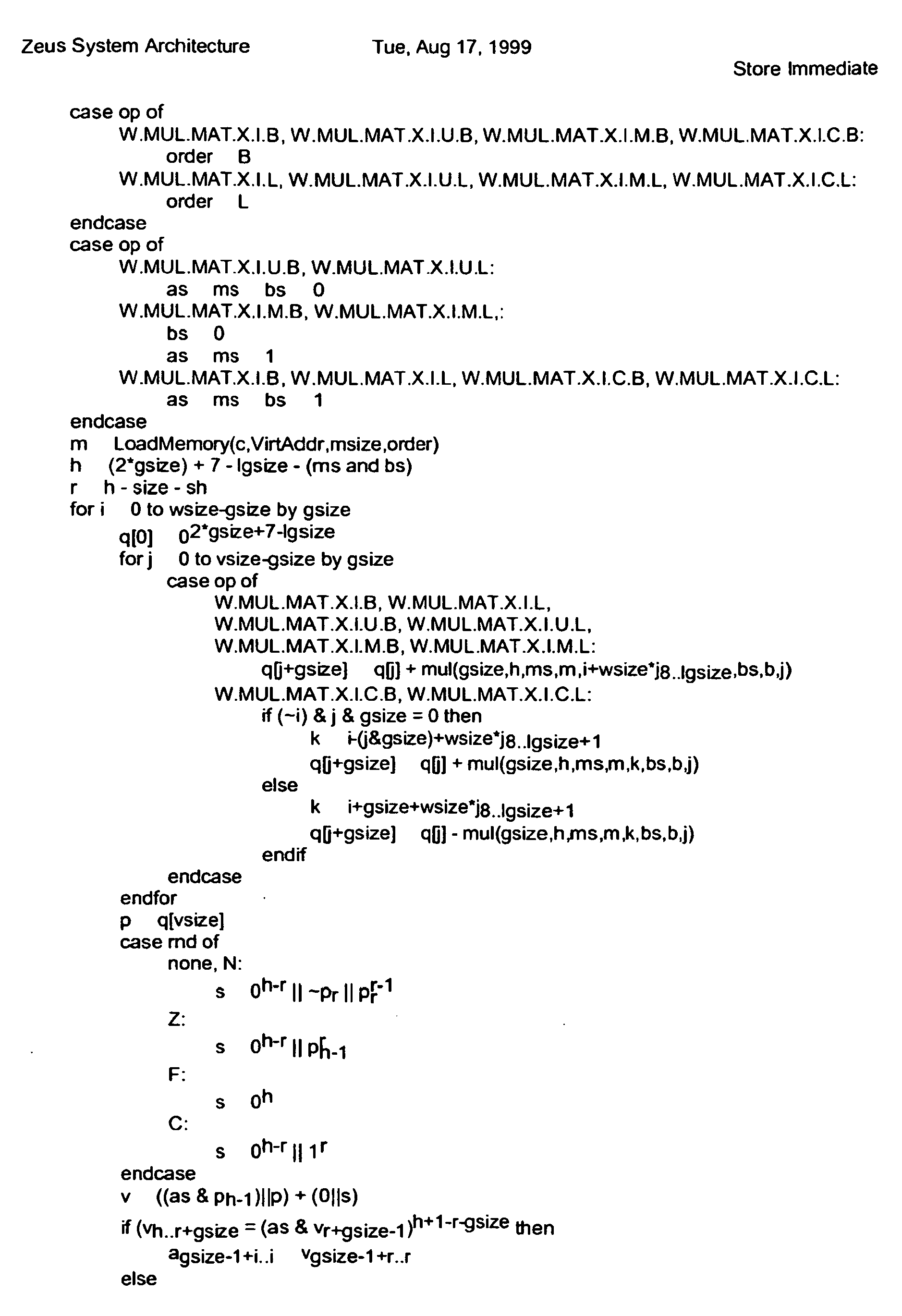

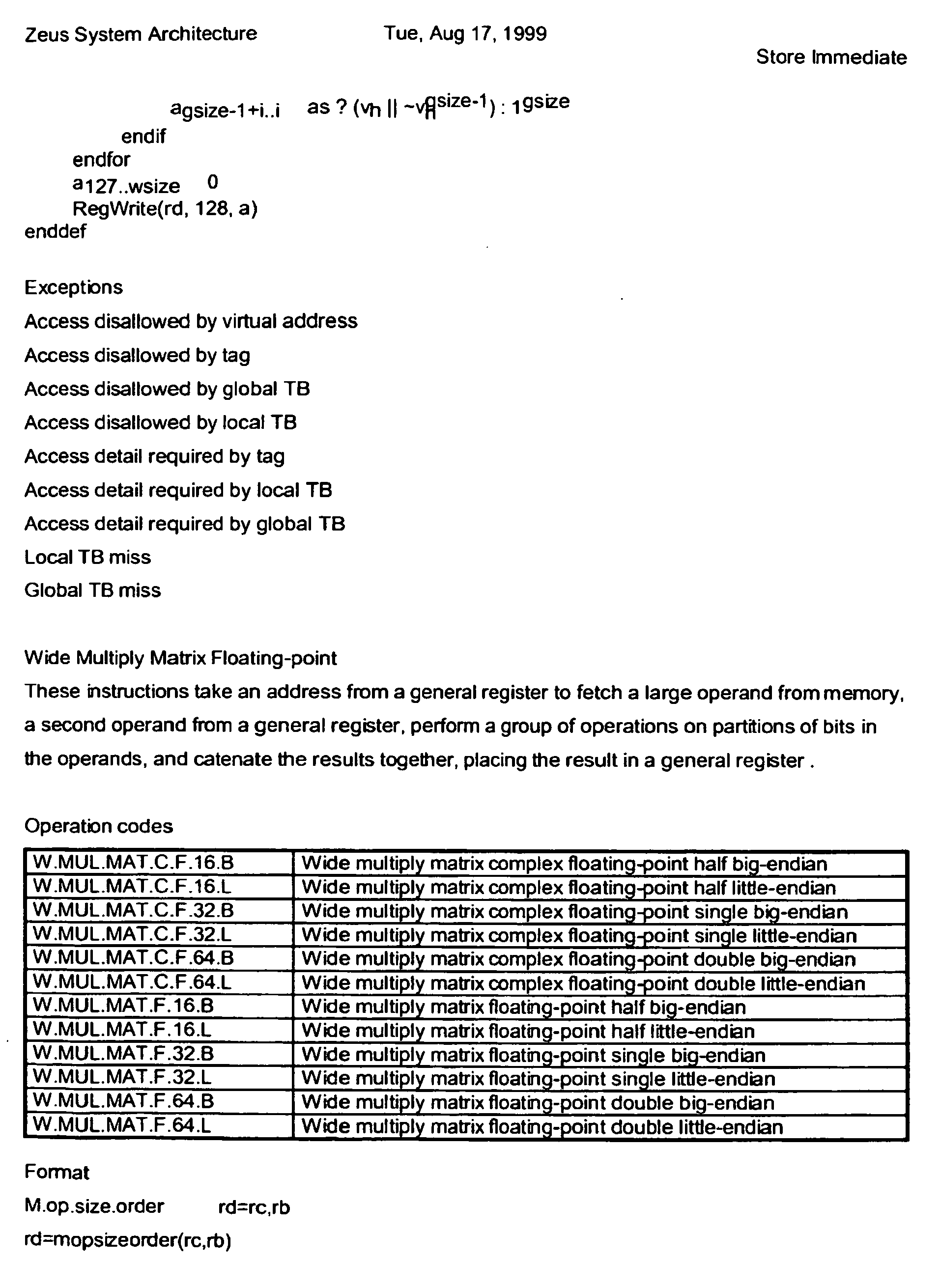

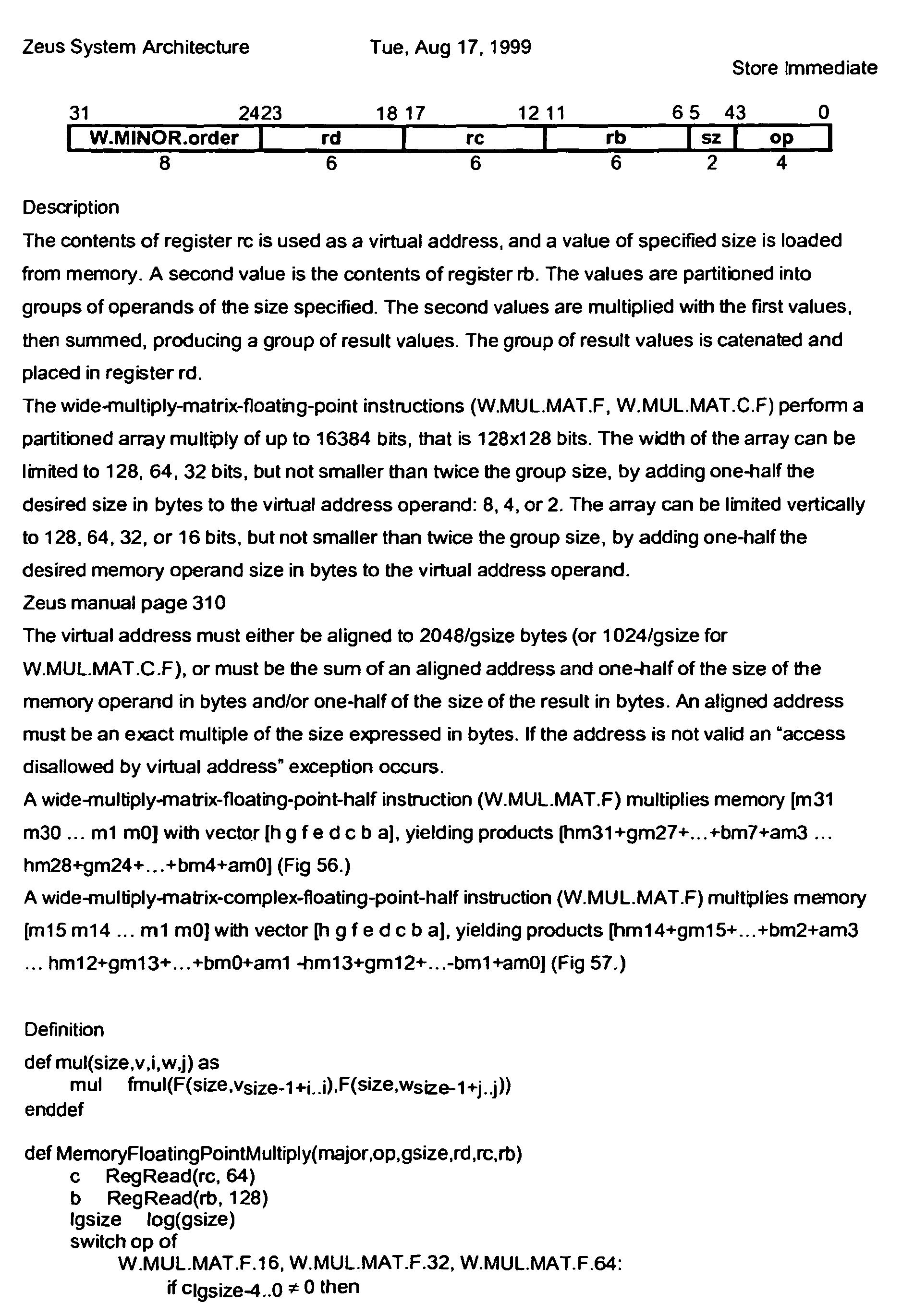

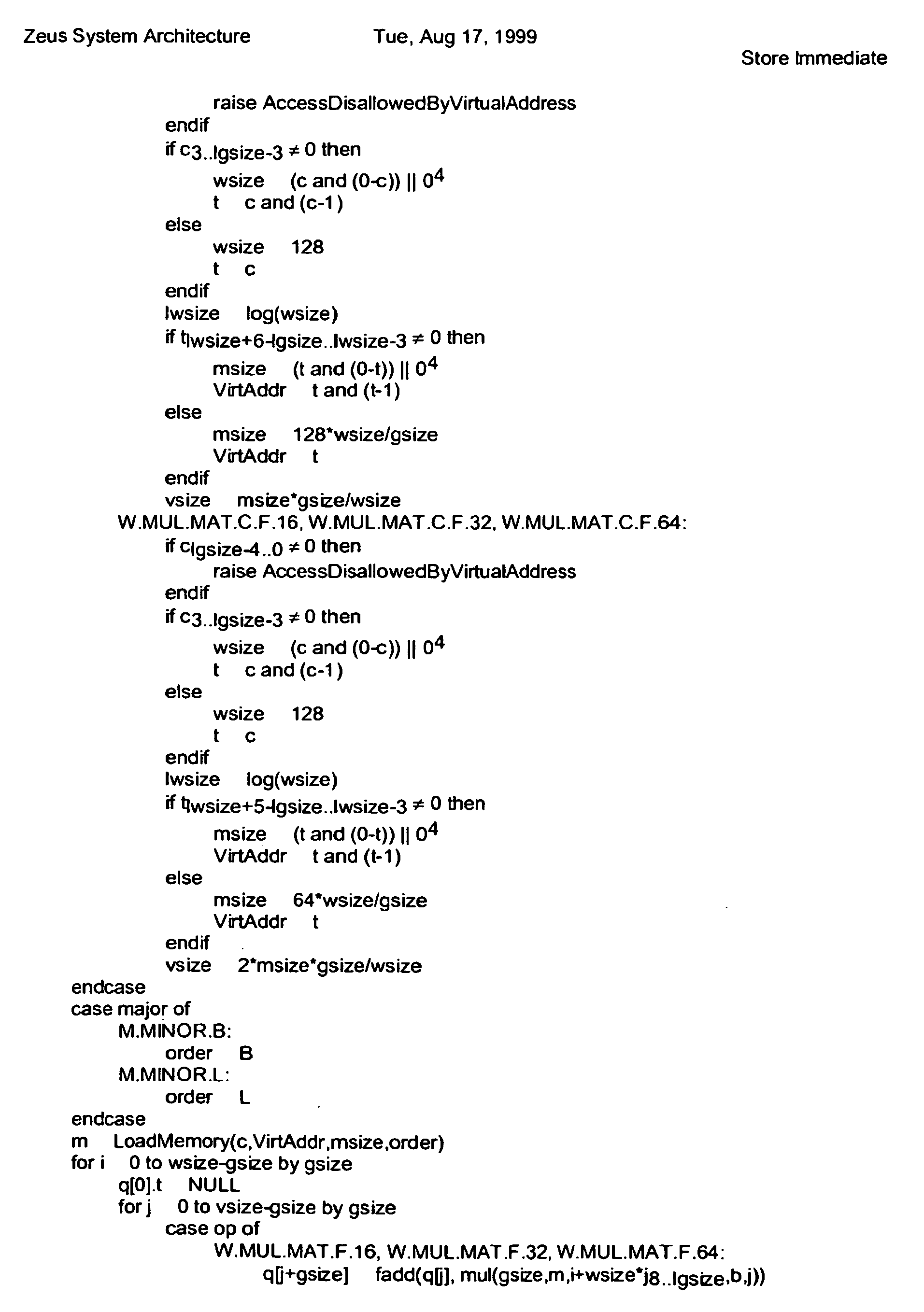

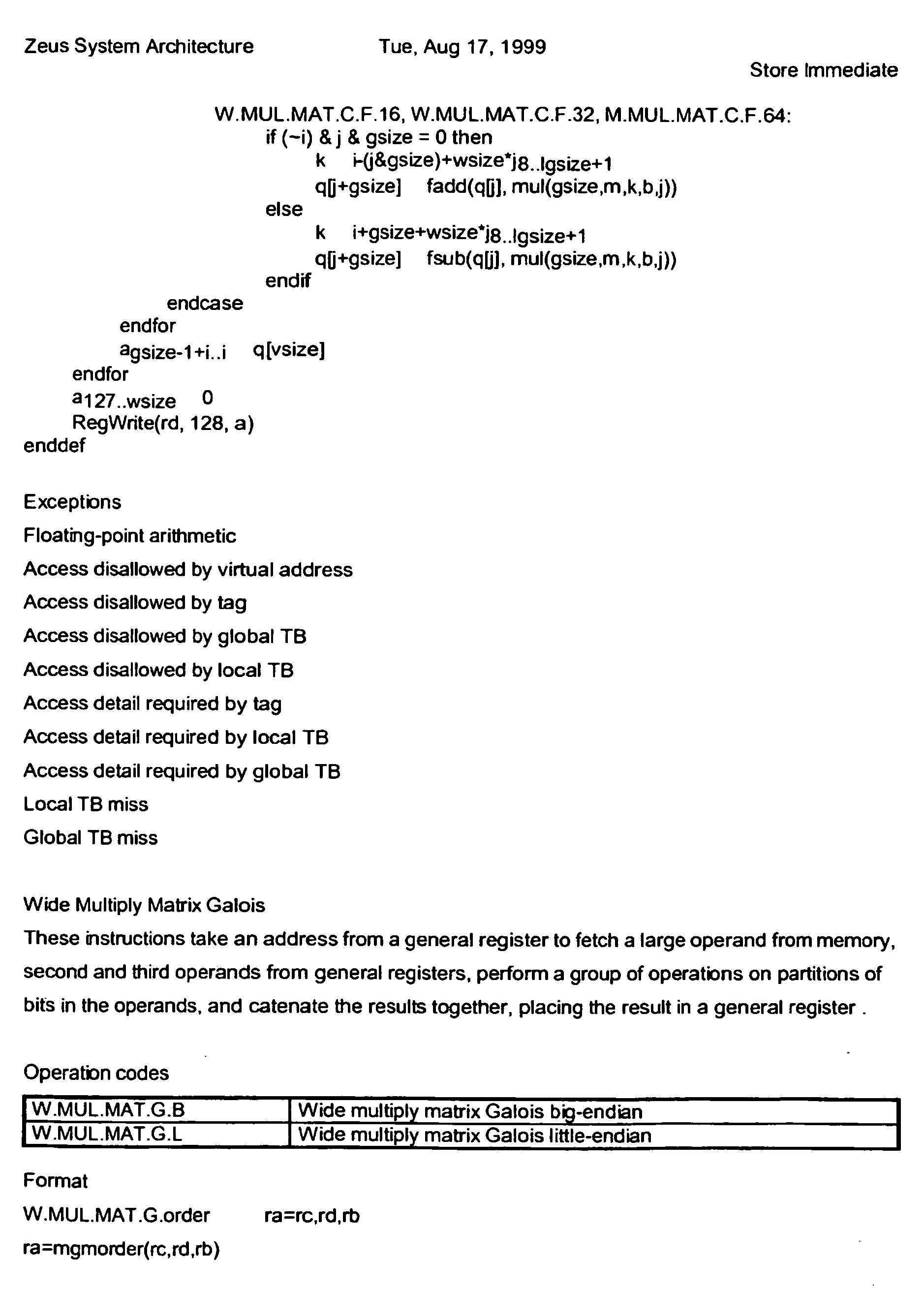

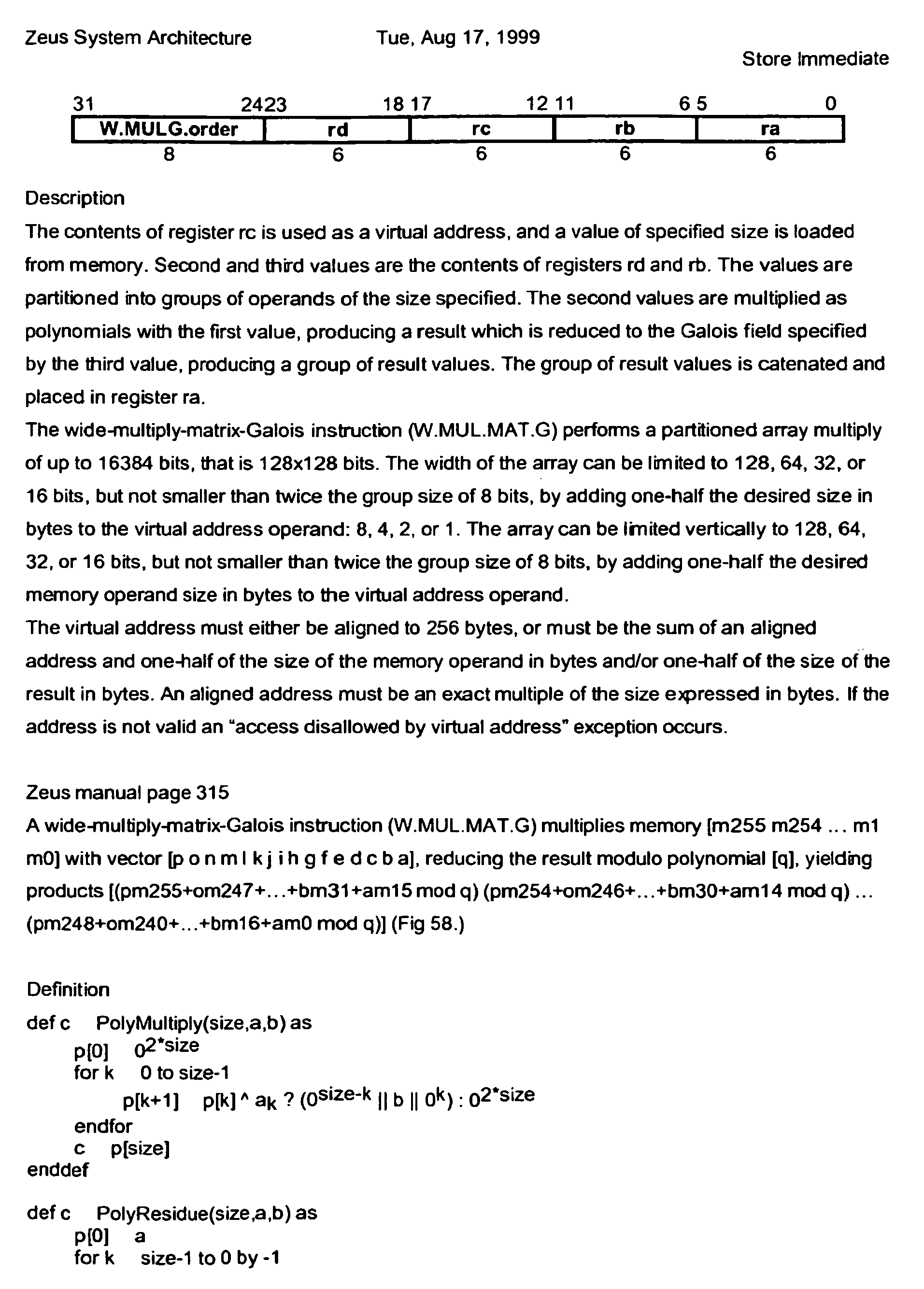

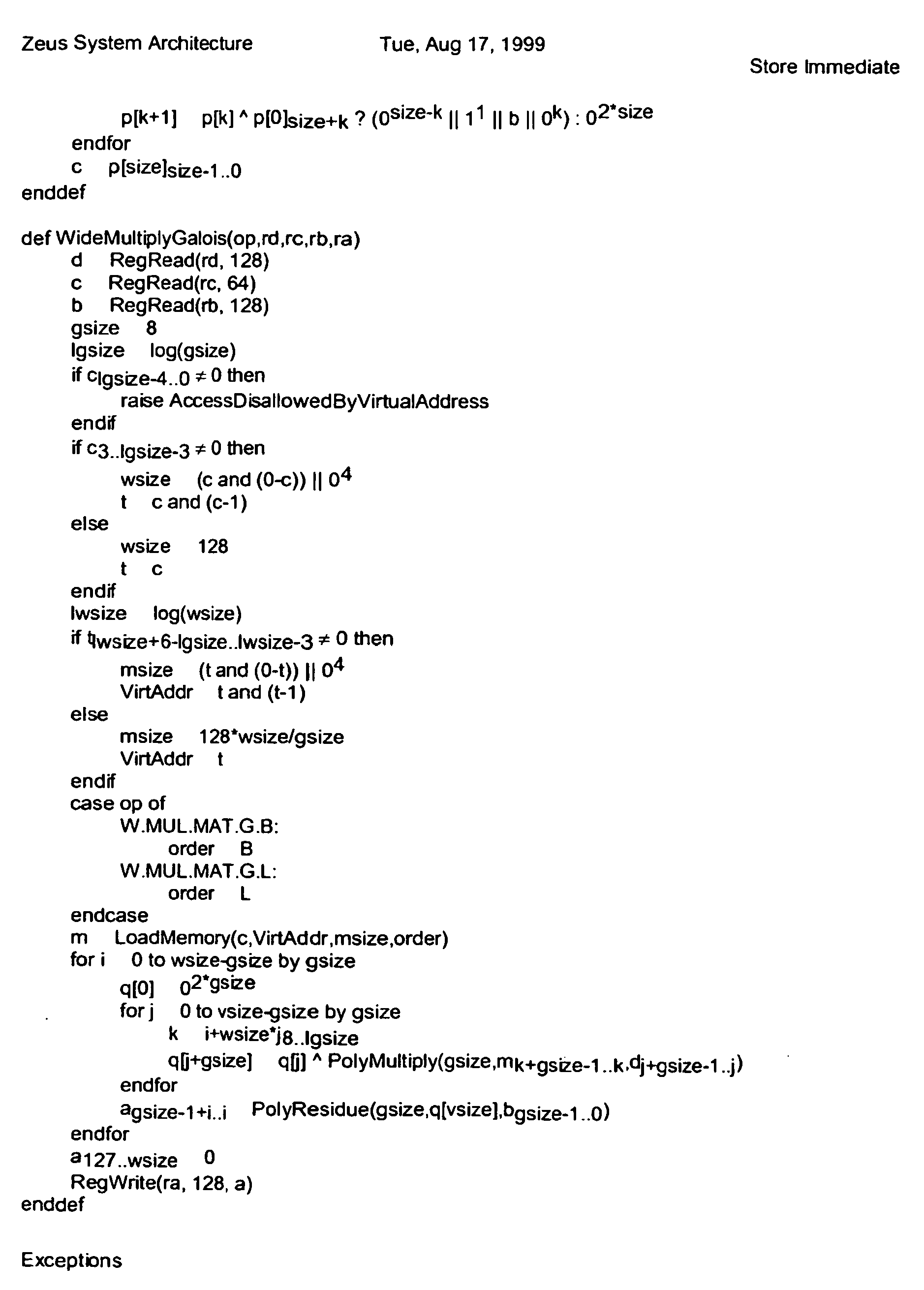

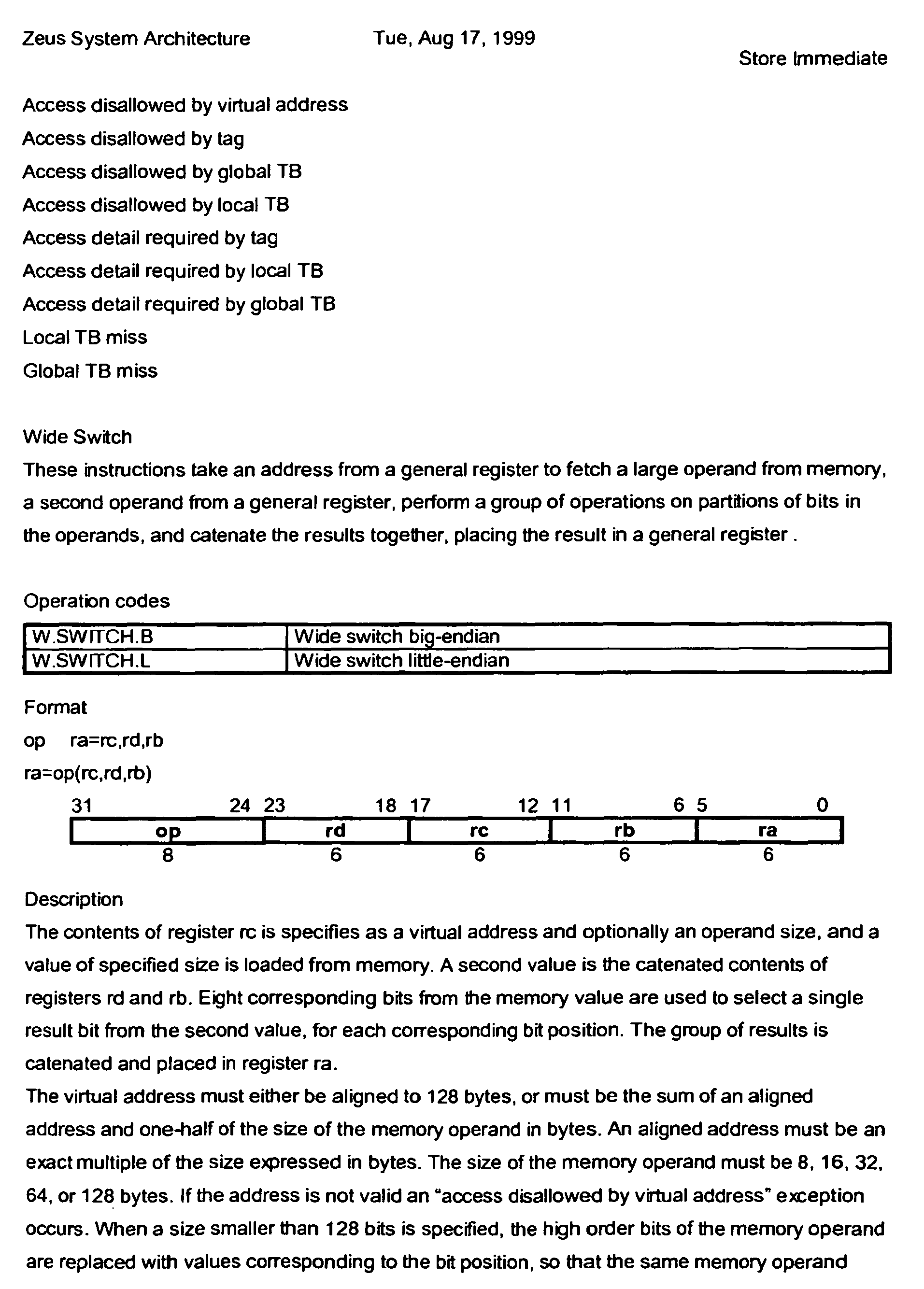

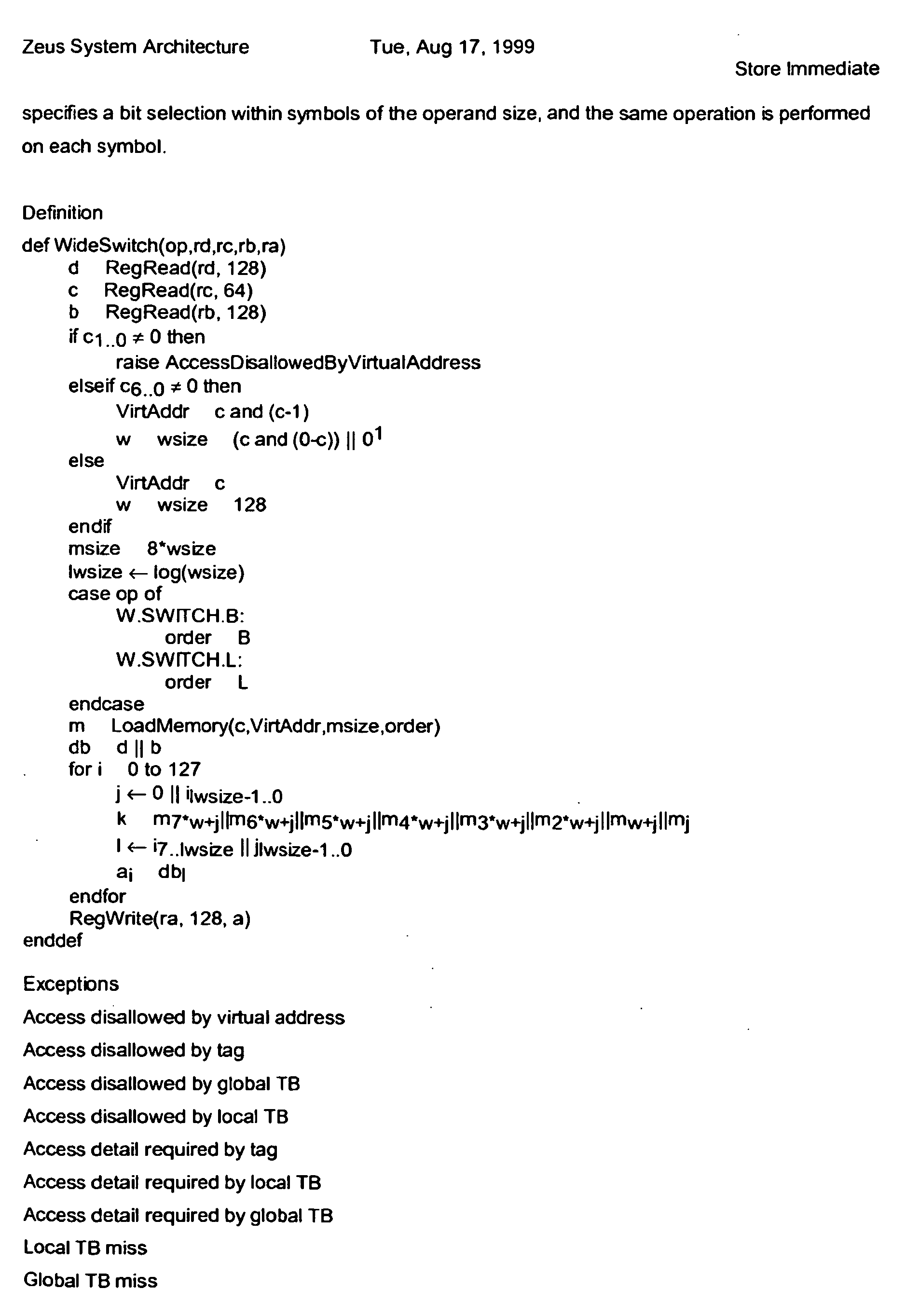

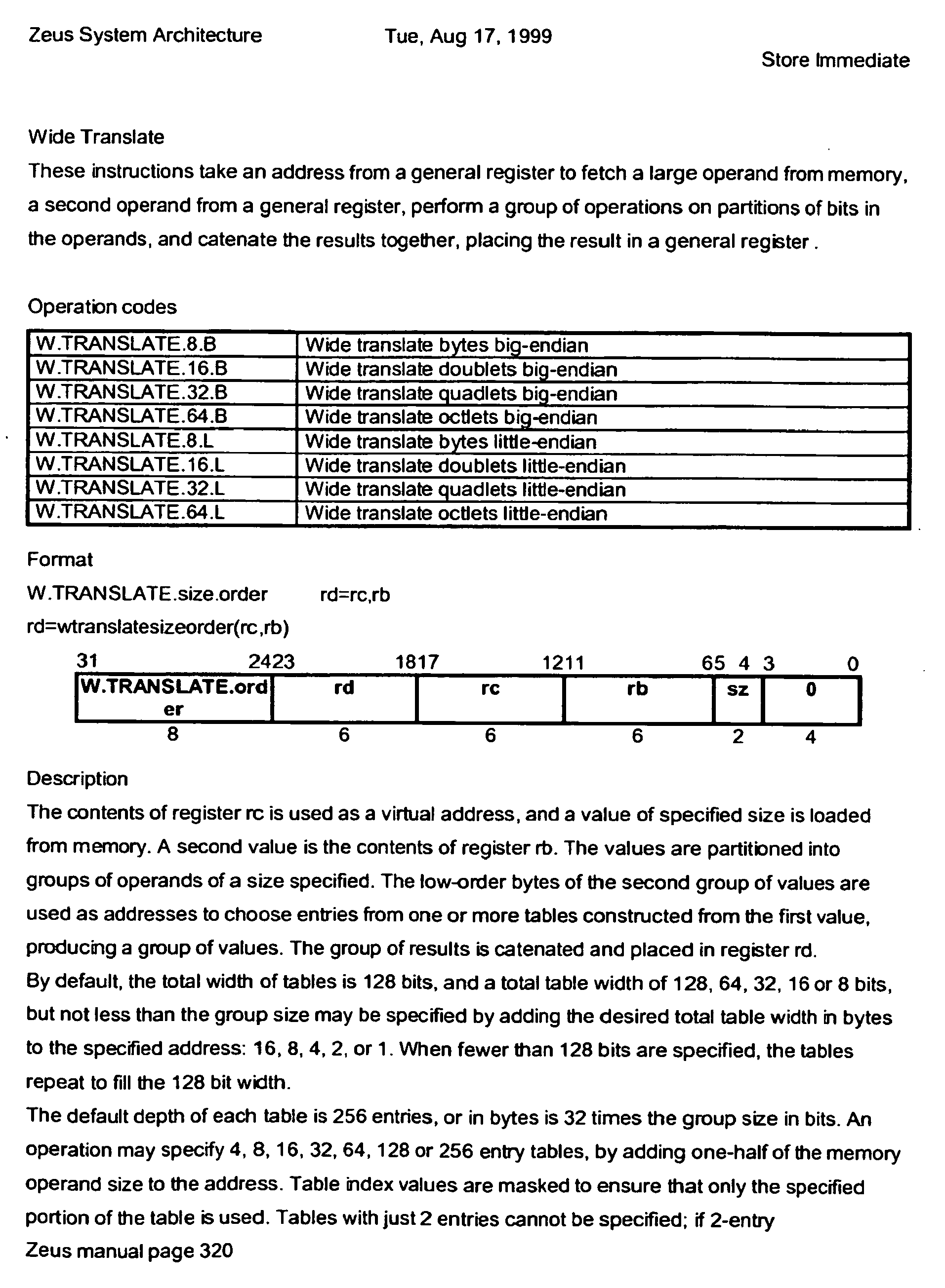

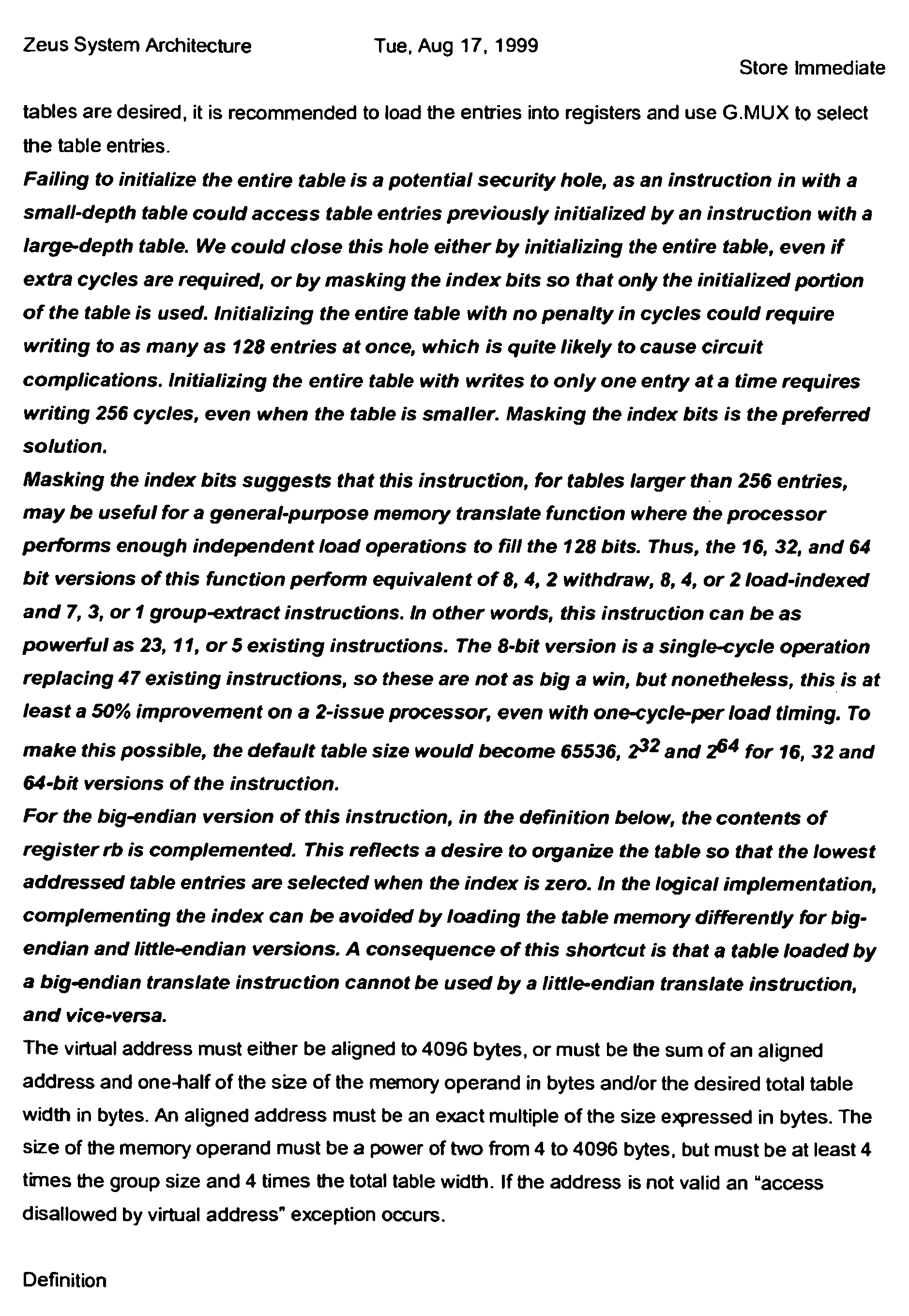

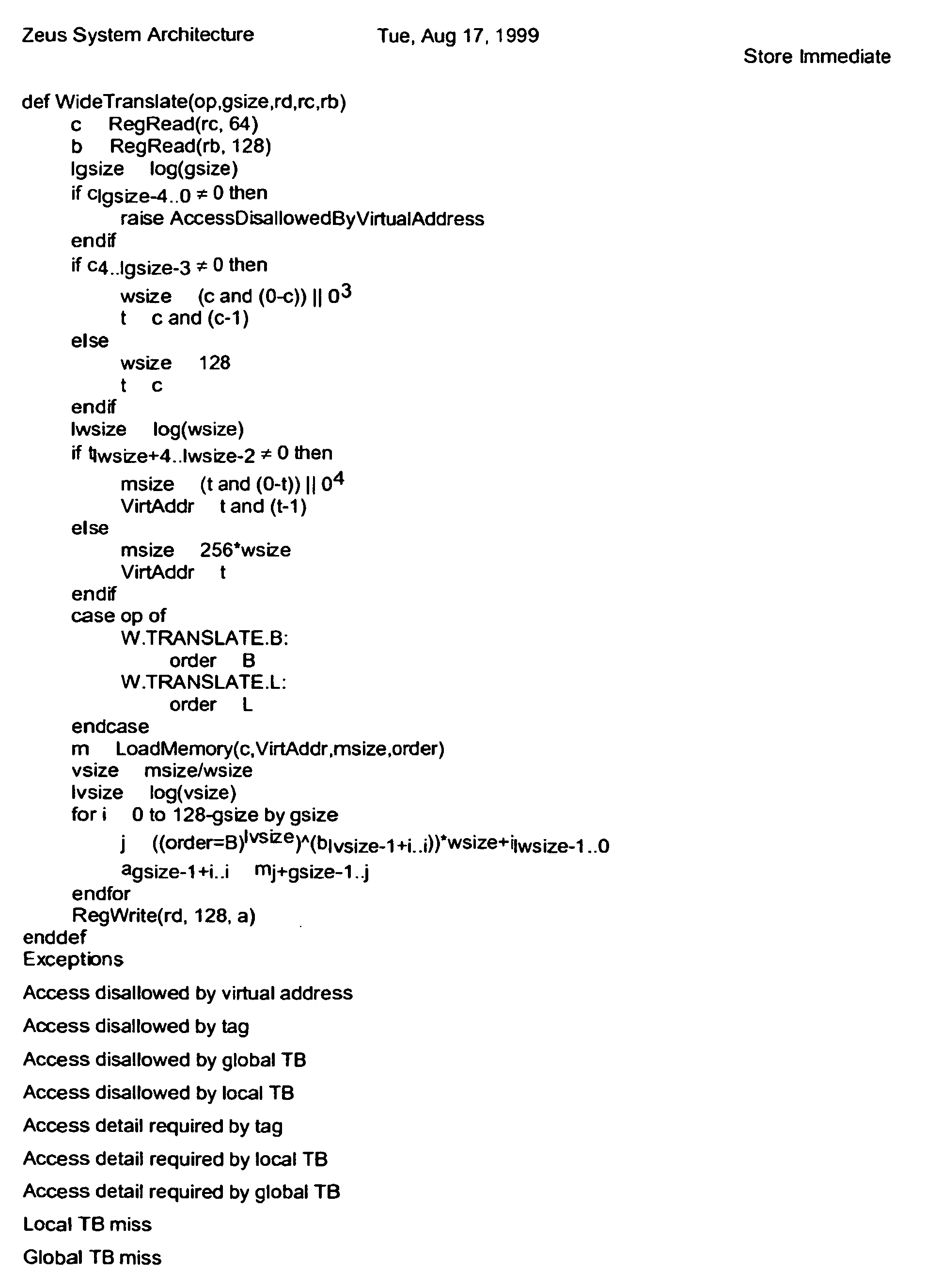

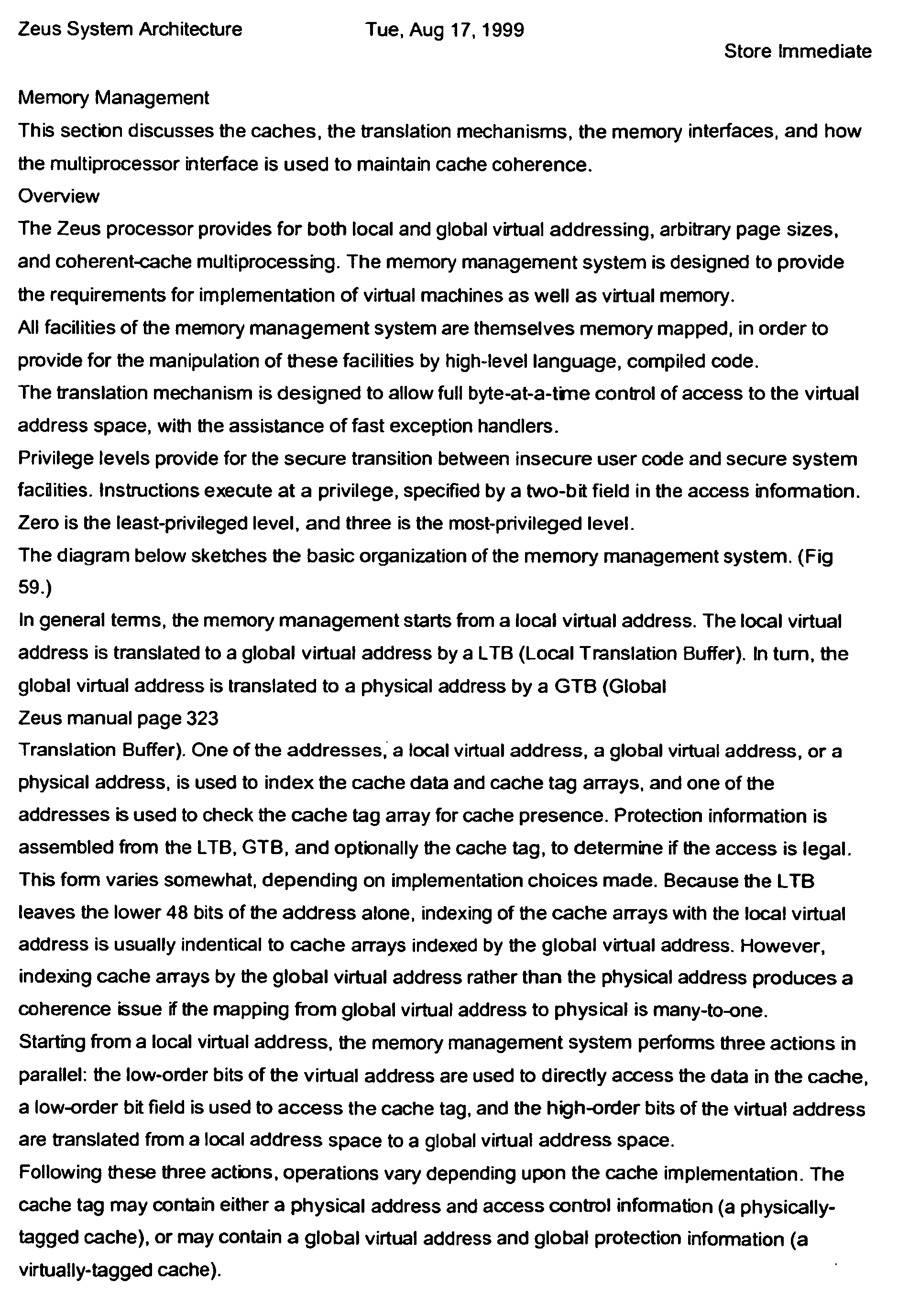

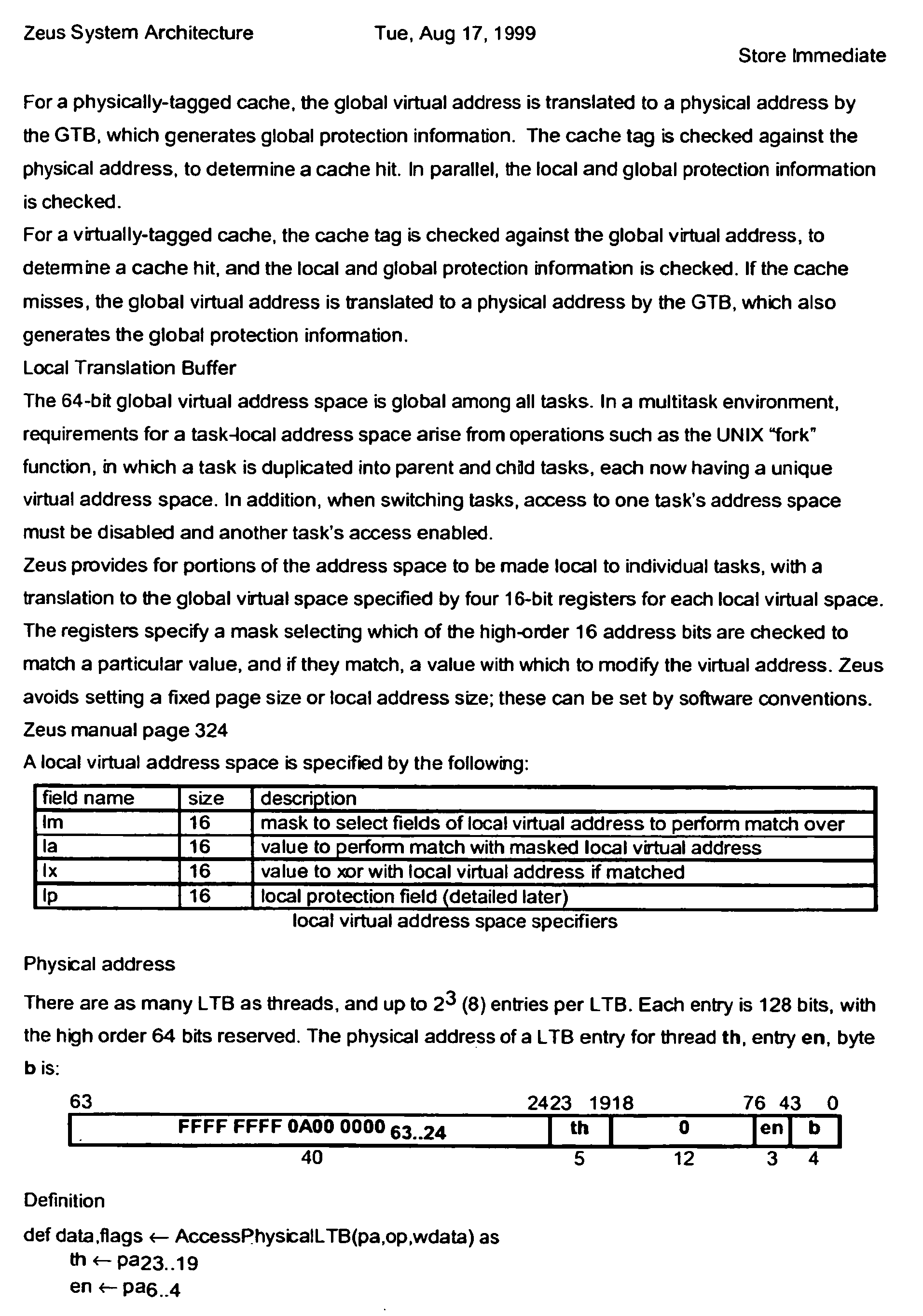

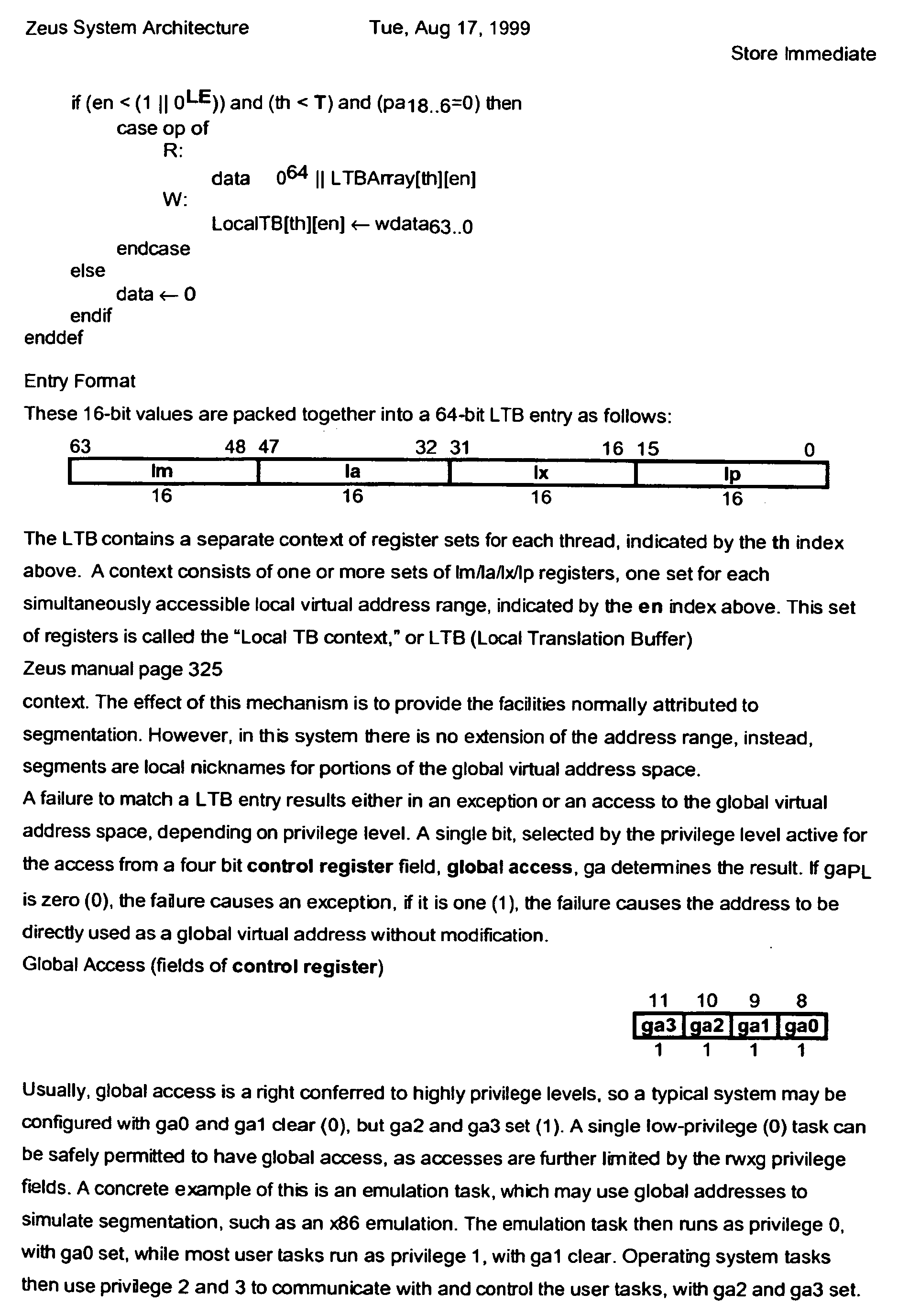

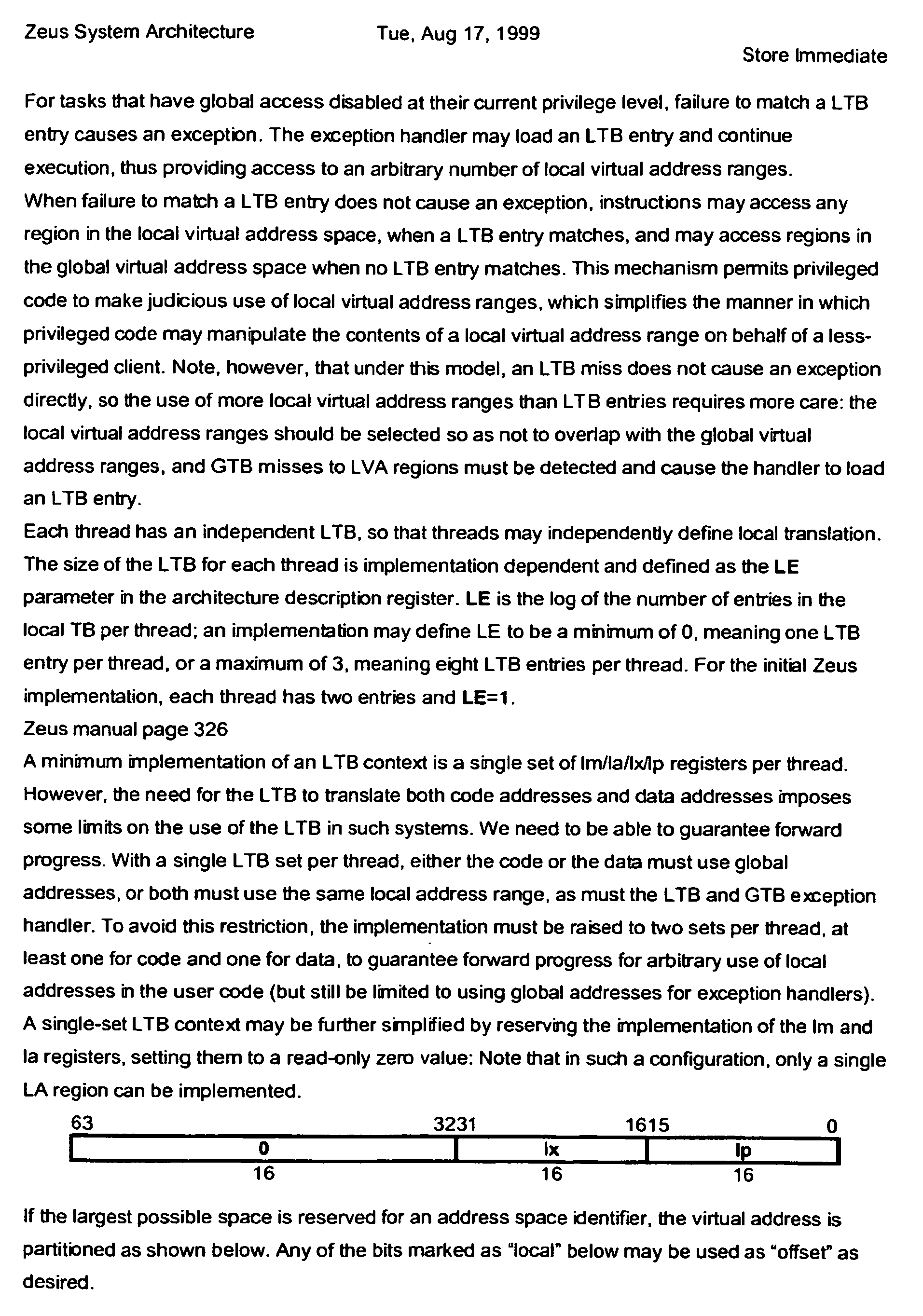

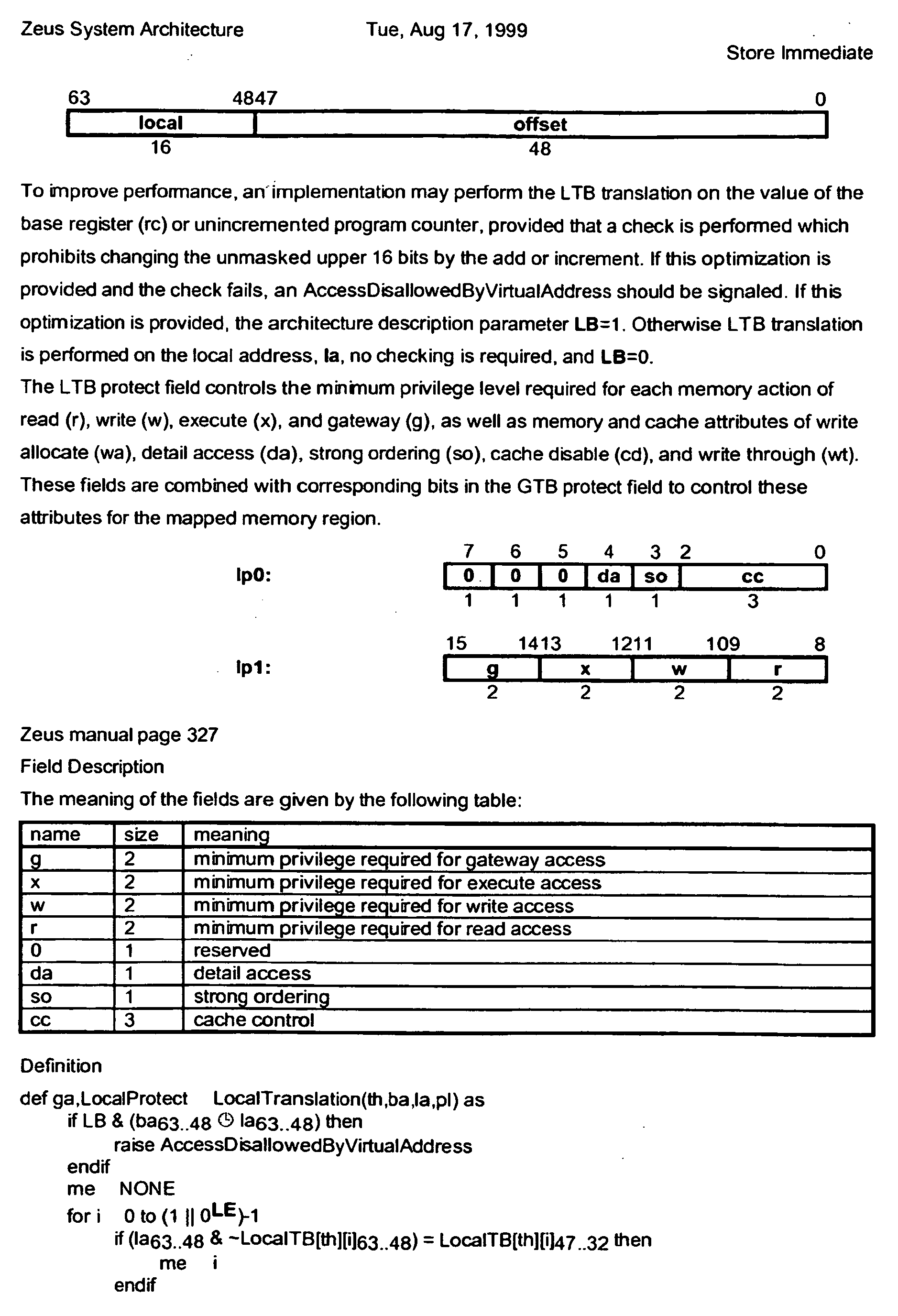

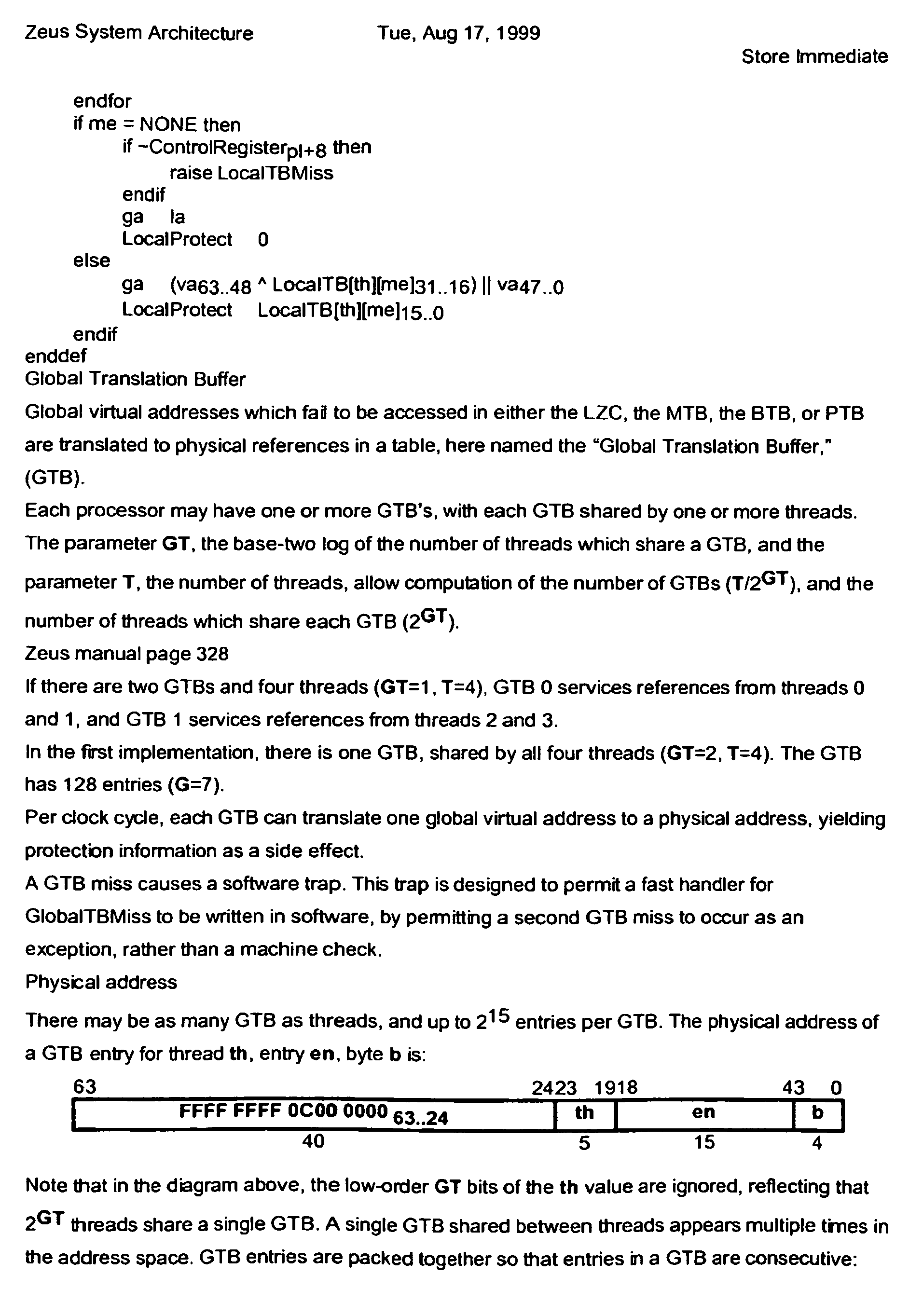

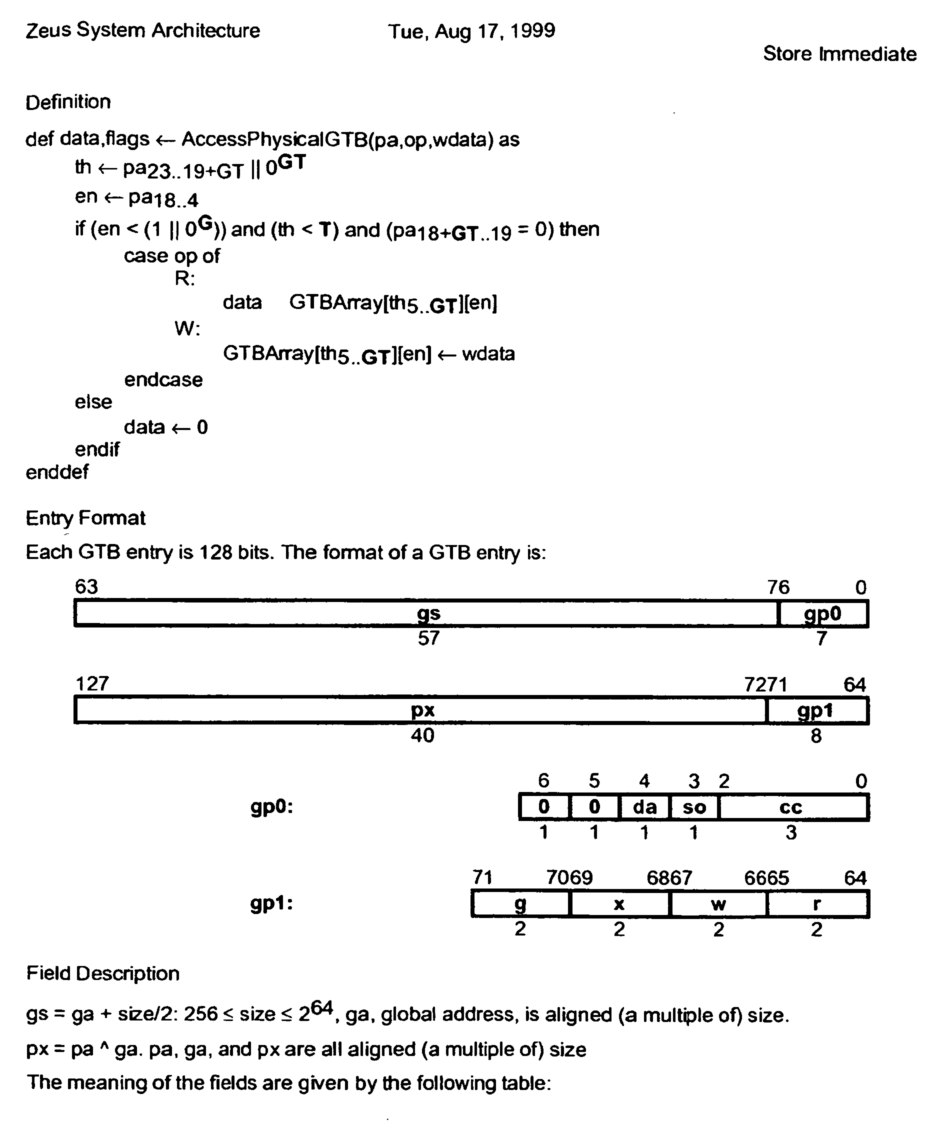

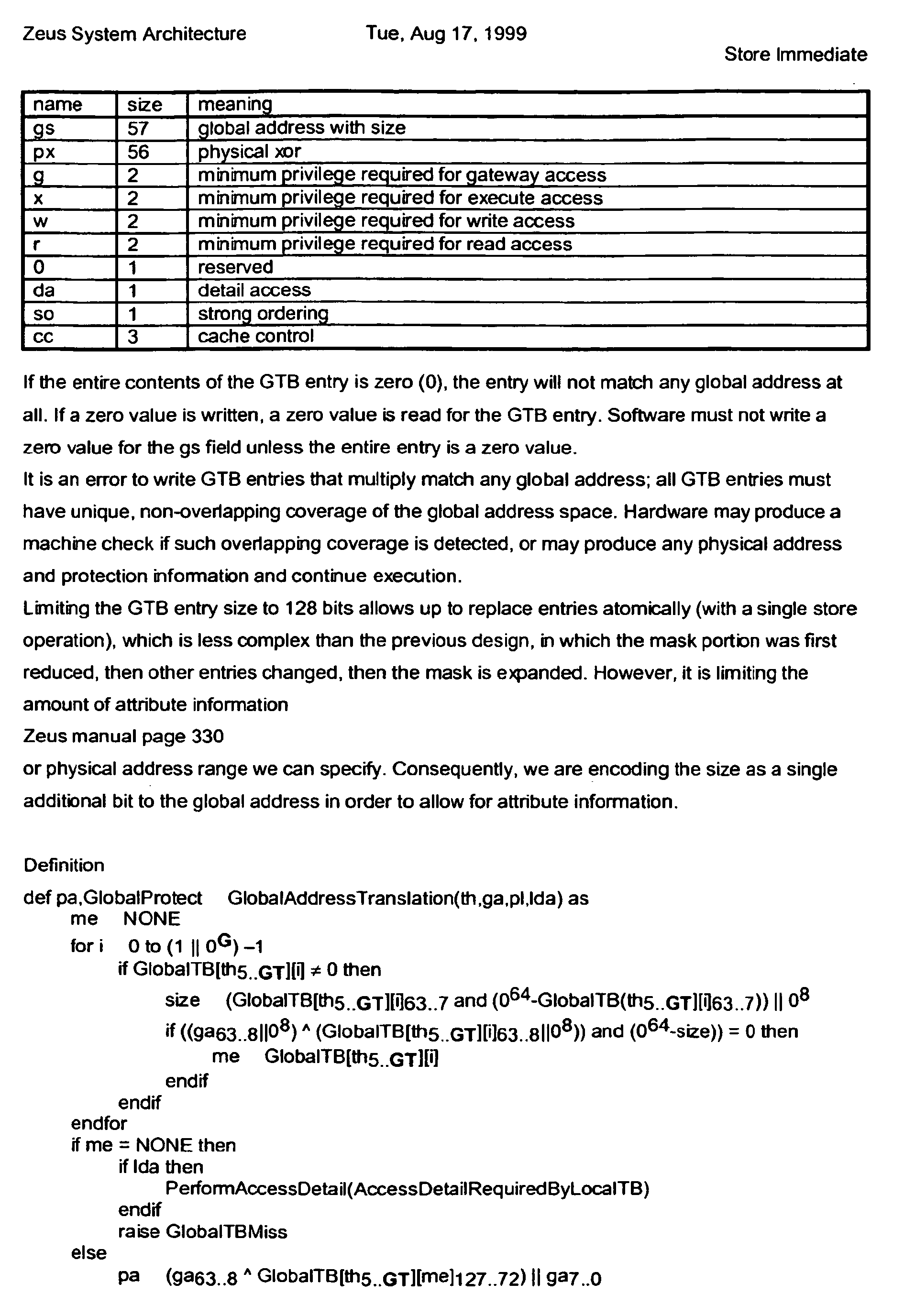

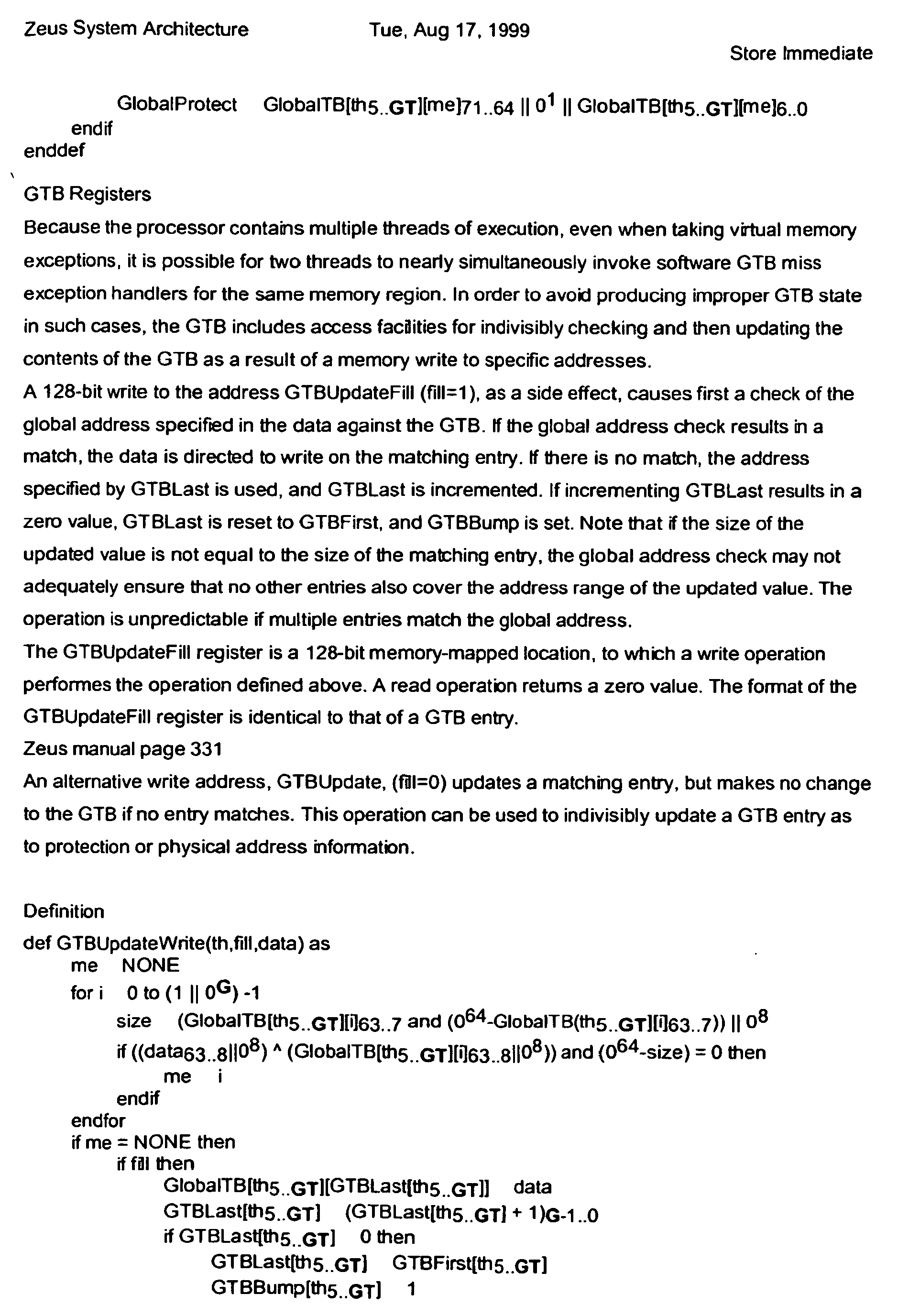

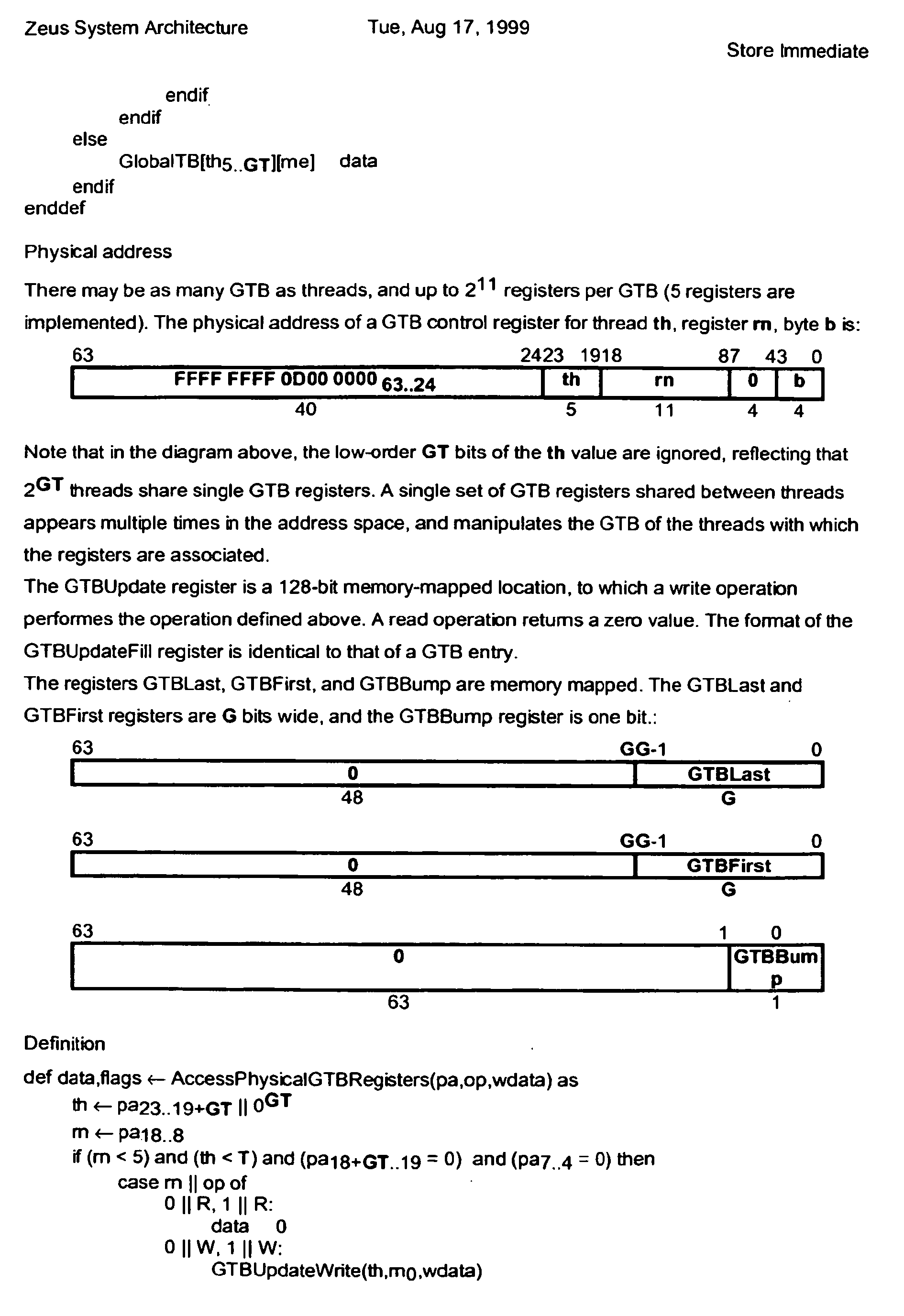

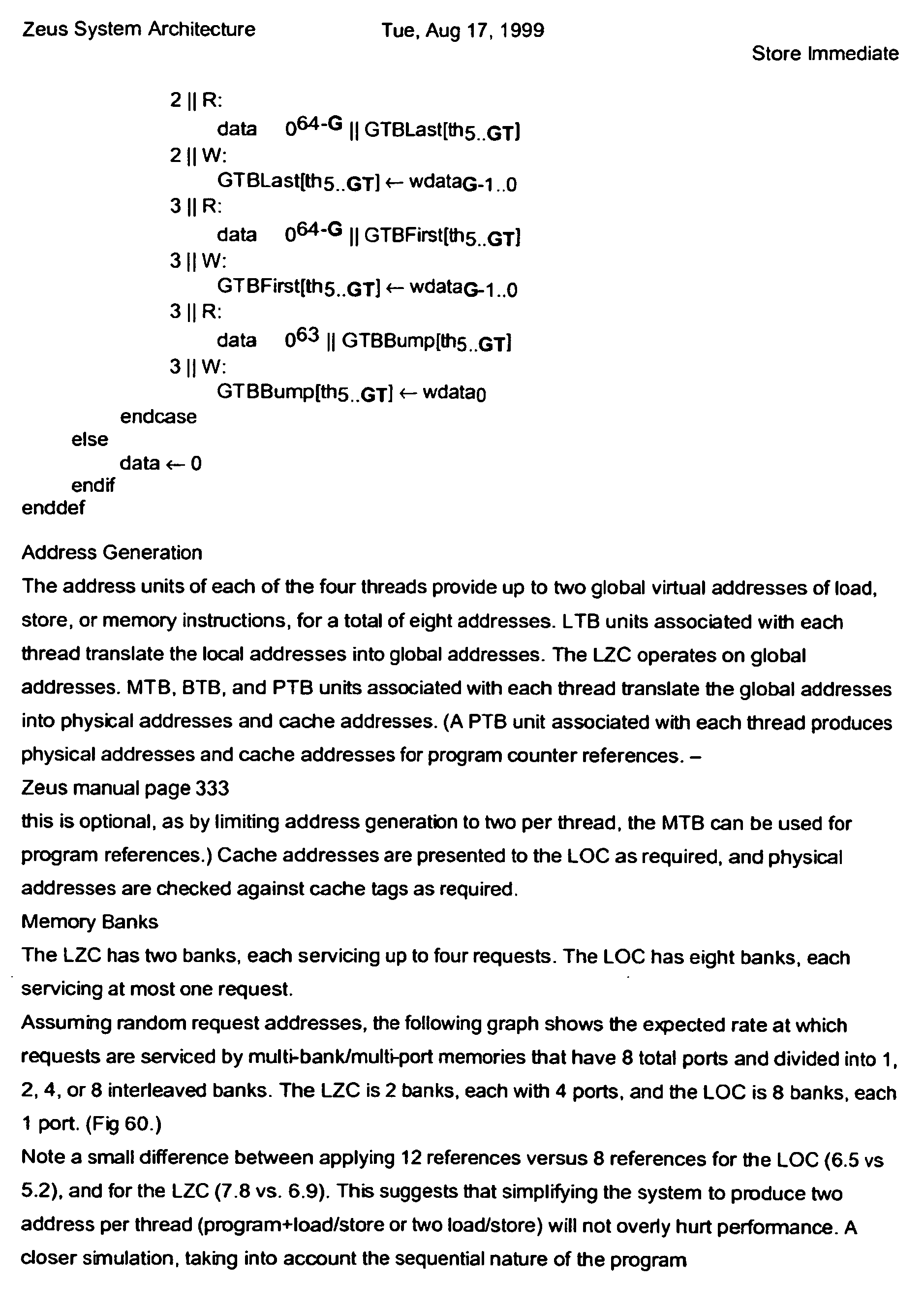

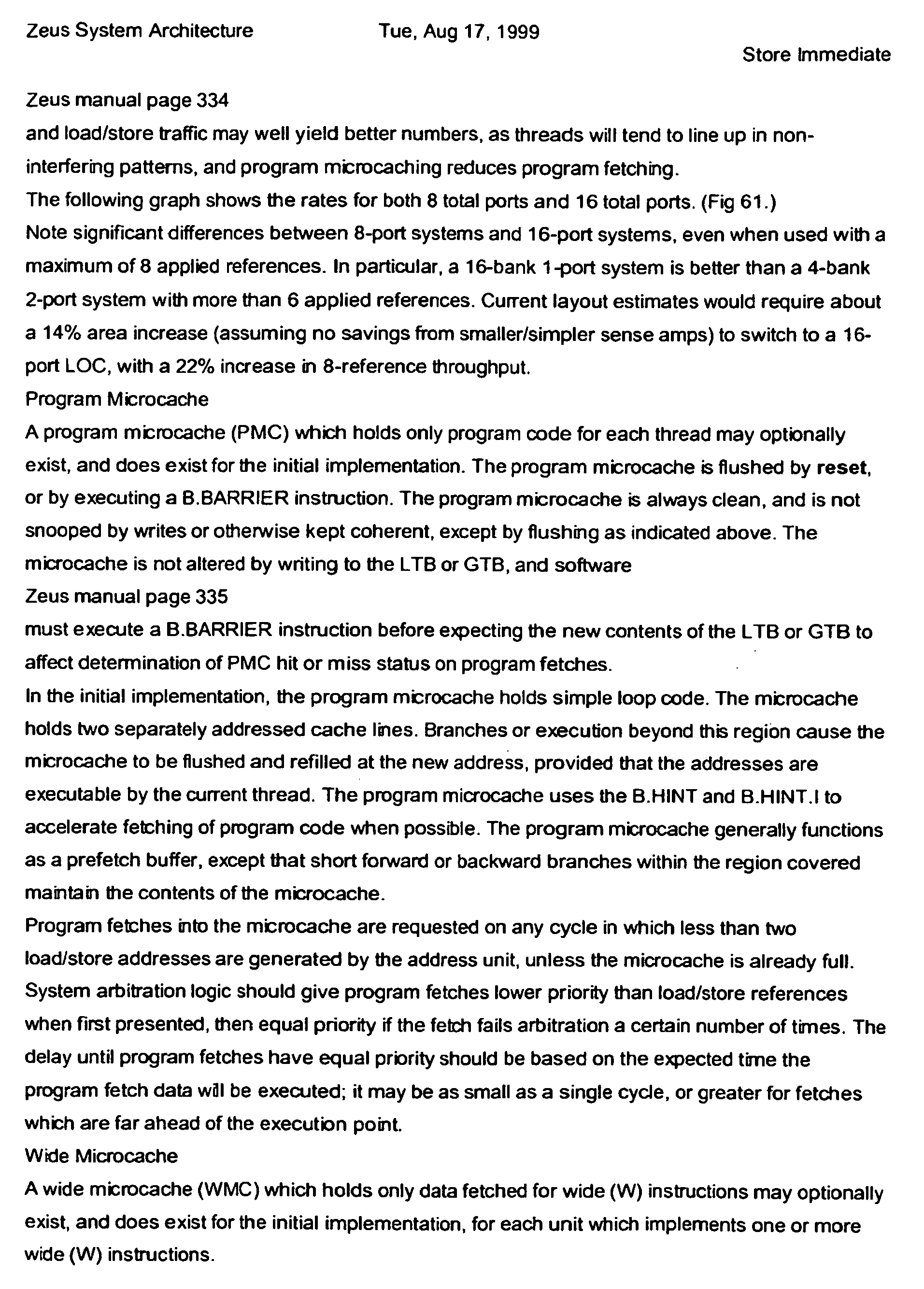

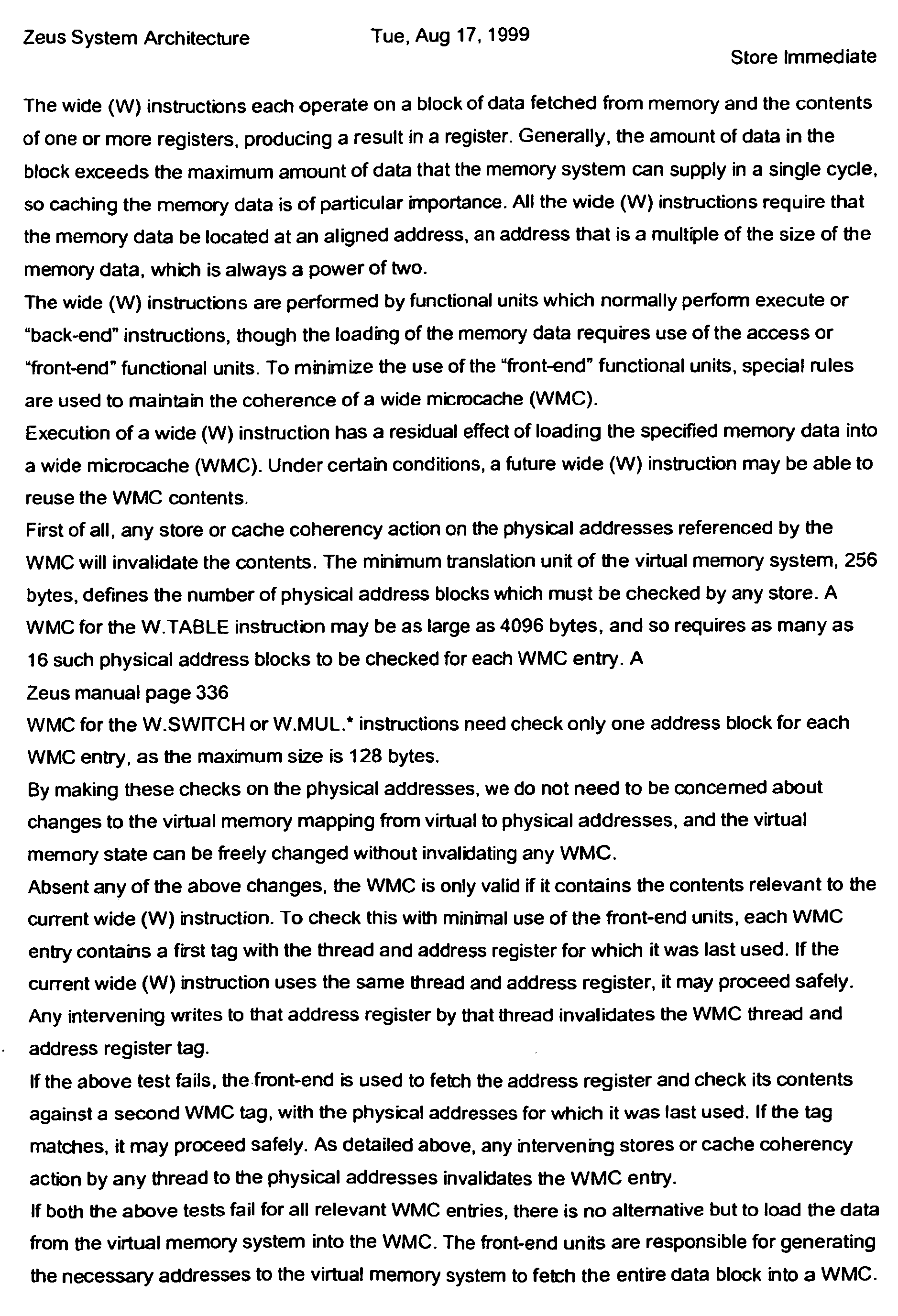

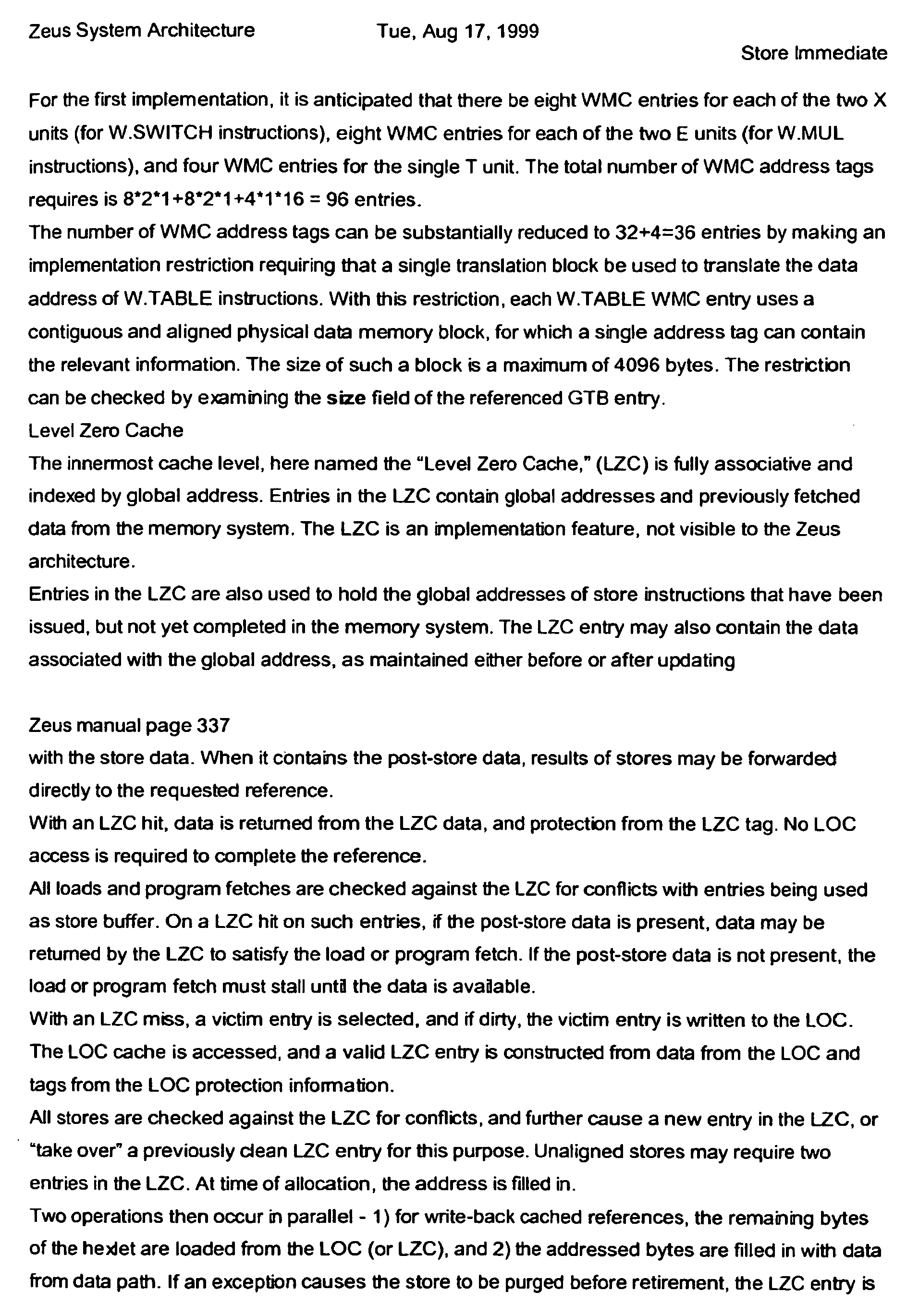

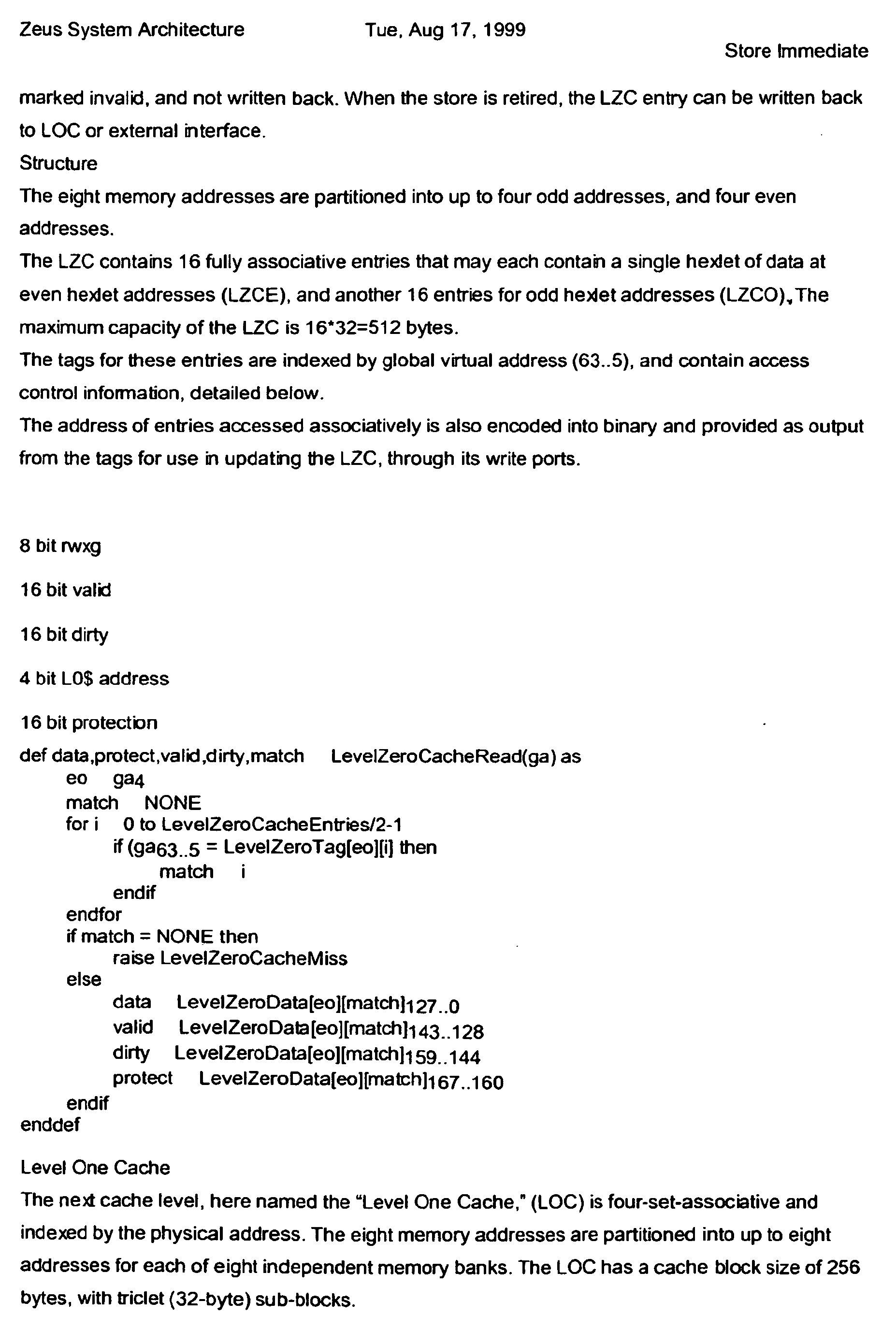

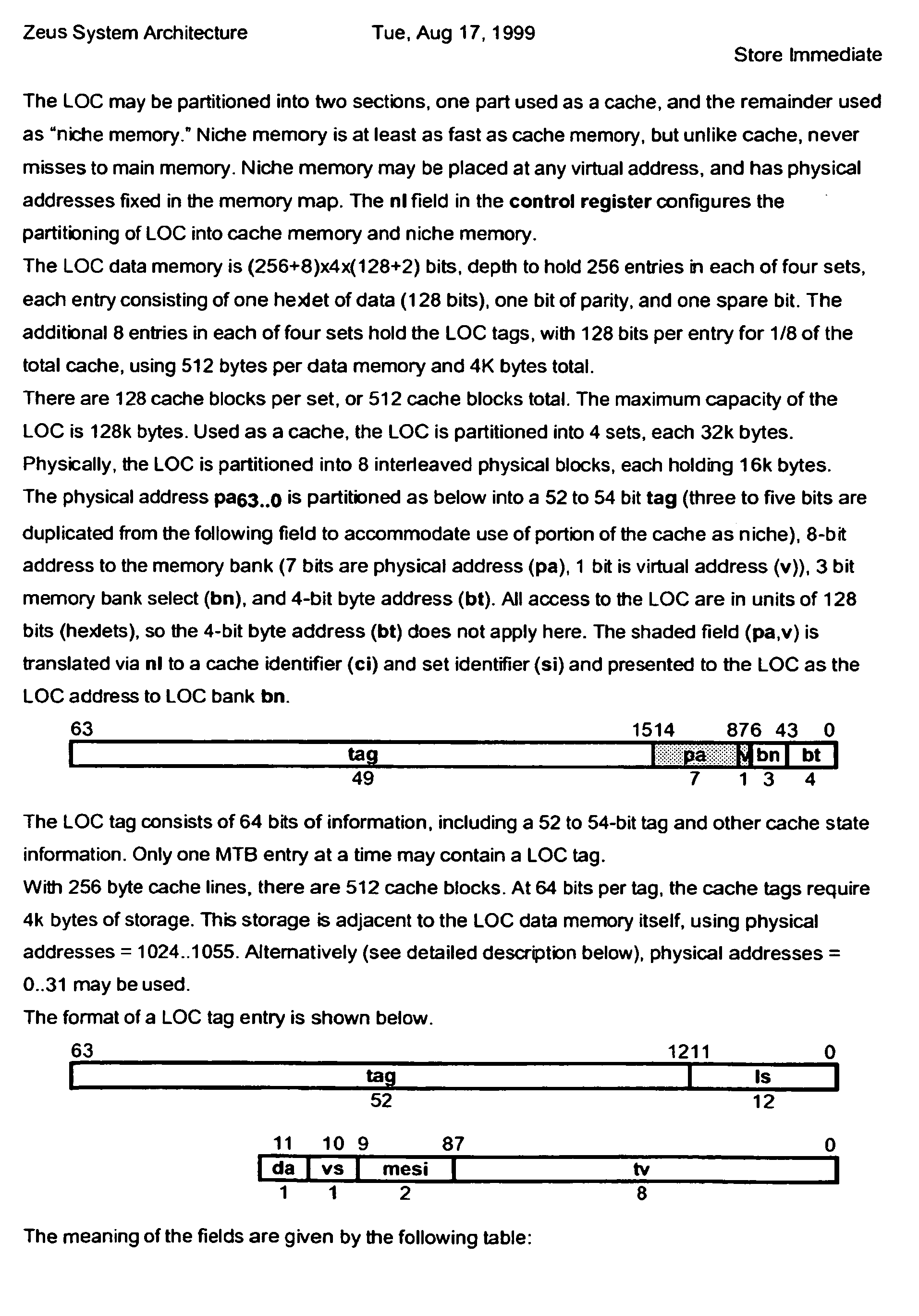

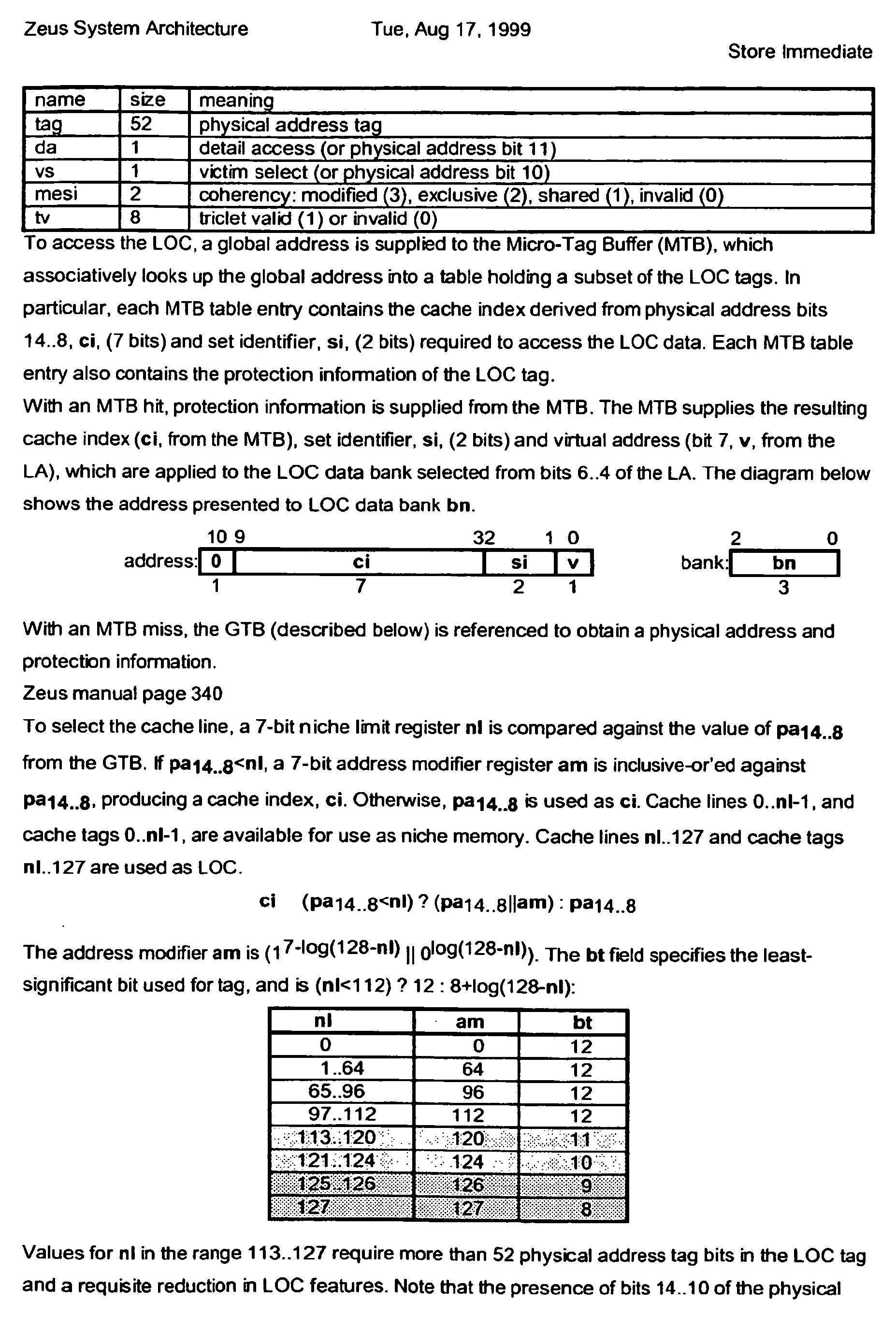

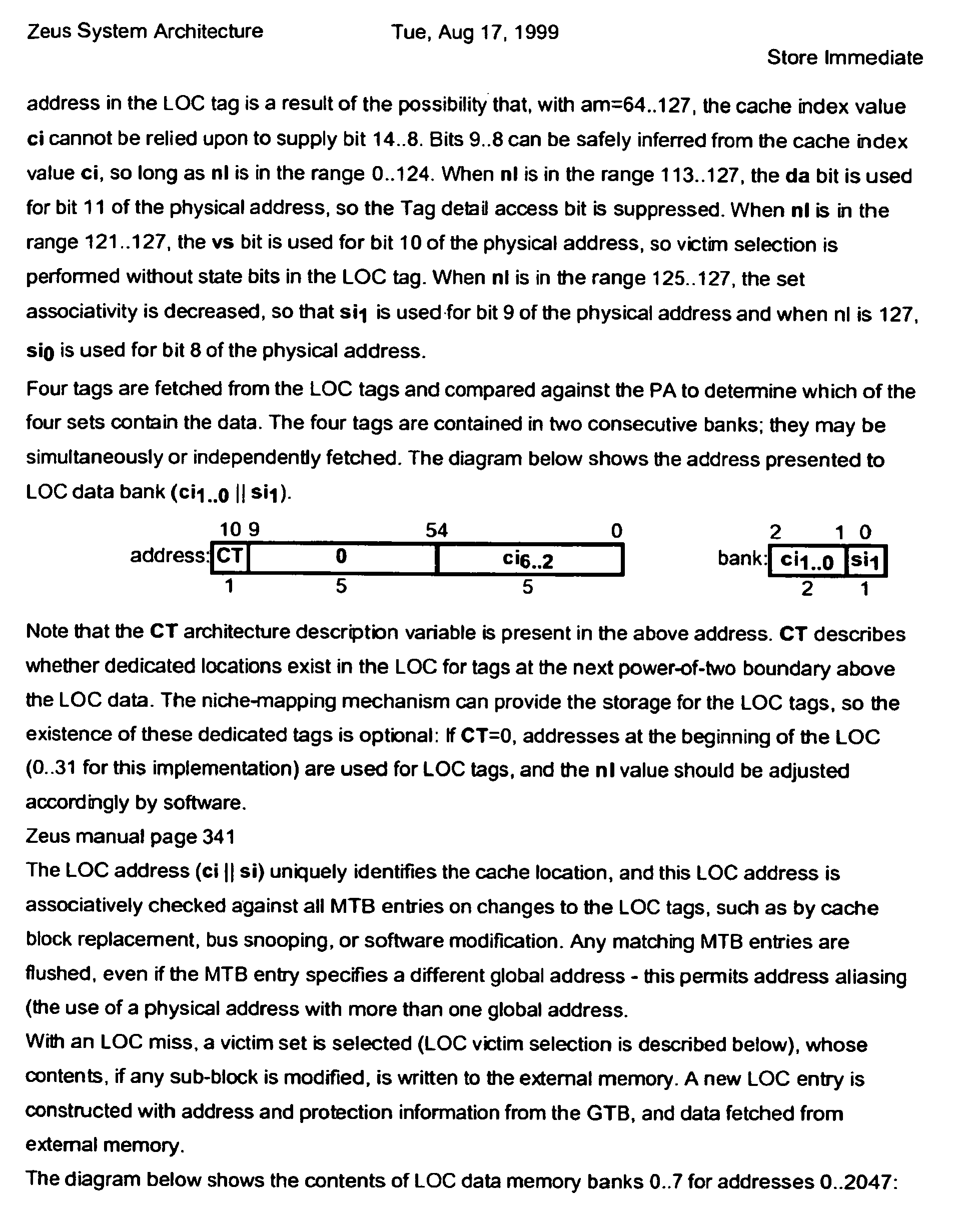

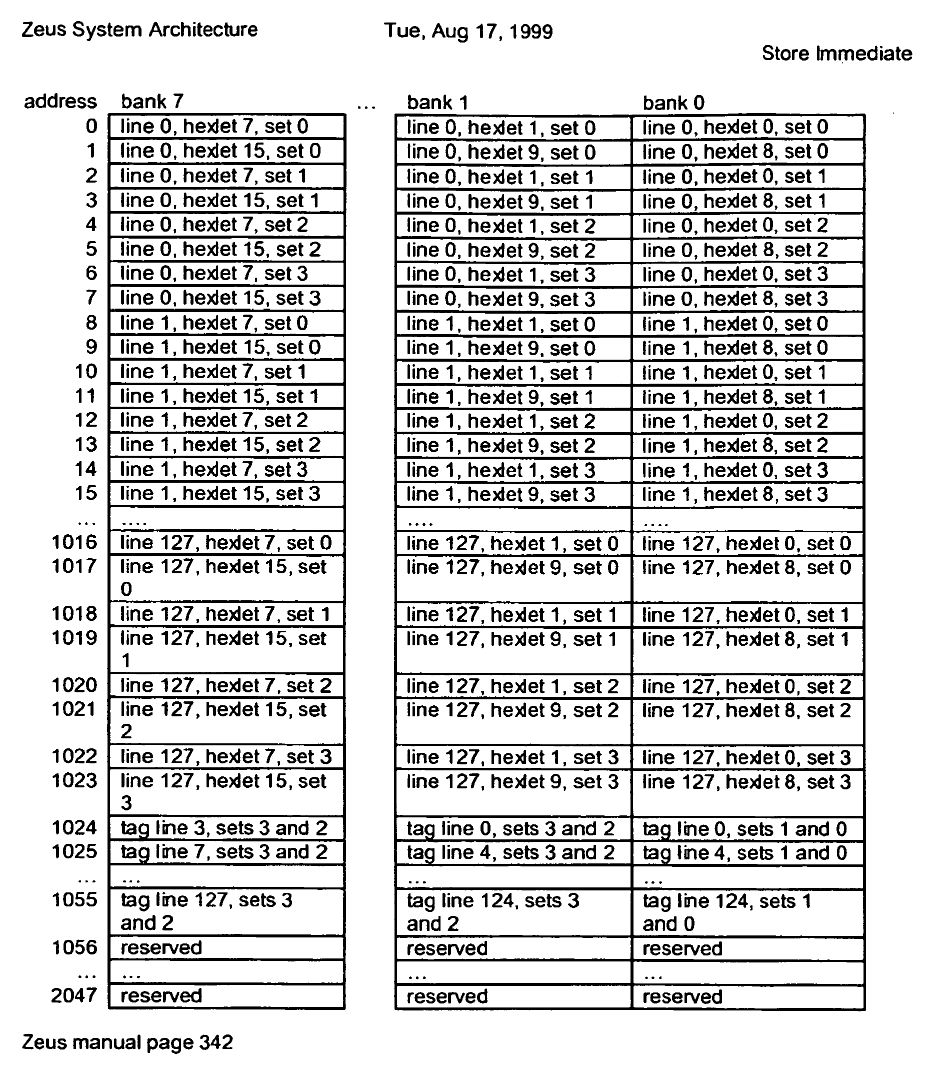

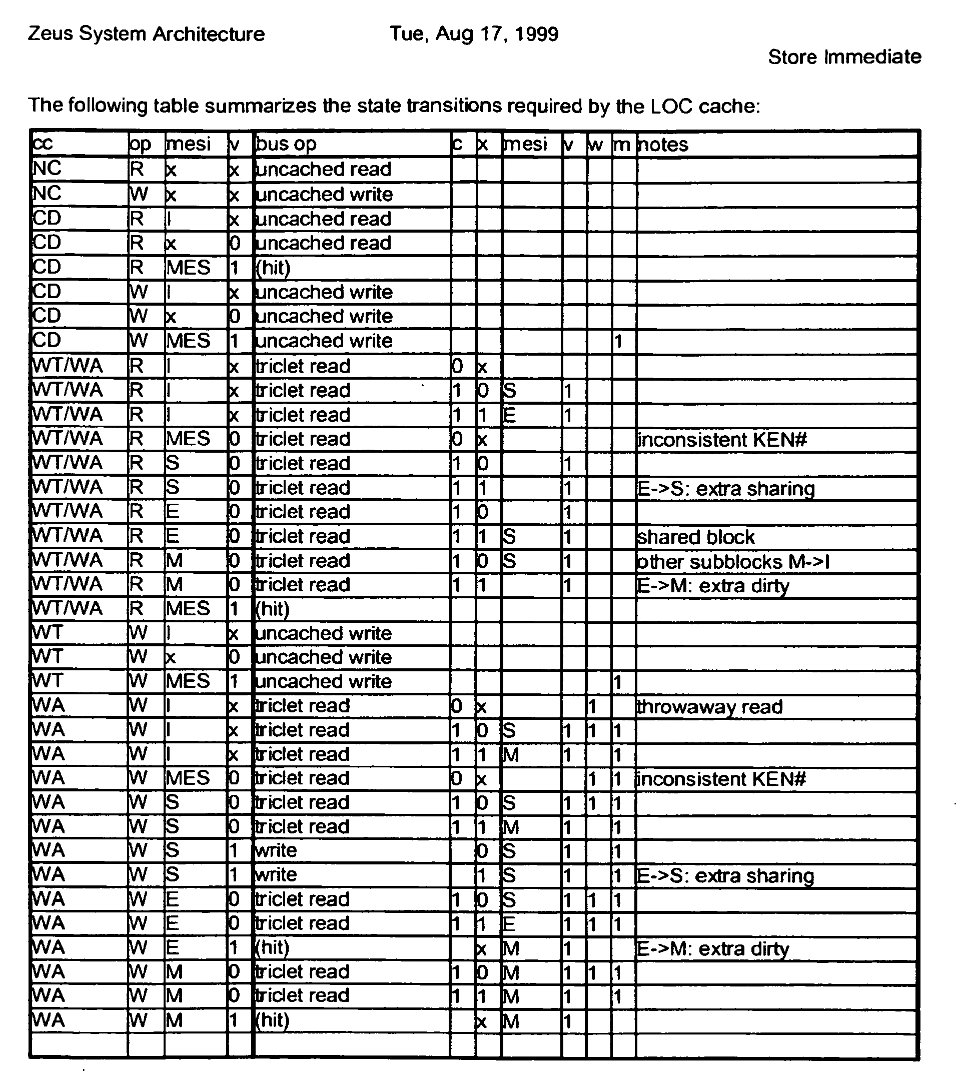

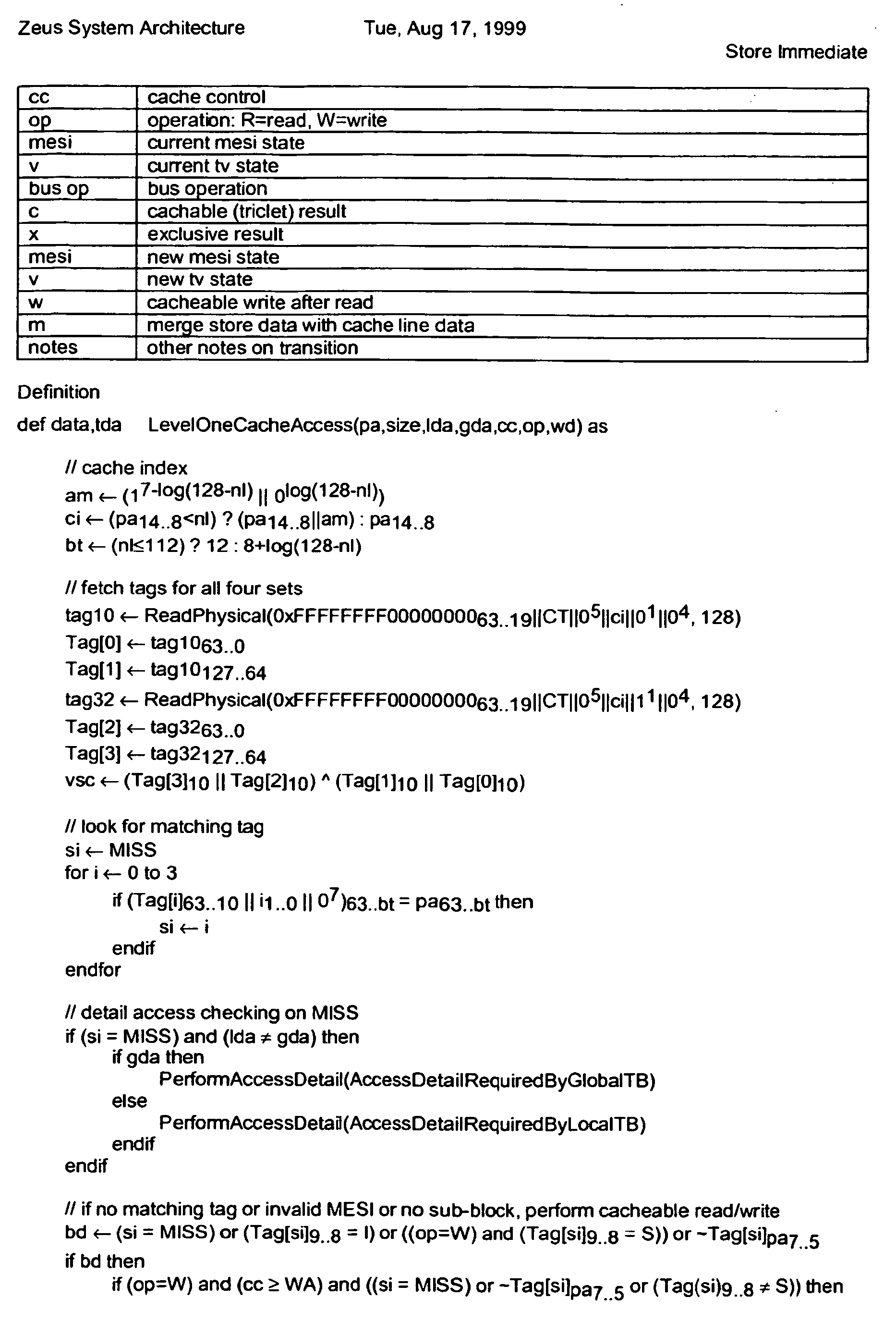

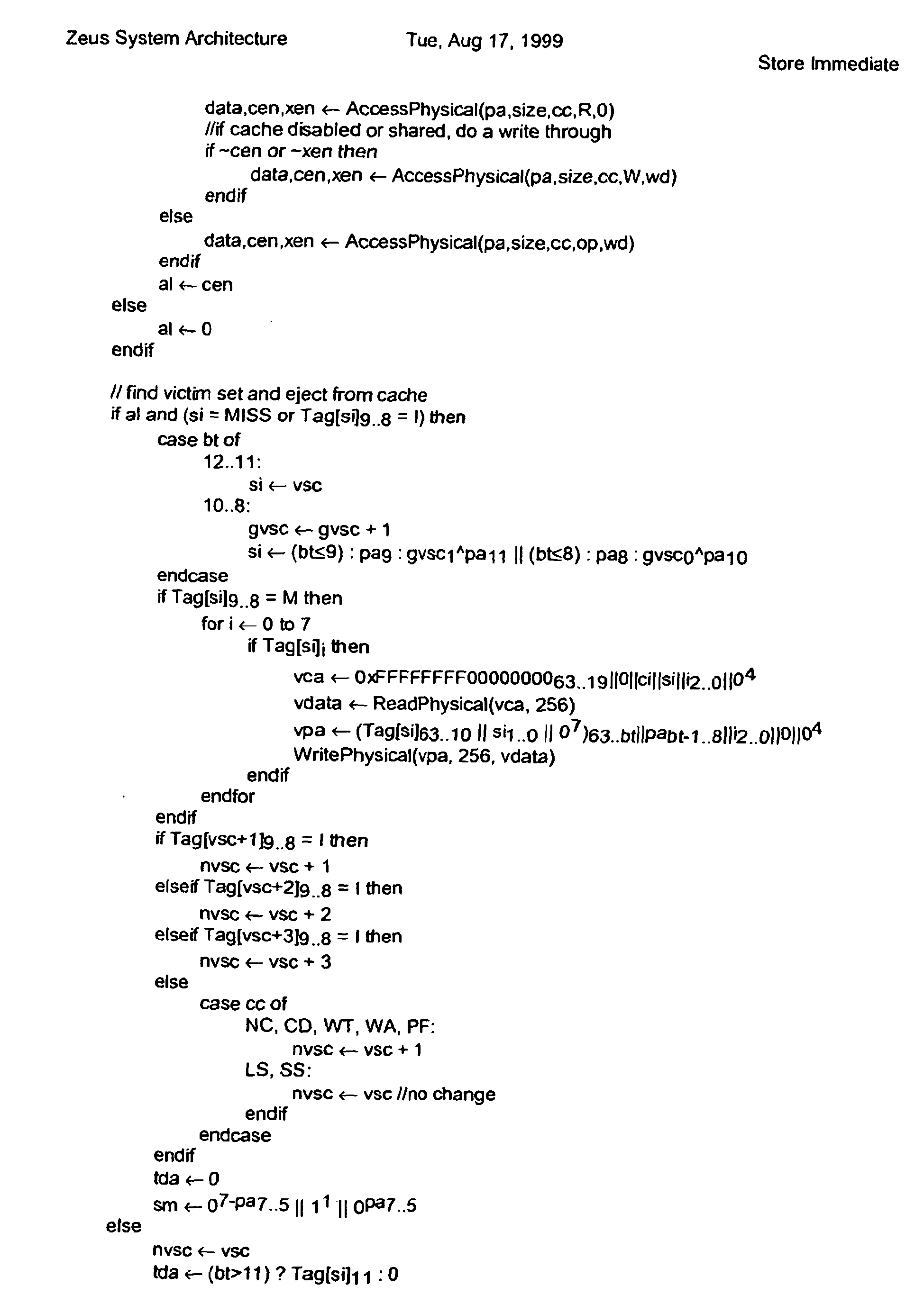

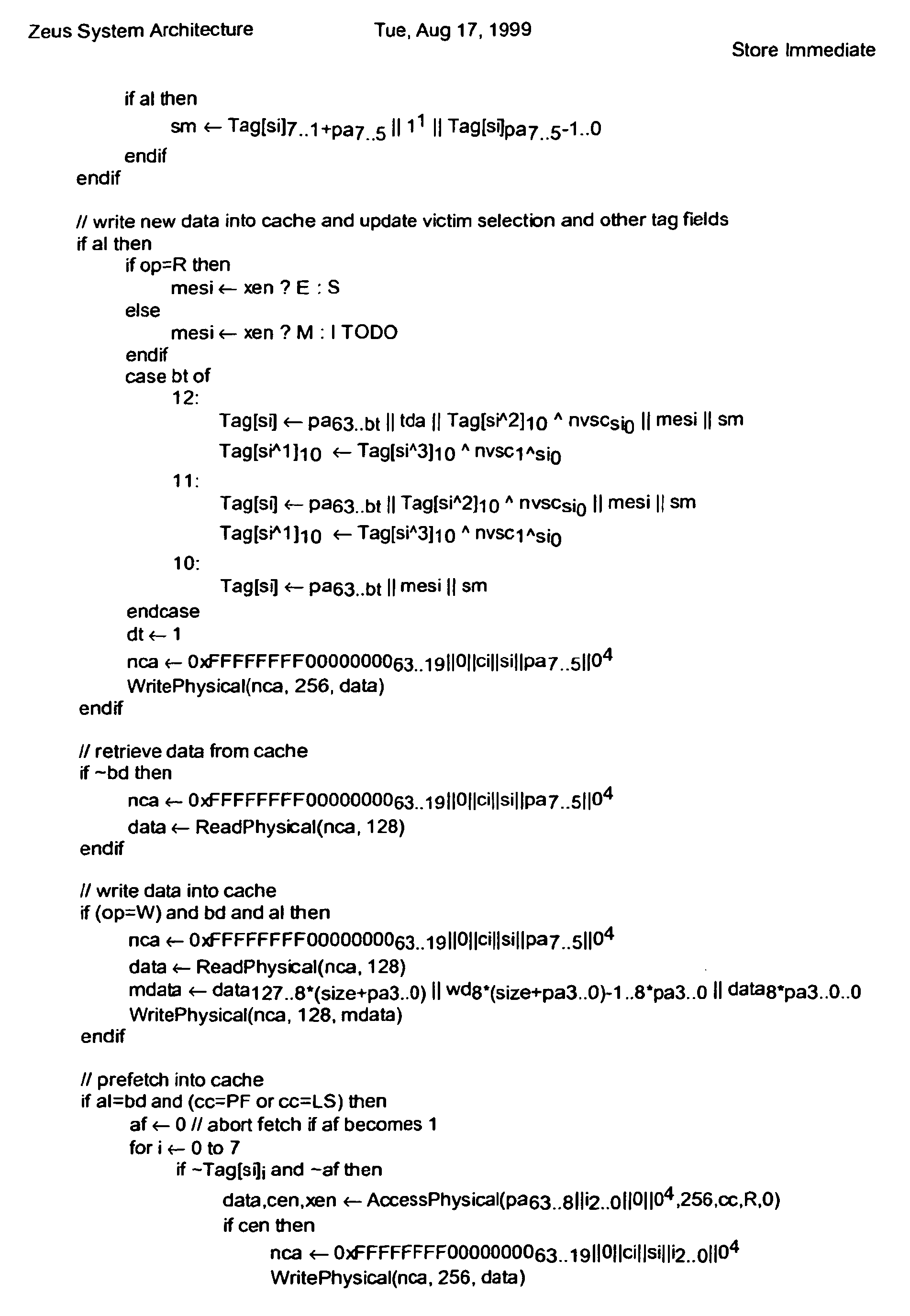

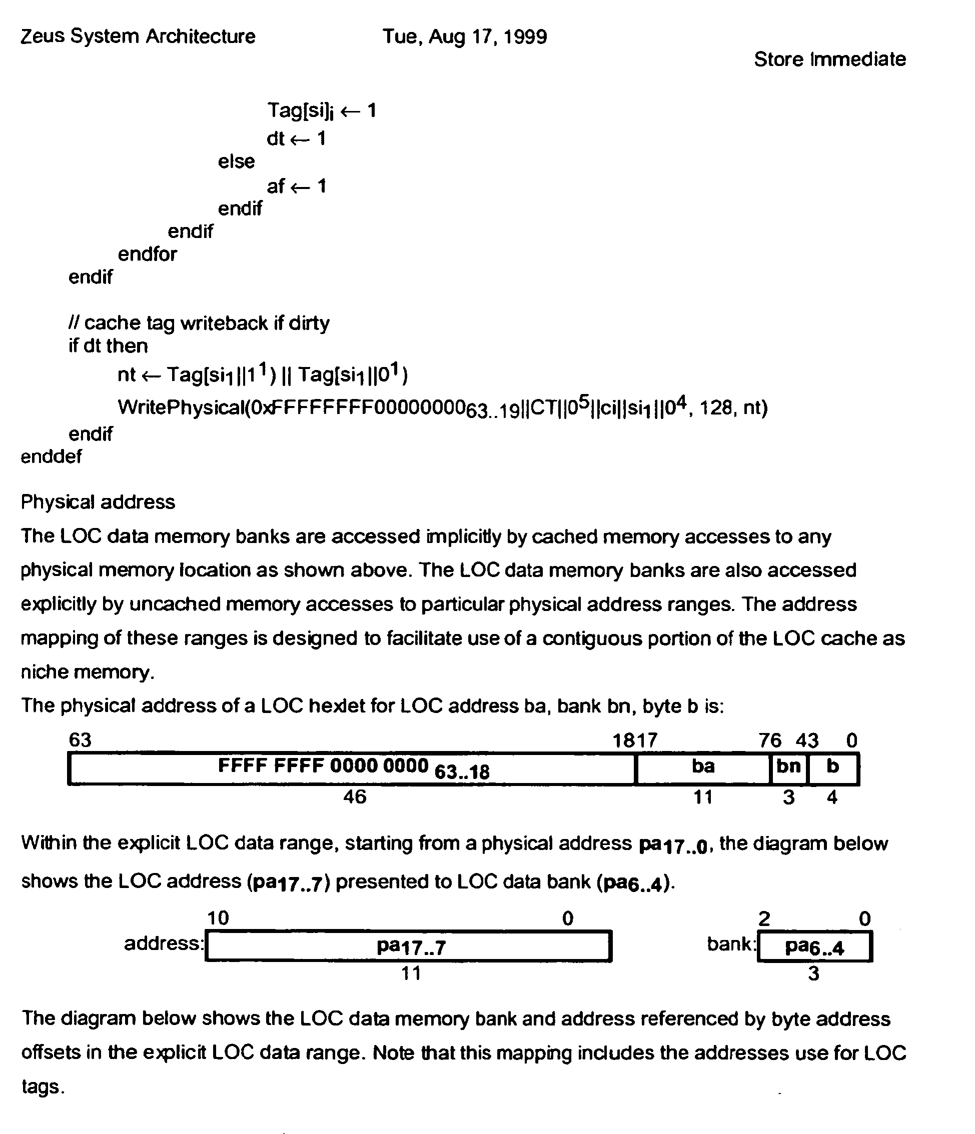

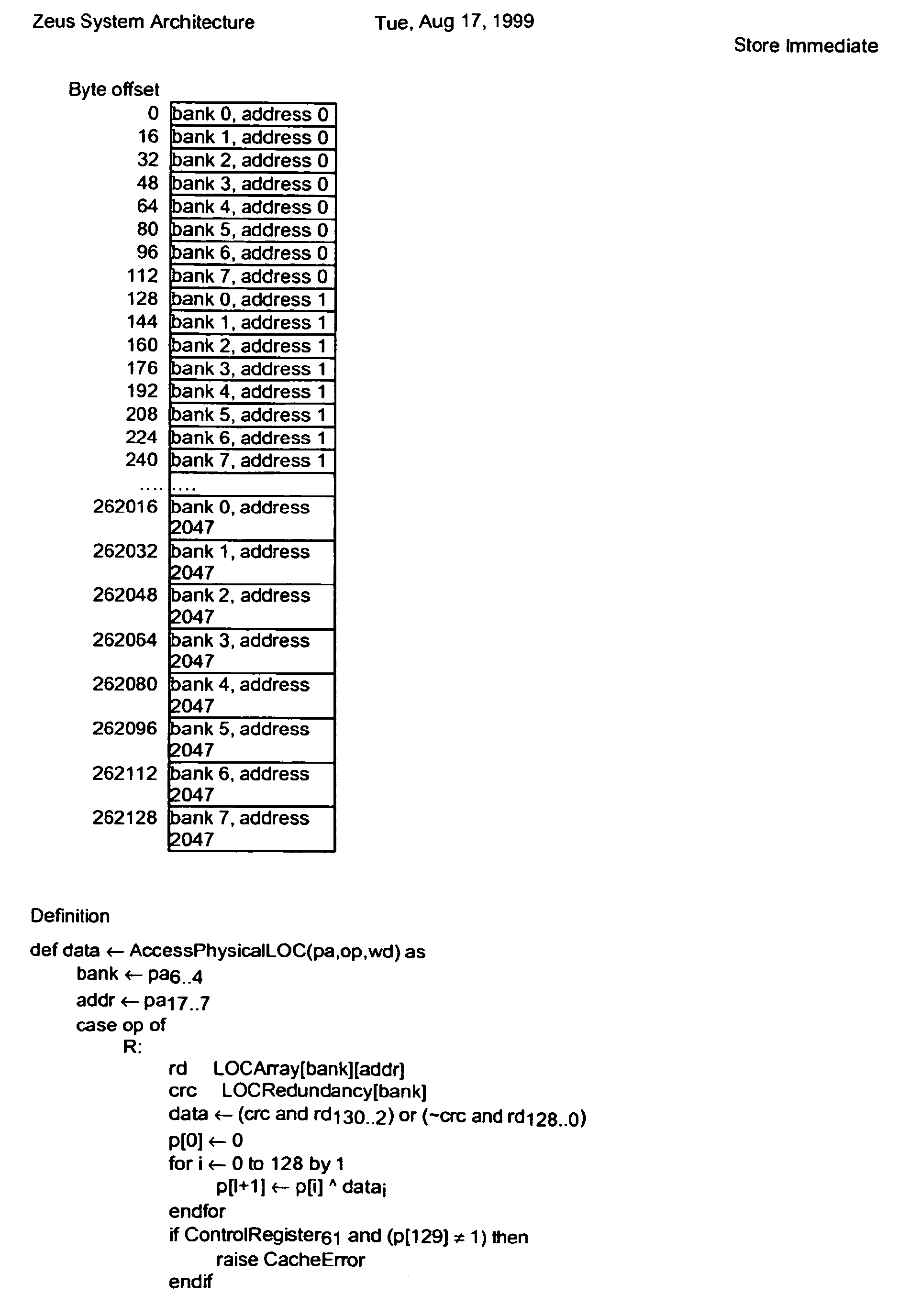

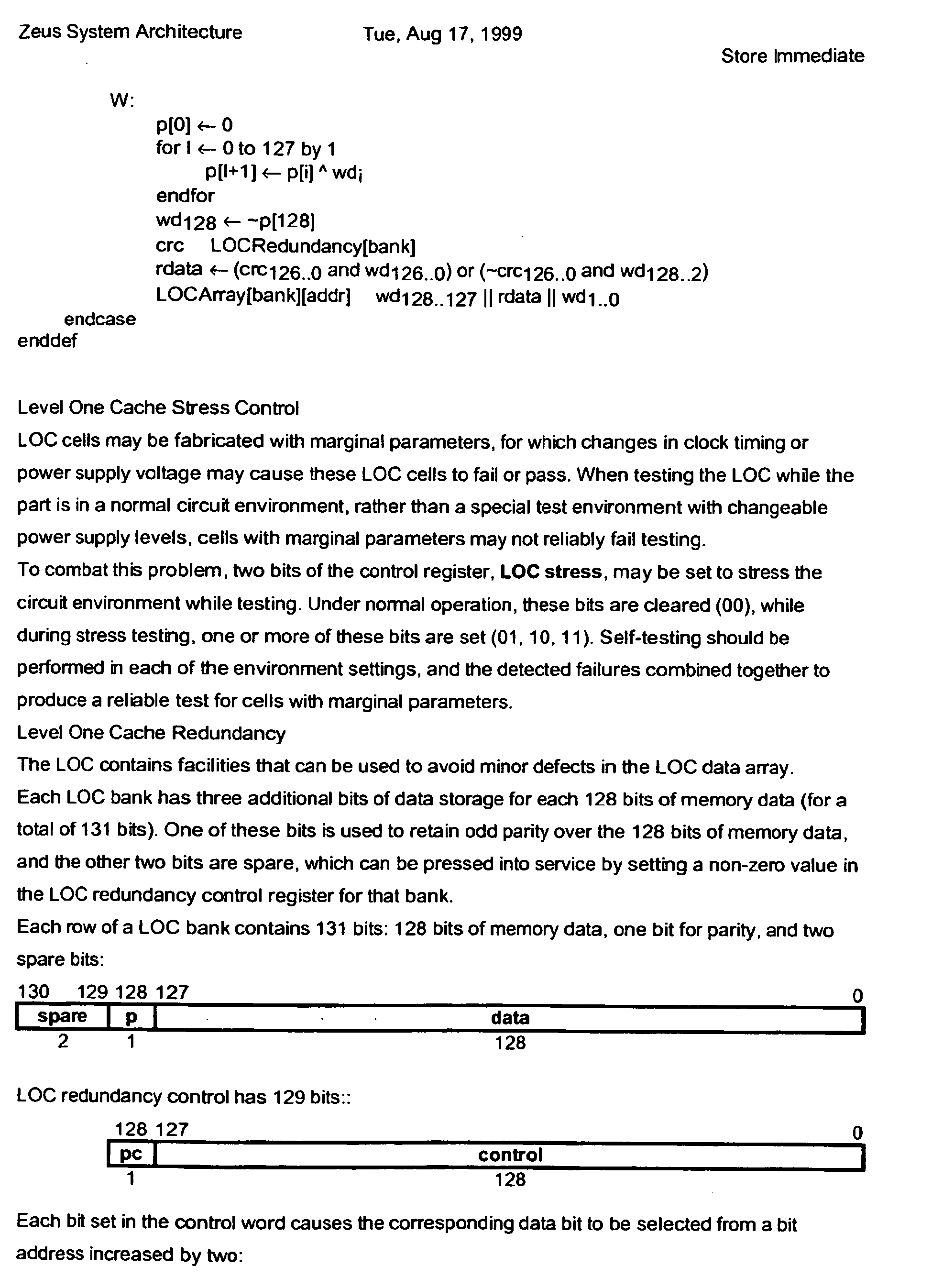

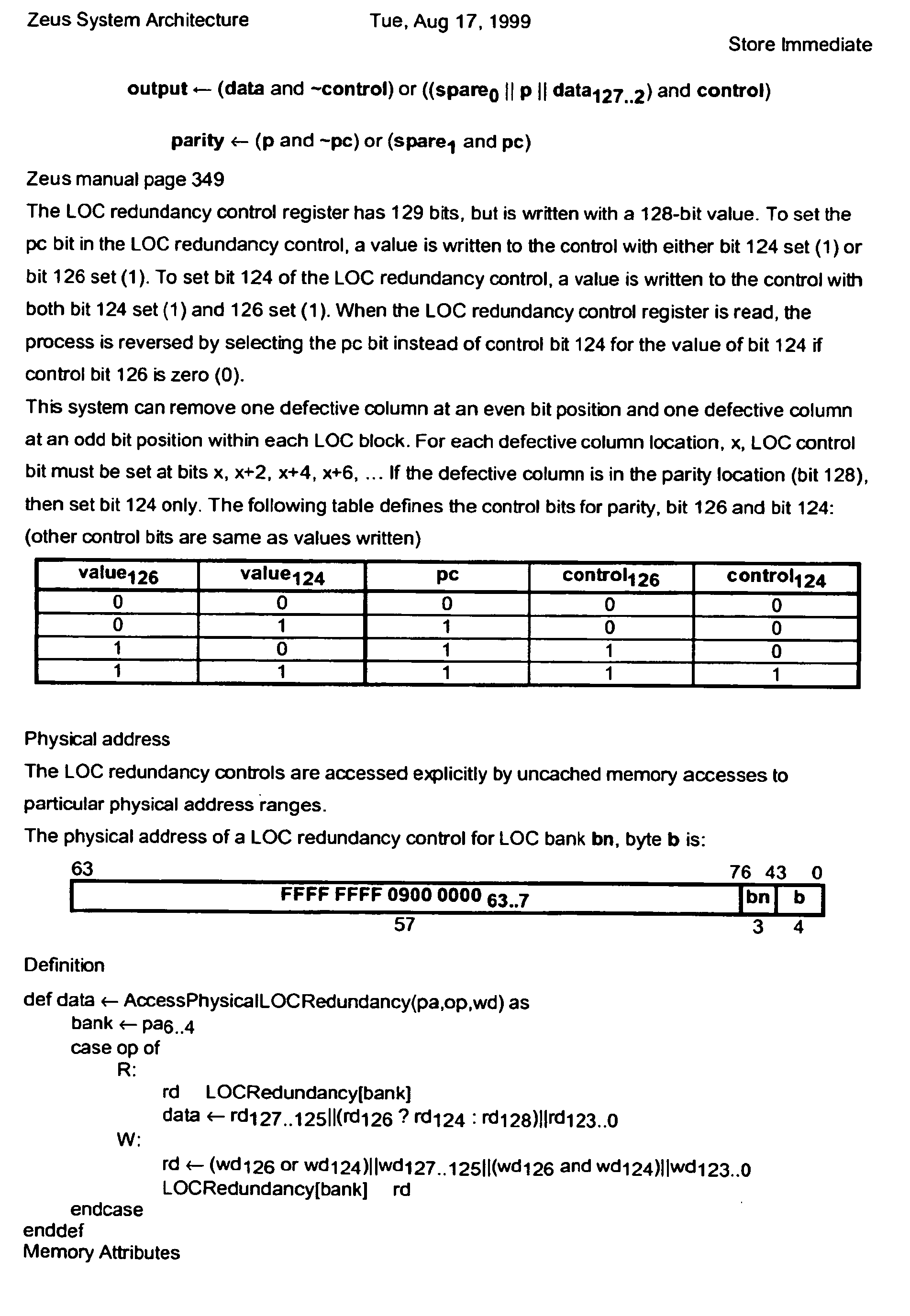

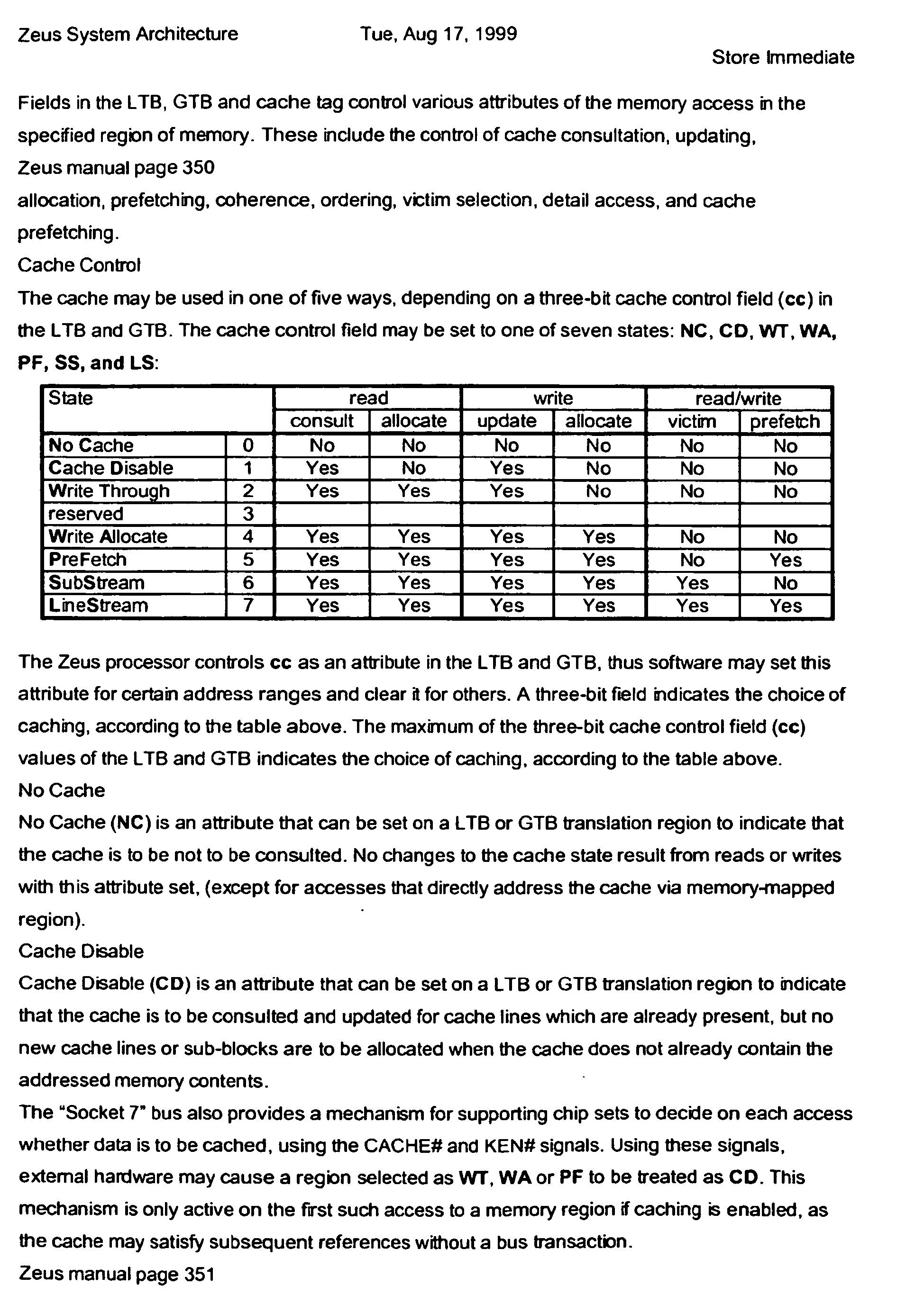

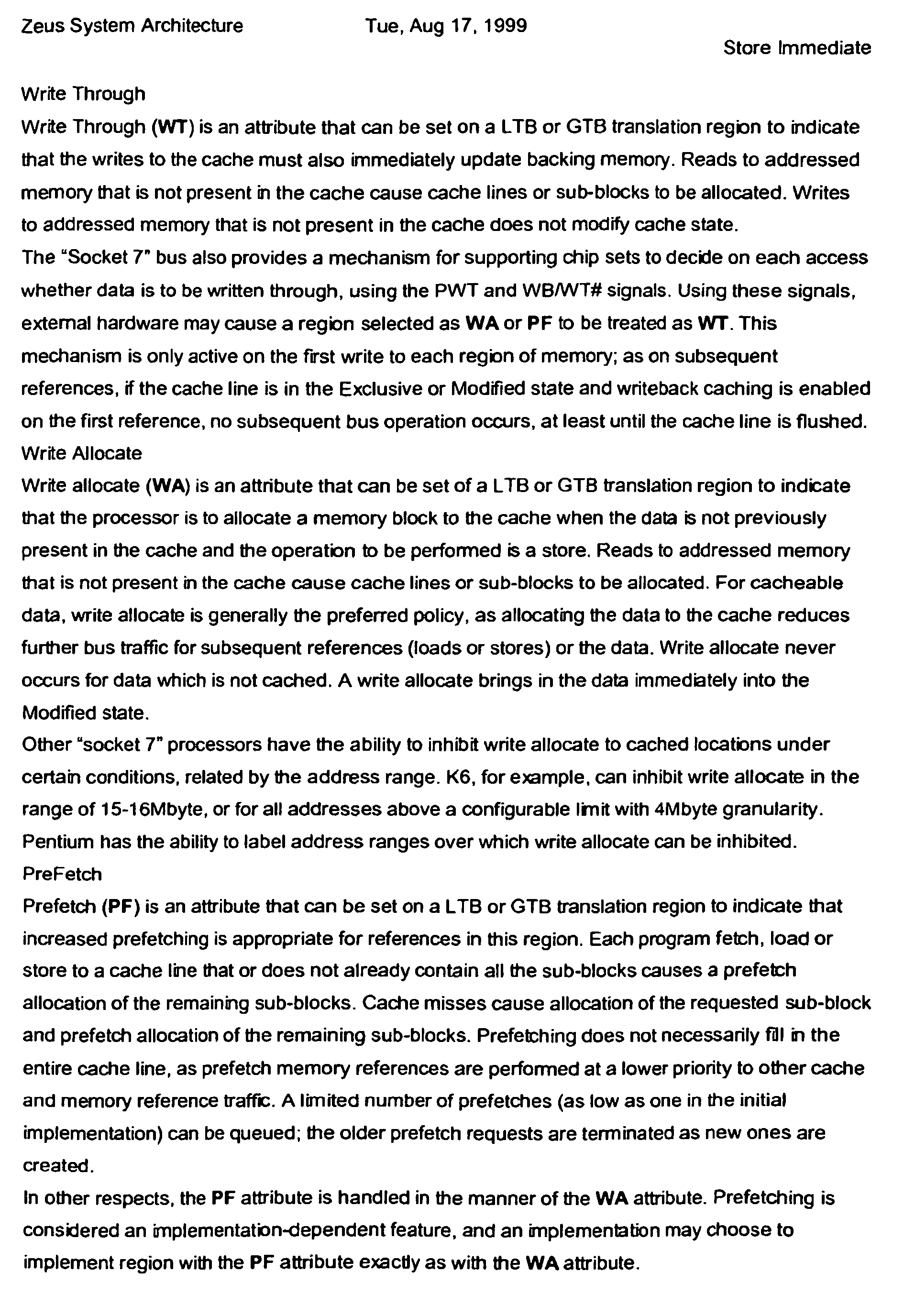

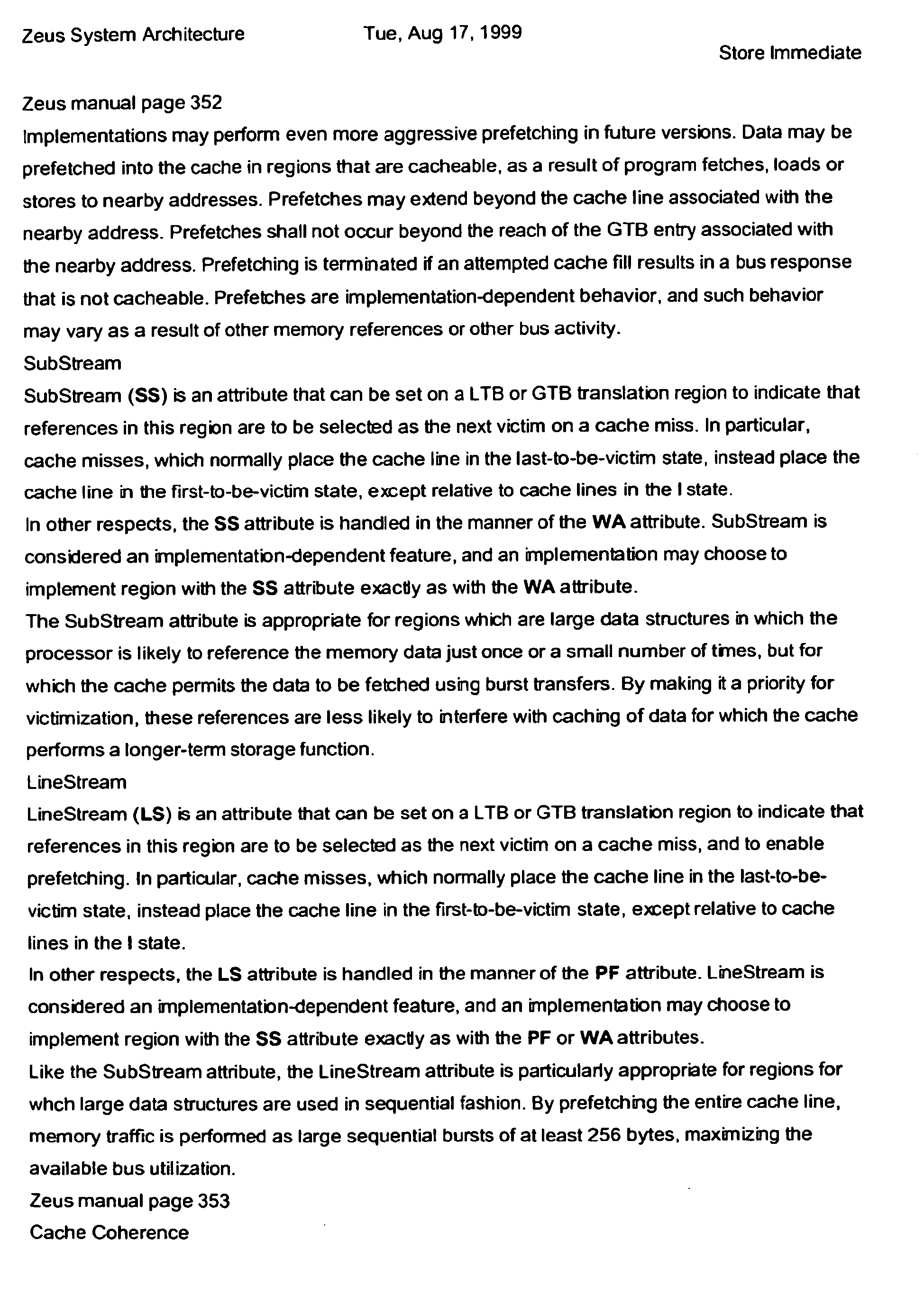

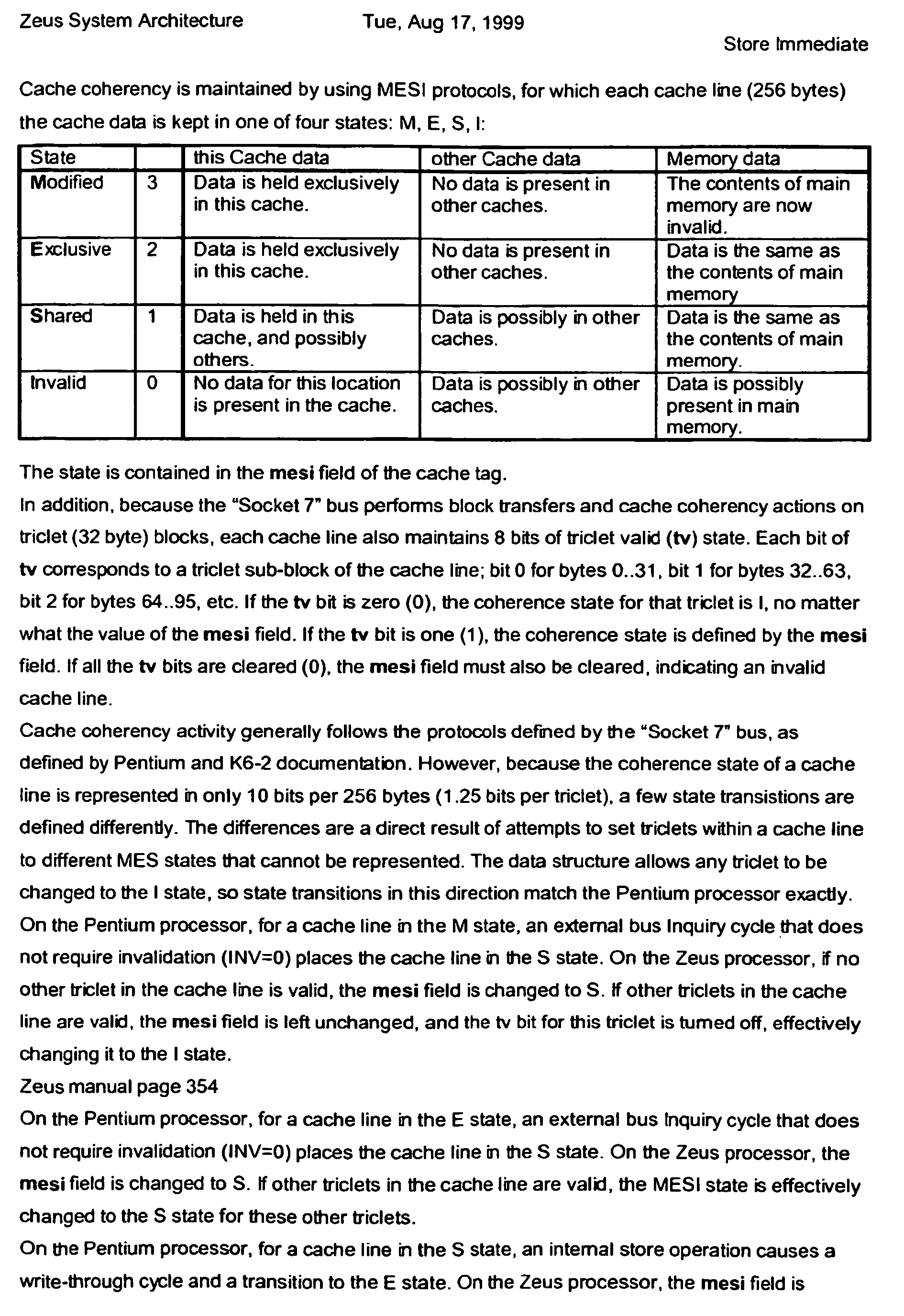

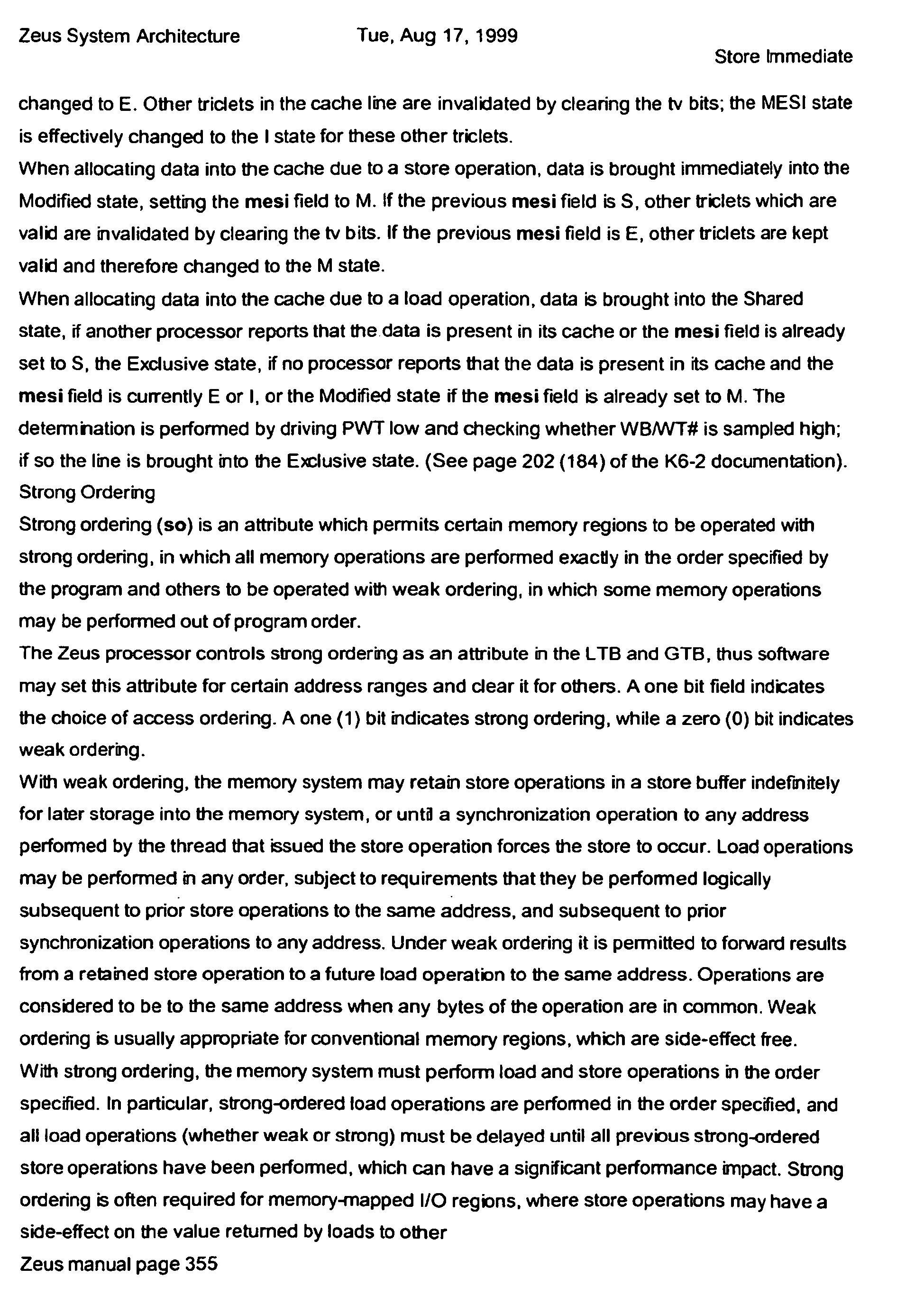

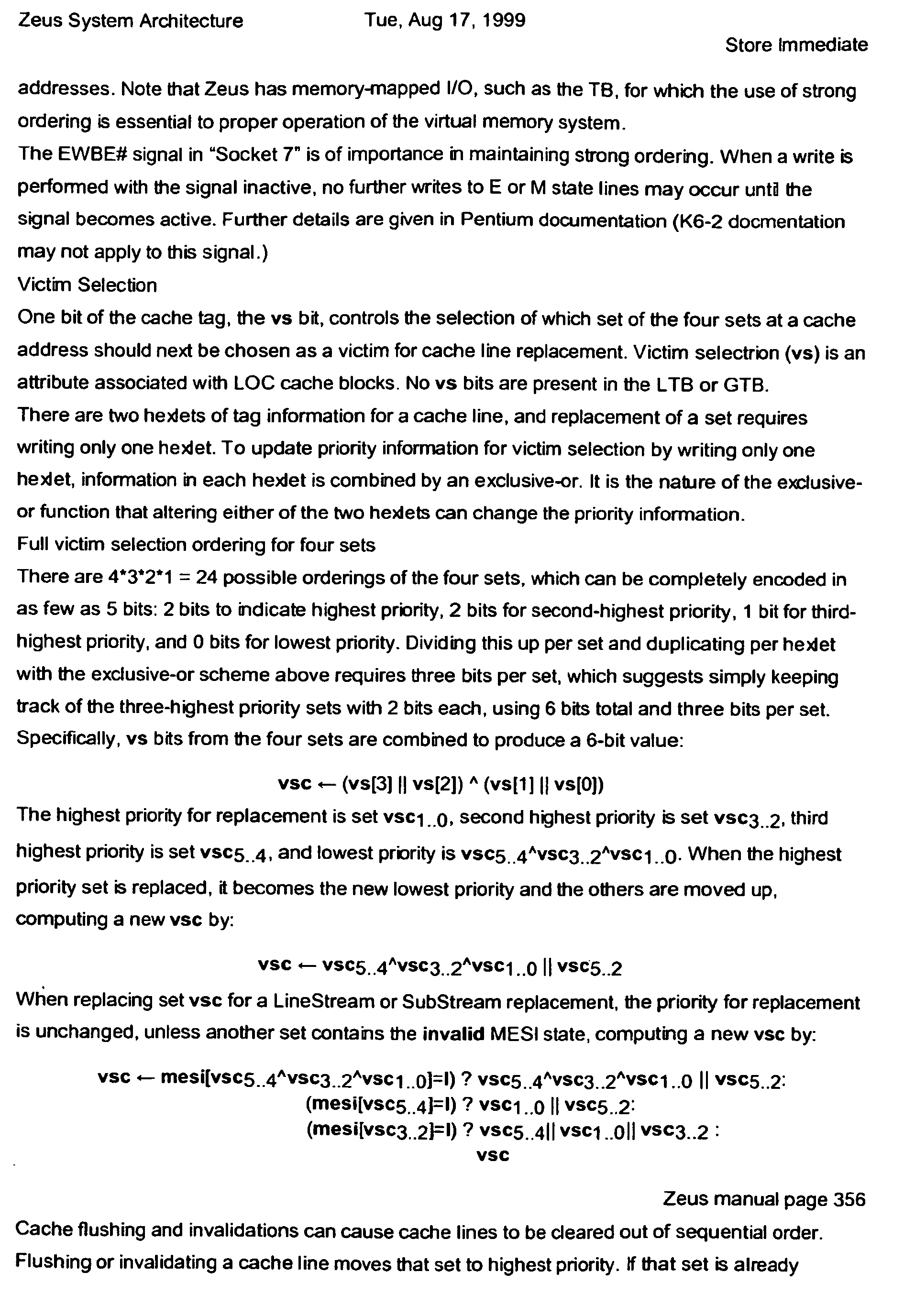

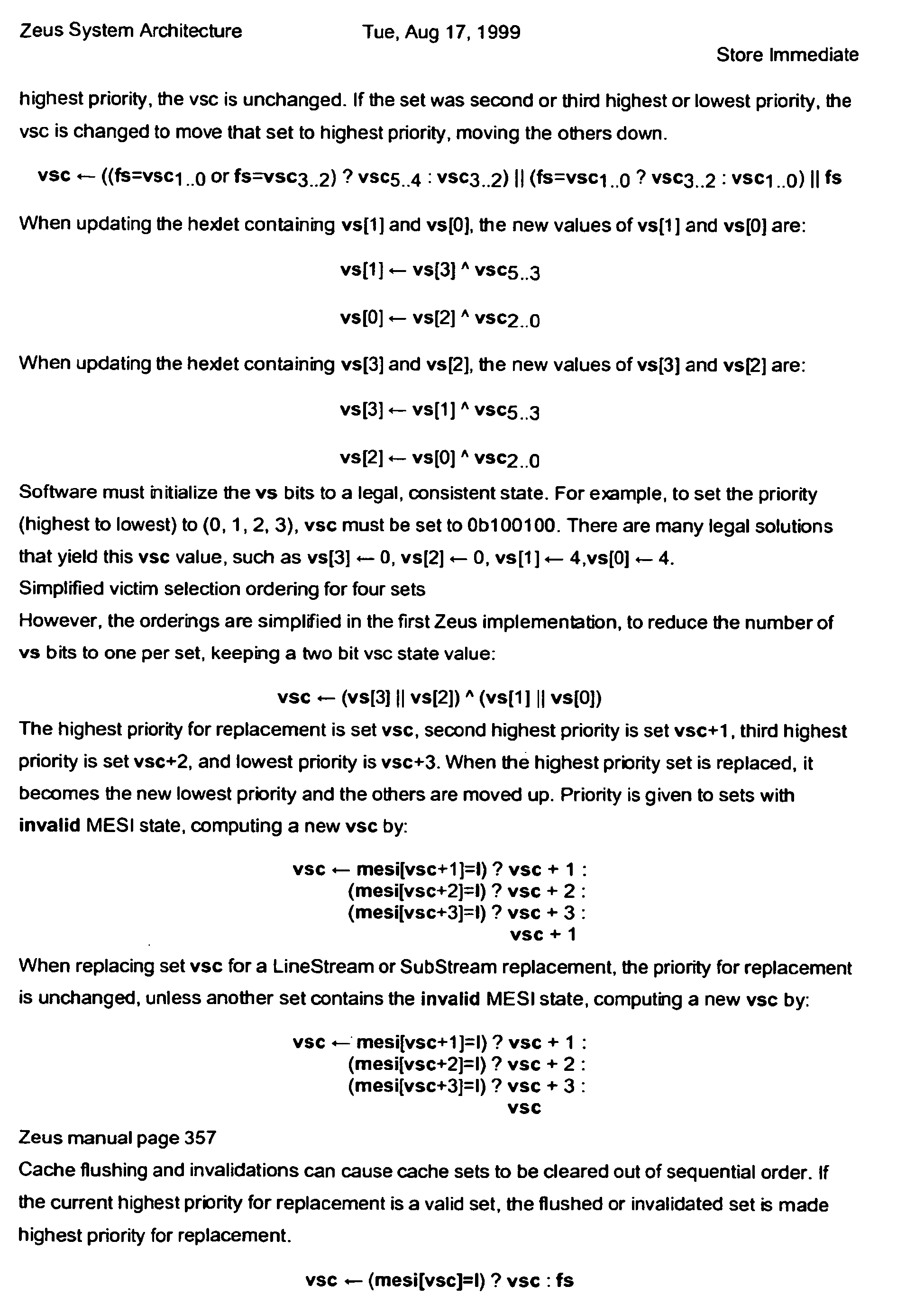

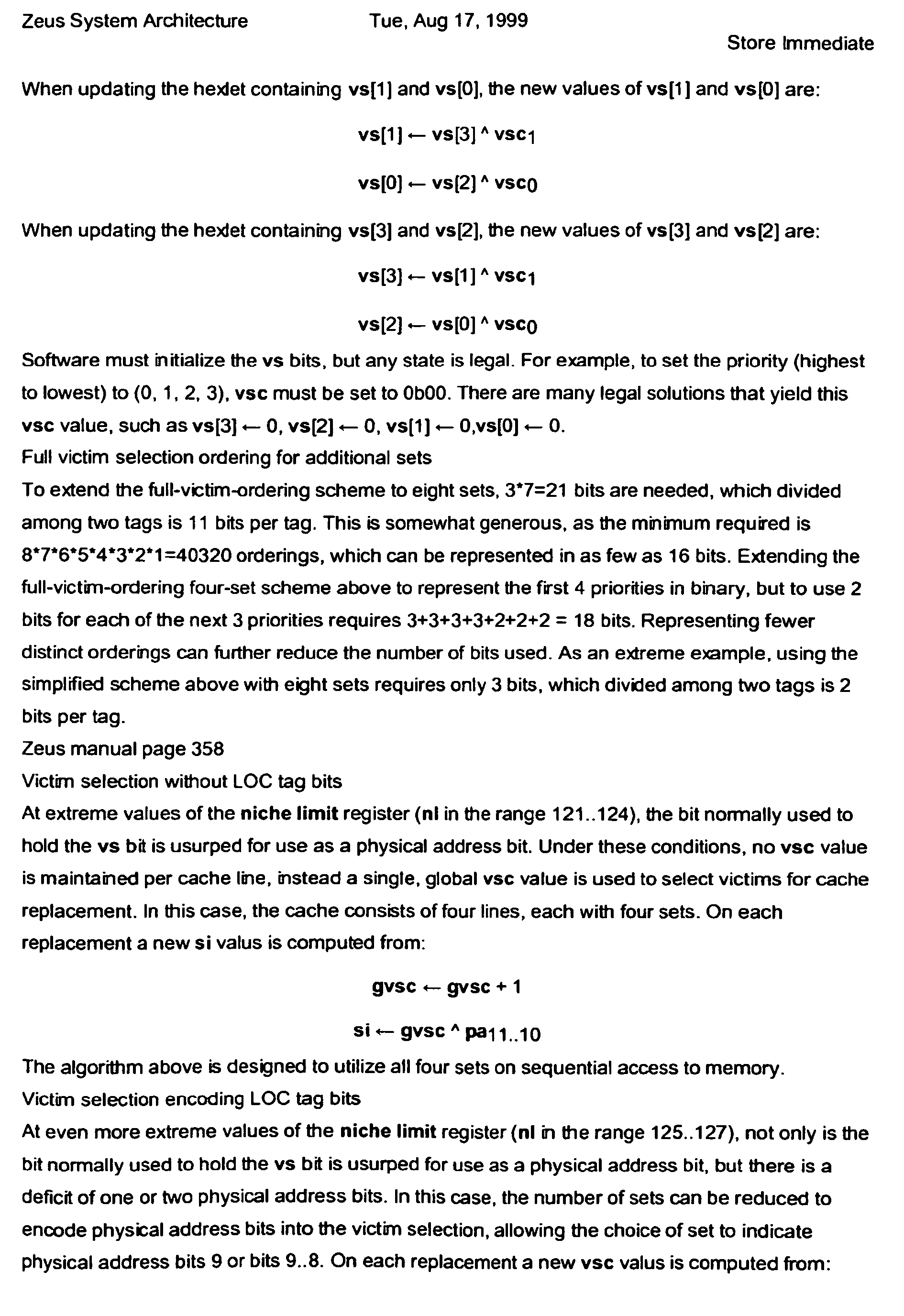

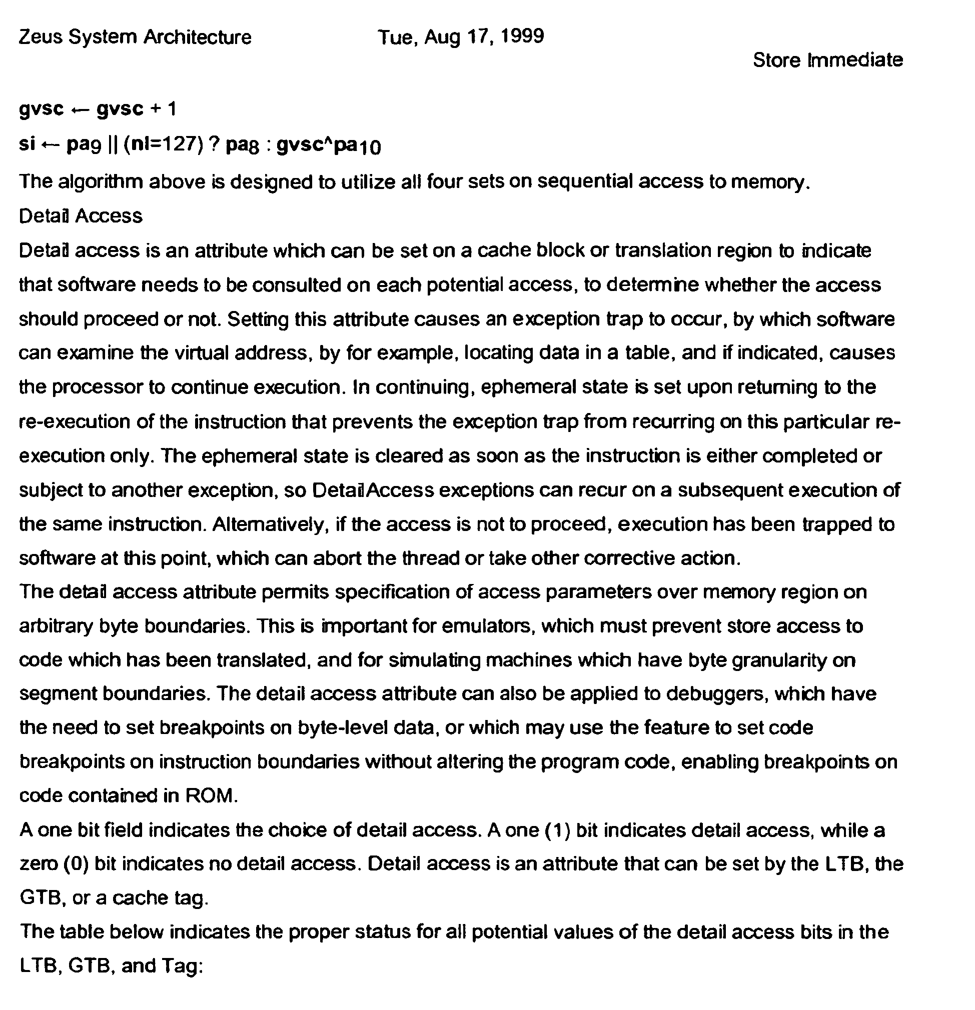

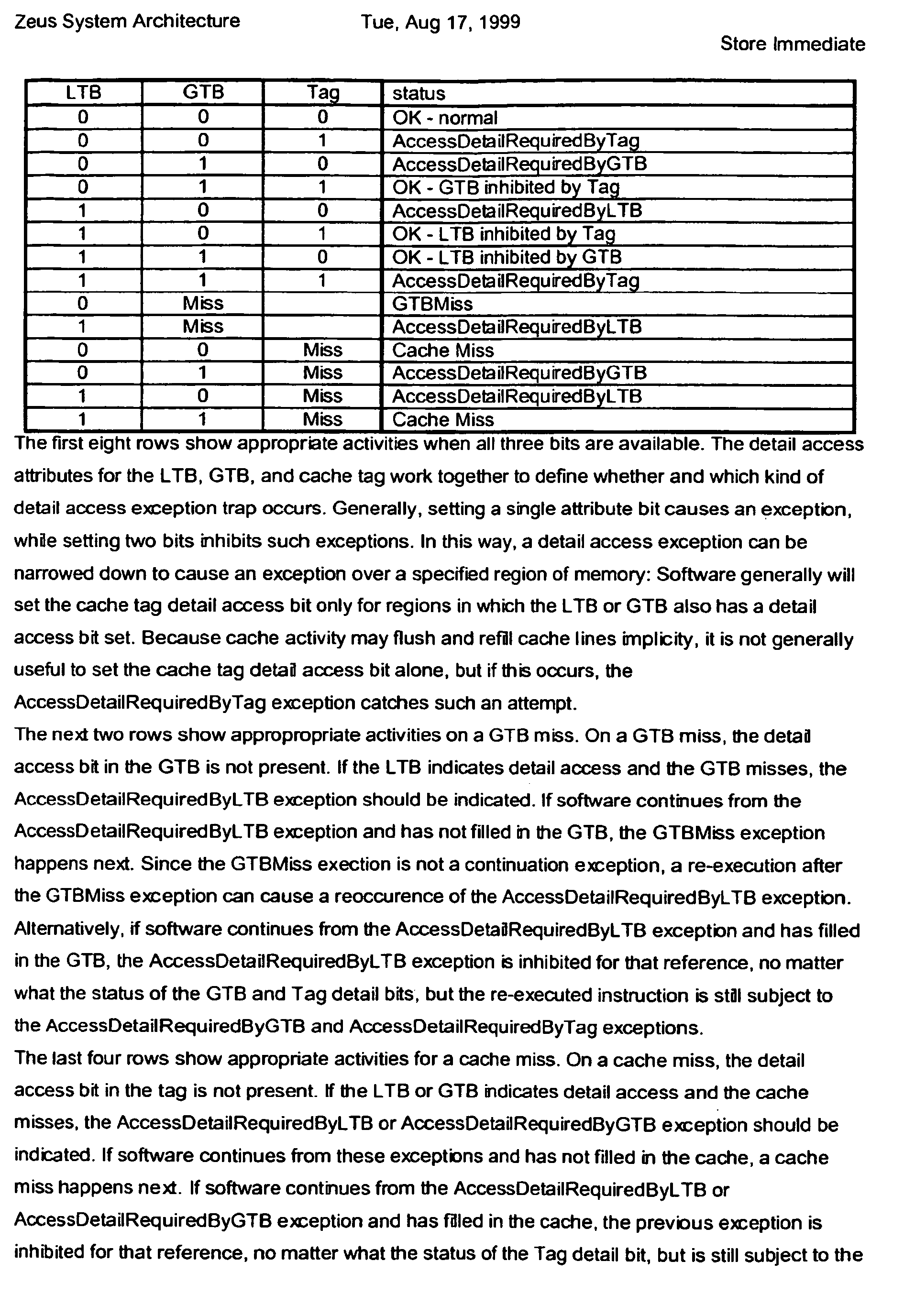

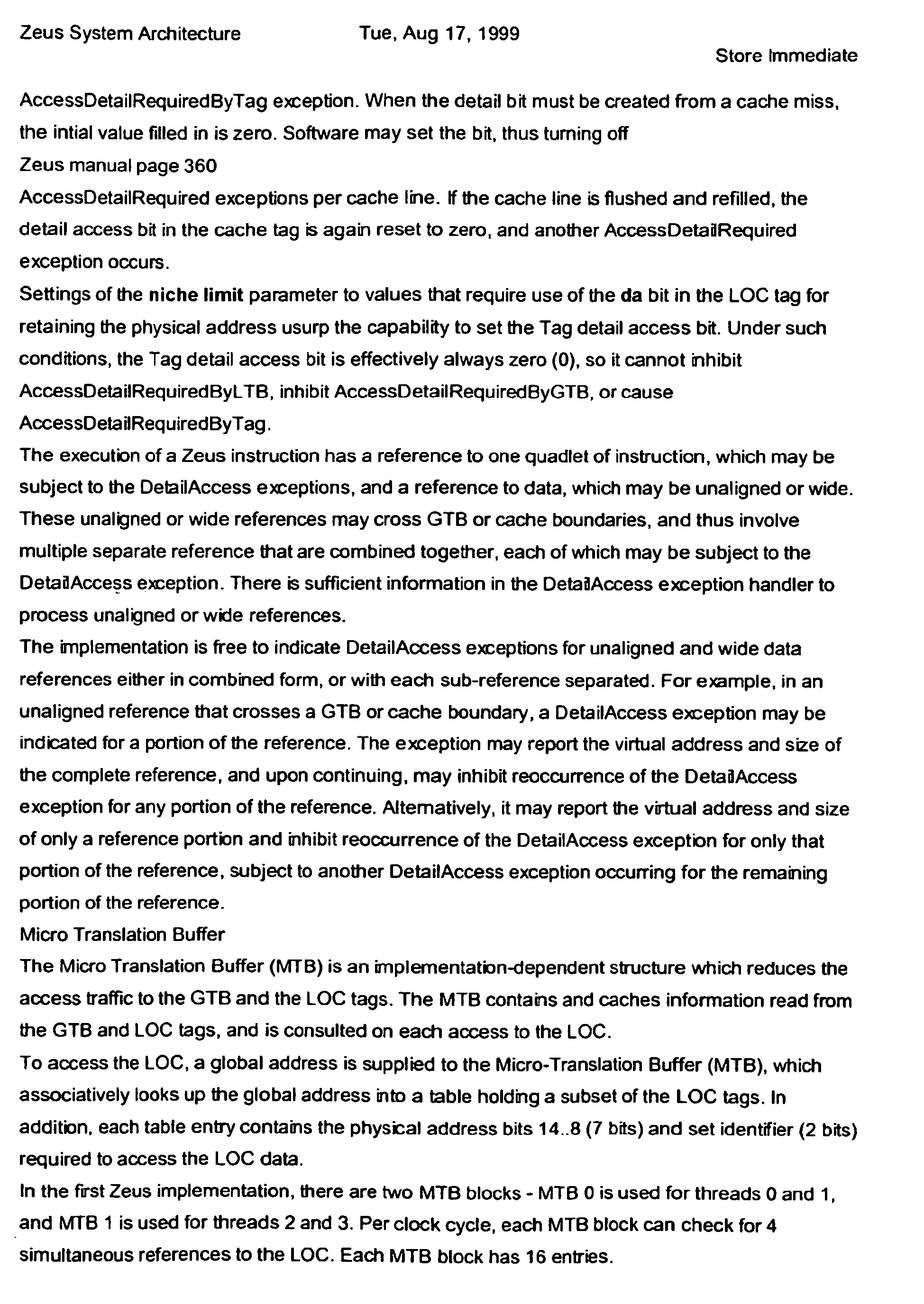

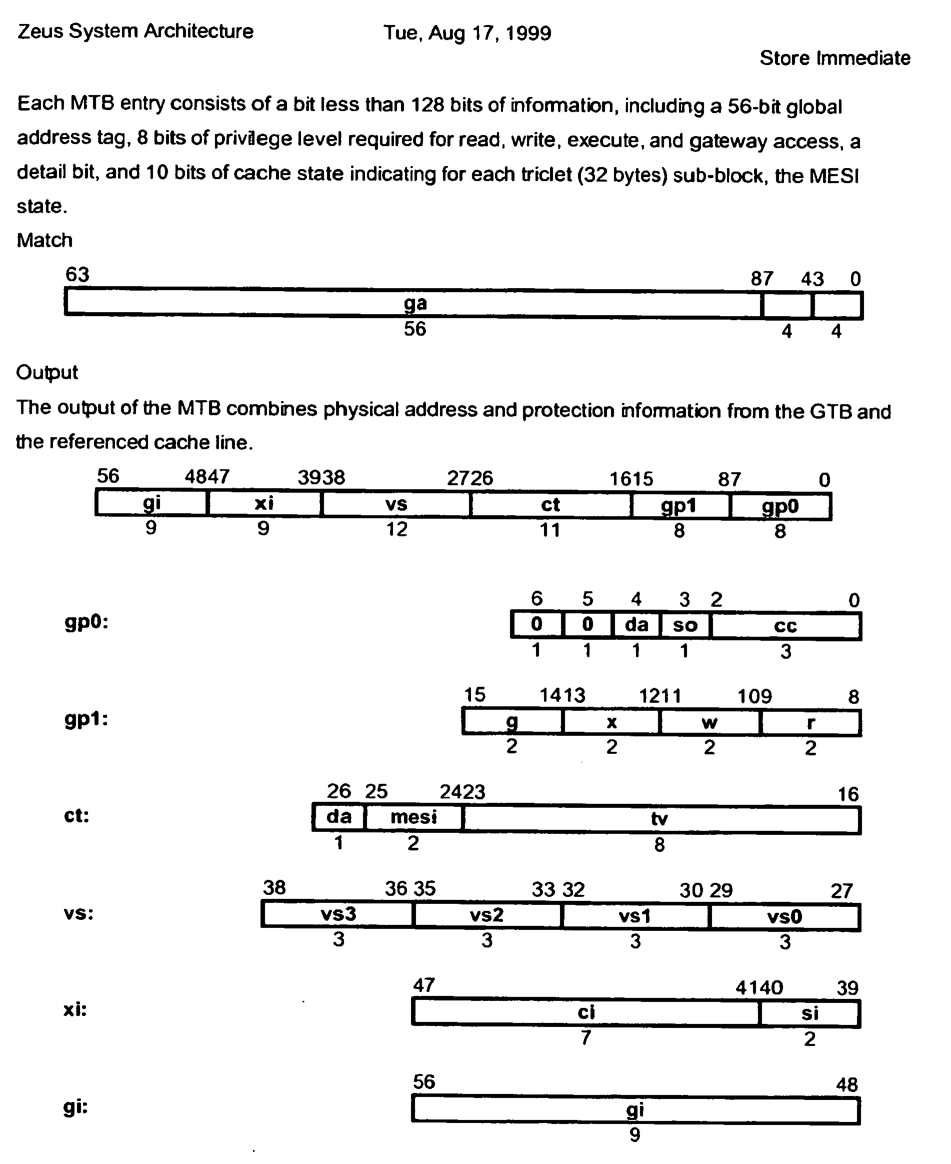

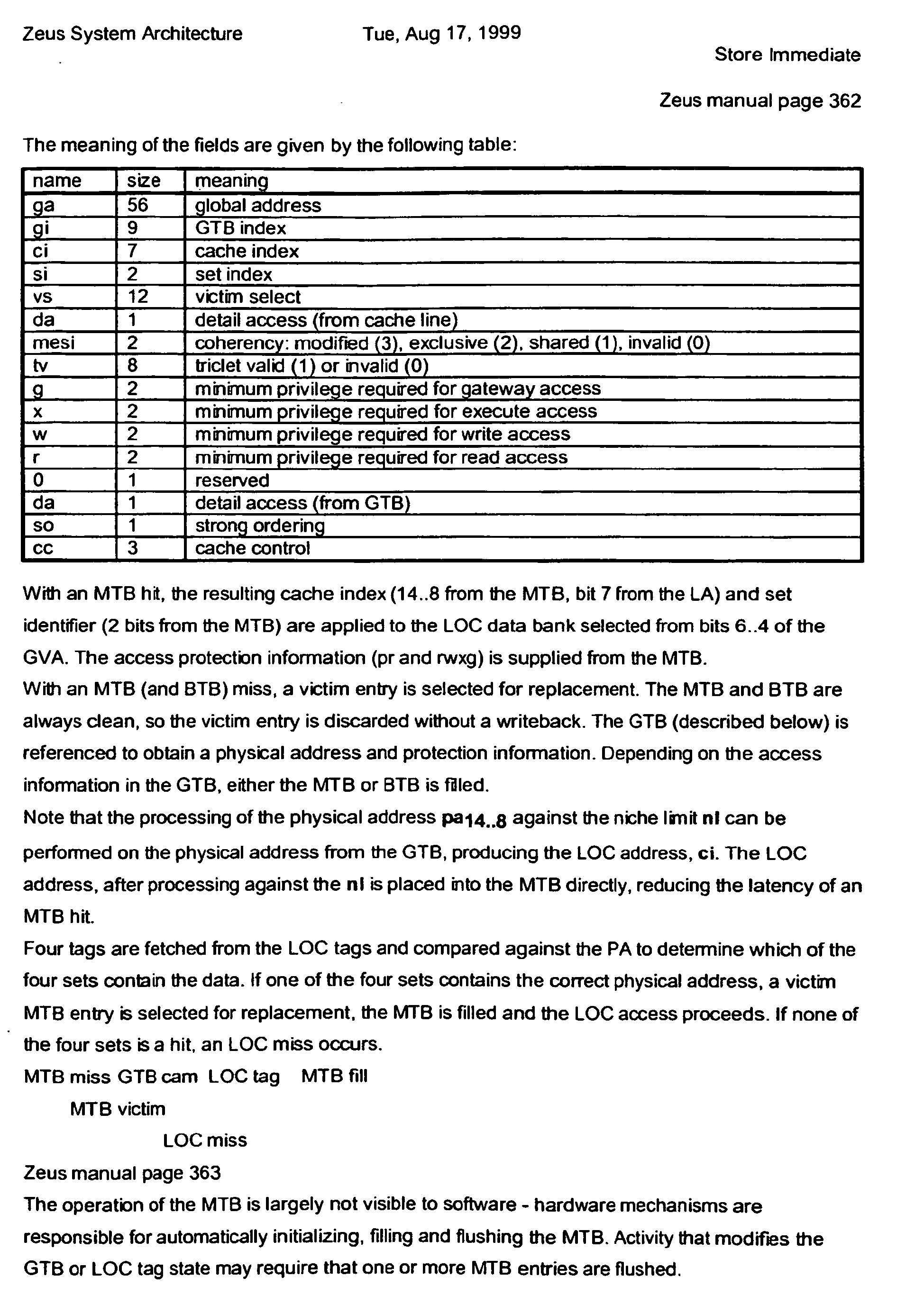

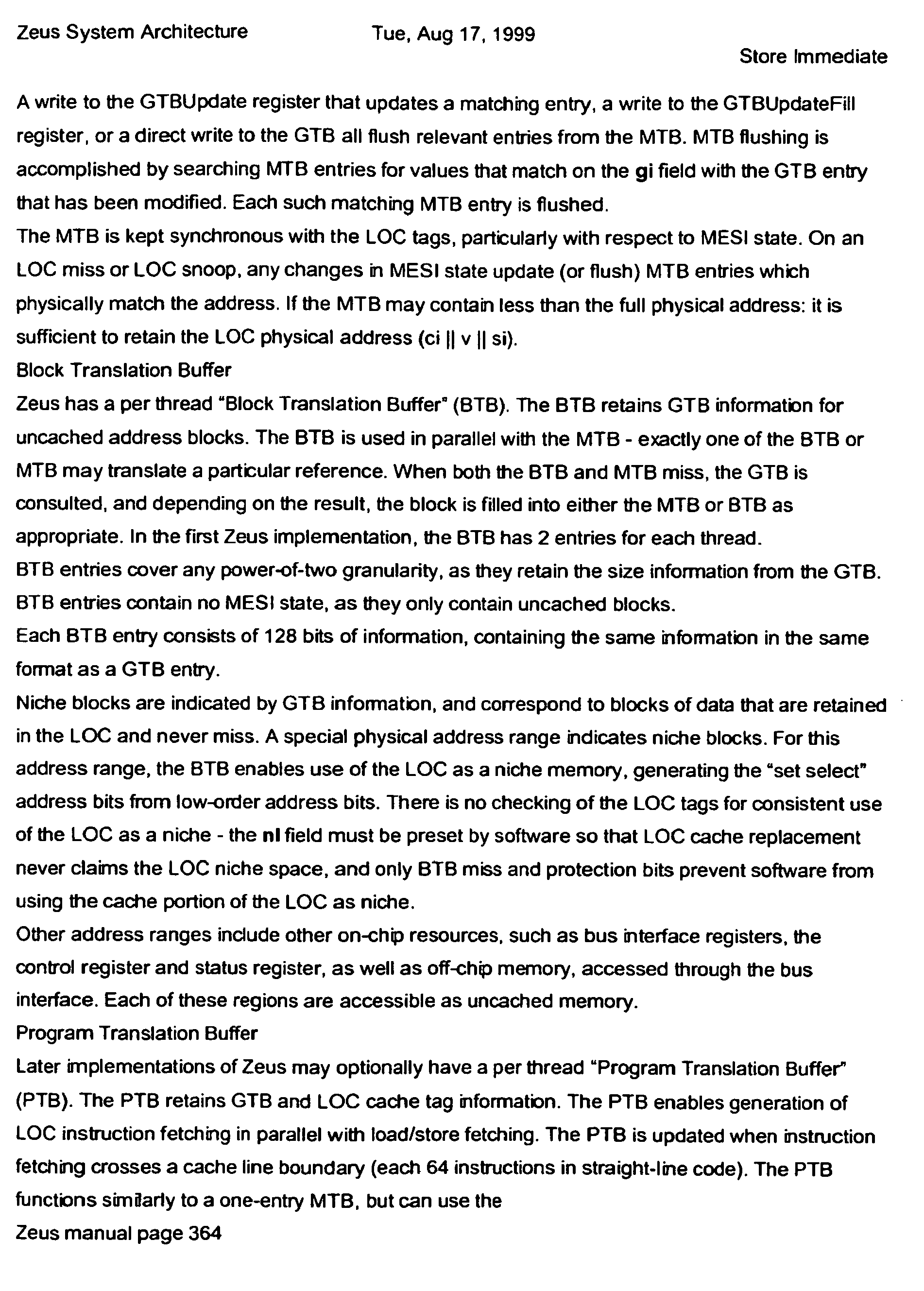

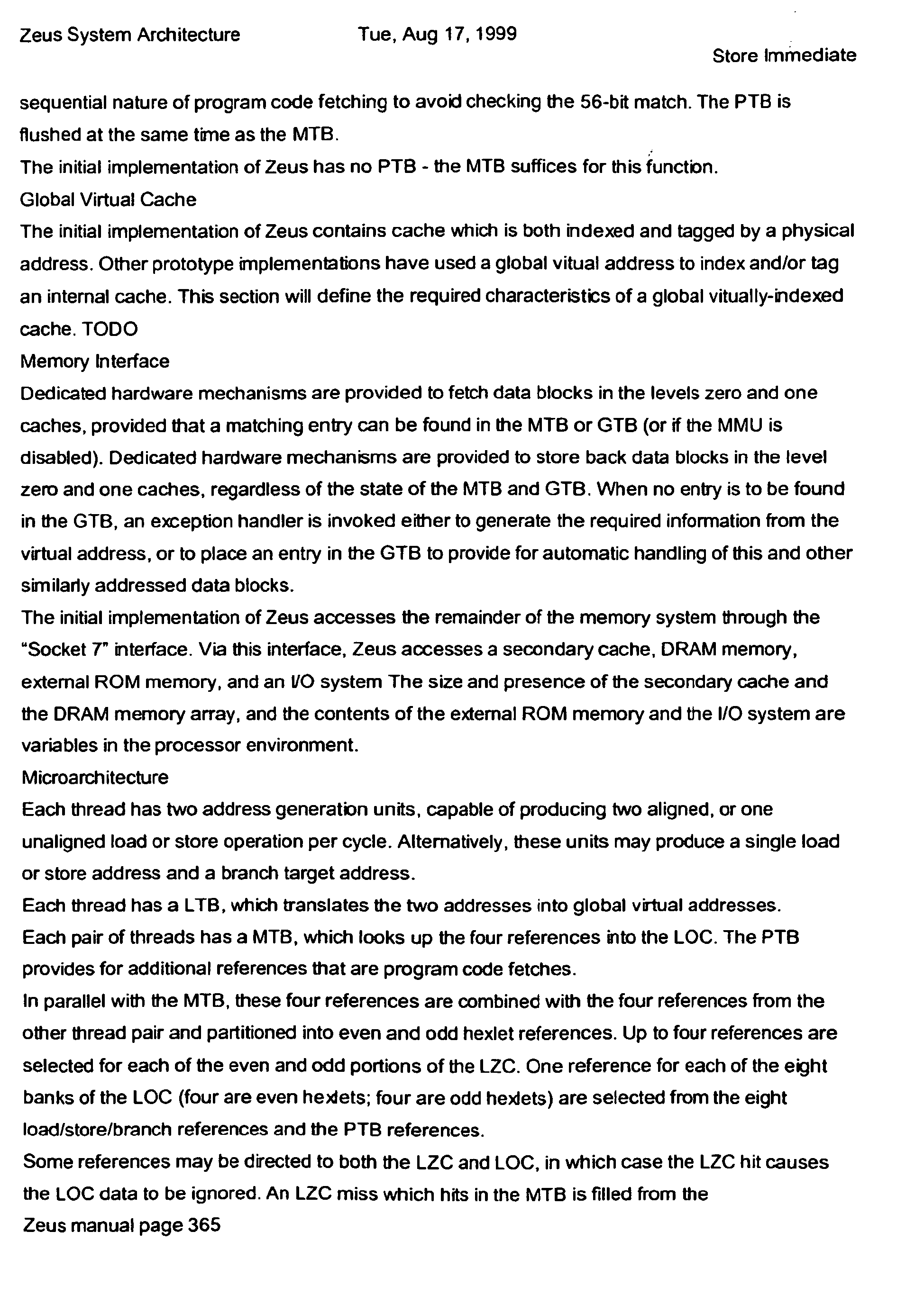

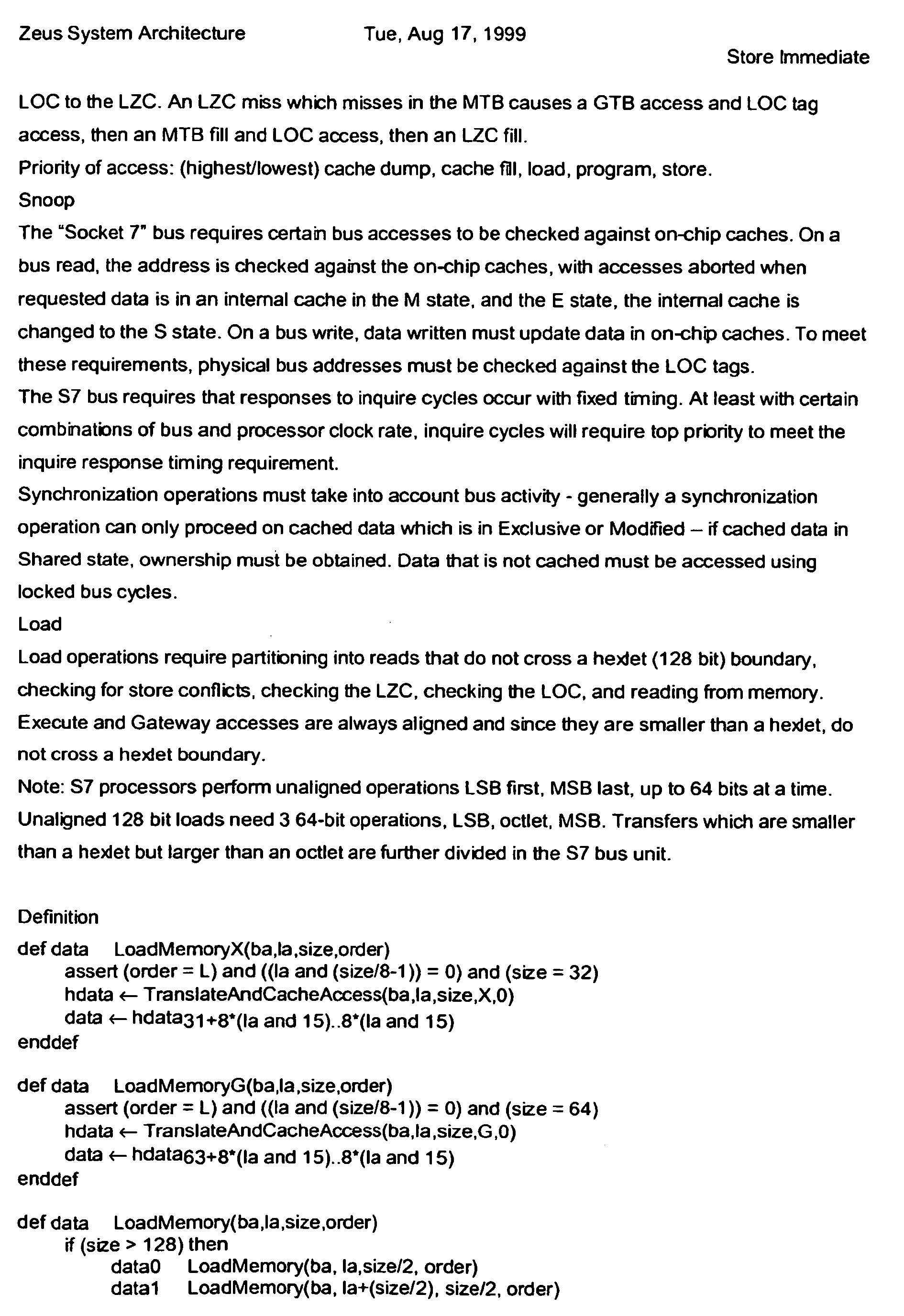

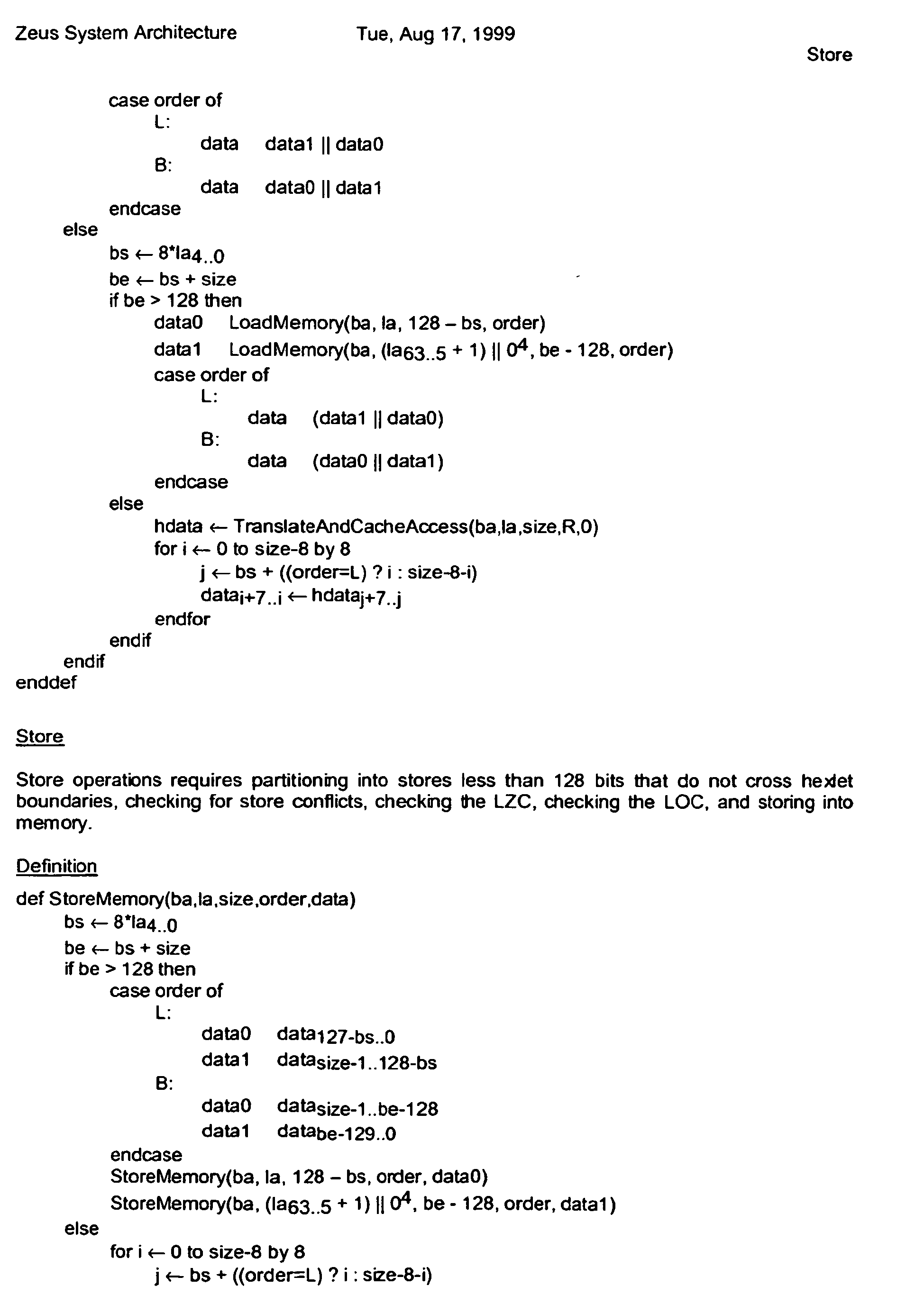

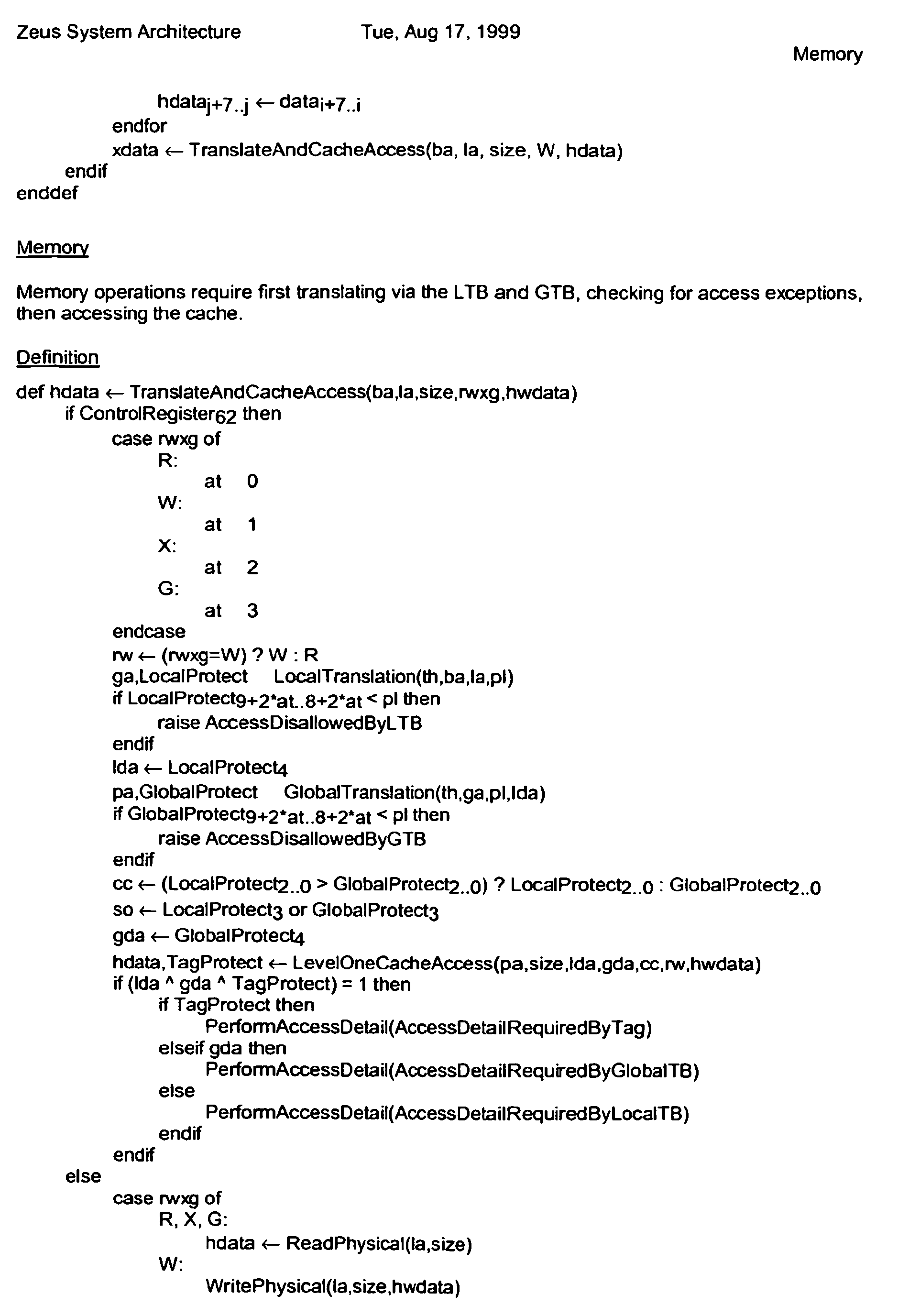

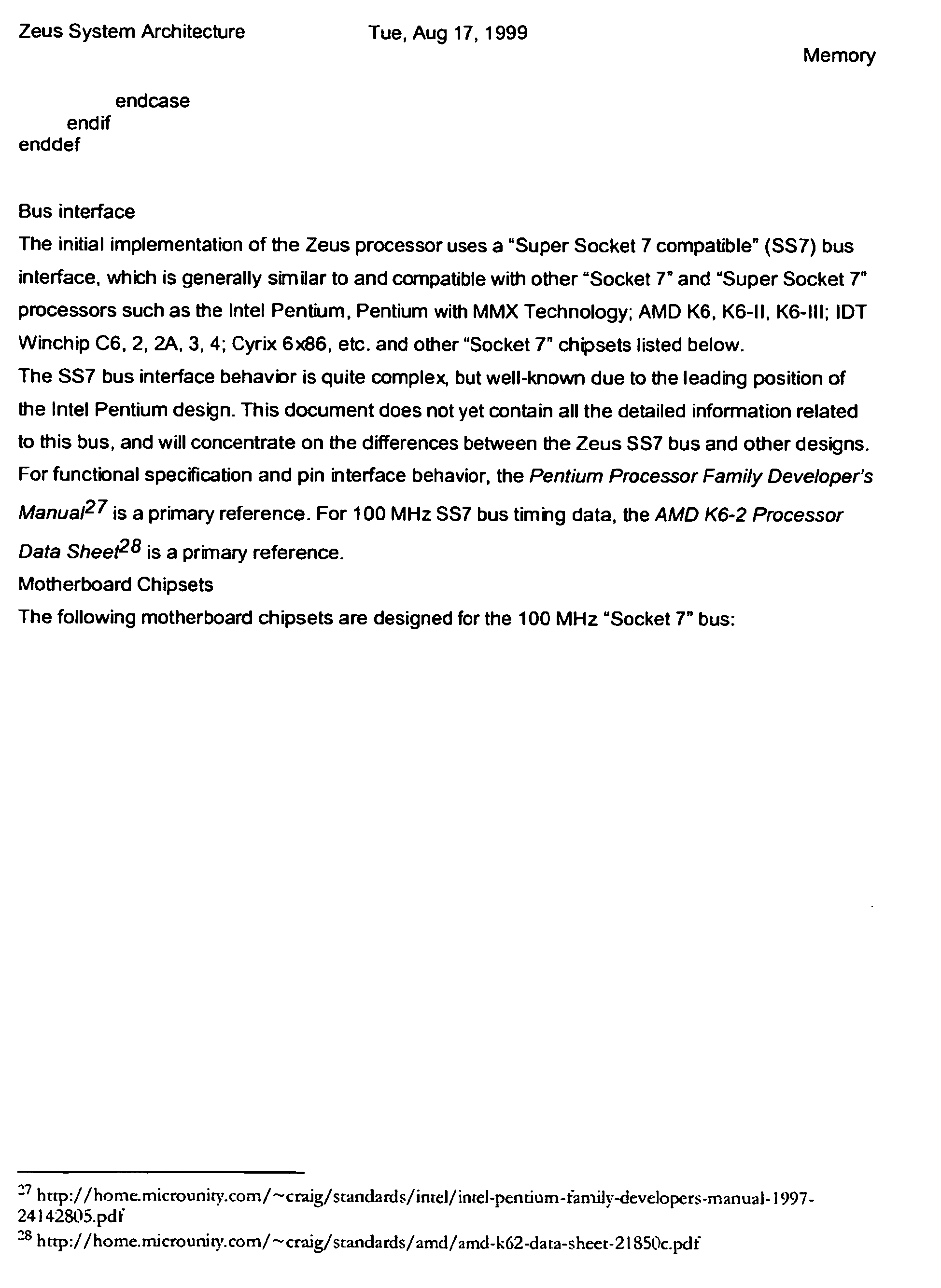

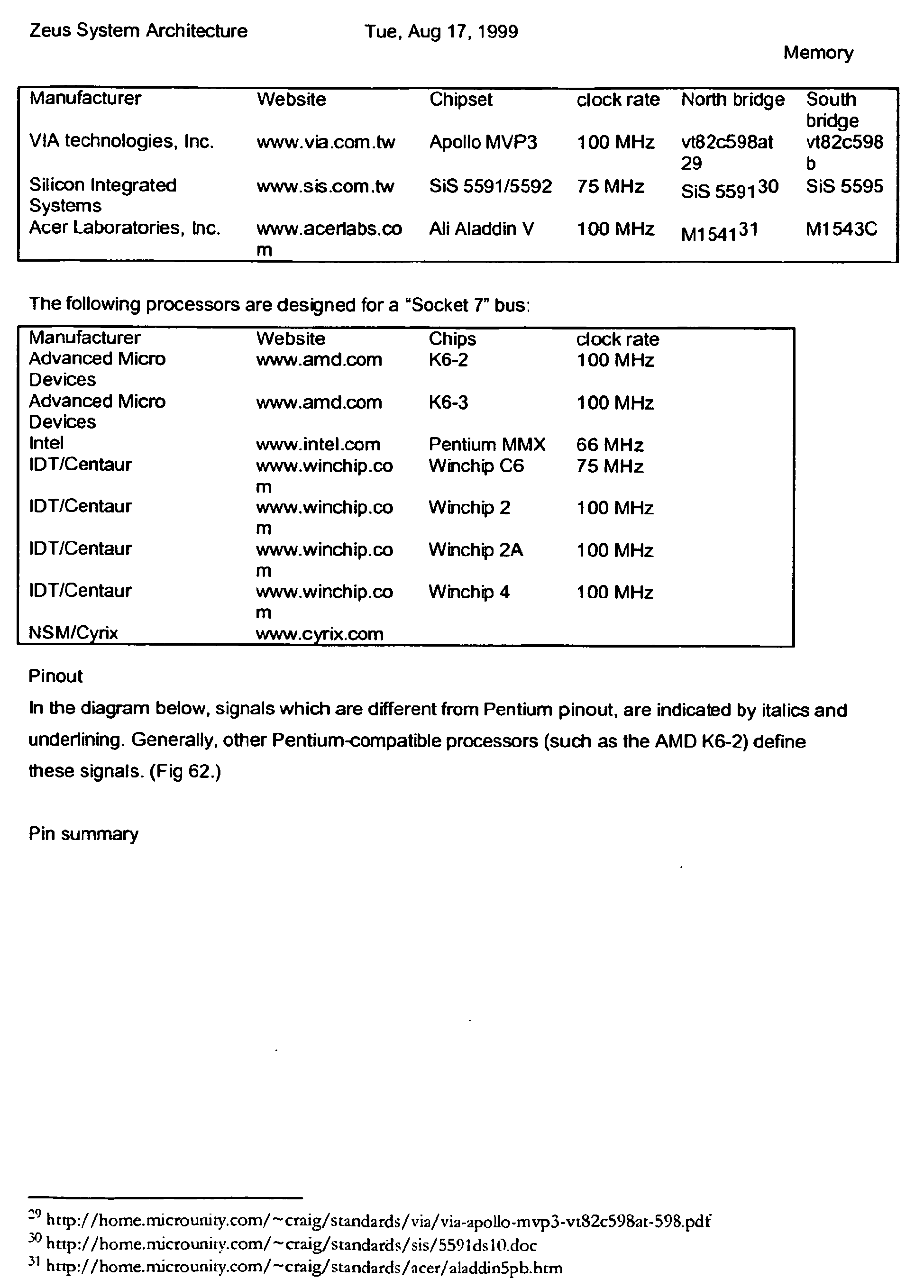

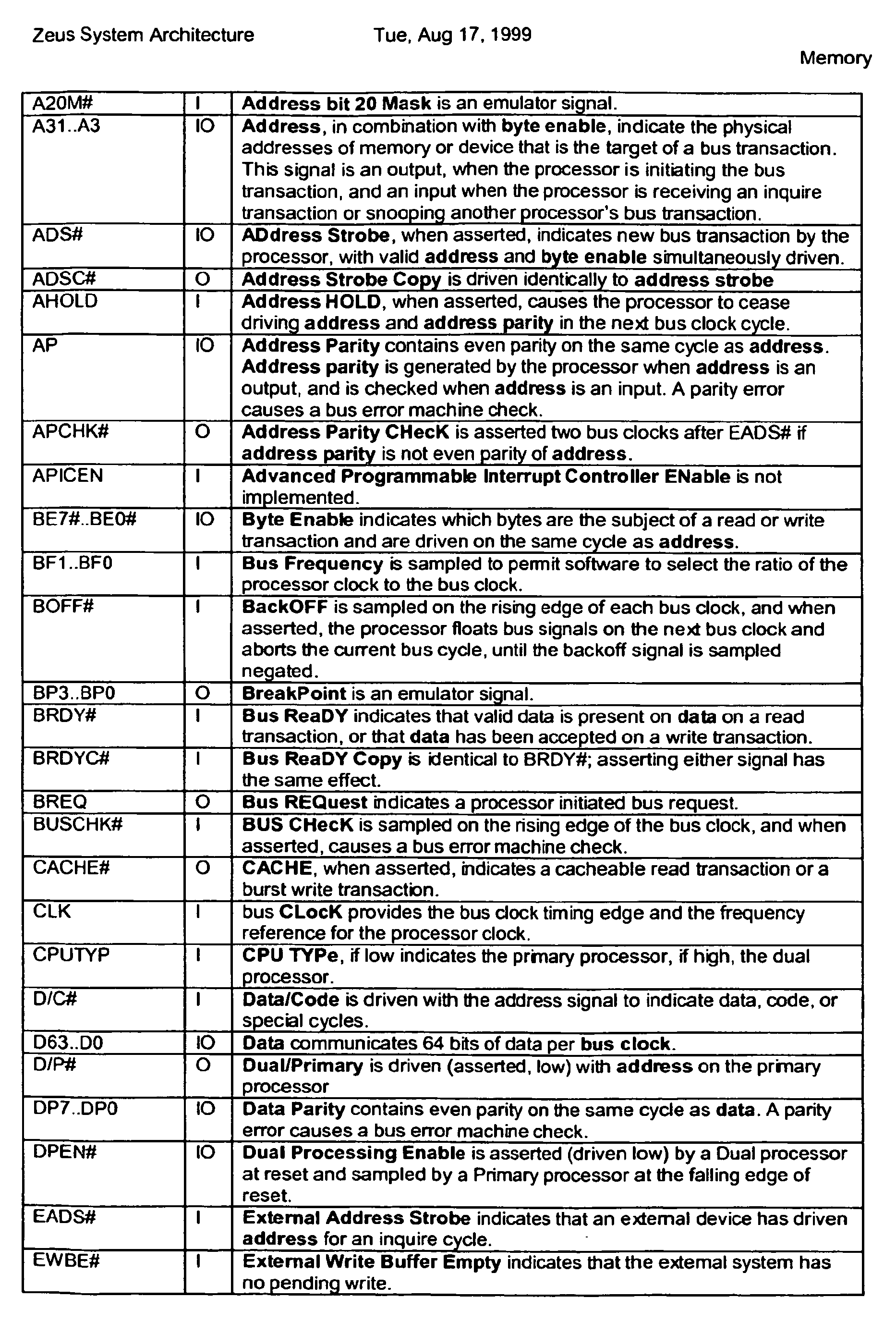

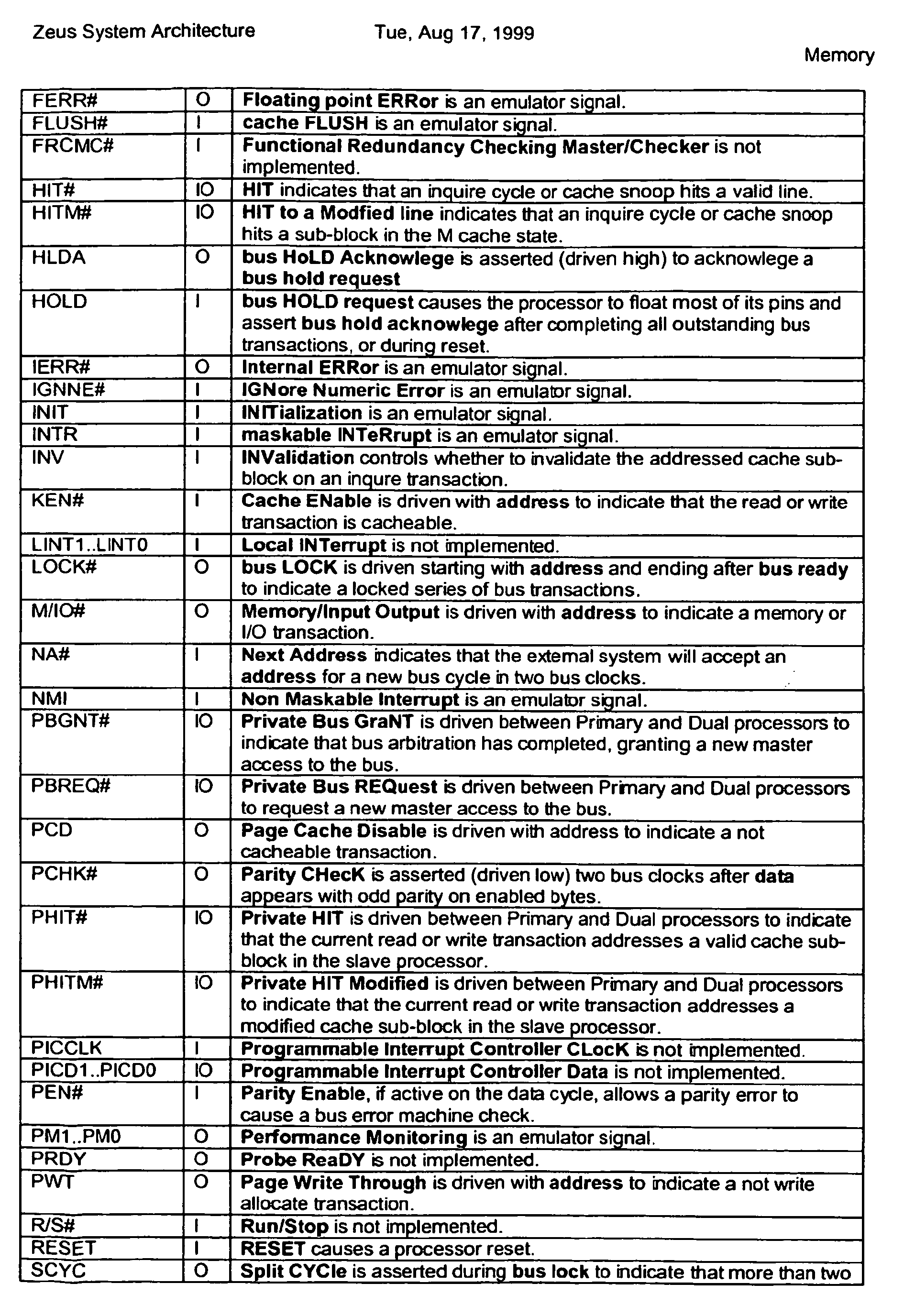

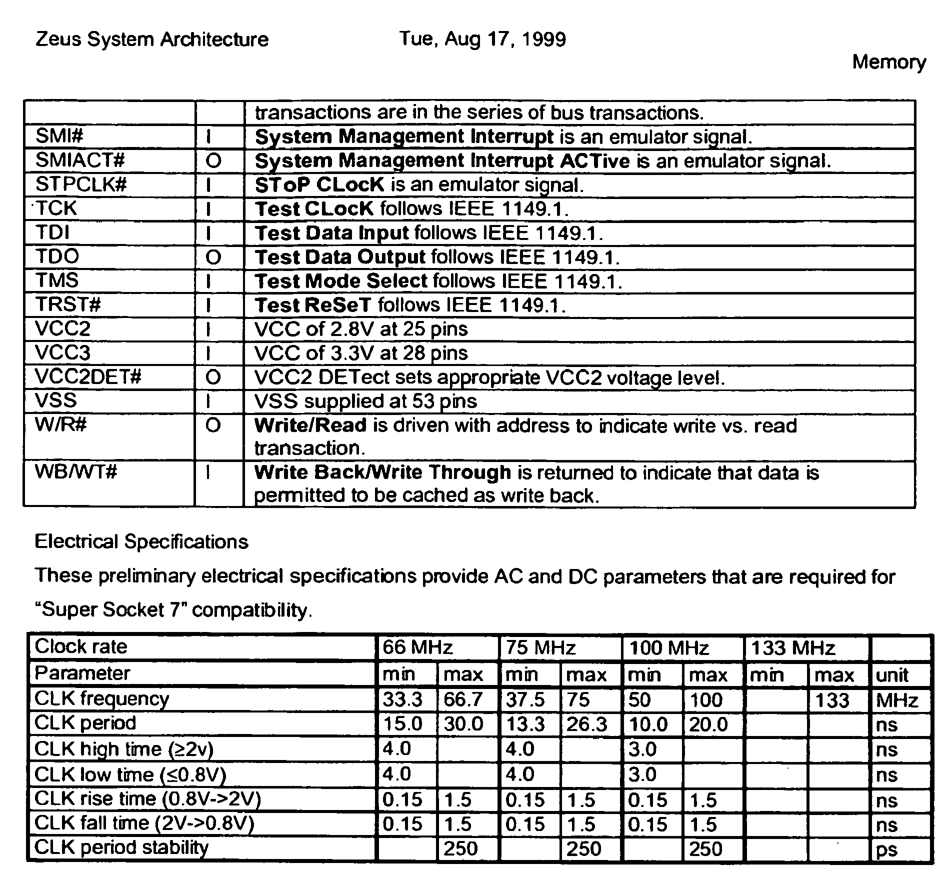

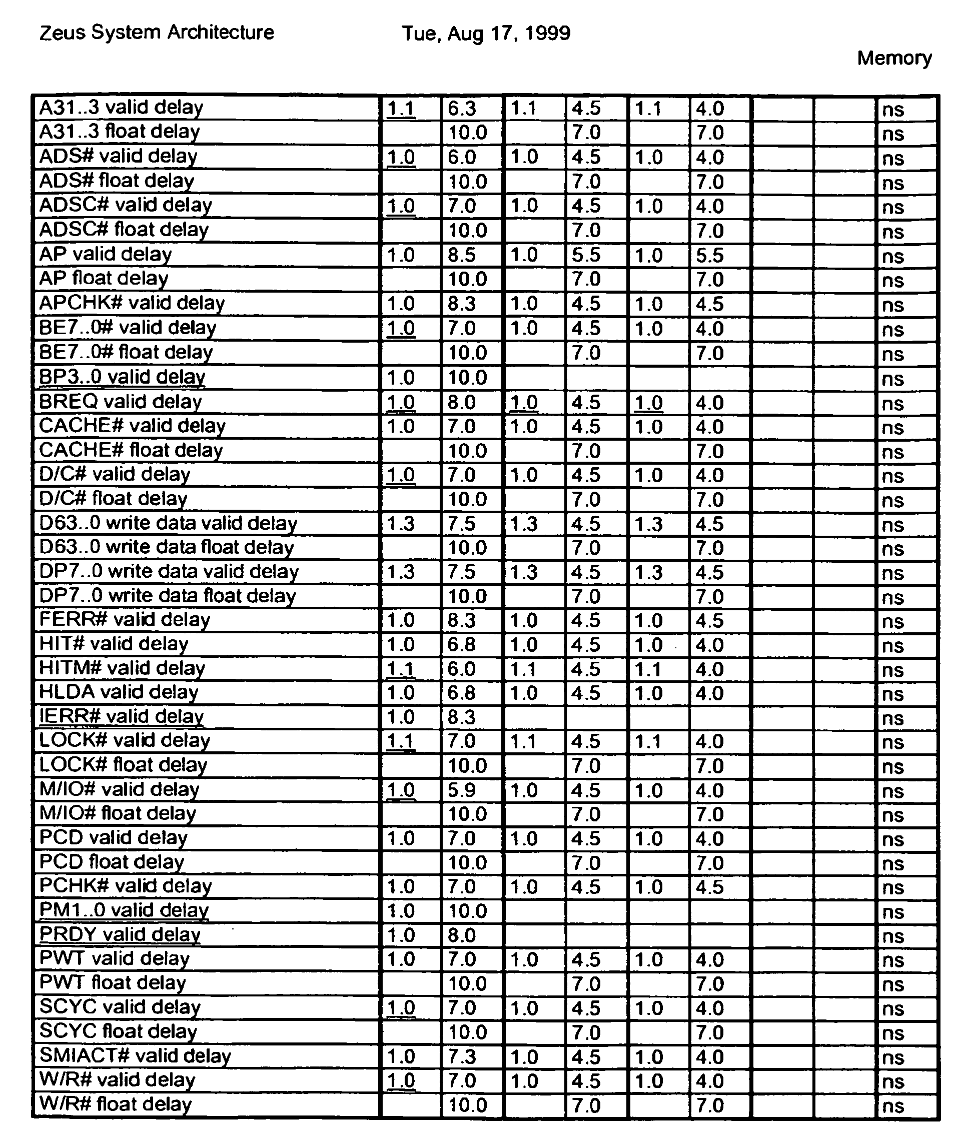

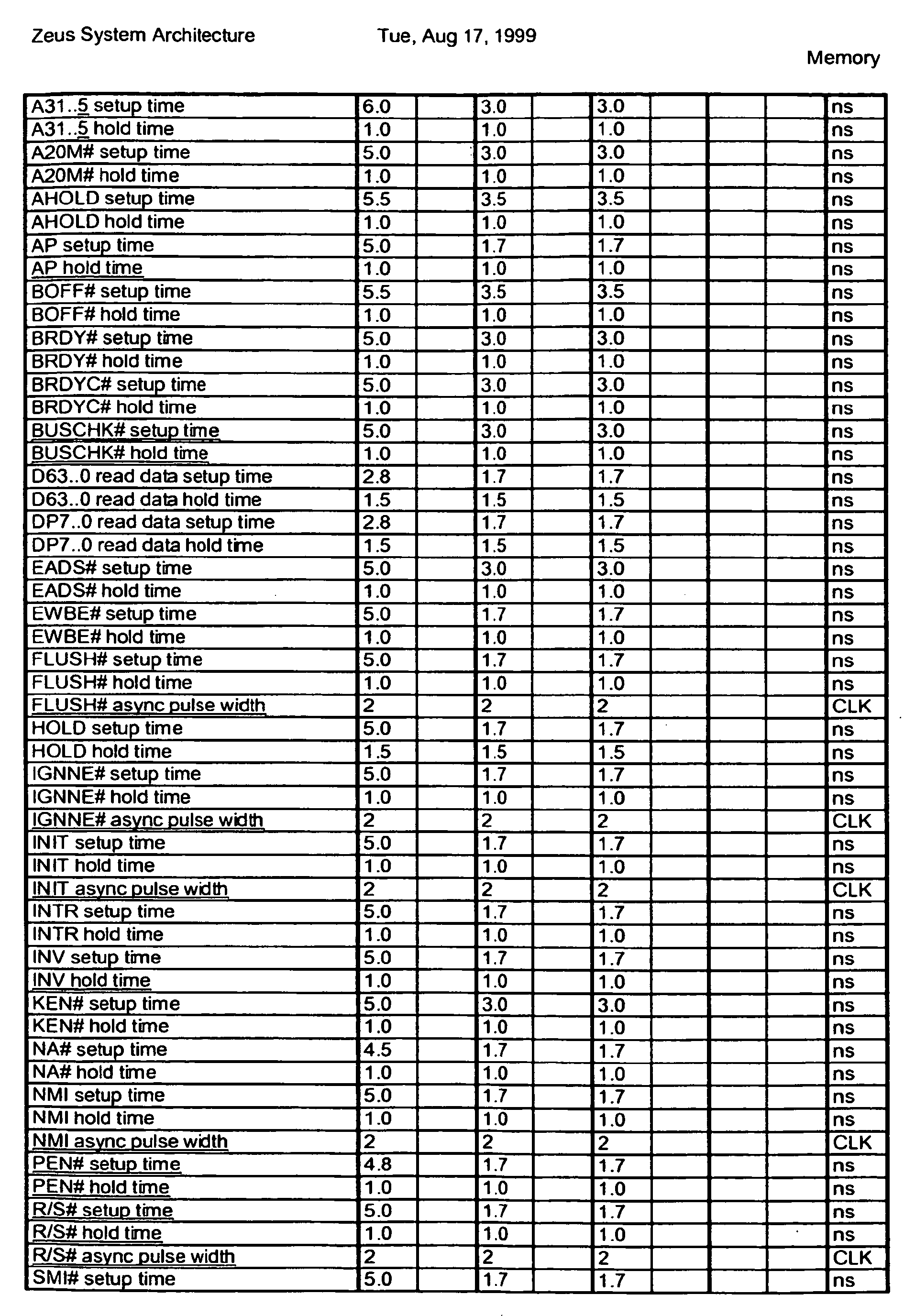

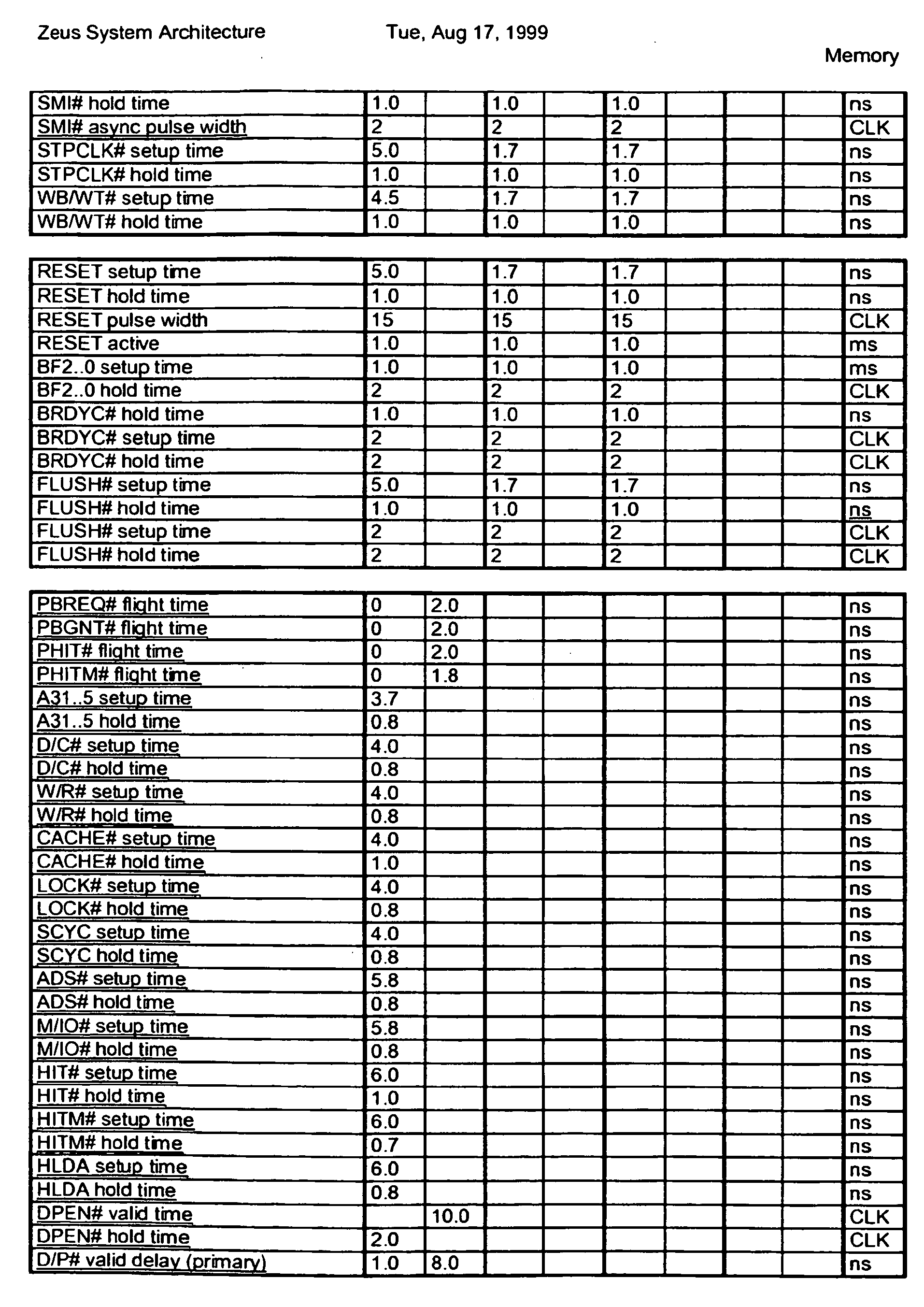

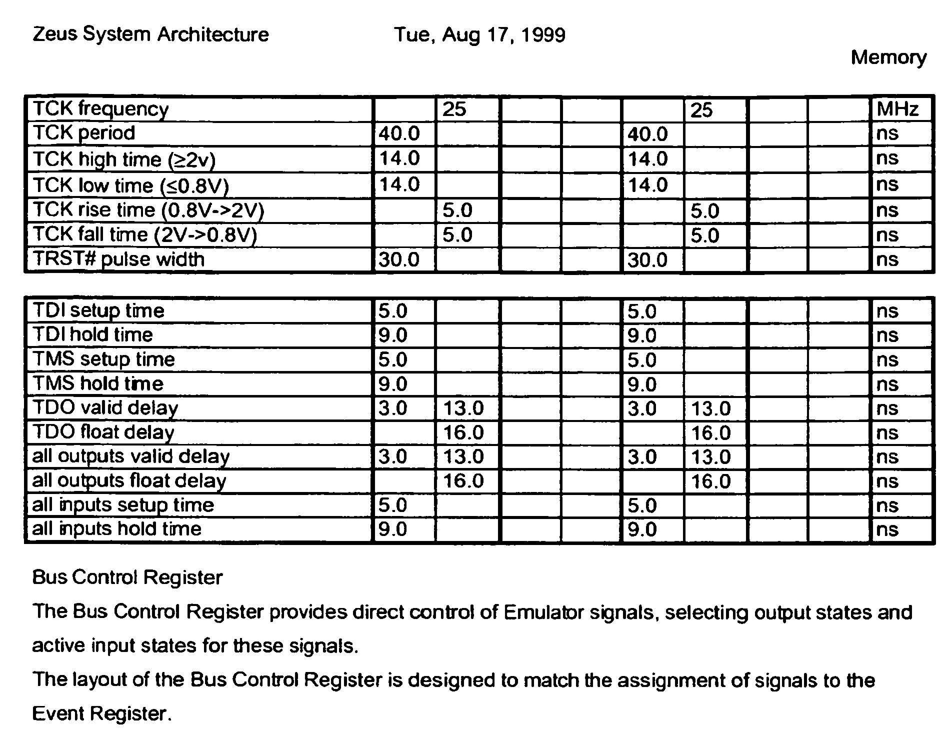

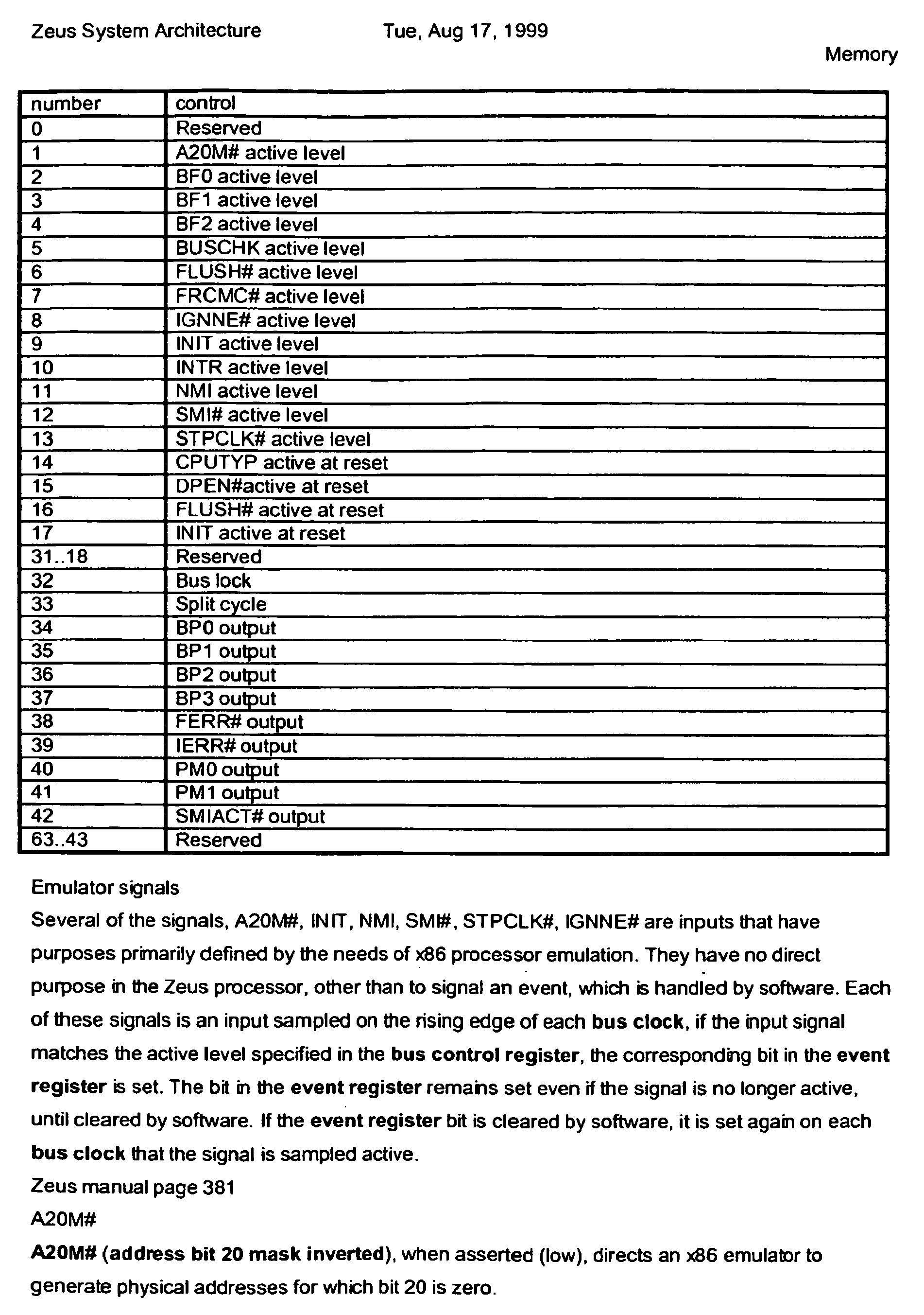

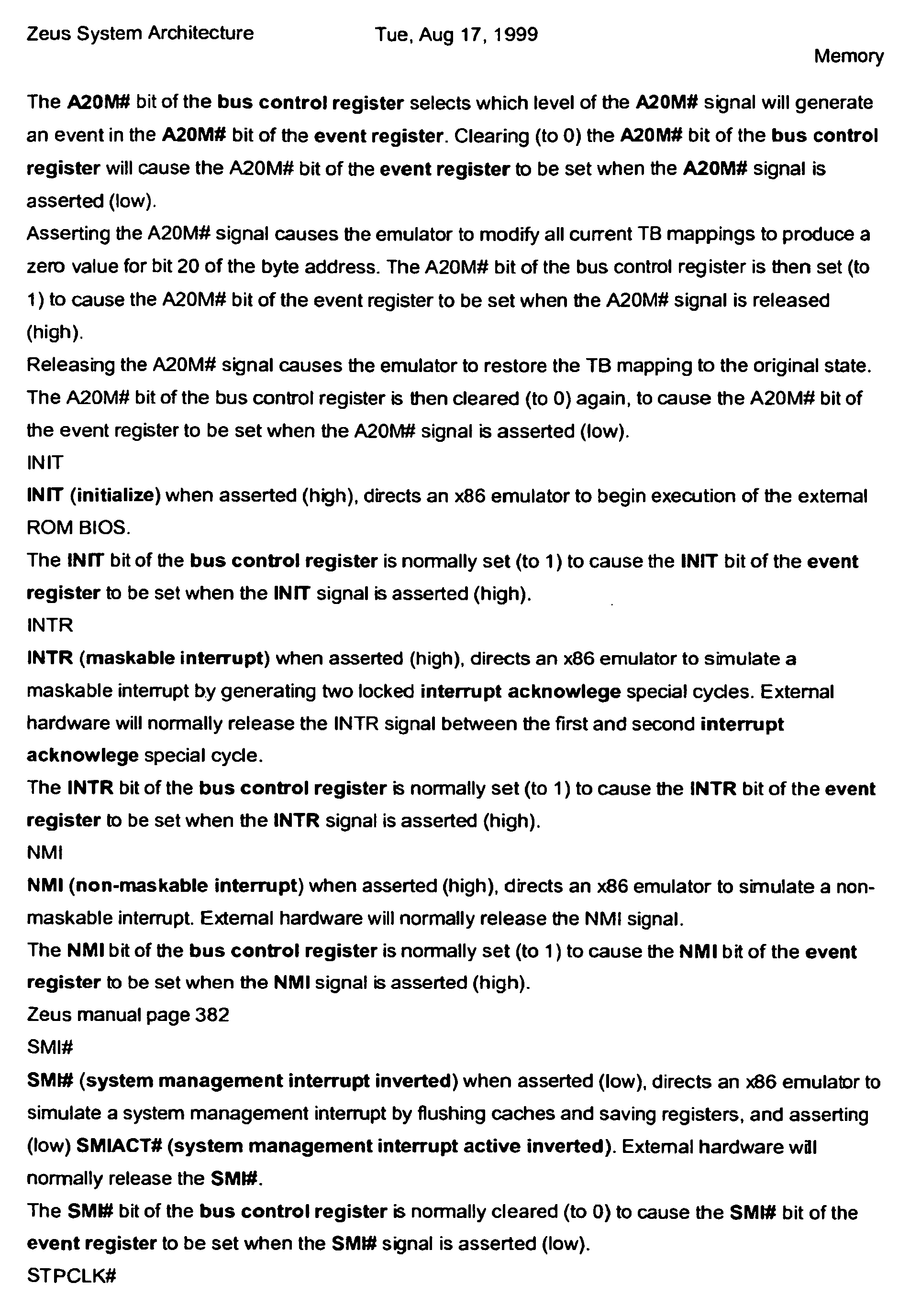

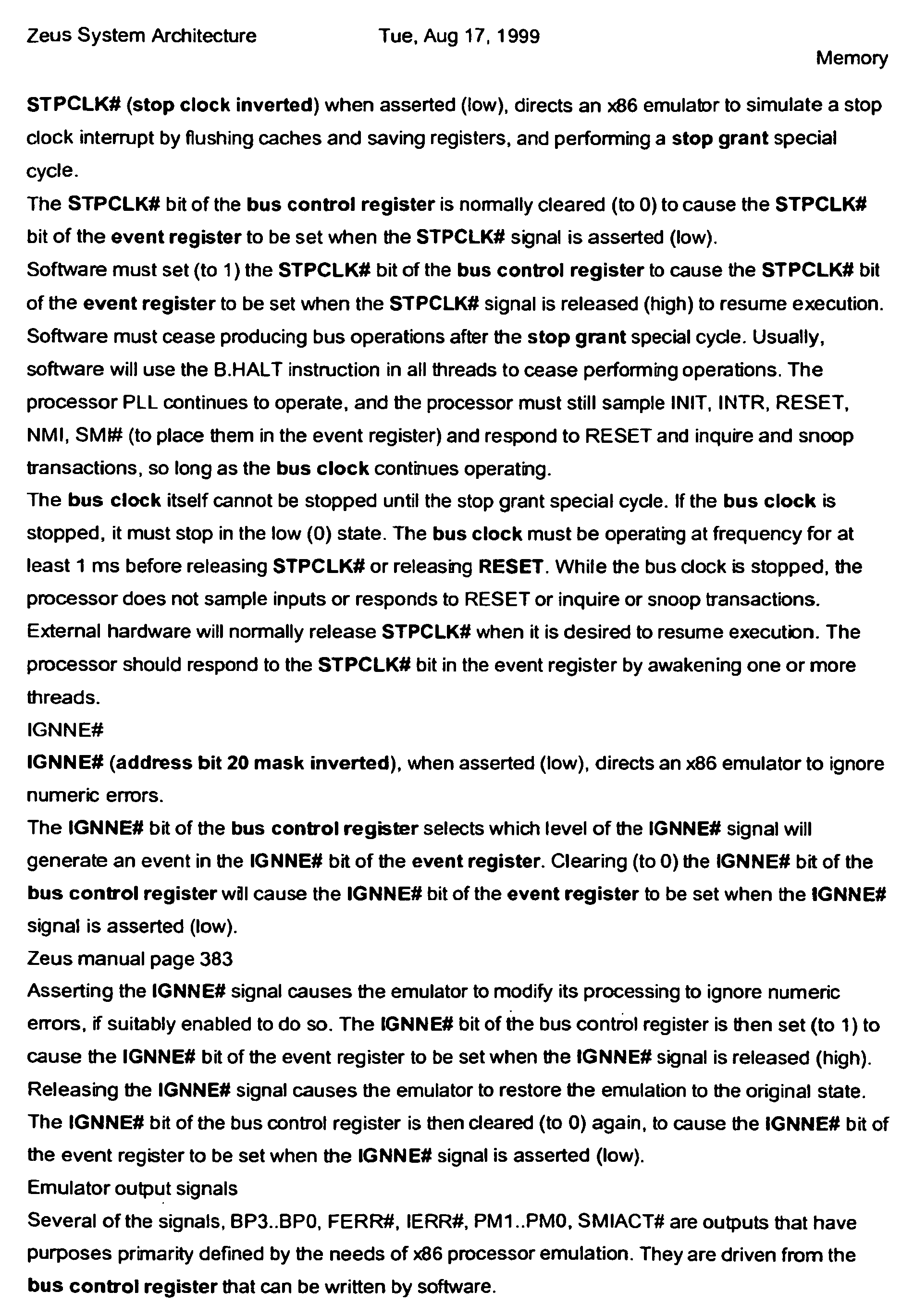

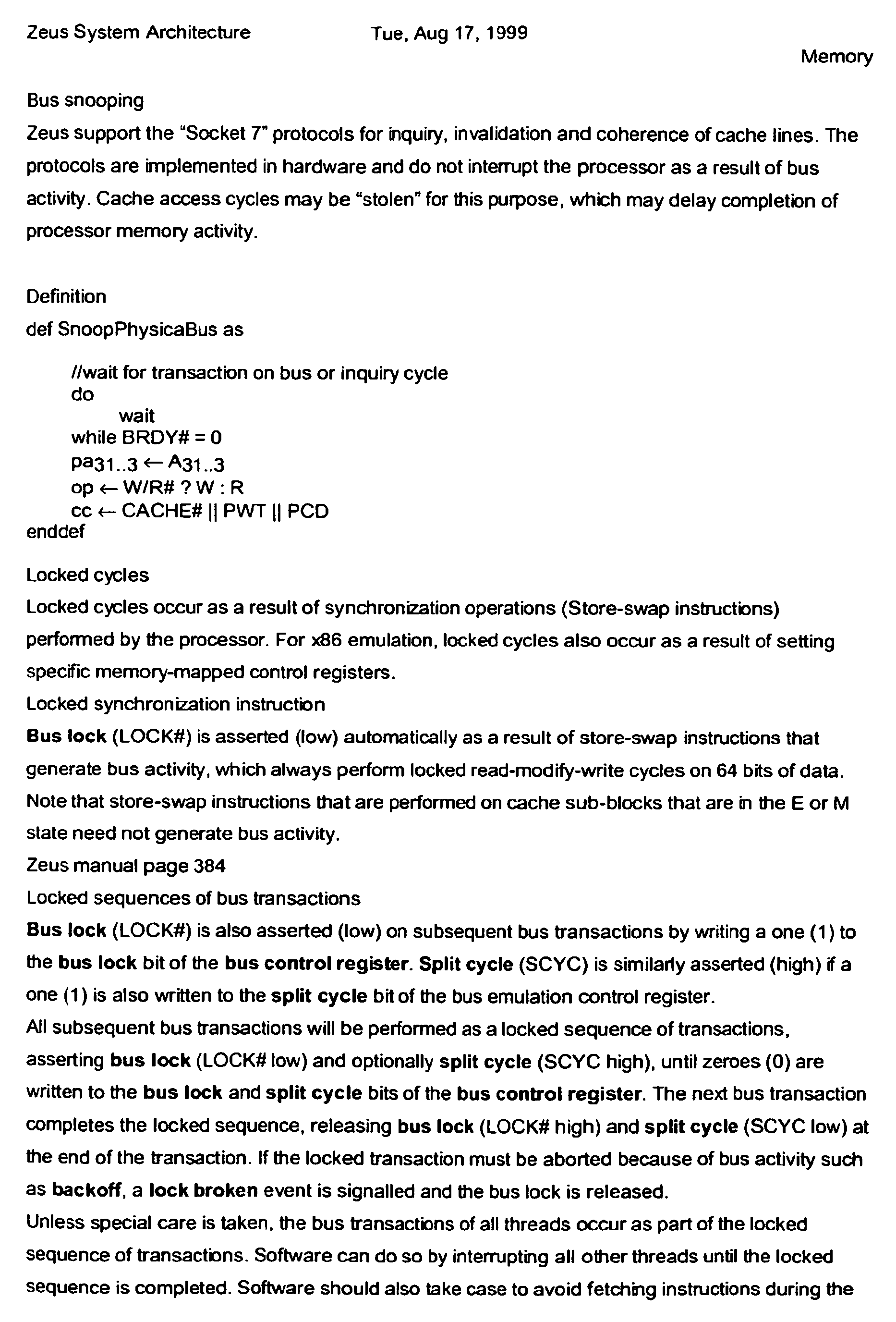

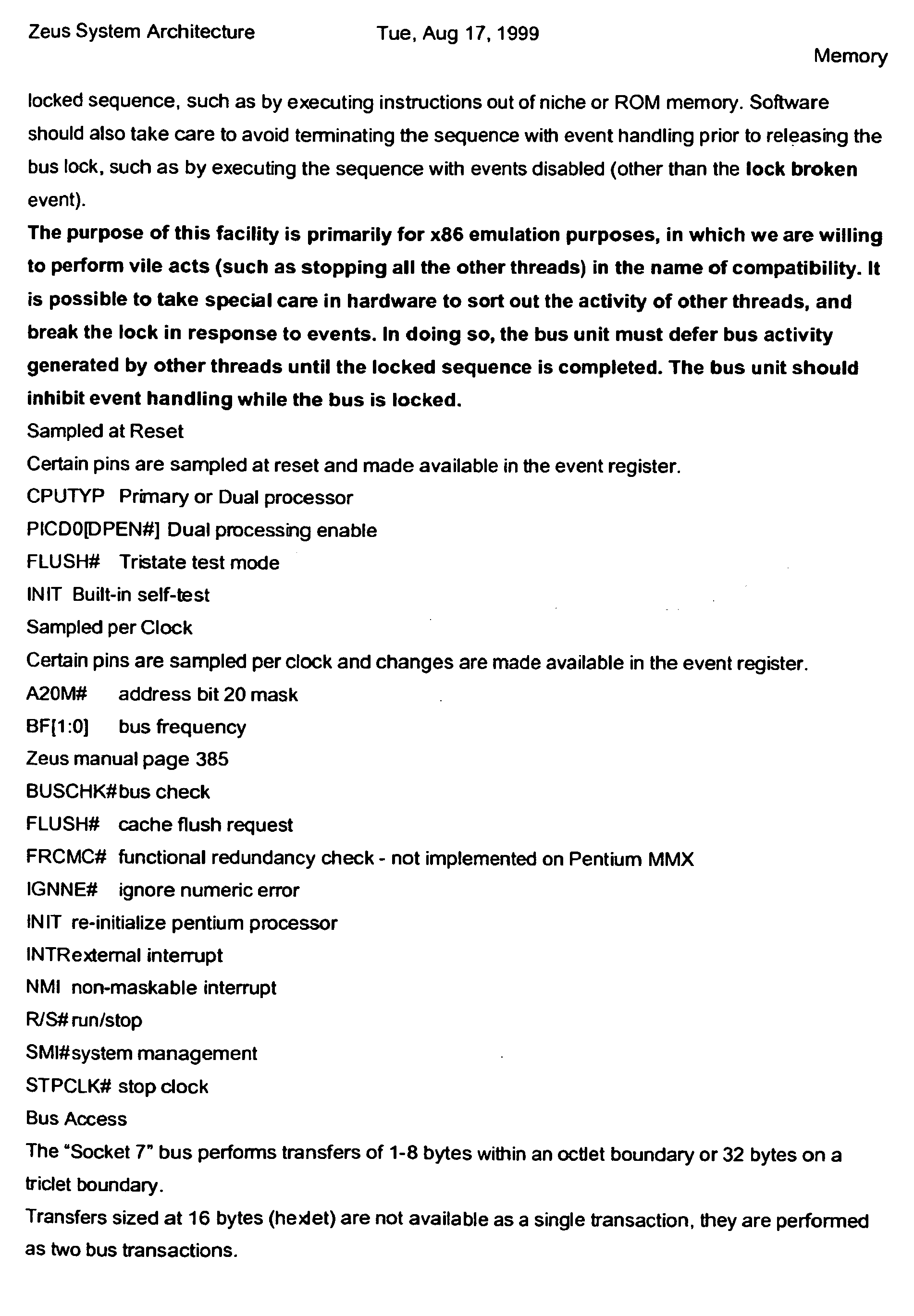

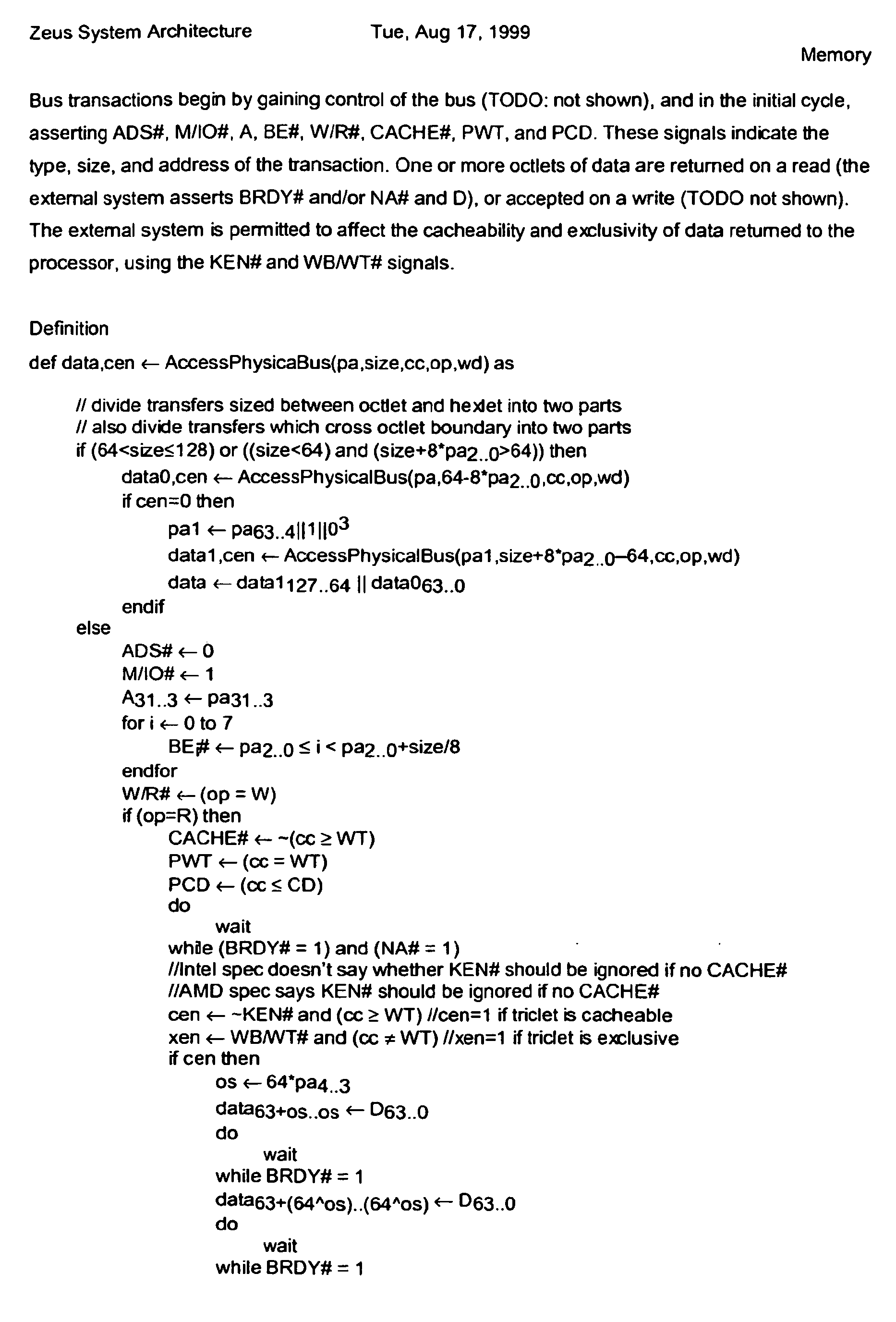

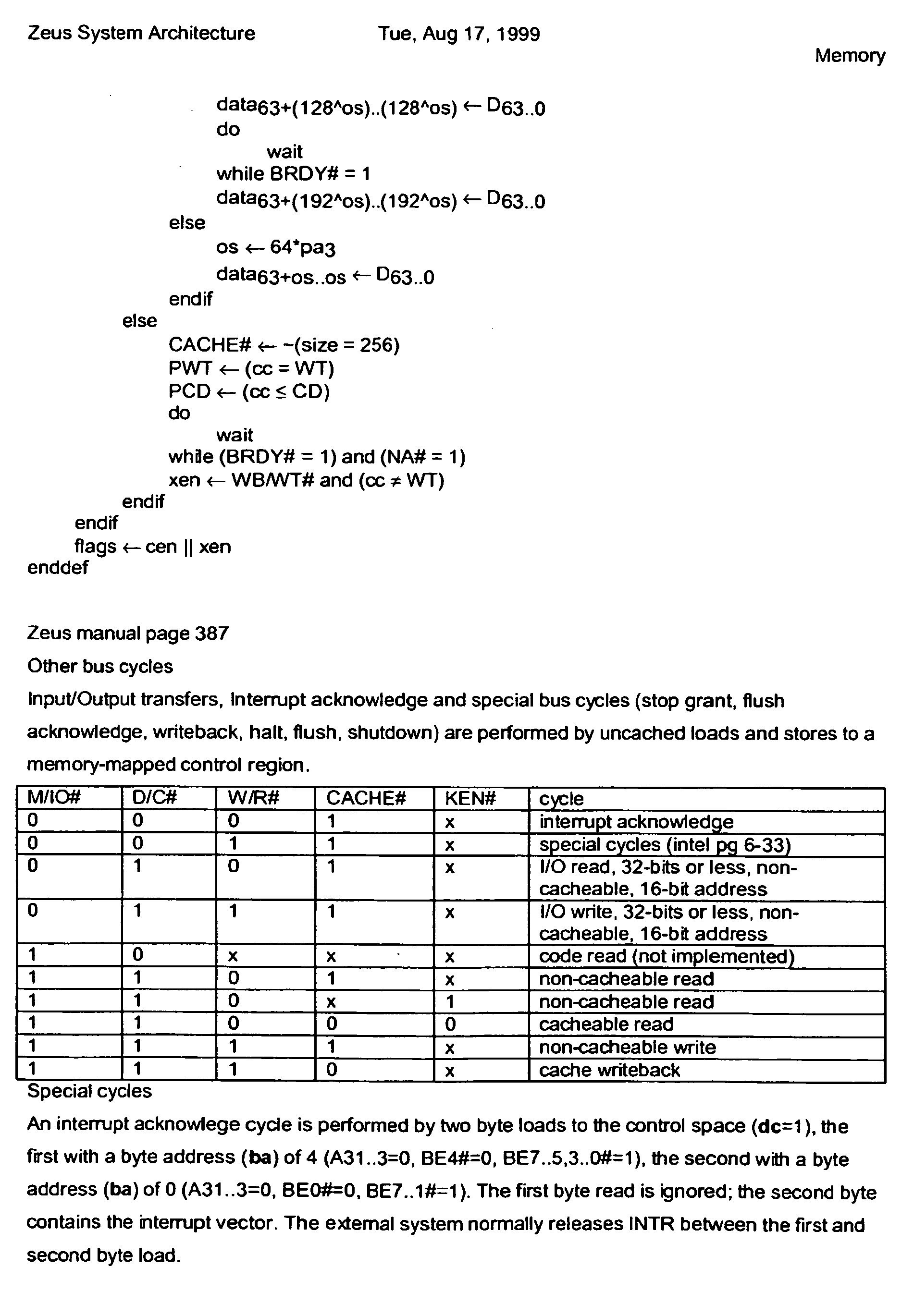

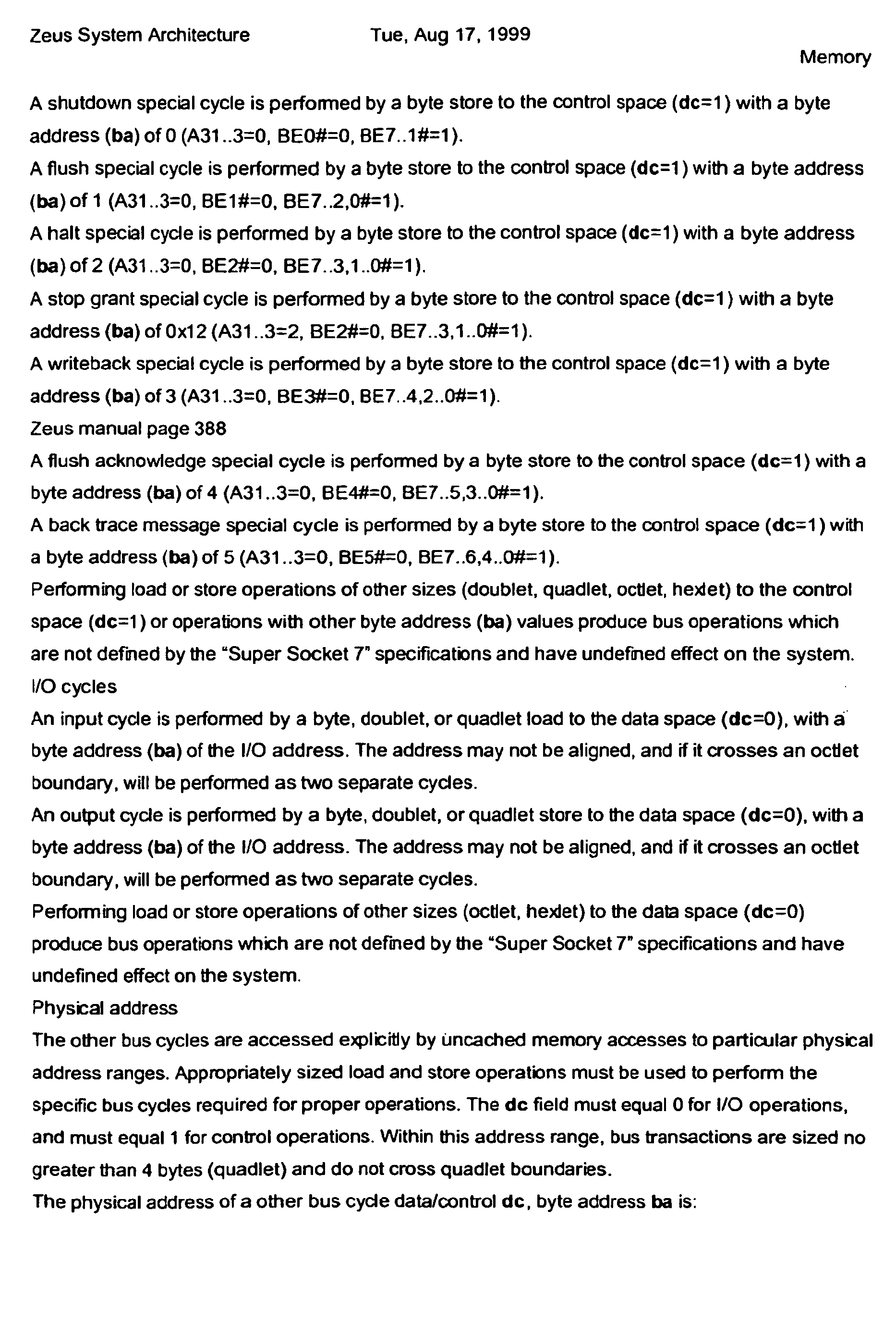

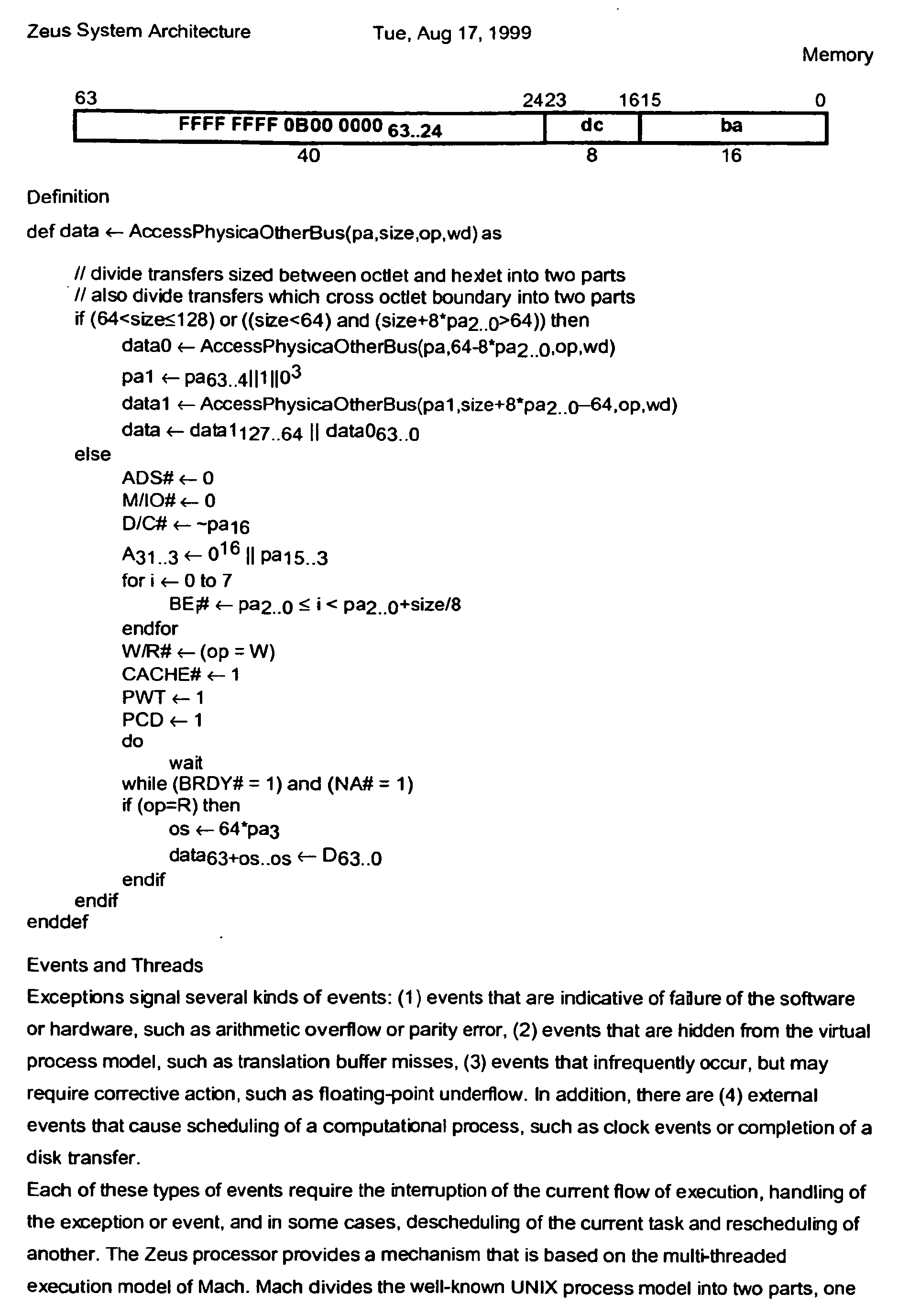

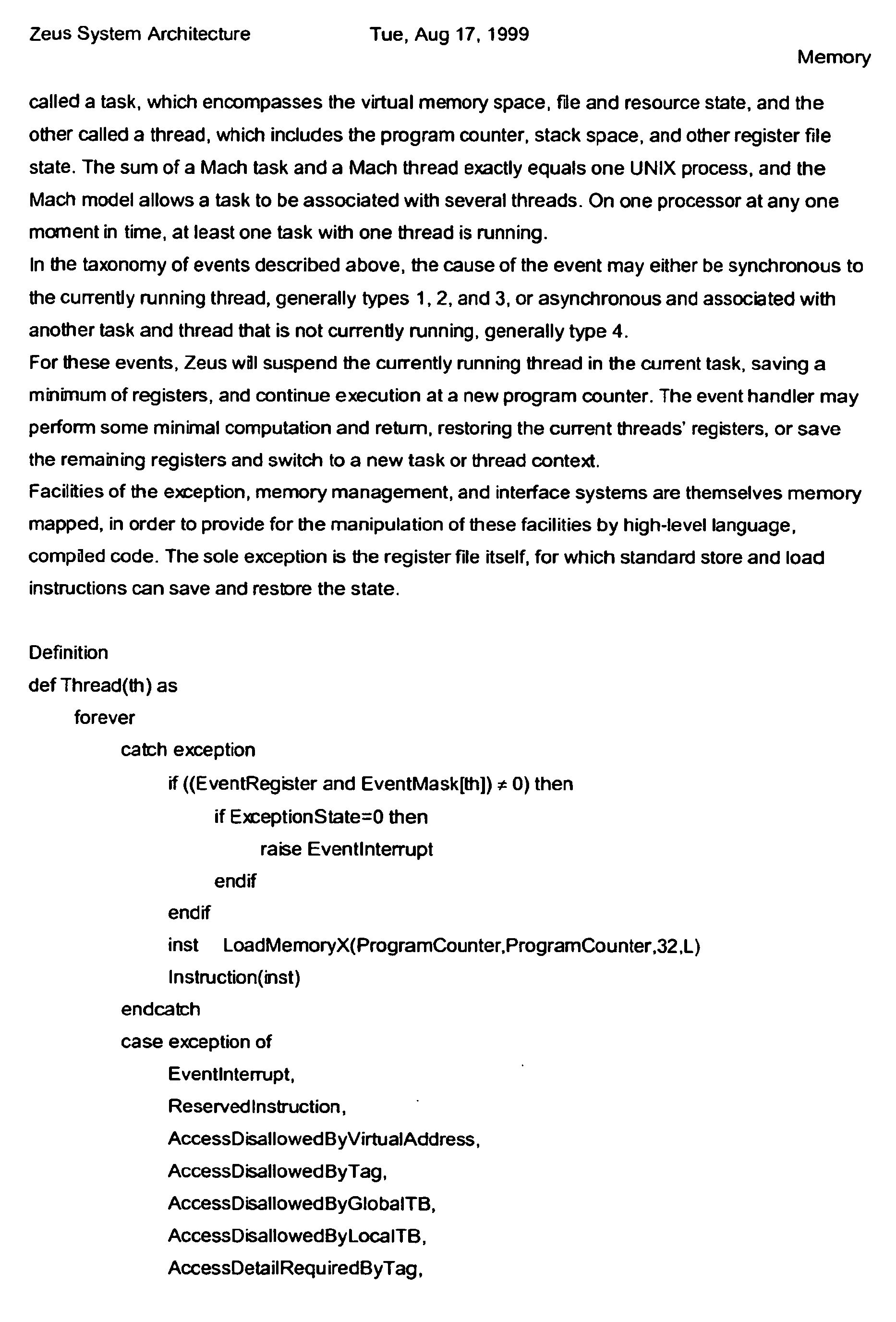

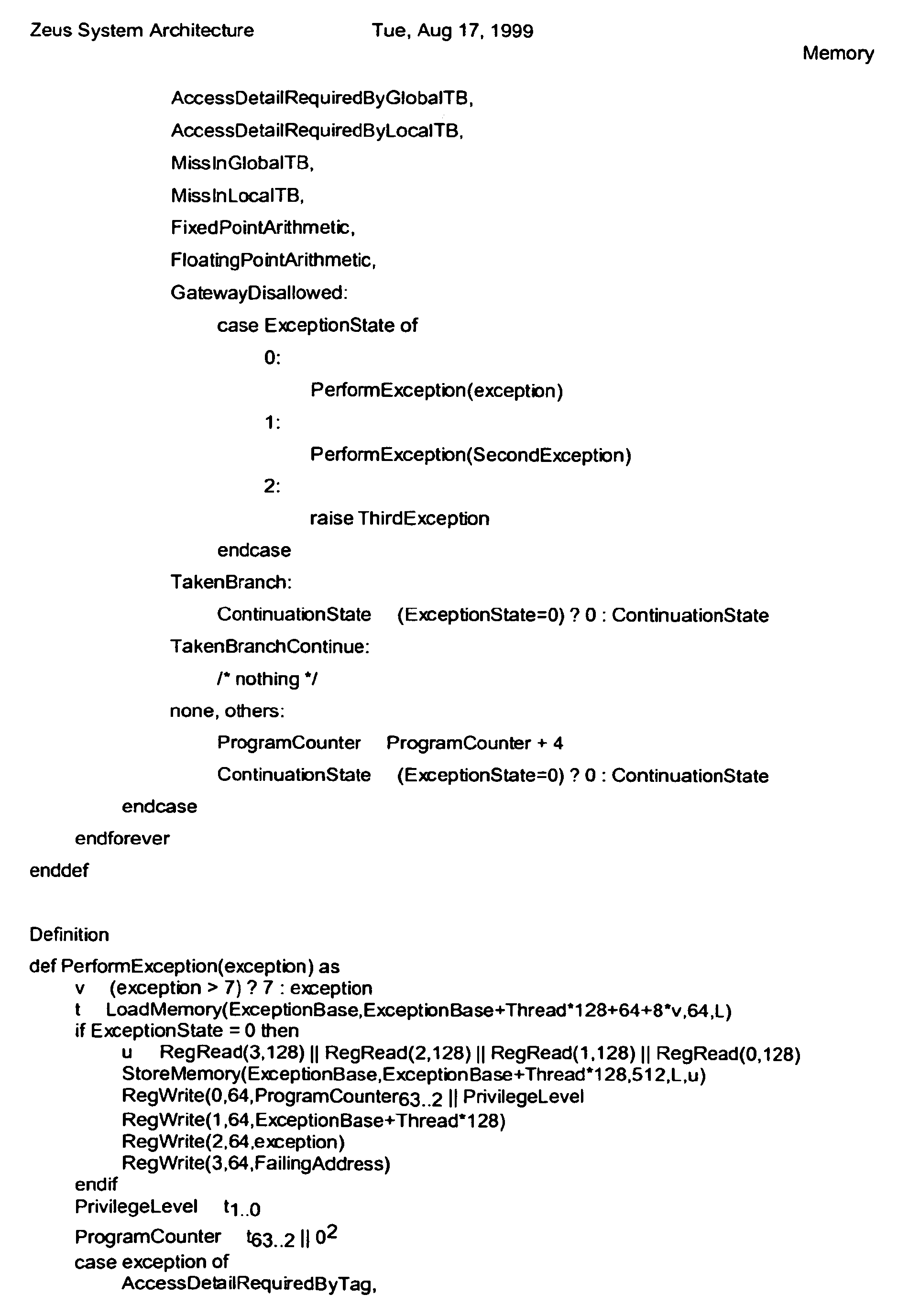

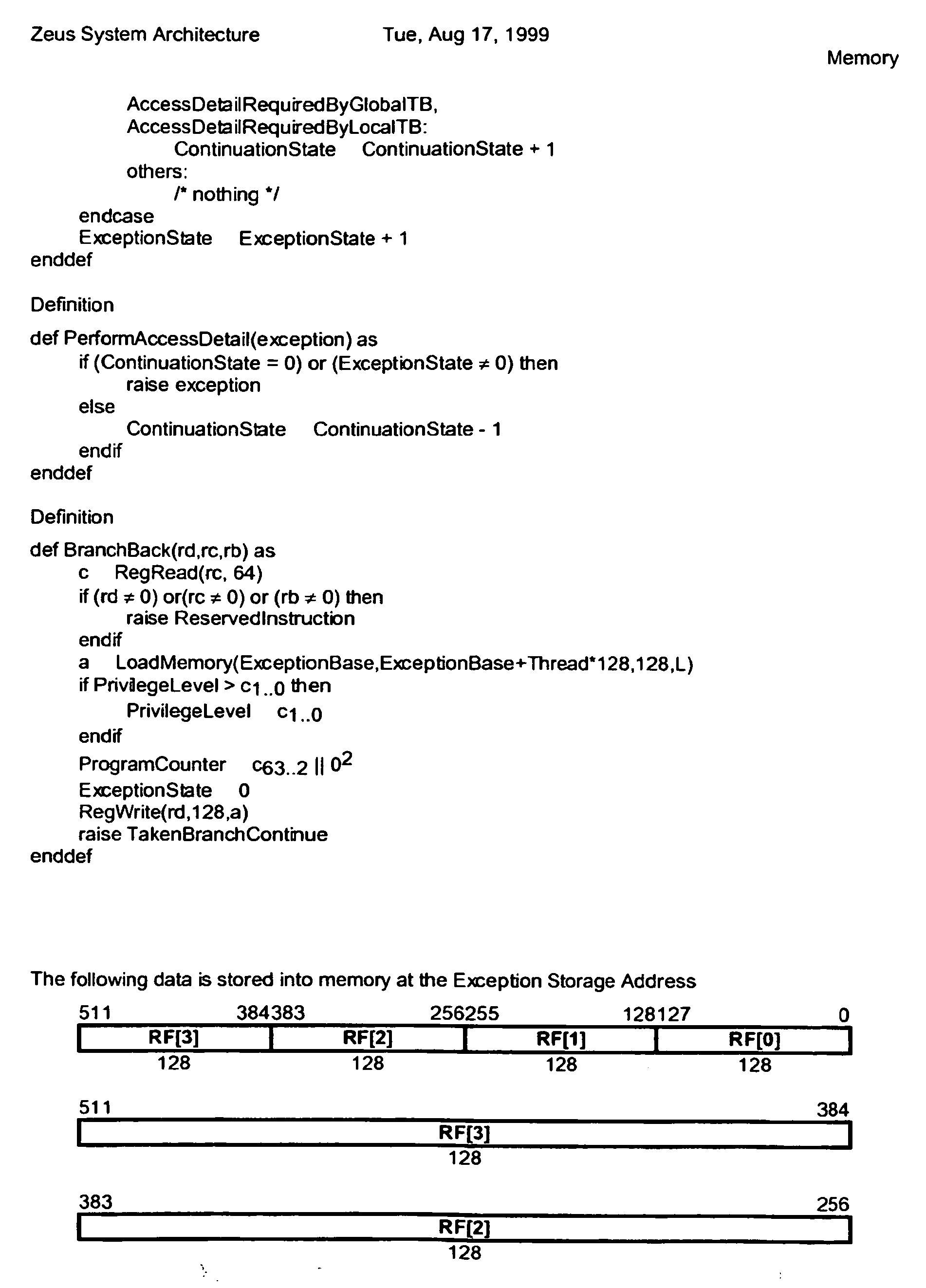

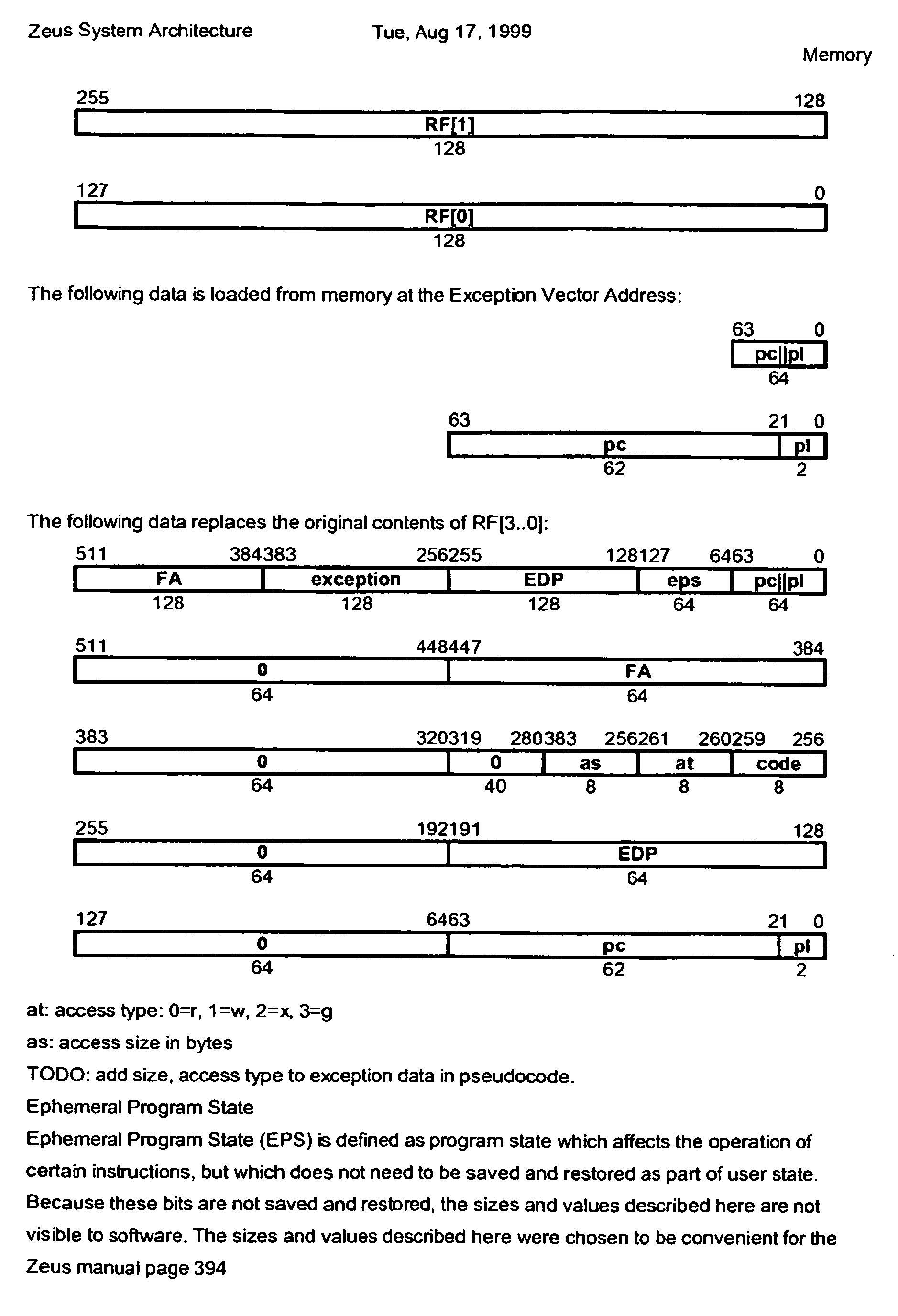

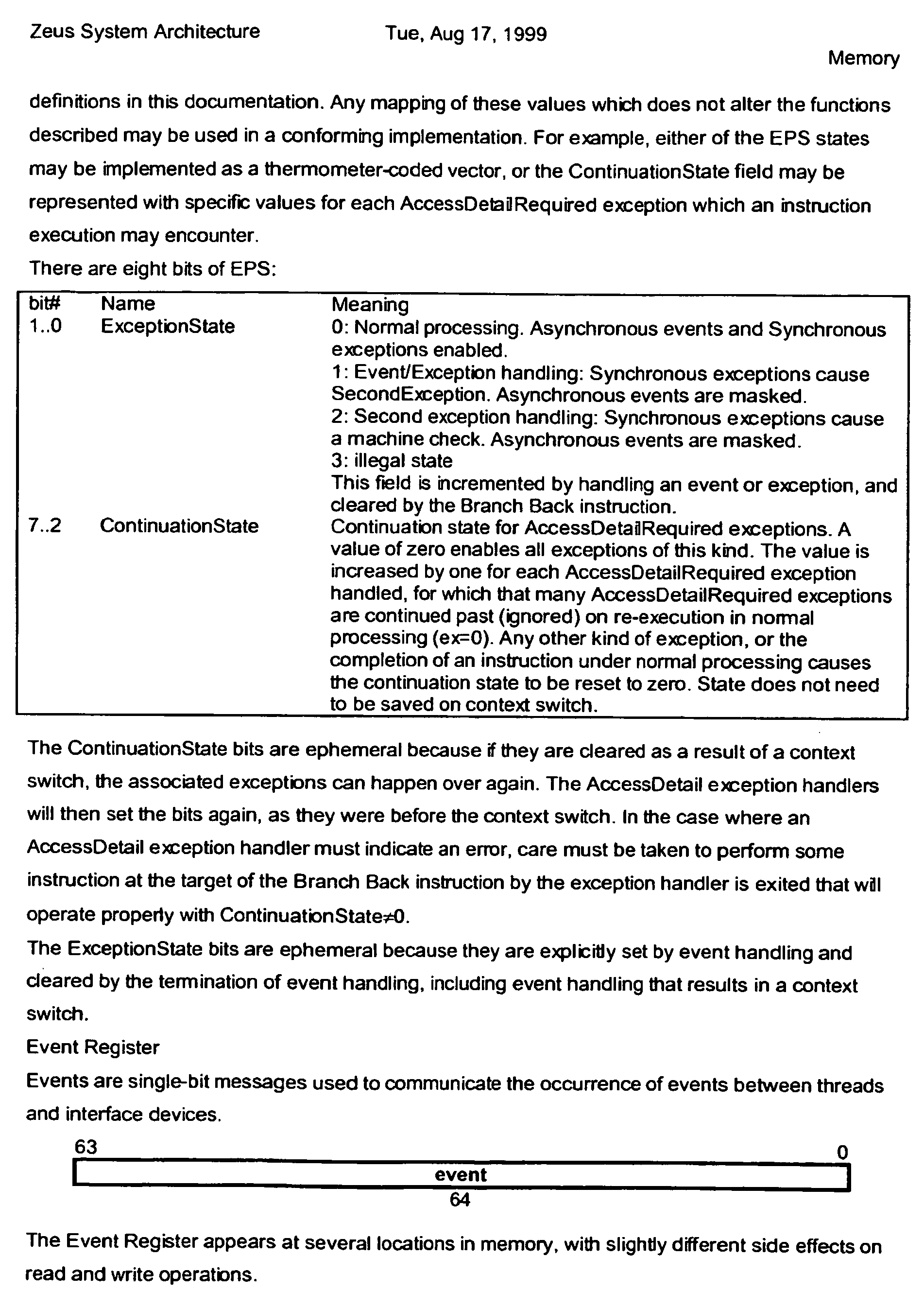

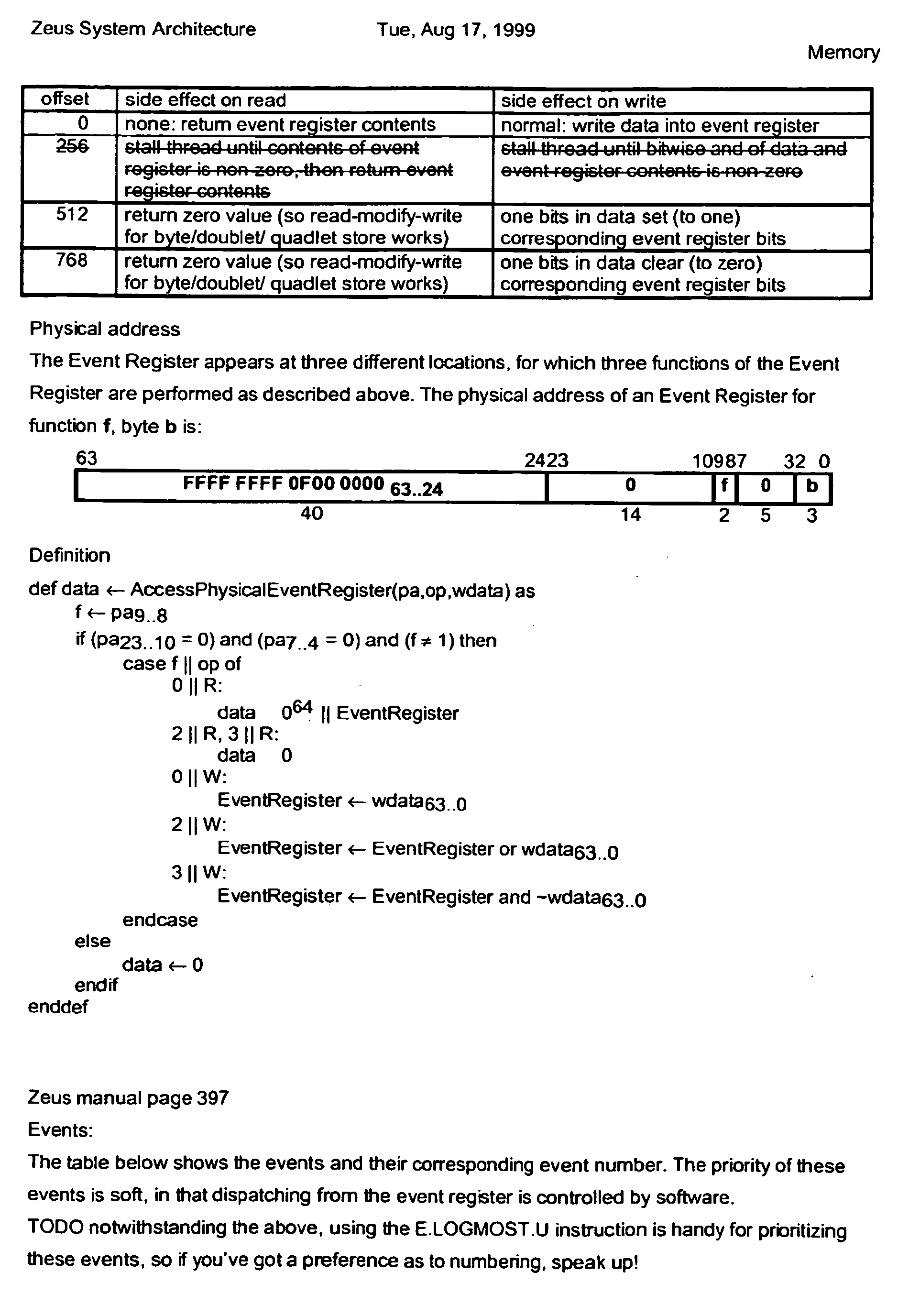

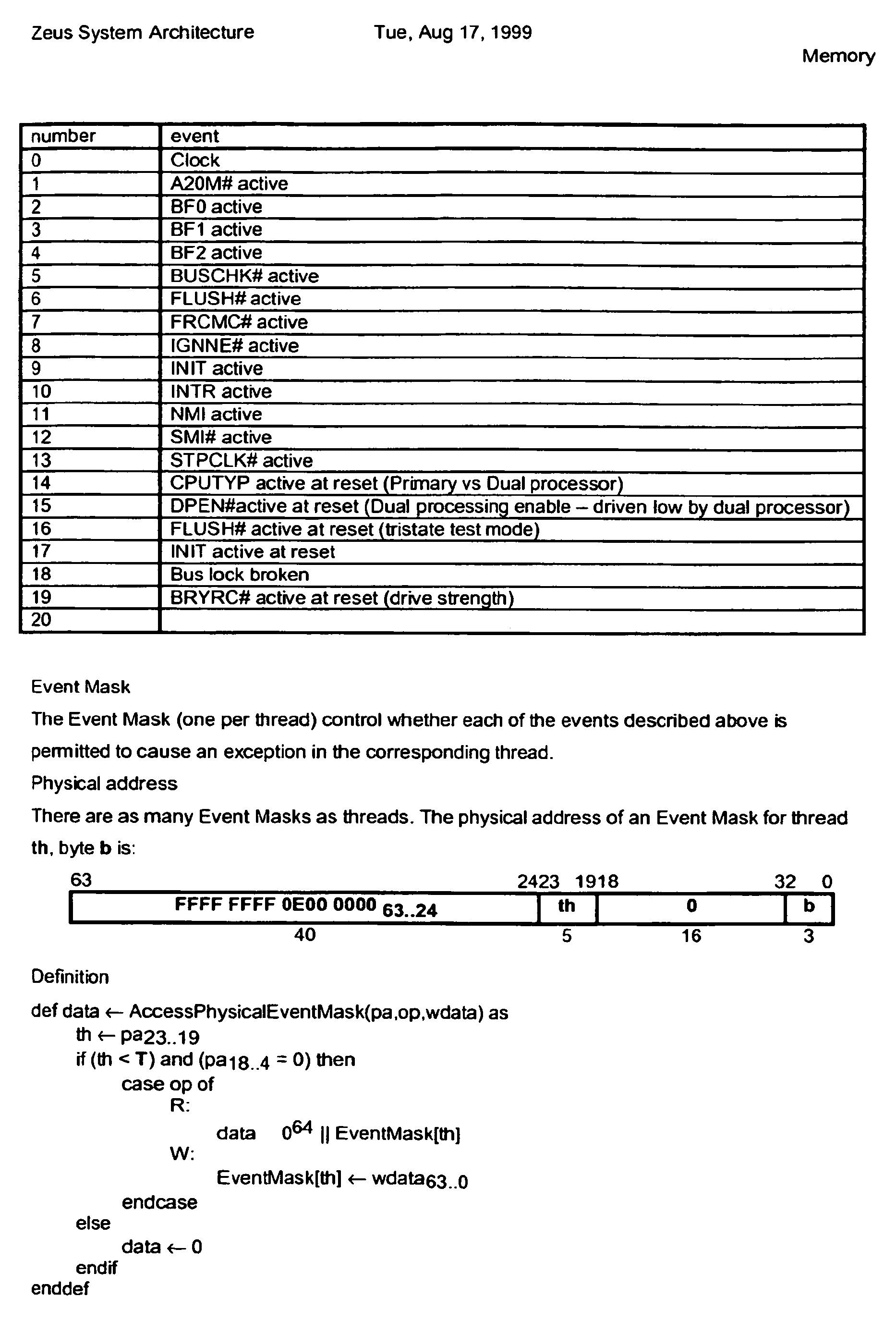

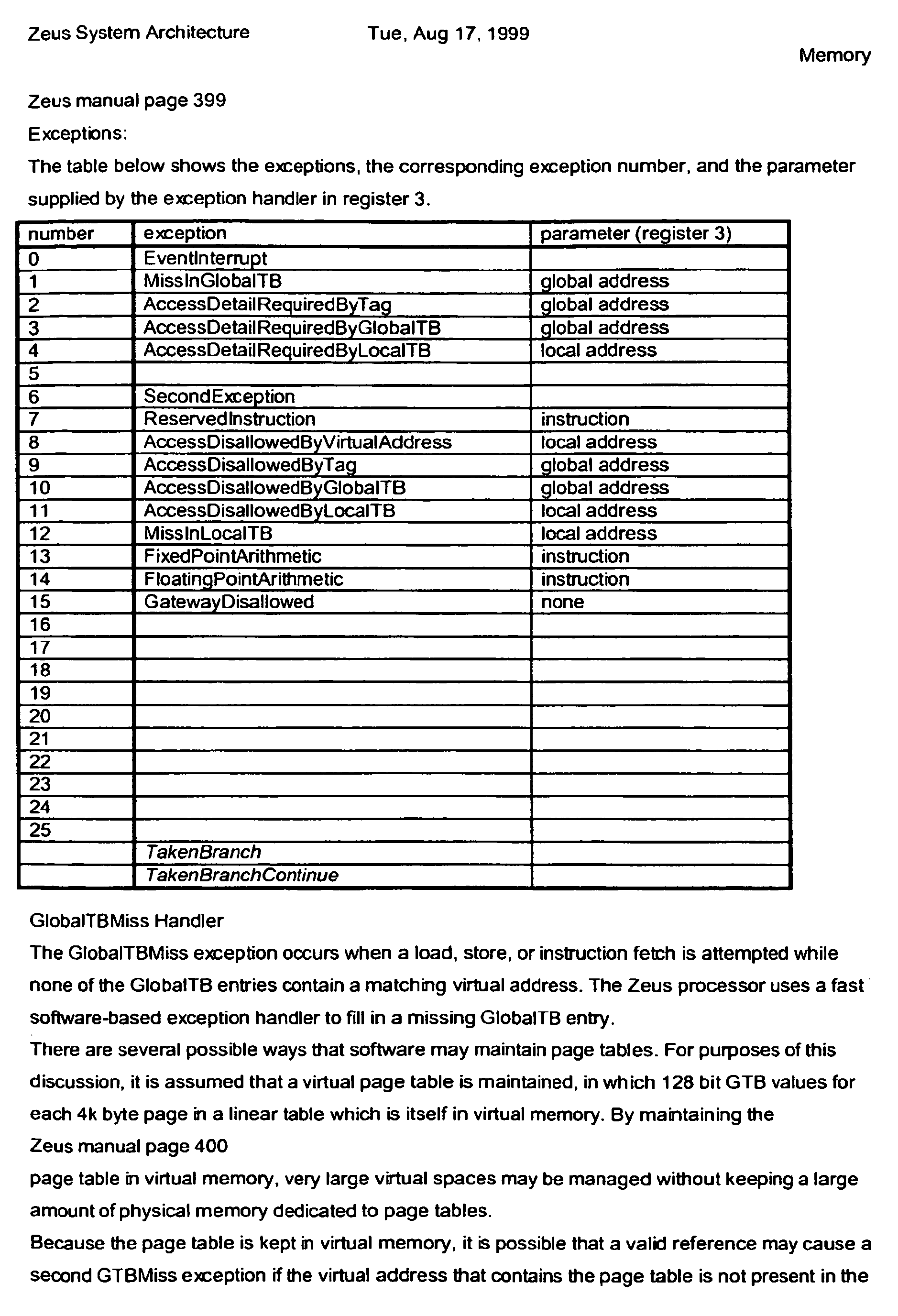

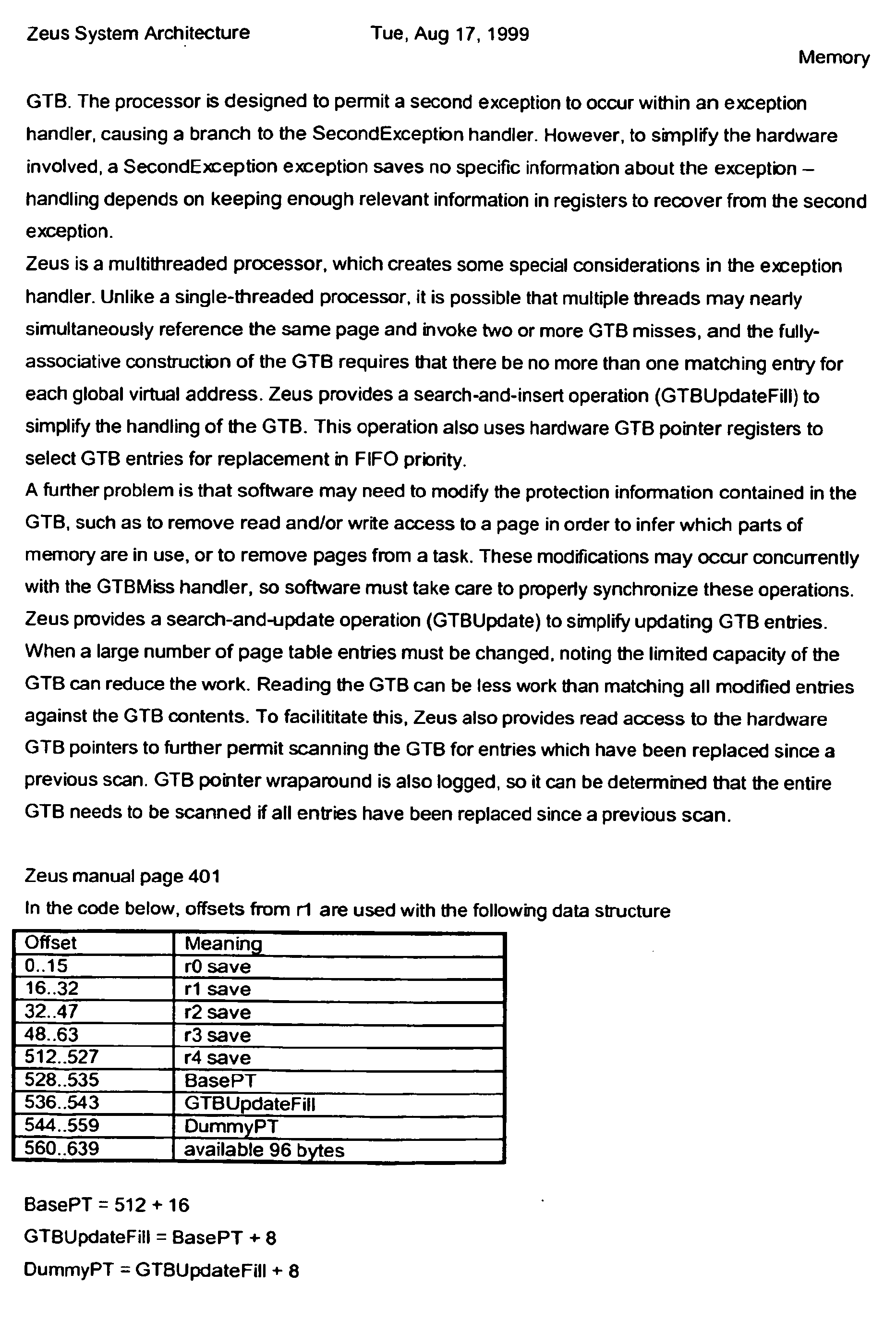

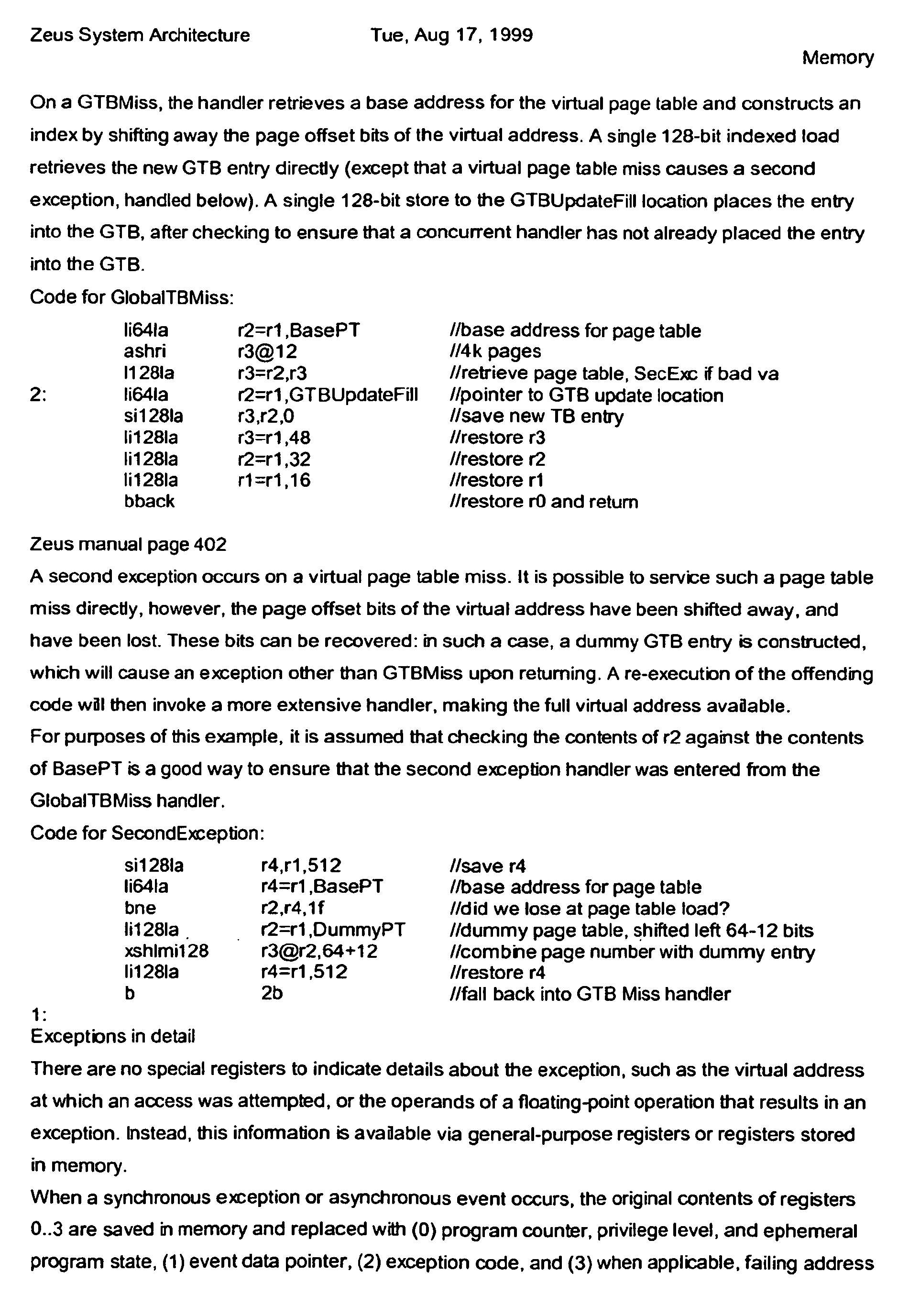

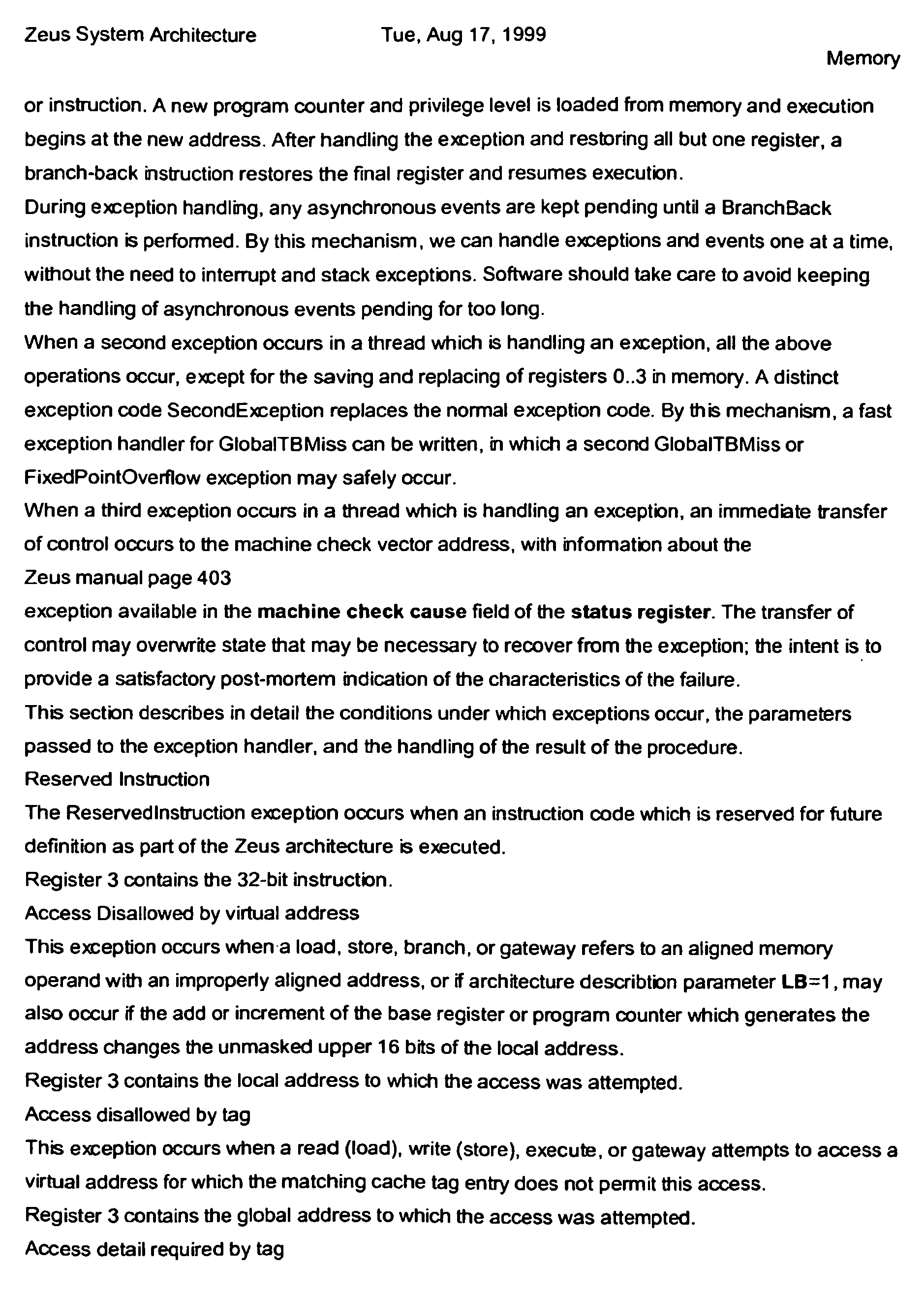

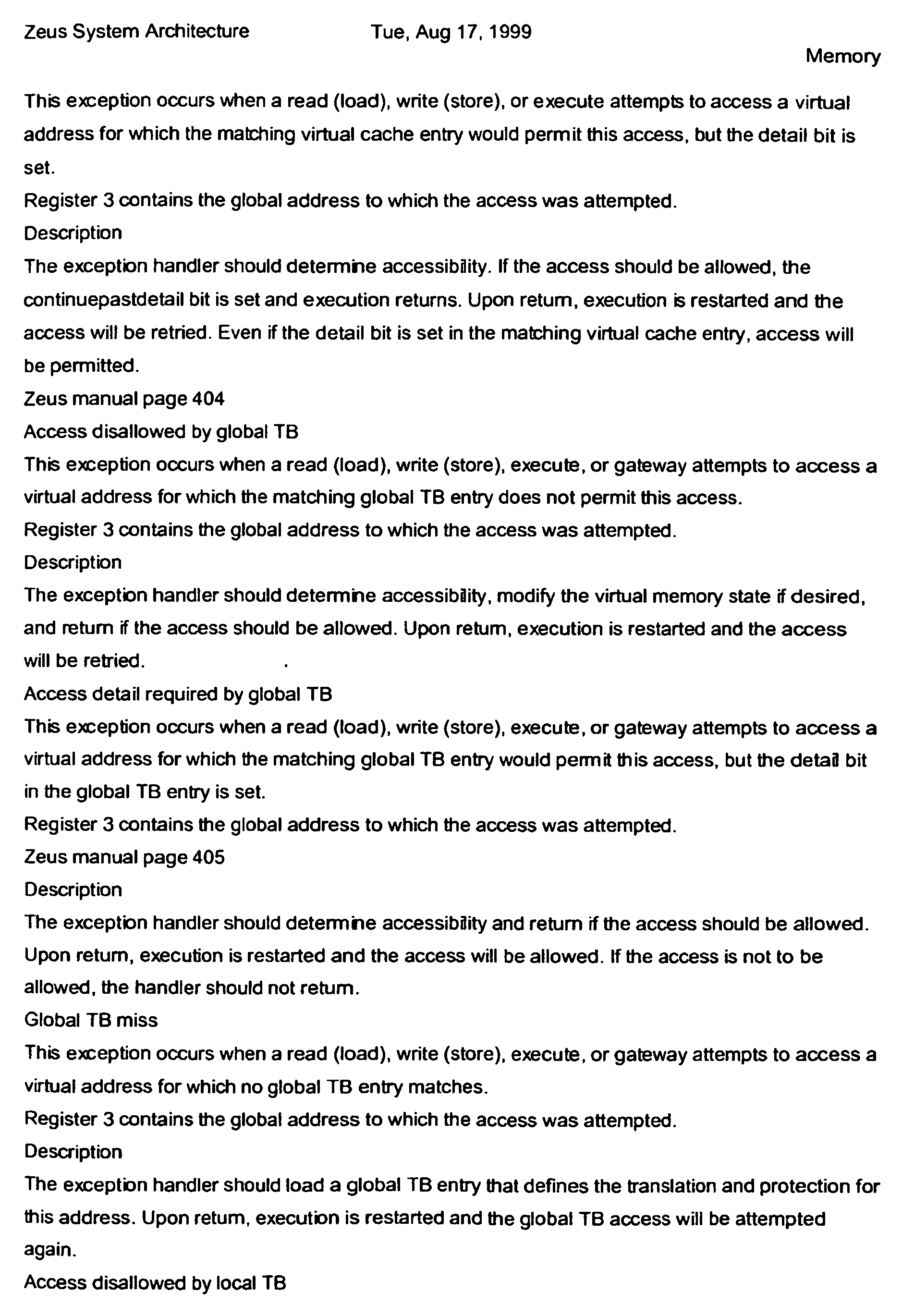

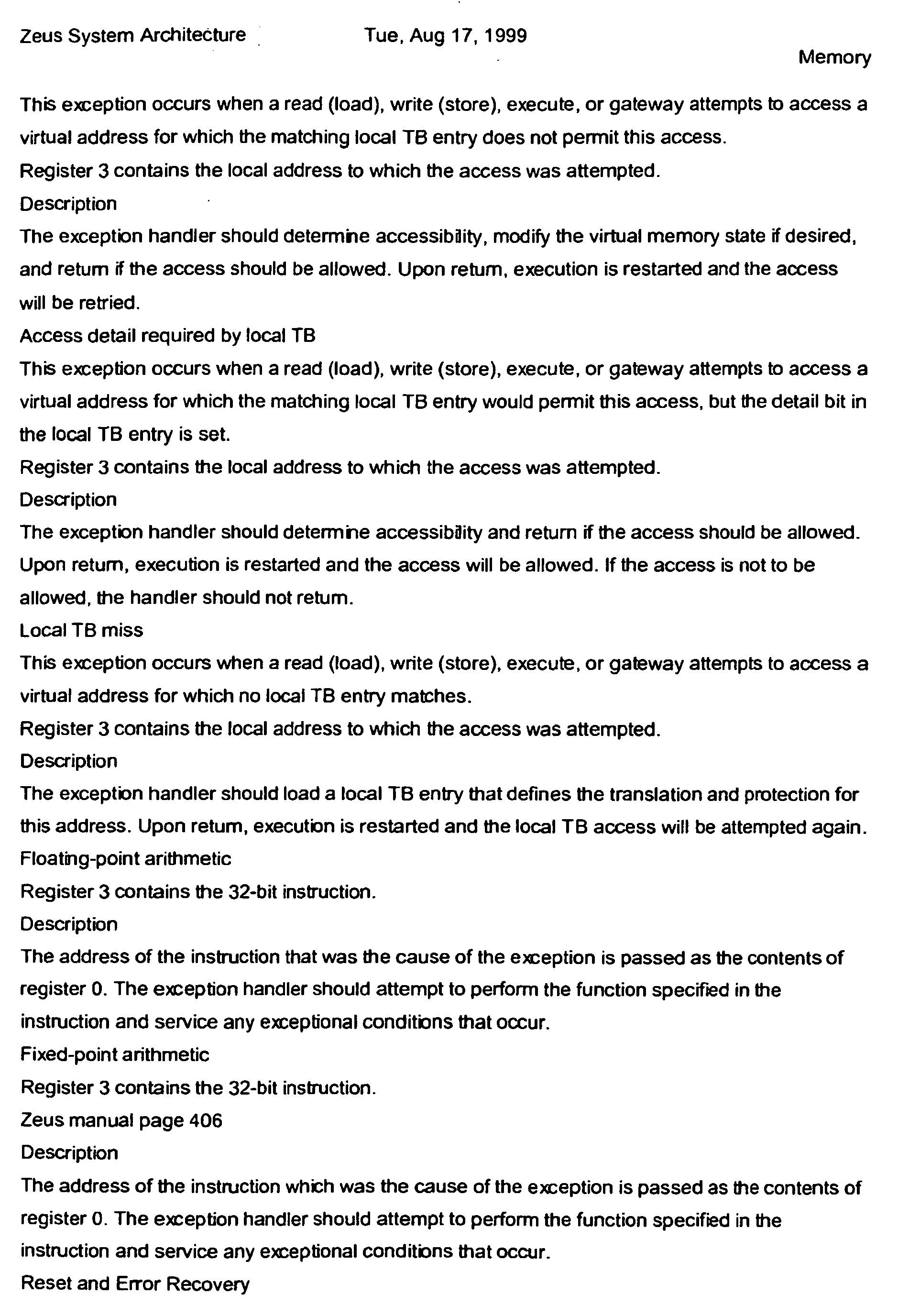

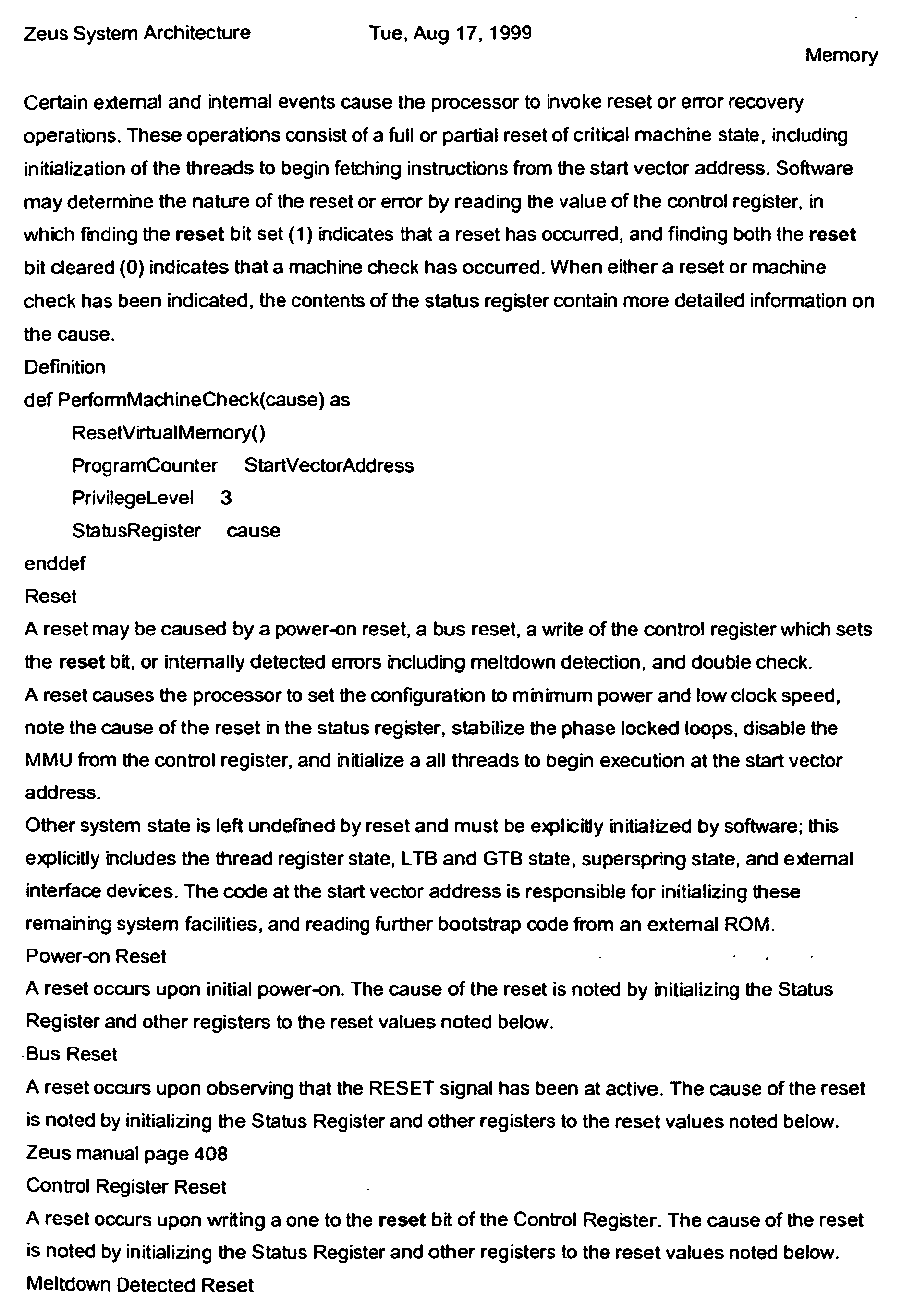

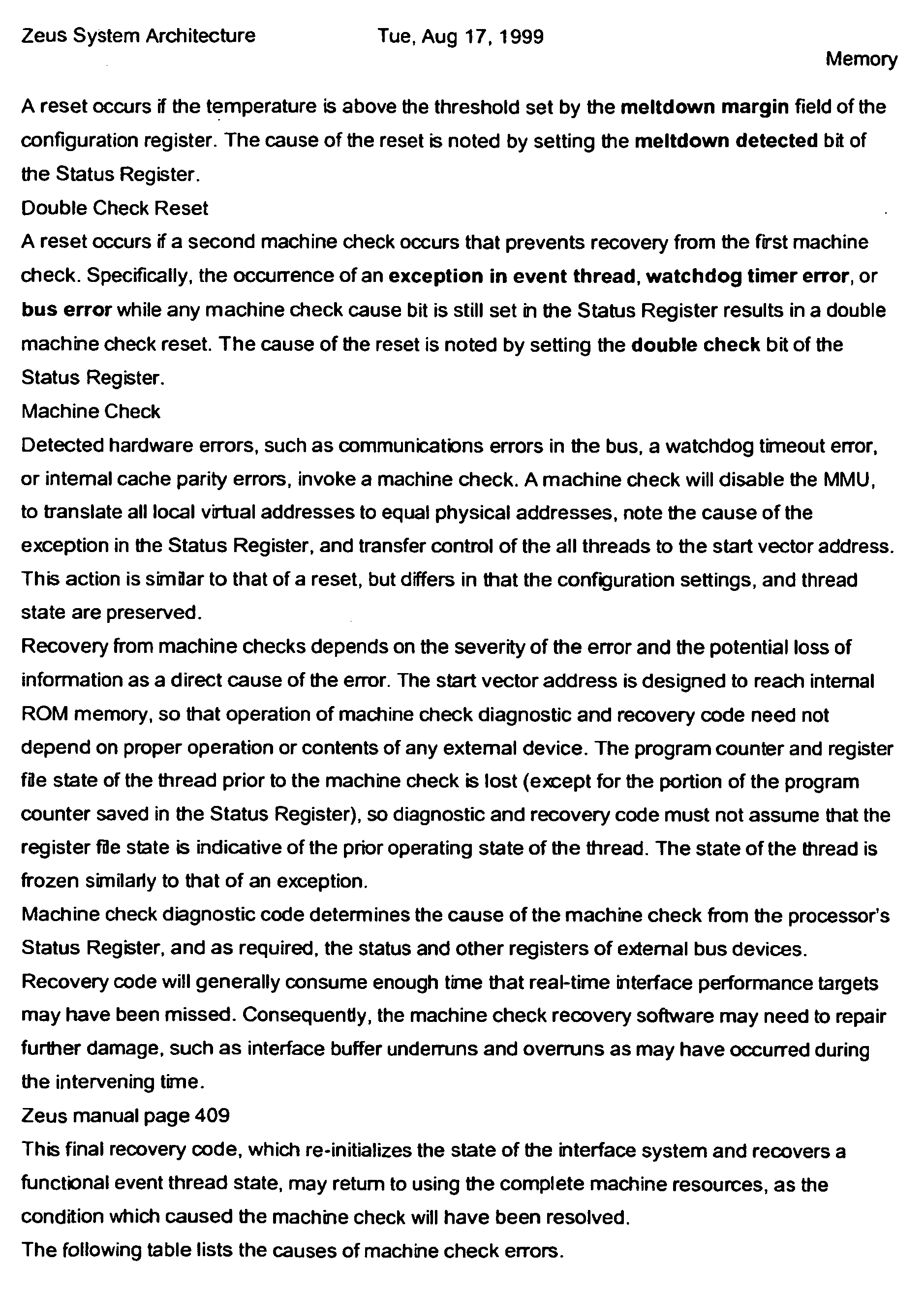

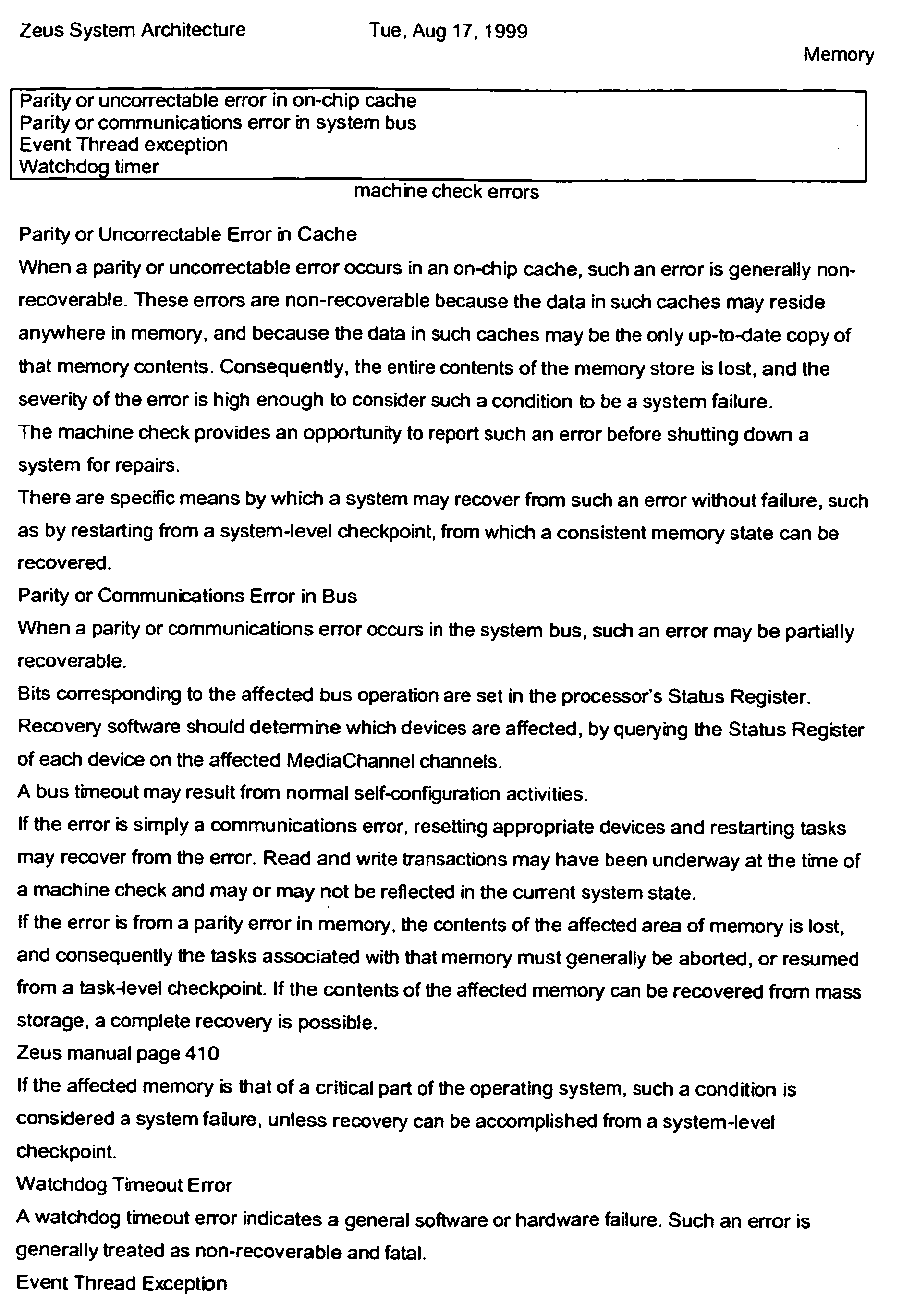

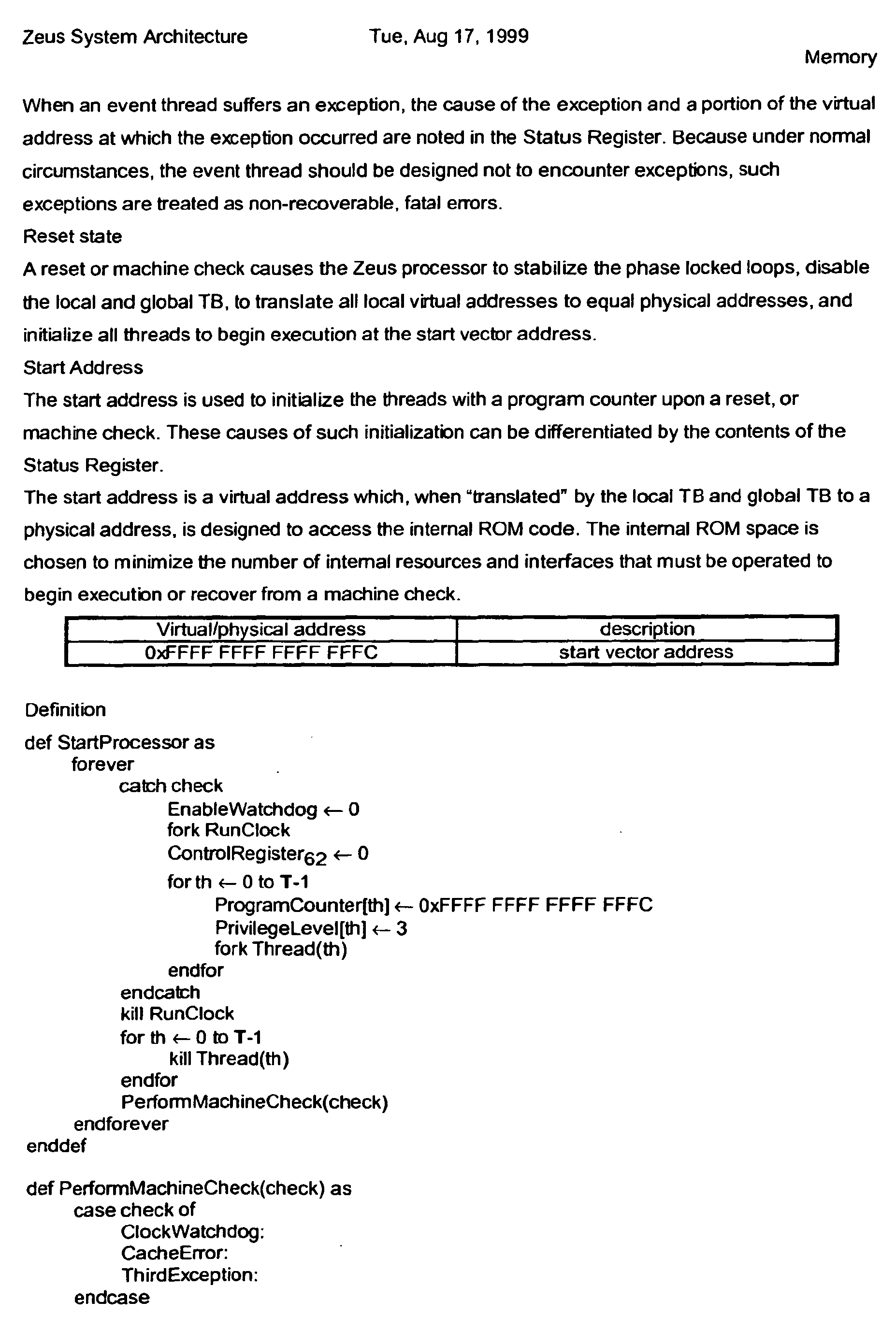

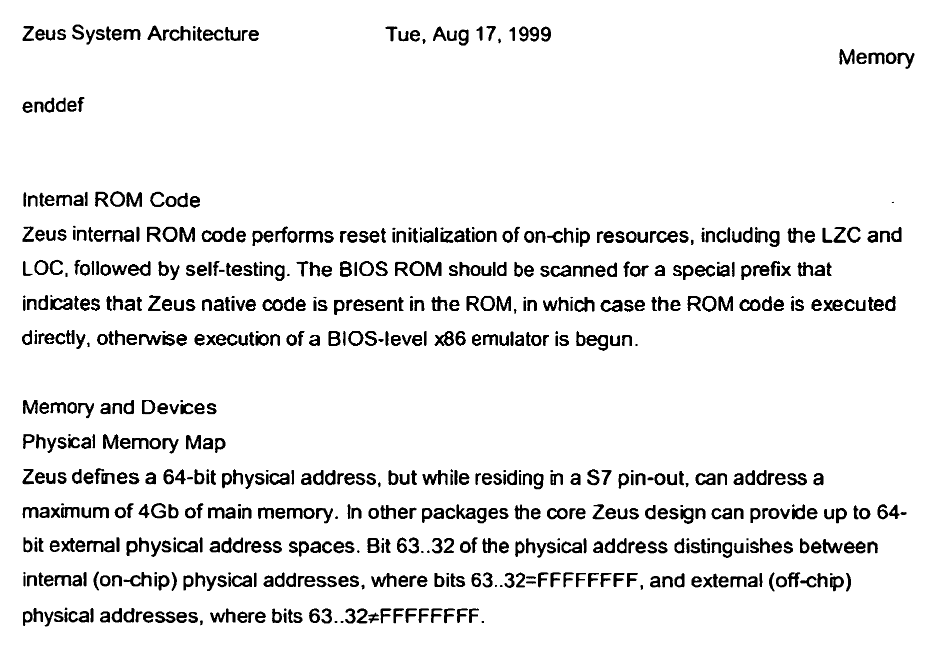

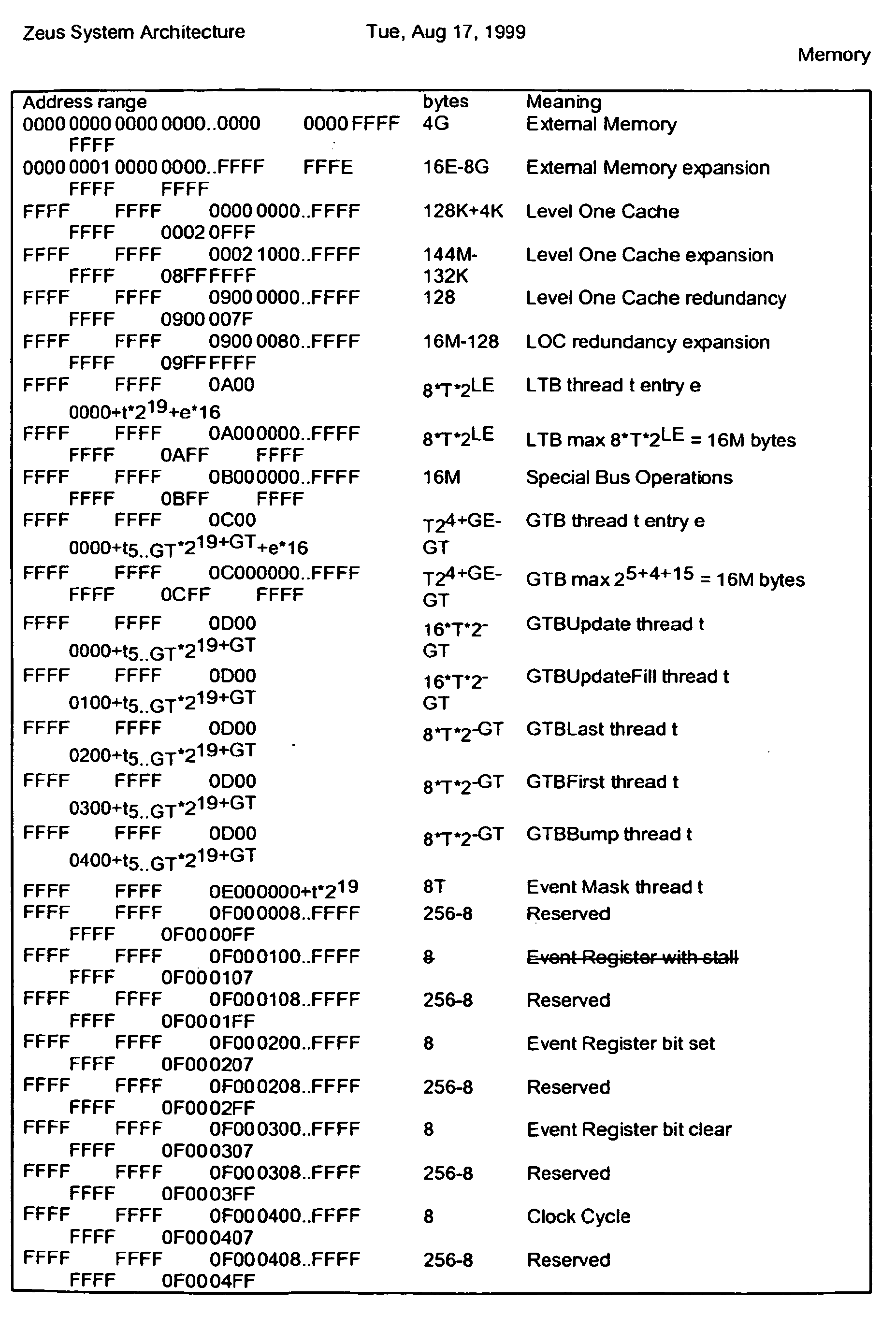

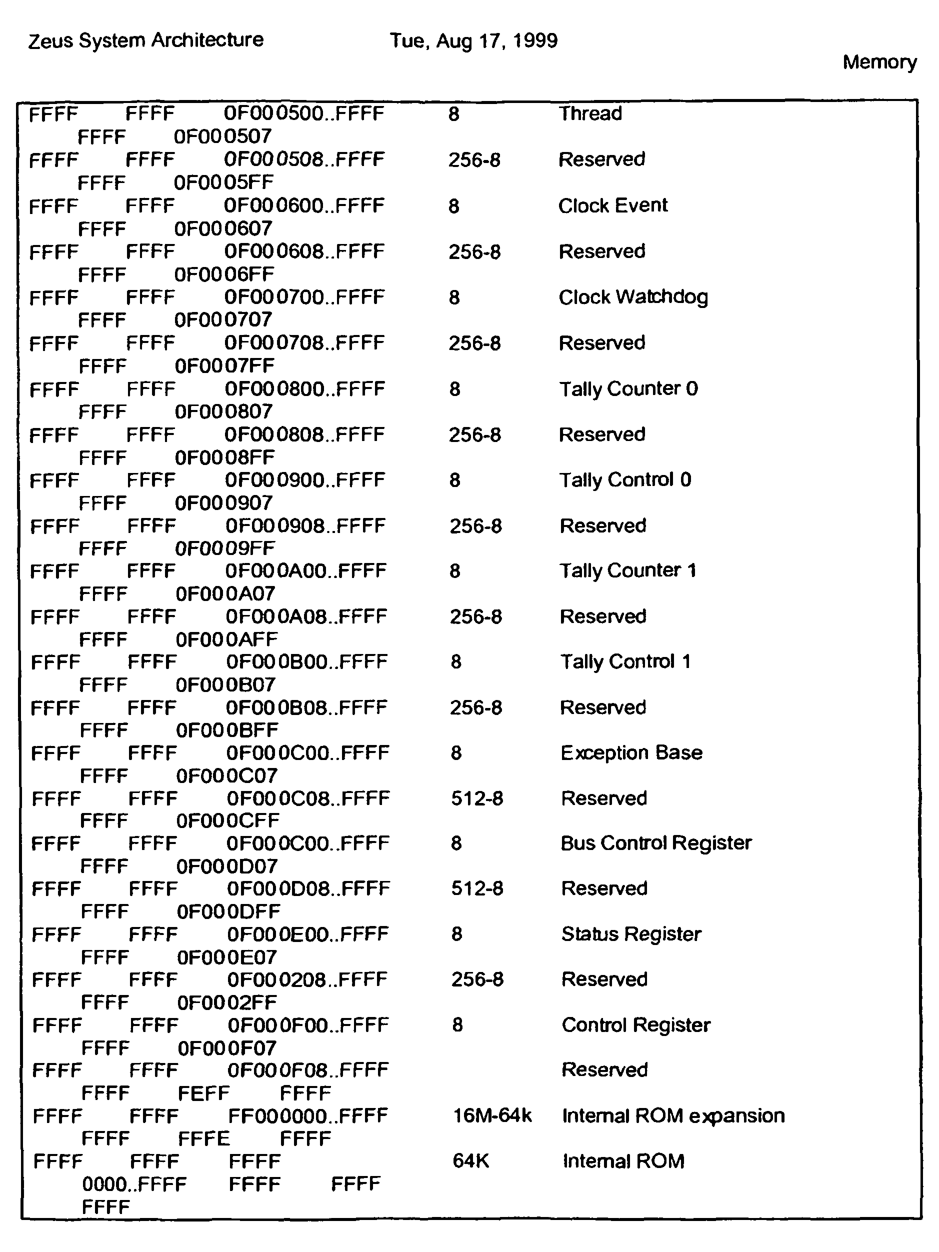

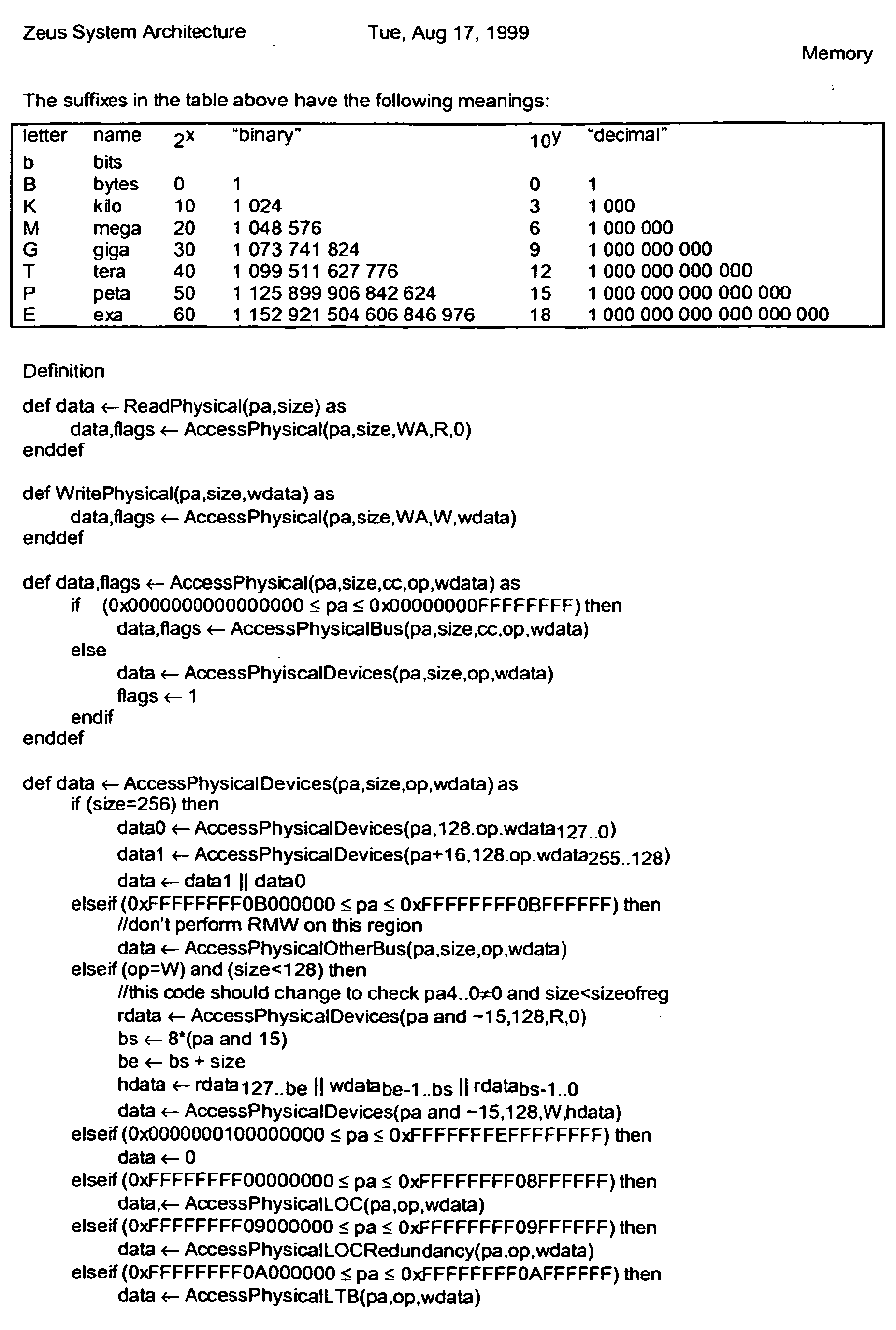

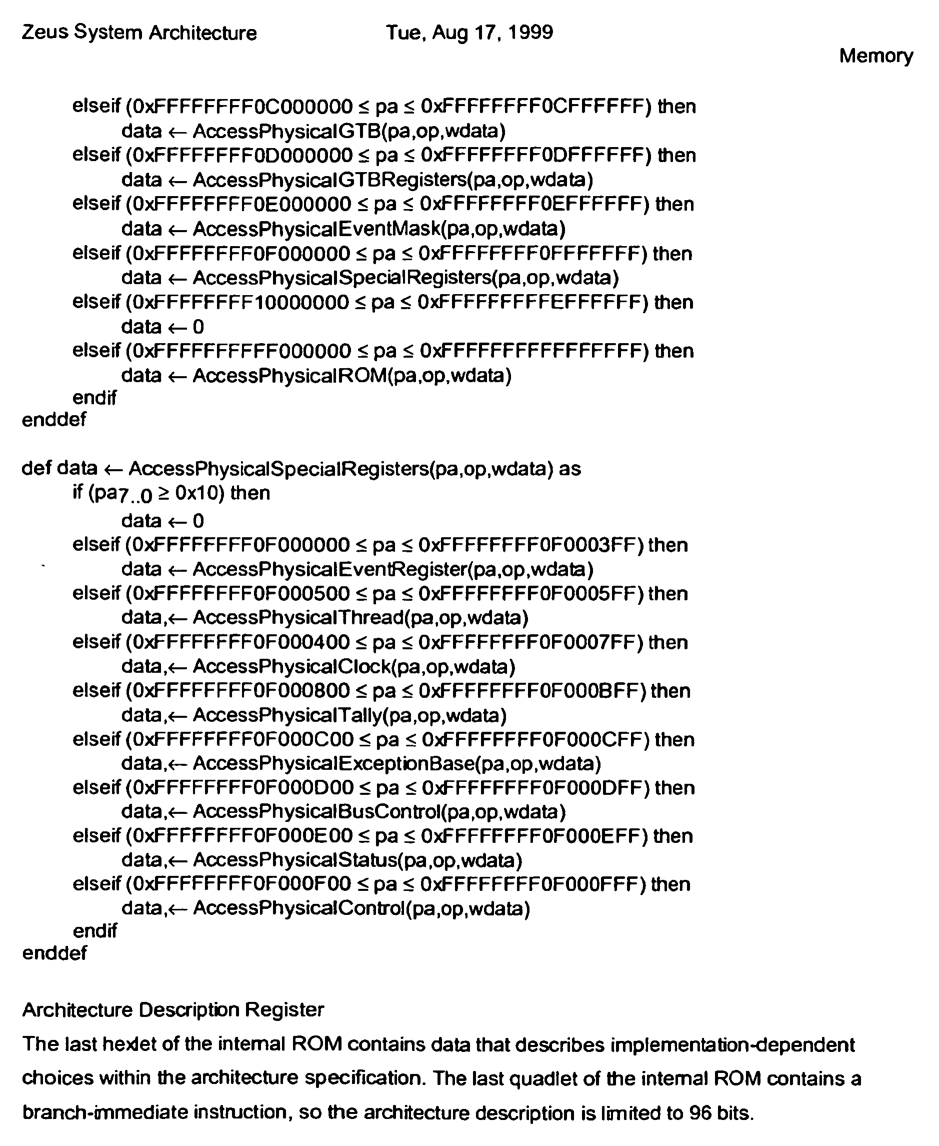

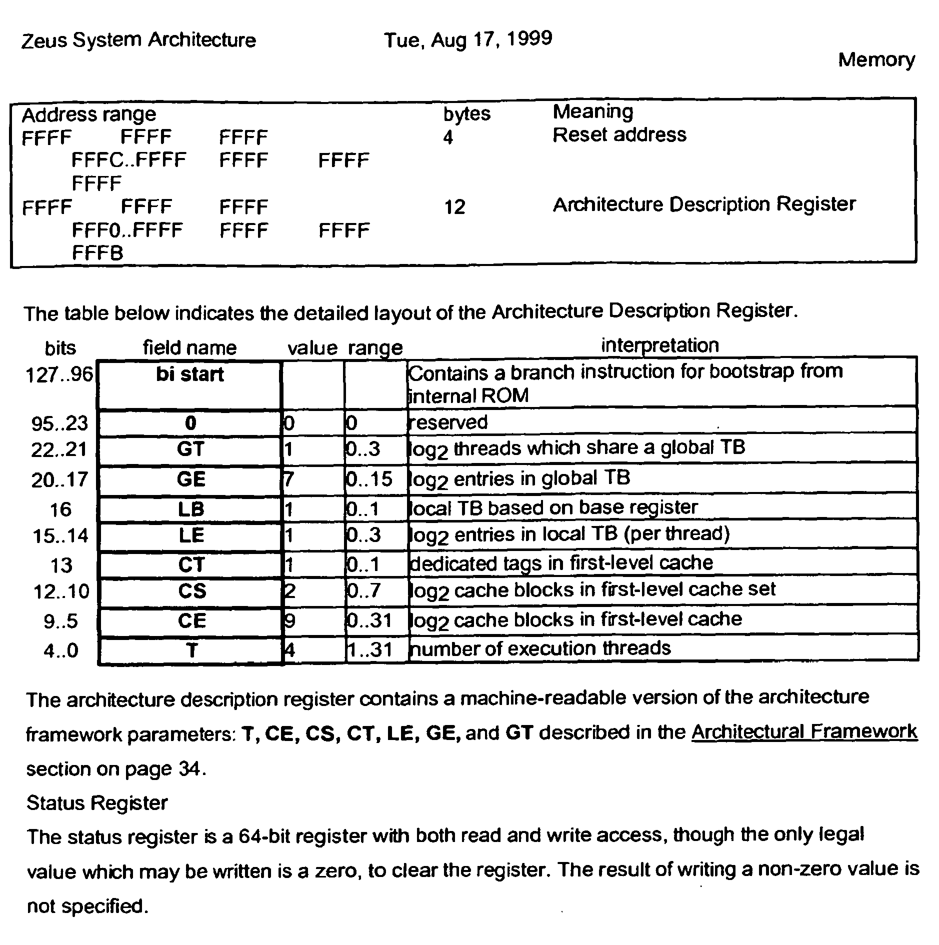

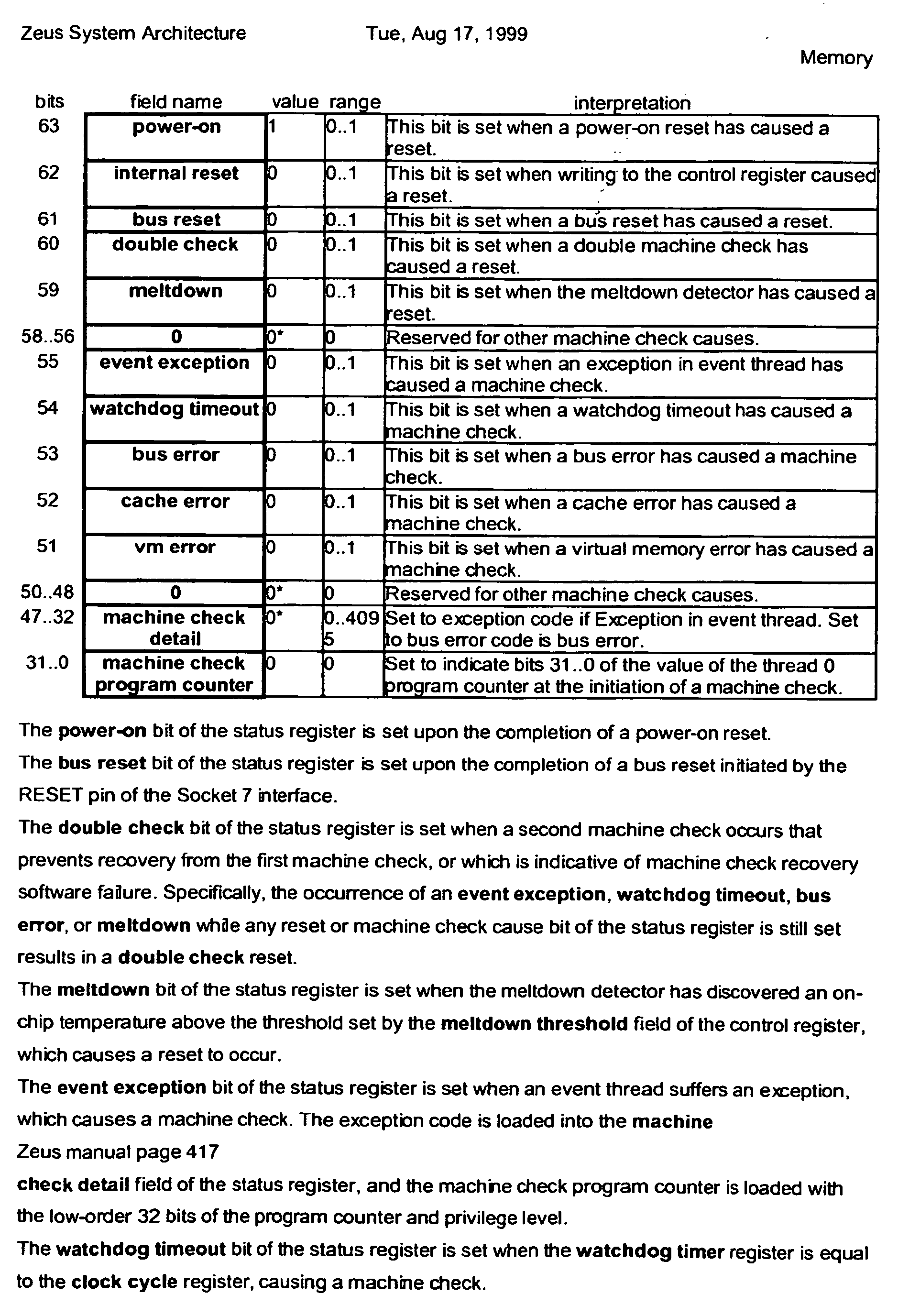

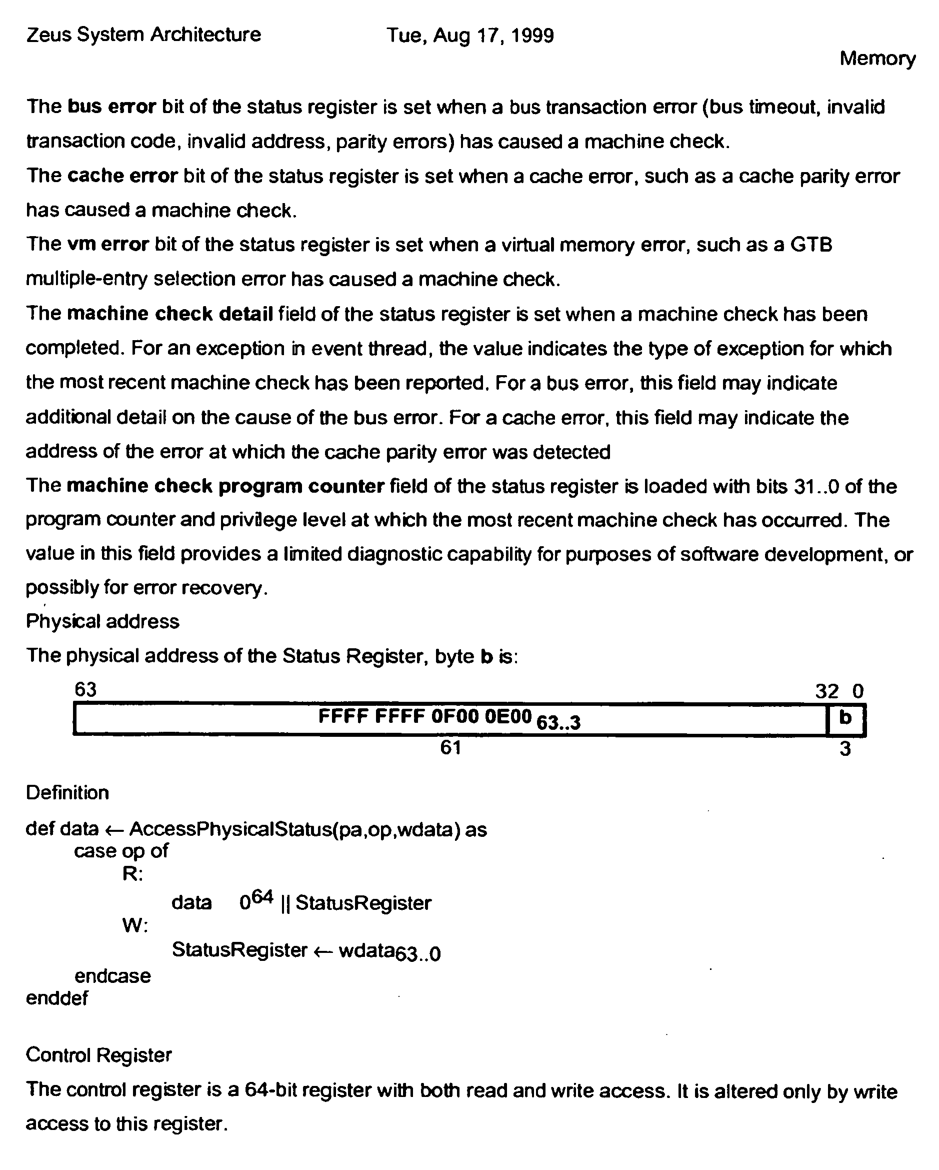

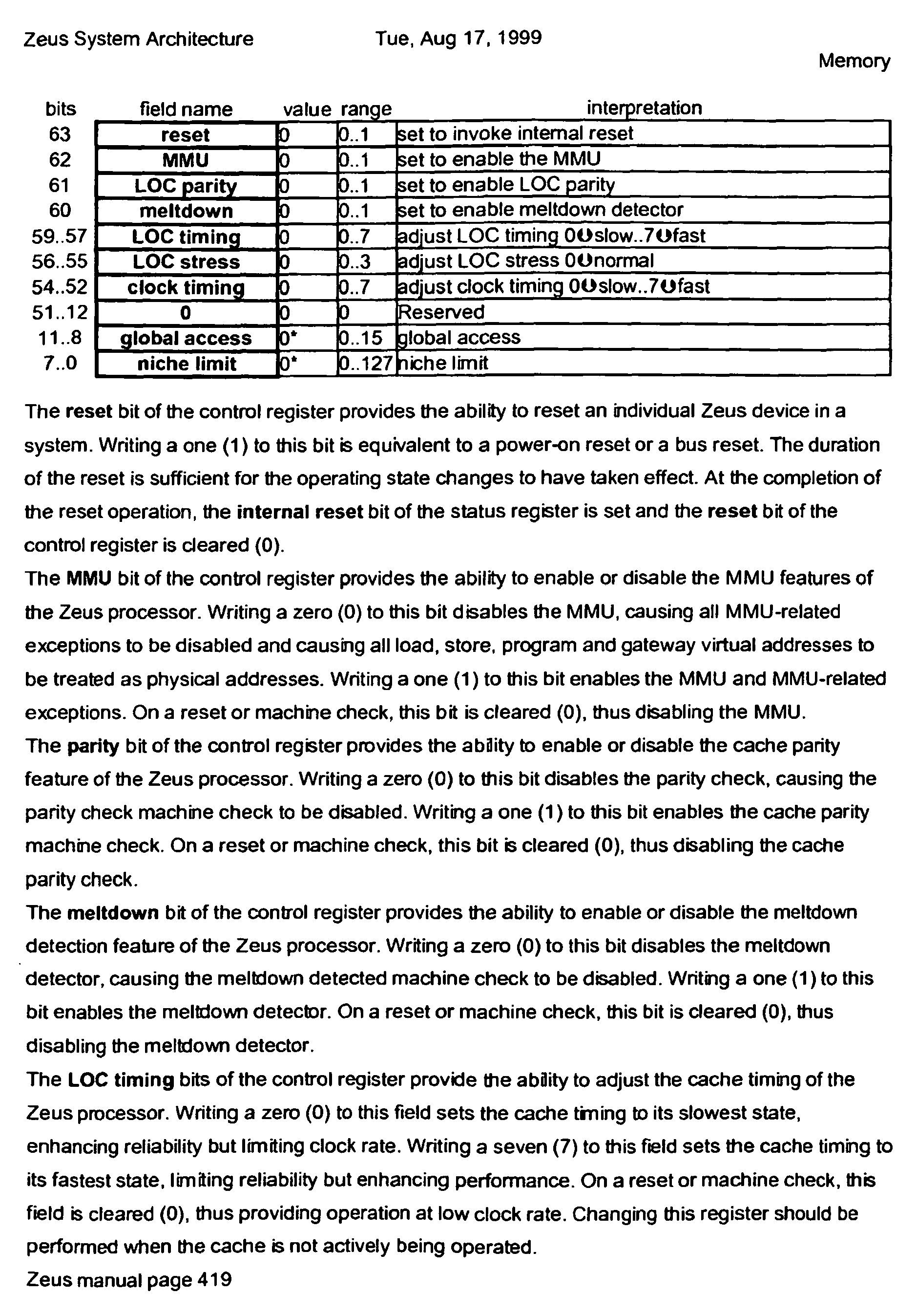

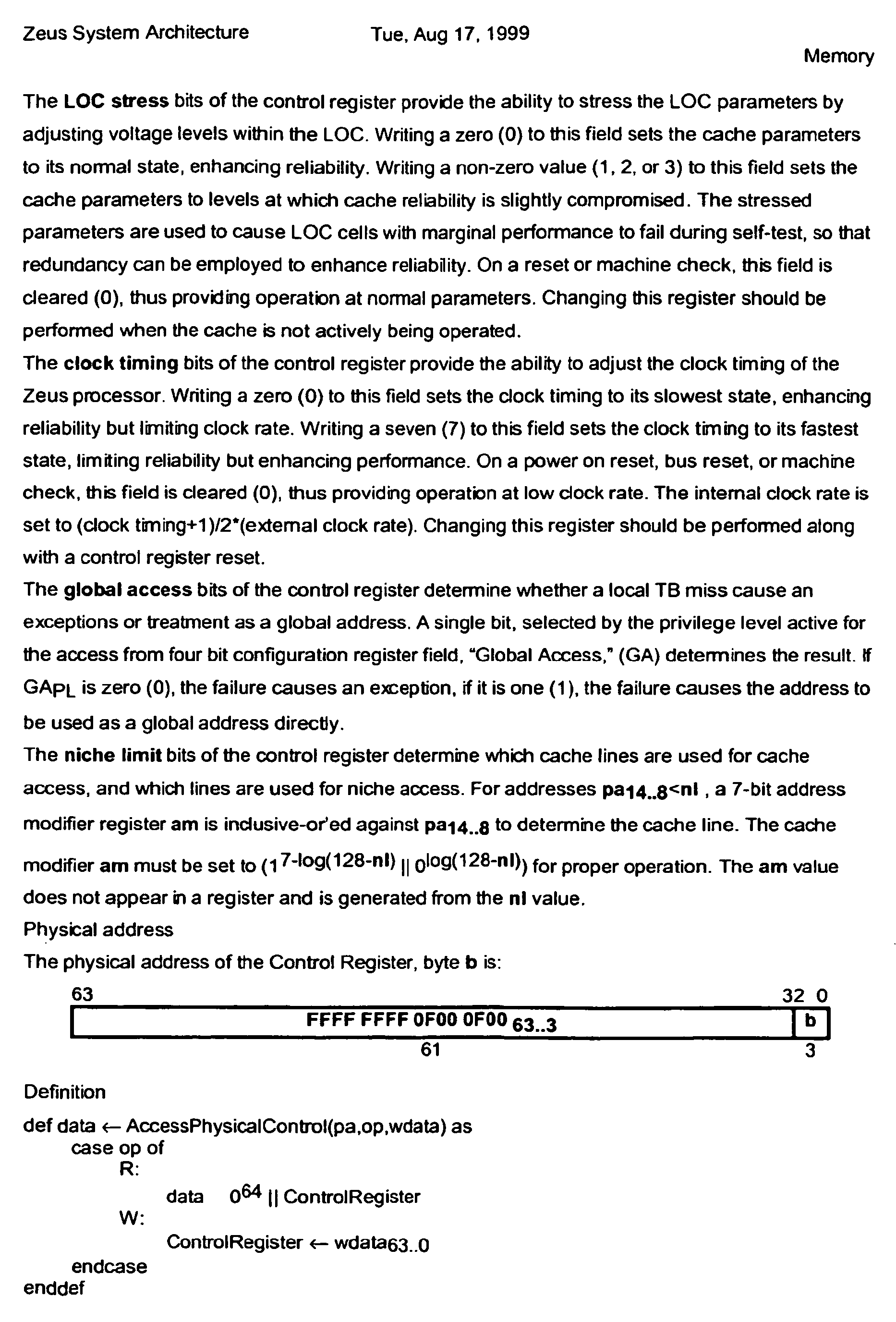

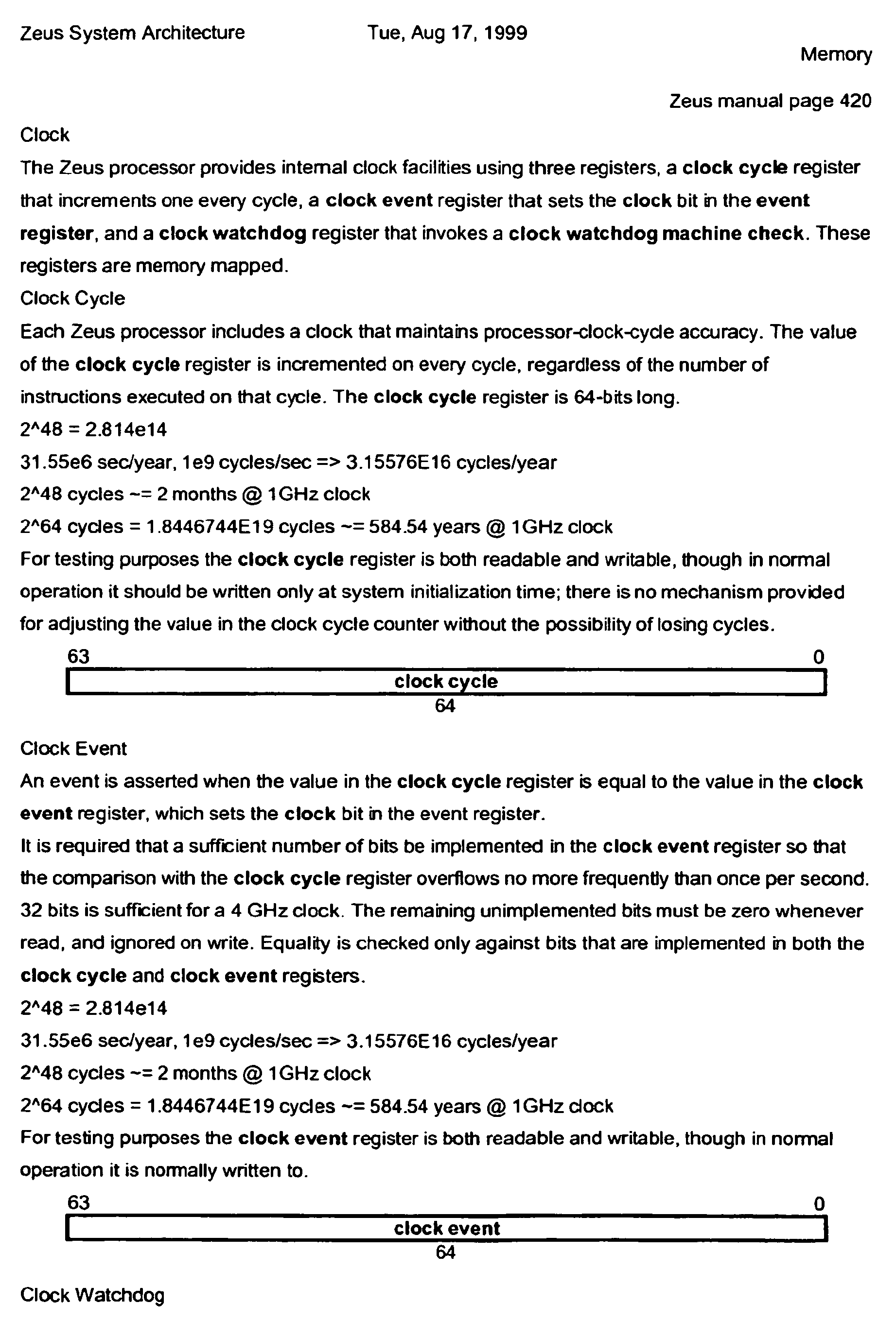

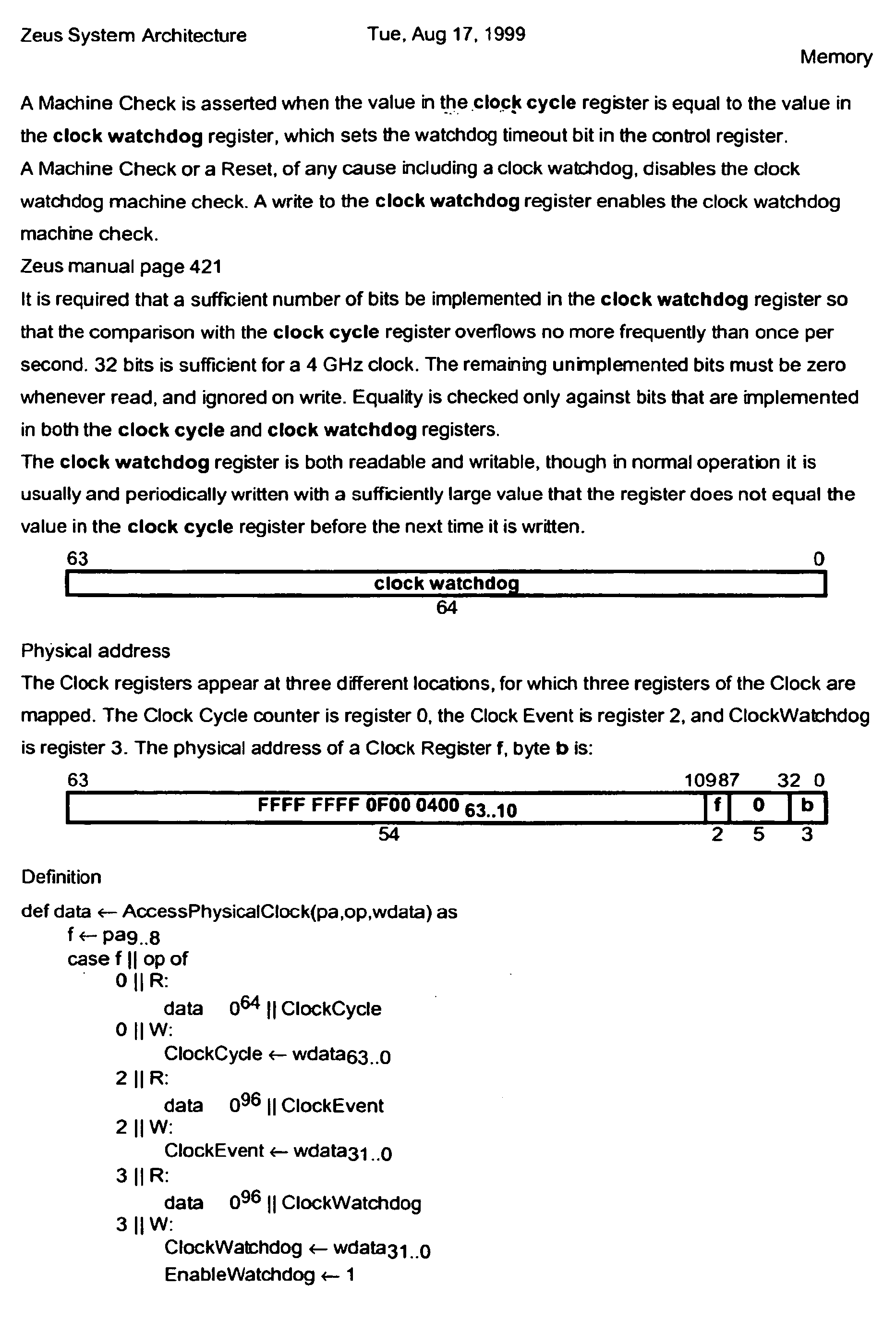

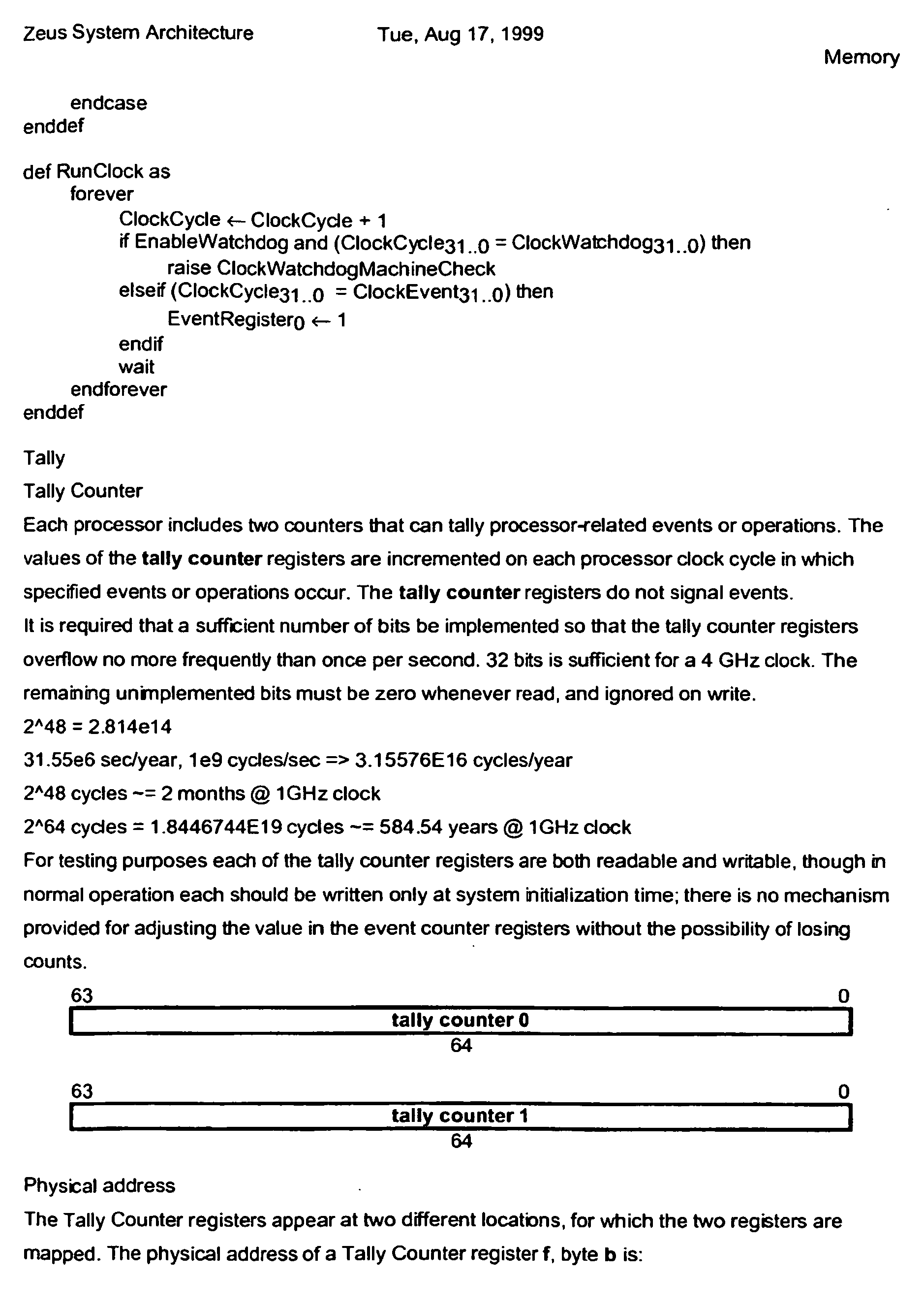

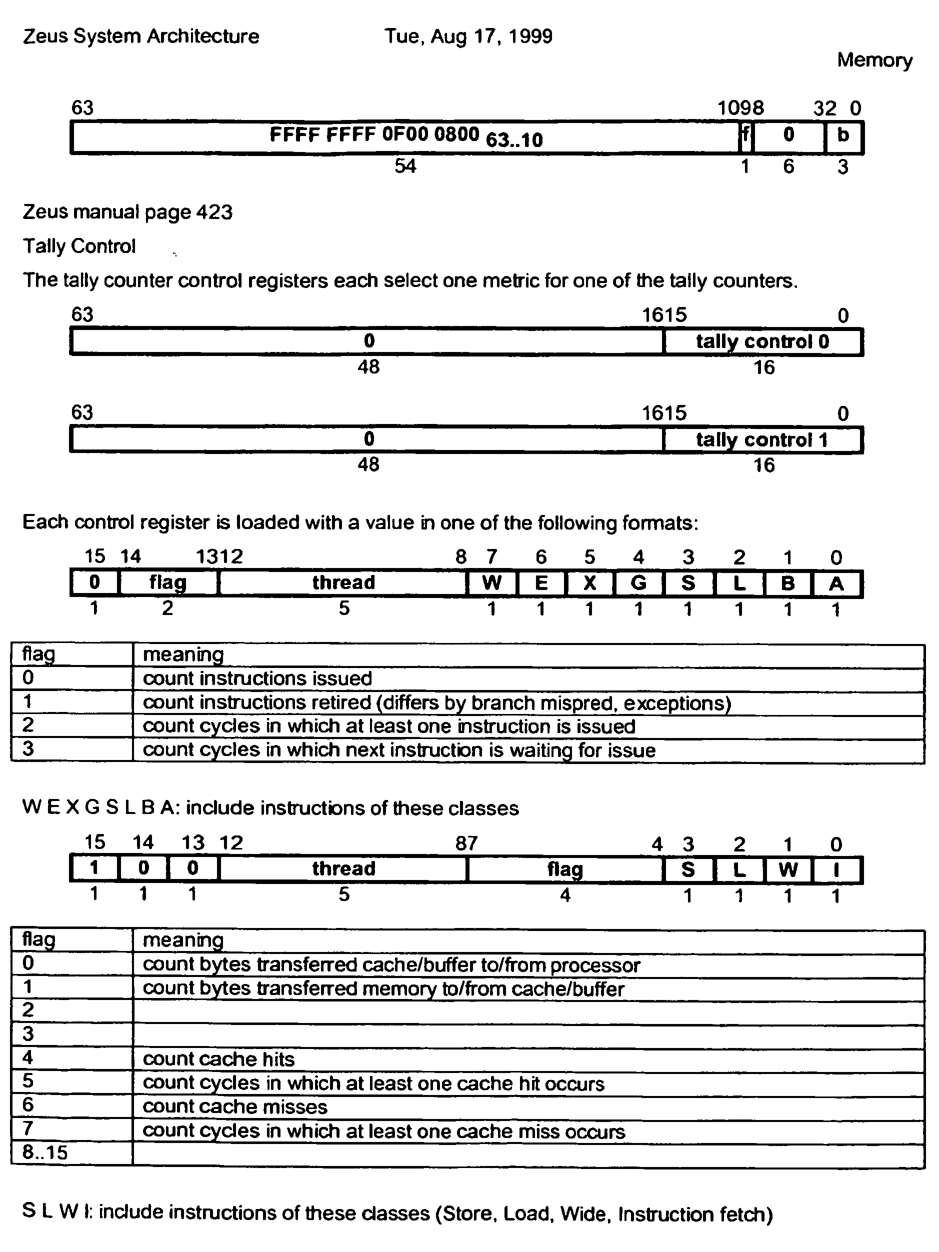

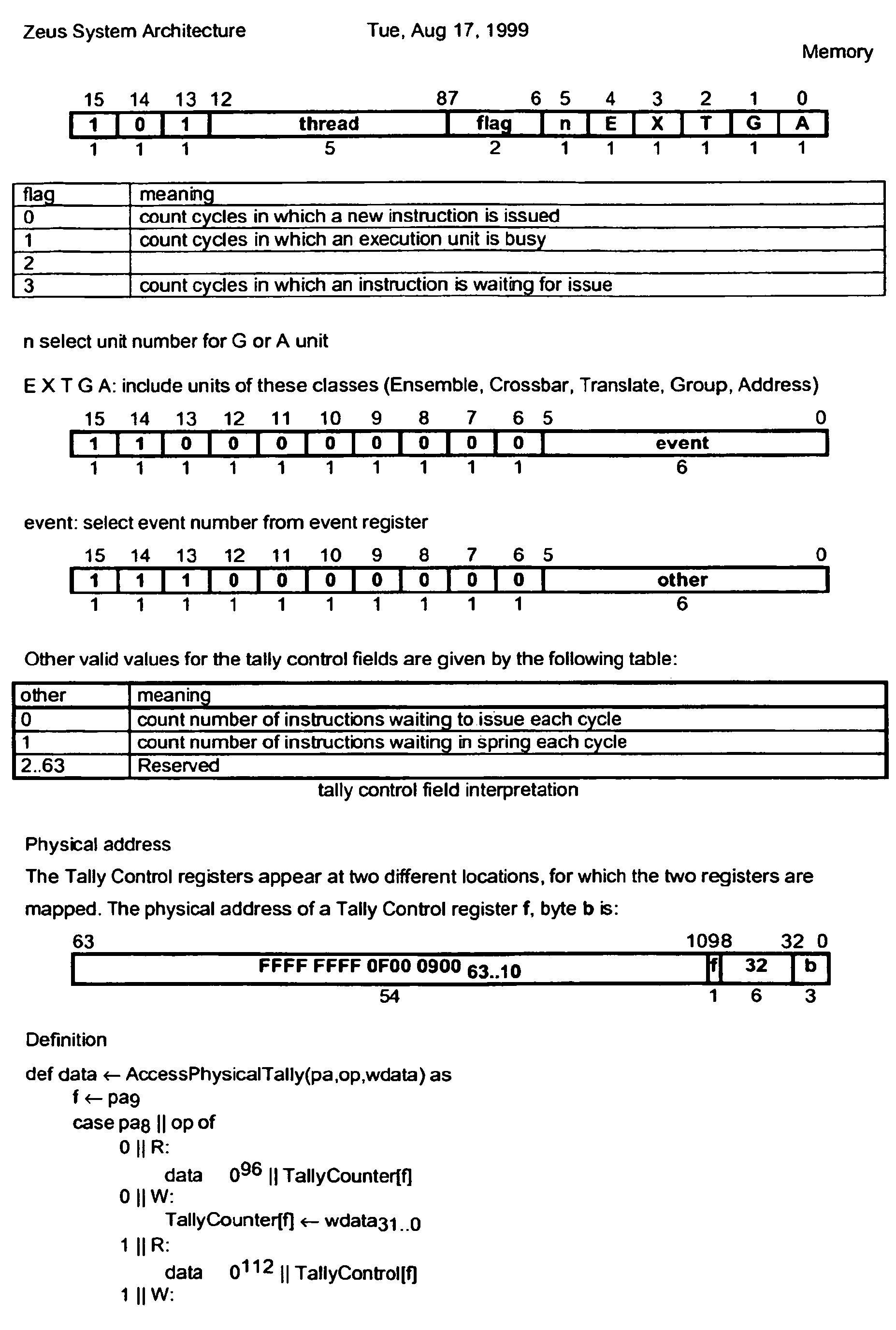

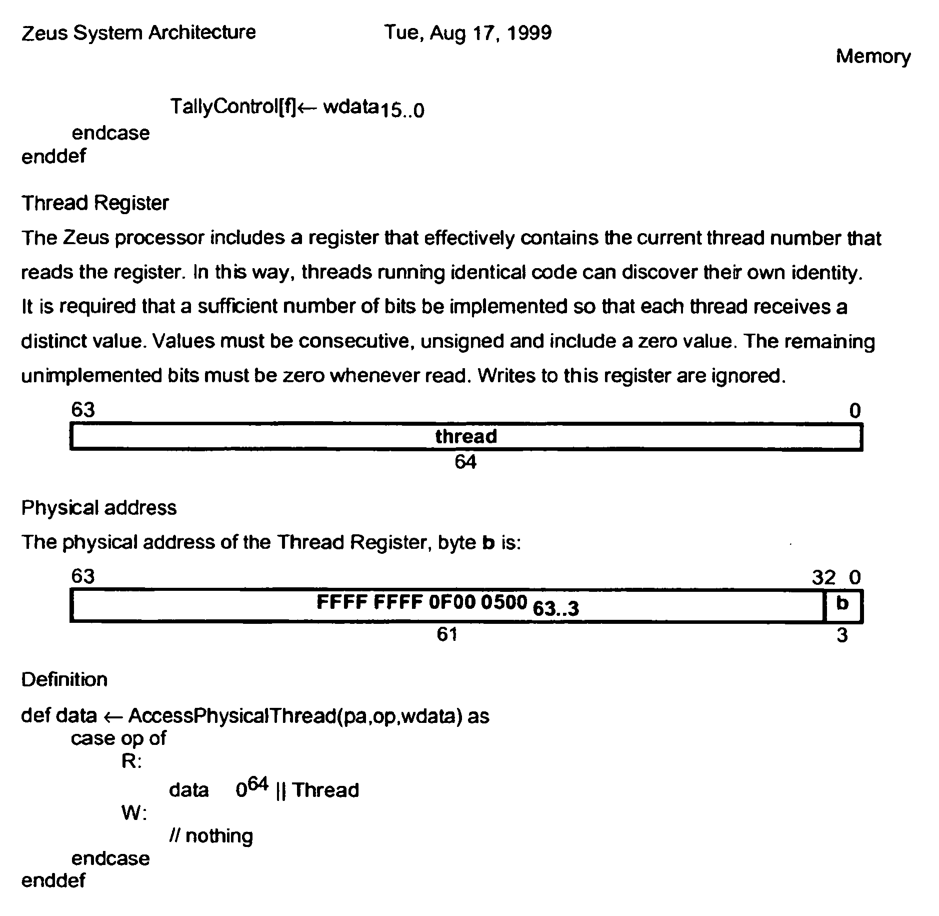

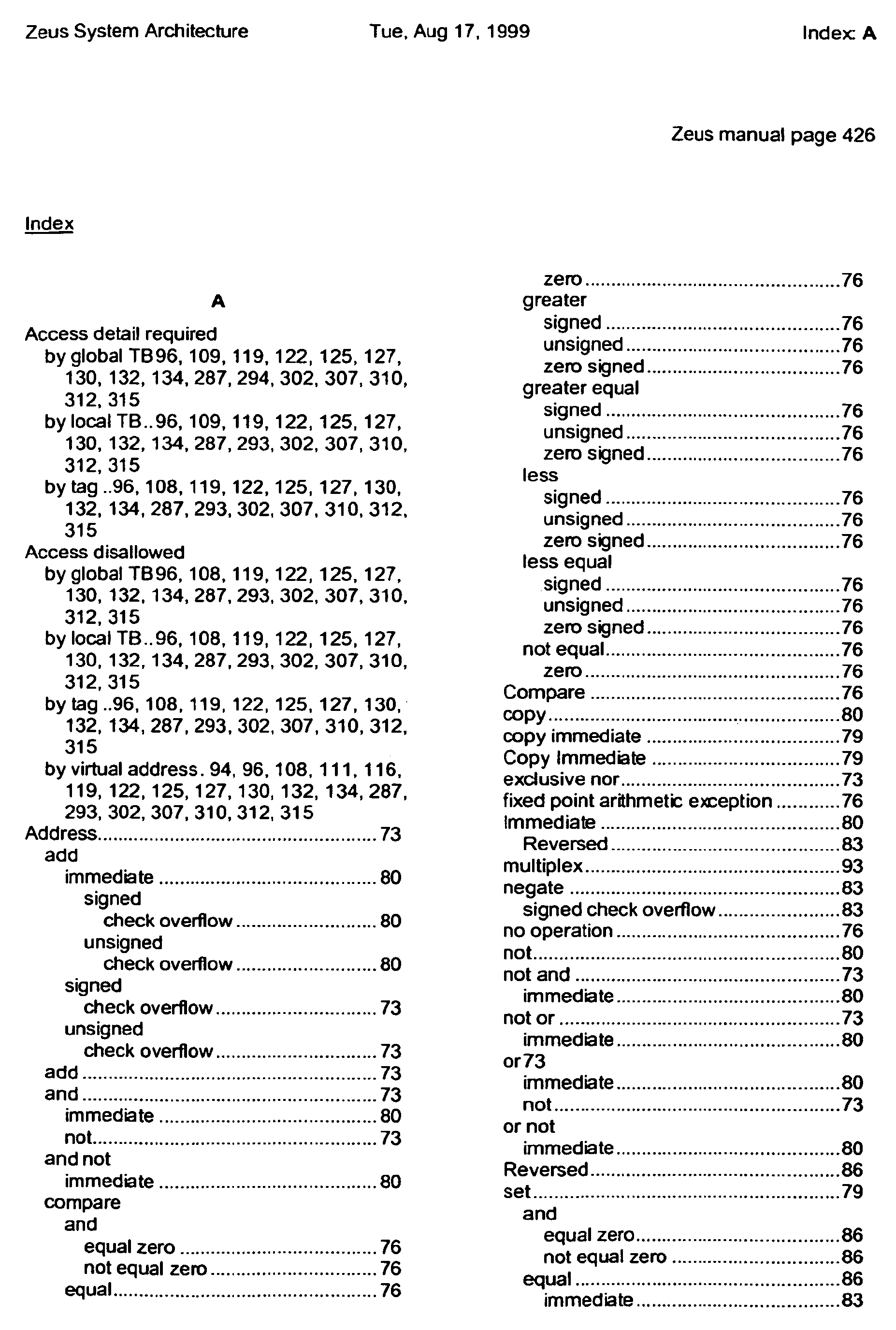

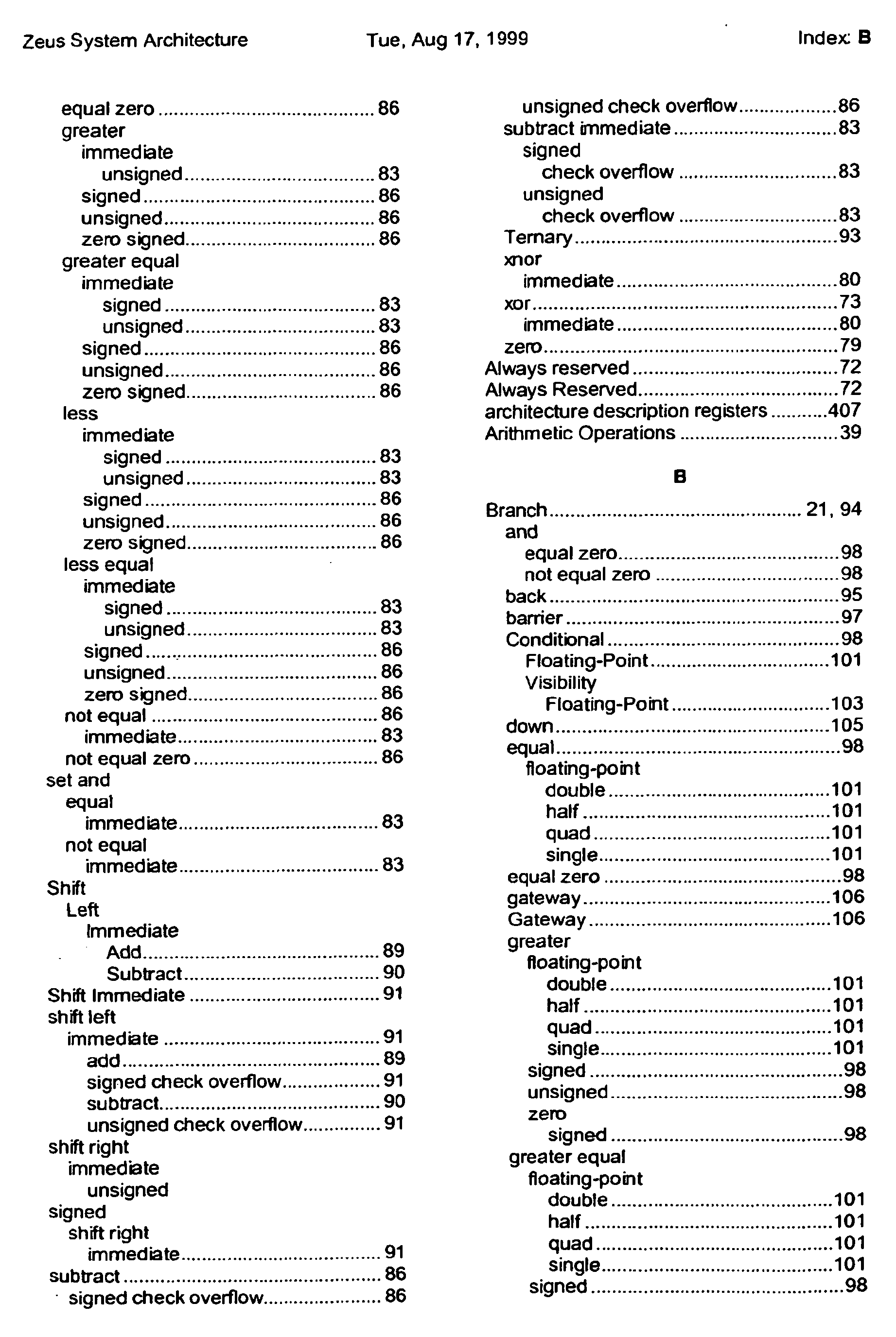

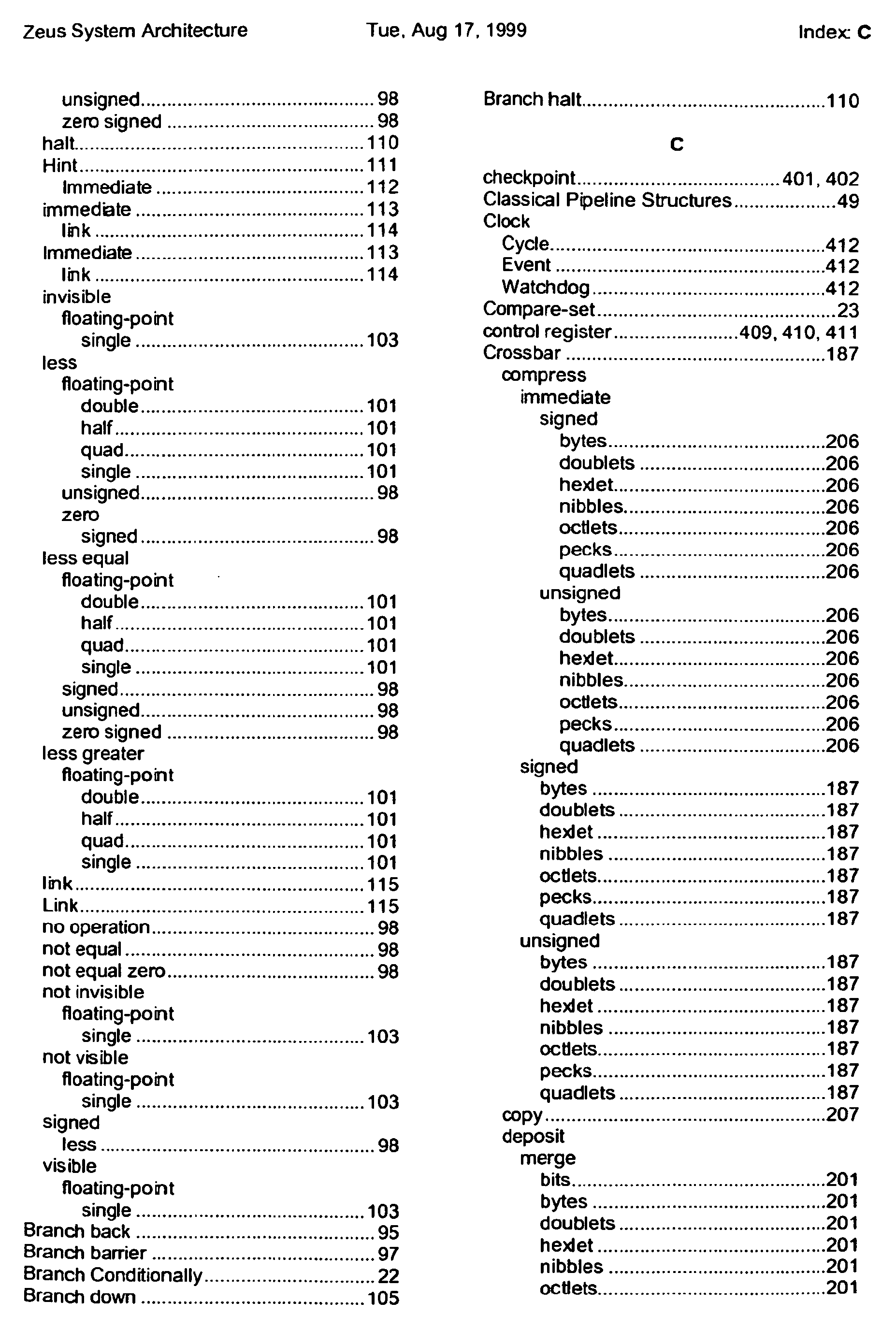

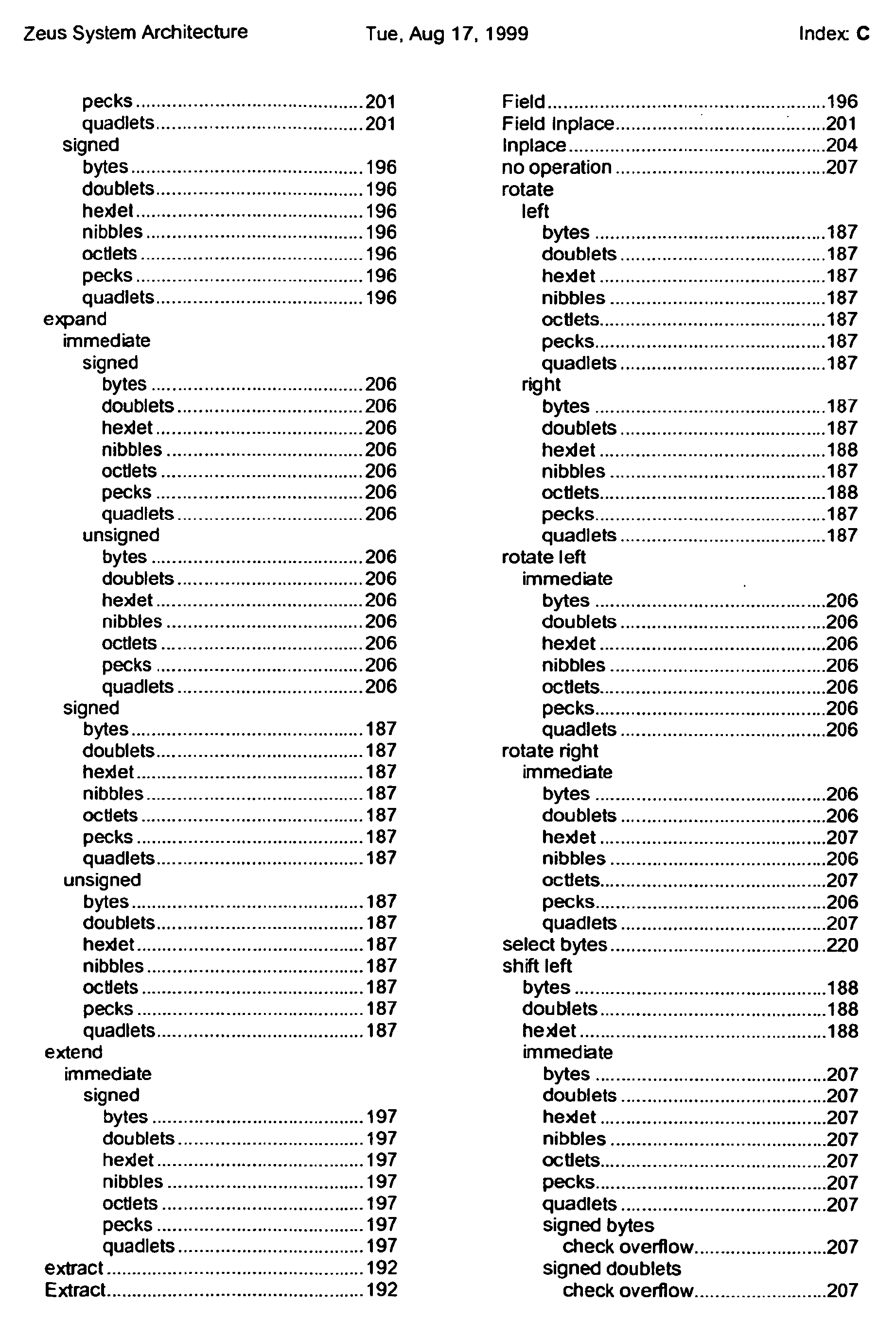

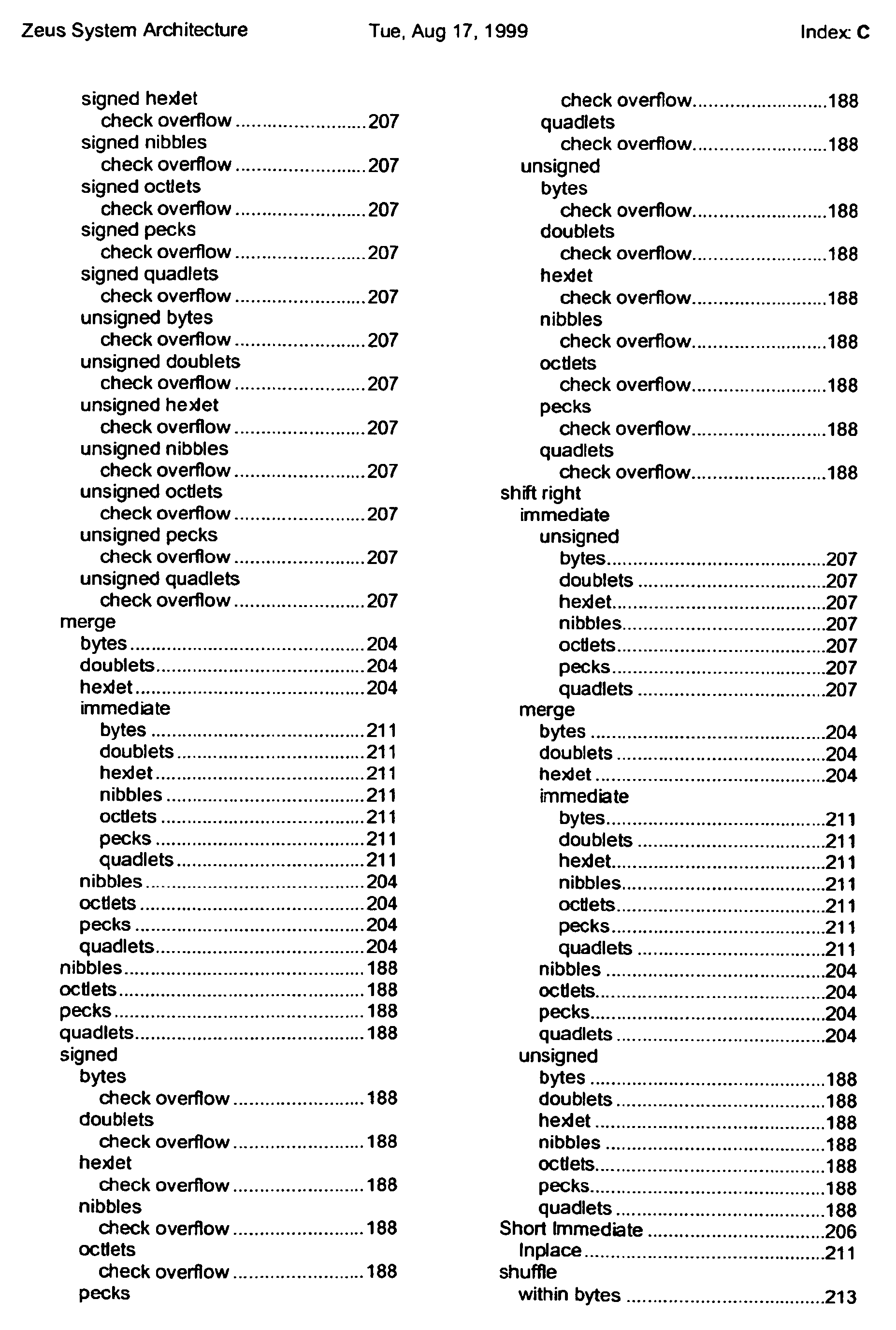

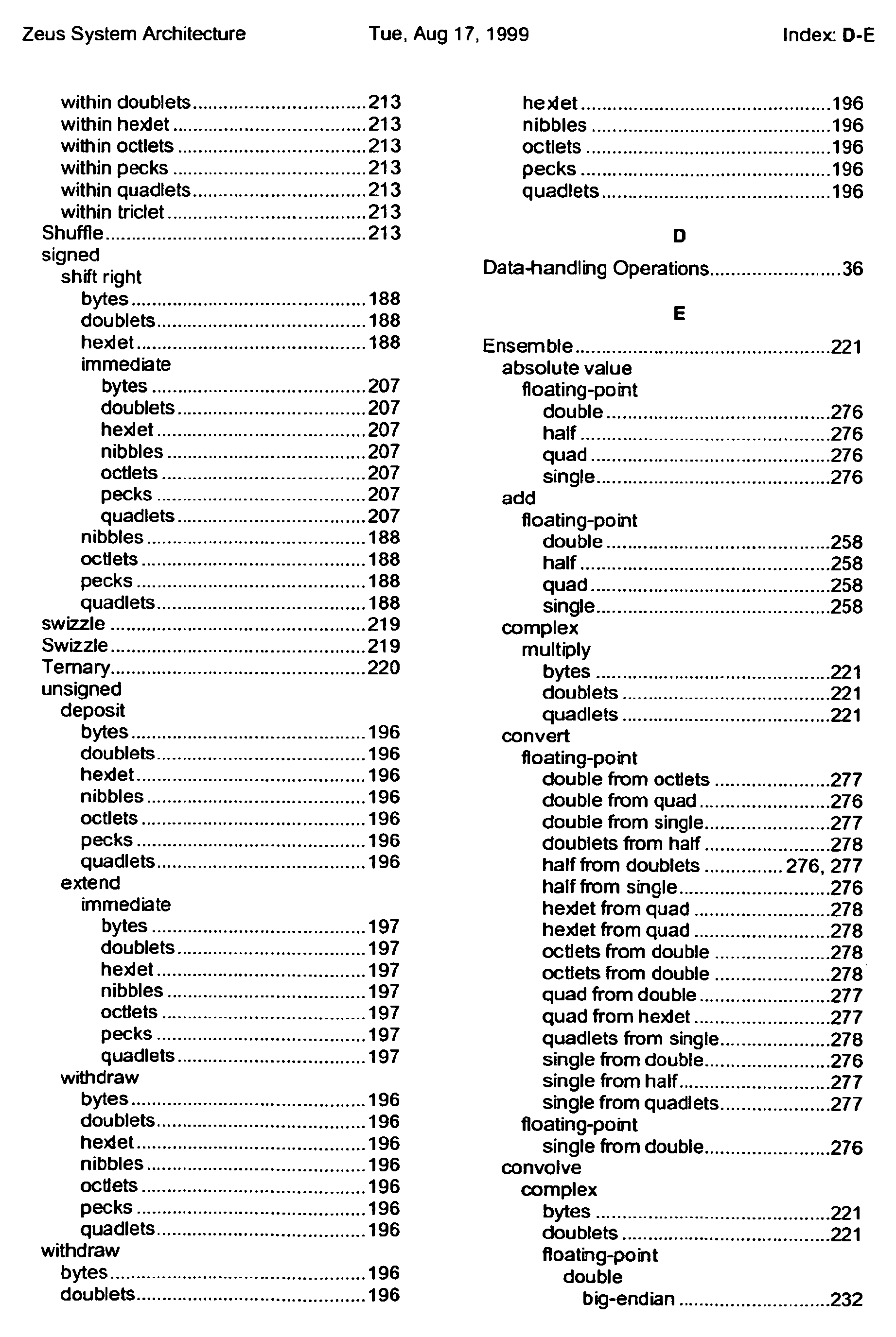

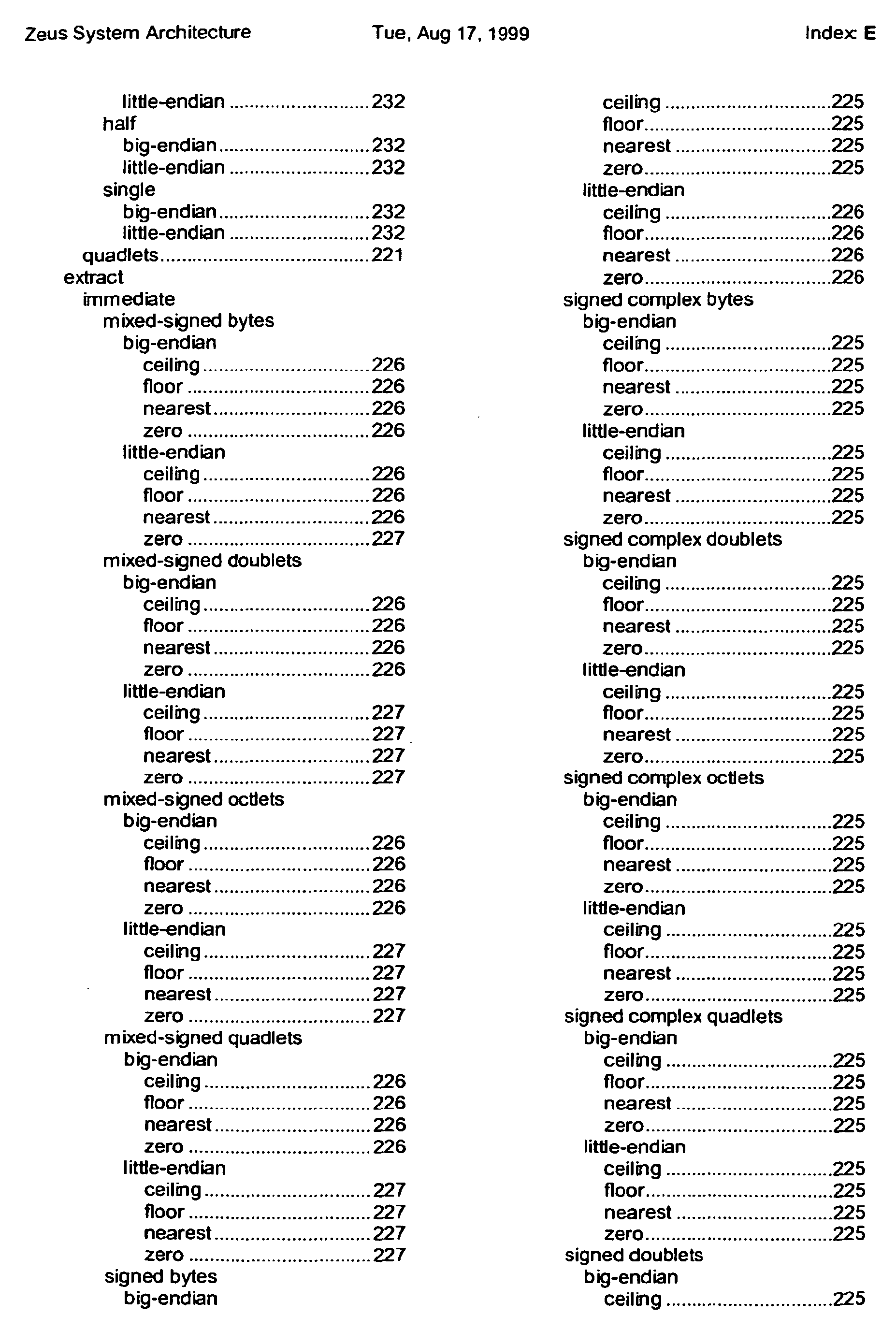

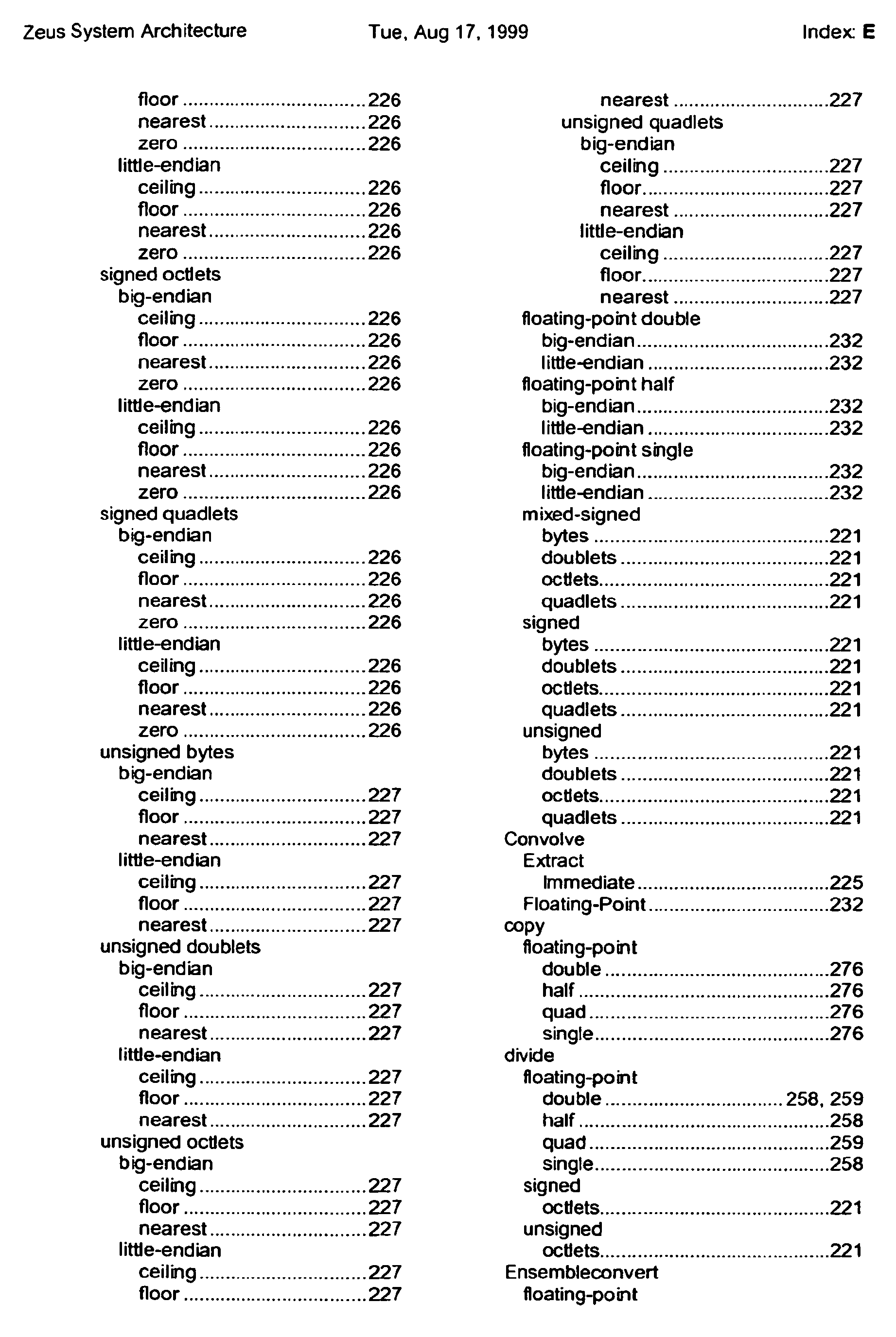

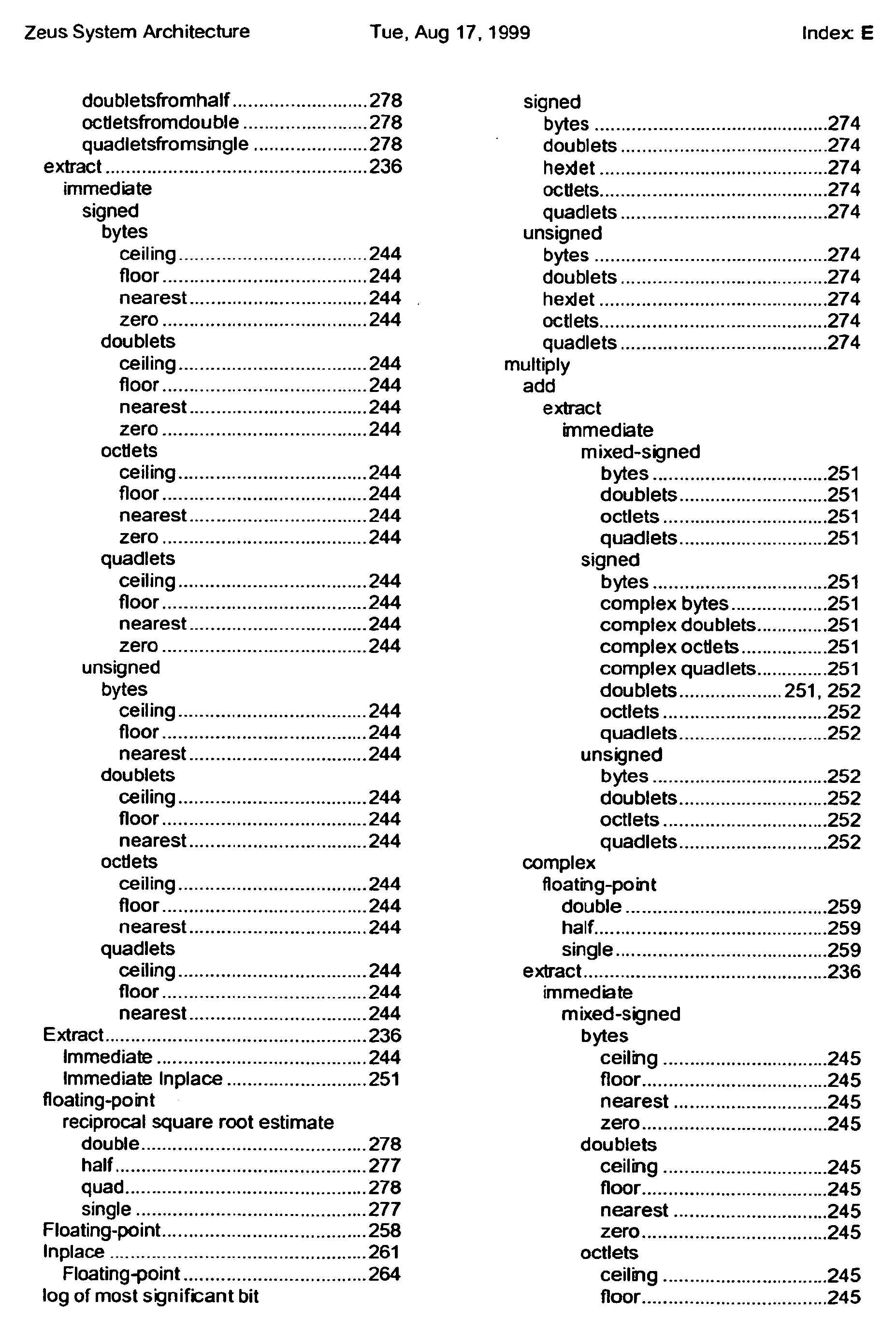

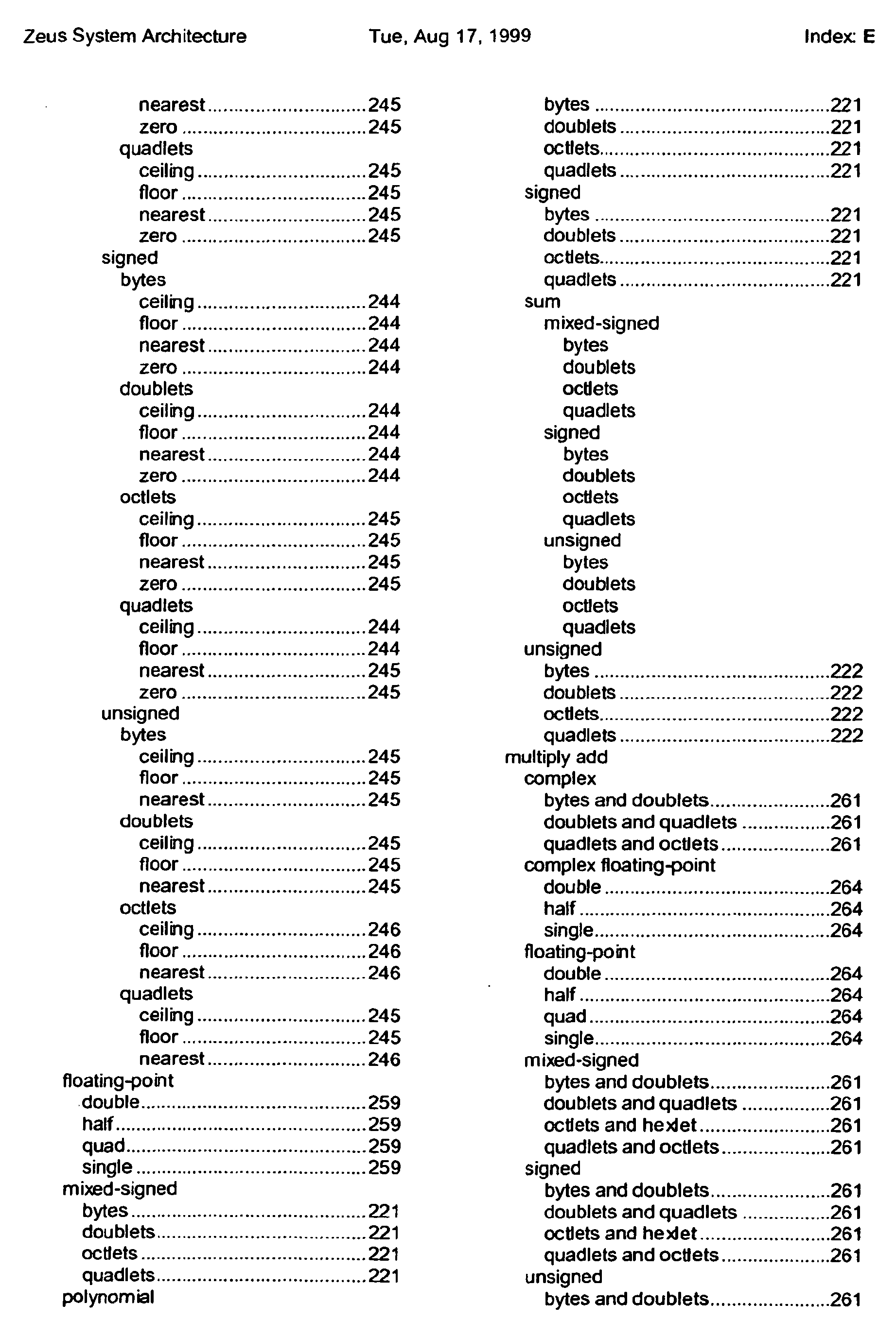

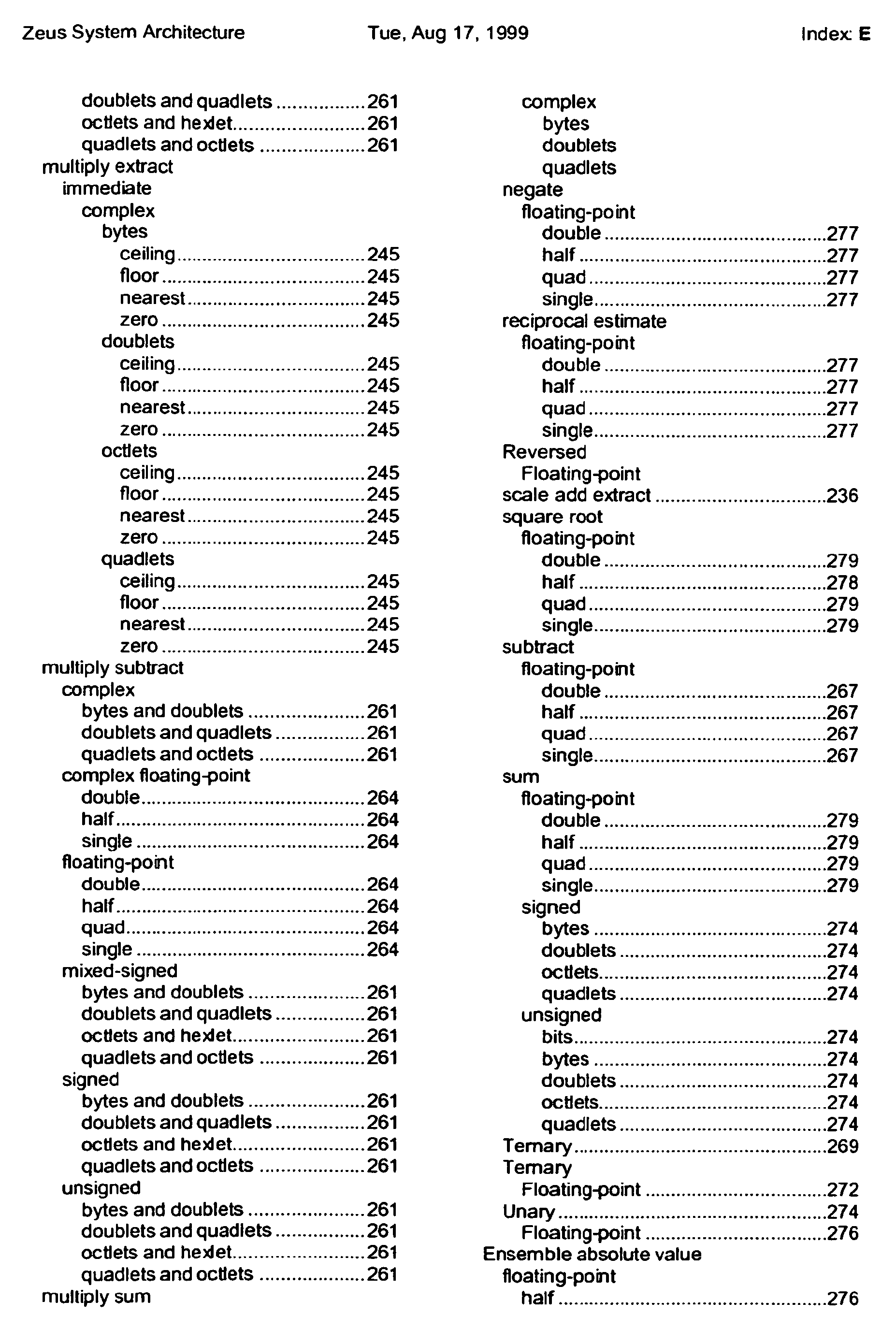

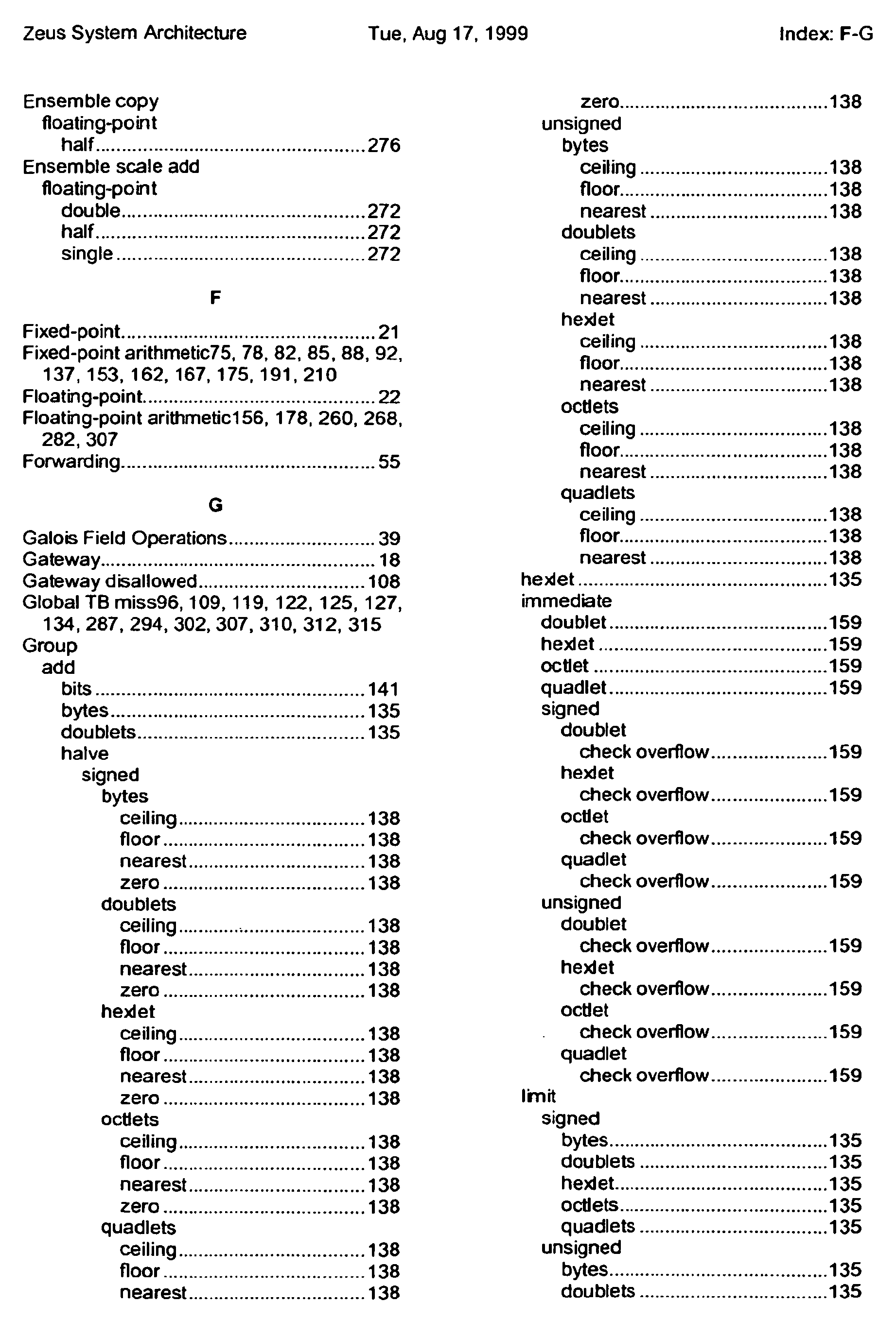

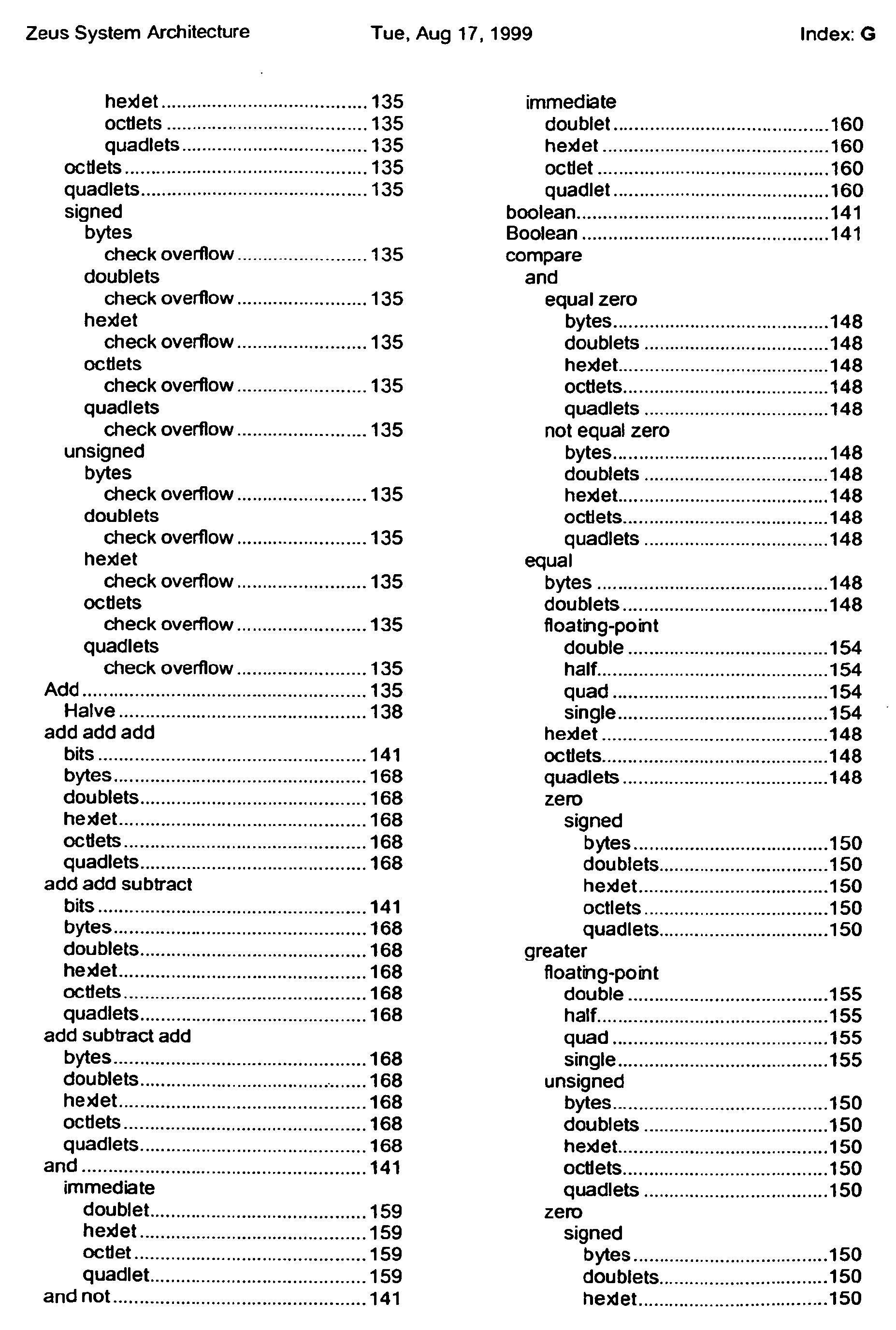

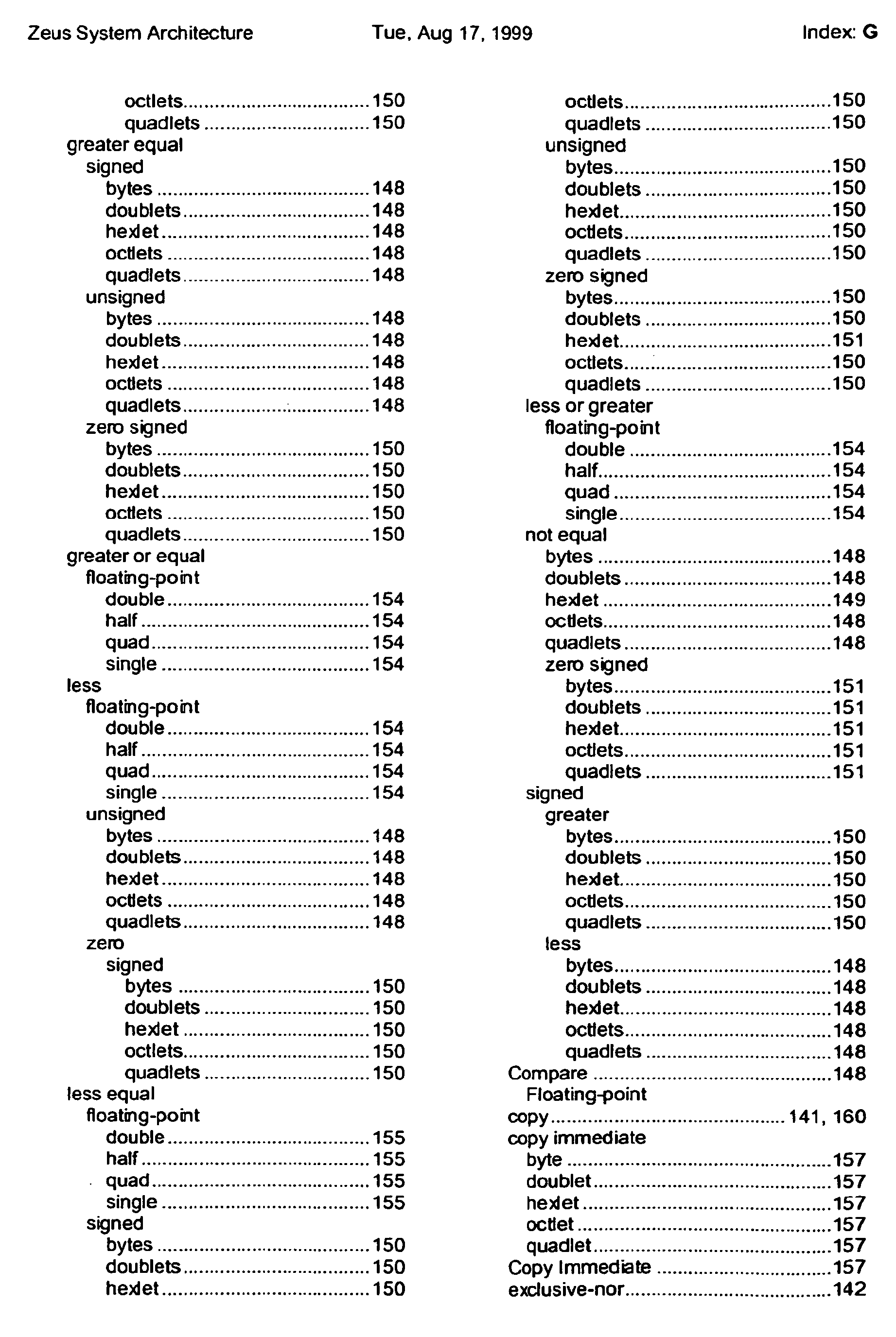

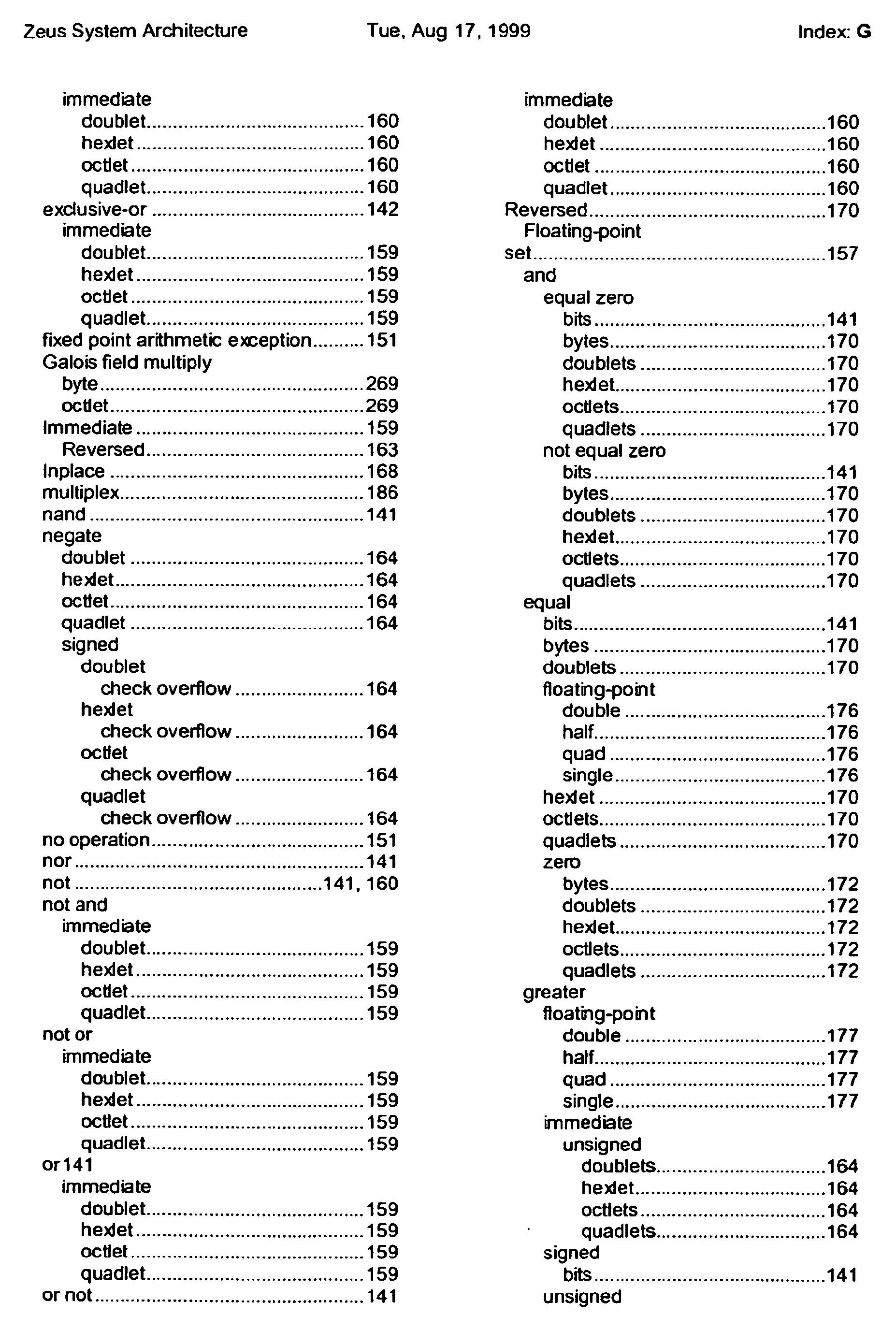

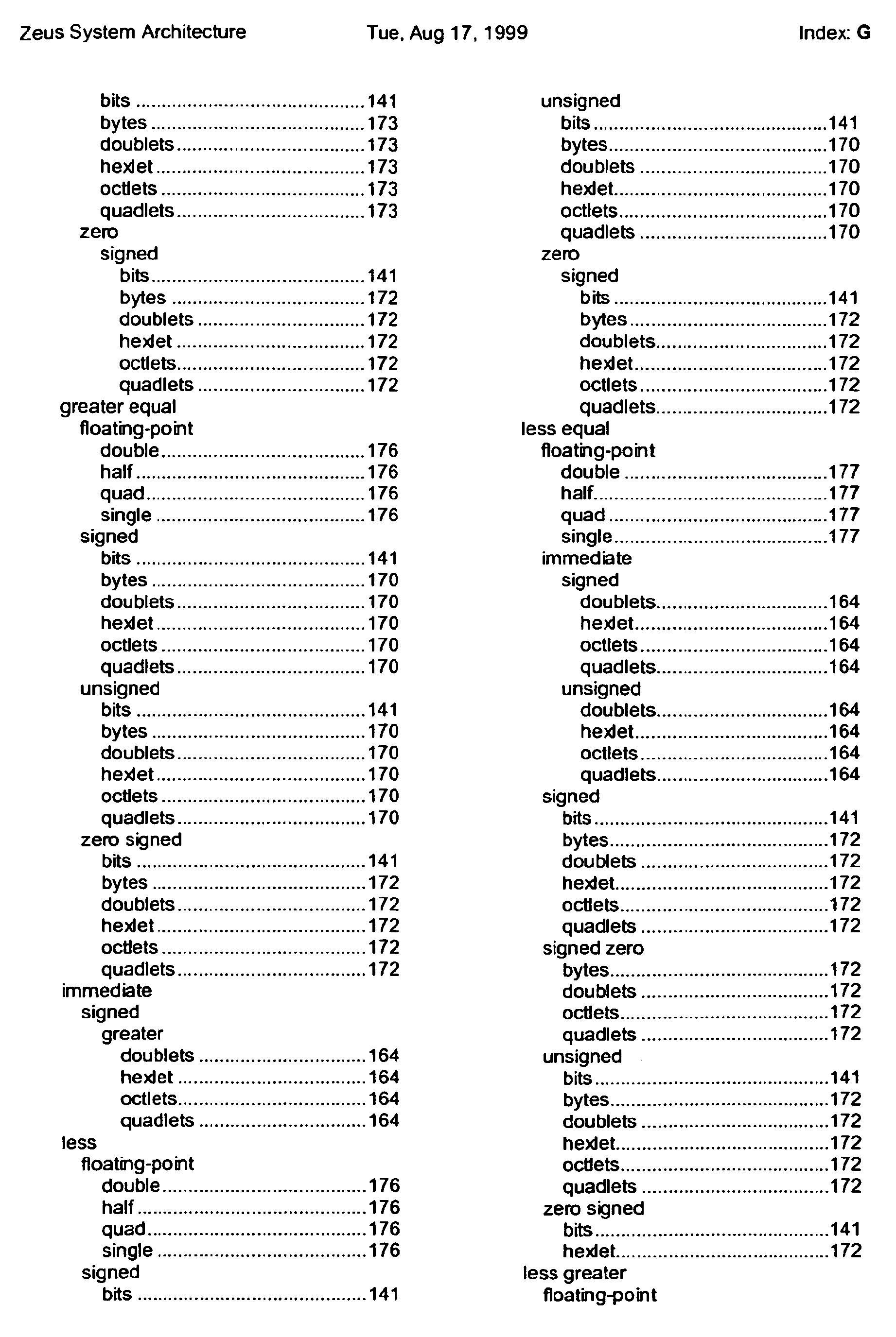

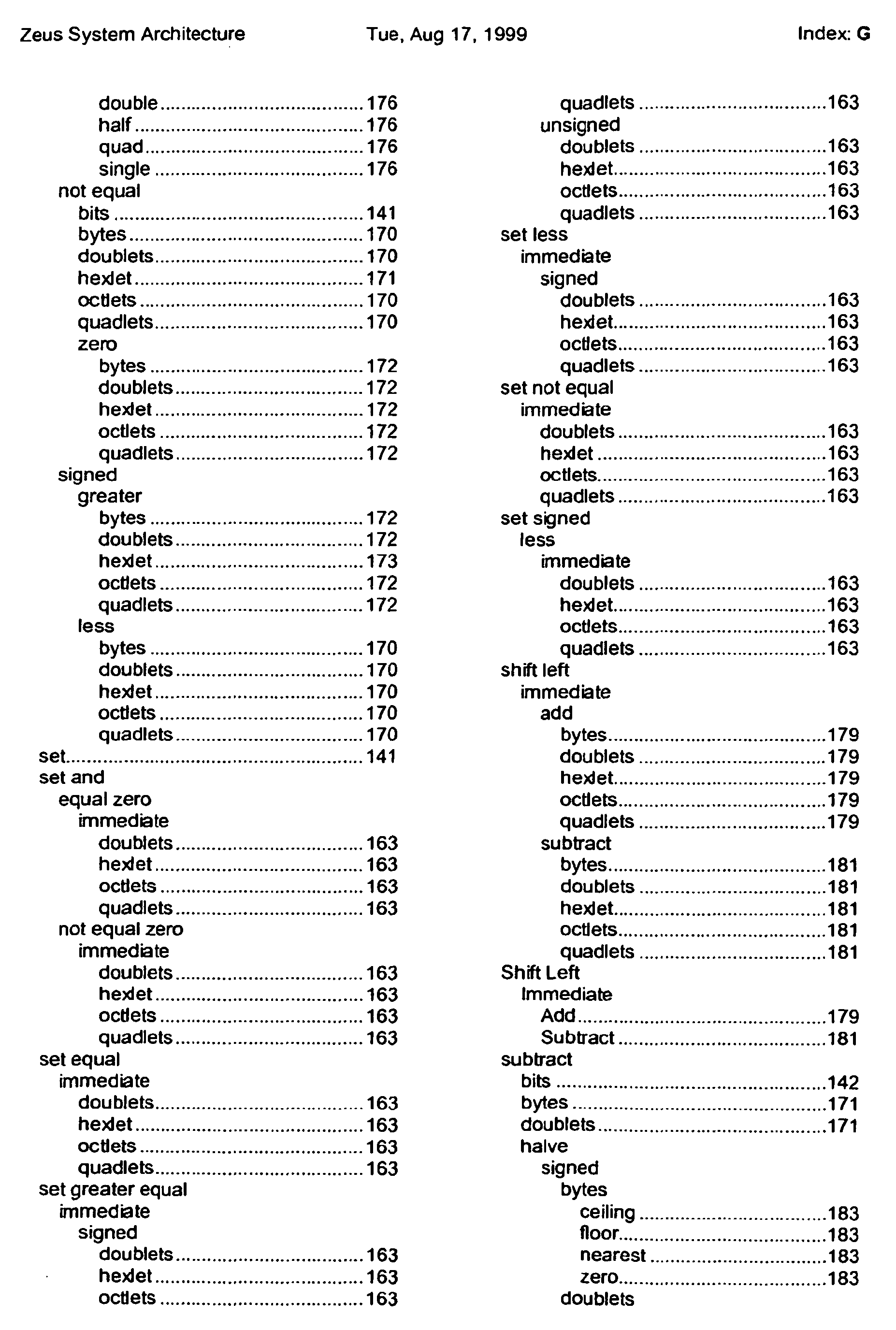

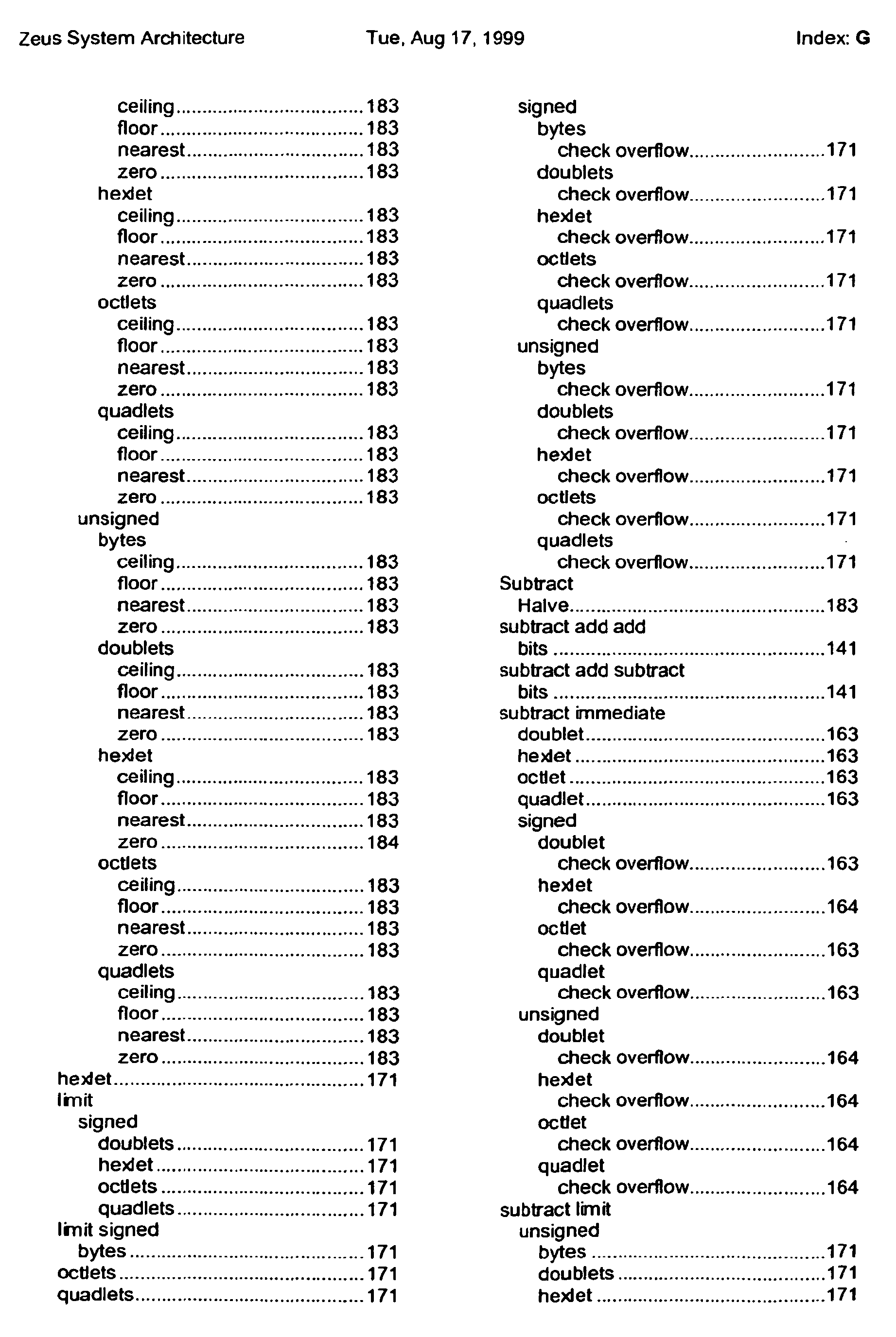

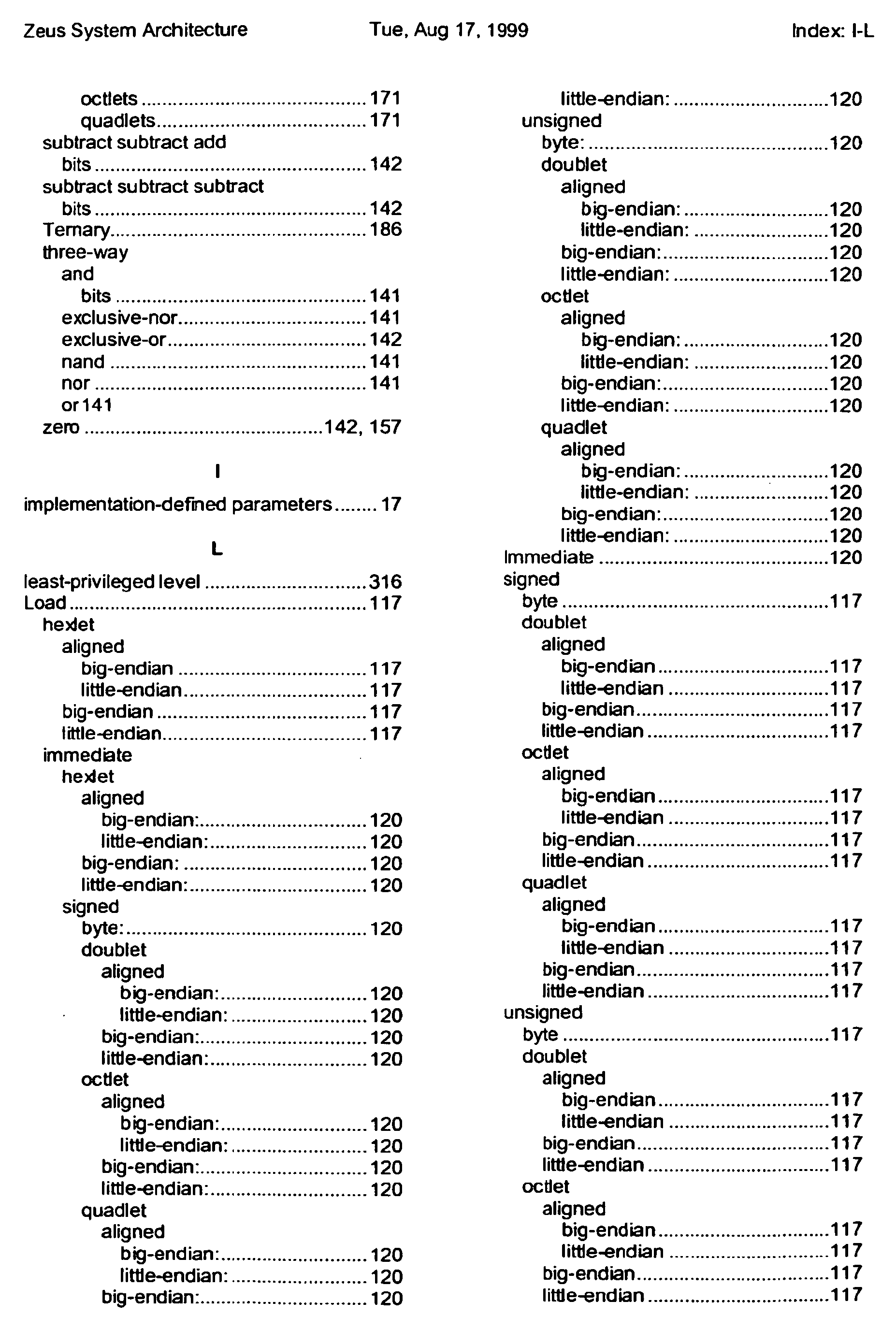

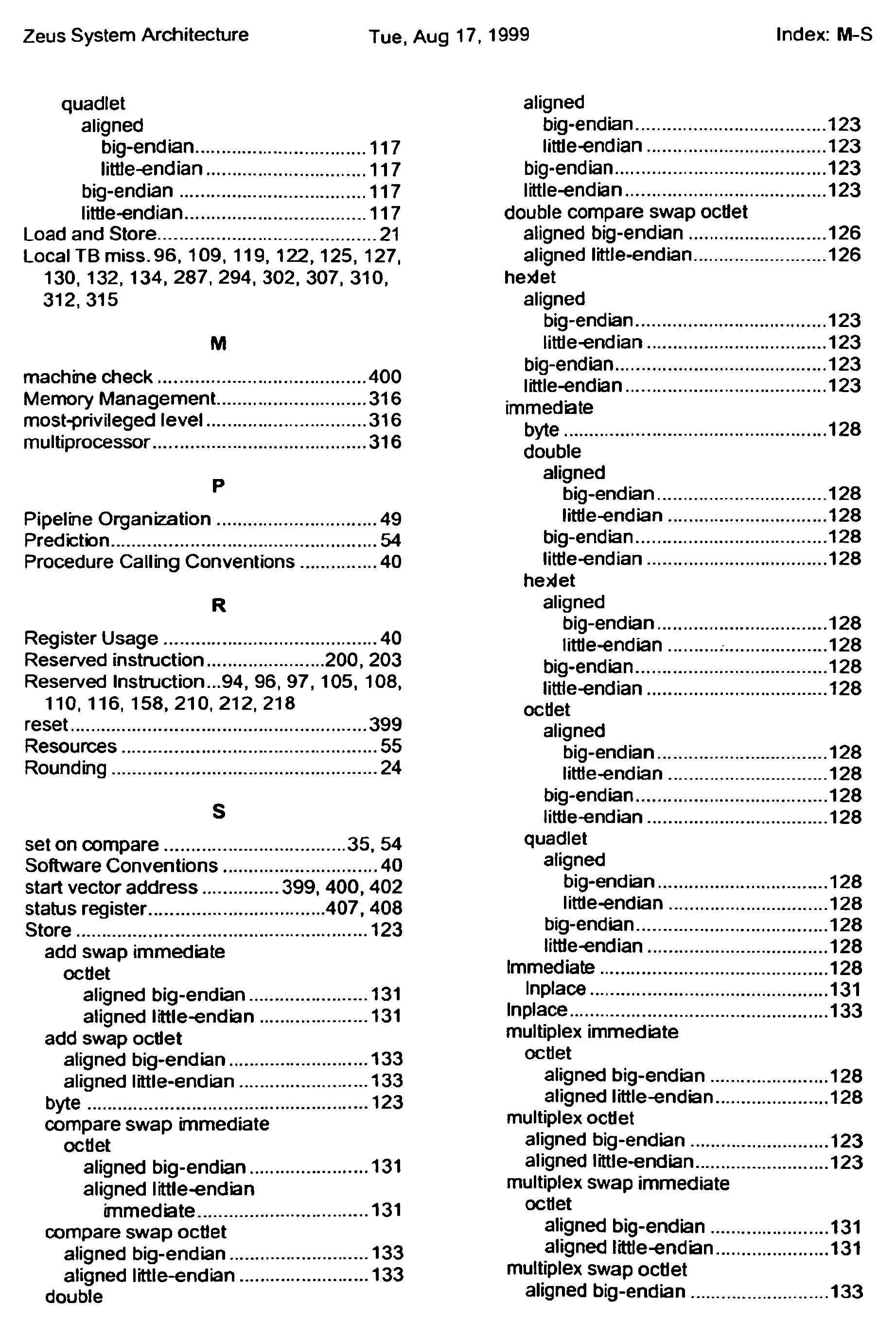

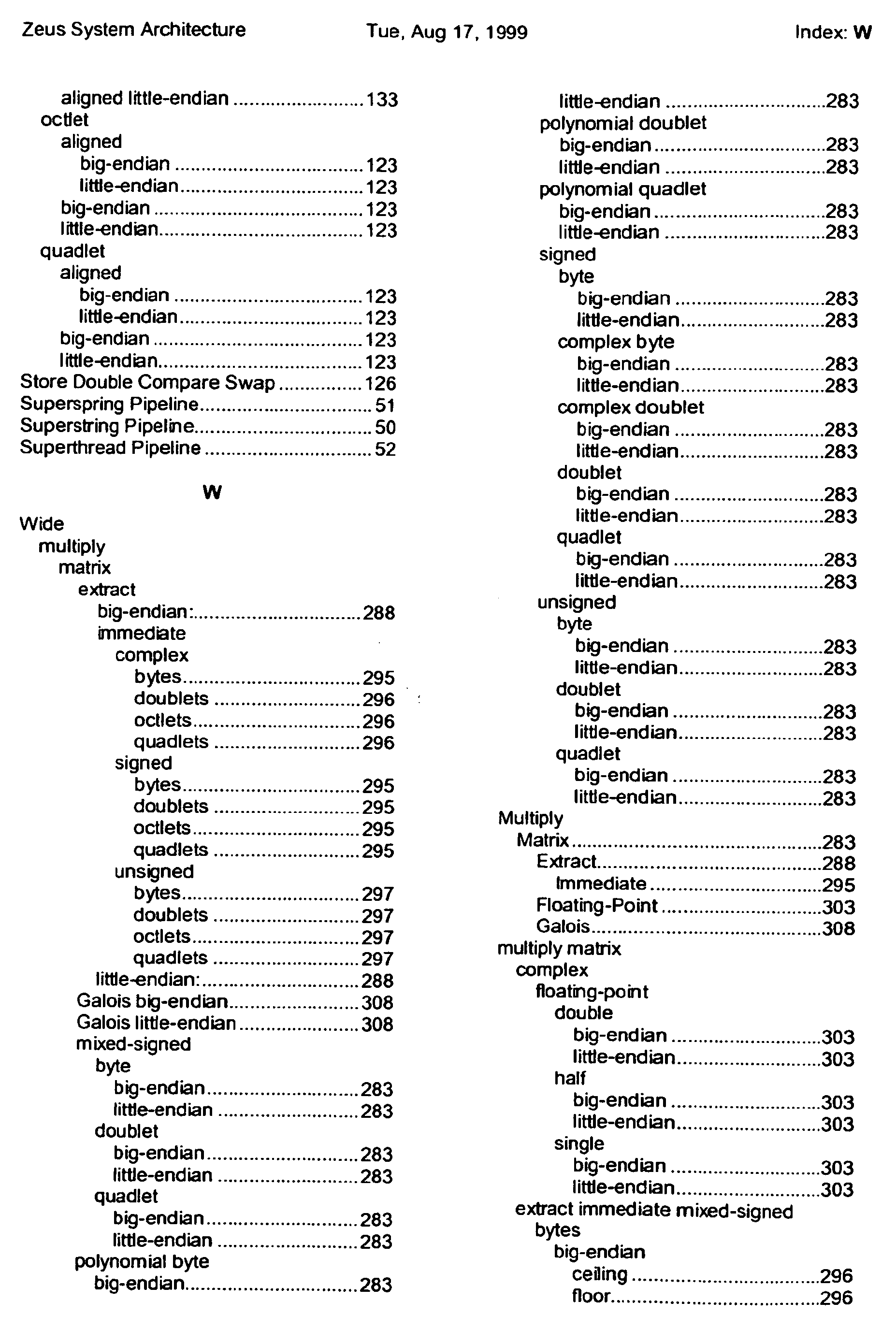

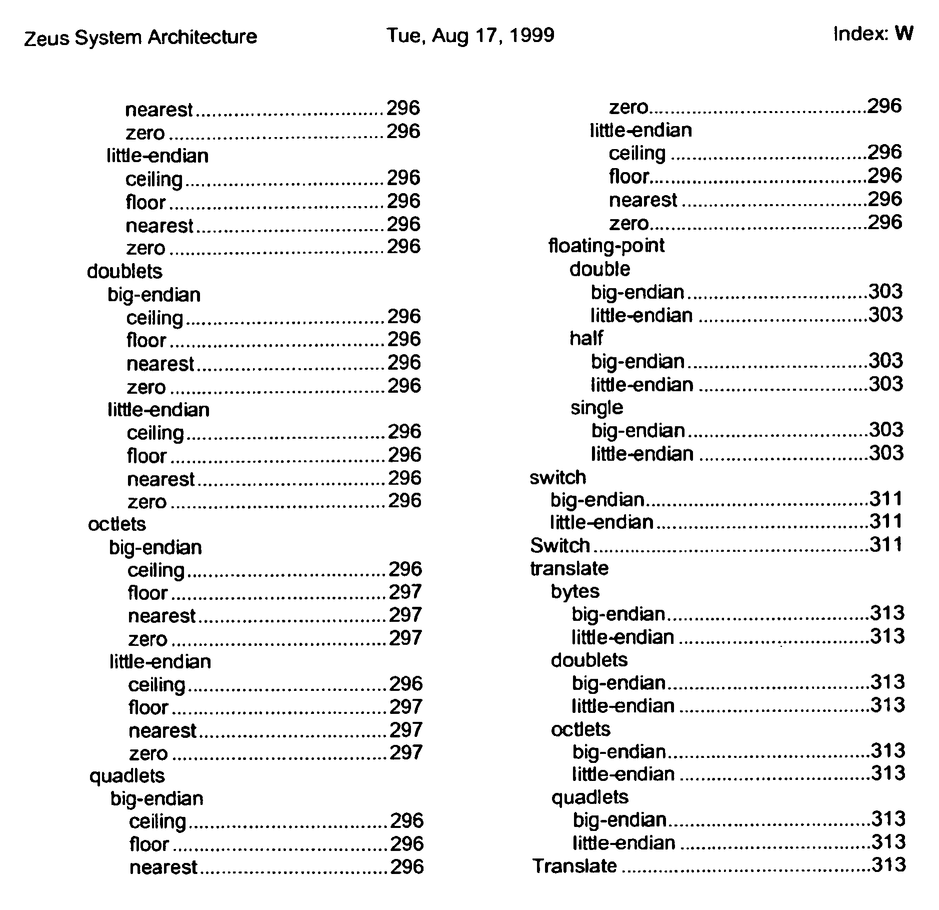

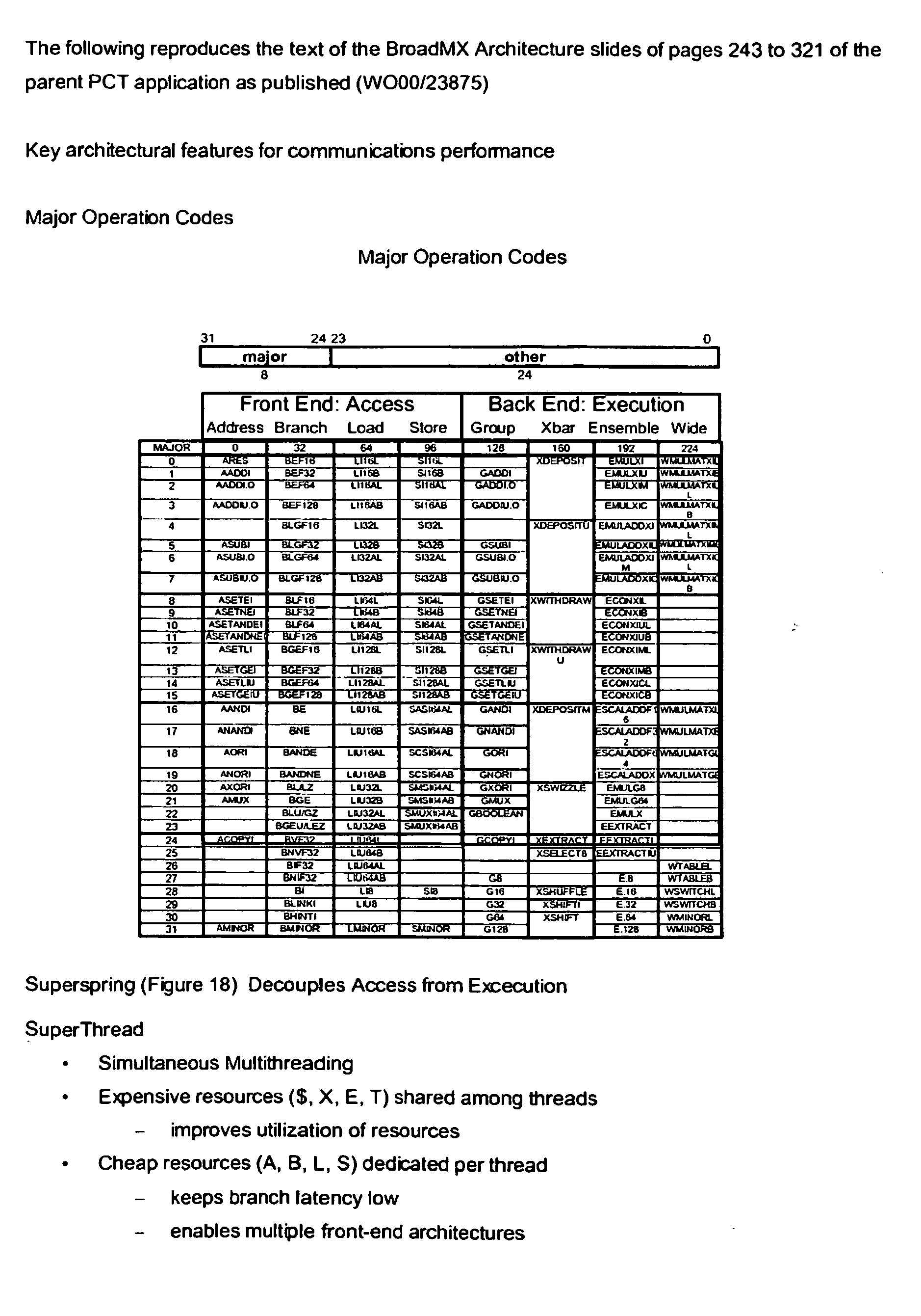

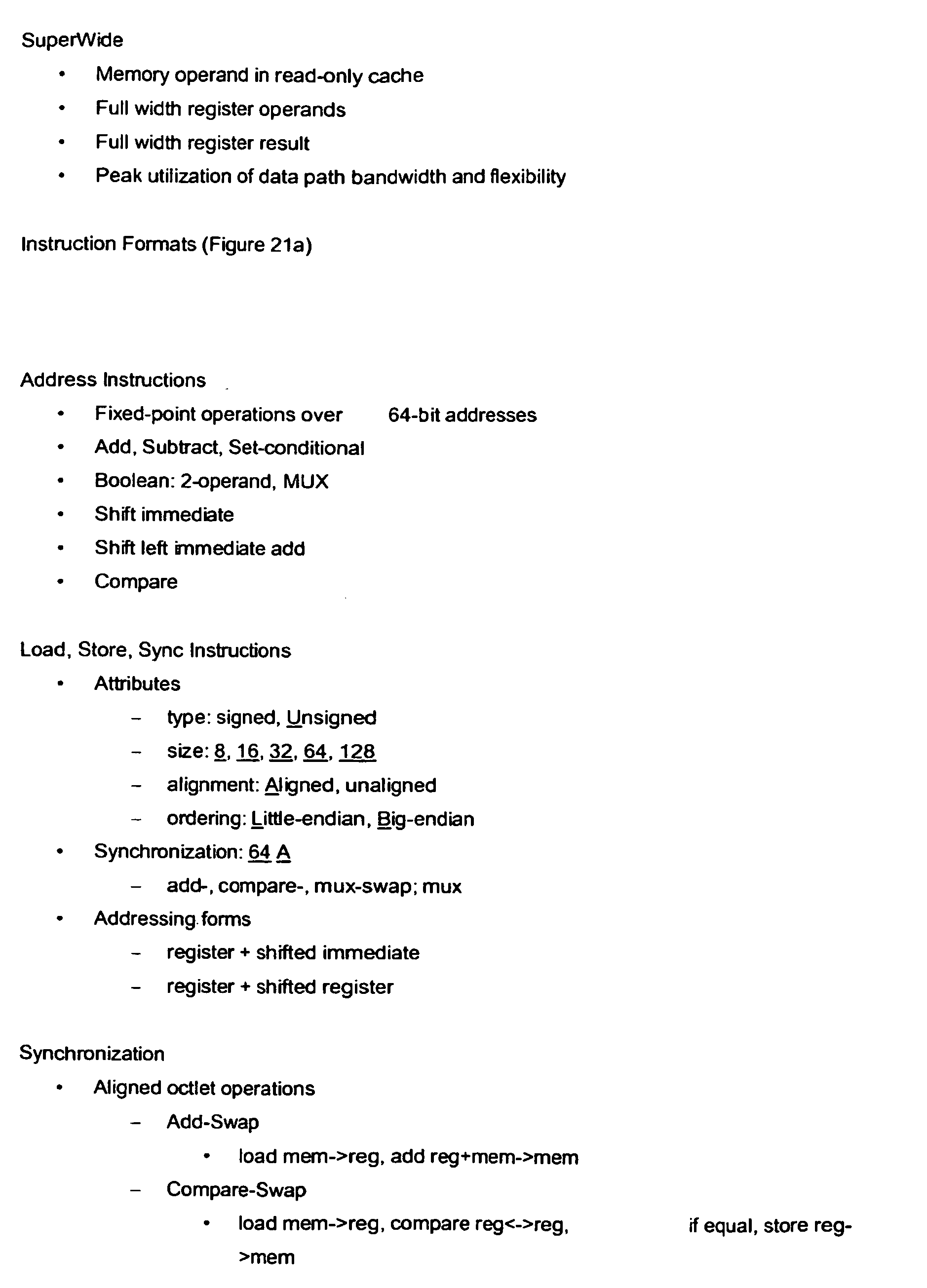

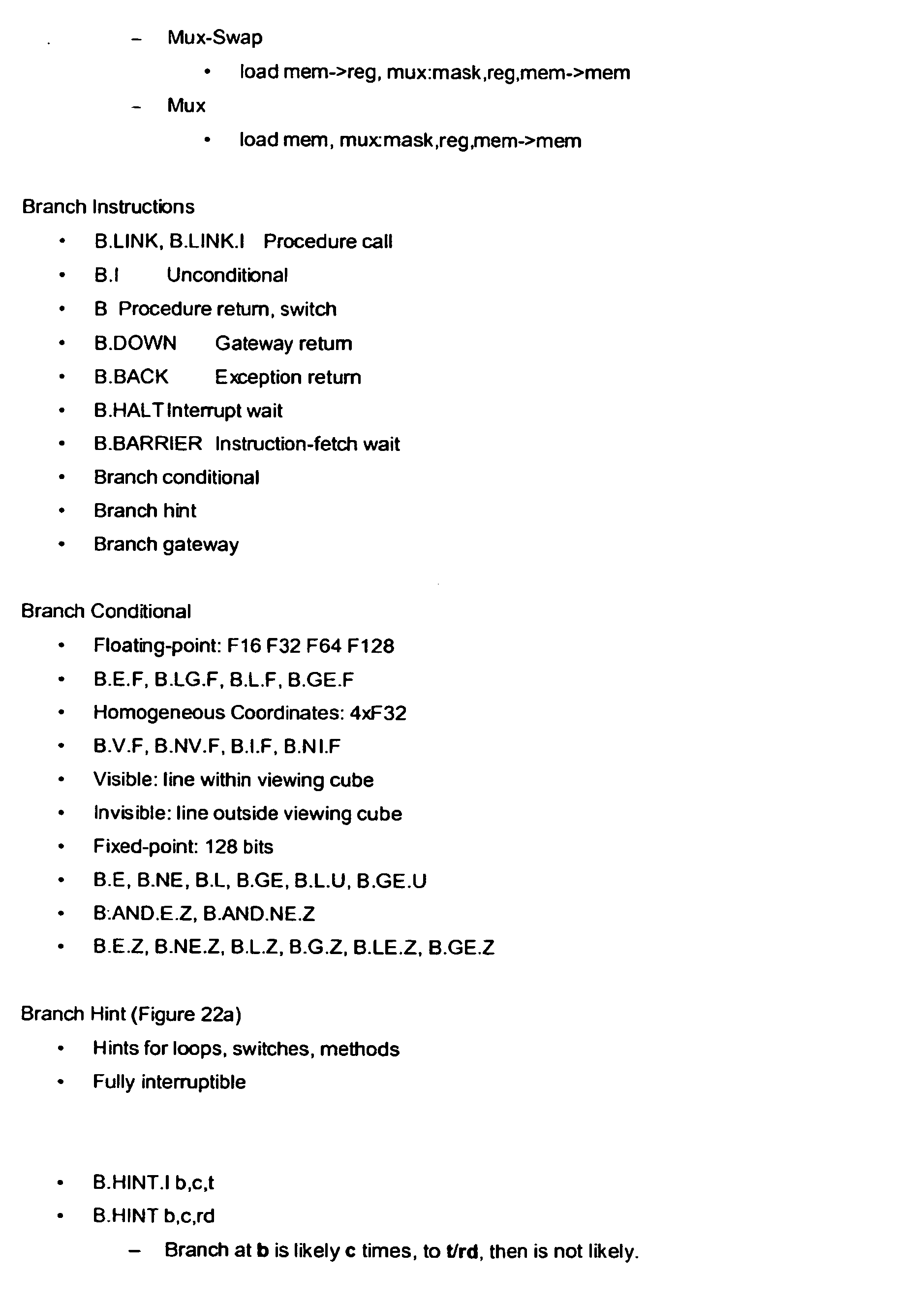

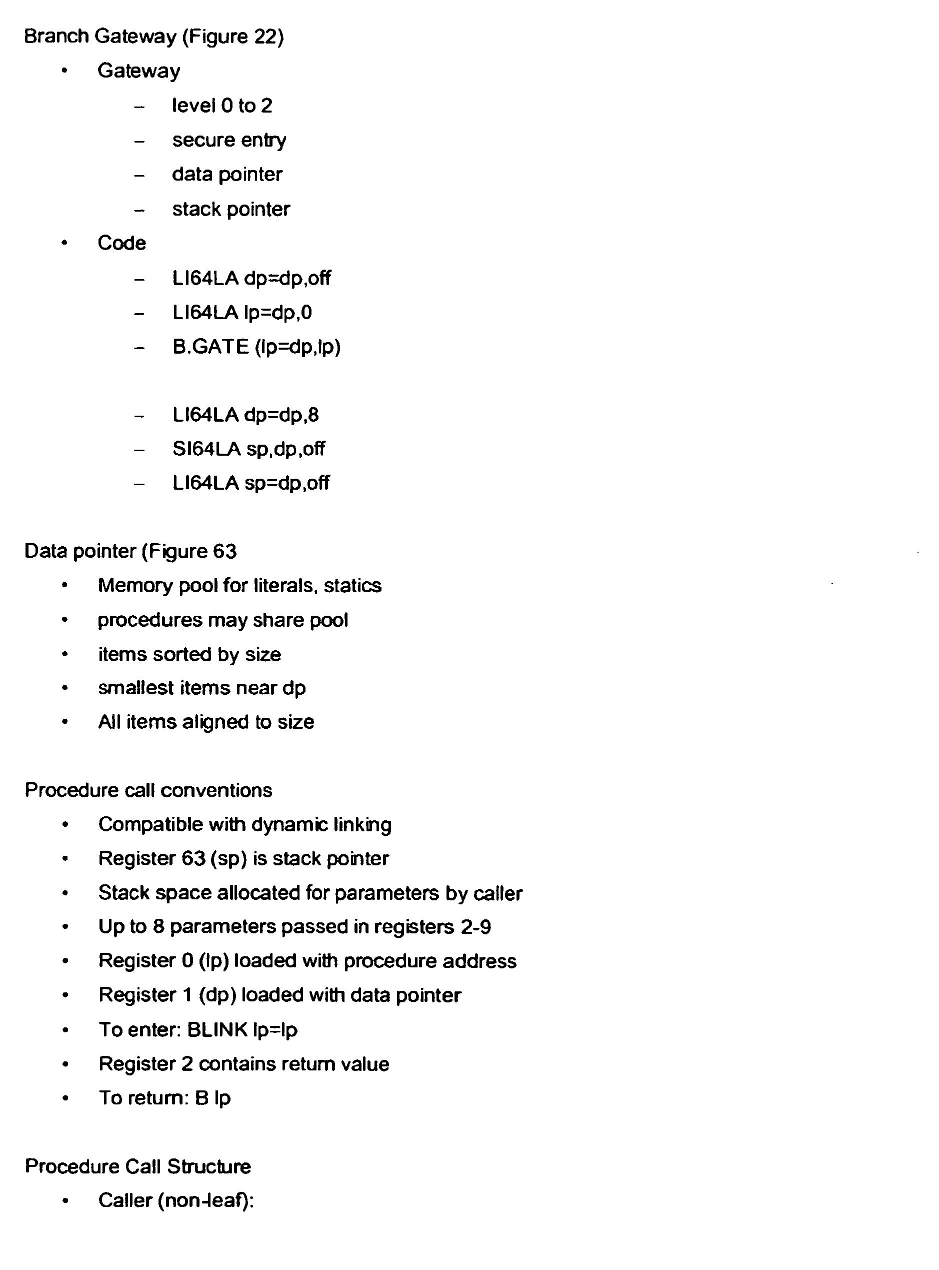

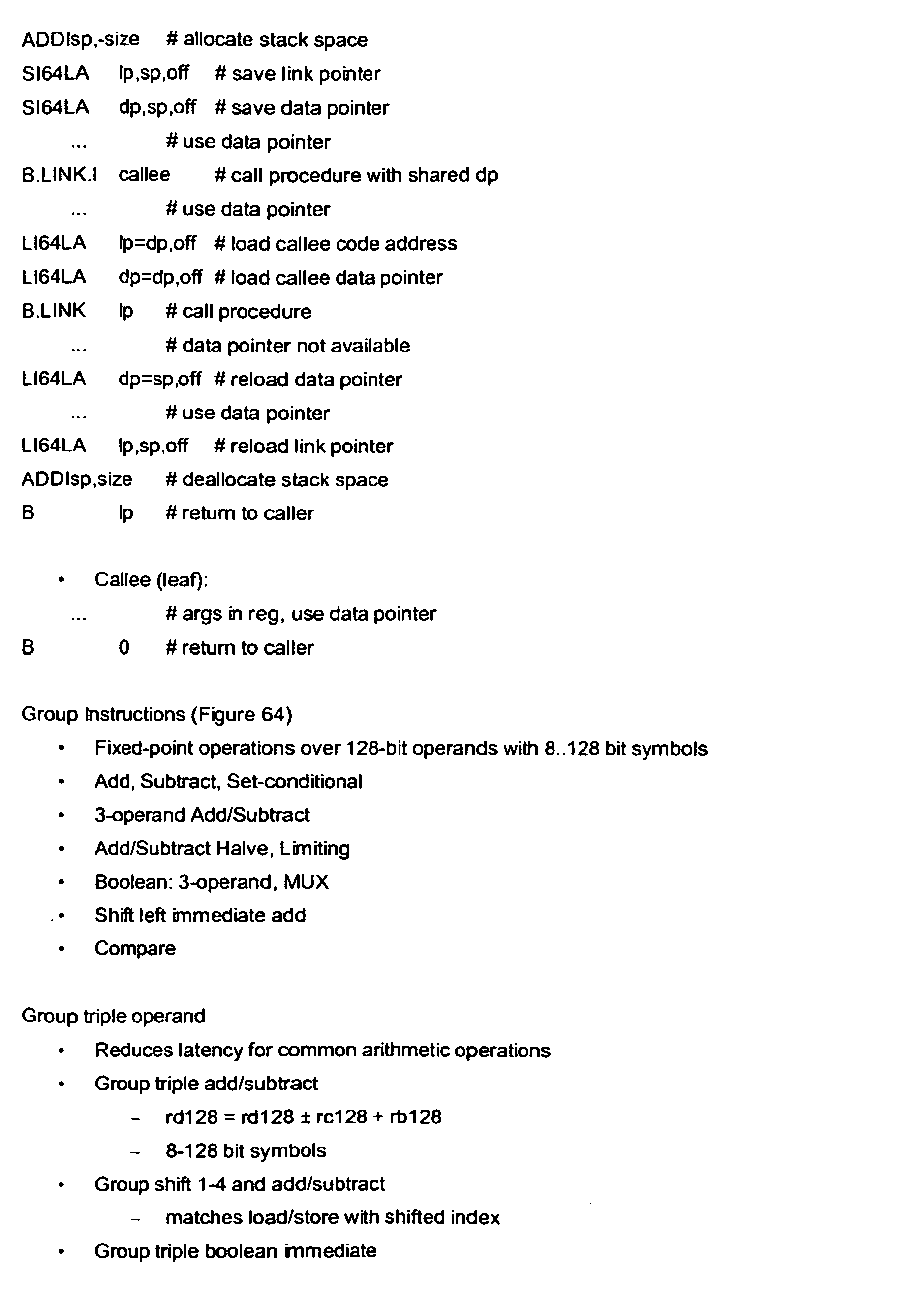

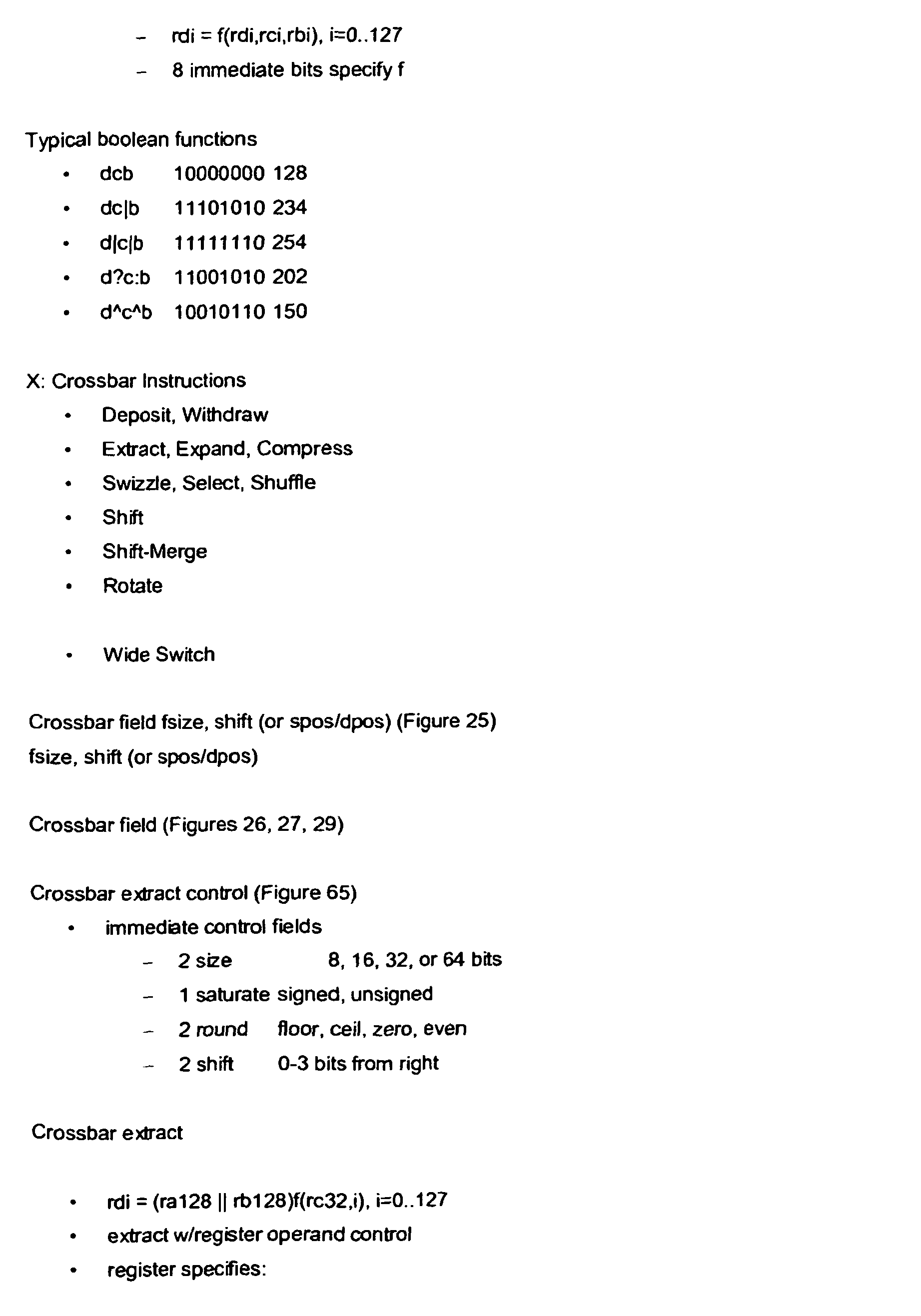

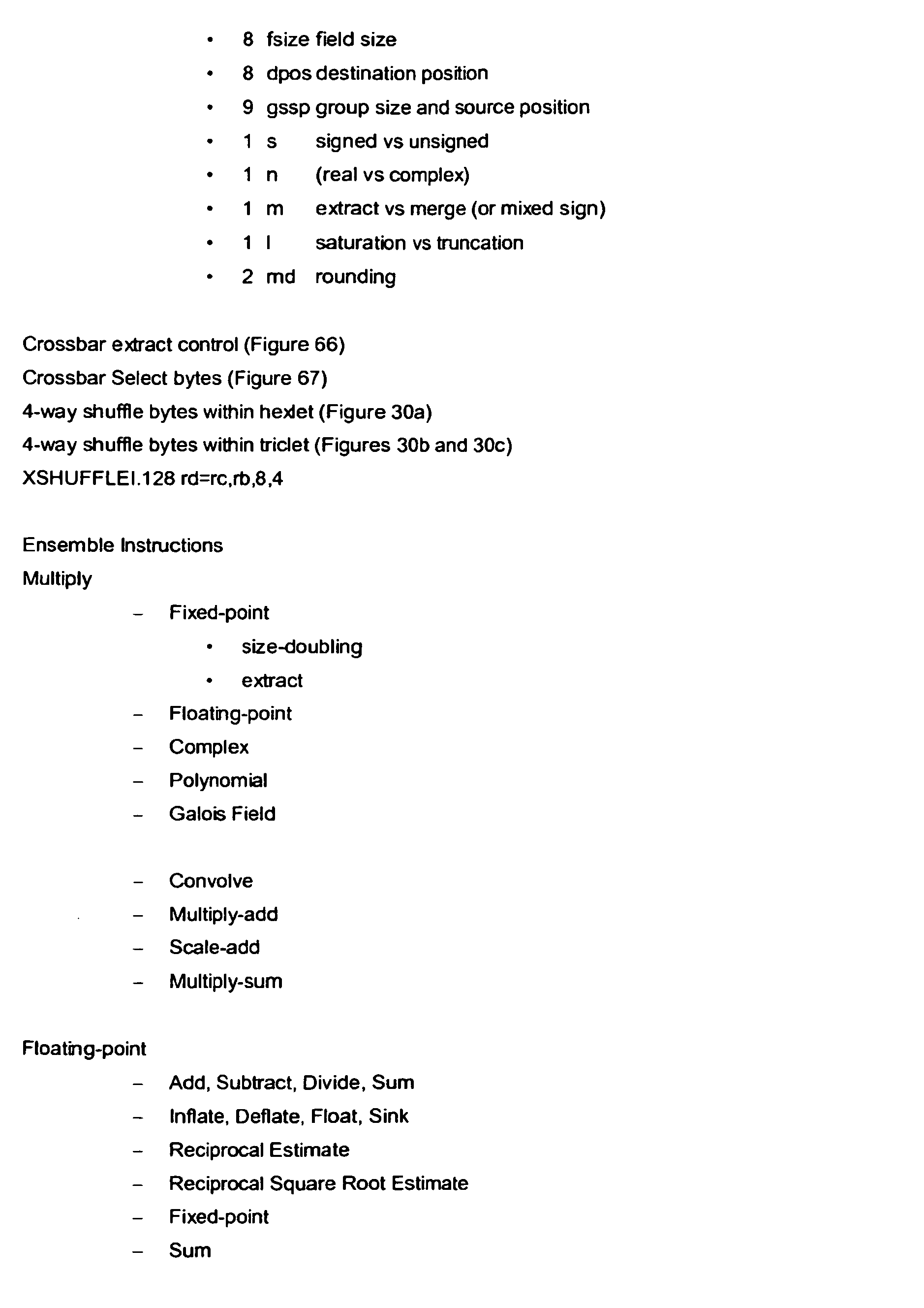

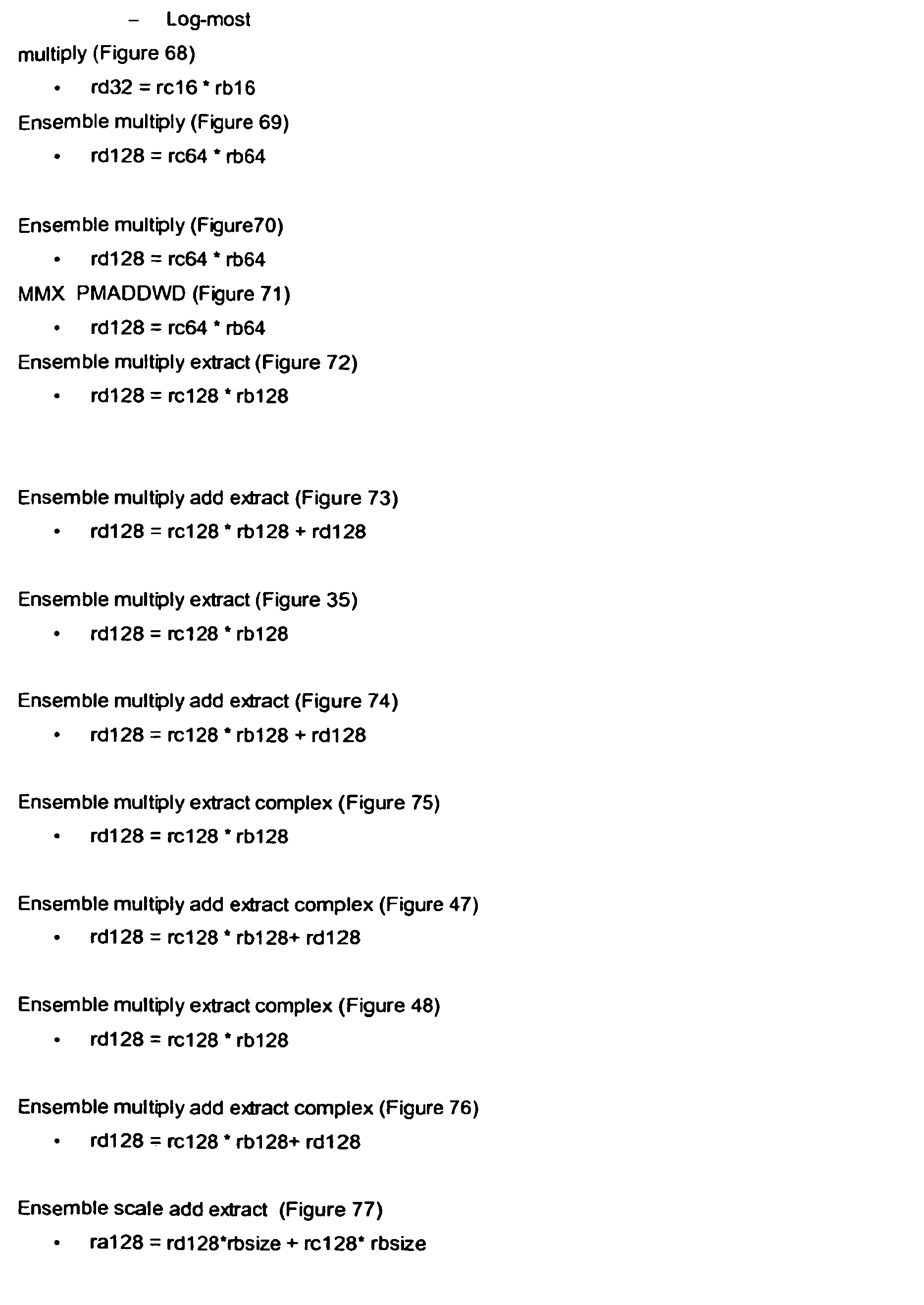

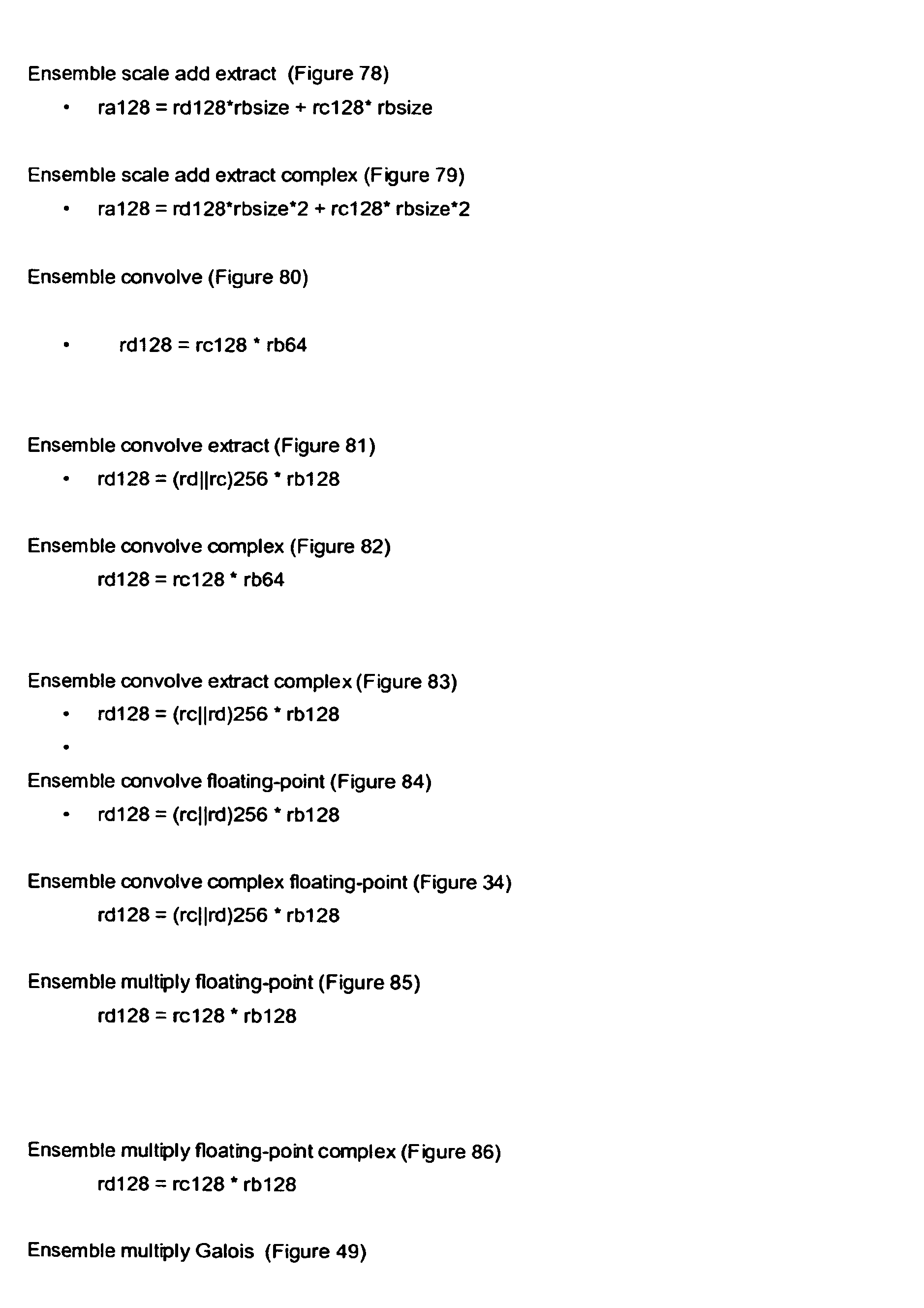

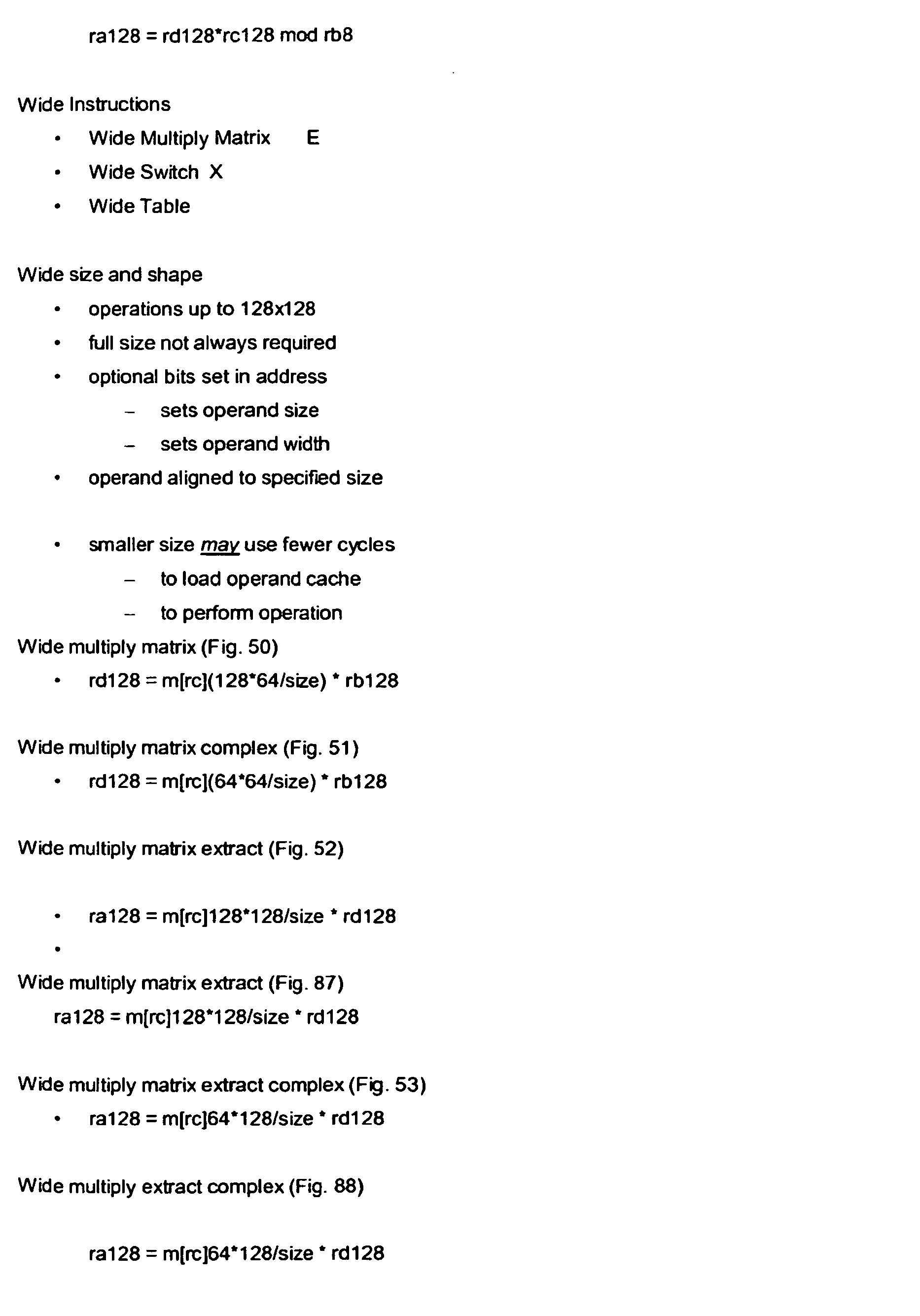

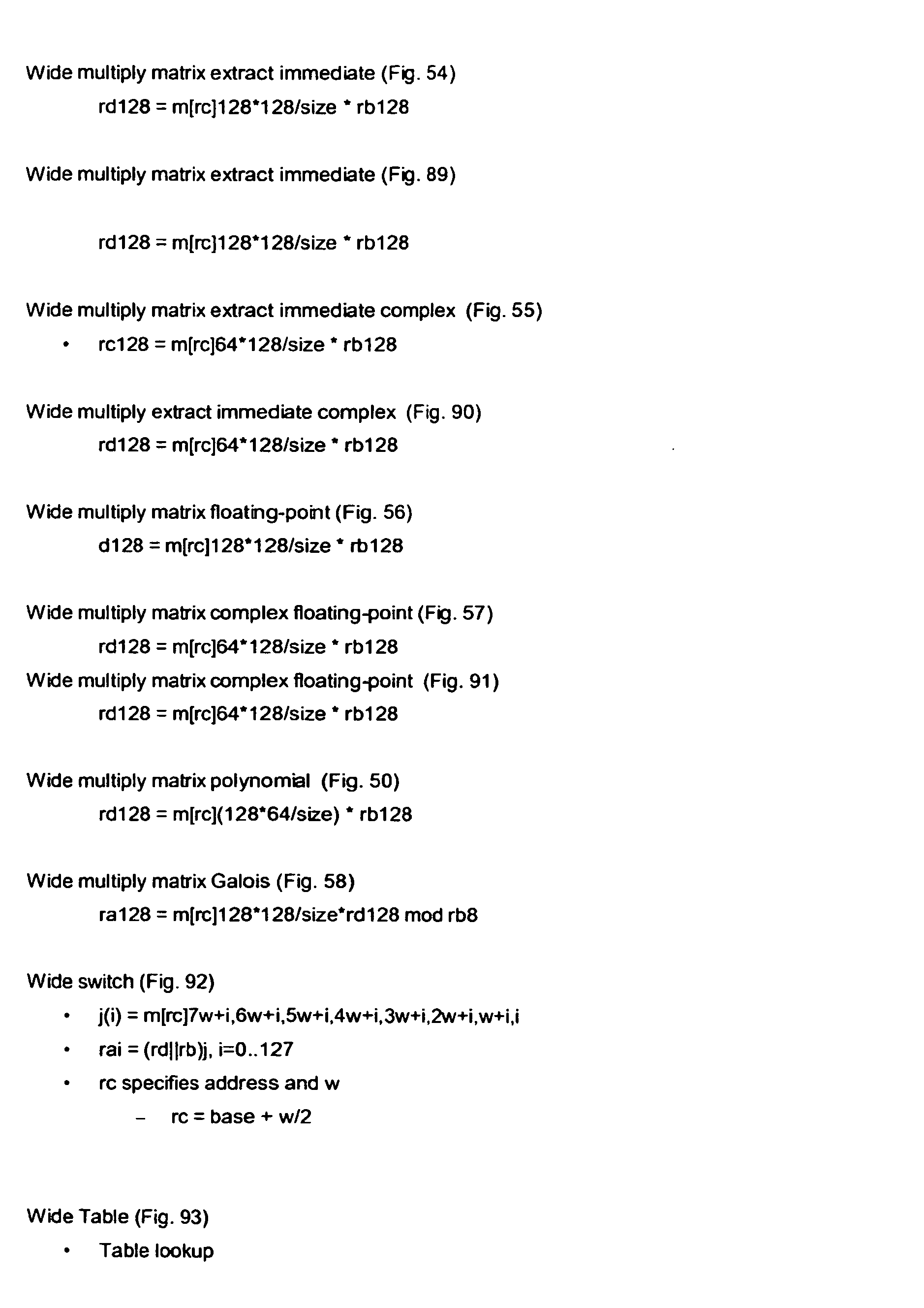

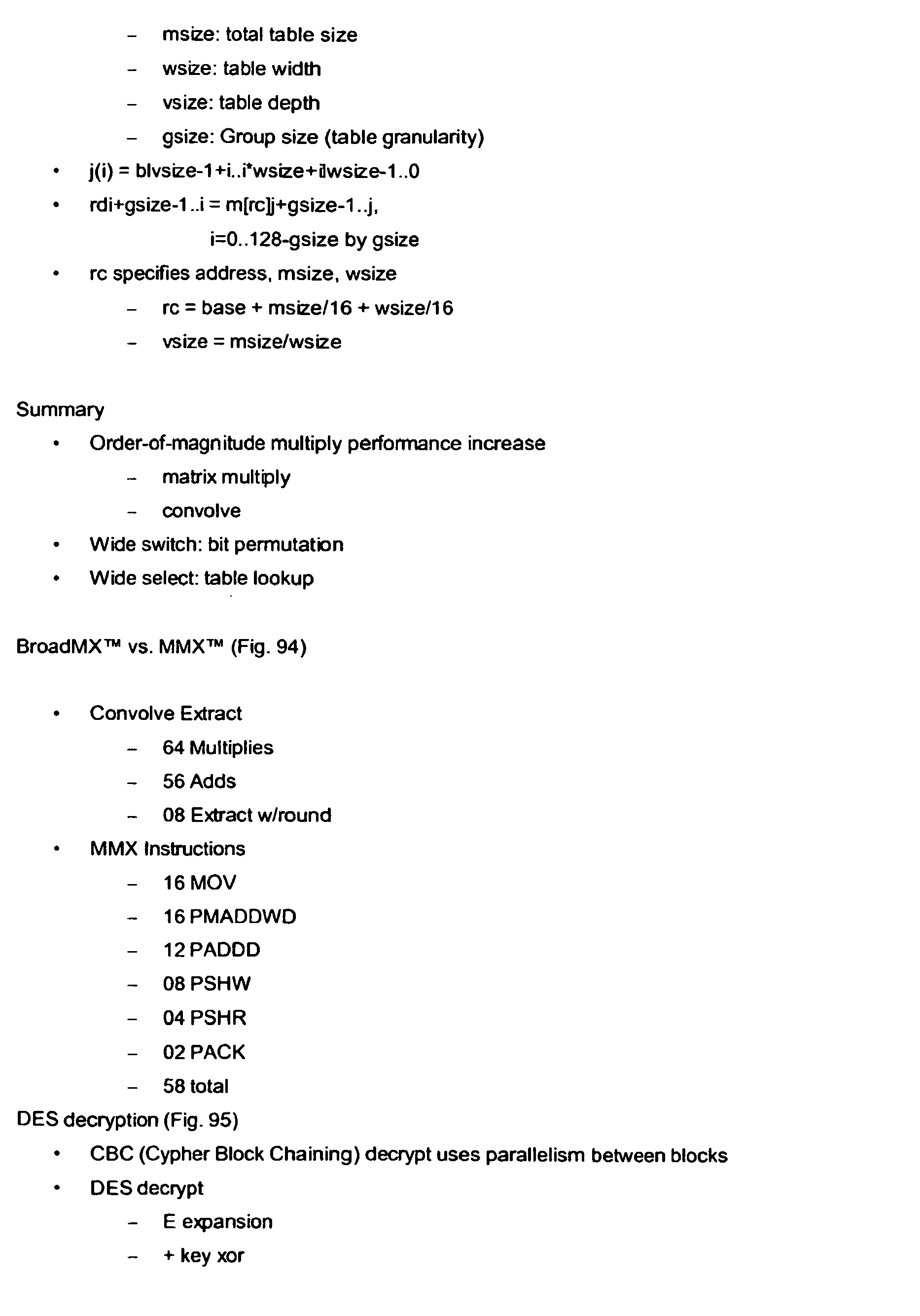

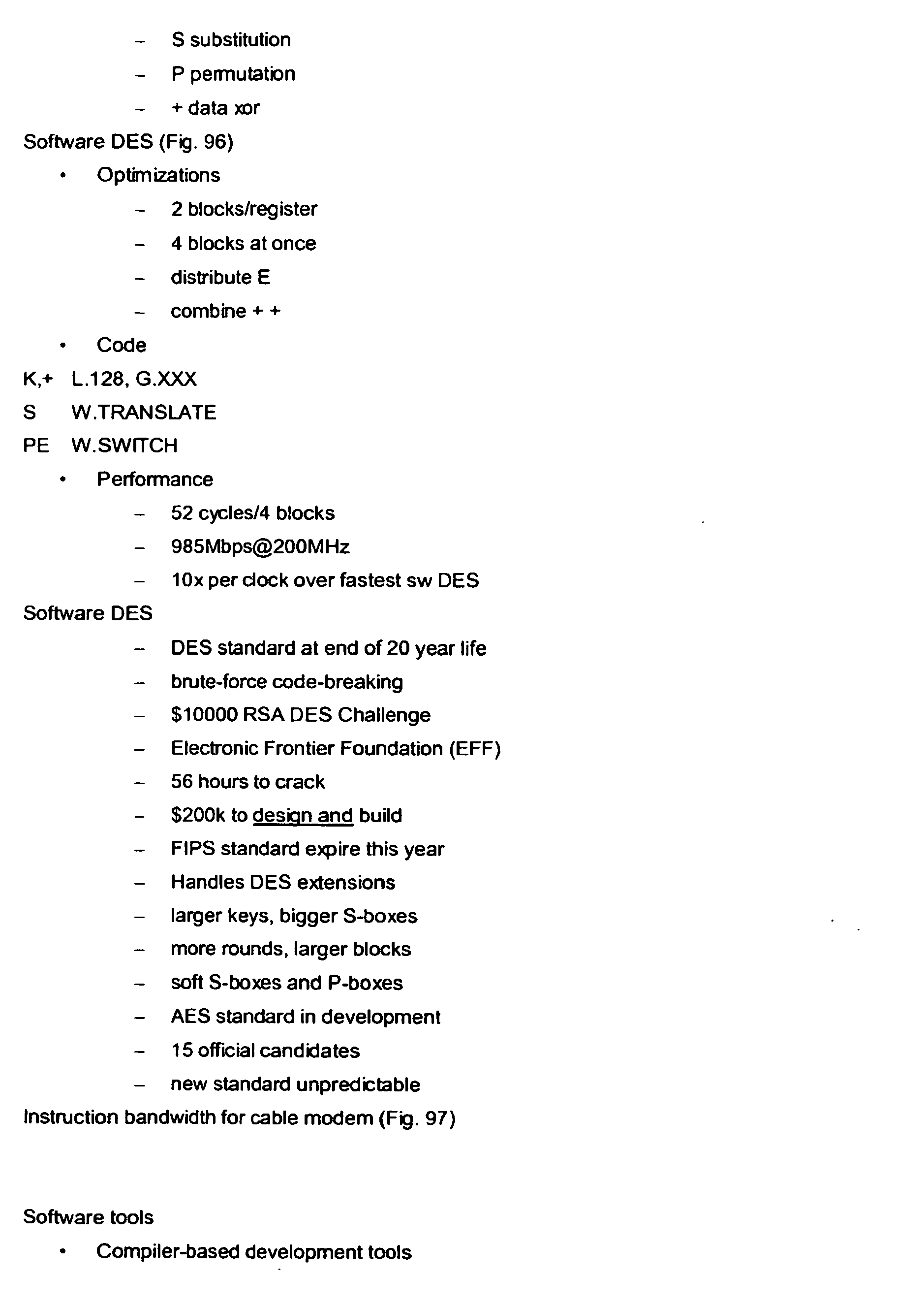

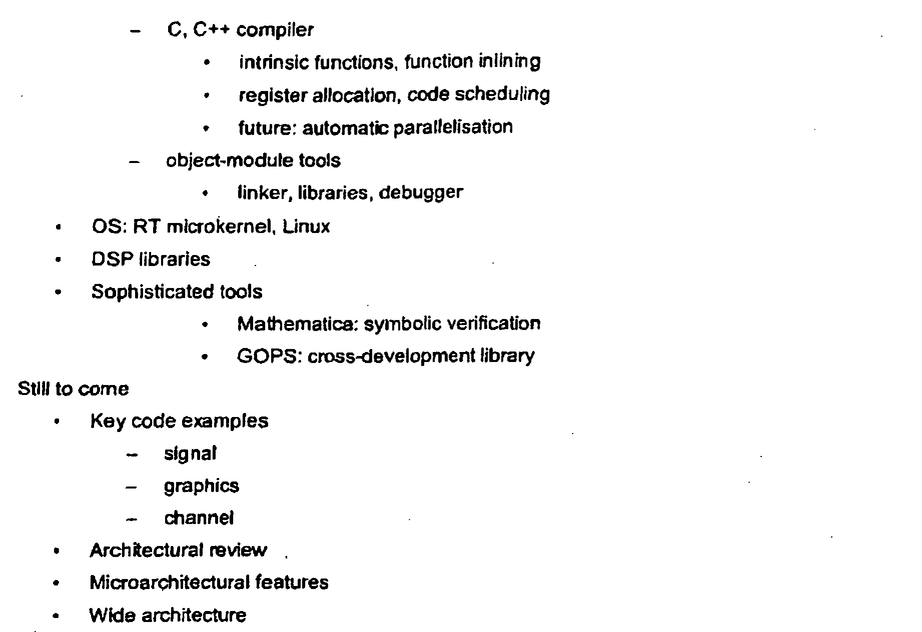

## Claims

1. A processor comprising:
a first data path (137) having a first bit width, the first data path coupled to a memory system (120) storing a wide operand;
a second data path (between 136 and 149) having a second bit width greater than the first bit width;
a plurality of third data paths (155-158) having a combined bit width less than the second bit width;
a wide operand storage (136; 714) capable of storing a wide operand of the second bit width, coupled to the first data path and the second data path, the wide operand storage for storing the wide operand received over the first data path from the memory system, the wide operand having a size with a number of bits greater than the first bit width;
a plurality of registers (720a-n) having the first bit width, the plurality of registers being connected to the third data paths, the plurality of registers including at least one register (710) for storing a wide operand specifier which specifies the wide operand to be copied from the memory system into the wide operand storage; and
a functional unit (149) coupled by the second data path to the wide operand storage and coupled by the third data paths to the plurality of registers, the functional unit capable of performing operations in response to instructions , and when executing an instruction requiring a wide operand the functional unit using at least a part of the wide operand referenced by the at least one register for storing the wide operand specifier wherein said at least a part of the wide operand has a bit width greater than the first bit width and the wide operand is used by the functional unit to produce a result.

2. A processor as in claim 1 wherein the functional unit is capable of initiating only one instruction at a time.

3. A processor as in claim 1 wherein the wide operand is combined with information from at least one register of the plurality of registers to produce a result.

4. A processor as in claim 3 wherein the result is a wide operand.

5. A processor as in claim 1 wherein the at least one register comprises a single register (710) which stores both the address of the wide operand in the memory system and the size of the wide operand.

6. A processor as in claims 1-5 wherein the wide operand is stored in the memory system (120) with its address aligned so that only high order bits are required for retrieval of the wide operand, enabling a plurality of low order bits of the address to specify the size of the wide operand.

7. A processor as in claims 1-6 wherein the wide operand specifier comprises the address of the wide operand catenated to an indicia of the size of the wide operand.

8. A processor as in claim 7 wherein the indicia of the size of the wide operand includes a number indicative of one half a total number of bytes in the wide operand added to a number indicative of one half the width of the wide operand in bytes.

9. A processor as in any preceding claim further comprising a results register (745) coupled to the functional unit, the results register having a capability of storing results having a width greater than the first bit width.

10. A processor as in any preceding claim further comprising a second functional unit (141) and a second wide operand storage (132) for storing a second wide operand having a width greater than the first width, the second wide operand being specified by a second wide operand specifier stored in an additional register.

11. A processor as in any preceding claim wherein the processor further includes an execution register file (128) for storing instructions and data to be used in execution of instructions.

12. A processor as in any preceding claim wherein the functional unit is arranged to perform an operation which combines the wide operand with another operand, constrains the result to the first bit width, and stores the result in the execution register file.

13. A processor as in claim 11 wherein the functional unit is arranged to perform an operation which combines the wide operand with another wide operand to produce a result having a width greater than the first width and stores the result in the execution register file.

14. A processor as in any preceding claim wherein after first being used, the wide operand is at least temporarily retained in the wide operand storage to enable a subsequent instruction to access the wide operand by again reading from the wide operand storage.

15. A processor as in claim 14 wherein each subsequent memory store instruction which is to write data to a particular address checks the address of the wide operand against the particular address, and if the particular address matches the address of the wide operand in the memory system, the wide operand in the wide operand storage is updated with the data stored by the memory store instruction.

16. A processor as in claim 14 wherein each subsequent memory store instruction which is to write data to a particular address checks the address of the wide operand against the particular address, and if the particular address matches the address of the wide operand in the memory system, the wide operand in the wide operand storage is designated as invalid.

17. A processor as in claim 15 wherein if a register number of the wide operand specifier of a subsequent instruction matches the register number of the wide operand specifier of a previous instruction requiring a wide operand, and no intervening write has been made to the register identified by the register number, the wide operand as stored in the wide operand storage is reused.

18. A processor as in claim 16 wherein if a register number of the wide operand specifier of a subsequent instruction matches the register number of the wide operand specifier of a previous instruction requiring a wide operand, and no intervening write has been made to the register identified by the register number, and no intervening memory store instruction has designated the wide operand storage as invalid, the wide operand as stored in the wide operand storage is reused

19. A processor as in claim 15 wherein:
the subsequent instruction compares the contents of the wide operand specifier to a stored address of a previous wide operand; and
if the address matches, the wide operand is reused.

20. A processor as in claim 15 wherein:
the subsequent instruction compares the contents of the wide operand specifier to a stored address of a previous wide operand; and
if the address matches and no intervening memory store instruction has designated the wide operand storage as invalid, the wide operand as stored in the wide operand storage is reused.

21. A processor as in claim 16, 18, or 20 wherein if the wide operand stored in the wide operand storage is determined to be invalid, the at least one register is accessed and its contents are used to retrieve the wide operand.

22. A processor as in any of claims 14 to 20 wherein when executing a first instruction requiring the wide operand, the register provides the address of the wide operand in the memory system; and when a subsequent instruction references a wide operand, an operand checker determines if the wide operand already stored in the wide operand storage may be reused, and if so, the functional unit executes the instruction using the wide operand as stored in the wide operand storage.

23. A processor as in any of the preceding claims, wherein the instructions include a single instruction that can accept two wide operands, partition the operands into symbols, multiply corresponding symbols together, and add the products to produce a single scalar value or a vector of partitioned values of width of the register file.

24. A processor as in claim 23 wherein a first wide operand is aligned in the memory system and provides size and shape information, while a second wide operand is not aligned, and is updated incrementally.

25. A processor as in claim 24 wherein if the address of the second wide operand is within a range of the first wide operand, loading only the portion of the second wide operand not already within the range.

26. A processor as in any of the preceding claims, wherein the instructions include a wide switch instruction that rearranges the contents of at least one register, using the wide operand to control the rearrangement, and produces a full-width register result.

27. A processor as in any of the preceding claims, wherein the instructions include a wide translate instruction that uses the wide operand to specify a table depth and width and partitions the contents of a register into operands, which partitions are then used to select values from the table in parallel.

28. A processor as in any of the preceding claims, wherein the instructions include a wide multiply matrix instruction that uses the wide operand to specify a matrix of values which is multiplied by a source operand, which source operand is partitioned into a vector of symbols, to produce a vector twice the size of the source operand, the width and depth of the matrix being selected by specifying the size and shape of the wide operand.

29. A processor as in Claim 26, wherein controls within the instruction allow specification of signed, mixed signed, unsigned, complex, or polynomial operands.

30. A processor as in any of the preceding claims, wherein the instructions include a Wide Multiply Matrix Extract instruction that uses the wide operand to specify a matrix of up to a given width and up to a given depth, uses the contents of a general register, partitioned into a vector of symbols, as a source operand and multiplies the source operand with the matrix to produce a vector of width up to twice the size of the source operand plus additional bits to represent the sums of products without overflow, wherein the results are then extracted as specified by the contents of a general register specified by the instruction or controlled by fields in the instruction.

31. A processor as in any of the preceding claims, wherein the instructions include a wide multiply matrix floating-point instruction that uses the wide operand to specify a matrix of values which is multiplied by a source operand, which source operand is partitioned into a vector of symbols, the width and depth of the matrix being selected by specifying the size and shape of the wide operand, with multiplies and additions performed in floating point arithmetic.

32. A processor as in any of the preceding claims, wherein the instructions include a wide multiply matrix Galois instruction that uses the wide operand to specify a matrix of values which is multiplied by a source operand, which source operand is partitioned into a vector of symbols, the width and depth of the matrix being selected by specifying the size and shape of the wide operand with multiplies and additions performed in Galois field arithmetic and the contents of a general register specifying a polynomial with which to perform the Galois field remainder operation.

33. A method performed in a system including a first data path (137) having a first bit width coupled to a memory system (120) in which a wide operand wider than the first bit width is stored, a wide operand storage (136) coupled to the first data path and capable of storing the wide operand, a functional unit (149) capable of executing operations in response to instructions, the functional unit coupled to the wide operand storage by a second data path (between 136 and 149) having a second bit width wider than the first bit width, a register file (720a-n) coupled to the functional unit by a plurality of third data paths (155-158) having a combined bit width less than the second bit width, the register file including at least one register (710) for storing a wide operand specifier which specifies the wide operand to be copied to the wide operand storage, the method comprising:
executing an instruction requiring the wide operand;
referencing the register file to obtain information to allow retrieval of the wide operand from the memory system over the first data path;
copying the wide operand to the wide operand storage in a plurality of steps, each transferring a portion of the wide operand;
providing at least a part of the wide operand, referenced by the at least one register, over the second data path to the functional unit said at least a part of the wide operand having a bit width greater than the first bit width , and
using the wide operand in an operation performed by the functional unit to produce a result.

34. A method as in claim 33 wherein the step of using the wide operand further includes the step of combining the wide operand with information from at least one register in the register file to produce the result.

35. A method as in claim 34 wherein the result is itself a wide operand.

36. A method as in any of claims 33 to 35 wherein the step of referencing the register file comprises referencing a single register (710) in the register file to read a specifier which contains both the address in the memory system at which the wide operand is stored and the size of the wide operand.

37. A method as in claim 36 wherein the specifier comprises a first field indicative of the address for the wide operand catenated to a second field indicative of the size of the wide operand.

38. A method as in claim 37 wherein the second field comprises a sum of one halfa total number of bytes in the wide operand added to one half the width in bytes of the wide operand.

39. A method as in any of claims 33 to 38 wherein the functional unit performs an operation which combines the wide operand with another operand, constrains the result to the first bit width, and stores the result in a results register. (745)

40. A method as in any of claims 33 to 38 wherein the functional unit performs an operation which combines the wide operand with another wide operand (132) to produce a result having a width greater than the first bit width and stores the result in the wide operand storage.

41. A method as in any of claims 33 to 40 wherein the processor uses two wide operands to perform an operation.

42. A method as in any of claims 33 to 41 further comprising a step of after first being used, retaining the wide operand in the wide operand storage to enable a subsequent instruction to access the wide operand by again reading from the wide operand storage.

43. A method as in claim 42 wherein after the step of copying the wide operand to the wide operand storage a step is performed comprising upon execution of a memory store instruction which is to write data to a particular address, the processor checks the address of the wide operand against the particular address, and if the particular address matches the address of the wide operand in the memory system, the wide operand in the wide operand storage is updated with the data stored in the memory store instruction.

44. A method as in claim 42 further comprising the step of if a subsequent memory store instruction is to write data to a particular address, the processor checks the address of the wide operand against the particular address, and if the particular address matches the address of the wide operand in the memory system, the wide operand in the wide operand storage is designated as invalid.

45. A method as in claim 43 wherein if a register number of the wide operand specifier of a subsequent instruction matches the register number of the wide operand specifier of a previous instruction requiring a wide operand, and no intervening write has been made to the register identified by the register number, a step is performed comprising reusing the wide operand as stored in the wide operand storage.

46. A method as in claim 44 wherein if a register number of the wide operand specifier of a subsequent instruction matches the register number of the wide operand specifier of a previous instruction requiring a wide operand, and no intervening write has been made to the register identified by the register number, and no intervening memory store instruction has designated the wide operand storage as invalid, a step is performed comprising reusing the wide operand as stored in the wide operand storage.

47. A method as in claim 43 further comprising when a subsequent instruction is executed, comparing the contents of the wide operand specifier to a stored address of a previous wide operand, and if the address matches, reusing the wide operand.

48. A method as in claim 47 wherein if the wide operand storage is not designated as invalid, steps are performed of:
checking the at least one register address to determine if any intervening writes have been made to the at least one register subsequent to its previous access; and
designating the wide operand as stored in the wide operand storage as valid if no intervening access has been made to the at least one register.

49. A method as in claim 48 wherein steps are performed:
if the at least one register has been modified or if a different register number is used, reading the contents of the at least one register and comparing them against the address of the wide operand; and
if the address matches, reusing the wide operand.

50. A method as in claim 49 further including a step of accessing the at least one register to retrieve the wide operand from the memory system if the wide operand stored in the wide operand storage is determined to be invalid.

51. A method as in any of claims 33 to 45 further comprising the steps of:
when executing a first instruction requiring the wide operand, the register provides the address of the wide operand in the memory system;
when a subsequent instruction references the wide operand, the functional unit checks to determine if the wide operand already stored in the wide operand storage may be reused; and
when the wide operand may be reused, a step is performed of executing the instruction using the wide operand as stored in the wide operand storage.

## Patentansprüche

1. Prozessor, der Folgendes aufweist:
einen ersten Datenpfad (137) mit einer ersten Bitbreite, wobei der erste Datenpfad mit einem Speichersystem (120) gekoppelt ist, das einen breiten Operanden speichert;
einen zweiten Datenpfad (136-149) mit einer zweiten Bitbreite, die größer ist als die erste Bitbreite;
eine Vielzahl von dritten Datenpfaden (155-158) mit einer kombinierten Bitbreite, die kleiner ist als die zweite Bitbreite;
einen zum Speichern eines breiten Operanden mit der zweiten Bitbreite geeigneten, mit dem ersten Datenpfad und dem zweiten Datenpfad gekoppelten Speicher für breite Operanden (136, 714) zum Speichern eines über den ersten Datenpfad erhaltenen breiten Operanden, wobei der Speicher für breite Operanden zum Speichern des breiten Operanden dient, den er über den ersten Datenpfad aus dem Speichersystem empfangen hat, wobei der breite Operand eine Größe mit einer Bit-Anzahl aufweist, die größer ist als die erste Bitbreite;
eine Vielzahl von Registern (720a-n) mit einer ersten Bitbreite, wobei die Vielzahl der Register mit den dritten Datenpfaden verbunden ist, wobei die Vielzahl von Registern wenigstens ein Register (710) zum Speichern eines Spezifikators für breite Operanden aufweist, der den breiten Operanden angibt, der aus dem Speichersystem in den Speicher für breite Operanden zu kopieren ist; und
eine Funktionseinheit (149), die mittels des zweiten Datenpfads mit dem Speicher für breite Operanden gekoppelt ist und mittels der dritten Datenpfade mit der Vielzahl von Registern gekoppelt ist, wobei die Funktionseinheit geeignet ist, als Antwort auf Befehle Operationen auszuführen, und die Funktionseinheit beim Ausführen eines Befehls, der einen breiten Operanden erfordert, wenigstens einen Teil des breiten Operanden verwendet, der von dem wenigstens einen Register zum Speichern des Spezifikators für breite Operanden referenziert wird, wobei der wenigstens eine Teil des breiten Operanden eine Bitbreite aufweist, die größer ist als die erste Bitbreite, und der breite Operand von der Funktionseinheit verwendet wird, um ein Ergebnis zu erzeugen.

2. Prozessor nach Anspruch 1, wobei die Funktionseinheit geeignet ist, jeweils nur einen Befehl gleichzeitig einzuleiten.

3. Prozessor nach Anspruch 1, wobei der breite Operand mit Informationen aus wenigstens einem Register der Vielzahl von Registern kombiniert wird, um ein Ergebnis zu erzeugen.

4. Prozessor nach Anspruch 3, wobei das Ergebnis ein breiter Operand ist.

5. Prozessor nach Anspruch 1, wobei das wenigstens eine Register ein einzelnes Register (710) aufweist, das sowohl die Adresse des breiten Operanden in dem Speichersystem als auch die Größe des breiten Operanden speichert.

6. Prozessor nach einem der Ansprüche 1 bis 5, wobei der breite Operand in dem Speichersystem (120) gespeichert ist, wobei seine Adresse so ausgerichtet ist, dass nur höherwertige Bits zum Abrufen des breiten Operanden erforderlich sind, was es einer Vielzahl von niederwertigen Bits der Adresse ermöglicht, die Größe des breiten Operanden anzugeben.

7. Prozessor nach einem der Ansprüche 1 bis 6, wobei der Spezifikator für breite Operanden die Adresse des breiten Operanden, verkettet mit einer Markierung für die Größe des breiten Operanden, aufweist.

8. Prozessor nach Anspruch 7, wobei die Markierung für die Größe des breiten Operanden eine Zahl aufweist, die eine Hälfte einer Gesamtanzahl von Bytes in dem breiten Operanden angibt, addiert zu einer Zahl, die eine Hälfte der Breite des breiten Operanden in Bytes angibt.

9. Prozessor nach einem der vorhergehenden Ansprüche, der ferner ein mit der Funktionseinheit gekoppeltes Ergebnisregister (745) aufweist, wobei das Ergebnisregister eine Fähigkeit zum Speichern von Ergebnissen mit einer Breite aufweist, die größer ist als die erste Bitbreite.

10. Prozessor nach einem der vorhergehenden Ansprüche, der ferner eine zweite Funktionseinheit (141) und einen zweiten Speicher für breite Operanden (132) zum Speichern eines zweiten breiten Operanden mit einer Breite, die größer ist als die erste Breite, aufweist, wobei der zweite breite Operand mittels eines in einem zusätzlichen Register gespeicherten zweiten Spezifikators für breite Operanden angegeben wird.

11. Prozessor nach einem der vorhergehenden Ansprüche, wobei der Prozessor ferner eine Ausführungsregisterdatei (128) zum Speichern von Befehlen und Daten umfasst, die bei der Ausführung der Befehle verwendet werden sollen.

12. Prozessor nach einem der vorhergehenden Ansprüche, wobei die Funktionseinheit so angeordnet ist, dass sie eine Operation durchführt, die den breiten Operanden mit einem weiteren Operanden kombiniert, das Ergebnis zwingend auf die erste Bitbreite setzt und das Ergebnis in der Ausführungsregisterdatei speichert.

13. Prozessor nach Anspruch 11, wobei die Funktionseinheit so angeordnet ist, dass sie eine Operation durchführt, die den breiten Operanden mit einem weiteren breiten Operanden kombiniert, um ein Ergebnis zu erzeugen, dessen Breite größer ist als die erste Breite, und das Ergebnis in der Ausführungsregisterdatei speichert.

14. Prozessor nach einem der vorhergehenden Ansprüche, wobei der breite Operand, nachdem er das erste Mal verwendet wurde, wenigstens vorübergehend in dem Speicher für breite Operanden gehalten wird, um es einem nachfolgenden Befehl zu ermöglichen, mittels erneuten Lesens aus dem Speicher für breite Operanden auf den breiten Operanden zuzugreifen.

15. Prozessor nach Anspruch 14, wobei jeder nachfolgende Befehl zum Speichern in dem Speichersystem, der Daten in eine bestimmte Adresse schreiben soll, die Adresse des breiten Operanden mit der bestimmten Adresse vergleicht, und wobei, wenn die bestimmte Adresse mit der Adresse des breiten Operanden in dem Speichersystem übereinstimmt, der breite Operand in dem Speicher für breite Operanden mit den von dem Befehl zum Speichern in dem Speichersystem gespeicherten Daten aktualisiert wird.

16. Prozessor nach Anspruch 14, wobei jeder nachfolgende Befehl zum Speichern in dem Speichersystem, der Daten in eine bestimmte Adresse schreiben soll, die Adresse des breiten Operanden mit der bestimmten Adresse vergleicht, und wobei, wenn die bestimmte Adresse mit der Adresse des breiten Operanden in dem Speichersystem übereinstimmt, der breite Operand in dem Speicher für breite Operanden als ungültig **gekennzeichnet** wird.

17. Prozessor nach Anspruch 15, wobei, wenn eine Registernummer des Spezifikators für breite Operanden eines nachfolgenden Befehls mit der Registernummer des Spezifikators für breite Operanden eines vorherigen Befehls, der einen breiten Operanden erfordert, übereinstimmt und kein zwischenzeitlicher Schreibvorgang in das mittels der Registernummer identifizierte Register vorgenommen wurde, der breite Operand so wiederverwendet wird, wie er in dem Speicher für breite Operanden gespeichert wurde.

18. Prozessor nach Anspruch 16, wobei, wenn eine Registernummer des Spezifikators für breite Operanden eines nachfolgenden Befehls mit der Registernummer des Spezifikators für breite Operanden eines vorherigen Befehls, der einen breiten Operanden erfordert, übereinstimmt und kein zwischenzeitlicher Schreibvorgang in das mittels der Registernummer identifizierte Register vorgenommen wurde, und kein zwischenzeitlicher Befehl zum Speichern in dem Speichersystem den Speicher für breite Operanden als ungültig **gekennzeichnet** hat, der breite Operand so wiederverwendet wird, wie er in dem Speicher für breite Operanden gespeichert wurde.

19. Prozessor nach Anspruch 15, wobei:
der nachfolgende Befehl den Inhalt des Spezifikators für breite Operanden mit einer gespeicherten Adresse eines vorherigen breiten Operanden vergleicht; und
wenn die Adresse übereinstimmt, der breite Operand wiederverwendet wird.

20. Prozessor nach Anspruch 15, wobei:
der nachfolgende Befehl den Inhalt des Spezifikators für breite Operanden mit einer gespeicherten Adresse eines vorherigen breiten Operanden vergleicht; und
wenn die Adresse übereinstimmt und kein zwischenzeitlicher Befehl zum Speichern in dem Speichersystem den Speicher für breite Operanden als ungültig **gekennzeichnet** hat, der breite Operand so wiederverwendet wird, wie er in dem Speicher für breite Operanden gespeichert wurde.

21. Prozessor nach einem der Ansprüche 16, 18 oder 20, wobei, wenn der in dem Speicher für breite Operanden gespeicherte breite Operand als ungültig ermittelt wurde, auf das wenigstens eine Register zugegriffen wird und sein Inhalt zum Abrufen des breiten Operanden verwendet wird.

22. Prozessor nach einem der Ansprüche 14 bis 20, wobei, wenn ein erster Befehl, der den breiten Operanden erfordert, ausgeführt wird, das Register die Adresse des breiten Operanden in dem Speichersystem bereitstellt; und wenn ein nachfolgender Befehl einen breiten Operanden referenziert, ein Operanden-Prüfelement ermittelt, ob der in dem Speicher für breite Operanden bereits gespeicherte breite Operand wiederverwendet werden darf, und wenn dies der Fall ist, die Funktionseinheit den Befehl unter Verwendung des breiten Operanden ausführt, wie er in dem Speicher für breite Operanden gespeichert wurde.

23. Prozessor nach einem der vorhergehenden Ansprüche, wobei die Befehle einen einzelnen Befehl umfassen, der zwei breite Operanden akzeptieren, die Operanden in Symbole aufteilen, entsprechende Symbole miteinander multiplizieren und die Produkte zum Erzeugen eines einzelnen skalaren Werts oder eines Vektors aus aufgeteilten Werten mit der Breite der Registerdatei addieren kann.

24. Prozessor nach Anspruch 23, wobei ein erster breiter Operand in dem Speichersystem ausgerichtet ist und Größen- und Forminformationen bereitstellt, während ein zweiter breiter Operand nicht ausgerichtet ist und inkrementell aktualisiert wird.

25. Prozessor nach Anspruch 24, wobei, wenn die Adresse des zweiten breiten Operanden innerhalb eines Bereichs des ersten breiten Operanden liegt, nur der Anteil des zweiten breiten Operanden geladen wird, der nicht bereits in dem Bereich liegt.

26. Prozessor nach einem der vorhergehenden Ansprüche, wobei die Befehle einen Breitschaltbefehl umfassen, der den Inhalt von wenigstens einem Register neu anordnet, wobei der breite Operand zum Steuern der Neuanordnung verwendet wird, und ein Registerergebnis mit voller Breite erzeugt.

27. Prozessor nach einem der vorhergehenden Ansprüche, wobei die Befehle einen Breitumrechnungsbefehl umfassen, der den breiten Operanden zum Angeben einer Tabellentiefe und -breite verwendet und den Inhalt eines Registers in Operanden aufteilt, wobei die Unterteilungen dann zum parallelen Auswählen von Werten aus der Tabelle verwendet werden.

28. Prozessor nach einem der vorhergehenden Ansprüche, wobei die Befehle einen Breitmatrixmultiplikationsbefehl umfassen, der den breiten Operanden zum Angeben einer Matrix von Werten verwendet, die mit einem Quell-Operanden multipliziert wird, wobei der Quell-Operand in einen Vektor von Symbolen aufgeteilt wird, um einen Vektor mit zweifacher Größe des Quell-Operanden zu erzeugen, wobei die Breite und Tiefe der Matrix durch Angeben der Größe und Form des breiten Operanden ausgewählt wird.

29. Prozessor nach Anspruch 26, wobei Steuerelemente innerhalb des Befehls die Angabe von Operanden mit Vorzeichen, mit uneinheitlichen Vorzeichen oder ohne Vorzeichen sowie mit komplexen oder polynomialen Operanden erlauben.

30. Prozessor nach einem der vorhergehenden Ansprüche, wobei die Befehle einen Befehl Wide Multiply Matrix Extract (Breitmatrixmultiplikationsbefehl) umfassen, der den breiten Operanden zum Angeben einer Matrix mit bis zu einer bestimmten Breite und bis zu einer bestimmten Tiefe verwendet, den Inhalt eines allgemeinen, in einen Vektor von Symbolen aufgeteilten Registers als Quell-Operanden verwendet und den Quell-Operanden mit der Matrix multipliziert, um einen Vektor mit einer Breite von bis zu dem Doppelten der Größe des Quell-Operanden plus zusätzlichen Bits zu erzeugen, um die Summen der Produkte ohne Überlauf darzustellen, wobei die Ergebnisse dann so extrahiert werden, wie mittels des Inhalts eines allgemeinen Registers angegeben, das mittels des Befehls angegeben oder mittels Feldern in dem Befehl gesteuert wurde.

31. Prozessor nach einem der vorhergehenden Ansprüche, wobei die Befehle einen Breitmatrixmultiplikations-Gleitkommabefehl umfassen, der den breiten Operanden zum Angeben einer Matrix von Werten, die mit einem Quell-Operanden multipliziert wird, verwendet, wobei der Quell-Operand in einen Vektor von Symbolen aufgeteilt wird, wobei die Breite und Tiefe der Matrix durch Angeben der Größe und Form des breiten Operanden ausgewählt wird und Multiplikationen und Additionen in Gleitkommaarithmetik ausgeführt werden.

32. Prozessor nach einem der vorhergehenden Ansprüche, wobei die Befehle einen Breitmatrixmultiplikations-Galois-Befehl umfassen, der den breiten Operanden zum Angeben einer Matrix von Werten, die mit einem Quell-Operanden multipliziert wird, verwendet, wobei der Quell-Operand in einen Vektor von Symbolen aufgeteilt wird, wobei die Breite und Tiefe der Matrix durch Angeben der Größe und Form des breiten Operanden ausgewählt wird und Multiplikationen und Additionen in Galois-Feldarithmetik durchgeführt werden und der Inhalt eines allgemeinen Registers eine Polynombreite angibt, mit der die Galois-Feldrestoperation durchgeführt wird.

33. Verfahren, das in einem System durchgeführt wird, das einen ersten Datenpfad (137) mit einer ersten Bitbreite umfasst, wobei der erste Datenpfad mit einem Speichersystem (120) gekoppelt ist, in dem ein breiter Operand gespeichert wird, der breiter als die erste Bitbreite ist, einen Speicher für breite Operanden (136), der mit dem ersten Datenpfad gekoppelt ist und geeignet ist, den breiten Operanden zu speichern, eine Funktionseinheit (149), die geeignet ist, Operationen als Antwort auf Befehle auszuführen, wobei die Funktionseinheit mittels eines zweiten Datenpfads (136 bis 149) mit einer zweiten Bitbreite, die breiter ist als die erste Bitbreite, mit dem Speicher für breite Operanden gekoppelt ist, eine Registerdatei (720a-n), die mit der Funktionseinheit mittels einer Vielzahl von dritten Datenpfaden (155-158) mit einer kombinierten Bitbreite, die kleiner ist als die zweite Bitbreite, gekoppelt ist, wobei die Registerdatei wenigstens ein Register (710) zum Speichern eines Spezifikators für breite Operanden aufweist, der den breiten Operanden angibt, der in den Speicher für breite Operanden zu kopieren ist, wobei das Verfahren Folgendes umfasst:
Ausführen eines Befehls, der den breiten Operanden erfordert;
Referenzieren der Registerdatei, um Informationen zu erhalten, um das Abrufen des breiten Operanden aus dem Speichersystem über den ersten Datenpfad zu erlauben;
Kopierern des breiten Operanden in den Speicher für breite Operanden in einer Vielzahl von Schritten, wobei jeder einen Anteil des breiten Operanden überträgt;
Bereitstellen von wenigstens einem Teil des breiten Operanden, der von dem wenigstens einen Register referenziert wird, über den zweiten Datenpfad für die zweite Funktionseinheit, wobei wenigstens ein Teil des breiten Operanden eine Bitbreite aufweist, die größer ist als die erste Bitbreite; und
Verwenden des breiten Operanden in einer mittels der Funktionseinheit durchgeführten Operation, um ein Ergebnis zu erzeugen.

34. Verfahren nach Anspruch 33, wobei der Schritt des Verwendens des breiten Operanden ferner den Schritt des Kombinierens des breiten Operanden mit Informationen aus wenigstens einem Register in der Registerdatei umfasst, um das Ergebnis zu erzeugen.

35. Verfahren nach Anspruch 34, wobei das Ergebnis selbst ein breiter Operand ist.

36. Verfahren nach einem der Ansprüche 33 bis 35, wobei der Schritt des Referenzierens der Registerdatei das Referenzieren eines einzelnen Registers (710) in der Registerdatei umfasst, um einen Spezifikator zu lesen, der sowohl die Adresse in dem Speichersystem, an der der breite Operand gespeichert ist, als auch die Größe des breiten Operanden enthält.

37. Verfahren nach Anspruch 36, wobei der Spezifikator ein erstes Feld aufweist, das die Adresse des breiten Operanden angibt, verkettet mit einem zweiten Feld, das die Größe des breiten Operanden angibt.

38. Verfahren nach Anspruch 37, wobei das zweite Feld eine Summe aus einer Hälfte einer Gesamtzahl von Bytes in dem breiten Operanden, addiert zu einer Hälfte der Breite des breiten Operanden in Bytes, aufweist.

39. Verfahren nach einem der Ansprüche 33 bis 38, wobei die Funktionseinheit eine Operation durchführt, die den breiten Operanden mit einem weiteren Operanden kombiniert, das Ergebnis zwingend auf die erste Bitbreite setzt und das Ergebnis in einem Ergebnisregister (745) speichert.

40. Verfahren nach einem der Ansprüche 33 bis 38, wobei die Funktionseinheit eine Operation durchführt, die den breiten Operanden mit einem weiteren breiten Operanden (132) kombiniert, um ein Ergebnis mit einer Breite zu erzeugen, die größer ist als die erste Bitbreite, und das Ergebnis in dem Speicher für breite Operanden speichert.

41. Verfahren nach einem der Ansprüche 33 bis 40, wobei der Prozessor zwei breite Operanden verwendet, um eine Operation durchzuführen.

42. Verfahren nach einem der Ansprüche 33 bis 41, das ferner einen Schritt umfasst, bei dem der breite Operand, nachdem er das erste Mal verwendet wurde, in dem Speicher für breite Operanden gehalten wird, um es einem nachfolgenden Befehl zu ermöglichen, mittels erneutem Lesen aus dem Speicher für breite Operanden auf den breiten Operanden zuzugreifen.

43. Verfahren nach Anspruch 42, wobei nach dem Schritt des Kopierens des breiten Operanden in den Speicher für breite Operanden ein Schritt durchgeführt wird, bei dem bei Ausführung eines Befehls zum Speichern in dem Speichersystem, mit dem Daten in eine bestimmte Adresse geschrieben werden sollen, der Prozessor die Adresse des breiten Operanden mit der bestimmten Adresse vergleicht, und wobei, wenn die bestimmte Adresse mit der Adresse des breiten Operanden in dem Speichersystem übereinstimmt, der breite Operand in dem Speicher für breite Operanden mit den von dem Befehl zum Speichern in dem Speichersystem gespeicherten Daten aktualisiert wird.

44. Verfahren nach Anspruch 42, das ferner den Schritt umfasst, bei dem, wenn ein nachfolgender Befehl zum Speichern in dem Speichersystem Daten in eine bestimmte Adresse schreiben soll, der Prozessor die Adresse des breiten Operanden mit der bestimmten Adresse vergleicht, und wenn die bestimmte Adresse mit der Adresse des breiten Operanden in dem Speichersystem übereinstimmt, der breite Operand in dem Speicher für breite Operanden als ungültig **gekennzeichnet** wird.

45. Verfahren nach Anspruch 43, wobei, wenn eine Registernummer des Spezifikators für breite Operanden eines nachfolgenden Befehls mit der Registernummer des Spezifikators für breite Operanden eines vorherigen Befehls, der einen breiten Operanden erfordert, übereinstimmt und kein zwischenzeitlicher Schreibvorgang in das mittels der Registernummer identifizierte Register vorgenommen wurde, ein Schritt durchgeführt wird, der das Wiederverwenden des breiten Operanden so, wie er in dem Speicher für breite Operanden gespeichert wurde, umfasst.

46. Verfahren nach Anspruch 44, wobei, wenn eine Registernummer des Spezifikators für breite Operanden eines nachfolgenden Befehls mit der Registernummer des Spezifikators für breite Operanden eines vorherigen Befehls, der einen breiten Operanden erfordert, übereinstimmt und kein zwischenzeitlicher Schreibvorgang in das mittels der Registernummer identifizierte Register vorgenommen wurde, und kein zwischenzeitlicher Befehl zum Speichern in dem Speichersystem den Speicher für breite Operanden als ungültig **gekennzeichnet** hat, ein Schritt durchgeführt wird, der das Wiederverwenden des breiten Operanden so, wie er in dem Speicher für breite Operanden gespeichert wurde, umfasst.

47. Verfahren nach Anspruch 43, das ferner umfasst, dass, wenn ein nachfolgender Befehl ausgeführt wird, der Inhalt des Spezifikators für breite Operanden mit einer gespeicherten Adresse eines vorherigen breiten Operanden verglichen wird, und dass, wenn die Adresse übereinstimmt, der breite Operand wiederverwendet wird.

48. Verfahren nach Anspruch 47, wobei, wenn der Speicher für breite Operanden nicht als ungültig **gekennzeichnet** wurde, die folgenden Schritte durchgeführt werden:
Überprüfen der wenigstens einen Registeradresse, um zu ermitteln, ob zwischenzeitliche Schreibvorgänge an dem wenigstens einen Register vorgenommen wurden, nachdem zuvor darauf zugegriffen wurde; und
Kennzeichnen des breiten Operanden, wie er in dem Speicher für breite Operanden gespeichert ist, als gültig, wenn kein zwischenzeitlicher Zugriff auf das wenigstens eine Register vorgenommen wurde.

49. Verfahren nach Anspruch 48, wobei die folgenden Schritte durchgeführt werden:
Lesen des Inhalts des wenigstens einen Registers und Vergleichen desselben mit der Adresse des breiten Operanden, wenn das wenigstens eine Register geändert wurde oder eine andere Registernummer verwendet wird; und
Wiederverwenden des breiten Operanden, wenn die Adresse übereinstimmt.

50. Verfahren nach Anspruch 49, das ferner einen Schritt des Zugreifens auf das wenigstens eine Register umfasst, um den breiten Operanden aus dem Speichersystem abzurufen, wenn der in dem Speicher für breite Operanden gespeicherte breite Operand als ungültig ermittelt wird.

51. Verfahren nach einem der Ansprüche 33 bis 45, das ferner die folgenden Schritte umfasst:
wenn ein erster Befehl ausgeführt wird, der den breiten Operanden erfordert, stellt das Register die Adresse des breiten Operanden in dem Speichersystem bereit;
wenn ein nachfolgender Befehl den breiten Operanden referenziert, führt die Funktionseinheit eine Überprüfung durch, um festzustellen, ob der bereits in dem Speicher für breite Operanden gespeicherte breite Operand wiederverwendet werden kann; und
wenn der breite Operand wiederverwendet werden darf, wird ein Schritt des Ausführens des Befehls unter Verwendung des breiten Operanden so, wie der in dem Speicher für breite Operanden gespeichert ist, durchgeführt.

## Revendications

1. Processeur comprenant :
un premier chemin de données (137) ayant une première largeur de bit, le premier chemin de données couplé à un système de mémoire (120) stockant un opérande large ;
un deuxième chemin de données (entre 136 et 149) ayant une deuxième largeur de bit supérieure à la première largeur de bit ;
une pluralité de troisièmes chemins de données (155-158) ayant une largeur de bit combinée inférieure à la deuxième largeur de bit ;
un stockage d'opérande large (136 ; 714) capable de stocker un opérande large de la deuxième largeur de bit, couplé au premier chemin de données et au deuxième chemin de données, le stockage d'opérande large pour stocker l'opérande large reçu sur le premier chemin de données en provenance du système de mémoire, l'opérande large ayant une taille avec un nombre de bits supérieur à la première largeur de bit ;
une pluralité de registres (720a-n) ayant la première largeur de bit, la pluralité de registres étant connectés aux troisièmes chemins de données, la pluralité de registres incluant au moins un registre (710) pour stocker un spécificateur d'opérande large qui spécifie l'opérande large devant être copié du système de mémoire dans le stockage d'opérande large ; et
une unité fonctionnelle (149) couplée par le deuxième chemin de données au stockage d'opérande large et couplée par les troisièmes chemins de données à la pluralité de registres, l'unité fonctionnelle capable d'effectuer des opérations en réponse à des instructions, et lors de l'exécution d'une instruction requérant un opérande large, l'unité fonctionnelle utilisant au moins une partie de l'opérande large auquel fait référence le au moins un registre pour stocker le spécificateur d'opérande large, où ladite au moins une partie de l'opérande large a une largeur de bit supérieure à la première largeur de bit et l'opérande large est utilisé par l'unité fonctionnelle afin de produire un résultat.

2. Processeur selon la revendication 1, dans lequel l'unité fonctionnelle est capable d'initier une seule instruction à la fois.

3. Processeur selon la revendication 1, dans lequel l'opérande large est combiné avec des informations en provenance d'au moins un registre de la pluralité de registres afin de produire un résultat.

4. Processeur selon la revendication 3, dans lequel le résultat est un opérande large.

5. Processeur selon la revendication 1, dans lequel ledit au moins un registre comprend un seul registre (710) qui stocke à la fois l'adresse de l'opérande large dans le système de mémoire et la taille de l'opérande large.

6. Processeur selon les revendications 1 à 5, dans lequel l'opérande large est stocké dans le système de mémoire (120) avec son adresse alignée de sorte que seuls les bits de poids fort soient requis pour la récupération de l'opérande large, permettant qu'une pluralité de bits de poids faible de l'adresse spécifie la taille de l'opérande large.

7. Processeur selon les revendications 1 à 6, dans lequel le spécificateur d'opérande large comprend l'adresse de l'opérande large concaténée à un indice de la taille de l'opérande large.

8. Processeur selon la revendication 7, dans lequel l'indice de la taille de l'opérande large inclut un nombre indicatif d'une moitié d'un nombre total d'octets dans l'opérande large ajouté à un nombre indicatif d'une moitié de la largeur de l'opérande large en octets.

9. Processeur selon l'une quelconque des revendications précédentes, comprenant en outre un registre de résultats (745) couplé à l'unité fonctionnelle, le registre de résultats ayant une capacité de stockage de résultats ayant une largeur supérieure à la première largeur de bit.

10. Processeur selon l'une quelconque des revendications précédentes, comprenant en outre une deuxième unité fonctionnelle (141) et un deuxième stockage d'opérande large (132) pour stocker un deuxième opérande large ayant une largeur supérieure à la première largeur, le deuxième opérande large étant spécifié par un deuxième spécificateur d'opérande large stocké dans un registre additionnel.

11. Processeur selon l'une quelconque des revendications précédentes, dans lequel le processeur inclut en outre un fichier de registre d'exécution (128) pour stocker des instructions et des données devant être utilisées dans l'exécution d'instructions.

12. Processeur selon l'une quelconque des revendications précédentes, dans lequel l'unité fonctionnelle est agencée pour effectuer une opération qui combine l'opérande large avec un autre opérande, contraint le résultat à la première largeur de bit, et stocke le résultat dans le fichier de registre d'exécution.

13. Processeur selon la revendication 11, dans lequel l'unité fonctionnelle est agencée pour effectuer une opération qui combine l'opérande large avec un autre opérande large afin de produire un résultat ayant une largeur supérieure à la première largeur et stocke le résultat dans le fichier de registre d'exécution.

14. Processeur selon l'une quelconque des revendications précédentes, dans lequel, après la première utilisation, l'opérande large est au moins temporairement conservé dans le stockage d'opérande large pour permettre à une instruction ultérieure d'accéder à l'opérande large en lisant à nouveau depuis le stockage d'opérande large.

15. Processeur selon la revendication 14, dans lequel chaque instruction de stockage en mémoire ultérieure qui doit écrire des données vers une adresse particulière contrôle l'adresse de l'opérande large par rapport à l'adresse particulière, et si l'adresse particulière correspond à l'adresse de l'opérande large dans le système de mémoire, l'opérande large dans le stockage d'opérande large est mis à jour avec les données stockées par l'instruction de stockage en mémoire.

16. Processeur selon la revendication 14, dans lequel chaque instruction de stockage en mémoire ultérieure qui doit écrire des données vers une adresse particulière contrôle l'adresse de l'opérande large par rapport à l'adresse particulière, et si l'adresse particulière correspond à l'adresse de l'opérande large dans le système de mémoire, l'opérande large dans le stockage d'opérande large est désigné comme invalide.

17. Processeur selon la revendication 15, dans lequel si un numéro de registre du spécificateur d'opérande large d'une instruction ultérieure correspond au numéro de registre du spécificateur d'opérande large d'une instruction précédente requérant un opérande large, et qu'aucune écriture intermédiaire n'a été effectuée vers le registre identifié par le numéro de registre, l'opérande large tel que stocké dans le stockage d'opérande large est réutilisé.

18. Processeur selon la revendication 16, dans lequel si un numéro de registre du spécificateur d'opérande large d'une instruction ultérieure correspond au numéro de registre du spécificateur d'opérande large d'une instruction précédente requérant un opérande large, et qu'aucune écriture intermédiaire n'a été effectuée vers le registre identifié par le numéro de registre, et qu'aucune instruction de stockage en mémoire intermédiaire n'a désigné le stockage d'opérande large comme invalide, l'opérande large tel que stocké dans le stockage d'opérande large est réutilisé.

19. Processeur selon la revendication 15, dans lequel :
l'instruction ultérieure compare le contenu du spécificateur d'opérande large à une adresse stockée d'un opérande large précédent ; et
si l'adresse correspond, l'opérande large est réutilisé.

20. Processeur selon la revendication 15, dans lequel :
l'instruction ultérieure compare le contenu du spécificateur d'opérande large à une adresse stockée d'un opérande large précédent ; et
si l'adresse correspond et qu'aucune instruction de stockage en mémoire intermédiaire n'a désigné le stockage d'opérande large comme invalide, l'opérande large tel que stocké dans le stockage d'opérande large est réutilisé.

21. Processeur selon la revendication 16, 18, ou 20, dans lequel si l'opérande large stocké dans le stockage d'opérande large est déterminé comme étant invalide, ledit au moins un registre fait l'objet d'un accès et son contenu est utilisé pour récupérer l'opérande large.

22. Processeur selon l'une quelconque des revendications 14 à 20, dans lequel lors de l'exécution d'une première instruction requérant l'opérande large, le registre fournit l'adresse de l'opérande large dans le système de mémoire ; et lorsqu'une instruction ultérieure fait référence à un opérande large, un contrôleur d'opérande détermine si l'opérande large déjà stocké dans le stockage d'opérande large peut être réutilisé, et si oui, l'unité fonctionnelle exécute l'instruction en utilisant l'opérande large tel que stocké dans le stockage d'opérande large.

23. Processeur selon l'une quelconque des revendications précédentes, dans lequel les instructions incluent une seule instruction qui peut accepter deux opérandes larges, partitionner les opérandes en symboles, multiplier des symboles correspondants ensemble, et ajouter les produits afin de produire une seule valeur scalaire ou un vecteur de valeurs partitionnées de largeur du fichier de registre.

24. Processeur selon la revendication 23, dans lequel un premier opérande large est aligné dans le système de mémoire et fournit des informations de taille et de forme, tandis qu'un deuxième opérande large n'est pas aligné, et est mis à jour incrémentiellement.

25. Processeur selon la revendication 24, dans lequel si l'adresse du deuxième opérande large est à l'intérieur d'une plage du premier opérande large, charger uniquement la portion du deuxième opérande large qui n'est pas déjà à l'intérieur de la plage.

26. Processeur selon l'une quelconque des revendications précédentes, dans lequel les instructions incluent une instruction large de commutation qui réorganise le contenu d'au moins un registre, en utilisant l'opérande large pour commander la réorganisation, et produit un résultat de registre pleine largeur.

27. Processeur selon l'une quelconque des revendications précédentes, dans lequel les instructions incluent une instruction large de traduction qui utilise l'opérande large pour spécifier une profondeur et une largeur de table et partitionne le contenu d'un registre en opérandes, lesquelles partitions sont ensuite utilisées pour sélectionner des valeurs dans la table en parallèle.

28. Processeur selon l'une quelconque des revendications précédentes, dans lequel les instructions incluent une instruction large de multiplication de matrice qui utilise l'opérande large pour spécifier une matrice de valeurs qui est multipliée par un opérande source, lequel opérande source est partitionné en un vecteur de symboles, afin de produire un vecteur de deux fois la taille de l'opérande source, la largeur et la profondeur de la matrice étant sélectionnées en spécifiant la taille et la forme de l'opérande large.

29. Processeur selon la revendication 26, dans lequel des commandes à l'intérieur de l'instruction permettent la spécification d'opérandes signés, signés mixtes, non signés, complexes, ou polynomiaux.

30. Processeur selon l'une quelconque des revendications précédentes, dans lequel les instructions incluent une instruction large de multiplication d'extrait de matrice qui utilise l'opérande large pour spécifier une matrice de jusqu'à une largeur donnée et jusqu'à une profondeur donnée, utilise le contenu d'un registre général, partitionné en un vecteur de symboles, comme un opérande source et multiplie l'opérande source avec la matrice afin de produire un vecteur de largeur jusqu'à deux fois la taille de l'opérande source plus des bits additionnels afin de représenter les sommes de produits sans dépassement, où les résultats sont ensuite extraits comme spécifié par le contenu d'un registre général spécifié par l'instruction ou commandé par des champs dans l'instruction.

31. Processeur selon l'une quelconque des revendications précédentes, dans lequel les instructions incluent une instruction large de multiplication de matrice en virgule flottante qui utilise l'opérande large pour spécifier une matrice de valeurs qui est multipliée par un opérande source, lequel opérande source est partitionné en un vecteur de symboles, la largeur et la profondeur de la matrice étant sélectionnées en spécifiant la taille et la forme de l'opérande large, avec des multiplications et des additions effectuées en arithmétique en virgule flottante.

32. Processeur selon l'une quelconque des revendications précédentes, dans lequel les instructions incluent une instruction large de multiplication de matrice de type Galois qui utilise l'opérande large pour spécifier une matrice de valeurs qui est multipliée par un opérande source, lequel opérande source est partitionné en un vecteur de symboles, la largeur et la profondeur de la matrice étant sélectionnées en spécifiant la taille et la forme de l'opérande large avec des multiplications et des additions effectuées en arithmétique du corps de Galois et le contenu d'un registre général spécifiant un polynôme avec lequel effectuer l'opération de reste du corps de Galois.

33. Procédé effectué dans un système incluant un premier chemin de données (137) ayant une première largeur de bit couplé à un système de mémoire (120) dans lequel un opérande large plus large que la première largeur de bit est stocké, un stockage d'opérande large (136) couplé au premier chemin de données et capable de stocker l'opérande large, une unité fonctionnelle (149) capable d'exécuter des opérations en réponse à des instructions, l'unité fonctionnelle couplée au stockage d'opérande large par un deuxième chemin de données (entre 136 et 149) ayant une deuxième largeur de bit plus large que la première largeur de bit, un fichier de registre (720a-n) couplé à l'unité fonctionnelle par une pluralité de troisièmes chemins de données (155-158) ayant une largeur de bit combinée inférieure à la deuxième largeur de bit, le fichier de registre incluant au moins un registre (710) pour stocker un spécificateur d'opérande large qui spécifie l'opérande large devant être copié vers le stockage d'opérande large, le procédé comprenant :
l'exécution d'une instruction requérant l'opérande large ;
la référence au fichier de registre afin d'obtenir des informations pour permettre la récupération de l'opérande large depuis le système de mémoire sur le premier chemin de données ;
la copie de l'opérande large vers le stockage d'opérande large dans une pluralité d'étapes, chacune transférant une portion de l'opérande large ;
la fourniture d'au moins une partie de l'opérande large, auquel fait référence ledit au moins un registre, sur le deuxième chemin de données à l'unité fonctionnelle, ladite au moins une partie de l'opérande large ayant une largeur de bit supérieure à la première largeur de bit ; et
l'utilisation de l'opérande large dans une opération effectuée par l'unité fonctionnelle afin de produire un résultat.

34. Procédé selon la revendication 33, dans lequel l'étape consistant à utiliser l'opérande large inclut en outre l'étape consistant à combiner l'opérande large avec des informations en provenance d'au moins un registre dans le fichier de registre afin de produire le résultat.

35. Procédé selon la revendication 34, dans lequel le résultat est lui-même un opérande large.

36. Procédé selon l'une quelconque des revendications 33 à 35, dans lequel l'étape consistant à faire référence au fichier de registre comprend la référence à un seul registre (710) dans le fichier de registre afin de lire un spécificateur qui contient à la fois l'adresse dans le système de mémoire à laquelle l'opérande large est stocké et la taille de l'opérande large.

37. Procédé selon la revendication 36, dans lequel le spécificateur comprend un premier champ indicatif de l'adresse pour l'opérande large concaténé à un deuxième champ indicatif de la taille de l'opérande large.

38. Procédé selon la revendication 37, dans lequel le deuxième champ comprend une somme de la moitié d'un nombre total d'octets dans l'opérande large ajoutée à la moitié de la largeur en octets de l'opérande large.

39. Procédé selon l'une quelconque des revendications 33 à 38, dans lequel l'unité fonctionnelle effectue une opération qui combine l'opérande large avec un autre opérande, contraint le résultat à la première largeur de bit, et stocke le résultat dans un registre de résultats (745).

40. Procédé selon l'une quelconque des revendications 33 à 38, dans lequel l'unité fonctionnelle effectue une opération qui combine l'opérande large avec un autre opérande large (132) afin de produire un résultat ayant une largeur supérieure à la première largeur de bit et stocke le résultat dans le stockage d'opérande large.

41. Procédé selon l'une quelconque des revendications 33 à 40, dans lequel le processeur utilise deux opérandes larges pour effectuer une opération.

42. Procédé selon l'une quelconque des revendications 33 à 41, comprenant en outre une étape consistant à, après la première utilisation, conserver l'opérande large dans le stockage d'opérande large afin de permettre à une instruction ultérieure d'accéder à l'opérande large en lisant à nouveau depuis le stockage d'opérande large.

43. Procédé selon la revendication 42, dans lequel après l'étape consistant à copier l'opérande large vers le stockage d'opérande large, une étape est effectuée comprenant, lors de l'exécution d'une instruction de stockage en mémoire qui doit écrire des données vers une adresse particulière, le processeur contrôle l'adresse de l'opérande large par rapport à l'adresse particulière, et si l'adresse particulière correspond à l'adresse de l'opérande large dans le système de mémoire, l'opérande large dans le stockage d'opérande large est mis à jour avec les données stockées dans l'instruction de stockage en mémoire.

44. Procédé selon la revendication 42, comprenant en outre l'étape consistant à, si une instruction de stockage en mémoire ultérieure doit écrire des données vers une adresse particulière, le processeur contrôle l'adresse de l'opérande large par rapport à l'adresse particulière, et si l'adresse particulière correspond à l'adresse de l'opérande large dans le système de mémoire, l'opérande large dans le stockage d'opérande large est désigné comme invalide.

45. Procédé selon la revendication 43, dans lequel si un numéro de registre du spécificateur d'opérande large d'une instruction ultérieure correspond au numéro de registre du spécificateur d'opérande large d'une instruction précédente requérant un opérande large, et qu'aucune écriture intermédiaire n'a été effectuée vers le registre identifié par le numéro de registre, une étape est effectuée comprenant la réutilisation de l'opérande large tel que stocké dans le stockage d'opérande large.

46. Procédé selon la revendication 44, dans lequel si un numéro de registre du spécificateur d'opérande large d'une instruction ultérieure correspond au numéro de registre du spécificateur d'opérande large d'une instruction précédente requérant un opérande large, et qu'aucune écriture intermédiaire n'a été effectuée vers le registre identifié par le numéro de registre, et qu'aucune instruction de stockage en mémoire intermédiaire n'a désigné le stockage d'opérande large comme invalide, une étape est effectuée comprenant la réutilisation de l'opérande large tel que stocké dans le stockage d'opérande large.

47. Procédé selon la revendication 43, comprenant en outre, lorsqu'une instruction ultérieure est exécutée, la comparaison du contenu du spécificateur d'opérande large à une adresse stockée d'un opérande large précédent, et si l'adresse correspond, la réutilisation de l'opérande large.

48. Procédé selon la revendication 47, dans lequel si le stockage d'opérande large n'est pas désigné comme invalide, des étapes sont effectuées consistant à :
contrôler l'adresse dudit au moins un registre afin de déterminer si une quelconque écriture intermédiaire a été effectuée vers ledit au moins un registre à la suite de son accès précédent ; et
désigner l'opérande large tel que stocké dans le stockage d'opérande large comme valide que si aucun accès intermédiaire n'a été effectué vers ledit au moins un registre.

49. Procédé selon la revendication 48, dans lequel des étapes sont effectuées :
si ledit au moins un registre a été modifié ou si un numéro de registre différent est utilisé, lire le contenu dudit au moins un registre et le comparer par rapport à l'adresse de l'opérande large ; et
si l'adresse correspond, réutiliser l'opérande large.

50. Procédé selon la revendication 49, incluant en outre une étape consistant à accéder au au moins un registre afin de récupérer l'opérande large à partir du système de mémoire si l'opérande large stocké dans le stockage d'opérande large est déterminé comme étant invalide.

51. Procédé selon l'une quelconque des revendications 33 à 45, comprenant en outre les étapes consistant à :
lors de l'exécution d'une première instruction requérant l'opérande large, le registre fournit l'adresse de l'opérande large dans le système de mémoire ;
lorsqu'une instruction ultérieure fait référence à l'opérande large, l'unité fonctionnelle contrôle pour déterminer si l'opérande large déjà stocké dans le stockage d'opérande large peut être réutilisé ; et
lorsque l'opérande large peut être réutilisé, une étape est effectuée consistant à exécuter l'instruction en utilisant l'opérande large tel que stocké dans le stockage d'opérande large.
